# EUROPEAN PATENT APPLICATION

(11) **EP 1 777 255 A2**
(43) Date of publication of application: **25.04.2007**
(21) Application number: 07100176.2
(22) Date of filing: 12.06.2000
(51) Int. Cl.: C08K 5/34, B41M 1/00

(54) **Image making medium**

(30) Priority: 11.06.1999 US 138694 P
(62) Divisional of application: 00944650.1
(71) Applicant: Hyman, Sydney, New York, NY 10013 (US)
(72) Inventor: Hyman, Sydney, New York, NY 10013 (US)
(74) Representative: Holme Patent A/S

(57) **Abstract**

The invention is directed to a composition for use as a medium for making an image, such as an image of art, design or architecture. In one embodiment, the composition comprises a transparent or translucent polymer and a stabilizer. In another embodiment, the composition comprises an absorbent polymer. The invention is also directed to methods of making images using such compositions.

## Description

### BACKGROUND OF THE INVENTION

### Field of the Invention

The present invention relates to a medium for making images, a process for making said medium, and methods for using said medium to make images. More specifically, the present invention relates to a polymeric composition which can form a transparent or translucent material that is useful as a medium for making images. The present invention also relates to a process for making said medium, as well as methods of using said medium to produce art and design images.

### Description of the Related Art

Ingredients and processes have always been important in making art and design images. The interaction of one or multiple media, materials, objects, devices, processes or combinations of these, with one another, with light, or both (hereinafter referred to as "light-art interactions"), has been a focus of an enormous amount of work among those making images of art and design over thousands of years. For example, throughout the history of images to the present day, there has been continuous production of a vast range of images which are see-through, images made in layers, images with other forms of real spatial depth, and images with other material properties which contribute significantly to their meanings. Ingredients and processes have always been important in making images of art and design. "Throughout the history of modern art, at least since Manet and Rodin, there has been an ongoing tension between an ostensible subject depicted and the self-assertion of the properties of the material in which the work is made. Brancusi and/or Giacometti would be other prime examples. Pursue this a little further and one would quickly come to the realization that, in modem art especially, the idea of 'subject' can never be discussed as something independent of mode of treatment and material properties. It seems to me that the dialogue between art's materiality and its ideas, themes, etc. has been especially central to modern art, and less central to other periods." (Kirk Varnedoe, December 10, 1996.) This dialogue produced the present invention and provides applications for its use.

Throughout the 20th century, since the invention of Cubism by Pablo Picasso and Georges Braque circa 1910, the solid form of images has opened up to light and space. Among the principle characteristics of the images produced are a general opening up of solid form, new uses of light and space, and the use of spatial depth that is transparent, translucent or a combination of these. Among examples of the new and unique images invented by this exploration and experimentation are: the collage, the construction, the Drawing in Space, welded sculpture, the assemblage, the photograph, the hologram, illuminated transparencies (like works of Light Box Art), Light Art, Light and Perceptual Art, Shaped Paintings, Installations, Computer Art, and Video Art. These images expanded what is today a deeply rooted, mainstream aesthetic, which is continued by the present invention, hereinafter referred to as the aesthetic of light and space.

Despite the emergence and prevalence of the aesthetic of light and space, image making and conventional images remained burdened by restrictions in the free use of their formal elements. The formal elements in conventional images were not freely and fully workable. For example, the use of transparency and translucency was not workable and could not be controlled. In addition, the use of real light and real spatial depth conventional images was limited and problematic, e.g., in their use with color, transparency or translucency, or a combination of these. For example, layering in conventional images often forces choices upon image makers between the ability to work/rework and strength, and between the aesthetic desired and permanence. Also, the free and workable use of three-dimensional ("3D") form is limited in making conventional images. For example, in many instances, the image can not be satisfactorily freed from a staged presentation, illusionism or both. The materials and techniques existing prior to this invention also limit the ability to work on conventional images, for example, limiting the ability to alter the image spontaneously as it is being made, or limiting the ability to see or predict how changes to an image as it is being made will take effect later. Prior to the present invention, an image maker could not make a strong, see-through, 3D form with a full range of workability and control.

The use of acrylics and glass allows the creation of images with real light, real transparency, real translucency, and real 3D visual depth. The use of these media have continued the aesthetic of light and space, but they have certain limitations. Acrylics have been used by such image makers as Naum Gabo and Robert Rauschenberg. Acrylics are linear polymers. Linear polymers scratch easily. Some solvents will dissolve them and others will craze them. Linear polymers will flow and sag over time at room temperature. They can be modified (e.g., shaped) when softened by heat, but they do not become fully malleable and their melting point is often near the temperature at which they will char. Though linear polymers can be cut, carved, and abraded using different processes and tools, heat produced during such processes can melt linear polymers enough to clog carving bits. Many acrylic images have aged very badly. In comparison, polymer of the present invention can be linear or cross linked, thus it can be as workable or reworkable as desired, and it can have other properties selected by the image maker. In comparison to linear polymers, cross linked polymers do not melt or scratch easily; they are easier to cut, carve and abrade; they have greater rigidity, greater solvent resistance, and greater mechanical stability; and they are stronger and more permanent, e.g., they do not flow or sag. The color stability of both linear and cross linked polymer in the inventive images can be controlled as desired.

Glass and polymer can both form images with similar aesthetic qualities. Glass images often have to be preplanned, the processes of their formation are usually progressively restrictive and irreversible, and their maximum size is often limited by the kiln or the annealer. For thousands of years, painting has been done with unfired colors on the smooth, fragile surfaces of glass which will easily scratch off. The present invention allows for bonding of many types of coloration to images. Image makers find the unique light and transparency of glass desirable as a medium. They continually try to explore light-art interactions by pushing the medium of glass. But the greatest creative freedom, aesthetic control, and range of aesthetic effects that can practically be achieved using glass today does not come close to that of the medium of the present invention. Among the substantial advantages of the medium of the present invention over glass, are its workability, reworkability, controllability, the creative freedom it offers (e.g., the sizes, shapes and structures of inventive images are unlimited), its strength and permanence, and the vast array of aesthetic options and effects it offers which are not comparably available in glass.

The few image makers who have worked in polymers have had limited or little control of real transparency, real translucency, color, layering, texture, light, form, permanence, processes or combinations of these, etc. They have never used and controlled polymer for interactions with light. They have never explored the workability, reworkability and controllability of polymers or the variety of images and effects which polymers can be used to create, or the solutions polymers can provide to the longstanding limitations, problems and undesirable issues. There is no conventional image making medium which can form images with controllable transparent or translucent layers of variable depth without compromising the strength and permanence of the image formed. There is no conventional image making medium which can form images with transparent or translucent texture that is workable and controllable. Further, image makers have never found a way to stabilize conventional polymer images so that they could be as strong and as permanent as desired. Conventional polymer images such as those by Eva Hesse, are known for their yellow or amber color or discoloration.

There are no conventional, transparent or translucent forms made as canvases. All conventional canvases are opaque. Very thin polymer films like Mylar, and acrylic in geometric forms (such as sheets, cubes and spheres), have been used as image supports for painting, e.g., the acrylic paints bond to acrylic forms. But there are no conventional, transparent or translucent forms made as image supports for bonding to a wide range of colorants and other image making materials, e.g., including conventional paints and photographic emulsions. The present invention offers such image supports. There are no conventional, transparent or translucent forms made as image supports for subtractive image making processes like carving, incising, and cutting. The present invention offers such image supports. And while the use of many conventional image making media on conventional image supports have limited workability and controllability, their use on image supports of the present invention is freely and fully workable and controllable. For example, many applications that can not be modified or removed as desired from paper or canvas, can easily be modified or removed from inventive image supports. Inventive image supports can be processed using additive and subtractive processes as desired.

Prior to the present invention, image makers and others did not know that stable transparent and translucent 2-dimensional ("2D") and 3D images could be made as desired, at a low cost, in an ordinary, or even a small unequipped working area, at ambient temperature, starting with liquid monomer, and that these inventive images could have non-polymeric ingredients (such as conventional paint on and/or within the polymer; and/or materials bonded to them). Prior to the present invention, those image makers and others were not aware of the wide range of differing transparent, translucent, and opaque images of the present invention that can be formed with the level of strength and permanence desired, using workable, reworkable and controllable processes of the present invention. They were not aware of the wide range of polymers with differing properties which are useful in different ways for making images and which can give inventive images a variety of desirable qualities. The present invention also allows control over spatial depth, transparency, translucency, and color. In addition, a multitude of other effects can be produced, such as optical effects, light effects, effects from the novel use of transparent spatial depth with and without color, and effects which rely of the strength or stability of the polymer. The present invention can liberate image makers from a range of significant prior restrictions, and produce effects and images unlike any ever made before.

It is extremely significant that this aesthetic of light and space which has developed over thousands of years of image making, accelerated and expanded throughout the 20th century to such an extent that it is mainstream internationally in conventional images, and its presence is still growing. As new, exploratory and innovative as many of these conventional images are, each image in this wide range is hampered by the same limitations and problems which are addressed by the present invention. The following examples show the wide variety of forms of conventional images with the aesthetic of light and space, principally fine art on the cutting edge of innovation today, principally exhibited in New York, NY, USA.

Kiki Smith has used many different glass processes for making paintings, sculpture, and wall pieces. She has also made video art, neon Light Art, translucent wax and acrylic sculpture, a palladium-leaf-covered wall piece, and Light Box Art. Matthew Barney's art includes film, and transparent and translucent sculpture of plastic, glass, petroleum jelly and silicone gel. Mike and Doug Starn's art is made of combinations of transparencies (e.g., film), ink, paint, resin and other media on plastic sheets, often in layers, illuminated by lights between and behind them. Sigmar Polke's resin-saturated paintings are characterized by their luminosity, transparency, and amber color. Robert Rauschenberg has made paintings on reflective metals, as well as glass sculpture, and art with lights. Maya Lin has recently made art in glass and in wax. Ann Hamilton and Robert Irwin have made art using transparent and translucent fabric. Bill Viola's work is made of film, video, monitors and mirrors. Jenny Holzer's work with lights received enormous acclaim in the early 1990's. James Turrell's Light and Perceptual Art has been very visible in the past decade. Recent sculpture by artists such as Anish Kapoor is about reflectivity. Other artists who have used light or both light and transparencies as a medium recently include Jeff Wall, Gary Hill, Keith Sonnier, Diana Thater, and Nam June Paik. Much of this art is dependent on controlled room lighting. Laurie Anderson's Performance Art has developed a large following. Among the artists who have made holograms recently are: Chuck Close, Ross Bleckner, Al Held, Roy Lichtenstein, Malcolm Morley, Larry Rivers, Edward Ruscha, Robert Ryman, and James Turrell. Recently long-term installations of Light Art by Dan Flavin, of clear glass by Dan Graham, and of Light and Perceptual Art by Robert Irwin have all been exhibited.

The aesthetic of light and space is apparent in the prevalence of transparent and translucent paintings, drawings and wall pieces. Transparent and translucent works on acrylic sheets have been made by artists such as Jules Olitski and the Starns. Transparent and translucent polymer films and fabrics have been used as surfaces in art, such as Mylar used for painting or drawing, and the fabric in transparent and translucent paintings by Sigmar Polke. Layers of glass, and transparent and translucent media such as thick, clear acrylics; wax and other media containing wax; and media mixed with clear particles of glass, plastic, quartz or mica have been used in art to enhance spatial depth as never before. The use of traditional paints in see-through layers has continued, as seen in paintings by Pat Steir and Gerhard Richter. An array of illuminated transparencies (which are often photographic) has emerged, such as the Light Box Art that has been made by many artists, e.g., Jeff Wall and Kiki Smith. And there are a wide variety of other recent transparent and translucent art works electrically illuminated from behind, from the front, and from multiple sides, e.g., art by the Starns and Brian Clarke.

The aesthetic of light and space is also apparent in the prevalence of transparent and translucent sculpture and related art. For example, transparent and translucent plastics have been used in much 3D art, e.g, art by Oliver Herring and the Starns. Art has been made with combinations of transparent and translucent materials, e.g., by Matthew Barney, Dan Graham and Mariko Mori. See-through containers appear in many art works, frequently filled with liquids, objects or both, e.g., plastic and glass bottles, bags, tubes, jars, boxes and tanks as seen in art by Damien Hirst. Installation Art characterized by open form continues to be made, e.g., art by Judy Pfaff. Other kinds of recent 3D art also have open forms. Many 3D art works made with transparent or translucent materials, open forms, or both, also have lights, e.g., art works that combine glass and light sources, such as sculptures by Brian Clarke.

Film and video are ubiquitous in recent art. Lights and slide projections have become common in art, e.g., projected onto transparent or translucent surfaces, such as glass, acrylic or fabric. Much art work also depends on controlled lighting in the space in which it is viewed, e.g., art that has to be viewed in a dark space. Light effects such as projections are common in Performance Art. Computer Art has emerged, e.g., art by Gary Hill. New light effects are being used in images, as seen in the use of fiber optics by artists like the Starns; as seen in the use of light with transparent and translucent materials by many artists; as seen in Nam June Paik's novel use of lasers and other light sources in art works on view at his 2000 exhibition at the Guggenheim Museum in New York, NY; as seen in the 1998 juried show, "Lightforms '98" at the New York Hall of Science; and in "Under the Sun: An Outdoor Exhibition of Light" in 1998 at the Cooper-Hewitt, National Design Museum, Smithsonian Institution, New York, NY.

The aesthetic of light and space can also be seen in a notable increase in the use of light effects in a wide array of different kinds of images such as those by Robert Rauschenberg, and those using popular, new reflective and metallic paints.

The prevalence of the aesthetic of light and space has been visible in recent exhibitions of images at the Whitney Museum of American Art, the Guggenheim Museum, the Museum of Modern Art, and at innumerable other major venues in New York City. The Sunday New York Times Magazine recognised it beyond art in an eight page color article, "Lucidity - As the world grows murkier, the impulse to make things clear is irresistible," dated April 23, 1996. A broad sweep of popular culture shows the importance of this aesthetic of light and space and its expanse. For example, the aesthetic of light and space is seen in the prevalent use of glass in architecture (e.g., I.M. Pei's Pyramid addition to the Louvre Museum), clear plastics and glass in furniture (e.g., glass tables), clear plastics in a wide range of consumer goods (such as containers, and Macintosh computers), vellum in graphics, and sheer and metallic fabrics in fashion. The aesthetic of light and space became so prevalent that many of its forms, such as the clear shopping bag, could be considered signs or even icons of 20th century culture.

### SUMMARY OF THE INVENTION

The present invention is directed to a method of making an image comprising the steps of forming a polymerization reaction mixture comprising at least one monomer and at least stabilizer, wherein the at least one monomer is capable of forming a transparent or translucent polymer; processing the polymerization reaction mixture into a shape; and initiating polymerization of the reaction mixture to form a transparent, translucent, or absorbent polymeric composition. The method optionally further comprises the step of applying a superimposed medium onto the surface of the absorbent polymer, wherein the superimposed medium is selected from the group consisting of paints, dyes, inks, primers or binders. Alternatively, the method further comprises the steps of comprising applying at least one colorant to a portion of the polymeric image support to form an image, wherein said colorant is selected from the group consisting of pigment, dye, light reflective particles and colored particles; and exposing the colored image to light such that at least a portion of the light passes through the image, wherein said light is selected from the group consisting of visible light radiation, light capable of inducing fluorescence, light capable of inducing phosphorescence, and light capable of inducing iridescence.

The present invention is also directed to a method of making an image comprising the steps of placing a polymerization reaction mixture on a support surface such as a mold, wherein the polymerization reaction mixture is capable of forming an absorbent polymer; and polymerizing the polymerization reaction mixture to form an absorbent polymer. The method optionally further comprises the step of superimposing a medium on the absorbent polymer, wherein the medium is selected from the group consisting of paints, dyes, inks, primers, binders, or photographic emulsions.

The present invention is also directed to a method of forming an image comprising the steps of applying to a support surface a layer of absorbent polymer penetrable by an oil soluble dye; mixing an oil soluble dye with a solvent; and applying the mixture to the absorbent polymer to form an image.

The present invention is further directed to a transparent or translucent composition for use as a medium for making an image wherein the composition comprises at least one synthetic polymer and at least one stabilizer. The present invention is also directed to a composition for use as a medium for making an image wherein the composition comprises at least one synthetic absorbent polymer. The present invention is also directed to a composition for use as a medium for making an image wherein the composition comprises at least one synthetic polymer capable of bonding to at least one superimposed medium selected from the group consisting of paints, dyes, inks, primers, binders and photographic emulsions. The present invention is also directed to an image support comprising a substrate formed of a first, non-absorbent polymer layer bonded to a layer of a second, absorbent polymer, wherein the second polymer comprises polymers having hydroxyl, amide, amide, ester, and ether functional groups.

### BRIEF DESCRIPTION OF THE DRAWINGS

Fig. 1. shows alternative of methods for making inventive images;
Fig. 2. shows a single inventive image from two of its sides, at stages in its development;
Fig. 3. shows three different bird inventive images;
Fig. 4. shows a 2D or 3D inventive image made of one continuous linear, open form;
Fig. 5. shows cut-outs which form one or more inventive images;
Fig. 6. shows examples of ways a realistic illusion of a sky can be depicted in inventive images;
Fig. 7. shows a 2D or 3D inventive image which could be formed in different ways;
Fig. 8. shows a 2D or 3D inventive image, and a cross sectional diagram of its layers;
Fig. 9. shows a cross sectional diagrammatic example of the layering of an inventive image;
Fig. 10. shows side views of polymer rods or bars used to make inventive images;
Fig. 11. shows cross section polymer rods, bars, blocks or parts for making inventive images;
Fig. 12. shows a cross section or side view of an inventive image with multiple different layers;
Fig. 13. shows a cross section or side view of an inventive image with layers of different thicknesses;
Fig. 14. shows a cross section or side view of an inventive image made of multiple layers;
Fig. 15. shows a cross section or side view of a layered inventive image;
Fig. 16. shows a two part image support connected by a superimposition;
Fig. 17. shows an image made of multiple parts connected by a common part;
Fig. 18. shows texture on inventive images which may be made of connected parts;
Fig. 19 shows three stages in layering an inventive image;
Fig. 20 shows an inventive image with multiple layers and an embedded image support;
Fig. 21. shows two inventive images made with internal air pockets and parts shaped as prisms;
Fig. 22. shows a cross section or side view of an inventive image with two different layers;
Fig. 23. shows an inventive image with its image support completely encased by another layer;
Fig. 24. shows texture and/or a ground on an inventive image in cross section or side view;
Fig. 25. shows cross section or side views of inventive images with multiple different layers;
Fig. 26. shows a cross section or side view of an inventive image with both thick and thin layers;
Fig. 27. shows a layered inventive image with bonding spots in a cross section or side view;
Fig. 28. shows five stages in the layered formation of an inventive image in cross section views;
Fig. 29. shows a cross section or side view of a layered inventive image with bonding spots;
Fig. 30. shows two stages in the layered formation of an inventive image with bonding spots;
Fig. 31. shows two stages in the layered formation of an inventive image in cross section views;
Fig. 32. shows a cross section or side view of a layered inventive image with bonding spots;
Fig. 33. shows an inventive image made in layers with embedded objects and materials;
Fig. 34. shows an inventive image made in layers with embedded coloration;
Fig. 35. shows an inventive image made in layers with embedded coloration;
Fig. 36. shows inventive images with surface irregularities that are superimposed;
Fig. 37. shows a cross section or side view of a layered inventive image with bonding spots;
Fig. 38. shows a cross section or side view of a layered inventive image with bonding spots;
Fig. 39. shows texture on a layered inventive image in a cross section or side view;
Fig. 40. shows texture on an inventive image in a cross section or side view;
Fig. 41. shows texture on an inventive image in a cross section or side view;
Fig. 42. shows inventive images with negative space between their layers;
Fig. 43. shows a multi-layered inventive image with inlays, embedding, and other effects;
Fig. 44. shows an inventive image made of two layers, one encased within the other;
Fig. 45. shows a multi-layered inventive image with inlays, embedding, and other effects;
Fig. 46. shows an inventive image with an internal air pocket that contains various ingredients;
Fig. 47. shows three inventive images with joined parallel planar layers and internal air pockets;
Fig. 48. shows two inventive images with internal air pockets that contain various ingredients;
Fig. 49. shows graduated coloration in and/or on layered inventive images;
Fig. 50. shows an inventive image with a pattern of squares;
Fig. 51. shows the use of a quilt pattern in and/or on an inventive image;
Fig. 52. shows the use of an American Indian style pattern on and/or in an inventive image;
Fig. 53. shows an inventive image with layers of different compositions and sizes;
Fig. 54. shows two inventive images with layers of different compositions and sizes;
Fig. 55. shows layering variations in inventive images using an irregular form;
Fig. 56. shows layering variations in inventive images using an irregular form;
Fig. 57. shows cross section or side views of layering variations in inventive images;
Fig. 58. shows cross sections of an inventive image as layers are added and embedded;
Fig. 59. shows inventive images with many layers embedded;
Fig. 60. shows a cross section view of two stages in making a multi-layered inventive image;
Fig. 61. shows a cross section view of two stages in making a multi-layered inventive image;
Fig. 62. shows variations in layering inventive images in cross section or side views;
Fig. 63. shows an inventive image with alternating continuous and discontinuous layers;
Fig. 64. shows an inventive image with alternating continuous and discontinuous layers;
Fig. 65. shows an undulating inventive image with continuous and discontinuous layers;
Fig. 66. shows an inventive image with discontinuous layers;
Fig. 67. shows layering variations in inventive images using broken color style applications;
Fig. 68. shows cross sectional or side views of layering variations in inventive images;
Fig. 69 shows a varied process of making an inventive image in superimposed layers;
Fig. 70. shows an inventive image formed of multiple layers with coloration and attachments;
Fig. 71. shows workability in making inventive images without an initial image support;
Fig. 72. shows workability in making inventive images without an initial image support;
Fig. 73. shows workability in making inventive images without an initial image support;
Fig. 74. shows the workability of the medium of the present invention in making images;
Fig. 75. shows the joining of two separate parts in making an inventive image;
Fig. 76. shows ways to form polymer on an inventive image using a temporary mold;
Fig. 77. shows the process of forming polymer in a mold, and on an inventive image;
Fig. 78. shows examples of the process of adding fiber to an inventive image;
Fig. 79. shows varied examples of how inventive images can be displayed;
Fig. 80. shows the formation of inventive image in a mold with an added object;
Fig. 81. shows the formation of polymer in a mold with other objects which bond to the cPRM;
Fig. 82. shows the use of a roof over cPRM forming polymer exposed to air;
Fig. 83. shows the joining of two separate parts in making an inventive image;
Fig. 84. shows an inventive image's development, e.g., two parts are added to it;
Fig. 85. shows examples of joining separate parts together to form inventive images, e.g., books;
Fig. 86. shows examples of inventive images with their form and their structure united;
Fig. 87. shows examples of ways a variety of inventive images are displayed in relation to a wall;
Fig. 88. shows examples of different arrangements of superimposed layers in inventive images;
Fig. 89. shows the formation of a polymer image using both open and enclosed molds;
Fig. 90. shows the formation of an inventive image in tiered layers by tilting the mold;
Fig. 91. shows tiered polymer layers added to an inventive image using temporary mold walls;
Fig. 92. shows the carving of a newly formed layer of cPRM on an inventive image;
Fig. 93. shows two inventive image parts connected when a third part is formed between them;
Fig. 94. shows a new polymer part formed on an inventive image using a temporary mold;
Fig. 95. shows processes for changing polymer as it forms in molds;
Fig. 96. shows the reinforcement of the joint of the inventive image in Fig. 94;
Fig. 97. shows inventive images which may function as architecture;
Fig. 98. shows inventive images made with control, precision, craftsmanship and delicacy;
Fig. 99. shows the polymer forms of inventive image stairs from a side view;
Fig. 100. shows the use of light sources as part of inventive images;
Fig. 101. shows the use of light sources as part of inventive images;
Fig. 102. shows the use of light sources as part of inventive images;
Fig. 103. shows the use of light sources and other attachments as parts of inventive images;
Fig. 104. shows an inventive image with varied coloration, in which light is a crucial element;
Fig. 105. shows an inventive image with varied coloration, in which light is a crucial element;
Fig. 106. shows the use of light sources as part of inventive images;
Fig. 107. shows inventive images that all have light sources in their Compositional Arrangements;
Fig. 108. shows an inventive image in which light is a crucial element;
Fig. 109. shows examples of the use of light sources with layered inventive images;
Fig. 110. shows inventive images with multiple parts, against a wall, hanging and free standing.

### DETAILED DESCRIPTION OF THE INVENTION

The present invention provides a medium for a work in progress or an image of art or design that can be formed, reworked, and controlled as desired. The medium of the present invention, a polymeric composition, is prepared by polymerizing one or more monomers which are capable of forming a non-opaque material, also referred to as a transparent or translucent material. Preferably, the inventive medium comprises a polymeric material with desired optical properties (such as a particular refractive index), a polymeric material which is strong in a manner which enables the inventive image to be permanent (such as crosslinked polymers like polyester), a polymeric material which enables the further processing desired (e.g., a polymeric material which will bond to superimposed applications), or a polymeric material which meets a combination of these criteria.

As the term is used herein, an "image" is a work of art or design intended for visual observation. An image can be a work in progress or it can be complete. An image is finished at the discretion of the image maker who determines when it is complete and what is to be done to complete it. An image may, among other things, be realistic, symbolic, abstract, narrative and/or utilitarian. Examples of images are paintings, sculptures, collages, stage sets, architectural design, furniture design, fashion design, graphic design, crafts, jewelry design, product design, interior design, costume design, an edition of ten partitions dividing a room with a jungle printed in and on them, an edition of five tables bearing geometric drawing in graphite and pastel, and an edition of a hundred windows with real organic forms (such as flowers) embedded in them and colorful depictions of similar organic forms painted on them. In general, the term "images" refers to the group of all images, however, the context may further define the group as appropriate.

As used herein, design refers to images of utilitarian art which are for visual observation, but which are not decoration. Unlike decoration, design images of the present invention are an end in and of themselves, they do not function as part of something else, e.g., they do not merely embellish, ornament, enhance, or beautify something else. Inventive images need not be pleasing or beautiful at all. An inventive image may for example be pleasing to some and not to others, or it may be offensive, challenging, vulgar, threatening, aggressive, scary, or morbid. As used herein, the term "design" is synonymous with applied art, but it does not include decoration.

As used herein, the term "PRM" refers to the universe of polymerization reaction mixtures useful for making the medium of the present invention, or to one or more specific polymerization reaction mixtures. The term "PRM", as used herein, is both singular and plural. The term "cPRM", a subset of PRM refers to namely all PRM that are catalyzed and to one or multiply catalyzed PRM.

As used herein, the term "conventional images" refers to images which involve light-art interactions of a kind which was made prior to the present invention. The term conventional images may be further defined by the context.

In this patent, the term "conventional practices" refers to processes and means used at any time to make conventional images. For instance, conventional practices may refer to traditional, known, or previously used processes for making conventional images. Examples of conventional practices include materials, media, objects, devices, interactions, processes, equipment, tools, facilities, products, concepts, and techniques that were heretofore known and/or used for making conventional images. For instance, chiaroscuro is a conventional practice, as are the brush and the paint used to create it and the canvas onto which it is applied.

As used herein, the term "limited edition" refers to an inventive image that is unique as well as to an inventive image that is reproduced, but not for the mass market. For example, a thousand, five hundred, three hundred or fewer copies in a limited edition of an image might be prepared during the first 75 years of its life. Limitations on the size of limited editions for fine art images of the present invention are entirely at the discretion of their image maker. However it is preferred that during their first 75 years of existence, limited editions of fine art images of the present invention are made with about 3000 or fewer copies, it is further preferred that they are made with about 2000 or fewer copies, it is even more preferred that such limited editions are made with about 1000 or fewer copies, it is more desirable that such limited editions are made with about 700 or fewer copies, it is most desirable that such limited editions are made with about 500 or fewer copies, and it is most preferred that such limited editions are made with about 400 or fewer copies. However when the use of a particular mold is required to make such inventive images of fine art in limited editions, and said mold is destroyed after it is used to make such a limited edition, it is preferred that these limited editions have about 5000 or fewer copies, it is more preferred that they have about 4000 or fewer copies, it is more desirable that they have about 3000 or fewer copies, and it is most preferred that they have about 1500 or fewer copies.

For fine arts images of the present invention which function for visual observation but which also serve one or more utilitarian functions (e.g., as a table, a window, a wall), it is preferred that during their first 75 years of existence, limited editions are made with about 2500 or fewer copies, it is further preferred that such limited editions are made with about 1800 or fewer copies, it is even more preferred that such limited editions are made with about 1000 or fewer copies, it is more desirable that such limited editions are made with about 500 or fewer copies, and it is most preferred that such limited editions are made with about 380 or fewer copies. However when the use of a particular mold is required for making inventive images of fine art with both visual and utilitarian functions in such limited editions, and said mold is destroyed after it is used to make such a limited edition, it is preferred that these limited editions have about 4000 or fewer copies, it is further preferred that they have about 3500 or fewer copies, it is more desirable that they have about 2500 or fewer copies, and it is most preferred that they have about 1500 or fewer copies.

It is preferred that during its first 75 years of existence, a limited edition design image of the present invention has about 1500 or fewer copies, it is further preferred that such a limited edition design image has about 1000 or fewer copies, it is more desirable that such a limited edition design image has about 700 or fewer copies, it is most desirable that such a limited edition design image has about 500 or fewer copies, and it is most preferred that such a limited edition image of design has about 380 or fewer copies. However when the use of a particular mold is required for making design images of the present invention in such limited editions, and said mold is destroyed after it is used to make such a limited edition, it is preferred that these limited editions have about 3000 or fewer copies, it is more preferred that they have about 2500 or fewer copies, it is more desirable that they have about 2000 or fewer copies, and it is most preferred that they have about 1500 or fewer copies. It is preferred that during its first 75 years of existence, a limited edition architectural image of the present invention be made with about 4 or fewer copies, it is more preferable such a limited edition have no more than about two inventive images, and it is most preferable that such a limited edition only have one image. However when the use of a particular mold is required for making architectural images of the present invention in such limited editions, and said mold is destroyed after it is used to make such a limited edition, it is preferred that these limited editions have about 8 or fewer copies, it is more preferred that they have about 6 or fewer copies, it is more desirable that they have about 4 or fewer copies, and it is most preferred that they have about 2 or fewer copies.

As used herein, the term "two dimensional" (abbreviated herein as "2D") articles are substantially planar. The maximum thickness of a 2D article is preferably less than about one inch, e.g., the sum of all of the changes in its surface level (such as textures and undulations) is less than one inch. Thus for example, a 2D polymer which is less than a quarter of an inch thick might have changes in its surface level measuring three quarters of an inch, such as a surface texture which is three quarters of an inch deep, an undulation in the polymer's planar form that measures three quarters of an inch, or a surface texture a quarter of an inch deep and an undulation measuring a quarter of an inch.

As used herein, an article that is "two dimensional planar" (referred to herein as "2D planar") has substantially no perceivable depth. For example, a 2D planar image might be thin and flat, like an ordinary sheet of paper.

As used herein, the term "three dimensional" (abbreviated herein as "3D") articles are at least about one inch in thickness. Illustratively, a 3D article has a non-planar dimension which varies one inch or more in its surface level (e.g., its texture or undulation measures one inch or greater), or the sum of a 3D article's thickness and its non-planar dimension is at least about one inch.

As used herein, the term "bond" refers to mechanical bonds, chemical bonds, loose bonds, or combinations of these. The term, "loose bond" refers to bonds that are easily separated, e.g., things that are positioned so closely together that they do not fall apart.

The term "image support" refers to an element in an inventive image which is the principal element in its shape or form, and which sometimes comprises all or almost all of its shape or form. In some instances, an image support is an image's principal structural element, and in some instances it is an image's entire structure. Image supports are not finished images; they are further processed into finished images, e.g., using additive and/or subtractive processes, and/or using other processes which alter the shapes or forms of image supports such as folding them (as a paper image support is used to make a conventional origami bird). An image support may underlie an image, be within an image, or reside behind an image. An image may be made on an image support. Image supports exist in various forms. They are comparable to a canvas or a sheet of paper in conventional painting, drawing, printmaking, collage and photography. An image support is comparable to an armature, a skeletal form, or a framework (which might be internal and/or external element of the final image) in conventional sculpture. An image support may be made of one or more parts which may or may not be physically connected. Often making an image begins by making or getting the initial image support. Further processing is done on and/or to the initial image support. Alternatively, image supports may be added to images which are already begun, e.g., separate parts of a single image might all be joined to a common image support, or reworking an image might involve adding an image support to it. However, other images are without an image support.

The formal elements of art used by art and design professionals are a group of basic aesthetic components, a subset of which constitutes all images. The formal elements generally include:
Medium, Material, and Combinations Thereof: Each medium and/or material has inherent limitations that affect its workability, reworkability and controllability, as well as the creative freedom it offers image makers. Some materials and media require or can be used with special facilities, tools, equipment, supplies, products, etc. There are also issues regarding how each material and or medium holds up over time in its specific use in an image.
Process of Creation: The process of creation used to make images refers to both the ways the medium and materials must, or can, be used and how the image maker handles this process.
Light: Includes real and illusionary light; visible and non visible light; light sources; light effects (e.g. matte, glossy); transparency, or translucency; shadows; and the absence of light.
Space: Includes real and illusionary space such as spatial depth, transparency, translucency, perspective, receding space, negative space, airiness, and lack of spatial depth (e.g., flatness).
Form: Includes height, width, depth, weight, shape, and form in 2D and 3D.
Compositional Arrangement is an arrangement of parts into a whole. The parts in a compositional arrangement do not all have to be tangible (e.g., light can be a part, or a drawn line or a painted form can be parts). Each part in a Compositional Arrangement does not have to be physically connected to the rest of the image.
Structure includes the form, material source and nature of an image's stability or lack thereof, physically (e.g. strength and permanence) and visually (e.g. the stability of its formal elements' balance).
Color includes hue, value and intensity; lack of color; and use or application of color.
Time includes the sense of time and the actual time that may be apparent in an image. Function can include visual observation and often for additional functions, e.g., utilitarian functions such as functioning as a table.
Movement includes real physical movement and visual movement.
Subject Matter includes what is literally, objectively portrayed in an image (e.g., a still life, a landscape, a group of figures, a portrait), and the general way it is shown (e.g., narrative, abstract, realistic).
Content includes the broader, more conceptual idea or ideas presented or alluded to by an image, beyond its literal and objective aspects and subject matter.
Meaning includes the relevance of an image in the larger context of the world (past, present and future).

In images, such as images of the present invention, the formal elements are very interrelated, e.g., they overlap significantly. For example, altering one formal element, usually affects one or more other formal elements in the same image. All aspects of formal elements are formal elements, e.g., they might be uses, manifestations, or effects of one or more of its formal elements, or they might be consequences of not using one or more formal elements. For example, the use of texture on an image affects its spatial depth, its light and shadow, its color, its transparency and/or translucency, its subject matter, its content, its meaning, and/or its function.

The meaning of the term "medium" as used herein depends upon the context and includes the conventional uses of this term in the relevant art. However, in the context of the medium of the present invention, the term medium refers to the material, means or both the material and the technical means used to make images. For example, in this context, the means used for artistic expression, e.g., acrylic paint and oil paint on canvas or paper, pencil on paper, glass, photography, cast and/or fabricated metal, wood carving and silkscreen, are conventional media.

Variables in Image Makers Control, referred to herein as "VIMC", are factors in the formation of polymer, which image makers can select, control and use if desired and as desired in embodiments. Examples of VIMC are choices pertaining to the formation of polymer with different cPRM, molds, environments and specifications. If desired, the VIMC can be effectively and advantageously used as desired and to the extent desired, during and after the process of forming a polymer inventive image in order to control, or to try to control innumerable aspects of it. Use of the VIMC in forming polymer affords image makers greater creative freedom and aesthetic control over the polymer formed. Specific examples of VIMC are the specific active ingredients in a cPRM used to form a medium such as the choice of monomers; the timing of superimposed layers of cPRM and/or their thickness; the use of one or more stabilizers (for instance, their concentration or proportion and other specifications e.g., the use, quantity and type of fiber or the lack thereof, the use of viscosity modifiers, etc.); the process used to create polymer (e.g., tiered layers, altering gelled cPRM, use of conventional injection or extrusion processes, etc.); the viscosity of an application of cPRM; the use of a temporary barrier such as temporary clay mold walls; the mold's specifications; use of release agents; the air temperature, humidity and air currents around the cPRM. Not all VIMC are specifically described herein; there are further variables in mold making and in the display and mounting of inventive images, variables in conventional practices of forming polymer, as well as variables in specific cPRM ingredients known or available to those of ordinary skill.
**Bonding Agent, Bonding Substance** - As used herein, "a bonding agent" is anything (e.g., any material, medium, device, or combination of these), which forms, assists or fortifies a mechanical bond, a chemical bond, and/or a loose bond in inventive images, e.g., a bonding agent bonds inventive image parts, applications, layers, attachments, surfaces, and/or components. Examples are bonding substances, media and materials (such as glues, acrylic emulsions, paste, and cPRM); C-clamps, screws, nails, bolts, chains, hinges, hooks, tape, string, wire, sodder, light, and/or heat, and the like. Bonding substances are a subset of bonding agents.
**Bonding Spots** - Areas on the surface of an image of the present invention, left and/or made, to form, assist and/or fortify a chemical bond, a mechanical bond, and/or a loose bond in that inventive image, such as a bond connecting two or more parts (e.g., to connect a layer, a component, and/or another attachment to an inventive image).
**Colorant, Coloration** - As used herein refer to anything that is a source of color, or color from any source, e.g., color refers to hue, intensity, value (refer to value below), or a combination of these. Colorant and coloration are often further defined by their context, e.g., referring to anything that affects or can affect an inventive image's color. Examples of colorants and coloration for inventive images are pigments, dyes, particles (such as blades of grass, rocks, gems, stones, particles of glass, metal, paper, sand, coffee, reflective particles); elements that are collaged, attached, embedded, or inlaid (such as string, shells, paper clips or a conventional image like a photo, a cut-out or a drawing on paper), marks (such as pastel, charcoal or pencil marks, marks which are text), printing, painting, conventional and unconventional image making materials and media. **Fat over Lean, Fat, Lean, & The Problems with Fat over Lean** - Fat over lean refers to the conventional technique of layering materials and/or media in order of increasing elasticity used for centuries in conventional paintings, typically oil paintings, so that they are as permanent as possible. Images such as conventional paintings expand and contract in normal environments. For example, conventional image supports such as canvases, paper and wood expand and contract in different circumstances, for example, with changes in temperature and humidity. Fat ingredients in oil paints (e.g., linseed oil or stand oil) make them more elastic. Turpentine is an example of a lean ingredient, it evaporates leaving a thinned layer of oil paint behind. In order to be as permanent as possible, layers of oil paints should always be applied fat over lean so that they are most likely to withstand expansion and contraction without changing, e.g., cracking, crazing, or flaking. As superimposed layers of oil paint expand and contract, a fat layer will expand and contract to a greater extent than a lean layer. Oil paint layers superimposed lean over fat are more likely to be impermanent because with normal expansion and contraction, the lean layer may crack, craze or flake, as the fatter layer beneath it expands more than the leaner layer just as casein paint would crack or flake off of a rubber sheet when it is stretched.

The principal of fat over lean, the application of layers in increasing order of elasticity, also governs the layering of other materials and/or media, though in these circumstances this principal is not always called fat over lean. For example, this principal governs the layering of oil paints with other materials and/or media, such as water based media. But this principal does not govern the layering of acrylics over acrylics nor is it applicable to the layering of paints comprised of the medium of the present invention.

While the principal of superimposing layers with increasing elasticity is known, it is often extremely difficult to follow. Therefore, despite widespread concern for permanence, and despite widespread use of layering applications that should follow the principal of fat over lean for permanence, image makers generally either do not exert the effort required to follow this principal for permanence, or they do not know if they have followed this principal.

Fat over lean is hard to follow because image makers frequently do not know their paints' fat and lean ingredients (added by the manufacturers), their percentages, or their quality (such as their permanence, purity, and refinement). Pigments and dyes differ in the amount of oil they absorb, and they originate from different sources, e.g., the sea, plants, the earth. In addition, paint manufacturers often mix other additives into their paints such as additional oils, driers, waxes, and fillers (like chalk and magnesium carbonate), which can significantly affect the paint's fat content and its permanence. Paint manufacturers generally do not provide this information. Thus, while two paints may look the same, e.g, with the same hue, value, intensity, weight and consistency, their elasticity or fat content can differ significantly, and as a result, their permanence can differ significantly, and the image maker who is conscientiously trying to layer them (with or without other colors) in an order which increases in elasticity would never know.

In addition, those image makers who do conscientiously try to follow the principal of layering applications with increased elasticity may encounter further problems. To follow this principal and account for its lack of accuracy, image makers often add an increased amount of one or more fat ingredients (like linseed oil or stand oil) into each superimposed paint layer. Though this seems like a logical solution, using too much fat in a layer is another cause of impermanence. For example, excess oil can cause oil paintings to wrinkle, to discolor, to remain soft and fragile, and to become increasingly transparent over time. Conservators have found that thinner paintings, leaner paintings, and paintings with fewer layers tend to be the most permanent. Thus, even though oil paints can be permanently layered according to fat over lean, the quantity of layers of oil paint which can be permanently superimposed is limited because when the outer layers become too fat, the risk of impermanence returns presenting a new problem.
**Fine Artist Quality** - As used herein, the term "fine artist quality" refers to the best grade of that material or medium that is available, which is usually the most permanent.
**Mark, Marks, Marking** - Refers to the application of coloration to an image. Mark, marks, and marking are often further defined by their context.
**Objecthood** - As used herein, the term "objecthood" is the quality or state being perceived as a object like other objects in the real world which are not images. Those images which are perceived as other objects are perceived are said to have objecthood. Many images do not have objecthood because they are perceived differently than other objects in the real world. For example traditional rectilinear paintings on canvas are not perceived as other objects are perceived; viewers are conditioned to perceive them as artistic statements, thus they are not evaluated on the same terms as other objects are.
Permanence in Art and Design - Herein refers to the stability of an image over time in an environment which has normal changes, not extreme ones. It is the acceptable, repairable, restorable and natural aging of an image of art or design that does not affect its meaning or its integrity, and often is considered part of its beauty and its meaning. Permanent image making ingredients and processes, and permanent images are both those which change so slowly that their changes are not detectable to the human eye, and those which change in ways that do not affect their integrity or their meaning. Cracks are accepted in permanent paintings, broken arms are accepted in permanent sculptures, and restoration work is accepted in permanent images provided these changes do not affect their integrity or meaning.
**Principle of Whole Development and Unity** - Herein refers to a conventional image making concept whereby images are considered strongest when they are formed in a process in which all of their formal elements are developed in concert and/or united. This principle refers to the image making with the ability to make an image in such a process, whether this ability is fully exercised or not, in other words, whether all of an image's formal elements are actually developed in concert and/or unified or not, e.g., formal elements may just be considered simultaneously throughout the stages of making the image. Developing an image in concert means that the interrelationships between all of its formal elements, and the relationship between each of its formal elements and the image as a whole, can, if desired, be fully considered, worked, reworked, controlled and interwoven, to the extent desired and in the manner desired, throughout that image's entire development. For example, by using this image making process, image makers can make the interrelationships between aspects of an image, as important as desired in that image, as integrated as desired, and integrated in the manner desired. Thus, the image is strengthened as desired by unifying it as desired. In comparison to image making according to the Principle of Whole Development and Unity, completing part of an image significantly before another part risks forming an image which is not as strong and not as unified as it might have been. As an illustration, when painting a conventional portrait, finishing the face first, before the background or the figure's body are considered or developed at all can result in an image which is not as strong or as unified as a portrait in which the face, the background, and the figure's body are all considered more or less in terms of one another.

Developing all aspects of an image in concert as desired, and integrating it into as unified of a whole form as desired only means that image makers have the ability to develop and integrate images as desired. It means that the development and integration of the image is the result of the image maker's free consideration and choices, rather than the result of an image maker trying to do his or her best within, despite or trying to dodge limitations, problems and undesirable issues which might have altered his or her vision for the image, e.g., limitations of the medium, limitations of the process, or the requirements which need to be followed for strength and permanence. Not developing aspects of an image can be as much of an expression the image maker's vision in the specific image formed, as the aspects of that image which are developed and integrated.
**Reworking** - Changing an image after it has been formed or completed, e.g., shaping, altering, repositioning, adding, attaching, rearranging, removing, repairing, restoration and conservation.
**Seepage** - In this patent, seepage refers to cPRM which leaks or runs past the area or the barriers provided for it to polymerize within, as well as the hardened polymer this cPRM forms.
**SSI, and Other Surface Irregularities** - As used herein, the term "SSI" refers to those small surface irregularities which are expressly made for and/or used for forming, assisting and/or fortifying mechanical bonds in inventive images. SSI may partially or entirely, continuously or discontinuously cover one or more of the surfaces in contact in forming or fortifying a mechanical bond in an image. Examples of SSI are those small surface abrasions, fine textures, surfaces with small irregularities, undercut surfaces, porous surfaces, small surface perforations, other such surfaces, and combinations of these, which will or which do form, assist and/or fortify a mechanical bond, e.g., in contact with a bonding substance such as material or medium like a paint or cPRM. Surface irregularities on inventive images which are medium sized and large (such as abrasions, textures, perforations, undercuts, etc.), are referred to herein as large surface irregularities, not SSI, even if they are used to form, fortify and/or assist a mechanical bond. Small surface irregularities on inventive images which are not for the purpose of a mechanical bond, are not SSI, even though for example, they may be identical or similar to SSI, they might even be different areas of a continuously abraded image that also has SSI on it. Small surface irregularities which are not SSI are referred to herein as small surface irregularities. SSI are only those small surface irregularities which can easily be filled in by one or a few superimposed applications, and/or those small surface irregularities which can easily be removed by processes of removing matter from inventive images. Small surface irregularities might for example be on an inventive image for aesthetic and/or functional purposes, e.g., texture, perforations (e.g., small negative cut-outs, or perforations for air, light, gasses and/or vapors to pass through), indentations, scratches, undercuts, incised marks (e.g., drawing or texture), carving, sandblasting, beadblasting, embossing. Stabilizer - In the context of the present invention, a stabilizer is any object, compound, component, or action that imparts chemical, mechanical, or dimensional stability to an item, either directly or indirectly, through initiation of one or a series of events or intermediate steps, in the formation of an image. Stabilizers include processing aids (i.e., materials that aid in the processing of a polymer inventive image) as well as materials that reduce or eliminate changes to a polymer image after it has been formed. Moreover, an image of the present invention may have more than one stabilizer, which may be similar or different. Often a single stabilizer affects more than one property in cPRM and/or in polymer. Typically, the stabilizer (collectively) consists of less than about 40% by volume of the total volume an image.

One class of stabilizers that are particularly useful in the present invention are color stabilizers such as those which reduce or eliminate discoloration of polymer. Examples are ultra violet light stabilizers, ultra violet light absorbers, and Hindered Amine Light Stabilizers (HALS).

Other useful stabilizers are ingredients added to cPRM i) to cause surfaces of the cPRM exposed to air during the polymerization reaction to form smooth surfaces; and/or ii) to promote the complete curing of the cPRM. When added to cPRM, wax or mixtures containing wax (such as Silmar®'s A-111, mixtures of monomers and wax, encaustic paints, other conventional painting media with wax ingredients, and mixtures of wax and a solvent) are examples of stabilizers which can fulfill both of these functions.

Compositions superimposed upon incompletely cured polymer surfaces which further cure or fully cure them are stabilizers. Methyl ethy ketone peroxide (MEKP) can function as such a stabilizer.

Still further useful stabilizers include materials that strengthen the image such as fiber (for example fiberglass like surfacing veil fiberglass, and fabric fibers). However, it is preferred that transparent and/or translucent conventional fabric (such as shims) which, to the unaided human eye does not have an open weave (e.g. its weave does not have open spaces that can be seen through as for example, lace or gauze), which is superimposed by transparent and/or translucent cPRM that becomes discolored (e.g., yellow or amber discoloration of polymer caused by exposure to ultra violet light which appears for example within 3 years of the polymer's formation) is not used.

Other types of stabilizers that are useful in the present invention include moisture scavengers; antioxidants (such as Cyanox® antioxidants by Cytec Industries Inc.; Weston® and Ultranox® antioxidants by General Electric Company; and Irganox® LC Blends by Ciba Geigy); materials that remove bubbles from and/or defoam cPRM (such as Byk®-A 555 by Byk Chemie); antiozonants (such as Santoflex 1350PD by Flexsys America LP); leveling agents (such as wax or mixtures containing wax, as well as leveling agents marketed by Byk Chemie); optical brighteners and other compositions which absorb ultraviolet light and fluoresce in the visible blue spectrum (such as Uvitex® OB by Ciba Geigy); cPRM viscosity modifiers and associative thickeners (such as Aerosil® by Degussa Corp.); and polymerization regulators for example, inhibitors (such as free radical inhibitors).

Other stabilizers protect polymer inventive images or parts thereof against changes in physical properties, and/or enhance physical or mechanical properties, dimensional stability or heat resistance of polymer inventive images. For example, stabilizers for use in inventive images protect polymer or parts thereof (such as their surfaces) against delamination, peeling, chalking (e.g., pigment washes or rubs off), other reduced adhesion of the primer or top coat, cracking, checking, the loss of coating integrity, loss of surface gloss, loss of surface distinctness, loss of visual depth, or other surface degradation (such as HALS by Ciba-Geigy). There are stabilizers which affect mar resistance, surface slip, and/or surface flow (such as products by Byk Chemie and by Tego Chemie). There are impact modifier stabilizers (such as Metablen® products by Elf Atochem); stabilizers which are plasticizers or which maintain and/or enhance polymer flexibility (such as monomers like Tone@ by Union Carbide which enhances both flexibility and impact strength); and stabilizers which maintain and/or enhance the hardness of polymer or parts thereof such as their surfaces (such as HALS by Ciba Geigy and products by Creanova). There are stabilizers which inhibit or protect against organic corrosion in polymer and/or deactivate metal (such as Irgacor® by Ciba Geigy). There are thermal and heat stabilizers both for processing polymer and for protecting formed polymer (such as Thermolite ® by Elf Atochem North America Inc., in Philadelphia, Pennsylvania). There are stabilizers used in cPRM to control shrinkage as it cures (such as milled fibers).

There are also stabilizers which aid in processing polymer using conventional practices, e.g., affecting melt flow, lubricating, overcoming notch sensitivity, etc. (such as Blendex® Modifier Resins by General Electric Company, and Irganox® HP Products by Ciba Geigy).

Adhesion promoters such as products made to promote the adhesion of a polymer to a substrate, may be used as stabilizers in inventive images, e.g., adhesion resins by Creanova Inc.

When mixed into cPRM typically in amounts from about 0.4% to 40% by volume of the total volume of the cPRM, conventional paints, sizes, primers, binders used in conventional image making media and materials, conventional media for painting, and wax and compositions containing wax can be stabilizers if they form or fortify the bond between the polymer and one or more superimpositions made upon it. Examples of such stabilizers are conventional oil and acrylic paints and painting media.

Another class of stabilizers are ingredients added to applications made on polymer inventive images, typically in amounts from about 0.4% to 40%, by volume, but more preferably in amounts from about 0.4% to 25%, by volume of the application's total volume, (i) to cause or enhance the bond between that application and the polymer inventive image; and/or (ii) to further cure or fully cure the polymer inventive image onto which it is applied. Examples of such stabilizers are cPRM, solvents appropriate for the linear polymer surfaces they are superimposed upon, MEKP, and other catalysts. Such stabilizers might be mixed into applications for instance into a conventional image making material or medium (such as a conventional paint, a painting medium or paper pulp); into an unconventional image making material or medium (such as an unconventional paint e.g., a paint with mayonnaise as its binder); or into a glue or adhesive.

Surface preparation stabilizers are preferred stabilizers. A single inventive image may have one or more surface preparation stabilizers. The formula, y - about 40 = about 0.786 * x (in which * is a multiplication sign), is a preferred linear relationship between "x", the approximate percentage of polymer in the an inventive image's surface preparation stabilizer or in its surface preparation stabilizers collectively (measured by volume), and "y", the approximate maximum percentage of that surface preparation stabilizer or those surface preparation stabilizers collectively in the inventive image's total volume. Thus, for example, if there is no polymer in the surface preparation stabilizer or stabilizers in an inventive image, this stabilizer or these stabilizers collectively consist of less than about 40% of the inventive image's total volume. If an inventive image's surface preparation stabilizer or stabilizers collectively are made of about 35% or more polymer, it or they collectively consist of less than about 67.5% of the inventive image's total volume. If an inventive image's surface preparation stabilizer or stabilizers collectively are made of about 70% or more polymer, it or they collectively consist of less than about 95% of the inventive image's total volume.

One kind of surface preparation stabilizer is a composition on the surface of a polymer inventive image or part thereof that (i) causes or enhances bonding to one or more superimpositions; and/or (ii) functions as an underlayer (e.g., as a primer, as underpainting, as underdrawing, as a ground, or as an imprimatura). In completed images of the present invention, surface preparation stabilizers are at least in part superimposed by one or more compositions (e.g., media, materials, applications, parts, layers) which are different from the surfaces they superimpose and/or different from the polymer beneath the surfaces they superimpose. Surface preparation stabilizers may or may not be made or entirely made of polymer of the present invention. Surface preparation stabilizers may be continuous or discontinuous on part or all of one or more polymer surfaces of an inventive image. For example, a surface preparation stabilizer on a polymer inventive image might be an imprimatura made of a composition which is not a conventional paint, serving as an intermediary enabling a superimposed conventional paint to bond to that polymer which might not have bonded or bonded as strongly to that polymer had it been applied directly onto its surface. Depending on their use in an inventive image, one or more conventional image making materials, media or both may serve as a surface preparation stabilizer. A mixed polymer (described below) may be a surface preparation stabilizer. Bonding spots and Separating Layers (both described below) can be surface preparation stabilizers.

Another kind of surface preparation stabilizer is SSI on a polymer inventive image surface. Whether they are continuous or discontinuous (e.g., bonding spots) on a polymer surface, SSI are a surface preparation stabilizer, provided they are partially or entirely, yet directly superimposed by: (i) a conventional image making medium (such as paint, ink, pencil, pastel, chalk, pen, crayon, a photographic emulsion, printing, another marker); (ii) a colorant with an unconventional vehicle (such as a paint made with cPRM as its binder); (iii) a conventional or an unconventional underlayer, such as underdrawing, underpainting, a primer, an imprimatura (e.g., a conventional imprimatura or a Clarifying Imprimatura described below), or a ground; or (iv) a combination of these. Thus for example, SSI superimposed by media or materials for the sole purpose of bonding are not stabilizers (e.g., SSI superimposed by substances which serve as adhesives connecting parts of inventive images), and SSI superimposed by protective coatings, fixatives, or sealers are not stabilizers.

Another class of stabilizers are inventive image supports, the volume of which has a percentage of transparent and/or translucent polymer that is preferably at least about 51%, more preferably at least about 55%, more desirably at least about 65%, still more desirably at least about 75% and most preferably at least about 85%. Said image support stabilizers are made to bond to at least one superimposition, e.g., a paint and/or ink. However, image supports made of greater than about 85% (by volume) poly methyl methacrylate and/or methyl methacrylate, which are exact, even geometric shapes or forms (like conventional preformed acrylic sheets, rods, cubes, or spheres) are not image support stabilizers. Image support stabilizers are the principal element in their inventive image's shape or form, and they remain so in the completed image. Of the completed inventive image's total volume, image support stabilizers preferably comprise about 51-100%, more preferably they comprise about 55-100%, still more desirably they comprise about 65-100%, still more preferably they comprise about 70-100%, and most preferably they comprise about 75-100% (e.g., a substance such as a paint superimposed on an image support stabilizer may or may not add any significant volume to it). Image support stabilizers are often part of their image's structure also. Among examples are image support stabilizers made using rigid polymer, and image support stabilizers made using flexible polymer bonded to one or more other polymeric and/or non polymeric elements which provide structural support, e.g., bonded to a polymeric and/or non polymeric element which functions like a conventional painting stretcher, frame or backing, or which is one of these conventional structural elements. An image support stabilizer can therefore be an inventive image's principal structural element, its entire structure, or almost its entire structure. As an alternate example, image support stabilizers can be entirely flexible, thus for instance, they can rely on another image part and/or on their method of installation or display for structural support to any degree, (e.g., a flexible image support might be draped over another image part or over a pedestal).

Image support stabilizers are always at least partially superimposed by at least one bonding composition which is different from their composition (e.g., different from the composition of their surface and/or different from the composition below their surface). Image support stabilizers may be made of one or more polymers. If desired, image support stabilizers may have one or more other stabilizers as ingredients (e.g., they may have one or more fiber stabilizers, UV light stabilizers, surface preparation stabilizers or a combination of these). As an example, an inventive image support stabilizer might be a 2D or 3D transparent and/or translucent polymer form which bonds to a superimposed conventional paint (e.g., an acrylic, oil, or watercolor paint). Image supports which have their function as the image's principal shape or form changed as they are processed are not stabilizers. Image supports are not stabilizers if they have large parts and/or multiple parts attached to them so that they occupy a percentage of the inventive image's total volume that is less than about 51%, more preferably less than about 55%, still more desirably less than about 65%, still more preferably less than about 70%, and most preferably less than about 75%.

If the polymer in an image support stabilizer is comprised of a percentage (by volume) of one or more conventional polymer image making media (such as acrylic paints and/or gels) which is (collectively) preferably greater than about 50%, more preferably greater than about 60%, still more preferably greater than about 70%, more desirably greater than about 80%, and most preferably greater than about 90%, then a) and/or b) are typically preferable:
a) said polymer in the image support stabilizer must contain at least one stabilizer which is not an image support stabilizer (such as a fiber stabilizer, a color stabilizer like a UV light stabilizer, and/or a defoamer stabilizer), and/or b) the inventive image has at least one other stabilizer which is not comprised of conventional polymer image making media (in addition to this image support stabilizer).

In addition, it is generally preferable for an image support stabilizer to contain at least one stabilizer that is not an image support (such as a fiber stabilizer, a color stabilizer like a UV light stabilizer, and/or a defoamer stabilizer) if collectively, the percentage (by volume) of one or more preformed conventional polymeric materials with exact, even geometric shapes or forms (like conventional polymer sheets, rods, bars, cubes, bowls, or spheres) used in said image support stabilizer is greater than preferably about 8%, more preferably about 18%, still more preferably about 30%, more desirably about 50%, and most preferably about 65%.
**Underlayers** - Underlayers, such as underpainting, underdrawing, grounds, imprimatura, primers and sizes, are one or more beginning layers applied on an image (e.g., a conventional image or an inventive image) with the intention that they will be partially or entirely superimposed (e.g., by painting), though they may remain visible or partially visible. Both conventional underlayers and new and unique underlayers are used on inventive images.
**Value** - Refers to the degree of lightness or darkness (or shadow) of a color, e.g., a color can have a high intensity and a dark value, or a low intensity and a light value.
**Vehicle** - Herein, the word vehicle refers to all liquid and all semi liquid (e.g., gel) contents of a paint, such as its binder or binders, and its additive or additives, but excluding all pigments and all dyes. Pigments and/or dyes are commonly dispersed and/or dissolved in a vehicle.
**WYSIWYG**. - An acronym which stands for, "what you see is what you get". Herein, WYSIWYG refers to image making processes in which work that is being done on an image is visible as it is being done, as it will be visible once it is complete. Processes, formats, materials and/or media which are not WYSIWYG are those which will change visually, between the time of their use and the time when they are completed, e.g., when they set, dry, harden, cool, cure, are superimposed.

Images of the present invention are works in progress and images of art and design and include:
a) Images that are recognizable as one or more known forms of art or design, e.g., realistic, photorealist, abstract, geometric abstraction, surrealist, expressionist, minimalist, graffiti art, still life, figurative, portrait, modernist, folk art, primitive art, kitsch, shaped painting, installation, construction, painting, sculpture, mobile, print, photography, drawing, collage, assemblage, graphic art, architecture, furniture design, jewelry design, interior design, fashion design, product design, craft, set design, costume design, or a combination thereof.
b) Images that are recognized as art or design by a curator with proven expertise in contemporary art of an American museum of art which is accredited by the American Association of Museums or by an art scholar or an art critic with proven expertise in contemporary art. For example, an art curator, scholar, or critic with proven expertise has a track record of publications on contemporary art, a track record of exhibitions of contemporary artists, or a combination of these.
c) Images which are original art or design.
d) Images which are interpretations, statements, expressions, or combinations of these.
e) Images which have an aesthetic that is at least minimally apparent.
f) Images which function as one or more known forms of art or design, e.g., painting, sculpture, print, graphic art, architecture, construction, shaped painting, collage, assemblage, craft photographs, furniture design, interior design, product design, jewelry design, set design.
g) Images which are recognizable as creations by a specific individual such as images recognizable as creations made in a specific circumstance or condition which are not ordinary circumstances or conditions and images that are recognizable as a combination of these.
h) Images made in a limited editions, e.g., frequently they are in an edition of one, and preferably in an edition of less than about 500 during their first 75 years of existence.

A typical process of the present invention prepares a 2D and/or 3D image by (i) preparing a mold; (ii) preparing a mixture of materials capable of forming a polymer, i.e. a PRM; (iii) adding a catalyst to the PRM before it is put in the mold, once it is in the mold, or both before placing the cPRM in the mold and while it is in the mold; (iv) adding at least one stabilizer to the PRM before it is catalyzed, to the cPRM (e.g. to liquid or gelled cPRM), or to the hardened polymer; (v) putting the PRM or the cPRM in at least one part of a mold. Some examples of stabilizers are: ultraviolet light stabilizers, fiber (such as surfacing veil fiberglass), ultra violet light which enables polymerization, antioxidants, and surface preparation stabilizers. Using this process and varying this process can make a myriad of different images. The inventive image making medium typically provides a shape or a form to the image.

Desirably, at least a part of an inventive image is transparent and/or translucent. It is desired that images of the present invention are permanent. It is preferred that coloration of images of the present invention does not substantially change undesirably over time. For example, over time changes such as a yellow or amber color develop on some transparent, some translucent, some opaque and some semi-opaque polymers. To the extent that such changes and/or their effects are visible (e.g., over 50 years) and undesirable, these polymers are not desirable for use in inventive images.

After its initial polymerization, the polymer formed might for example, be the complete inventive image. Alternately, the polymer might be a work in progress which can be further developed and/or controlled to the extent as desired. However, whether the inventive image is further processed and how it is further processed is at the sole discretion of its image maker. The inventive image can be processed in innumerable ways as desired. For instance, if desired, the polymer work in progress can be further processed repeatedly, in a myriad of ways, in any sequence, and over any period of time (continuously or otherwise). For example, its formal elements (such as its form, structure, coloration, light and spatial depth), can be reworked as desired and to the extent desired, e.g., added to and/or subtracted from, as desired. It is likely that reworking any one of its formal elements will have at least a minimal effect on at least one of its other formal elements, e.g., just changing its form, might affect its structure, its color, its use of light, its function, its subject matter, its meaning, etc. But, whether or not the polymer is further processed at all after its initial polymerization, the inventive image is complete at the discretion of the image maker.

It is preferred that at least about 5% of the total volume of the inventive image is polymer, it is more preferred that at least about 10% of the total volume of the inventive image is polymer, it is more desirable for at least about 15% of the total volume of the inventive image to be polymer, and it is most preferred that at least about 25% of the total volume of the inventive image is polymer. When the only polymer in an inventive image is a transparent and/or translucent external layer having a stabilizer which is not an image support stabilizer, and said external polymer layer has (**a**) and (**b**). described below, its typical thickness is preferably at least about 0.2 cm, more preferably at least about 0.3 cm, still more desirably at least about 0.45 cm, and most preferably at least about 0.6 cm.
(a) At least about 35% of the volume of the shape or form of said external polymer layer covers the image continuously, more preferably this percentage is at least about 50%, even more preferably it is at least about 65%, still more preferably it is at least about 85%, and most preferably it is at least about 95%.
(b) At least about 60% of the volume of the said external polymer layer has coloration or a lack of coloration (e.g., hue, value, linear markings, embedded coloration, etc.) that is uniform, but more preferably this percentage is at least about 75%, and most preferably it is at least about 80%.

In another embodiment of the present invention, the only polymer in an inventive image is a discontinuous transparent and/or translucent external polymer layer with a stabilizer, which is not an image support stabilizer. For example, such a discontinuous external layer of polymer might be carved, incised, embossed, embedded, inlaid, made of discontinuous applications (such as broken color and/or linear applications), colored discontinuously (e.g., with drawing or painting), superimposed by attachments, or a combination of these. Such an external polymer layer may be of any thickness or it may vary in its thickness, e.g., its design may require that it be at least a certain thickness. However if such a discontinuous external polymer layer of the present embodiment is made with at least one conventional polymer image making medium and a stabilizer, and the percentage (collectively measured by volume) of conventional polymer image making media in said external polymer layer is preferably greater than about 25%, more desirably greater than about 35%, more preferably greater than about 50%, and most preferably greater than about 65%, (**c**) and/or (**d**) are often preferable: (**c**) It is often preferable for at least about 30% of said discontinuous external polymer layer to be at least about 0.2 cm thick, it is more preferable for this percentage to be at least about 50%, and it is most preferable for it to be at least about 65%, and/or (**d**) it is often preferable for at least about 25% of said discontinuous external polymer layer to be at least about 0.3 cm thick.

In some embodiments, in which inventive images are made with an internal layer of polymer which is not an image support stabilizer, comprised of at least one conventional polymer image making medium and a stabilizer, and the percentage (collectively, measured by volume) of conventional polymer image making media in said internal polymer layer is preferably greater than about 35%, more preferably greater than about 50% and most preferably greater than about 60% it is desirable that such inventive images have polymer in at least one other location (e.g., in another layer and/or in another part which may or may not be physically connected) unless (**e**) said internal polymer layer's thickness is greater than about 0.15 cm, or more preferably greater than about 0.2 cm, or most preferably greater than about 0.26 cm, and/or (**f**) the volume of said internal polymer layer's shape or form is preferably at least about 40% discontinuous, more desirably at least about 50% discontinuous, more preferably it is at least about 60% discontinuous, and most preferably it is at least about 70% discontinuous (e.g., the form of said internal polymer layer is a design element) and/or (g) there is inconsistent, nonuniform coloration or lack of coloration in at least about 70%, more preferably at least about 80%, and most preferably at least about 90% of the total volume of said internal polymer layer.

In general, the formal elements of an image of the present invention, can be used more freely, more completely; with more workability, reworkability and control; and more in the manner desired, than the formal elements can be used in making conventional images. Thus, in making an image of the present invention, image makers can choose not to develop one or more formal elements or only to develop them minimally; one or more formal elements can be developed freely and/or fully or to an extent in between these extremes; and two or more different formal elements can be developed to different extents, as desired. In addition, image makers can make an inventive image with little or no control over one or more formal elements; image makers can make an inventive image with free and/or full control over one or more formal elements or with a level of control in between these two extremes; and image makers can control different formal elements to differing extents in the same inventive image. This capability is unprecedented in conventional images. Among its uses, for example, is when inventive images are less successful than desired, their formal elements can be reworked and controlled to the extent desired (e.g., augmented or diminished to the extent desired). Furthermore, an inventive image can be worked as desired and to any extent desired in a myriad of ways, and then if desired, it can be reworked as desired to any extent desired in a myriad of ways. For example, an inventive image can be formed and reworked in any sequence desired, over any period of time desired (continuously, sporadically, or otherwise) and processing can be repeated as desired (for instance, until the image's aesthetic, its function, its strength and/or its permanence are as desired). Conventional images do not offer this freedom or control, particularly those that are see-through, e.g., many that are reworkable require substantial compromises.

While inventive images can, if desired, have one or more other ingredients and processes in addition to polymer of the present invention and its process or processes, such as conventional practices. The use of these in inventive images may or may not have the same characteristics as they have in their conventional uses. Examples of such ingredients and processes are, materials, media, objects, devices and their combinations other than polymer of the present invention, such as (1) ingredients used to make conventional images, (2) other art forms in inventive images like a traditional painting, print, drawing, photograph, or found object, (3) particles, items and other colorants, texture, other such purposes or a combination of these, (4) devices which enable inventive images to physically move, (5) special materials for light effects and the use of conventional science to make light effects; (6) ordinary and custom hardware, and (7) processes used in construction, architecture, or engineering. The aesthetic properties and the aesthetic possibilities such ingredients and processes bring to inventive images may be the same or similar to those they bring in their regular and conventional uses. Often their aesthetic possibilities expand when they are used with the present invention. For instance, the aesthetic possibilities in the use of transparent painting techniques are expanded by the present invention (e.g., traditional oil painting can be layered as never before in inventive images). However, in inventive images, such other, known, and conventional ingredients and processes may or may not have the same or even a similar aesthetic; or the same or even a similar level of workability, reworkability, and controllability; the same or similar limitations, problems and undesirable issues; the same or a similar level of strength and permanence; and other qualities which are the same or similar to those in their regular and conventional uses, e.g. in conventional images, in conventional science, in conventional engineering. For example, frequently it is the use of other ingredients with polymer of the present invention which enables the images of the present invention to be so unique, so new, so valuable, and so important. Further, in comparison to their conventional uses, often, the use of these other ingredients in inventive images is more workable, more reworkable, more controllable, freer, more versatile, easier, stronger, more permanent, or they have a combination of these enhanced abilities when they are used with the present invention. As a specific example, the ability to form inventive images or parts thereof in layers which can be unlimited, enables many conventional practices (such as conventional paint applications) to be used in ways that are more workable, more reworkable, more controllable, freer, more versatile, easier, stronger, and more permanent than their conventional uses.

Nevertheless, the characteristics of ingredients other than the medium of the present invention, and the use of conventional practices with the present invention are very dependent on the precise specifications of each use in each specific inventive image.

One or multiple polymers can be used as, or to form, an inventive image. Or, one or more polymers and one or more other subjects (such as other materials, media, objects, and/or devices) can be used in any proportion to form an inventive image. For example, an inventive image can be almost entirely made of polymer, with a very small percentage of one or more other media. It can be made of roughly half polymer, and roughly half one or more other media. Or, it can be made with a very small percentage of polymer and a very large percentage of one or more other media.

The medium of the present invention enables inventive images to be made in any shape, form or structure desired (e.g., 2D or 3D) using any methods, means, and manners desired. An inventive image can be comprised of both 2D and 3D parts. Inventive images can also be made in any size or scale desired, ranging from very tiny to monumental in size, e.g., inventive images can be miniature paintings, small sculpture, jewelry, architecture (such as buildings) and public sculpture. 2D and 3D inventive images can have one or more negative areas within their positive form, e.g., an inventive image might be a 2D or 3D doughnut shape or form with multiple negative spaces in its center. Moreover, the surfaces of 2D and 3D inventive images need not be flat, e.g., they can undulate; they can have one or more controlled or uncontrolled textures, or both. In comparison, the use of shape, form, surfaces, structure, size and scale in conventional images is often limited, problematic and burdened by undesirable issues (especially in painting, drawing, and in the workable use of 3D transparency). By its variations and by its ability to be worked, reworked and controlled as desired, the use of the medium of the present invention to make images' shapes, forms and structures in some embodiments offers solutions to limitations and problems in conventional image making and conventional images, as well as the opportunity to use shape, form and structure in images of the size and scale desired, in ways which are not possible in conventional images. For example, such novel inventive images can be large, rigid, permanent paintings, the visible forms of which are their structures, thus, these images do not require any additional or hidden structural support (e.g., no stretchers, no stand). For example, such an image might have painting and drawing at real varying depths within it as well as on its external surfaces.

Polymer of the present invention can be formed with very accurate impressions of their molds, even if those molds are very detailed. Polymer can also be formed with less accurate impressions of their molds, to any degree desired. For example, using conventional practices, molds can be taken off of real things (e.g. a mold of a bottle, a shoe, a leaf, a purse, a pineapple.

Images of the present invention can be made of one or multiple parts and/or multiple layers as desired, even those made in conventional forms of art and design such as inventive image paintings and drawings which are often problematic to make in multiple parts and/or multiple layers conventionally.

If desired, one or more parts and/or layers in an inventive image may be partially, principally or completely comprised of one or more ingredients other than the inventive medium, e.g., light sources and other elements which give it light effects (such as light bulbs, reflective materials, iridescent materials, prisms); found objects; conventional image supports (like canvas or paper); conventional paints (like oils, watercolors and acrylics); conventional materials for making photographs. The use of one or more conventional images in inventive images is another example, such as one or more conventional photographs, drawings on paper, glass images, and/or paintings in an inventive image. Further examples are one or more parts or layers in an inventive image made of compositions other than the medium of the present invention which are not used in conventional images making, but which are commonly available in the commercial world, e.g., tin cans, cardboard, candy wrappers, solar panels, microphones, speakers, newspaper, rubber, aluminum foil, devices like flashlights, projectors, monitors, calculators. As another example, mounts and frames for inventive images can be made using conventional practices with ingredients which are neither active ingredients in cPRM, nor polymer of the present invention. Mounts and frames for images of the present invention can also be made using polymer of the present invention, or a combination of these. Additionally, attachments, parts or both which are not principally made of polymer of the present invention or are non-polymeric can be added to inventive images, affecting or even creating their forms and structures to varying extents.

In some embodiments, one or more subtractive processes are used to form an inventive image at multiple stages in its creation. Also, in some embodiments, an inventive image can be reworked as desired, at one or at multiple stages in its formation, e.g., using one or more processes that are subtractive, that are additive or using a combination of these.

In one embodiment, a 2D polymer is made in a mold. It may be left as is, e.g., if it is the desired finished inventive image. Alternately, the inventive image can be further processed as desired. One method is to apply one or more pigments, dyes, and/or other conventional media and/or materials to one or more of its exposed surfaces. Once this is done, the first form that might have been the finished the inventive image no longer exists. This second form can be the finished image of the present invention as it is, if desired, or it can be further processed, as desired. One way to further process it is to superimpose a second layer of cPRM, after which this inventive image has a different third form which if desired, can be finished. Alternately, this image can be further processed, as desired.

Regardless of their process of creation and their art form, images of the present invention need not be flat (in comparison it is often difficult to alter the flatness of many kinds of conventional images) and inventive images need not be regular shapes or forms. For example, part or all of such an inventive image may be undulating, curved, convex, concave, textured, it might have parts protruding, embossed areas, raised inlays, raised attachments, superimposed layers with negative spaces in between them, irregularities in form, shape, or surface, or a combination of these, as desired. Thus these inventive images may be 2D or 3D, e.g., paintings may even come close to being constructions, shaped paintings, or other art forms. For example, these inventive images can be formed in a tiered casting process, or they might be formed in molds with textured or curved surfaces.

In another embodiment, an inventive image is made in which one or more forms of light (such as visible lights), and one or more pigments and/or dyes combined by (i) preparing a polymeric composition (which will be the image support, which will give the image a significant percentage of its real depth and which might be an image support stabilizer), said polymeric composition is desirably made using one or more monomers, at least one of which can form a transparent or translucent polymer; (ii) applying one or more colorants (e.g., pigments and/or dyes) to one or more portions or to all of said image support work in progress of the present invention (e.g., in one or more paint formulations); and (iii) exposing said colored work in progress to one or more forms of light to complete the image. The light can be visible light; light capable of inducing fluorescence, phosphorescence, or iridescence in the pigmented inventive image; the light can be any other light which causes light to be emitted by the inventive image; or the light can be a combination of these. For example, ordinary tungsten, halogen, fluorescent or neon lighting; sun light; light from fire (such as candle light); reflected light (such as light reflected onto the images off of a white wall); and/or x-radiation which causes the images to give off visible light.

Inventive images can be made with or without image supports. Image supports used in inventive images may or may not be image support stabilizers, initial image supports (meaning the image begins by further processing them), or both. Whether they are stabilizers or not, image supports used to make inventive images may be comprised of one or more ingredients which are polymer, non polymeric or a combination of these. Image supports may be 2D or 3D, and their shapes and forms may be of any description (e.g., planar, curved, concave, convex, undulating, perforated, textured, hollow, flexible, and/or rigid, etc) and they may be made in any process desired. Image supports may or may not have one or multiple dimensions or any dimensions which remain the same after they are further processed and/or finished, e.g. maintaining the same length and/or width after further processing. For example, an image support might be an inventive image's underlying support (e.g., supporting the development of the rest of the image in a manner which resembles the way that conventional images are supported on canvases, paper, wood, bases, underlying frameworks), for instance, to make inventive images which function as paintings, drawings, collages, icons, prints, books, sculptures, or photography. Alternatively, an image support might be an inventive image's internal support (e.g., similar to an armature, internal skeleton, or internal framework on a conventional image), for instance, to make inventive images that are sculpture, installations, paintings, architecture. As another example, an image support might support an inventive image externally, either without underlying it or only partially underlying it, and it is likely to be visible or partially visible, e.g., like a mount and/or an external framework, or a part thereof. Such an image support might be the wire or other structure for an image of the present invention that is a mobile, a sculpture, an installation, a construction, or a painting.

Specific examples of variations possible in forming and/or further processing image supports in forming inventive images are the use of embedding, air pockets, embossing, negative cut-outs, changing perimeter shapes and/or edges (e.g., forming shaped paintings or deckled edges from rectilinear forms), changing surfaces (e.g., texture, inlay), thickening them, thinning them, carving them, incising them, painting them, drawing on them, printing on them, writing on them, adding attachments, photography, collage, real light sources.

In some embodiments, images of the present invention are made on single 2D or 3D planar initial image supports which function in forming inventive images like canvas or paper function in making conventional images. Some of these image supports are made of polymer with or without other ingredients, and some of these are image support stabilizers. Such initial image supports can resemble conventional image supports to the extent desired, e.g. by using wooden stretchers on their backsides, and/or by embedding or attaching paper or canvas to them. Such polymer initial image supports can differ from conventional image supports in a myriad of ways. For example they can have all kinds of aesthetic variations and/or further processing which are not comparably possible with the use of conventional image supports. These initial image supports might be further processed into inventive images that are any art form desired, e.g., drawings, paintings, prints, images with writing, collages, graphic art, tables, or windows.

In some embodiments, images of the present invention are made on multiple planar polymer initial image supports, one or more of which may be stabilizers and/or contain stabilizers (such as a UV light stabilizer or fiber). In one example, an image of the present invention is made of multiple separate components each of which is formed on its own initial image support. As the initial image supports of the inventive images in this embodiment are further processed, two or more might be connected to one another; they might remain physically separate; or two or more might be connected while one or more remain physically separate from the rest of the image. These inventive images might be drawings, murals, diptychs, triptychs, books, graphic art, windows, partitions, furniture, a sculpture, installation, or environment.

In a preferred embodiment, inventive image supports are made using polymer, with or without other ingredients. They may or may not be stabilizers. These initial image supports have noticeable irregularities or imperfections in their shapes or forms. For example, they look handmade, whether or not they are, e.g., they have irregularities like those commonly seen in handmade papers and in papers with deckled edges (papers with deckled edges often look handmade when they are not). In comparison to the shapes and forms in which polymer is commonly available commercially, (e.g., smooth even sheets, and rods, cubes, pyramids and spheres with exact forms, etc.) the initial image supports in this embodiment are not even, perfect, exact, smooth, or they do not have other such regular or machine made appearances. Though they might be symmetrical, geometric, or machine made, initial image supports of this embodiment have clearly visible irregularities or imperfections in shape or form. Another example is a 3D rectangular initial image support with undulations or irregular bumps (not a perfect even texture). Initial image supports of this embodiment are further processed as desired, e.g., as paintings. It is preferred that they are further processed so that they remain the major part of the shapes or forms of these inventive images once they are completed, e.g., these initial image supports make up most or all of the forms of these images once they are completed.

In other embodiments, 3D polymer forms are used individually or in multiples as initial image supports, which may or may not be stabilizers. An image of the present invention can be made on one or on multiple 3D initial image supports, of any composition and with any specifications desired, e.g. with or without any polymer in their compositions, in planar or other forms. For example, 3D inventive images (such as sculptures), are made by using cPRM on one or more 3D initial image supports made of compositions which have no polymer in them.

In some embodiments, inventive images are made on multiple initial image supports, at least one of which is made of polymer, and at least one of which is made or principally made without any polymer. In other embodiments, inventive images are made without initial image supports.

Inventive images made of polymer with and without initial image supports can if desired, be partially or entirely made using ingredients which make them sufficiently strong and rigid (such as a crosslinked polymer like polyester or a fiber stabilizer), e.g., so that they do not require any image support, or any other structural support added as they are made after they are made (such as a structural support for display purposes).

When using more than one kind of material and/or medium in an inventive image (e.g., when using more than one polymer and/or non polymeric ingredients), and these different image ingredients are not on physically separate parts of the image, it is desirable to be mindful of differences in the parameters of their expansion, such as differences in their coefficients of thermal expansion and differences in comparable parameters of any other kind of expansion, e.g., expansion due to absorption of moisture such as humidity absorbed by a hydrophilic plastic or by paper in an image. When differences in the parameters (coefficients) of expansion of different inventive image ingredients are significant or great, it is desirable to ensure that these differences do not risk and/or cause undesirable effects the resultant inventive image (such as a decrease in its strength, actual cracking, or bending or the risk of loss of strength). It is preferable that all measures taken for this purpose be tailored to the precise specifications of each inventive image. For example, substituting some or all of one or more ingredients in an inventive image can decrease or eliminate the risk or the certainty of such undesirable effects in the resultant image. In addition or instead, it may be desirable to design or redesign an inventive image to avoid or decrease the likelihood of such undesirable effects.

As a further illustration, if the difference between the parameters (coefficients) of expansion of different ingredients within an inventive image are significant or great, and if the area of contact between them is significant or great, it is generally desirable to make changes which ameliorate and/or eliminate these differences and their potential undesirable effects, such as by the following example methods. (1) Alter the size of the area of contact between the ingredients so that it is insignificant or minor. For instance, subdivide one or more of the ingredients, e.g., prior to connecting a piece of metal to a polymer, subdivide it and/or the polymer into smaller pieces with space between the subdivisions. (**2**) In the area of contact between the ingredients, interpose one or more other materials, media, objects, devices or combinations of these, which are elastic enough and/or which flow freely enough to absorb the differences in their expansion and contraction. (**3**) In the area of contact between the ingredients, interpose one or more other materials, media, objects, devices or combinations of these which have intermediary parameters/coefficients of expansion to form a transition from the ingredients with the different parameters/coefficients of expansion. (This type of solution is sometimes used in making laboratory glassware.) (**4**) Use a combination of these solutions. These solutions will not work in all circumstances in all inventive images, or they will not be equally desirable. For example, (2) and (3) are not generally desirable with 3D embedments, e.g., with large 3D embedments, it is generally preferable to match the coefficients of thermal expansion and other expansion of different individual inventive image ingredients.

Thus, it is often desirable to be aware of such significant differences in coefficients of thermal expansion when embedding; inlaying (e.g., large inlays); adding layers (e.g., Separating Layers), connecting or adding parts and other attachments (e.g., an image support); adding other coloration; when installing mounts and frames. For example, it is desirable to be mindful of significant differences in the coefficients of thermal expansion between inlays on inventive images and their host surfaces when the inlays are large and completely or continuously bonded to their host surfaces. It is also generally preferable to be mindful of significant differences in the coefficients of thermal expansion between the fiber and the image part to which it is bonded (e.g., embedded) such as when using layers of fiber, dense fiber, tightly woven fiber (e.g., glass cloth), areas of chopped fiber.

Some polymers expand and contract significantly, while others do not. For example, hydrophilic and absorbent polymers expand and contract at different rates as they absorb substances (like water or paint) and as these substances go out of them (e.g., as a solvent evaporates). Thus, when using an absorbent polymer as a surface preparation stabilizer, it is most desirable that its expansion and contraction not alter its bond to the composition beneath it undesirably. As another example, mixed polymers (e.g., stabilizers) are often desirable for use in between different polymers in an inventive image which have coefficients/parameters of expansion that are significantly or greatly different. In another example, a polymer is painted with a paint whose vehicle is a bonding cPRM with a compatible coefficient of thermal expansion. Then, before applying a continuous material with a significantly different coefficient of thermal expansion over 90% of this painted polymer, one or a combination of the following three methods may be used to effectively reduce or eliminate the risk to this image's strength and permanence. (**1**) The initial continuous material is replaced by one with a coefficient of thermal expansion which is as close as possible to that of the polymer. (**2**) The initial continuous material is cut into smaller pieces and then applied to the painted polymer, e.g., as a discontinuous non polymeric Separating Layer for instance made of metal. (**3**) One or more intermediary layers are applied to the painted polymer arranged so that their coefficients of thermal expansion provide a progressive transition between that of the painted polymer and that of the continuous material. Then, the continuous material is applied onto the intermediary layer or layers on the painted polymer. (This is a conventional practice used to fuse pieces of glass with different coefficients of expansion.)

### Rigidity, Flexibility & Absorbency

In some embodiments, polymer comprising an inventive image, or part thereof is rigid and as strong and as permanent as desired. For instance, an image made only of rigid polymer, nine inches by twelve inches and one eighth of an inch thick with a little pigment coloring its surfaces, but without further reinforcement, may be fairly fragile. Depending on its means of display and its use, this inventive image may be at risk e.g., if it is hung flush with the wall its own fragility is not a risk, but if it is put in an envelope and mailed at the post office without further reinforcement, it is likely to be too fragile to arrive undamaged. It is generally preferred that polymer which is in inventive image be as strong and as permanent as possible, provided there is no conflict with any other aspect desired for that image of the present invention (e.g., a conflict with its aesthetic, its form, or its function). If desired, rigid polymer in an image of the present invention may be strengthened further and/or its permanence enhanced, e.g., by thickening it, by reinforcing it (e.g, with a fiber stabilizer, with another stabilizer; with a non polymeric materials such as metal, and/or wood).

The rigidity of polymer may serve all kinds of purposes. Rigid polymer can be used as an image support in inventive images, e.g., as an initial image support and/or an image support stabilizer. But whether it is an image support or not, rigid polymer can facilitate subsequent applications (e.g., of cPRM; of a bonding substances; conventional image making materials, non polymeric applications), often serving as a support, and enhancing the application's strength and/or permanence. For example, rigid polymer surfaces might be desirable for the superimposition of applications such as (**1**) materials and media which tend to flake, chip, or dust off of their traditional flexible surfaces, such as layered gouache, pastel, charcoal; and paints with high pigment content and little binder, weak binder, or little weak binder; (**2**) non polymeric applications which are adversely effected or which risk adverse effects from the expansion and contraction of their conventional support (e.g., applications which must be layered in order of their rates of expansion and contraction so that they will be as permanent or as permanent as possible, applications made on canvas or paper, and wet applications which cause or risk causing paper to buckle); (**3**) materials and media which are very soft, very fragile or both, such as encaustic paint; (**4**) applications and tools which damage or risk damaging the surfaces on which they are applied, such as the use of multiple wet applications on paper, applications which fray or tear the fibers of paper, and tools which make undesirable and often irreversible indents on surfaces in their conventional uses (like hard pencils which indent paper); (**5**) applications which weigh heavily upon their conventional supports such as heavy collaged materials and found objects which might be attached to canvas or paper (like the plates the contemporary artist, Julian Schnabel attaches to his paintings and the found objects the contemporary artist, Robert Rauschenberg has attached onto his canvases); (**6**) materials and media which conventionally require, use or benefit from the sturdy support of a rigid surface, such as fresco, and images made in relief; (**7**) reworked applications which damage or risk damaging their conventional surfaces; and (8**)** applications with combinations of these features.

The rigidity of polymer of the present invention in inventive images can also be a crucial factor in their strength and permanence in many other ways, e.g., in serving their function. The rigidity of polymer of the present invention in inventive images is also a very important factor which can enable inventive images to have valuable new and unique effects, many of which are not comparably available using conventional practices. Examples such as unity of form and structure, objecthood, and the ability to be freestanding are described in forthcoming text.

In some embodiments inventive images are made which are have both rigid and flexible areas, parts and/or layers; inventive images are made which are not entirely rigid; and inventive images are made which are completely flexible. In the formation of some inventive images and parts thereof, it is preferable to fix flexible polymer, e.g., onto a backing, mount, brace, stretcher and/or another such structural support. For instance, a flexible polymer, or, the only flexible part of a polymer which is otherwise rigid, is positioned and mechanically secured over a curved metal form or over a conventional wooden stretcher which prevents it from moving.

As an example, a transparent polyvinyl chloride inventive image is made, sanded, painted as desired with transparent, translucent, and opaque coloration (such as inks and paints made using oil soluble dyes), and finally draped on the wall in the desired compositional arrangement like the artist, Robert Morris's draped felt artworks. Also, in an example, three small painting surfaces are made with a clear transparent silicone elastomer which is irregularly colored, and which has various materials imbedded in it. The two smallest of these polymers are mounted onto traditional wooden stretchers which are smaller than the polymer paintings they support so that their perimeter edges hang out from their stretchers freely. The third of these three polymers contains an embedded wire. All three polymer paintings are hung from the ceiling.

In some embodiments, polymer in inventive images is not absorbent, it is hydrophobic, it is hydrophilic, it is absorbent, or it is a combination of these. One preferred method of forming such polymer is by using particular active ingredients in cPRM and/or one or more particular stabilizers in cPRM, on polymer or a combination of these (e.g., a fiber stabilizer). In addition or instead, such polymer can be formed using other ingredients in and/or on polymer, such as absorbent papers, paper pulp, colorants and strands of various kinds. Examples of valuable uses of polymer that is hydrophobic, hydrophilic, absorbent, not absorbent or a combination of these, are its use (**1**) as a final coat on inventive images, e.g., non absorbent surfaces might be desired for the permanence of an inventive image; (**2**) as surface preparation stabilizers, such as for bonding superimpositions onto inventive images (like paint soaking into an absorbent polymer); (**3**) for forming image supports (such as absorbent image support stabilizers); and (**4**) for visual effects on inventive images (e.g., with superimposed coloration).

Because the absorbency, the lack of absorbency, the hydrophilic quality and the hydrophobic quality of the polymer in inventive images can differ from the availability of these qualities in conventional image making, conventional practices which use these qualities (e.g., materials, media and techniques) and effects used in conventional images which are dependent on these qualities (e.g., effects of painting, drawing and printing on absorbent paper, canvas, or other fabric) can be used with the medium of the present invention for effects and images that are new and unique. Many of the innumerable variations of such novel image making using the medium of the present invention are new unique direct solutions to limitations, problems and undesirable issues in conventional image making and in conventional images. One important example is that unlike conventional images, all effects using the absorbency, the lack of absorbency, the hydrophilic quality and the hydrophobic quality of polymer in inventive images can be transparent, translucent, and/or opaque; colored and/or colorless; they can be combined with one or more other additive and/or subtractive processes (such as incising, carving and/or inlaying); they can be used with a myriad of other aesthetic variations (such as light effects); they are workable, reworkable and controllable; and they can be as strong and permanent as desired. In contrast, many such options are not possible in conventional image making, particularly using paper or fabric image supports. The following are more specific examples.

Using hydrophilic and/or absorbent polymers, inventive images can be made which use new and unique effects of real light, color, real transparency and real spatial depth. Examples are effects of stained, bleeding and poured color. In another illustration, an inventive image is made using an absorbent polymer such as 2-hydroxyethyl methacrylate (HEMA), mono-glycerol methacrylate, and/or another polymer which either has the same or a greater number of oxygens than glycerol. For instance, using such an absorbent polymer, an initial image support stabilizer is made which is then superimposed by conventional paints and/or inks which absorb into it to varying extents forming a 2D or 3D inventive image painting which may be viewed from one or multiple sides, as desired. In another example, such an absorbent polymer is used (e.g., with a colorant mixed into it) as a surface preparation stabilizer on an inventive image. This absorbent polymer surface preparation stabilizer is then superimposed by colorants which absorb into it to form an inventive image which may be complete, or which may be further processed, e.g., drawing might be incised into it. This might be the completed image desired, but if not an example of a way it might be further processed is by filling in some of its incised drawing with cPRM or by superimposing coloration on one or more of its sides, e.g., coloration which absorbs into the newly formed polymer.

Inventive images can have special effects which rely on the absorbency of polymer being less than or different than that of comparable conventional images, and inventive images can have special effects which rely on the lack of absorbency of polymer. For instance, these might be special effects made by using conventional applications on polymer inventive images surfaces which are conventionally used on absorbent surfaces, e.g., like canvas or paper. For example, among these are inventive images and effects made by working, reworking and controlling applications from bleeding, staining, running and absorbing into inventive images undesirably. Also among these are inventive images and effects made in processes in which applications are reworked, e.g., intentionally removed, erased, smudged, rubbed, blotted etc. Whereas often working and reworking the surfaces of conventional images is limited and problematic, for instance it frays, tears or breaks these surfaces undesirably (e.g., paper or fabric surfaces), polymer surfaces can undergo working and reworking without being undesirably changed in an irreversible manner. Polymer is not typically fibrous, interwoven, or made of macroscopic strands like many conventional images, though fiber stabilizers, paper and strands of all kinds can be used as part of inventive images, for example, on and/or in their surfaces.

In an illustration, a wash using any conventional paint (e.g. acrylics, gouache, tempera, oils) applied onto paper will absorb into that paper, usually quickly and sometimes before the entire area of the paper which is getting the wash application has been painted. Here are some typical consequences, which may or may not be desirable. (**1**) Often the wash will bleed uncontrollably, e.g., bleeding into other colors. (**2**) Often the wash will color the paper unevenly, which may or may not be desired, e.g., its perimeter may be darker than its internal area, or different ingredients in the paint wash may absorb into the paper differently leaving visible signs. (**3**) The paper may buckle (expand) where the wash is applied, and stay this way once it dries. (**4**) The wet areas of the paper may be too fragile to further process as desired before they dry, and/or after they dry. For example, drawing in pencil on wet paper or on paper that has been worked with previous applications may fray or tear its fibers or indent it. (5) The wash may not be reworkable (particularly its shape), and if it is reworkable, its reworkability is likely to be limited, problematic or both, e.g. the only way to rework it may be to cover it up, for example, with an opaque application, and it is likely that the wash will not be removable at all, not even to lighten it by removing some of its coloration. In comparison, washes (e.g. of conventional paints) can be applied onto polymer inventive image surfaces which are as absorbent as desired, with much fewer irreversible issues or consequences which are considered undesirable. Washes and other paint applications on inventive images can be as workable, reworkable and controllable as desired.

In another illustration, marks made using many conventional practices on many conventional images can not be reworked (e.g., erased) as desired. Often attempts to do so result in visible damage on the surfaces of these images. For example, ordinary applications of conventional drawing materials (e.g., pencil, pastel or charcoal) often get into the fibers of the paper so that these applications can not be reworked as desired (e.g., erased), and often attempts to do so leave irreversible visible undesirable marks on the image. As another example, often during conventional processes of drawing on paper, the natural oil in a normal image maker's hands (and sometimes arms too) makes irreversible, undesirable visible marks on the paper which can not be removed, or this normal oil gets into the drawing application (e.g. into the graphite, the pastel or the charcoal) limiting or preventing the ability to rework that area as desired (e.g., erase). In comparison, marks made using conventional practices on polymer inventive image surfaces (such as marks made using conventional image making materials and media as well as oil marks) can be reworked as desired (e.g., erased).

Each of the following examples of products by Polysciences Inc. of Warrington, PA may be used in inventive images as monomers, polymers, and/or stabilizers. Each of these examples are preceded by a numerical rating on a scale from 1 to 10 (provided by Dr. Dave Jordan of Polysciences Inc. in January 1999), in which **1** is highly hydrophobic e.g., fluorocarbons; **5** is intermediate hydrophobicity/hydrophilicity e.g., poly(ethyl acrylate); **8** is hydrophilic e.g., HEMA; and **10** is highly hydrophilic e.g., starch, poly(acrylamide/acrylic acid) graft, acid sodium salt, (a polymer which will absorb as much as 500 times its weight).

| Rating | Polymers and Monomers |
|---|---|
| **2** | Polyethylene, chlorinated, 25% Cl; decyl acrylates and alkacrylates |
| **3** | Poly(vinylidene chloride/acrylonitrile); Poly(4-vinylpyridine/divinylbenzene); N-(Phthalimidomethyl)acrylamide |
| **4** | Glycidyl butyl ether |
| **6** | 2-(Acetoacetoxy)ethyl methacrylate; Poly(N-vinylpyrrolidone/vinyl acetate); Glycidyl acrylates and alkacrylates; Poly(ethylene/vinyl alcohol) |
| **7** | 4-Hydroxybutyl methacrylate; 2-(2-Ethoxyethoxy)ethyl acrylate; Diethylene glycoldiacrylate; Diethylene glycol dimethacrylate; Diethylene glycol divinyl ether; Poly(4-vinylpyridine/divinylbenzene) acid salt; Poly(ethylene glycol) monomethyl ether monomethacrylate; Poly(vinyl methyl ether/mono-iso-propyl maleate; Poly(ethylene glycol) diacrylate; Poly(ethylene glycol) dimethacrylate; Vinyl 4-hydroxybutyl ether; 1,1,1-Trimethylolpropane monoallyl ether; Poly(vinyl methyl ether/monobutyl maleate); Triethylene glycol dimethacrylate; Triethylene glycol monomethyl ether monomethacrylate; Polyacrylamides; Polyalkylacrylamides; Poly(vinyl methyl ether/monoethyl maleate) |
| **8** | Poly(2-hydroxypropyl methacrylate); Poly(2-hydroxyethyl methacrylate/methacrylic acid); 2-Hydroxyethyl acrylate; N-(2-Hydroxypropyl)methacrylamide; Acrylamide; Poly(ethylene glycol) monomethacrylate; Poly(ethylene glycol)monomethacrylate monomethyl ether; Poly(2-Hydroxyethyl methacrylate) (HEMA) and other methacrylate ester polymers; Bisacrylamidoacetic acid; Hydroxypropyl methacrylate; N-Vinyl-2-pyrrolidone; Poly(2-hydroxypropyl acrylate) |
| **9** | glycerol acrylates and alkacrylates; 2-Sulfoethyl methacrylate; Poly(styrenesulfonic acid/maleic acid), soduim salt; N-Acryloyltris(hydroxymethyl)methylamine |
| **10** | 2-Methacryloxyethyl glucoside |

The highly hydrophilic monomers can be made into a water-absorbing gelatinous material with the proper crosslinking monomer or monomers. Thus it is generally desirable to crosslink hydrophilic monomers when their absorbent qualities will be used in inventive images, particularly if they are highly absorbent. For example, ethylene glycol dimethacrylate is conventionally used as a crosslinker for HEMA. Additional examples of crosslinking monomers (e.g. recommended for ophthalmic uses) are: Hexamethylene diacrylamide; Hexamethylene dimethacrylate; and Poly(ethylene glycol)(200) diacrylate.

In an embodiment of the present invention, cPRM which do not polymerize well or fully due to their exposure to air, or more specifically to oxygen, are formed in a mold in which their exposure to air or oxygen is reduced or eliminated. This is a conventional practice in the formation of other polymer products, thus there are methods and there is equipment conventionally used for this purpose (such as vacuums). These can be used to form images of the present invention. In another example, these cPRM are formed in a closed mold. Or they are formed in an open mold, with the upper part which is exposed to air closed with a cover or "roof' that preferably leaves little or no air pocket between it and the polymerizing cPRM. For example, acrylates and methacrylates do not polymerize well exposed to air, so they are formed in a closed mold, or they are formed in an open mold which is completely closed with a cover or "roof" made of a film like Saran Wrap. The film or Saran Wrap "roof" is sealed with the perimeter of the previously open mold (e.g., sealed with oil formulated clay), and it rests directly on the upper surface of the polymerizing cPRM. For instance, such a mold might be necessary when polymerizing HEMA such as 2-Hydroxyethyl methacrylate.

In an embodiment of the present invention, the absorbency of a polymer is modified by the addition of an ingredient into the cPRM used to form it. In one example, one or more oil absorbing monomers into are added into a cPRM which will form a hydrophilic polymer to reduce its hydrophilicity. In another example, one or more crosslinking monomers are added into a cPRM which will form a hydrophilic polymer to reduce its absorbency. More specifically, ethylene glycol dimethacrylate is added into HEMA to reduce the absorbency of the polymer formed. For instance, ethylene glycol dimethacrylate might be added into a cPRM forming HEMA preferably between about 0.5% and 20% and more preferably between about 2% and 15 % to reduce the absorbency and the swelling of the resultant polymer. In a different illustration, dibutyl phthalate is added into a cPRM forming polystyrene preferably between about 5% and 10% to enable the polystyrene formed to absorb oil faster.

### Solid, Hollow and Open Form - bars, rods, strips etc.

In some embodiments, polymers of the present invention are solid or partially solid. For example, the inventive image can be made using polymer rods, bars and strips of polymer. Images of the present invention can have negative space within their forms, between their parts, or both, e.g., negative cut-outs, perforations, or holes formed when medium is cast, carved or cut in gelled cPRM or in polymer medium. In addition or instead, images might have negative cut-outs, perforations, or holes in one or more materials other than polymer medium of the present invention (like a wire mesh, or a found object used in an image). This opens up a wide range of new possibilities for images such as inventive images made in conventional art forms, but with hollow forms or parts thereof which are, e.g., inventive images which are hollow such as drawings, paintings, prints, collage, images with writing, graphic art, photography, tiles, partitions, windows, doors, table tops, or images which are a combination of these.

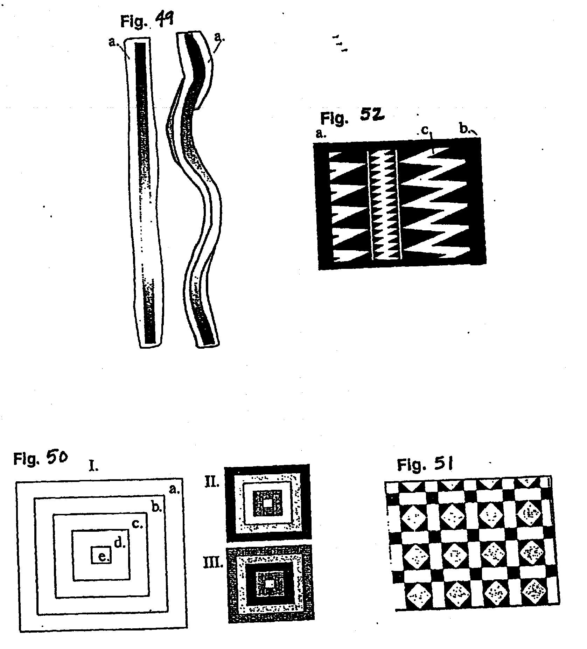

In the images in Figs. 47.I.II. and III. the layers of coloration can superimpose one another without contacting one another. They are separated by negative spaces and polymer planes. Thus for example, with negative space or polymer planes separating layers of superimposed applications it would not matter if these superimposed applications (e.g., paint applications) follow any of the entire range of rules which govern and limit the direct superimposition of applications using conventional practices (such as fat over lean).

Hollow and negative space within inventive images have many uses. For instance, they can give an image spatial depth, light and/or volume, and layers can be superimposed without being in direct contact with one another (e.g. layers of coloration) which may be useful, for example, (1) to superimpose layers of incompatible applications, e.g. when it is desirable to superimpose incompatible paints such as oil paints layered lean over fat, or acrylic paints over oil paints, (2) to superimpose applications which will or may not be as strong and/or permanent as desired, if they are in direct contact with one another, e.g superimposing too many layers or too many fat layers of oil paints, (3) to make applications which either can not be applied or which do not apply as well as desired on particular surfaces, e.g. pencil will not apply as desired over paint, pastel will not apply as desired over an application that is extremely smooth, (4) to enhance the inventive image's spatial depth, volume and/or light, (5) for effects of light such as the examples herein. Hollow and negative space within inventive images can also expand the effects of images and thereby expand particular art forms e.g., painting, sculpture, design and architecture.

### Further Description of Strength and Permanence

Unlike many conventional images, images of the present invention can be as strong and as permanent as desired. The strength and/or permanence of an inventive image or of part thereof can be formed using any methods, means and manners, desired. In addition, if desired, the strength and/or permanence of a polymer can be developed, reworked and controlled as desired, often easily and effectively, during the formation of its polymer or anytime afterwards, without affecting its aesthetic undesirably. The strength and/or permanence of an inventive image does not have to be consistent. All bonds in images, and all means of mounting, displaying and installing inventive images can be as strong and/or as permanent as desired. For instance, one or more bonds in an inventive image can be mechanical bonds, chemical bonds, loose bonds, or combinations of these, as desired. However, if strength, and/or permanence are important in an inventive image or in one or more parts of it, it is generally preferable for everything which is physically connected, to be bonded strongly and permanently, provided such a bond or such bonds does not conflict with other preferences for the image of the present invention, e.g., aesthetic or functional preferences. The general preference for inventive images to be strong and permanent, to the extent that there is no conflict with a more desirable preference for a specific inventive image is based on the general expectation of people in society today that images last and that the ability of images to last is part of their value. Many methods for controlling and enhancing the strength and/or permanence of images of the present invention are described herein (e.g., the choice of ingredients in cPRM, the use of nonpolymeric ingredients in inventive images, the use of fiber and other stabilizers in polymer, the use of image supports, etc.). All other desirable methods, means and manners for achieving the level of strength and permanence desired in inventive images can be used too.

In some embodiments, strengthening elements are physically bonded to inventive images. Examples of these strengthening elements are an image support (e.g., stabilizer), a mount, a frame, embedding, an attachment, an inlay. Some strengthening elements which are physically bonded to polymer are stabilizers. Examples are image support stabilizers, fiber, wire mesh and other metal mesh (e.g., stainless steel), netting, macrame and other knotted forms (e.g., made of wire or string), forms made of linked chains (e.g., metal or plastic), other open weave forms which are not fibers or which are combinations of fiber and other materials (such as woven straw, string, wire, grasses, strands of rubber or leather, ribbons, stems, or strips of bark). It is preferable that the use of a strengthening element in an inventive image does not weaken or risk weakening its image's strength or permanence in any way, e.g., such as the risk of weakening an image by a difference between a strengthening element's coefficient of expansion and that of the polymer, refer to description herein.

Any and all ingredients used in or on inventive images can affect their strength and permanence, as can processes used to make inventive images. Some polymers are stronger than others, some are more resistant to particular elements (such as solvents, weathering, impact, heat) some polymers are more permanent than others (e.g., many discolor, some are more brittle than others, some scratch easily), some polymers meet both criteria. Manufacturers of polymers, monomers, catalysts, stabilizers (such as fiber and ultraviolet light stabilizers), and fillers standardly provide information about the properties and conventional uses of their products. For example, such information might describe factors which can affect the product's strength and permanence during processing and afterwards, the typical uses or applications of the product, whether polymer formed is brittle, rigid, or easily scratched; its color stability; its tensile and flexural strengths, the design flexibility it affords without compromising its strength and permanence, how it holds up to various conditions (e.g., chemical resistance, resistance to environmental stress cracks, impact strength, weatherability, adverse effects under specific conditions). As a more specific example, crosslinked polymers are stronger than linear polymers. In comparison to linear polymers, crosslinked polymers also have greater rigidity, greater solvent resistant, and greater mechanically stability. Acrylics are linear polymers; they flow and sag as they age, even at room temperature, gravity can distort them at room temperature. Some solvents dissolve acrylics and others craze them.

Among other factors which might affect the strength and permanence of inventive images are methods of mounting, installing and displaying them.

It is generally preferable that any methods and means used for reworking images of the present invention depend on the particular specifications of each inventive image. Thus, for example, it is preferable that all methods and means of reworking of undesirable changes in inventive images, repairing inventive images, restoring them, cleaning them, and all conservation work done on them, be determined according to the specifications of the particular image or the particular part thereof being processed, and the nature, the specifications and the severity of the undesirable change to the inventive image. For instance, it might be desirable to use an aqueous cationic cleaner (such as an ammonia-containing cleaner or a solvent, or it may be desirable to sand, scrape, or carve the image of the present invention surface to rework it as desired.

The strength and rigidity which inventive images can have enables their aesthetic and their structure to be as integrated and unified as desired. The aesthetic and structure of inventive images can be developed and reworked in concert to the extent desired. Thus, often decisions which have to be made out of structural necessity in the formation of conventional images (such as the addition of structural reinforcement visible on a conventional image) can be ignored, delayed, or made for other reasons (e.g., for aesthetic reasons), or such decisions can be ignored, delayed, or made for other reasons to a greater extent in forming images of the present invention. This means that elements which conventional images need for structural support may not and often do not have to be present for the structural support of inventive images, though they can be used if desired. Thus inventive images made in conventional art forms which conventionally require additional structural support do not have to have these added elements for structural supports or they do not require these elements to the extent that they are required in conventional images, e.g., the use of these elements required for structural support in conventional images is an aesthetic decision in inventive images. For example, inventive images can be made in conventional art forms without such structural elements like: stretchers, initial image supports, backings, mats, frames, stands, bases, internal structural supports like armatures or skeletal supports, various external structural braces or other external supports; supports beneath them; cross bars, ribs or struts of various kinds (like the lead lines in stained glass and the ribs in Isamu Noguchi's Akari lamps). Elements such as these conventionally designed and used for structural support can be designed and used in inventive images for aesthetic purposes to the extent desired. In such ways, the strength and rigidity of inventive images offers important solutions to limitations, problems and undesirable issues in conventional image making and in conventional images which heretofore have had no comparable direct solution. For example, such control of the integration and the unification aesthetic and structure is not available, or not comparably available in many conventional images, such as conventional paintings, shaped paintings, stained glass images, various other glass images which require added structural support, drawings, prints, photographs, and other conventional images on paper. Such a change in inventive images in comparison to conventional images, can easily affect other formal elements, such as the content and meaning of inventive images. One example is that inventive images can have a new sense of objecthood, as described in forthcoming text.

For example, the forms and the structures of inventive images can be as integrated and as unified as desired; they can even be completely unified. For instance, the polymer of an inventive image can give it both its form and its structure. The strength and rigidity of polymer enables inventive images to be as self supporting as desired, with or without the use of additional structural supports (such as the examples above). Among the notable examples of these are self supporting inventive images made without any initial image support, inventive images made of multiple layers, inventive images made in conventionally planar or 2D art forms, and inventive images which are combinations of these (all further described herein).

In some embodiments, inventive images can be made which are notably more self supporting than comparable conventional images. In some embodiments, inventive images can be made which are completely self supporting, e.g., freestanding inventive images, which is particularly notable because many comparable conventional images are not capable of self support. Thus for example, inventive images which are sufficiently strong and sufficiently rigid to be self supporting can be new unique paintings, shaped paintings, drawings, prints, photographs, books and other forms of graphic art; they can be new unique forms of images which are conventionally made in glass such as new unique kinds of colored windows and new unique kinds of architecture which is conventionally made in glass (e.g., buildings, walls, skylights, doors). The strength and rigidity of inventive images enables the integration and unification of their aesthetic, their structure, their method of installation or display, their function for visual observation, and any other function that they may have which is dependent on strength and rigidity (e.g., a utilitarian function). For example, inventive images can be made which are sufficiently strong and sufficiently rigid so that they do not need elements added solely for the purpose of their display or installation to the extent that comparable conventional images require them, or so that they do not need these elements at all, e.g., the use of such elements can be an aesthetic decision rather than a structural or a functional decision. For example, the use of polymer that is strong and rigid enables inventive images to be freestanding.

The flexibility and strength of inventive images enables them to be new and unique in comparison to conventional images, e.g., inventive images which are transparent and translucent, in forms that are conventionally made in glass like architectural images, kinetic images, images that have to take impact or shock, images that travel a lot or are handled a lot. In an embodiment, one or more parts or areas of an image of the present invention are sufficiently rigid, sufficiently strong or both, to support, one or more other parts or areas of it as desired. In some embodiments, inventive images are made sufficiently strong, rigid, and/or flexible, they are made with other such specifications or they are made with a combination of these, so that they can endure their function and their method of display or installation as desired.

Such uses of strength and rigidity in inventive images can be used in many ways, and among them are a number of special qualities and effects. For instance, these properties can be used to give an inventive image a sense of being light, precarious, airy, threatening, floating, ethereal, or a sense of defying the laws of gravity and nature. However, in addition to these, the strength and rigidity of polymer in image of the present invention can also enable images of the present invention to have special qualities and effects because it enables image of the present invention to be free of the need for additional structural support, entirely or to a greater extent than many conventional media (e.g., glass, crystal and polymers which are not of the present invention).

### Comparison of the Inventive Medium to Glass

Glass is plasticly deformable but it is not cross linked and so it melts at a high temperature and is significantly more fragile than polymer. In glass, a waterfall sculpture would be dangerous. It would be harder to make in glass. Glass is neither completely, nor freely workable, reworkable and controllable as desired. For example, in glass it could not be made as spontaneously as it could be made in the present invention, in glass it could not be made in a WYSIWYG process and in glass it would require preplanning. It would be harder to install and transport made in glass than in the medium of the present invention. In addition, it would probably be more expensive to make in glass too.

Polymer of the present invention is stronger and more permanent than glass. Whereas the workability, reworkability and controllability of glass is limited and diminishes irreversibly as its process of creation proceeds, the workability, reworkability and controllability of the medium of the present invention is complete, free, and it never diminishes during the image's formation or afterwards. Process for working with the medium of the present invention can always be reworked and controlled, e.g., reversed or changed. Like polymer, glass must be sandblasted to be permanently painted. Much painting has been done on unabraded glass and has peeled off, e.g., reverse paintings on glass. Almost all glass processes require preplanning because they are irreversible, and mistakes in glass are generally not correctable. Generally, the form, structure, and color of glass images needs to be well thought out before the process of creating an glass images begins. The finished glass images usually has to be imagined in advance because of the irreversibility of its process of creation and because what you see while you work in glass often is not what you get in finished glass images, e.g., colors change dramatically after they are fired. In comparison, the formation of inventive images can be as WYSIWYG, as preplanned or as spontaneous as desired. Then, once work in the formation of a glass images is visible in its final form on that images, it rarely can be altered, e.g., the glass images can not be refired. Glass is also not as versatile, or as varied as the medium of the present invention, e.g., a myriad of effects can be made and used in images that are not possible in glass. For instance, inventive images can be made in layers each of which are controlled as desired. Glass images can not be formed in any comparable process, they do not have workable, reworkable and controllable internal layers. As another example, when artists in a 1993 exhibition, "The Glass Canvas" etched glass to paint it they had to paint with hydrofluoric acid, which is a poison.

### Further Processes of Creation - Adding Matter to an Image, Adding Polymer

In a further embodiment of the invention, more cPRM and/or polymer is added to a polymer image as desired. The addition of more polymer can create or affect one or more the formal elements of an image, e.g., its form, structure, spatial depth, light, color, subject matter, content, function, and/or meaning. As an example, in order to form, rework or control an image, more cPRM and/or polymer are added to it, which forms it into a new different version of the image. More cPRM and/or polymer might be added to an inventive image in order to complete it as desired. cPRM and/or polymer may be added to an image, taken away from it or both, in order to form, rework or control it as desired. These are examples of ways that polymer can be added to an image: (**i**) More cPRM can be placed in contact with an image, or with part thereof, for instance, by putting the image in a mold, by building a mold on the image (e.g., with oil formulated clay walls), or by placing more cPRM in contact with the image without using a mold. (**ii**) A polymer can be bonded to a polymer image, e.g., using a bonding agent such as a bonding substance, for instance, by using its own cPRM to bond it to the polymer image, by using a different cPRM which bonds to the polymer image, by forming a mechanical bond with the image or combinations of these (e.g., by using SSI and a bonding substance like cPRM, by using hardware such a screw or a hinge or both). (**iii**) In addition, more cPRM and/or polymer can be added to a polymer image in other ways, or in combinations of these ways as desired.

Any amount of polymer desired can be added to an image or part thereof, as desired, at any time, or at multiple times during and after its initial formation. For instance, more polymer can be added to two or three areas of an image during its formation. It is preferable that new cPRM added to a polymer image be the same. When the two polymers are different, it is preferable that they bond. For example, the two polymers might be different, but if at least one of them is a mixed polymer, they might share a common monomer and the catalyst appropriate for polymerizing it, which would enable them to bond to one another.

The addition of polymer to polymer is basic. The changes it offers are profound. The ability to add polymer to an image makes the creation of new and unique image possible, some of which will be unlike any images ever made. It offers solutions to limitations, problems and undesirable issues in conventional image making and in conventional images which are extremely important, useful and valuable. For example, in conventional images such as in transparent painting and drawing, the use of spatial depth is limited, problematic and burdened by undesirable issues. Transparent, translucent and see-through oil paint layers have been superimposed since the invention of oil paints, and throughout the centuries since, image makers have sought to increase the spatial depth of see through oil paint applications. But the use of real (rather than illusionary) spatial depth in permanent oil painting has always been severely limited, problematic and burdened by undesirable issues. Additives which increase transparency and translucency of acrylic paints allow the use of spatial depth in acrylic painting and under oil painting, but they are difficult to form, rework and control as desired, e.g., their color and their forms change as they dry, in particular, the changes in their forms due to shrinkage in drying can not be controlled or predicted. In watercolors, because light decreases as layers are superimposed, the use of real transparent or translucent spatial depth is nonexistent. Using the medium of the present invention, the spatial depth of transparent and translucent painting and drawing is as workable reworkable and controllable as desired, to an extent that it has never been before. Uses and effects of spatial depth in transparent and translucent painting and drawing which were impermanent, impossible, and inconceivable in conventional images, are now open to exploration using the present invention.

Generally when forming or reworking an image or part thereof, it is preferred that its surface area or areas of contact be cleaned. It is also preferred that any polymer, and any other materials, media, objects, devices, or their combinations other than polymer added, attached, or connected to an image in any way, be clean on the area, or areas of contact. This preference is for both structural and aesthetic purposes. Some examples of exceptions to this general preference are those images or part thereof in which the structural and/or the aesthetic effects of not cleaning the polymer and/or other surfaces which will be in contact with the polymer are desired, despite the possible undesirable risks and undesirable effects.

One or more layers of polymer can be added to selected areas of an inventive image's surface also if desired. The use of additive processes of the present invention can enable the formation of images which are not possible using conventional practices and/or which are problematic using conventional practices. For example, in painting on a polymer plane which is serving as an initial image support (e.g., a stabilizer), an image maker might spontaneously decide that this polymer image support is too small for his idea for this image. Unlike conventional practices, the medium of the present invention enables him to enlarge the polymer image support and continue painting it as desired. The reverse can be also done spontaneously during the process of creation, e.g., during the development of this same painted inventive image, the image maker might spontaneously decide that the size of the initial image support he is working on needs to be reduced and/or enlarged (regularly or in an irregular manner). He can do this using subtractive and/or additive processes. Using the medium of the present invention, any or all of these options can be done as desired, e.g., at any time during the image's development or anytime thereafter, even at multiple times if desired. In a similar example, in the process of creating, a sculptor might decide that the form of the inventive image sculpture he is working on, or part thereof, needs to be enlarged to accommodate his idea. Unlike many conventional practices, particularly those that produce transparent or translucent images such as glass, the medium of the present invention enables a sculptor to enlarge his image spontaneously as it is developed, as many times as desired.

A myriad of elements which are not made or principally made of polymer medium of the present invention can also be added to an image. Such elements might, for instance, be attached, embedded, inlaid, embedded within; painted, printed, drawn or written on image, using conventional practices. In an embodiment, a design, a drawing or part thereof is transferred to an image, e.g., using any conventional printing process, using graphite paper, using other such transfer paper, by tracing a projected image, using other ways or in combinations of these ways.

In another embodiment, a crack or hole in an image of the present invention is filled. For example, a crack or hole in a polymer may need to be filled for aesthetic reasons, for structural reasons or combinations of these. Often cracks in polymer grow easily and quickly, holes can weaken a polymer which is not strong and holes in polymer can lead to cracks in polymer. Filling a crack or a hole in a polymer may be done using any method, means, manner or combinations of these as desired, and these processes can be workable, reworkable and controllable as desired. For instance, undesirable cPRM or polymer can be removed as desired, e.g., with cutting and sanding tools. It is preferred that cracks too small to be filled with cPRM be expanded enough so that they can be reworked or repaired as desired (e.g., sand, carve, drill, them wider, or combinations of these). For instance, it is desirable to enlarge hairline cracks in polymer just enough for cPRM to be able to go into them and fill them as desired. A preferred means of filling some kinds of polymer cracks or holes is to first construct a mold around them as desired (e.g., with oil formulated clay walls), and then fill it as desired with cPRM, then when the cPRM hardens, the mold can be removed. Refer to fiber in the forthcoming text for examples of ways to reinforce filled cracks holes and other areas of images of the present invention where greater strength and permanence are desired.

### Removal of Matter

In an embodiment of the present invention, polymer is removed from an image, or from part thereof, as desired, during its formation and/or at one or more times afterwards. Polymer might be removed from an image to rework image (e.g., to modify or repair it). As an illustration, the removal of polymer from an image of the present invention transforms it into a new image of the present invention. If desired other kinds of processing might be done and/or additional polymer might be removed to complete the image.

Conventional processes such as cutting, sanding, carving, chiseling, other abrading processes, and combinations of these can be used to remove polymer from an image. Polymer removal can be done during the gelation stage (as soon as it has gelled firmly enough to carry out the process or processes as desired). It is frequently preferable to cut and carve the polymer medium during its gelation, e.g., as in Fig. 92, described below. However, it is generally preferable to wait until after gelation is over and the polymeric inventive image is hardened to sand, chisel, or abrade it by other processes, or combinations of these.

Removing polymer can be done as desired, e.g., by cutting, sanding, carving, chiseling, other processes for abrading, or combinations thereof. For example, such processes can be done in a carefully controlled, precise, deliberate manner, with a high level of craftsmanship and skill, such as to form a detailed texture, an precise incised drawing or design, a highly realistic drawing, or, to incise easily legible text on a polymer. In addition or alternately, one or more processes of removing polymer can be carried out in a rough manner or in a manner in which little control is exercised, unskilled control is exercised, no intentional or conscious control is exercised, e.g., with a low level of craftsmanship and skill. In addition or alternately, polymer removal can be done in a manner between these two extremes. Processes for removing polymer from an inventive image can be on one or more selected areas of its surfaces and/or over one or more entire surfaces, as desired. Moreover, the polymer removal from an image can be done with a wide variety of tools.

If desired, removal of polymer from an inventive image can be reversed at any time, even if a long time (e.g., ten years), has passed since said polymer was removed. Among the preferred methods of reversing polymer removal in an inventive image are adding cPRM and/or connecting one or more pre-formed polymers, as desired. In an embodiment, images are partially or entirely formed in a subtractive process of removing matter from its mass.

In a further embodiment, applications of one or more materials, media, objects, devices, processes, interactions, or their combinations other than polymer in, or on a polymer inventive image are removed (or reversed), as desired, partially or entirely. Throughout processes of removing matter from a polymer, one or more new aesthetic elements may be added to it, intentionally or unintentionally (e.g., by chance, oversight, accident or mistake). Such added aesthetic elements are generally as workable, reworkable and controllable (e.g., as reversible) as their own composition permits. For example, sgraffito or a similar technique can be used to scratch, cut, incise, carve or sand a drawing into an application of oil paint on a polymer. Such a sgraffito drawing is generally as workable, reworkable and controllable as the oil paint application in which it is incised will allow. Because the process of removing matter from the medium can be controlled as desired, each new aesthetic element formed by one or more processes of removing matter from the medium can be formed in a controlled manner, or an uncontrolled manner (e.g., randomly), it can be formed in a manner between these two (e.g., with moderate control), or it can be formed in combinations of these ways (such as controlled on one part of a polymer and uncontrolled on another part of the same polymer).

To rework and control, e.g., to partially or entirely remove or reverse, one or more materials, media, objects, devices, processes, interactions, or their combinations from medium of this embodiment, a variety of processes can be used, with a variety of tools, without tools, or a combination of these, as desired, e.g., by hand, using a finger or a fingernail to scratch through paint. For example, any of the aforementioned processes, tools or combinations of these might be used to remove an application on a polymer from it, e.g., cutting, sanding, carving, sandblasting, beadblasting, saws, drills, "Dremel" tools, or combinations of these. Among the agents which might be used to rework and control applications of one or more materials, media, objects, devices, processes, interactions, or their combinations other than polymer, from polymers (e.g., to remove or reverse applications) are for example: water; solvents (such as turpentine, acetone and mineral spirits); paint removers; cleaners (such as those made for cleaning hands, dishes, those made for industrial cleaning); and combinations of these.

Processes of removing matter from a polymer can be used in some embodiments to rework and control applications and effects as desired in and on medium. Using conventional practices alone, some of these applications can not be reworked or controlled as desired, they can not be fully reworked and controlled as desired, or they can not be fully and freely worked, reworked or controlled as desired (e.g., reversed or modified). For example, watercolors are usually applied in superimposed transparent layers of color on white paper. Commonly, a watercolor's only white hues are the areas of its paper surface which have been left completely unpainted, bare. The white of watercolor paper also serves to reflect light through the transparent and translucent layers of color. This reflected light provides watercolors with the lightness and brightness of its colors. Watercolors are generally difficult to rework (e.g., to remove), especially once they dry because they absorb into their paper surfaces. For instance, reworking watercolors or attempting to remove them, e.g., by rewetting them, brushing them or rubbing them, can leave a mark visible on the paper; it can wear down, pull up or tear the paper's fibers, and it can even cause an undesirable stain on the paper. In addition, as the process of painting watercolors proceeds, these conventional images can only get darker, irreversibly loosing their light and their unpainted white areas as more transparent and translucent layers of color are applied and superimposed. Unless another medium, another material or combinations of these are introduced into a watercolor painting, it can not be made lighter. For example, even the application of the lightest hue, yellow, in the thinnest possible wash can only darken the watercolor painting. Applied on pure white, any yellow is darker than white. Applied over any other color, even the palest yellow can only make it darker, further restricting light from passing through it. Thus, as the conventional process of watercolor painting proceeds, the creative freedom and control decrease irreversibility. Consequently, watercolors are often preplanned before or during their formation, and only masters of this preplanning can become great watercolorists. As an illustration of preplanning a watercolor painting, before applying the first layer of a watercolor, it is frequently advantageous for the image maker to know, or at least have an idea about which specific areas of its paper surface need to be left unpainted so that the conventional images will have some pure white areas. Because of its limited workability, reworkability and controllability (e.g., its irreversibility), most image makers consider watercolors a very difficult medium to use and to master. But because mastering watercolors means mastering a limited image making process, mastering watercolors and making great images are not the same. Making images is not about image makers conforming their ideas, and their processes of thinking and developing ideas to the dictates of a medium. Image makers make images by realizing their ideas as desired using the present invention.

Applied on polymer medium, watercolors become as workable, reworkable and controllable as desired (e.g., reversible and repairable), ranging anywhere from little or none, to free and full workability, reworkability and controllability as desired. In addition, on polymer medium watercolors can have real light hitting them, reflecting through them and reflecting back through them to the viewer, as watercolors have had for centuries. Then unlike conventional watercolor images, the medium can also have light coming through watercolors layers with real variable spatial depth, (e.g., spatial depth of any thickness and in any shape desired). Unlike conventional watercolor images, watercolors on medium can have painting on multiple sides of a see-through polymer form. Unlike conventional watercolor images, medium can also have light hitting and coming through watercolor layers from multiple sides. And unlike watercolor conventional images, polymers can also have light from a myriad of special light effects hitting and coming through their watercolor layers. Paper can still be used as white if desired - attached to, inlaid or embedded throughout the polymer as desired or in select areas of it as desired (e.g., paper can be attached to portions of the polymer's backside). However among the innumerable additional or alternate options, watercolors painted on polymer that is transparent, translucent, or a combination of these, can be displayed in front of a white surface (such as a wall, or a white material like metal, paper, wood or polymer) which would serve some of the same functions as watercolor paper (e.g., the white reflects light back through the transparent paint to the viewer). The new, unique uses of conventional practices offered by the present invention, can result in effects and in images so innovative, that images like them have never been created before.

On polymer of the present invention, conventional watercolors can be as workable, reworkable and controllable as desired, even in unlimited superimposed layers. Consequently, the use of watercolors on polymer of the present invention can result in new and unique qualities and effects. It is painted in watercolors which are reworked so that light is added to the painting. Inventive images such as paintings are made using conventional paints and conventional painting processes (with or without the additional use of other paints and painting techniques), on polymer of the present invention, which would be very different in their workability, reworkability and controllability in their conventional uses on conventional images.

### Compositional Arrangement

The use of compositional arrangement in the images of the present invention offers new and unique solutions to limitations, problems and undesirable issues in conventional image making and in conventional images. As a result, goals which have been sought in the formation of images, but which in the past could never be fully achieved or achieved at all, can be achieved as desired using the present invention. The compositional arrangement of images of the present invention are workable, reworkable and controllable as desired (ranging anywhere from little or none, to free and full workability, reworkability and controllability). Using the present invention, a compositional arrangement can be made, and then if desired, it can be further worked, reworked and controlled as desired, repeatedly if desired, over any period of time, until it is the compositional arrangement desired, e.g., in a WYSIWYG process, in a sight unseen process, in a preplanned process, in a spontaneous process, or in a process that combines these, as desired. With further processing (e.g.,with the alteration of one or more other formal elements, parts, or combinations of these), all of the images of the present invention described herein can be made into an infinite number of different compositional arrangement. The compositional arrangement which can be formed using just cPRM and one color are infinite. The use of compositional arrangement can bring real light and real spatial depth into images as never before, and affect other formal elements without lessening the inventive image's strength, its permanence, or its other desired elements undesirably.

In some embodiments, images are partially or entirely made in parts which can be worked, reworked and controlled as desired, e.g., one or more parts of images can be rearranged, adjusted, or modified; painted, carved, cut or enlarged; removed or minimized; developed, integrated, and unified with other parts, with other formal elements, and in their relationships to the images as a whole. By making images in parts, their compositional arrangements, forms, and structures can be made as desired in a myriad of variations, using real space, in addition to or instead of other forms of space such as illusionary space, or perspective. In comparison, parts can not be connected and disassembled as desired in a number of conventional practices, e.g., some glass processes, and traditional stretched canvases are restricted to the domain of a single stretched canvas paintings on canvas, works on rectilinear paper and fresco are also not conducive to image making in parts. Thus, the ability to create in parts using the medium of the present invention as desired offers image makers freedom, aesthetic possibilities and control, which was heretofore limited problematic, burdened by undesirable issues, or non existent in conventional images. With the ability to make images in parts as desired, the present invention expands the use of formal elements (such as compositional arrangement, form, structure, space), beyond these limitations, problems and undesirable issues, opening a whole new territory for image making, and for images.

In some embodiments, images are made using multiple volumetric forms, e.g., solid and/or hollow volumetric forms. In some embodiments images are made of multiple planes, multiple rods, multiple tangible volumetric forms, or a combination of these.

In an embodiment, an image, or part thereof, made of multiple parts, has two or more layered parts, with any specifications desired. For instance, two or more layered parts may form a compositional arrangement by being physically connected to one another, contiguous, or, physically separate from one another. Two or more of the layered parts may be physically connected to one another or contiguous, with one or more other physically separate, layered parts. Layered parts in this embodiment might be alike or different from one another (e.g., they might be colored in any way; they might be transparent, translucent, partially opaque, or opaque; their forms might be flat, textured, hollow, solid, flexible, rigid, or curved; they might have embedded objects, inlaid objects, air bubbles, or negative cut-out spaces within them; or they might have combinations of these and any other variations desired).

An image might be formed according to this embodiment comprised of two or more layered polymer components, none physically connected together, e.g. they all connect to another common element such as a common mount, base, stand, or support or structure (e.g. the wall, the ground, a mantle, a beam, the ceiling, the floor).

In some embodiments in which parts of inventive images are layered, inventive images are made with one or more parts visible through one or more of its other parts. For example, the part which is visible through the polymer of an image might be its mount, another polymer component, and/or a non-polymeric part such as one or more neon lights, wooden shapes, metal parts, a painting on a stretched canvas, a drawing on paper, a drawing on another polymer part, a light source, a photograph, a mirror or a combination of these.

### Further Processes of Creation

Images can be formed in any process or processes desired. Processes of forming images offer solutions to limitations, problems and undesirable issues in conventional image making and in conventional images. Thus, for example, goals which have been sought in the formation of images, but which could never be achieved or fully achieved in the past, can now be realized using the present invention. Processes of forming images can create or affect all of the other formal elements in an image, or in part thereof, e.g., an image making process can create or affect its form, its structure, its color, its light, its function or a combination of these.

As another example, images or part thereof are made which are positive cut-outs, e.g., like those by Henri Matisse, but these images cut-outs can be rigid, flexible or both; transparent, translucent, or transparent and translucent; and they can have internal designs and coloration; light effects; texture; etc. as desired. For instance, (a) polymer can be cut into the desired shape to make a cut-out, (b) a cut-out can be cast in polymer, (c) a cut-out for an image can be made by connecting multiple parts, (d) a cut-out for an image can be made by partially or completely covering one or more forms with cPRM, e.g., paper forms, (e) a cut-out for an image can be made using one or more materials, media, objects, devices, or a combination of these, other than polymer of the present invention (e.g., paper or a fiber stabilizer), and if desired, it can then be processed by coating, backing, or encasing it with cPRM or polymer, or (f) a cut-out can be made in a combination of these ways, as desired.

As another example, in some embodiments, images can be made in a process which is completely or partially spontaneous. The formation of images in a fully or partially spontaneous process offers solutions to limitations, problems and undesirable issues in conventional image making and in conventional images. For example, there are many image making processes in which the ability to make spontaneous changes is extremely limited, e.g., glass work, fresco painting and watercolor painting. As another example, in many image making processes the ability to make spontaneous changes decreases as conventional images are formed, e.g. watercolors, enameling.

In some embodiments, 2D and 3D inventive images can be made in a process which is controlled as desired, ranging from complete control to no control, or no conscious or intentional control, e.g., chance and accidents are used. Thus 2D and 3D inventive images can be made with any degree of precision and craftsmanship desired, ranging all the way from one extreme to the other. Further, 2D and 3D inventive images can be made with any degree of detail, intricacy and delicacy desired. Furthermore, the medium of the present invention offers a multitude of ways to achieve these goals as desired in the inventive images formed. In some embodiments, inventive images can be made in a process which can be preplanned. In an other embodiment, one or more formal elements, such as its structure, or aspects of its aesthetic, or combinations of these, are formed in a process involving the lack of control, such as processes involving chance or accidents.

Inventive images can be made by one or by multiple image makers. In some embodiments, an image is formed by two or more image makers in a collaborative process. In other embodiments, an image is made by multiple image makers in a process which is not collaborative, e.g., in a process with little or no communication between the image's makers.

As a more specific example, the first image maker or the first group of image makers might make some of these images comprised of polymer boxes; some of these images comprised of rigid, planar polymers; some of these images comprised of polymer rods; some of these images comprised of polymer cubes; some of these image comprised of polymer blocks; some of these images comprised of multiple polymer planes; some of these images comprised of multiple polymer rods; some of these images comprised of multiple polymer cubes; some of these images comprised of multiple polymer blocks; some of these images comprised of multiple different polymer components (e.g., an images comprised of one polymer plane and two polymer rods); some of these images with one or more flexible polymer sheets; some of these images in a wide variety of other 2D and 3D shapes and forms; and parts made compositions with little or no polymer of the present invention are used in many of these images. Each of these images is transparent, translucent, partially opaque or a combination of these. And, each of these images has one or more of the following five variations.

Variation (1) One or more of its polymer surfaces are prepared so that they will bond to superimposed applications (e.g. using surface preparation stabilizers), made by one or more other image makers after it is transferred. Thus, these may be used as image supports which may or may not be stabilizers. The first image maker or makers might make the image colorless or colored (e.g. partially colored, internally colored, or it may have an overall transparent color). If desired, the image might be made with light effects or other further processing before it is transferred. The applications superimposed by the second image maker or makers might be made using conventional practices. In addition or instead, they might be other kinds of applications (e.g. new applications described herein). For instance, the image might be prepared specifically to be colored by one or more different image makers after it is transferred. Some or all of the surfaces of this image might, for example, have SSI, Clarifying Imprimatura, or other surface preparation stabilizers. For instance, some or all of an image's surfaces might be prepared to bond to: collaged elements, wax based applications, oil based applications, water based applications, other applications that are conventional (e.g., graphite, pastel, charcoal, silverpoint, fresco, sgraffito, gold leaf), multiple different kinds of applications, different areas of its surfaces might be specially prepared in different ways for bonding to different kinds of applications, surfaces might be prepared for making particular effects (e.g., painting or drawing effects), or surfaces might be prepared for a combination of these.

Variation (2) It has a visible light effect added or formed by the first image maker or makers. For instance, it has a light effect which can not comparably be made in a strong, permanent conventional image, e.g., an iridescence, fluorescence, reflectivity, a dichroic effect, a photochromic effect, a lens, a light source (such as an EL Lamp or a light emitting diode for instance in an internal air pocket) or a combination of these light effects within its polymer.

Variation (3) It has been marked as an image might be marked when it is being formed, e.g. internally, externally or both. For example, the image has some painting, drawing, printing, carving, photography, collage, or a combination of these on it, in it or both. It might have underpainting, underdrawing, an imprimatura, a ground, or another kind of underlayer (e.g., a surface preparation stabilizer), a sketch, contour drawing, some broken color applications, some printed graphics, or a combination of these, on it and/or within it. Note, when an image is only marked with words (e.g., written or printed), it must also have one or more of the other four variations on this list.

Variation (4) It has been shaped as an image might be shaped at the beginning of its formation. For example, it is recognizable as an image cut-out, it is recognizable as an image drawing in space, it is recognizable as a known 2D or 3D form (e.g., it is recognizable as the 3D form of a horse, as the 2D form of a leaf, or as the form of a person which is either 2D or 3D). Or, for instance, it is recognizable as a form that is a partially completed abstract image, e.g., a colorless transparent polymer processed so that it resembles a large Louise Nevelson sculpture, a large metal Chamberlain sculpture, a construction made of multiple parts which physically connect to one another and to a wall (but which might be disassembled for transport from the first image maker to the second), like an unpainted Frank Stella construction, a planar polymer (e.g., with colored items, carving, painting, or a combination of these, within it, externally, or both), or a planar polymer with negative cut-outs in it. Or, in a further example, the image is a polymer form which has clearly been developed to such an extent that it could and might be considered a finished image if desired.

Variation (5) A frame and/or a mount has been added to the image which will enable it to function as a particular recognizable form of fine art, e.g., a framed painting, drawing or print; multiple polymer parts of an image are connected to wires and rods so that they will hang as a single mobile. Or, mount parts for a rigid planar image painting are made which will install it securely onto a wall holding its transparent polymer plane 3" out from the wall. Among these mount parts is a metal plate which goes on the wall behind the image, making its installation more stable, while also offering the second image maker the option of further processing this plate as a second layer of this painting, e.g., visible through its outer polymer layer as perhaps an underlayer of color.

These images are then further processed, reworked or both, as their second image maker desires, e.g., further processed using additive processes, subtractive processes or both. The second image maker might change their coloration, their form, their use of light, other formal elements, or a combination of these, for instance, by painting, drawing, printing, writing, carving, cutting, sanding, incising, by adding photography, parts, layers, collage, inlays, or a combination of these. Once they are further processed, reworked or both by their second image maker these images might become different art forms and/or their functions may change. For example, an image made as fine art, for visual observation only, might have an additional function, e.g., as a wall or as a window once it is further processed or reworked by its second image maker. Or, an image window might be made into an image sculpture by its second image maker.

In some embodiments in which inventive images are made by more than one image maker, PRM may be prepared and transferred to others for further processing. For instance, PRM is transferred to a second image maker with image making instructions, with a mold, with added light effects, with added coloration, with one or more stabilizers, or with an image support (which may be a stabilizer).

One of the most desirable features of the present invention is the ability to make images as desired and then rework them as desired, during their formation, anytime thereafter, or both, and such reworking can be done as many times as desired. One principle reason why such working processes are desirable is because they enable image makers to explore possibilities, limitations and variations of their ideas without such risks as possibly having to start over from scratch, loose time, loose money, or recreate the creative effort that produced the desirable results, and without diminishing or eliminating aesthetic options for the image (such as loosing a desired light quality in the image), without the loss of the image's strength or permanence, and without other undesirable effects. Image makers can explore to find their vision. They can explore to find and form the image that expresses their vision. For example, image makers can try variations of their images without knowing if these variations will work (e.g., structurally, aesthetically, functionally). For example, images can be reworked with the level and the manner of control desired, in a WYSIWYG process, in a spontaneous process, in a preplanned process, according to the Principle of Whole Development and Unity to the extent desired an in the manner desired. Comparable use of formal elements of the present invention is not available for reworking comparable conventional images, or for example, it is only available with limitations, problems and undesirable consequences, such as a loss of strength, permanence or the requirement that the image be preplanned.

### The Principle of Whole Development and Unity

In some embodiments, polymers are made according to the Principle of Whole Development and Unity to the extent desired. In addition, in some embodiments, images are made using the Principle of Whole Development and Unity to the extent desired and in the manner desired. The polymer images of these embodiments are mainly possible because the medium of the present invention offers image makers workability, reworkability, controllability and creative freedom as desired, without lessening the achievement of other goals desired in them. For example, the ability to use various forms of light and light effects in a polymer or an image does not alter the ability to form that polymer medium or images with the level of strength and permanence desired. Though limitations, problems and undesirable issues in the ability to use conventional practices as desired are improved or solved in their use in inventive images, some limitations, problems and undesirable issues in the desired use of conventional practices in images remain, such as some use of some conventional practices according to the Principle of Whole Development and Unity in inventive images. The ability to make polymer medium and images using the Principle of Whole Development and Unity to the extent desired and in the manner desired offers solutions to limitations, problems and undesirable issues in conventional image making and in conventional images, as shown by the following examples.

Though the Principle of Whole Development and Unity has been the ideal in making images for centuries and it is still commonly taught in art schools, achieving this ideal is often limited, problematic and burdened by undesirable issues, and sometimes it is impossible to achieve using many conventional practices, e.g., because of their lack of workability, reworkability and controllability. For example, many of these limitations are encountered when strength and permanence are desired in the conventional images formed. These limitations, problems and undesirable issues do not have to exist in inventive images if desired, e.g., the severe limitations in the use of real spatial depth in painting. Whereas the real spatial depth of traditional permanent paintings on canvas is often not very workable, reworkable or controllable as desired in any respect (e.g., the use of texture, attachments, inlays, embedding, multiple transparent and translucent layers, nonrectilinear perimeter shapes, negative cut-out spaces within paintings), the real spatial depth of inventive images is workable, reworkable and controllable as desired (ranging from little or none, to free and full workability, reworkability and controllability).

As another example, many forms of conventional images are inherently not integrated into a unified whole form. For instance, many of these conventional images have parts which, despite their unobstructed visibility and their physical attachment to the rest of the conventional images, are not supposed to be considered part of it. These unintegrated parts of conventional images are supposed to be ignored or seen as aesthetically neutral, and over the years, viewers have learned to suspend their actual perceptions of these unintegrated parts as elements in the images they are attached to, and accept these images to be some but not all of that which is really seen of them. This is sometimes because essential, physically attached parts of conventional images can not be developed and integrated with the rest of these conventional images as desired, and they rarely can be freely and fully developed and integrated; this is sometimes because these parts can not be hidden from view as desired; and this is sometimes due to combinations of these reasons. As an example, the real, visible, 2D or 3D depth of traditionally stretched paintings on canvas is the depth of their stretchers which are otherwise hidden from view. But this real spatial depth is supposed to be ignored. It is not supposed to be considered part of the painting, and over the years, viewers have been successfully conditioned to perceive traditional stretched paintings on canvas this way. These paintings exist only on their 2D planar flat surfaces, which are set-up and structurally supported by their stretchers, though their stretchers are not a part of them. Further examples of images which are inherently unintegrated are sculptures made to be displayed on conventional pedestals. The visibility of these pedestals is as unobstructed as the visibility of their sculptures. The sculptures are physically held on these pedestals by gravity, and these pedestals are essential for their sculptures' existence. But these pedestals are not part of these sculptures and viewers have generally learned to see them this way, despite what they really see. A third example of images which is inherently unintegrated are those with visible mounts, cords, electric parts and mechanical parts, which were desired to be hidden, but which for one reason or another could not be hidden. For example, often an electric cord hanging off of a light box which illuminates a transparency is not considered to be part of the images, but because it could not be hidden without breaking through the wall, viewers have learned to consider it visually neutral or to ignore it.

Limitations, problems and undesirable issues in the use of conventional practices can also make it difficult or impossible to make many kinds of conventional images using the Principle of Whole Development and Unity to the extent desired and as desired. Two examples are media which can not make permanent images in a WYSIWYG process, and processes of materials and media which limit or do not allow reworking, such as irreversible image making processes, e.g., watercolors and glass.

The processes of creation and the combinations of multiple processes of creation, which can all be used as desired to form inventive images, are among the most highly preferred by image makers today, largely for the following reasons. The present invention offers image makers workability, reworkability and controllability as desired (ranging anywhere from little or none, to free and full workability, reworkability and controllability). The present invention can be used in a process which is entirely or partially WYSIWYG. The present invention is very versatile and can incorporate all kinds of non polymeric ingredients, processes, interactions, or their combinations. Images can be made using the present invention according to the Principle of Whole Development and Unity to the extent desired and in the manner desired. And the range of visual results that can be produced using the formal elements with the present invention is enormous. For example, for many image makers it is extremely important to develop their vision and ideas as they work with conventional practices forming the actual images, (rather than with a sample, a test, a model, a blueprint or sketches of ideas). They need to see, feel, and experience the actual materials and media and their inter relationships, in relation to space and in relation to themselves during the process of forming images in order to create their best work, even if they are totally familiar with all of the materials, media and processes they will be using, and even if they are a highly experienced professional. This kind of image making process is very different from, e.g., preplanning done in the image maker's mind or in sketches, samples, and models. Though many image makers prefer to use combinations of these processes, few image makers prefer to just form images that are entirely preplanned. Preplanning images is often done entirely or partially sight unseen, even though their primary function is for visual observation. In addition, often in using many materials, media and processes which require preplanning, by the time the image maker sees that alterations are desired, the process of creating the conventional images is often too far along for the desired alterations to be made as desired, or the process of creating the conventional image is over and reworking as desired is not possible.

The medium of the present invention enables negative space, spatial depth, transparency, translucency, layers, parts, color, light, form, structure, the method of display or installation, size, proportions, and other formal elements to be used in the formation and reworking of images according to the Principle of Whole Development and Unity to the extent desired and in the manner desired. The ramifications are vast and comparisons to conventional practices are dramatic. Neither the general nor the specific structures or forms of inventive images have to be fixed when their formation is begun. They can be developed as the rest of these images are developed, and they can be changed at any time, even after the image is complete. The method of display or installation can be unified with the rest of the image as desired. Images can be worked, reworked, controlled and viewed from all sides, as desired, e.g., if desired, as inventive images are made, layers, parts or both can be moved, flipped over, rearranged, reshaped, textured, cut, or discarded, as desired. The use of transparent color can be developed along with the other formal elements of an inventive image, such as its shapes, size, texture, form and structure. The surfaces and negative space of inventive images can be as fully integrated with their structures as desired. These formal elements can be developed in concert if desired. The use of real light in inventive images can be as important as their use of form, and it can be as integrated as desired with the rest of the image. Negative space and positive form, color and light can be developed simultaneously in inventive images. In another example, an abstract inventive image sculpture is made of multiple polymer parts using color in real space with real light as never before.

Once a number of polymer shapes are formed, the image maker can bond them to one another connecting two parts at a time using a bonding cPRM or another bonding substance, e.g., an adhesive, sometimes reinforcing these joints with fiber, usually with the aid of oil formulated clay. When the image maker prefers to connect the parts at a variety of angles, often the sides of the polymer parts have to be sanded down or cut down to different angles so that the area of contact between the parts being joined is sufficient to make their connection as strong and as permanent as desired. These polymer parts are sufficiently rigid and sufficiently strong to be stable as a 3D volumetric form. This can be a large inventive image with perhaps more than a hundred polymer parts, and possibly other parts too. Working according to the Principle of Whole Development and Unity, the image maker can determine the inventive image's formal elements, such as its structure, its form, its coloration, its use of light and space, and the specifications of its parts, as he makes this inventive image, e.g., as he connects parts he has. Thus the next part he may need might be made, or he might make it, e.g., make it from scratch or by reworking a part he already has, for example by adding texture or another layer to it, by carving into it, altering its perimeter, its shape or its form, or the next part he might use may be made of a composition other than polymer of the present invention.

These polymer parts are typically not expensive and easy to make. As these examples describe, the image maker may: (**A**) He feels free to begin making this inventive image sculpture without any formulated concept of what he desires for it, (e.g., begin just knowing that he wants to use using multiple parts with colored transparent and translucent shapes that suggest a curving movement); or begin with a basic concept of what this inventive image sculpture will be like; or begin this with a developed concept of the inventive image sculpture he is making; or begin making this inventive image sculpture with a thoroughly conceived plan. (**B**) make these polymer parts in all of the variations of shapes, sizes, light, color and other formal elements he thinks he might desire for this inventive image sculpture, even if he does not use them. (**C**) try out all kinds of variations of color, space, shapes, light, form, drawing, layers, painting, photography, other formal elements, conventional practices, new and unique effects, and variations in the polymerization process (e.g. using VIMC) in making these polymer parts, even if he can not visualize them in advance, even if he has no idea how they will work or if they will work as part of this inventive image sculpture, and even if he thinks they might alter his concept for this image and he is not sure if this alteration will be desirable, since he knows he can rework or remove undesirable results. (**D**) assemble these polymer parts because he can always rework their connections and their Compositional Arrangement as desired (e.g., repositioning them, taking them apart or even discarding them and starting over); thus he can try Compositional Arrangements, shapes, forms, arrangements of color, even if he has no idea how they will work as part of this sculpture. (**E**) make new molds, or even to use other processes for forming polymer parts of the present invention, e.g., injection molding, extrusion molding, blow molding, etc. **F**). add one or more non polymeric ingredients to this inventive image if desired and as desired, e.g., as additional parts, as bonding agents or both. (**G**) develop a method, means and manner of displaying or installing this inventive image sculpture as its other formal elements are determined, to any extent that he wants. (**H**) change his original concept for this inventive image sculpture as he desires, at any time or at multiple times during its formation and after its formation. Work on this inventive image may continue until the desired sculpture is formed. The formation of inventive image in this manner can be considered, e.g., painting, in real space with real light. This kind of spontaneous, workable, reworkable, controllable, WYSIWYG image making process, using color in real space with real light, real transparency and real translucency, which can be done according to the Principle of Whole Development and Unity to the extent desired and in the manner desired, is unprecedented.

### The Work Area, Tools, Equipment and Cost

It is preferable to keep the work area clean and free of matter which is undesirable in images, particularly when such matter may or will lessen the desired image strength or permanence and when it will be visible.

In many embodiments, among the most preferred tools for applying cPRM and other applications is a paint brush, e.g., a paint brush is often preferred for applications on a mold, on a polymer, on a gelled layer of cPRM, on a different, bonding material, etc. However many brushes shed hairs (even professional brushes of fine artist quality).

It is preferable to have a variety of hand tools available for use when making images. Examples are hand tools which are: purchased, found, made, or combinations of these. Hand tools intended for other purposes can be useful with the present invention, e.g., hypodermic syringes; wooden tongue depressors; scalpels; dental tools; sharp and dull knives; artist's palette knives; sculpture tools, e.g., clay and wax tools; tools for construction such as drills, sanders and hardware; etc.

Images can be made indoors and/or outdoors without the use of excessive or expensive special equipment or facilities, e.g., images can be made in an ordinary garage or backyard. Furthermore, inventive images can be made in a vast array of variations which are not expensive.
**Ventilation Box** When forming inventive images, in some locations it is preferable to use a ventilation box to contain undesirable fumes and to carry them to a location where it is more preferable to release them.
**Other Equipment** Another example of equipment which could used with the present invention is a vacuum. In forming polymer, it can be easy to remove undesirable bubbles from PRM, e.g., a hand tool can be used, a stabilizer can be used or both. A vacuum can also readily remove most bubbles from PRM.
**Molds** Molds can be used to make polymers and images of the present invention, or any part of thereof. A single polymer, or a single image of the present invention can be made using one mold or using multiple molds, as desired. These molds can be of any description. Here are some illustrations. Both open and enclosed molds may be used to make inventive images, as well as molds that are partially open and partially enclosed. Molds are often formed directly on images of the present invention, e.g. to add polymer to a them, such as an additional polymer layer or part on a polymeric or a non polymeric inventive image surface. When using a mold to make polymer, it is preferred that the mold be coated with a mold release agent such as a petroleum jelly, or a release specifically made for the kind of mold or surface being used. In many embodiments, it is preferable to subdivide the mold or other surface on which polymer is formed. In some embodiments, inventive images are begun on one or multiple molds.

In general, as a precaution, it is preferable to select the ingredients in the cPRM so that its polymerization heat does not affect its mold or other surface undesirably, e.g., other surfaces such as a polymer, or a part of an image of the present invention made of one or more other materials, media, objects, devices, processes, interactions, or their combinations. (Refer to descriptions of effects of polymerization heat herein.) If the mold or other surface is altered during polymerization, the polymer formed can be effected too.
**Clay Formulations** In an embodiment, one or more parts of an inventive image might be partially or entirely made of clay. In addition, in many embodiments, the workability, reworkability and controllability, available to image makers during the process of forming polymer as desired, can often be significantly enhanced by using an oil or a water based clay formulation, e.g., oil formulated clay is most preferred. For example, adept use of a clay during the process of making polymer can affect and help to control both this process and the resulting polymer as desired. As previously described, a mold, or part thereof can be made of clay, and clay is preferable for reworking most if not all kinds of molds and other surfaces. The use of clay in the process of forming images of the present invention can create results and effects which are often very difficult or impossible to create without clay. Oil formulated clay can be used and reused with the present invention multiple times and oil formulated clay generally releases from polymer quite cleanly if it is removed during the PRM gelation stage, preferably after the gelled cPRM can maintain its own form without the clay.

In many embodiments, temporary clay walls are desirable for forming, reworking and controlling molds as desired, e.g., for altering the geometry of a mold such as its perimeter shape, or its undulation; and for repairing molds such as quickly plugging a hole or bracing a mold leaking cPRM without interrupting of the image making process. Temporary clay walls also enable polymer and one or more other materials, media, objects, devices, processes, interactions, or their combinations, to be added onto inventive images and parts thereof, such as additional parts and additional layers. For instance, temporary clay walls are preferred for additions made on polymer and parts thereof, during or after they have gelled sufficiently, e.g., for adding mounts onto a polymer. Temporary clay walls are often preferred for use in connecting two or more polymer parts together and for connecting polymer to one or more other materials, media, objects, devices, processes, interactions, or their combinations. Temporary clay walls are preferred for use in filling in spaces, cracks, scratches, indents, textures, engraved or incised lines or areas (e.g., drawings and holes in polymer). Temporary clay walls are preferred for use in the formation of raised or embossed designs, drawings and text on inventive images and for other uses.

In some embodiments, new unique methods for stiffening and softening oil formulated clay can be used if desired, to facilitate and to expand the use, and the continual reuse, of oil formulated clay, both for producing images of the present invention and also for other applications. Often oil formulated clay is too hard for the uses desired in forming images of the present invention. From one or more softness grades of oil formulated clay, these new methods of stiffening and softening oil formulated clay can be used to produce and to maintain a variety of grades of stiffness, softness and stickiness of oil formulated clay which are determined and continuously controlled by the preferences of image makers as well as other users.
**Polymerization And Image Making** Polymer of the present invention may have linear chains, may be cross linked, or may be a combination thereof. Materials used in forming polymer of the present invention typically include one or more monomers, and one or more initiators or catalysts which are appropriate for polymerizing the specific monomer or monomers used, preferably mixed together. For example, a cPRM for the present invention might be comprised of only one monomer and its initiator or catalyst. However, multiple monomers (preferably mixed), multiple initiators and/or catalysts (preferably mixed), or combinations of these can be used to form mixed polymer, as desired. Should any of the monomers require a specific catalyst, then it is preferable to add that catalyst into the mixture. In forming images of the present invention, the monomer, or at least one of the monomers used is capable of forming polymer that is transparent, translucent or a combination of these, such as polyesters, polyurethane, polyacrylic forming monomers, or any other suitable monomer. Preferably, the PRM forms polymer with desired optical properties (such as a particular refractive index), polymer which is strong in a manner which enables the inventive image to be permanent, polymer which can be further processed as desired, or polymer which meets a combination of these criteria.

As an example, monomers which are capable of forming cross linked polymers are frequently preferred because they are more solvent resistant, and more thermally and mechanically stable. For example, a polyester which contains at least about 25%, on a mole basis, of a monomeric residue able to cross-link, co-polymerize, or both, or more specifically, such a composition in which said monomeric residue has at least one member selected from the group consisting of styrene and other monomers. Preferably the monomer used will enhance the image's linkage to or bond with a superimposed element, layer, application, part, or a combination of these. However often it is not the monomer alone which accomplishes the desired linkage or bond, e.g., a surface preparation stabilizer is formed. One of the preferred monomers for use in forming polymer is Silmar® Polyester Resin S-40 which is also known as SIL95BA-40, made by Silmar®, a division of Interplastics Corporation in Covington Kentucky and Vadnais Heights MN (formerly a division of SOHIO Chemical Company in Covington Kentucky). Monomer can be contained in a variety of cups, jars, buckets, and other containers. Polyaliphatics can be used to contain most monomers temporarily, e.g., polybutylene, polyethylene, and polypropylene can be used to contain monomer while an image maker is making an inventive image. Glass can often be used to contain monomer long-term.

Typically, in embodiments, the catalyst or catalysts are chosen to be properly active with the monomer or monomers used. For example, with polyester forming monomers, methyl ethyl ketone peroxide (MEKP) is a preferred catalyst. Cadox® M-50 MEKP made by AKZO Chemicals in Arnehm, The Netherlands is a preferred catalyst for use with Silmar® S-40 polyester resin. Cadox® M-50 is 30-35% methyl ethyl ketone peroxides (MEKP) CAS No. 1338-23-4; 0-5% hydrogen peroxide CAS No. 7722-84-1; 55-60% Dimethyl phthalate (DMP) CAS No. 131-11-3; which is methyl ethyl ketone peroxide in a solution with 9% by weight active oxygen. The catalyst or the combination of catalysts can contribute a necessary structure in the linkage of monomer molecules to form the polymer. The catalyst or catalysts can be used in any proportion desired with respect to the monomer or monomers used in a cPRM. The catalyst or the combination of catalysts do not have to be used in a lesser quantity than the monomer or the combination of monomers, though they often are, e.g., it may be necessary to use the catalyst or the combination of catalysts in a quantity equal to the amount of the monomer or of the combined monomers used.

In some embodiments, PRM is radiation cured, for instance, by the use of ultraviolet light (or nearby blue light), or by electron beam (EB). This radiation is a stabilizer, in that it may ultimately result in crosslinking. As an illustration, conventional practices for radiation curing PRM might be used to make polymer of the present invention. For example, the catalyst used in PRM might be a photoinitiator (e.g., free radical or cationic), activating the polymerization with an ultraviolet light (e.g., emitted by an arc light such as a medium pressure mercury lamp or a high pressure xenon lamp, or emitted by a laser light). This is fully described in a 1997 brochure ISO 9001 by Ciba Geigy Special Chemicals, Additives, 540 White Plains Road, P.O. Box 2005, Tarrytown NY, 10591-9005. As another example, the catalyst used in PRM might be a dye photosensitizer which activates the polymerization with visible light. Careful selection of specific catalysts for radiation curing (e.g., photoinitiators and/or dye photosensitizers) and the proportions of their use with specific monomers and with any other ingredients added into the cPRM, and careful selection of the particular radiation curing stabilizers used and the specifications of their use are desirable in order to insure that the polymer forms as desired, without undesirable effects, e.g., to insure that the polymer has desired properties (such as adhesion) and lacks undesirable optical or structural effects (such as discoloration for instance yellowing, or undesirable surface wrinkling). Thus in selecting ingredients for radiation curing polymer, it is desirable to consult product manufacturers and/or their literature. Radiation curing is often preferable because of the rapid speed of polymerization. As an illustration, after applying PRM or cPRM to a mold or image surface, radiation curing can harden it so rapidly that the PRM or cPRM does not have time to move or run out of the position in which it is applied. Thus for example, radiation curing is often preferred for applications of PRM or cPRM on molds, image surfaces and parts of these which are vertical, or which have undulations, curves, or angles. And, radiation curing is often preferable when it is desirable to maintain the precision, control, care, delicacy, detail, and/or exactitude of an application of PRM or cPRM on a mold or image surface, e.g., to make sure that a linear application of cPRM (such as a painted or printed lines) hardens exactly as applied. According to the technical staff responsible for Ciba-Geigy's photoinitiators, the very brief exposure of certain cPRM to UV light for the purposes of polymerization is not enough to cause or to risk undesirable effects in polymer such as those described herein, e.g., amber discoloration.

Ingredients in cPRM can differ and these differences can affect and control the polymer formed in all kinds of ways, ranging from slight effects to dramatic effects. Ingredients in cPRM are VIMC. Of particular concern is the choice of active ingredients in cPRM, its monomer or monomers, and its catalyst or catalysts. The characteristics of different monomers and different catalysts can differ, their polymerization processes can differ, and the polymers they form can differ. As a result, in using different active ingredients, it is often preferable that the process or processes used may differ. The choice of specific products as active ingredients in a cPRM; the variability of their use; their polymerization process and factors which affect it (such as the environment); and other such variables are VIMC which can be used to control and affect, or to try to control and affect, the formal elements in the resultant polymer, e.g., its form, its structure, its color, etc. It is preferable that the specific active ingredients, the specific process or processes of creation used to make specific polymer, as well as the use of specific stabilizers be selected according to one another and according to a variety of other considerations, such as: **a).** the polymer's use, function, size, form, structure, thickness and weight; **b).** whether or not the polymer will have attachments, embedding, or multiple parts, and the ingredients desirable for these, e.g., the use of one or more materials, media, objects, devices, processes, interactions, or their combinations other than polymer in the image of the present invention; **c).** the preferred methods, means and manner of installing, displaying, and exhibiting the inventive image formed (such as its mount); **d).** the environment (or environments) to which that inventive image may be exposed (indoors, outdoors, combinations of these, etc.); **e).** the strength and permanence the polymer and its inventive image needs; **f).** the handling and transporting of that inventive image (e.g., frequency); **g).** aesthetic qualities and other properties desired for the polymer and its inventive image (such as transparency, translucency, refractive index, luminous transmittance, haze value, inherent coloration e.g., yellowness index or YI, light reflectivity, opacity, coloration, if embedding or inlay will be done, if anything will be formed in the polymer, whether the polymer will shrink as it forms and the extent of that shrinkage; if the polymer is hydrophilic, absorbent or hydrophobic; the flexibility or rigidity of the polymer, etc.); **h).** anything the polymer or its image of the present invention needs to support; **i).** the most preferred process or processes for making the polymer, **j).** the mold, or molds on which the polymer will be formed, etc. As an example, two different transparent monomers which use the same kind of catalyst and have similar polymerization processes might be capable of forming polymer that are quite different, e.g., one of these monomers can form polymer that is more mechanically stable and less viscous than another. For instance, this may occur without cracking or the resultant polymer being weak or fragile. As another example, the selection and use of active ingredients in cPRM can directly affect the accuracy or lack of accuracy of the impression a polymer takes of its mold, e.g., some polymers shrink significantly as they form, others do not.

One or more stabilizers can be used as desired in images of the present invention, e.g., in and/or on polymer. The choice of one or more stabilizers used in images of the present invention, and the specifications of their use, can affect and control the specific inventive image formed as desired. Thus, stabilizers can be VIMC. The use of specific stabilizers in images of the present invention varies, depending on the specifications, the needs and the desires for each inventive image. For example, it is frequently to use one or more monomers, polymers or a combination of these, as stabilizers in or on cPRM.

In preferred embodiments, polymer in an inventive image is made with desired properties, (e.g., with desired aesthetic and structural properties such as desired optical qualities, desired form, and desired level of strength and rigidity or flexibility). However, a polymer may not bond to one or more colorants such as paints. Thus, a surface preparation stabilizer may be formed on the polymer surface as a bonding agent. In such a situation, the surface preparation stabilizer serves as both a bonding substance and an underlayer to the applications superimposed upon it (e.g., it is functioning as a primer, a ground, an imprimatura, or underpainting). Use of such a surface preparation stabilizer upon a polymer might for instance, enable that polymer to be used as an initial image support for further processing, as desired, e.g., for painting upon, drawing upon, printing upon, writing upon, for collage, or for a combination of these processes. As Example A, one kind of preferred composition for forming a surface preparation stabilizer on polymer is a mixture of: i). the composition which will be superimposed upon the completed surface preparation stabilizer, a bonding composition, or both (e.g., one or more conventional image making media, such as a transparent colorless acrylic paint, a conventional transparent colored paint, a primer, a size, another conventional painting medium, or a combination of these); and ii). one or more ingredients which bond to the specific polymer surface that the surface preparation stabilizer will be partially or entirely superimposed upon (e.g., the cPRM used to make the polymer, a bonding cPRM, one or more ingredients of one or both of these cPRM, another bonding substance, or a combination of these). In Example B, another preferred surface preparation stabilizer is formed on a polymer surface either by: 1). altering the polymer surface in a manner which will create or fortify a bond with the composition which will subsequently be superimposed (e.g., chemically altering the polymer surface, making SSI upon it, making bonding spots upon it, or a combination of these); or 2). by altering the polymer surface then superimposing a composition upon it (e.g., a composition such as the mixture in Example A, or a composition which is just one or more conventional image making media). Processes and compositions preferred for use in forming surface preparation stabilizers vary according to the specific polymer they are used upon, they vary according to the specific composition or compositions which will be subsequently superimposed upon them, or both.

In different embodiments, a polymer surface is formed in one or multiple layers on a non polymeric surface, e.g., on metal. For example, this might be done for bonding purposes, as an underlayer or for both purposes, enabling one or more desired superimpositions. In one illustration, either a polymer containing a stabilizer (e.g., for preventing corrosion of a metal) is applied on a metal inventive image part, or a polymer without any stabilizers is applied on the metal. But, if this polymer surface does not enable a desired superimposition to be made on it, a surface preparation stabilizer can be made on this polymer surface which will bond to both the polymer under it and the desired subsequent superimposition. In other examples, a polymer surface is formed on wood, paper and/or fiber stabilizer. Forms such as these polymer-covered non-polymeric materials may be image supports which may or may not be stabilizers. In other embodiments, an absorbent polymer surface is formed on an inventive image or part thereof which may or may not include polymer. This absorbent polymer may be a surface preparation stabilizer for superimposed coloration that absorbs into it creating desired visual effects. Or, this absorbent polymer may be a substrate for a surface preparation stabilizer formed on it which is an application (e.g., a colorless primer) which absorbs into it to the extent desired and in the manner desired, in order to control the absorbance or the lack of absorbance of a subsequent superimposition (e.g., a paint) into the absorbent polymer (e.g., creating a special effect of color, or preventing the paint from absorbing into the polymer).

In preferred embodiments, ingredients used in cPRM are chosen for their optical properties, polymer is chosen for its optical properties, one or more stabilizers are chosen for an inventive image for their optical properties, or a combination of these. For example, it might be desirable to make polymer in inventive images using monomers and catalysts which form polymers typically used to make optical media such as compact discs, and lenses. As another example, one or more ingredients used in cPRM might be chosen for their refractive index, percentage of light transmission, percentage of haze they allow, coloration such as for their yellowness index (YI), or a combination of these properties in the resultant polymer. As one example, in preferred embodiments, one or more monomers and catalysts are chosen because the polymer their mixture forms is considered water clear, e.g. a water clear polyester monomer and the appropriate catalyst. As another example, in preferred embodiments, the ingredients in cPRM are chosen because of the coloration of the resultant polymer. For instance some transparent and translucent polymers form with a slight hue (e.g. of yellow or pink) even though no coloration has been added to them or despite the coloration added to them. Some transparent resins are actually rated with a yellowness index (YI) which is a comparison against a clear or water clear standard. For instance, the YI of polycarbonate resins is generally about 0.5 to 2.0, which is slightly less yellow than most other commercially available transparent polymers which typically have YI values of 1.0 to 3.0. Polymerization processes, excessive heat, ingredients in the cPRM (such as an inhibitor stabilizer or ingredients which are not polymerized or degraded e.g., regrind material), or a combination of these factors can induce or augment a slight yellow or straw color in polymer. Some manufacturers like Dow Plastics use a conventional practice of adding a slight blue tint (e.g., a heat-stable blue dye) to mask some or all of this yellowness. This practice of adding a slight blue tint might be desirable in making inventive images. Dow, like other manufacturers, makes and sells transparent resins with and without this added blue tint to mask the polymer's slight yellow color. Similarly, a slight red tint might be added into cPRM to correct a green tint. For example, the addition of such a blue tint, red tint or both might be desirable to correct a yellow tint, a green tint or both in polymer in inventive images caused by the monomer inhibitor in the cPRM. Also of note, when a high level of optical clarity is desired in polymer, it is desirable to consider the way that polymers and monomers used in inventive images are produced. For example, some polymers and monomers are produced in processes designed to insure a high level of optical clarity, e.g., often these products are said to be of optical quality. For instance, some manufacturers use clean room conditions; some employ dedicated storage silos, extruders and processes; some employ superior filtering methods to remove impurities; some wash finished pellets of resin with ultra pure water; some employ extensive quality control checks; and some manufacturers, like General Electric (Pittsfield, Massachusetts) in the production of their Lexan® OQ (Optical Quality) polycarbonate resin, use a combination of these practices.

In a further example, in preferred embodiments a monomer and a catalyst used in a cPRM might be chosen principally for the refractive index of the resultant polymer. According to the manufacturers of their active ingredients, some polymers of the present invention have a refractive index that is similar to, the same as, or even higher than that of some kinds of glass.

In a further example, in preferred embodiments a monomer and a catalyst used in a cPRM might be chosen principally for the luminous transmittance, the haze value or both of these criteria in the resultant polymer.

The optical clarity of polymer in inventive images can be affected as desired by the use of catalysts (such as MEKP, photoinitiators, free radical initiators, and coinitiators such as amine photochemical coinitiators); by image making processes (and the tools and materials they involve), by the use of stabilizers, or by a combination of these. One or more other ingredients can be used in PRM to affect the optical clarity of the resultant polymer, e.g., coloration, ingredients which give the polymer texture, etc. In addition, in some embodiments, many other factors can affect the optical clarity of inventive images. For instance, the use of light sources, bonding substances and other bonding agents, and conventional image making materials (like paper, paints, canvas, linseed oil, glue, metal, found objects, collaged elements, etc.) can affect the optical clarity of inventive images as desired. As another example, the process of making an inventive image can affect its optical clarity. For example, in the process of making an inventive image, heat can affect optical properties of the resultant polymer, e.g., exotherm, external heat upon cPRM such as heat from a hot lamp, or both. The compositional arrangement of an inventive image can affect its optical clarity, as can the method and manner and specifications of its installation or display.

Just as these active ingredients in cPRM and polymers; other ingredients in cPRM or polymer; polymer, or a combination of these might be chosen for the optical clarity of the polymer in the inventive image, these choices might be made to form polymer in inventive images which lacks optical clarity to any degree, it may have poor or very poor optical clarity, e.g., such a choice might be made for aesthetic reasons, structural reasons or both. For example, such active ingredients and such polymers might be used in inventive images for their low refractive index, for their low percentage of light transmission, for their high rate of haze, for their inherent coloration (e.g., their high level of yellowness), for other aesthetic properties, for other desirable properties (e.g., tensile strength, impact strength, flexibility, properties which enable them to be made in the form or process desired such as their viscosity, etc.), or for a combination of these. As another illustration, in some embodiments of this invention, one or more of the active ingredients used to make polymer in images of the present invention is opaque. For example, one or more monomers, one or more polymers, or a combination of these are used to make polymer in an inventive image are opaque.

As an illustration, an inventive image might be made which needs to be strong or somewhat strong. Thus, it is desirable to make its polymer form using a cross linked polymer such as polyester. However, optical properties only available in a linear polymer are desired for the polymer form of this inventive image. Therefore the polymer form of this inventive image might be made in one of the following ways using A). one or more cross linked polymers, chosen both for strength and optical properties, and B). one or more polymers chosen for their optical properties. Design 1. The polymer form of this inventive image is made with a minimal skeletal structure comprised of A). The rest of the polymer form of this inventive image is made using B). Design 2. The polymer form of this inventive image is made with a minimal skeletal structure comprised of a mixture of A). and B). The rest of the polymer form of this inventive image is made of B). Design 3. The polymer form of this inventive image is made with a minimal skeletal structure comprised of layers of A). and B). The rest of the polymer form of this inventive image is made of B). Design 4. A significant portion or all of the polymer form of this inventive image is made of a mixture of A). and B). Any remaining part of the polymer form of this inventive image is made of B). Design 5. A significant portion or all of the polymer form of this inventive image is made of layers of A). and B). Any remaining part of the polymer form of this inventive image is made of B).

As another illustration, an inventive image might be made using a optical grade polymer such as a polymer typically used for lenses (e.g., polycarbonate). For example, the polymer in this inventive image might be formed in the shape of a lens, thereby functioning as a lens in the inventive image. As another illustration, polymer in an inventive image which is chosen for its desirable optical properties might serve as an image support (e.g., an initial image support and/or an image support stabilizer) for further processing.

In some embodiments, conventional practices for coating polymer, for adding films to polymer or both may be used to affect polymer in images of the present invention. The use of such a coating or film on, in or on and in a polymer in an inventive image might add one or more stabilizers to it, e.g., a UV light stabilizer. However, while such coatings and films are applied according to requirements in their conventional uses (such as requirements dictating their thickness, evenness, the number of layered coats or films, requirements which make these coatings and films appropriate for use over eyes, etc.) the use of these conventional practices in making inventive images has no such limitations. Among examples of these coatings and films are those standardly used in the optical industry, such as anti reflective coatings, anti glare coatings, coatings that provide mirror effects, anti scratch coatings, coatings that color or tint, polarizing coatings, polarizing films, coatings and films that absorb, block or otherwise stabilize against ultraviolet light, etc. As an illustration, such coating might be put on a polymer inventive image by professionals in the field of eye glass lens coatings. However, unlike their conventional uses, polymer inventive image surfaces with such coatings, films or both, might be further processed as desired (polarizing films are often positioned at least 1mm behind the front surface of eye glass lenses) e.g., they might be superimposed by surface preparation stabilizers, additional cPRM; other layers applications and/or parts; bonding spots might be made on and/or within their applications, they might be used as surface preparation stabilizers, or a combination of these. In an example, a surface of a polymer inventive images is coated with a mirror coating conventionally used on the lenses of eye glasses. The mirror coating is superimposed by a bonding layer of. Then this polymer surface is used for painting, e.g., using conventional paints. In another example, a coating or a film conventionally used on polymer in the optical industry is used as a surface preparation stabilizer, serving as an underlayer for superimposed layers of paint, e.g., if the paint is unable to bond to the surface preparation underlayer, SSI might be made in the surface preparation stabilizer so that it mechanically bonds to the superimposed paint. Such techniques are conventional in the art.

In some embodiments, conventional practices can be used to make polymer of the present invention change in color (e.g., in hue, value, intensity or a combination of these) according to the light that hits it. Bringing such effects to polymer in an inventive image might add one or more stabilizers to it, e.g., a UV light stabilizer. Non polymeric parts of inventive images (e.g., glass parts) may also have such effects. However, while such effects of color are applied according to requirements in their conventional uses (such as requirements which make them appropriate for use over eyes) the use of these conventional practices in making inventive images has no such limitations. For example, polymer in an inventive image becomes progressively gray as the intensity of the light striking it increases, or it noticeably changes color throughout the day as the natural light hitting it from outdoors changes. Conventional practices used to make a variety of photochromic effects in polymer (e.g., in polymer lenses), may be used to make polymer in inventive images. For example, conventional practices used to make Transitions® Lenses by Transitions Optical Inc. of Pinellas Park Florida may be used to make polymer in inventive images. According to Transitions Optical, Transitions® Lenses contain millions of photochromic molecules called indolino spironaphthoxazines, plus other types of photochromic molecules. The photochromic chemical is put on the pre formed polymer lens using Transitions Optical's patented process. It is then superimposed by a hardcoat for scratch resistance. Thus, a polymer of this embodiment with properties which enable it to change with different light exposure, could function as a surface preparation stabilizer, e.g., as an underlayer for painting. In the use of photochromic effects, it is often desirable to add ingredients and employ practices which are conventionally used (e.g., in Transitions Lenses), to inhibit or counteract "fatigue" which is the reduction or loss of the photochromic effects in the polymer. Conventional practices for making polymer produce changes in response to light.

In some embodiments, one or more fillers are added into cPRM in any proportion desired. Fillers might be added into cPRM for aesthetic, functional, structural, and/or financial reasons, or for combinations of these reasons, e.g., to aid in processing polymer in inventive images. However, if significant percentages of fillers are added into cPRM, the resultant polymer may not be as strong or as permanent as desired, e.g., the structure and/or the function of the inventive image might not be as desired. It is preferred that any effects (e.g., aesthetic, structural and functional effects) from the addition of fillers into cPRM give to the resultant inventive image be acceptable. Examples of fillers which might be added in to cPRM are: glass, plastic or ceramic beads or bubbles (e.g., glass bubbles by 3M Company, and glass beads made by Flex-O-Lite Inc. of Fenton MO), flakes or other particles; silica; sand; calcium carbonate; cellulose fillers such as alpha cellulose; various fibers such as chopped or milled fibers; boron nitride; calcium sulfate; powdered forms of clay; chalk; talc; marble dust; quartz powder; flock; mica; mineral filler; nickel filler; shell flour fillers; silicon carbide; stainless steel fiber or powder; wood flour; microfibres (very fine wood or cellulose pulp); various silicas such as Aerosil® and Sipernat® (made by Degussa Corp. in Ridgefield Park NJ), Wacker HDK® N20 (made by Waker Silicones Corporation in Adrian Michigan), combinations of these, etc. Fillers used in polymer in inventive images may or may not be stabilizers. For example, fillers used in PRM to affect processing or to modify the speed of polymerization are stabilizers. However, fillers which are just used for aesthetic or financial purposes are not stabilizers. As another example, fillers which affect the absorbency of the polymer formed (e.g., paper pulp) can form a surface preparation stabilizer on the polymer formed if the resultant polymer surface is then superimposed in a manner which uses this absorbency (e.g., if the polymer surface is superimposed by a paint that it absorbs).

These are further examples of fillers for use in inventive images made and/or sold by Kremer Pigments Inc., Dr. Georg F. Kremer of NYNY and Farbmühle, D-88317 Aichstetten, Germany: Chalk from Chamgagne, France, Whiting natural calcium carbonate; Chalk from Bologna, Italy, Gilder's Gesso, soft, calcium carbonate-sulfate; Chalk from Bologna Light, PW25, more volume than # 5810, calcium sulfate; Sarti Chalk, natural greyish chalk, soft, smooth extender; Sarti Chalk, natural yellowish chalk; Kaolin, China Clay, PW19, aluminium, silicate natural clay, smooth gesso; Terra Alba, natural gypsum; Anhydride Plaster, burnt so it doesn't set: "dead-burnt gypsum"; Alabaster Plaster, for "Gesso Sottile"; Scagliola, fastsetting Italian plaster; Marble Dust Italian Extra White calcium carbonate; Marble Dust Extra Fine; Marble Dust Medium, slight tooth; Marble Dust Coarse, for added tooth; Marble Dust Very Coarse, for gritty applications; Quartz Powder USA, approx. 7.5 micro; Blanc Fixe, PW21, barium sulfate filler; Aluminium Hydrate; Verona White, marble dust from Italy e.g., for texture applications, Ivory white, MG-sandy texture (0.7 - 1.2 mm), G-gritty texture (1.8 - 2.5 mm), S-gravel (2.5 - 4.0 mm), also available: Mori Yellow, Prugna Brown-Pink, Alp Green, Coral Pink, Black, Carrara Marble Dust, very white, slight tooth; Glass Beads, ca. 0.5mm diam.; Glass Beads, 0.5 - 1mm diam.; Fine Glass Beads, 150 - 210 my; Very Fine Glass Beads, 0- 50 my Scotchlight, very light, high volume filler.

Viscosity of cPRM can have a significant effect on image making and thus on the resultant polymer and the resultant inventive image. In some embodiments, one or more active ingredients in cPRM are chosen for their effect on the viscosity of the cPRM. For example, sometimes when multiple catalysts are appropriate for a particular monomer, the catalyst used is chosen for the viscosity which results when it is mixed into the cPRM, or the catalyst used is chosen for how quickly it will harden the polymer (which for example, can control the amount of time the cPRM will remain at a particular viscosity before hardening). As another example, the proportion of the catalyst used in the PRM can be determined by the viscosity which results once it is mixed into the PRM. As a further example, thermoplastics used in PRM are selected for their rate of melt flow. In some embodiments, monomers, polymers or both are used as stabilizers to modify the viscosity of cPRM in which they comprise less than about 40% of the total volume. In some embodiments, one or more fillers are used as stabilizers in cPRM to modify its viscosity. Examples of stabilizers which might be added into cPRM to modify its viscosity (e.g., to thicken it) are: flocculent silica powder, fumed silicas e.g, Aerosil®, precipitated silicas such as Sipernat®; microscopic hollow spheres such as phenolic, glass, or plastic microspheres; glass or plastic beads or bubbles; cotton flocks; chopped fiber, or microfibres (very fine wood or cellulose pulp), milled fiber (e.g., powder or floccular), sand, chalk, marble dust, quartz powder, talc, other ingredients listed herein (such as other fillers and particles), colorants (like pigments, color pastes), combinations of these, etc. In an embodiment, associative thickeners are stabilizers in cPRM to thicken it. Examples of associative thickeners include urethane containing polymers by Aldrich Chemical. VIMC might also be used to modify or control the viscosity of cPRM as desired. For example, ambient heat can accelerate polymerization using MEKP, and radiation curing using a photoinitiator can harden cPRM so rapidly that it does not have time to run off of the mold or image surface. Note that cPRMs differ and the effects of ingredients added into different cPRMs differ. Some ingredients which alter the viscosity of cPRM (for this purpose or for other purposes) also change the qualities of the resultant polymer, e.g., they lessen its transparency and/or translucency, change its color, lessen its strength and/or permanence, or a combination of these. For instance, if significant percentages of many stabilizers (such as fillers) are added into cPRM, the structure of the resultant polymer may not be as strong or as permanent as desired. It is preferred that any effect or effects ingredients added into cPRM to alter or control its viscosity, have on the resultant inventive image be acceptable.

The viscosity of the cPRM or the viscosity of one or more of the monomers used can often cause problems, even if VIMC are used. For example, on polymerizing, cPRM can change from a low viscosity, runny state to a gel so rapidly that there is little time to reorient it as desired on the mold or image surface, (with a brush or any other tool) to control where it hardens into polymer (e.g., the cPRM can not be oriented on the mold or image surface as desired before the brush being used carries the cPRM in lumps). After polymerization, there may only be a brief interval during which the cPRM can be spread in a controlled and effective manner (e.g., with a brush or other tool) for the effect desired (e.g., for a smooth surface). In situations such as these, it is often desirable to choose the ingredients in the cPRM so that its viscosity is appropriate for both the specific image making process which will be used and for the specifications of the particular image being formed. However, it is preferable that ingredients and processes used to modify cPRM viscosity do not compromise or sacrifice other qualities desired in that polymer.

With low viscosity cPRMs, the difficulty of forming a polymer with a consistently even thickness generally increases as the undulations of the mold or other surface (e.g., a polymer surface) increase in height and steepness. This difficulty generally pertains to molds and other casting surfaces which are open rather than enclosed. Thus, particularly with open molds and other open casting surfaces, the flatter the mold or other surface, the easier it is to form polymer evenly on it, and in order to easily form polymer, it is preferable to form it on molds or other surfaces which have undulations that are as low, as few in number, and as far apart as possible. However when cPRM is forming polymer on molds which are not very flat or which are not flat at all (such as deep molds, molds with significant undulations, or molds with both specifications), it might be desirable to alter or control the viscosity of cPRM (e.g., using the methods described above) and/or it might be desirable to alter the mold (e.g., to use a enclosed mold). Regardless of the mold, sometimes after the first layer of polymer is formed, superimposed layers cPRMs which change from a low viscosity, runny state to a gel rapidly become less problematic. For example, a previous, polymer application or layer can help to hold a newly applied, low viscosity cPRM in place as desired, reducing its tendency to run downward, out of the places where it is preferred that it polymerize. For instance, this is often the case when applying cPRM under, over and within a layer of fiber.

Problems with cPRM being too viscous can also occur. For example, one or more monomers can be used in the cPRM which reduce its viscosity (e.g., either as stabilizers or as active ingredients in the cPRM); one or more appropriate catalysts can be used in the cPRM which have specifications and which are used in percentages that either do not contribute to the viscosity problem or which preferably ameliorate the problem; VIMC can be used; stabilizers can be used (such as fillers) or a combination of these can be used. Such solutions are preferred provided they will not have any unacceptable effects on the inventive image formed.

In a number of embodiments, the external surface or surfaces of a polymer which are exposed to the air during their polymerization, do not fully cure. They may even remain slightly sticky, they may emit a detectable odor (e.g., that odor is the further evaporation of solvent), and they might not be perfectly smooth (e.g., they may be irregular or pebbly surfaces). The formation of incompletely cured polymer surfaces can be prevented, completely or to the extent desired using a variety of methods. For example, the polymer can be formed with a cPRM which fully polymerizes or which polymerizes as completely as desired. Or the polymer can be formed using any one of numerous methods which prevent evaporation of the cPRM. In one such method, polymer is formed in an enclosed mold, rather than in a mold which exposes the cPRM to the open air. The use of one or more stabilizers in cPRM will also form polymer which is more fully cured or as fully cured as desired, e.g., stabilizers such as Byk®-S 740 and Byk®-S 750 (made by Byk Chemie in Wallingford, Connecticut), or Silmar® A-111, Silmar® S-250, and Silmar® S-250a.

One preferable way to test if a crosslinked polymer surface (and some non cross linked polymers that are not soluble in acetone, e.g. polyethylene, polypropylene) has fully cured, is to test the stickiness with an appropriate solvent, e.g., acetone. Another less preferable test (particularly for a hydrophobic polymer), is to observe the polymer surface in question for white spots after water, preferably distilled water, evaporates off of it. Incompletely cured polymer surfaces on images of the present invention can be left as they are if desired. Or, they can be further processed in ways (e.g. painted). However, if the external surface of a polymer does not fully cure, it may be desirable to cure it more fully or completely and various methods can be used for this purpose.

For example, it is often useful and/or desirable (e.g., aesthetically, structurally or both), to remove the uncured external surface of the polymer, or part thereof to reveal fully cured, or more fully cured polymer underneath, e.g., by dissolving, or by sanding and/or sandblasting this external polymer surface off. Once its external surface is removed and any solvent used to remove it has evaporated, the remaining polymer will no longer emit a detectable odor, or its odor will be weaker. If any further processing is desired, it can be done. For instance, the SSI on the polymer's surface might be used to bond and/or to fortify the bond of a superimposition onto it such as: **a).** the same cPRM, or a similar or a different cPRM which may or may not be able to chemically bond to it; **b).** non polymeric superimpositions (e.g., attachments, parts, layers, sealers, coatings which would not bond to this surface without its SSI); **c).** a colorant (e.g., with a conventional vehicle, with an unconventional vehicle or both) in which case the SSI serves as a surface preparation stabilizer; **d).** by a conventional or an unconventional underlayer in which case the SSI serves as a surface preparation stabilizer; **e).** the SSI might be used as bonding spots (described herein); **f).** a combination of these.

In a second example, incompletely cured polymer surfaces or part thereof, are not removed, they are partially or entirely overlaid by one or more superpositions. For example, such a superposition: **a).** further cures or completely cures the polymer where it is placed, in which case it is a stabilizer; **b).** partially or entirely covers over the polymer with a fully cured or more fully cured surface; **c).** serves another aesthetic and/or functional purpose, for instance to give the image a texture, to level the image's surface, or to enable desired reworking (e.g., enabling incising and/or carving to be done without clogging a bit or sander); **d).** can be a surface preparation stabilizer which forms or strengthens a bond between the polymer surface and one or more subsequent superimpositions (such as applications of new layers, parts, or components); **e).** might be a bonding substance for one or more further superimpositions (e.g., applications, parts, attachments, etc.); or **f).** a combination of these, as desired. For example, a new layer might be superimposed on an incompletely cured polymer surface which will copolymerize with it in a strong chemical bond, co-mingle with it in a good bond, or loosely bond with it. If the superimposed application is a different polymer (e.g., polyacrylate on top of polyester) it might form an irregular mechanical bond, or a loose bond with its incompletely cured polymer underlayer, and/or a chemical bond with it. Superimpositions used on incompletely cured polymer surfaces can produce useful and desirable aesthetic effects. They can also be stabilizers.

### Further Description of Monomers, Polymers, Catalysts, and Stabilizers

One or more monomers and/or polymers can be used to make images of the present invention. Polymer in inventive images may be made of mixtures or one or more monomers and/or polymers. Examples of monomers and polymers for use in inventive images follow, but these are not limiting examples. Monomers and polymers may be also used as stabilizers in inventive images.

In some embodiments, polymer used in inventive images is in pellet or powder form (these are sometimes called molding compounds). In some embodiments, manufactured polymer shapes and forms are used as components in inventive images. Among examples of these are pre-made polymer sheets, films, pellets (used as forms), rods, cubes, bars, blocks, spheres, bowls, etc. which are typically mass produced and widely sold. For example, one or more sheets of acrylic, vinyl, polyvinyl chloride, acetate, polycarbonate, polyester, polystyrene, polyethylene, polypropylene, nylon, another polymer or a combination of these may be used as components in an inventive image, e.g., as an image support, as a Separating Layer, as an external layer, etc. When an image of the present invention is formed using a preformed conventional polymeric material, a stabilizer must be added.

Among examples of useful polymer are those which fall into these categories, based on (a) monomer functionality, (b) monomer-to-monomer linkages, (c) polymer properties, and (d) polymer synthesis methods: (a) having functional groups such as acids, acid salts, acid chlorides, amines, amides, anhydrides, hydroxyls, phenolics, imines, imides, organometallic, oxiranes, halogens, isocyanates, urethanes, ureas, ethers, esters, nitriles, mercaptans, aldehydes, hydrazides, sulfides, nitro groups, nitroso groups, alkynes, alkenes, aryl groups, substituted aryl groups, methylolamides, or mixtures thereof; (b) traditional carbon-carbon bonded polymers, polyamides, polyimides, polyurethanes, polyureas, polyallophanates, polybiurets, polyesters, polyethers, polyolefins, polydienes, polyalkynes, polydiynes, polyaryl polymers, polysiloxanes, polyphosphazenes, polysilanes, polypohsphonates, polypeptides, combinations thereof, mixtures thereof, or copolymers thereof; (c) hydrophilic, hydrophobic, oleophilic, oleophobic, water-soluble, fat-soluble, photoactive, conductive, crystalline, semi-crystalline, liquid crystalline, glassy, brittle, biodegradable, bioresorbable, thermoplastic, elastomeric, thermosetting, thermotropic, thixotropic, rheopectic, or combinations thereof; and (d) step growth, addition, condensation, free-radical, anionic, cationic, emulsion, suspension, latex, self-polymerizable, solution, or interfacial polymers, or mixtures thereof. Polymer useful in the present invention may be homopolymers or random, alternating, statistical, block, graft, comb, star, or mixed copolymers of two or more monomers, such that the architecture of the polymer is linear, branched, dendritic, multi-arm star, networked, cross linked, combinations thereof, or any other polymer architecture known to one of ordinary skill in the art.

Conventional image making media and/or materials which are polymers or monomers (such as acrylic paints) can be used to make inventive images with the addition of at least one stabilizer. Numerous specific examples are herein.

Polymers and/or monomers in emulsion form can be used to make inventive images. Examples are acrylic emulsions conventionally made and sold for making images (numerous examples are herein) which can be used to form inventive images, typically with the addition of at least one stabilizer, e.g., a fiber stabilizer. Note that these emulsions typically shrink, often significantly, as they dry or harden.

There are many kind of polymer films and sheets made for and/or conventionally used for image making which can be used in inventive images, often these are called papers, e.g., sold for graphics, drafting, drawing, painting and/or transferring images, for instance, in the paper departments of art supply stores. Most of these are transparent and/or translucent. Among examples are polymer films and sheets made by Borden and Riley Paper Co. Inc. in Hollis NY, such as Denril and Laser Denril. A range of other polymer films (such as acetate and polyester films) are also sold for image making. Other examples are other polymer papers made for computer printers.

Photoinitiators might be used to form polymer in inventive images. One or more photoinitiators might be used in a single PRM, e.g., with or without the addition of one or more light stabilizers (such as ultraviolet light stabilizers or hindered amine light stabilizers). For instance, photoinitiators might be free radical or cationic; liquid or solid; and clear, pigmented or white.

### Further Description of Stabilizers

It is preferable that all stabilizers used in images of the present invention are either invisible to the unaided human eye (e.g., they have no observable effect on an image of the present invention's color, fluorescence, transparency, translucency or the combination of these, in daylight, incandescent light, halogen light, fluorescent light, UV light, etc.), or it is preferred that the visibility of stabilizers as part of images of the present invention is desirable. Thus, for example, one or more stabilizers used in inventive images adds color, texture, form or a combination of these to it.

In many embodiments it is preferred to use one or more stabilizers in images of the present invention or in parts thereof (e.g., in parts which will or may discolor, such as in polymer), which is designed by its manufacturer to affect discoloration which can otherwise occur by inhibiting it, absorbing it, blocking it, other wise stabilizing it; by inhibiting, absorbing, blocking or otherwise stabilizing its cause; or by functioning in a combination of these ways. For example, it is preferred that such stabilizers function in one of these ways to protect inventive images against undesirable effects (e.g., discoloration) which can be caused by UV light. In a polymer, a stabilizer or stabilizers such as this may also inhibit, absorb, block, or stabilize 1). the discoloration of the polymer; 2). the discoloration of non-polymeric inventive image ingredients; 3). the cause of such discoloration (e.g., UV light), or 4). a combination of these. For example, the use of such a stabilizer in polymer in an inventive image might prevent the discoloration of non-polymeric materials used under and in that polymer, such as, embedded, attached and inlaid materials; pigments, paints, and other coloration, etc. In addition to the use of such stabilizers in polymer, such stabilizers can also be used in inventive images to prevent the undesirable effects such as discoloration on non-polymeric image parts.

For example, Tinuvin® 328 by Ciba-Geigy is one preferred stabilizer which can inhibit, absorb, block or work in a combination of these ways to counter undesirable effects on polymer caused by UV light (e.g., discoloration). While Tinuvin® 328 is a light yellow powder, Ciba-Geigy makes Tinuvin® 328 FF in light yellow free flowing granules which can be used in the medium of the present invention, though the powder is generally preferred. The concentration of such a stabilizer (e.g., in grams per milliliter of monomer, monomers, or PRM) depends on the UV absorption spectrum and the absorbance of the chemical itself; it depends on the chemical's stability in its use and the permanence desired for the inventive image; and it depends on the desirability of any aesthetic effect the chemical has on the inventive image. (For example, at the concentration recommended, a chemical may not only absorb the UV light, it may also absorb some of the near blue, which in daylight, may make the polymer appear to have a slight yellow color that is less apparent in incandescent light. This depends upon the where in the Compositional Arrangement of the inventive image the stabilizer is used, the method of the inventive image's display, etc.)

In another embodiment, one or more stabilizers are used in inventive images which protect against changes in coloration such as changes in color intensity, value, hue or other changes in coloration (e.g., fading of pigments and dyes, yellow or amber discoloration, etc.). For example, to protect coloration in inventive images or parts thereof against changes, one or more stabilizers which protect against changes caused by UV light might be used (e.g., those listed herein by Ciba-Geigy), other stabilizers might be used such as Hindered Amine Light Stabilizers (or HALS by Ciba-Geigy examples of which are listed herein), or a combination of these might be used.

In many embodiments, fiber, such as a fabric or fiberglass, is used as a stabilizer in and/or on polymer of the present invention. In an embodiment, fiber is used on polymer for the bond its weave provides to one or more superimposed applications, e.g., as a surface preparation stabilizer or a part of a surface preparation stabilizer, for instance, if its SSI enable bonding of a paint and/or if it chemically enables a superimposed application to bond to the inventive image.

In some embodiments, one or more stabilizers are used in inventive images or part thereof as surface applications which are not superimposed, e.g., as sealers or coatings. These might for example be stabilizers used independently, stabilizers used in mixtures with one or more other ingredients (such as cPRM, conventional media or both), fiber, or a combination of these.

In some embodiments, one or more stabilizers are used in and/or on polymer which absorb UV light and with the absorbed energy, they fluoresce in the range of visible light. The color light added to the inventive image by the use of one or more stabilizers of these embodiments depends on: **a).** the specific chemical or chemicals used, **b).** use in the inventive image, and **c).** the UV light striking the polymer made according these embodiments. By choosing the appropriate chemical or mixture of chemicals as the stabilizer or stabilizers, the resultant fluorescence may be blue, yellow, or red; orange, purple or green; or other colors. Visibility of the fluorescence made in these embodiments may require additional UV light striking the inventive image. (If desired, stabilizers in this group may be used as desired on and/or in non-polymeric inventive image ingredients.)

In one embodiment, one or more stabilizers are used in and/or on polymer. These stabilizers are from a group of chemicals called optical "brighteners", since they absorb UV energy and fluoresce in the visible spectrum. Typically, this optical effect is visible with ordinary room lighting. Uvitex® OB made by Ciba-Geigy is one example. A visual effect, which can be made with Uvitex® OB and other chemicals in this group, is a brightening in the blue end of the visible spectrum as an inventive image with one or more of these stabilizers is viewed in light. For example, if Uvitex® OB were dispersed throughout a polymer, blue light would originate at every depth of that polymer, possibly creating an opalescent or slightly opalescent effect. (If desired, Uvitex® OB and other chemicals in this group may be used as desired on and/or in non-polymeric inventive image ingredients.)

In an embodiment, one or more stabilizers are added to a cPRM for one or more of these effects: **1).** so that the surfaces of the cPRM polymerizing exposed to air, rather than against a mold or other surface, harden as smooth polymer surfaces (as opposed to, for example, irregular or pebbly surfaces); and/or **2).** so that the cPRM fully cures. These stabilizers often reduce or prevent the odor of monomers such as styrene. For example, such a stabilizer might be one or more waxes, and/or it might be a mixture containing one or more waxes (such as a mixture of one or more monomers and one or more waxes; a mixture of one or more waxes which can be mixed into the specific cPRM being used; or a conventional wax painting medium). Wax in the cPRM rises to the surface (an effect that is sometimes called a bloom or blooming effect). This can cause the polymer to harden smoothly (as opposed to irregular or pebbly surfaces), it can enable the polymer to cure more fully or to fully cure, and it can prevent the evaporation of monomers. If desired, once the polymer hardens, its wax surface can be further processed as desired, e.g., it can be partially or completely removed, revealing the fully cured or more fully cured polymer underneath, for instance, by abrasive processes (such as sanding or sandblasting), by washing with chemicals (such as isopropyl or methyl alcohol); and/or by surface oxidation (such as by corona discharge, plasma generation or flame treating); etc. Without wax in the cPRM, the polymer might not have cured as fully; it might not be as smooth; it might emit undesirable fumes, or a combination of these. In addition to or instead of wax removal, some or all of an inventive image's surface wax can be buffed, polished, superimposed or a combination of these.

One such stabilizer containing wax which can be used in cPRM to form polymer in this embodiment is Silmar®'s A-111. Methods for its use can be used and adapted for the use of similar stabilizers in PRM. Silmar® recommends that A-111 be added to PRM or cPRM at between 1-2% w/v, to form smooth external polymer surfaces. Prior to using Silmar®'s A-111, it is preferable to shake it up and to warm it (e.g., in hot water) so that it will be thoroughly mixed when it is used. The ingredients in Silmar®'s A-111 (particularly wax), tend to separate, and Silmar®'s A-111 will not work without all of its ingredients. Also, because the Silmar®'s A-111 in PRM is likely to trap air bubbles when it is mixed, brushed or poured, it is often desirable to stir mixtures containing Silmar®'s A-111 and other wax ingredients in a manner which produces the aesthetic desired, e.g., stir slowly to avoid introducing bubbles. According to Silmar®, the wax in their A-111 allows surfaces of the polymer in which it is used to fully cure even though they are exposed to air rather than against a mold or other surface. The wax in Silmar®'s A-111 can also level the polymer's surfaces so that they form smoothly. (Without Silmar®'s A-111, external polymer surfaces exposed to air rather than a mold or other surface, may harden irregularly or pebbly.) Though the wax in Silmar®'s A-111 may make polymer containing it appear cloudy, if desired, it can be buffed or polished to a clear, or a clear and glossy surface. With the addition of Silmar®'s A-111, the polymer fully cures, thus it no longer emits fumes. Silmar®'s A-111 is made of 94-96% Styrene CAS No. 100-42-5. Other examples of stabilizers for use in cPRM in this embodiment are Silmar®'s S-250, Silmar®'s S-250a, Byk®-S 740 and Byk®-S 750 (both made by Byk Chemie), and conventional fine artists wax media.

Wax stabilizers in cPRM (e.g., added directly in cPRM and/or added in cPRM as part of a mixed composition) can prevent or weaken the bond of the cPRM and/or the polymer formed to many kinds superpositions (e.g., superimposed cPRM, paints, glues, other media, etc.). If desired, Silmar®'s A-111 and other such stabilizers can be used for such purposes in inventive images. However, in embodiments, neither Silmar®'s A-111, nor any other wax, any other stabilizer, any other ingredient or any other process used in inventive images are restricted in their use. For instance, if desired, an aesthetic or a structure can be created in an inventive image involving superimposed applications which are not bonded or not completely bonded to polymer surfaces, in which case Silmar®'s A-111 or other such stabilizers might be used to prevent select areas of a polymer surface from bonding to a superimposed application of cPRM or paint. Or, for example, Silmar®'s A-111 or other such stabilizers might be used for aesthetic purposes, such as for lining the interior surfaces of air pockets within polymers inventive image forms. The use of wax and ingredients containing wax as stabilizers in cPRM can also enable desired bonding in inventive images, e.g., as surface preparation stabilizers, for instance, for bonding conventional media containing wax to the polymer image such as encaustics; oil paints with wax ingredients; etc., as described herein.

As another illustration, Byk®-S 740 and Byk®-S 750 both of which contain wax, might be used as stabilizers as desired in cPRM to prevent monomer evaporation without loss of interlaminar adhesion, and to produce a fully cured or a more fully cured polymer which will not emit fumes. Because both Byk®-S 740 and Byk®-S 750 leave the polymer surface with sites that will adhere to the same cPRM and to anything else that bonds to that cPRM, such further applications can be made as desired. Furthermore, because both Byk®-S 740 and Byk®-S 750 also leave the polymer surface with wax sites, the resultant polymer surface can function for bonding purposes (e.g., as a surface preparation stabilizer) bonding or loosely bonding subsequent superpositions to its wax sites as desired (such as encaustic paints; oil paints with wax ingredients; many kinds of colored pencils and pastels which are wax based or which contain wax or combinations of these) as described in herein. As another illustration of this embodiment, Byk®-S 706 might be used in cPRM as desired to produce a polymer with a level surface. For example, Byk®-S 706 might be used in a thin, coating layer of cPRM. If desired, Byk®-S 706, might be used in a polymer along with either Byk®-S 750 or Byk®-S 740. In some embodiments, stabilizers which are leveling agents are used in polymer in inventive images.

The effects of trapped air in polymer may or may not be desired in inventive images. In an embodiment, one or more stabilizers are added into cPRM to release air bubbles, to defoam it or both. In another embodiment, one or more antioxidants are used as stabilizers in inventive images, e.g., to prevent or control yellowing and other discoloration caused by heat.

In an embodiment, one or more products made or sold for use as antiozonants are stabilizers (e.g., antioxidants) in inventive images, e.g., Santoflex 1350PD by Flexsys America LP.

In an embodiment, one or more stabilizers are used in cPRM to alter or control its polymerization process and/or as a processing aid. For example, a stabilizer might be added into cPRM to control its curing time, e.g., to slow it down or to accelerate it. Such a stabilizer might for example be useful as a viscosity modifier for cPRM, e.g., as described herein. For example, ingredients previously listed herein as fillers might be used to alter or control the polymerization process of cPRM.

In an embodiment, one or more stabilizers which affect mar resistance, surface slip, and surface flow are used in images of the present invention. In an embodiment, one or more stabilizers which protect images of the present invention against cracking, checking, the loss of coating integrity or a combination of these (e.g., caused by light exposure, heat exposure or both, which can lead to polymer chain scission or increased crosslinking) are used in images of the present invention. In an embodiment, one or more stabilizers which protect inventive images against other surface degradation such as loss of surface gloss, loss of surface distinctness, loss of visual depth, or a combination of these (e.g., caused by surface erosion, weathering, pitting or a combination of these), are used in inventive images. Examples are stabilizers that protect against changes caused by UV light (such as those listed herein made by Ciba-Geigy), other stabilizers such as Ciba-Geigy's HALS, and combinations of these. In another embodiment, one or more stabilizers which protect inventive images or parts thereof (such as their surfaces), against delamination, peeling, chalking (e.g., pigment washes or rubs off) or other reduced adhesion of the primer or top coat, or a combination of these are used in inventive images.

In an embodiment, one or more stabilizers which maintain flexibility of inventive images or parts thereof are used in inventive images, e.g., Ciba-Geigy's HALS and stabilizers made by Optima described below, monomers which make the resultant polymer more flexible.

Tone@ Monomer EC epsilon-Caprolactone CAS No. 502-44-3 and products derived from epsilon-Caprolactone including Tone@ Polyols, Tone@ Polymers (e.g., poly epsilon-Caprolactone) and modified acrylic monomers (e.g.,Tone® M-100 Monomer Caprolactone Acrylate Monomer), all by Union Carbide Corporation of Danbury CT may be used as monomers, as polymers and/or as stabilizers in making inventive images. For instance, as intermediates and modifiers these products can improve the physical properties of polymers, such as flexibility, impact resistance, durability, and solvent and water resistance.

In some embodiments, one or more plasticizers are used as stabilizers in images of the present invention (e.g., adipate ester, azelate ester, phthalate ester, sebacate ester, trimellitate ester).

In an embodiment, one or more stabilizers which maintain, enhance or maintain and enhance the hardness of inventive images or parts thereof (such as surfaces), are used in inventive images, e.g., Ciba-Geigy's UV light stabilizers, HALS, and combinations of these.

In an embodiment, one or more stabilizers which inhibit and/or protect against organic corrosion in inventive images or parts thereof are used in inventive images. Such stabilizers might for example be used to inhibit corrosion in images in which cPRM is applied over metal substrates or image supports, e.g., such a stabilizer might be added into cPRM applied over steel, copper, brass, or aluminum substrates.

In an embodiment, one or more stabilizers are used in cPRM of the present invention to control shrinkage as it cures. For example, milled fibers might be added into cPRM to control shrinkage. These might be glass fibers in powder or floccular form with different sizings, filament diameters and bulk densities.

In some embodiments, one or more stabilizers used in forming polymer of the present invention are moisture scavengers.

In some embodiments, one or more stabilizers used in forming polymer of the present invention are inhibitors, e.g., free radical inhibitors.

In an embodiment, one or more stabilizers which protect inventive images or parts thereof (such as their surfaces), against other kinds of changes (e.g., loss) in physical properties are used in inventive images. Ciba-Geigy's HALS are examples of such stabilizers. Further examples are milled fibers such as those listed above by Owens Corning which enhance mechanical properties, dimensional stability and heat resistance in polymers of inventive images. Among other examples, are impact modifiers such as Metablen® products by Elf Atochem. For instance, Metablen® C-201 and C-202 are MBS (MMA-Butadiene-Styrene core-shell copolymers) impact modifiers which enhance the strength of the polymer formed. Metablen® C-201 can add a blue fluorescence to the polymer which may also be desirable, C-202 does not have this effect. Metablen® E products are MBS impact modifiers for engineering plastics such as polyesters, polycarbonate, copolyesters, blends and styrenics. As another example, the craze resistance of Lucite® can be imrpoved by adding the cross-linking agent stabilizer glycol dimethacrylate into the monomer. General Electric makes a series of Blendex® modifier resins which can be used as stabilizers in polymer in inventive images.

In an embodiment, one or more adhesion promoters are used as stabilizers in inventive images, e.g., to promote the adhesion of a polymer to a substrate. These are examples called "Adhesion Resins" by Creanova Inc. of Somerset NJ. Adhesion Resin LTH can improve initial and long term adhesion. Both Adhesion Resin LTS and Adhesion Resin 2220 improve the adhesion and flexibility of solvent based coatings.

In many embodiments, one or more stabilizers are added into cPRM or into one of its ingredients such as into its monomer. Such mixtures might for instance, have coloration and/or coloration might be added to them, e.g., pigment, particles, dyes, etc. In embodiments, inventive image parts (e.g., layers, sections, components, etc.), may have the same or different amounts of one or multiple stabilizers as desired. One or more stabilizers may be used consistently or inconsistently, evenly or unevenly throughout an inventive image as desired. One or more parts of an inventive image may not have any stabilizer at all. As an illustration, it is frequently preferable to add one or more stabilizers to the PRM forming the external surface layer or layers of a polymer, whether or not it contains any internal stabilizers. When making such external layers on polymer which do not have any internal stabilizers, or which do not have a significant amount of one or more internal stabilizers, it is sometimes desirable to add one or more stabilizers at a high proportion to the PRM forming the polymer's external surface layer or layers, e.g., this can be preferable when using one or more UV light stabilizers. As an alternate example, the external layers of a polymer can have different percentages of one or more stabilizers, e.g., the percentage of stabilizer or stabilizers used might be highest on the outermost external layer and decrease as the layers move inward. Such methods may also be desirable for use on non-polymeric parts of inventive images.

When applicable, in images of the present invention and in most of their parts, it is often preferable for one or more added stabilizers to be dissolved or dispersed in the material and/or medium used, e.g., in the monomer or PRM used. Examples of exceptions to this general preference are when the material and/or medium (e.g., the PRM) already contain the desired stabilizer or stabilizers; when a stabilizer is a medium; and when impermanence and change are desirable in inventive images or part thereof which do not contain the stabilizer or stabilizers necessary to prevent them from changing over time (e.g., entropy can be desirable in fine art). It is often preferable that stabilizers added to PRM are added before it is put on the mold or other surface (e.g., a polymer surface). If it is preferred that a stabilizer not be visible in an image of the present invention, that its visibility be insignificant in the inventive image or that its visibility be aesthetically desirable in the inventive image. It is generally preferred that undesirable lumps of stabilizer (e.g., dry powdered lumps of it or blobs of it as a thick paste) are broken apart and dispersed or dissolved in the medium and/or material in which it is used (e.g., in PRM), or it is generally preferred that they be removed, along with any visible undesirable foreign matter. In the formation of an inventive images, the concentration of each stabilizer used in a material and/or medium (e.g., in a PRM) is preferably limited by considerations such as: 1). the stabilizer itself in its use (e.g., function and physical properties of the chemical, the location and the process or processes of its use; its stability over time in its use, etc.); 2). the undesirability of any visible changes and effects which each stabilizer might or will add to the inventive image (e.g., the undesirability of any yellow color caused by a stabilizer; any visible lumps of a stabilizer; changes and effects caused by the stabilizer over time; and its interaction with any other stabilizers used); etc. For example, the concentration of one stabilizer in a PRM, or in another material or medium might look undesirably high because it appears yellow 3" deep in a jar prior to its application, but applied in a thin layer on a polymer, this same concentration, may appear colorless, transparent, and thus desirable.

One preferred method for dissolving one or more stabilizers in a material and/or medium (such as in a monomer, in a mixture of monomers, in a PRM or a cPRM, into paints, painting media, binders, e.g., clear acrylics, oil based paints, wax based paints, etc; into other coloration; into coatings and varnishes; into plaster or paper pulp; into a glue or other bonding substance; into various other binders, etc.) is to first make a concentrated-stabilizer-mixture containing one or more stabilizers as desired (e.g., a separate concentrated-stabilizer-mixture can be made for each stabilizer as desired). One preferred method for making such concentrated-stabilizer-mixtures is based on those methods traditionally used to hand grind and mix one or more pigments with oil (and often other ingredients such as fillers), to form oil paint. In the present invention, such methods can be done by hand and/or by machine, as desired. For instance, a concentrated-stabilizer-mixture can be made by using all of the stabilizer or stabilizers, mixed with only a small amount of the total quantity of the material, the medium, or the other substance which the stabilizer is intended to be ultimately added into. (After the concentrated-stabilizer-mixture is made, it will be mixed into the rest of the total quantity of the substance it is intended to be added into.) If desired, the stabilizer or the stabilizers can be ground or ground finely, before and/or while it is mixed. It is preferable to "wet out" the stabilizer or stabilizers, as the concentrated-stabilizer-mixture is mixed and/or ground. A stabilizer which is not thoroughly wet out may be undesirably visible, e.g., as undissolved lumps or blobs. Other ingredients may be added into concentrated-stabilizer-mixtures as desired, e.g., coloration. It is preferable to make the concentrated-stabilizer-mixture in the form of a paste because pastes are often easier to mix, to "wet out" and to grind as desired than liquids. But, it is usually easiest, most effective and thus preferable to add concentrated-stabilizer-mixtures into the larger quantity of the material, medium or other substance, diluted into a liquid form. And when this total mixture is made, it is often preferable to watch out for undesirable air bubbles and make sure that those that occur are released from the mixture as desired, whether the concentrated-stabilizer-mixture is added as a paste or as a liquid.

In an embodiment, a desired effect is created in an inventive image or in part thereof, by using one or more stabilizers in them, unevenly or inconsistently as desired. For example, a medium with no stabilizer, is added into a second quantity of the same medium which contains a dissolved stabilizer. Without mixing them together, or after only mixing them together very slightly, this combination is applied as desired, e.g., poured onto a mold, or painted onto an inventive image surface. For instance, in this example, Silmar®'s A-111 (previously described) might be the stabilizer used. The desired effect might be an inconsistent polymer surface, the irregular pattern of which was determined by chance. Some areas of the polymer's surface may have wax (perhaps some of these will have more wax than others), and other areas may not have wax. It may for example be that the aesthetic of this effect is desired; it may be the structural effect that is desired (e.g., many superimposed applications will bond to one kind of area and not to the other); this effect might be desired for other reasons or combinations of these. As a second illustration, a PRM which contains one or more dissolved stabilizers can be poured into or onto a separate quantity of one or more monomers which contain no stabilizer and then polymerized. In a third illustration, two paints are mixed together with a stabilizer, a third paint has no stabilizer. Using both the mixed paint and the other paint, a painting is created on the surface of a polymer which covers it inconsistently and unevenly. Some areas of this painting have one or the other of these two paints. In some areas of this painting the two paints mixed together to varying extents in the process of their applications. Paint covers over some areas of this painting completely while other areas are unpainted leaving some of the polymer's bare surface visible, which painting may have paint applications in many thicknesses, e.g., it has washes, glazes, impasto and forms of direct painting. In another example, the stabilizer used inconsistently in cPRM is a fiber.

In an embodiment one or more portions of an inventive image may be vulnerable to one or more agents which modify or damage it undesirably or which risk such changes. These portions are shielded from the undesirable agent or agents by some other portion or component of the inventive image. The part or parts the inventive image serving as the shield, may for example, have this capability due to one or more stabilizers. Thus, for example, the shielded portion or portions of the inventive image may require less or no stabilizer pertinent to the particular undesirable agent or agents. For instance, this shielding effect may be possible due to the relative geometric positions of the shielding and the shielded parts of an inventive image, and by their orientation with respect to the source of the undesirable agent or agents. Examples of undesirable agents are: **1**. UV light (UV) which may cause polymer to yellow over time. Since UV exposure can be directional, then after consideration of reflection, diffraction, etc., such a shielding inventive image part may not necessarily completely envelope the inventive image part it is protecting; **2**. Oxygen which might cause discoloration or deterioration of a portion or a component of an inventive image. This agent is not directional. Shielding may be provided by a surrounding element of the inventive image which is impermeable to oxygen, such as one of many plastics. Other coatings might be effective should the post-evaporation material still be fluid closing evaporative pores before the polymerization becomes too viscous (e.g., a polyurathane paint whose solvent evaporates before the liquid mixture polymerizes); **3**. Moisture, which should follow the pattern of oxygen, is, however, more polar than oxygen and typically less reactive, although it does hydrogen bond; **4**. Noxious gases or any other diffusible gases which might harm an inventive image. A protective coating can be found if such protection is needed; **5**. Substances used to clean or care for the inventive image, e.g., such substances which are solvents for use on polymer are preferably limited to those solvents which do not undesirably alter (for example, dissolve, distort or abrade) any polymer used on an inventive image surface; **6**. Any other undesirable agent or agents, e.g., any other undesirable noxious agent.

In an illustration, a layer of linear polymer containing a component which absorbs UV without decomposition or discoloration (thus stabilizes itself to UV) on the external surfaces of an a layer of linear polymer with an UV light stabilizer in it on the external surfaces of an inventive image, could protect both the linear polymer and the deeper parts of the inventive image from undesirable effects which might have otherwise resulted from the inventive image's exposure to UV light.

Among stabilizers often preferred for use in inventive images are **a).** surface preparation stabilizers; **b).** image support stabilizers; **c).** radiation stabilizers that initiate and/or aid polymerization; **d).** strengthening stabilizers (such as a fiber stabilizer or a wire mesh stabilizer); **e).** color stabilizers (such as those which reduce or eliminate discoloration of polymer, e.g., an ultra violet light stabilizer, an ultra violet light absorber, or a Hindered Amine Light Stabilizer HALS); **f).** stabilizers which are conventional paints, sizes or primers; binders used in conventional image making media or materials; conventional media for painting; wax or compositions containing wax, or a combination of these, that are mixed into cPRM (typically in amounts from about 0.4% to 40% by volume, of the total volume of the cPRM), which form or fortify the bond between the polymer and one or more superpositions made upon it; **g).** stabilizers which are ingredients added to applications made on polymer inventive images (typically in amounts from about 0.4% to 40%, by volume, but more preferably in amounts from about 0.4% to 25%, by volume of the application's total volume), to cause or enhance the bond between that application and the polymer inventive image; and/or to further cure or fully cure the polymer inventive image onto which it is applied; **h).** stabilizers which aid in processing polymer using conventional practices; and **i).** an antioxidant, defoamer or bubble removing stabilizer; **j).** a stabilizer that protects against changes in physical properties, and/or enhances physical or mechanical properties, dimensional stability or heat resistance of polymer inventive images (such as a stabilizer which protects against delamination, peeling, chalking, other reduced adhesion of the primer or top coat, cracking, checking, the loss of coating integrity, loss of surface gloss, loss of surface distinctness, loss of visual depth, or other surface degradation; a stabilizer which affects mar resistance, surface slip, and/or surface flow; an impact modifier stabilizer; a stabilizer which is a plasticizer or which maintains and/or enhances polymer flexibility and/or a stabilizer which maintains and/or enhances polymer hardness, etc.); **k).** a stabilizer in an external polymer layer that is an ingredient added to cPRM to cause surfaces of the cPRM exposed to air during the polymerization reaction to form smoothly and/or to promote the complete curing of the cPRM; **l).** a stabilizer in an external polymer layer superimposed upon an incompletely cured polymer surface which further cures or fully cures it, yet which enables that polymer surface to remain external or mostly external to the image; **m).** a stabilizer in an external polymer layer which is a leveling agent; **n).** a stabilizer in an external polymer layer which is a cPRM viscosity modifier or associative thickener; and **o)**. combinations of these. In addition, conventional polymer image making media (such as acrylic and vinyl paints and gels) are often preferred for use in or as surface preparation stabilizers and image support stabilizers in inventive images. **Further Description of Polymerization and Image Making** It is generally preferred that active ingredients used to make polymer in images of the present invention, are used according to the recommendations and specifications of their respective manufacturers (e.g., available in their technical data or by contacting them), however there are exceptions, some of which are described herein. When active ingredients in a cPRM used to form polymer are not used according to the recommendations and specifications of their manufacturers, uncontrollable, irreversible, structural, or aesthetic risks, effects, problems or combinations of these are possible. Examples are: a). weak polymer; b). excessive polymerization heat (e.g., this can liquefy an oil formulated clay mold, temporary barriers subdividing a mold and release agents used on a mold; it can also cause cracks in polymer, and other problems and risks); c). distortion of the polymer (e.g., excessive shrinkage of the polymer, or the polymer curves more than its mold, it may for instance, rise up from its mold); d). cracking and/or crazing in the polymer; e) a very slow polymerization; f). discoloration of the polymer; g). combinations of these, etc. Specific risks, effects and problems which might occur with the use of specific active ingredients in a specific cPRM used in a specific process, under specific conditions, vary, and this variance can be significant. These risks, effects and problems may or may not be desirable in specific inventive images.

Typically when forming polymers using cPRM with more than one monomer, more than one catalyst or both, it is desirable to consider the recommendations and specifications of the manufacturers of all the specific products which are active ingredients. Of prime concern is the cross compatibility of the various monomers and their respective catalysts. In this regard, it can be desirable to consult the manufacturers of the specific products used as the active ingredients in cPRM, or an expert.

If desired, one or more hypodermic syringes can be used as a volumetric measuring devices to make images of the present invention. For instance, for exactly measuring small quantities of catalyst, e.g., glass hypodermic syringes and long spinal needles are often most preferred. If desired, this can be used to control the polymerization process as desired, e.g., to control polymerization heat.

In a preferred embodiment, VIMC such as: variability in the use of active ingredients in cPRM, variability in the polymerization process and the mold or other surface, variability in the conditions under which a polymer is polymerized, or combinations of these, are used to form and control, or to try to form and control, desired and/or experimental effects in polymer images of the present invention. Some of the effects and some of the polymers formed in this way would be more difficult or impossible to form in other ways. For example, the selection of the specific products used as active ingredients in a cPRM and their proportions, and the process of creation used can often be used to control and affect the polymerization process and the resultant polymer. Further examples of variables which can often be used to affect and control the polymer formed are: the thickness of applications of cPRM; and the temperature, humidity and air movement (or current) surrounding cPRM, one or more stabilizers, etc. For instance, image makers might intentionally add one or more of the appropriate catalysts to a PRM at or close to the minimum proportion recommended by their manufacturers and/or by a scientist, in order to slow down the polymerization process and/or in order to reduce the polymerization heat. This might be desired, for example, to allow more time to make changes to the polymer during its gelation, such as to carefully carve the gelled polymer, refer to further examples. Further, this might be desired: to avoid undesirable effects or risks caused by the heat of polymerization (such as undesirable effects to the mold); to avoid undesirable effects or risks to non-polymeric ingredients (such as problems with attached, embedded, and inlaid materials), etc. As another example, by adding one or more of the appropriate catalysts to the PRM, at or near the maximum proportion recommended by their manufacturers or a polymer chemist, the polymerization process can be intentionally accelerated and/or the heat of polymerization can be intentionally increased. This might be desirable, for example, so that a thin layer of cPRM painted onto an surface which is not horizontal (e.g., a slope on an undulating surface), may better hold its shape during polymerization, (e.g., puddling and hardening at the base of the slope onto which it was evenly applied). As molds, active ingredients, cPRM , processes of creating inventive images, aesthetic preferences, and other variables differ in the formation of polymer which can affect polymerization, the risks, effects and problems that occur in making inventive images can differ too. Thus, it is preferable to tailor the process of forming polymer accordingly and to use the VIMC in order to produce polymer as desired each time.

Polymerization reactions can be strongly exothermic. It is generally preferable to carry out polymerization reactions for forming polymer in processes and/or in conditions wherein the heat released is dissipated. In addition, it is preferred that the cPRM is neither heated (e.g., by a heat lamp or a heater), nor surrounded by cold (e.g., in snow). It is preferable to make the cPRM and allow it to polymerize at a temperature sufficiently low, so that if the polymerization reaction gives off significant heat, the reaction's rise in the temperature will not be great enough to affect the polymer formed or any other aspect of the image of the present invention undesirably, e.g., distorting or discoloring the polymer. In this example and in other exceptions to the aforementioned preference, polymerization reactions might be carried out in processes and/or in conditions wherein the heat they release may not, or can not be effectively dissipated.

Many problems in forming desirable polymer are due to an excessive exotherm. Examples of common causes of an excessive exotherm are: a). a cPRM that is too thick; b). applying cPRM onto cPRM which is emitting heat, or applying it onto anything else which is hot, heated, emitting heat or carrying heat; c). using too much catalyst in the PRM; d). heat in the cPRM's environment that overheats it, (such as hot sunshine outdoors in the summer); and f). combinations of these. A polymer formed in a polymerization process that gets too hot may have an unintended, irreversible colored tint (e.g., amber or pink). During hot polymerizations, polymers can shrink away from their molds. Although this shrinkage can be slight and unnoticeable, it can also range to the opposite extreme so that it is dramatic, changing the resultant polymer's general shape and form so that it is noticeably different from the negative space of the mold in which it was formed (e.g., usually it develops more extreme curves).

Heat from an applied layer of cPRM can accelerate the polymerization reaction of a superimposed layer of cPRM. Thus, when forming multiple superimposed layers of polymer, it is generally preferable to allow each layer formed to reach the gelation stage of its polymerization, preferably to such an extent that it has substantially released any noticeable excessive exotherm heat from its polymerization reaction, and preferably to such an extent that it is firm enough to maintain its own form as desired, before superimposing a subsequent layer of cPRM on it. In a preferred embodiment, thin layers of cPRM are partially or entirely superimposed, on a mold or other surface such as upon a polymer, e.g., by painting cPRM with an ordinary paint brush. As may layers as desired are superimposed to make polymer that is 2D or 3D. For instance, after the polymerization reaction of the first layer applied has substantially released any noticeable heat and this heat dissipates, and after this polymerizing layer has gelled firmly enough to maintain its own form as desired, a new layer of cPRM is applied thinly, partially or entirely over it. In another preferred embodiment, layers of cPRM are superimposed in varying thickness on a mold or other surface, e.g., in poured and/or painted applications. As many layers as desired are superimposed to make polymer that is 2D or 3D. For example, after any heat from the polymerization reaction of each applied layer is substantially released and dissipated, and after each superimposed layer gels firmly enough to maintain its own form, another layer of cPRM can be applied partially or entirely over it.

Often, images of the present invention are formed in layers and/or in parts with or without one or more non-polymeric ingredients. In some of these embodiments, two or more layers and/or parts are made using two or more different polymers. For example, in one embodiment, a surface preparation stabilizer is used on polymer which is comprised of a mixed polymer. This mixed polymer surface preparation stabilizer might then be superimposed by one or more polymers that bond to it, the composition or compositions of which are different from that of polymer beneath the surface preparation stabilizer. Such a mixed polymer surface preparation stabilizer might one or more different polymers with which it is in direct physical contact. This embodiment might, for example, be preferable when it is desirable to strengthen the mechanical bond and/or the chemical bond between inventive image layers and/or parts which include different polymers. This embodiment might, for example, be preferable when strength, and/or permanence are important in an inventive image made of multiple different polymers with significant differences in their coefficients of thermal expansion.

If desired in some embodiments, the thickness of a polymer or part thereof can typically be evened out and/or made uneven as desired in numerous ways, at any time in the formation of an image of the present invention, e.g., by using polymer and/or non-polymeric ingredients. Examples of methods are described herein, such as by the removal of polymer, attachments, embedding, fiber, etc.

Often, prior to resuming work on premade polymer surfaces and often non-polymeric surfaces as well, it is preferable to abrade their surfaces, such as when premade polymers are further developed and/or reworked, and particularly when one or more materials, media, objects, devices, processes, interactions, or their combinations are superimposed, or connected to premade polymer surfaces. If a premade polymer is already abraded on its surface area or areas of direct contact, it is preferable to reabrade it prior to resuming work. But, if an old polymer has been abraded recently on its surface area or areas of direct contact, reabrading is not necessary, although if desired it may still be done, e.g., to make sure that a new application bonds as strongly and as permanently to it as possible. For example, it is preferable to abrade old polymer surfaces prior to superimposing applications of one or more materials and/or media, such as cPRM and/or paints. Abrading may also be done for aesthetic reasons, e.g., sanding and sandblasting.

In one embodiment, methods are used to make polymer surfaces which will not or may not cure evenly, smoothly, regularly or levelly, or as much so as desired, come out in such a way. Among these methods are examples which also effectively prevent incompletely cured polymer surfaces from forming, and/or which effectively rework incompletely cured polymer surfaces so that they become further or completely cured. For instance, a stabilizer can be added to cPRM to form a level layer of polymer that is well cured e.g., a stabilizer such as a wax or an ingredient containing wax like Silmar®'s A-111, Byk S 740, or Byk®-S 750. Further methods of this embodiment use stabilizers in cPRM, such as Byk®-S 706, which form smooth, even and level surfaces as desired. In addition, methods of removing matter from a polymer surface can be used to make an uneven, irregular, or pebbly surface as even, as regular, and as level as desired (eg., sanding, sandblasting, altering the polymer during its gelation), etc. An additional exampleincludes superimposing polymer surfaces so that they become as smooth, as even, and as level as desired, e.g., new applications of cPRM, and/or non-polymeric materials, media, attachments, parts, layers, etc., such as paints, sheets of metal, paper and/or polymer, etc. There are also methods of altering a polymer during its gelation which can be used to smooth, even out or level its surface. For instance, placing something flat on a gelled polymer surface can level it, and removing a gelled polymer from its mold or other surface and placing it on something level or smooth is likely to level or smooth it, though the extent it changes depends on the particular specifications in each circumstance.

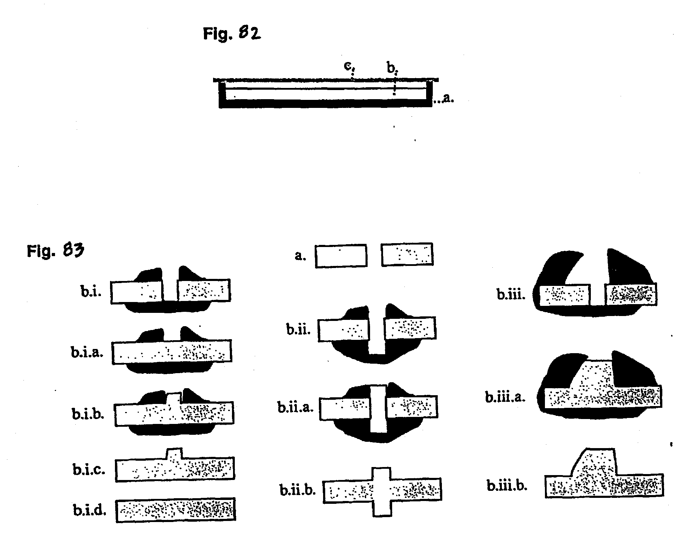

A preferred method for use in this embodiment to form polymer with smooth, even, level surfaces, is to prop a "roof" over the cPRM, leaving only a small closed air (gaseous) space above its surface. The "roof" may be made of simple cardboard, aluminum (either a sheet or a foil), Saran Wrap (made by Dow Chemical Company, Dow Brands L.P., Indianapolis, IN), glass, wood, etc. The support of this "roof" is not limited to any particular structure, so long as the volume of the enclosed air space remains small. In addition, the better insulation that the "roof" provides to the cPRM, the more fully the polymer will cure, the hotter it will get and the faster its polymerization reaction will be. For example, cardboard and materials made to be used for insulation are preferable for making such a "roof". If desired, an image maker may allow this "roof" to actually contact the surface of the cPRM, e.g., sag into the cPRM, or the effects of the polymerization process might cause an application on the "roof" (such as a paint or ink), to drip into the cPRM, for example, for a desired aesthetic effect. As an illustration of this method, Fig. 82. shows cPRM, identified as b., in a mold identified as a., covered with a "roof" identified as c., which could for example be made of cardboard. This "roof" is shown held up from the upper surface of the cPRM by the mold's side edges, leaving a small air pocket between the "roof" and the polymerizing surface. The sides walls of this mold could be permanent parts of this mold or they could be temporary walls attached to a mold surface, e.g., temporary clay walls. As another variation (not shown in this illustration) instead of this application of cPRM being on a mold's surface, it could be on the inventive image surface. For example, an application of cPRM on the inventive image surface could have temporary walls surrounding it, holding up a "roof" just as the side walls in Fig. 82. hold up a "roof" with an air pocket between that "roof" and the surface of the cPRM. Then the polymer inventive image formed would be typically smooth.

In some embodiments, it is preferable to form an image of the present invention in a process or in processes that are different from the recommendations and specifications of the manufacturer or manufacturers of one or more of its ingredients and/or others with the appropriate expertise. Due to the workability, reworkability, control, versatility, WYSIWYG processes, and freedom offered by the present invention, an extreme polymer undulation may be formed, if the catalyst or catalysts are used in their cPRM at a percentage higher than that which is recommended. Moreover, once the first layer of this hot cPRM gels, if it does not show any undesirable effects (such as undesirable crazing and cracking), it may be desirable to increase the heat around it (e.g., by placing one or more heat lamps over the polymerizing form), to try to get the polymer form a more extreme undulation.

In another embodiment, desired changes are made to a polymer during the gelation stage of its polymerization process, e.g., for structural, functional, and/or aesthetic purposes, etc. For instance, desired changes are made which could not be comparably made, or would have been significantly more difficult to make prior to, or after the gelation stage of its polymerization. The methods for modifying polymer during gelation can vary greatly; the nature of the changes which can be made can vary greatly; and the magnitude of the affect of changes made during gelation on the polymer formed can vary greatly too. For example,a gelled polymer might be altered by changing its support; by adding or changing weight or surfaces resting on and against it; or by changing its position with respect to its support, e.g., by tilting it or by rotating it in its mold. More specifically, weights can be placed on gelled cPRM to make concave indentations on the polymer surface. A planar gelled application of cPRM can be taken out of its mold and flipped over onto a different surface, thus, for instance, the side of this polymer which was exposed to the open air, might harden against a surface which will give it texture, and the resulting polymer could have two textured sides rather than only one. Or, the mother mold or part thereof can be removed from underneath a mold containing gelled cPRM. Consequently, the mold's form might sag, and the gelled cPRM might changes accordingly, hardening in this new altered form. In another example, a gelled polymer is lifted up from its mold or off of it, while its mold or part thereof are altered or replaced. For instance, some of this mold's surface might be altered using additive and/or subtractive processes (e.g., changing its texture, design, undulations, perimeter shape, or edges. For instance, some of this mold's surface might be removed (e.g., by incising, cutting or carving it), and/or things, such as clay, wood, objects, etc., might be positioned between this mold's surface and its mother mold. Then, the gelled cPRM which has been off of this mold surface, is put back upon it, e.g., in its original position, or in a different position (for instance, tilted, bent, curved, rotated or even flipped over) where the polymer may harden in a different form than it would have on its original mold. Further examples of this embodiment, are cutting and/or carving polymer as desired while it is gelled e.g., using a sharp knife. Texture, a design, a drawing, a negative cut out shape, a structural change, or a hole for another part to fit into are among the changes which it might be made this way. Sticking things into and onto gelled polymer are ways of making attachments, inlays, connecting parts, adding coloration, and other elements to inventive images.

In further embodiments, a design, a drawing or part thereof, can be incised in the soft polymer surface of a part of an image of the present invention, which has not yet fully cured. In a second example, particles are stuck into a soft polymer surface on an inventive image or on part thereof, for the desired aesthetic effect they contribute, e.g., a burnisher is used to press and rub dry iridescent mica pigment into a soft, uncured polymer surface that has been rubbed with the appropriate solvent so that it becomes more sticky. Or in another example, desirable scratches and cracks might be made on and in, the uncured polymer inventive image surface when it is moved, transported, dropped, or slid along the floor.

In some embodiments, images of the present invention or part thereof (e.g., layers, coatings, parts, etc.) are formed using one or more sprayed applications, e.g. applied on images of the present invention or part thereof, on cPRM (such as gelled cPRM), on a mold, or a combination of these. For example, cPRMs, paints, inks, solutions, waxes such as wax media, oils such as linseed, solvents, other liquids, and combinations of these might be sprayed on polymeric or non-polymeric surfaces of inventive images, or on molds in forming inventive images in one or more thick or thin applications. Examples of devices which might be used to make such sprayed applications are: pump sprays, air brushes (such as those conventionally used for image making) atomizers, or even spray cans which also contain a propellant which is a gas at room temperature (like a spray paint).

In some embodiments, paper that is covered with cPRM becomes more transparent and/or translucent. For example, applications of cPRM might be sprayed onto paper, in one or more layers. As an illustration, drawing and/or painting is done on a cotton paper initial image support using conventional practices, e.g. watercolors. Then 17 layers of a cPRM which is acrylic or predominately acrylic are applied onto this image, some of which are colored and many of which are sprayed. The inventive image may be finished, but if not, it is then further processed as desired. For instance, a drawing might be incised in it, and/or more cPRM might be added to it.

Heat is used in some embodiments to form, process or rework one or more linear polymers in inventive images. Different linear polymers may require different degrees of heat to soften as desired or to melt as desired. There are conventional practices for the design and production of products which are not images using heat with linear polymers, any or all of which can be used to make images of the present invention. For example, linear polymer particles (e.g., linear polymer in the form of pellets, beads or powder) might be heated and put into a mold or onto the surface of an inventive image. In another example, a sheet of a linear polymer (such as a sheet of acrylic), is processed with heat, for example, it is slumped into a mold underneath it in order to change its shape, and/or its surface is altered while it is hot (e.g., one or more attachments are made to it while it is hot, or it is incised). Or, for example, once a linear polymer is softened with heat, it is put into a mold. In a further example, a hot blow gun or a hot hair drier is used to bend a linear polymer rod to form an inventive image. As another example, heat might be used to form or rework linear polymer in an inventive image or part thereof, using conventional practices. As further illustrations, in forming or reworking inventive images, linear polymer softened by heat, liquified using heat, or both, may be put onto an inventive image surface, a mold, or both.

In a further illustration, the use of heat provides ways to add one or more ingredients to linear polymer in forming or reworking inventive images or parts thereof. These are examples. One or more ingredients might be mixed or slightly mixed into heated linear polymer, e.g., heterogeneously or homogeneously. A linear polymer surface might be heated, so that it will bond or bond more strongly to one or more superimposed parts, attachments, particles, applications, concentrated mixtures, or a combination of these, optionally to make bonding spots. One or more ingredients might for example, be stuck onto a heated linear polymer inventive image surface, they might be attached to sticky heated SSI and/or attached to dry SSI made using heat. Heated polymer is preferably allowed to cool and harden once the heat is no longer needed. Such an embodiment might be used to add one or more stabilizers, coloration, light effects, fillers, texture, or a combination of these to an inventive image, e.g., adding pigment, particles of mica or glass, pieces of silver leaf or wire, cut-outs, etc. Heat might be used to embed or inlay in linear polymer in an inventive image or part thereof and/or to make superpositions or attachments to it (e.g., applications, attached parts, layers, collaged elements, etc). Such an embodiment might be used to add an UV light stabilizer to the surface of an inventive image e.g., to Plexiglas® V920-100 made by Elf Atochem North America Inc. Such an embodiment might also or alternately be used to a bond a fiber stabilizer to a linear polymer inventive image, or to coat or seal an inventive image.

Heat might also be used with one or more polymers to add a wide range of surface preparation stabilizers to inventive images, e.g., by making SSI or bonding spots or layers such as those made of linear polymers, mixed polymers, fiber, absorbent media and materials, etc. In further examples, heat can be used to process a polymer image of the present invention or parts thereof in other ways. For instance, heat might be used to incise or carve a polymer image of the present invention surface, e.g., for sgraffito; texture, drawing, writing, or a relief; to alter the ability to see through the polymer, to alter the light that passes through the polymer; to make small surface irregularities, or large surface irregularities; to change the shape or form of the polymer; to change its color, for printmaking purposes such as for use as a printing plate (refer to further description herein), to inlay in the polymer, etc.

In some embodiments, one or more polymers in an inventive image or part thereof is formed and/or reworked using one or more appropriate solvents. For example, a linear polymer partially or entirely softened or dissolved by an appropriate solvent is useful in making inventive images, e.g., for making parts, layers, attachments, surface preparation stabilizers, entire inventive images, bonding substances, bonding spots, bonding surfaces (such as sticky surfaces), etc. Different solvents can affect different polymers differently, e.g., one solvent may have a stronger effect than another on a particular linear polymer. (MEK or methyl ethyl ketone is more volatile and much more stable than MEKP or methyl ethyl ketone peroxide. Moreover, the peroxide is usually used to initiate polymerization.) Conventional practices for use of solvents with polymers are useful in these embodiments. For example, to form or rework an inventive image, or part thereof (such as its surface), a solution can be made in a desired viscosity, using a polymer and a solvent appropriate for that polymer. For example, polymer particles (e.g., in the form of pellets, beads or powder) might be partially or entirely dissolved and/or softened in a solvent appropriate for that polymer, and then put into a mold or onto the surface of an inventive image. In another example, softening the surface of a polymer with an appropriate solvent enables it to be altered, e.g., using one or more subtractive and/or additive processes. Such a mixture might also serve as a bonding substance in an inventive image, for instance in a continuous application or applied as bonding spots, e.g., to adhere one or more attachments, such as layers, applications, particles, parts, collaged elements, or a combination of these. One or more ingredients (e.g., in the form of parts, attachments, particles, applications or layers) might be bonded to a linear polymer surface that has been softened or made sticky by an appropriate solvent, or which has SSI formed by softening the linear polymer surface with an appropriate solvent. In more specific examples, methylene chloride, or methyl ethyl ketone (MEK), preferably doped with a polymer, might be used to bond polyacrylic image pieces of the present invention together. One or more solvents might be used with polymer to embed or inlay in an inventive image or part thereof, preferably with attention to the shrinkage of the embedding polymer when the solvent diffuses out. One or more solvents might be used with polymer to add one or more stabilizers, coloration, light effects, texture, or a combination of these to an inventive image, e.g., to add pigment, particles of mica or glass, refractive inlays, pieces of silver leaf or wire, cut-outs, etc. One or more solvents might be used with polymer to add a UV light stabilizer, fiber or both. If desired and if applicable, in these embodiments, ingredients might be added to linear polymer using one or more appropriate solvents in concentrated-mixtures similar to those described herein. One or more appropriate solvents might also be used with one or more linear polymers to add a wide range of surface preparation stabilizers to inventive images, e.g., by making SSI, bonding spots or layers. One or more appropriate solvents can also be used to further process linear polymer inventive images or parts thereof in other ways, e.g., to etch, incise or carve a linear polymer surfaces, such as for sgraffito, texture, relief, to draw, to write, to alter the ability to see through the linear polymer, to alter the path of the light that passes through the linear polymer, to form small surface irregularities and/or large surface irregularities, to change the shape or form of the linear polymer, to change its color, for printmaking purposes such as for use as a printing plate, etc.

In a further illustration, a solution made by dissolving one or more linear polymers in an appropriate solvent, might be sprayed onto an image of the present invention, a mold or both, as desired. If desired, such a solution might also contain other ingredients, such as an UV light stabilizer, a matting agent (e.g., silica), a dye, or a combination of these. The solution might, for example, be sprayed in one or multiple layers, evenly or unevenly, e.g., making shapes, or lines of drawing on the image of the present invention, etc. If desired, sprayed applications of such solutions may be further processed as desired, e.g., using additive and/or subtractive processes for example, they may be superimposed by additional layers of the same linear polymer, perhaps applied using a different method (for instance, applied with a paint brush); they may be superimposed by one or more other applications, parts, or attachments made of one or more different compositions; they may be incised (such as for sgraffito, drawing, or writing), etc. Thus sprayed applications on polymer can be surface preparation stabilizers.

In some embodiments, one or more polymers are superimposed onto an inventive image surface made of a different composition, with or without additional ingredients in it, e.g., as a surface preparation stabilizer. For example, such a superposition might be made on an inventive image using heat, using one or more solvents which are appropriate for that or each particular linear polymer, it might be done using a bonding agent (such as screws, string, wire, a bonding substance, etc.), it might be done using interlocking forms, gravity, other methods, or a combination of these. As an illustration, poly-methylmethacrylate mixture is applied on an inventive image surface made of a different composition, e.g., in the form of a powder, flakes, pellets or pieces can be partially or fully dissolved in methyl ethyl keytone (MEK). This mixture can then be applied on part or all of the surface of an inventive image made of a different composition as desired, e.g., it might be painted or poured onto an inventive image surface, such as onto cotton paper, or a fabric. But, if desired, before applying such a solution onto an inventive image surface, one or more additional ingredients can be added into it (whether or not they dissolve in it), e.g, one or more stabilizers, sources of coloration, sources of light effects, or a combination of these. In addition or instead, one or more ingredients might be added into such a solution which will enable it to bond or to bond more strongly to the inventive image surface upon which it will be applied and/or to one or more superpositions made upon it. As a more specific example, MEKP might be mixed into this mixture comprised of poly-methylmethacrylate and MEK. If desired, one or more other ingredients might be added, e.g., pigment, colored particles, reflective particles, an UV light stabilizer, a matting agent (such as silica) or a combination of these. The resultant mixture can then applied onto an incompletely cured polymer inventive image surface, e.g., the mixture is applied onto a polyester surface left incompletely polymerized because of the evaporation of MEKP during its polymerization. This mixture might be applied using a paint brush, sprayed or both, e.g., thinly. If desired, heat can then be used to work or rework this application as desired, e.g., using a device that blows hot air on it, this application can be smoothed, incised or both. In addition or instead, the bond between this image's incompletely cured surface and its superimposed polymer application might have been enabled or fortified by other means, for example: **1).** by one or more ingredients (e.g. a stabilizer) added into the superimposed application or part thereof; or added on and/or in the incompletely cured image's surface or part thereof; and/or **2).** by one or more other alterations of the incompletely cured image's surface or part thereof, e.g., SSI. If desired, the image can then be further processed, as desired.

When cPRM leaks or runs past the area or the barriers provided for it to polymerize within, the cPRM that leaked or ran is referred to herein as seepage, even after it has hardened to polymer. Seepage may or may not be desired as part of inventive images. Seepage often polymerizes between the polymer and its mold, bonding to the polymer as a raised, irregular, fragmented, second impression of the mold. Seepage frequently changes the texture and overall shape of polymer. In forming polymer, seepage can occur in a variety of different circumstances. For example, seepage can occur when pouring cPRM more than once onto the same surface, for instance in thickening a polymer or part thereof, and in the formation of a polymer tier layer on a polymer layer. Seepage can occur when adding cPRM onto any inventive image surface or part thereof which is not horizontal, (e.g., side edges). Seepage can occur if the mold leaks, if a clay wall is poorly sealed, if there is a hole or a crack in the polymer or other surface, or when adding more cPRM on polymer loose in its mold, e.g., a gelled or hardened polymer. Should a polymer have seepage, it can be accepted, limited, removed or a combination of these. Fully controlling seepage during polymerization without undesirably risking or altering the expected formation of the polymer inventive image is difficult, yet by using VIMC, seepage is often easy to limit. Methods and ingredients in cPRM which increase the viscosity of cPRM can also be used to reduce or try to eliminate seepage, e.g., the use of stabilizers in cPRM which increase its viscosity such as viscous monomers, fumed silicas, and others. Another strategy using the VIMC is to restrict seepage time by catalyzing the PRM with a high percentage of catalyst (though catalyzing too hot can be risky). Making polymer without a release agent on the mold can result in less seepage, but it may also shorten the life of the mold too, especially if it is done repeatedly (e.g., rubber molds can dry out and tear). Other processes for forming, reworking and controlling inventive images (e.g., removing undesirable matter) might be used as desired for avoiding, limiting, correcting, altering, or removing seepage. Sometimes it is effective and desirable to pull, break, carve, chisel, sand, or cut seepage or one or more portions of seepage off of an inventive image. Processes used to form polymer can be used to control or affect the polymer formed, as desired, or to try to accomplish these goals. Examples are the use of differently designed molds (e.g., enclosed molds), the use of tiered processes of layering polymer, and using of other VIMC.

In an embodiment, inventive images are made in tiered layers and/or tiered parts. Tiered methods are preferred for adding cPRM to surfaces which change in level such that a single layer of the cPRM may not entirely cover them without applying thicker than desired in a certain part or parts of the application. For example, tiered processes might be preferred to form polymer on a surface with undulations too great for a single layer of the cPRM to fully or evenly cover, e.g., cPRM would run off of the slopes of such surfaces and harden in thick puddles in its valleys. As another example, methods of making polymers using tiered layers are also preferred for the formation of angled polymers. Polymer can be formed in tiers on any mold, or other surface or on part thereof, e.g., on polymer or non-polymeric inventive image surfaces. The capabilities of different monomers, catalysts, PRM and cPRM can differ (e.g., with one particular cPRM, undulations greater than about three inches over a 12" square surface would be too great to cover fully or evenly in a single layer of cPRM). Frequently, temporary walls or barriers are desirable for use in making polymer in tiered layers, oil formulated clay walls are especially preferred.

In an illustration of one of the preferred methods for forming a polymer in tiers, an image maker can: apply cPRM to the lowest levels of the surface first - its valleys, thickly enough to completely cover said surface's lowest valleys; use multiple layers if necessary to achieve the thickness, the strength and the permanence desired; and after polymer forms as desired on these lowest surface valleys, move upwards on the mold or other surface, forming polymer in increasingly higher tiered layers, each of which slightly overlaps the polymer tier layer lower than it, creating an overlapping connecting seam as it polymerizes. It is preferable to use clay to wall off the boundaries of each overlapping tier layer formed, so that the new cPRM inside of it does not run down onto lower tiers. Thus the boundaries (e.g., clay walls), within which polymer tier layers are formed from the second level of tiered layers on up, contain both part of the lower polymer tier (which will bond to the new polymer formed, joining the lower tier to the higher tiers), and a new area of the mold or other surface which is higher than the level of the previous polymer tier. Tilting the mold or other surface often enables polymer to form more evenly so that the resultant polymer will be as even in its thickness as possible.

It is preferable to remove clay walls during gelation as soon as the gelled cPRM is firm enough to maintain its own form without its clay walls. Polymer tier edges usually polymerize looking like steps down from the high to the low polymerized tier layers. If this aesthetic is desirable, leave these. Once a tiered polymer is made as desired, it can be the completed inventive image if desired. Or it can be further processed as desired. For example, if desired, a tiered inventive image can be thickened or painted as desired. Fiber can be added to it if desired, whether its surface remains staggered, or whether its tier edges are tapered to make its surface as continuous and as smooth as desired. Tapering tier edges so that they become continuous and smooth can make the applications (such as fiber; attachments; and connections to other parts) easier. It can also change the polymer's use of light and shadow, color, and other formal elements.

Seepage occurs frequently when forming polymer in tiers, e.g., because lower tiers which are curing or which have cured become or are loose in their molds as higher tiers form, e.g., due to shrinkage of polymer as it cures. When a new polymer layer is formed on top of polymer which is loose in its mold, some of its cPRM can seepage down between a lower polymer tier, and the mold. Tiered polymer often have holes and other areas which were not formed in their first polymer layer which can result in seepage These can be reworked and controlled as desired, e.g., filled or reformed.

In some embodiments, cPRM and/or polymer are used in a subordinate and/or supportive way, to assist and/or to fortify parts of images of the present invention made of other compositions. For example, non-polymeric inventive image parts can be made with cPRM on them, within them (e.g., embedded within them perhaps in a hollow interior space within them), mixed into them (e.g., a part comprised of paper pulp or papier maché can be made with cPRM in it), or a combination of these, as desired. Examples of reasons to add cPRM to non-polymeric inventive image parts are: 1). for making bonds and fortifying bonds, e.g., to connect parts, layers, etc.; 2). to give them a desired aesthetic (such as: to make a texture or to smooth out a texture, to make attachments like collage; to give them coloration, a layer of transparency, a shape, a form or a combination of these); 3). to form, enhance or reinforce their structure, their strength and their permanence (e.g., stiffening them or making them rigid, or sealing them for instance with a stabilizer in the coating); 4). to bond them to rest of the inventive image or to another part thereof, as desired; 5). to enable them to be further processed in a desired manner. For instance, with a coating of cPRM, a sheet of paper can be carved, but without the cPRM, it is not possible to carve a sheet of paper.); 6). for a combination of these reasons.

### Further Description of Coloration, Bonds & Stabilizers

Many images of the present invention are colored. Furthermore, many images of the present invention are made for their unique use of color, e.g., for their unique use of coloration with real light and real (rather than illusionary) spatial depth. The use coloration in conventional images is often limited, problematic and burdened by undesirable issues such as: 1). the permanent use of transparent, translucent and see-through color or combinations of these; 2). layering color; 3). the use various specific conventional practices for coloration; 4). the use of color with real variable spatial depth; 5). the use of color with light, e.g. real light and special effects of light; and 6). the strength and permanence of color applications. In comparison, the use of color in images of the present invention and particularly in polymer is remarkably varied, versatile, workable, reworkable and controllable as desired. Further, it is often reversible, e.g., color can easily be sanded or sandblasted off, a colored section of a polymer can be removed (for instance, cut out), and removed color can be reworked and controlled as desired (for instance, reapplied). It is desirable to consider the reversibility and the workability, reworkability and controllability which may be needed and desired in the use of color in an inventive image when selecting the method or methods of its use.

There are innumerable ways of using of color in images of the present invention. For example, all kinds of coloration can be used in almost any method and manner within and/or on inventive images. Pigments, dyes and other coloration can be used as part of polymer in any form or in multiple forms, e.g., dry powders, liquids, pastes, materials, media, particles, objects, devices, other forms of coloration, and combinations of these. Examples of means by which coloration is part of an inventive image are, by embedding, attaching, or inlaying it in polymer; by painting, drawing, or printing, (e.g., with oil paints, acrylics and other water based media, enamel paints, wax based paints and crayons, inks, chalks, pastels, graphite, etc.); coloration that is put in cPRM; by the addition of photographs and transparencies to their polymeric or non-polymeric surfaces; the use of one or more non-polymeric ingredients in inventive images; combinations of these, etc. Dyes and pigments used in inventive images are preferably compatible with the rest of the formulation that they are used in (e.g., compatible with the vehicle such as the PRM and other additives). Coloration is made and sold specifically for use in PRM or cPRM, e.g., in paste mixtures, which can be used in inventive images as desired. Coloration can be brought to an inventive image which is formless until it is applied, e.g., paints. Or, coloration can be brought to an inventive image in a defined form (though its defined shape or form might change as and/or after it is part of an inventive image), e.g., by the use of preformed polymer or by the use non-polymeric ingredients, such as attached particles, organic forms, embedding, inlays, other attachments (such as devices, hardware etc.) and photographs.

Coloration can be used on an inventive image, or part thereof, as desired, at one or more stages of its formation, e.g., painting and/or drawing can be done. Thus, coloration (e.g., drawing, painting, colored cPRM or a combination of these) can be embedded partially or entirely by superimposed cPRM; by a Separating Layer (described herein); by one or more other superimposed materials, media, objects or devices; or by a combinations of these, as desired. For example, if desired, a polymer can have coloration covering it partially or entirely as desired, e.g., painting and/or drawing internally, externally or both. Coloration can be added to images of the present invention as desired. This might be done, for instance, by using any one or multiple materials and/or media; any one or multiple tools; no tools; or combinations of these as desired. Coloration added to an image of the present invention may bond to it as desired, e.g., in a mechanical bond, a chemical bond, a loose bond or a combination of these. For example, after forming a portion of a polymer, with or without one or more non-polymeric ingredients (e.g., coloration), anything desired can be applied upon and/or to that polymer as desired (e.g., painting, drawing, writing, printing, collage, coloration in other forms, or combinations of these) entirely or partially over any or all of its surfaces, as these surfaces then exist, (e.g., the polymer surface might have a surface preparation stabilizer which bonds the layers together. Then, more cPRM, with or without coloration, and with or without one or more other materials, media, objects, devices or their combinations, can be applied onto the initial polymer, covering any previous coloration and other applications and additions (e.g., the previous painting or drawing application). Then, more coloration can be added if desired and as desired, partially or entirely covering the surfaces of the new layer of polymer, e.g., another layer of painting and/or drawing can be superimposed. If desired, such alternating applications can be repeated as many or as few times as desired - a layer of cPRM alternating with a layer of coloration, e.g., painting and/or drawing. Using coloration in polymer to make inventive images as desired, can produce new and unique effects and images. For example, Ciba-Geigy's Microlith® pigment preparations are high grade organic, classical organic, and inorganic pigments predispersed in a variety of resins.

In preferred embodiments, an inventive image's coloration is altered by the use of one or more processes of removing polymer or other matter from it. In addition to conventional practices (e.g., removing materials with an eraser or a rag), matter can be removed from inventive images in unique ways, for a unique control over images, and for unique effects. For example, processes for removing polymer from a homogeneously colored, transparent red polymer inventive image, can turn this image pink, e.g., in selected areas which may form a drawing or a design, or pink all over, as desired. The removal of matter from a polymer or an inventive image can be used to lighten the hue, value, intensity, or a combination of these; to bring more real light into an inventive image; to add shadows, to soften color, to add other variations to color, for other effects and/or purposes, or for a combination of these. Different processes of removing matter from polymer or from other parts of inventive images can be used as desired, for instance, to create different effects, e.g., sandblasting, carving, cutting, engraving, sgraffito, incising, drilling, etc.

Painting, drawing, printing, writing, carving, incising, sgraffito, and other processes for marking on and in images of the present invention can be used as desired. Marking on and in images of the present invention can be done using any means, methods, and manners desired. For example, on and/or within a single image surface, one or more marks might be made using one or more additive and/or subtractive processes, as desired. For example, all conventional processes can be used to mark on and in images of the present invention, such as, all conventional painting, drawing and writing processes and techniques, and such as all conventional processes of transferring matter to images of the present invention might be used e.g., printing, masking such as stencils, (for instance, when spray painting and when air brushing color onto images), templates, tracing processes, stencils, graphite or carbon paper, cartoons (e.g., like Renaissance painters), processes involving projections, other photographic processes, collage, inlays, attachments, applications used temporarily on an inventive image or added as permanent parts of an image to block selected areas of the surface from further processing (e.g., resistance dying, for instance using wax on selected parts of an image's surface and removing it after that surface has been selectively colored), etc. Also, all conventional tools, and equipment used for conventional marking can be used on images of the present invention as desired, e.g., pens, brushes, pencils, felt markers, chalk, pastels, charcoal, erasers, squirt bottles, containers which are used to squirt out icing decoratively on food (these are used in conventional painting); tools for engraving, incising and cutting surfaces; sponges, rags, rollers; various kinds of printing plates, materials or devices (even food used to print such as potatoes and other vegetables), etc. There are many examples herein. Many conventional practices for marking on the surfaces of images of the present invention can be done with greater and more variable use of formal elements as desired, such as, space (e.g. open space, real spatial depth, illusionary space, etc.), real light, real transparency, real translucency, layering, as desired. The use of many conventional practices on and in images of the present invention can be done with varied workability, reworkability and controllability.

In some embodiments, conventional paper is used in inventive images, e.g., paper pulp; a conventional image making paper; a rice paper, rag paper, or cotton paper; a hand made paper; a synthetic paper; a transparent, translucent or see through paper; or a paper that is a combination of these. Paper might give inventive images special effects, e.g., of light, texture, color, absorbance, and spatial depth. cPRM can strengthen paper, make it more transparent, more translucent, more rigid and/or enabling the paper to be processed in a manner which would not otherwise be possible (e.g., an incised image made of paper and polymer, or one with a 3D sculptural form). 2D or 3D paper sheets or forms, made with or without cPRM, might be image supports (e.g., initial image supports and/or image support stabilizers) for inventive images which may be superimposed by cPRM (continuously or discontinuously), e.g. forming a layered image, and/or the cPRM might serve as coloration on the paper. Such image supports might be surfaces for conventional and/or unconventional painting printing, writing, photography, drawing, carving, engraving and/or collage. Conventional paper sheets and/or forms might be an underlayer and/or a surface preparation stabilizer on a polymer substrate, e.g., for superimposed coloration on one or multiple sides of the inventive image. Substances (such as paint) might bond to the inventive image due to the mechanical bond provided by a paper surface preparation stabilizer. It is often desirable to use a stabilizer in inventive images which will protect paper which is part of them from discoloration, e.g., due to UV light.

When the strength, and/or permanence of an inventive image are important, it is generally desirable for all of its ingredients to be of the highest level permanence, refinement and purity available, applicable and possible. This preference pertains to all parts of an inventive image, regardless of the differing specifications, means, or process by which they are part of this image. For example, materials and media of fine artists' quality or of professional grade are generally preferred rather than those of a lesser grade (such as grades for students or hobbyists which often have ingredients, e.g., fillers and other additives), which are significantly more likely to change over time than fine artists' quality or professional grade media and materials.

In embodiments, coloration can be added to a polymer inventive image one or multiple times throughout its formation and/or afterwards, as desired. Pigments, dyes and other sources of coloration vary widely in their ability to dissolve and/or disperse in various substances, such as in materials, media, vehicles, binders, stabilizers, combinations of these, e.g., in cPRM, in a clear acrylic gel, an oil based substance, etc. In many embodiments it is preferred that one or more pigments, dyes, other sources of coloration, or combinations of these, are made finer before they are added to an inventive image using methods which grind them by hand and/or by machine. For example, grinding methods are often preferred for dissolving and/or dispersing one or more sources of coloration and for making them finer at the same time (provided the specific coloration used can be made finer in the specific grinding process used). Pigments, dyes and other coloration also vary widely in their abilities to color - to affect hue, value, and intensity. For example, two pigments which look similar can color a material or a medium, such as a PRM, very differently. The control of a polymer's color can also be affected, often tremendously, when the active ingredients in its cPRM are used in a manner different from that recommended by their manufacturer, their manufacturers, a polymer chemist, or other appropriate expert. In order to control the color of a polymer when adding coloration to its PRM, it is often preferable to add the source of coloration (e.g., the pigment and/or dye) to it gradually.

In preferred embodiments for using coloration in an inventive image, coloration is added as desired into the monomer, the monomers, the PRM or the cPRM being used to form its polymer, or part thereof (e.g., layers or sections of the polymer). For example, many dyes which might be used for transparent colors in polymer images of the present invention are already soluble in one or more monomers. One preferred method is to, is to first make one or more concentrated-coloration-mixtures, each with one or multiple pigments, dyes, other forms of coloration, or combinations of these. Then, the concentrated-coloration-mixture or mixtures can be added as desired, into the total quantity of the monomer, the monomers, the PRM or the cPRM being used to form the polymer, or part thereof as desired. Also in some embodiments, such concentrated-coloration-mixtures might be used as desired to add coloration to non-polymeric parts or areas of images of the present invention, e.g., into paints such as clear acrylics, oil based paints, wax based paints, etc; into coatings; into stabilizers; into plaster or paper pulp; into a glue or other bonding substance, etc. These concentrated-coloration-mixtures can be made using the same method as those made for polymer.

One preferred method for making such concentrated-coloration-mixtures for images of the present invention is the same method described herein for making concentrated-stabilizer-mixtures, which is based on methods traditionally used to form oil paint.

In an embodiment, by using one or more sources of coloration unevenly, inconsistently or heterogeneously in a cPRM, or in another material, medium, substance, or combinations of these, a desired aesthetic effect is created in an inventive image.

In some embodiments, a unique paint made with cPRM as its binder can be used on and in images of the present invention as desired, for example, for painting, underpainting, imprimatura, grounds, drawing, printing, writing, other kinds of marks, and combinations of these, on polymer and on non-polymeric surfaces of images of the present invention. This paint might for example be formed using one or more sources of coloration, dispersed and/or dissolved in cPRM. Paint with cPRM as its binder might for example be radiation cured. For instance, it might be catalyzed by a photoinitiator and cured by UV light. However it is preferred that any exposure to UV light does not change or weaken the inventive image undesirably, e.g., UV light can cause discoloration in many kinds of images, for instance in pigments, papers, etc. If desired, paint made with cPRM as its binder might also give the inventive image texture, e.g., by its viscosity, its application, its ingredients, or a combination of these. For instance, this paint might have one or more dyes, pigments, stabilizers, densely dispersed sand particles, dispersed crystal particles, matting agents, transparent particles, reflective particles, dispersed dry paper pulp, dispersed dichroic glass particles, dispersed particles of polymer; one or more other media, materials, particles, objects, or devices within it; or a combination of these as desired. Other additives might be put into this cPRM also if desired, e.g. for texture, for light effects, etc. Such a paint can be applied to inventive images using any methods, means and manners desired. Further applications of this paint can be reworked and controlled as desired, e.g., removed, carved or overlaid. Then if desired, these painted surfaces of inventive images or part thereof, can become internal within them as desired, e.g. if these surface are superimposed with more cPRM, with another bonding substance or both.

Among the preferred binders for making a paint for use on a polymer inventive image are its cPRM or a bonding cPRM. Conventional binders that bond with the polymer surface are also among the preferred binders for making a paint for use on it. Paints with vehicles or with ingredients in their vehicles which bond to the polymer surface of an inventive image are also preferred for use on it. Alternately, one or more of a polymer's monomers, and/or one or more bonding monomers might be used as a binder for a paint application on said polymer surface, e.g., if the paint application is then embedded within the inventive image by superimposed cPRM. Or, either the polymer's catalyst or a compatible catalyst might serve as the binder for a paint application used on it, e.g. for paint applications made on an incompletely cured polymer surface. If desired, stabilizers such as UV stabilizers, might be added into any of these paints. Among the ways that some of these paints might be made is by using a concentrated-coloration-mixture. If desired, such paints can also be used as desired, on non-polymeric inventive image surfaces, e.g. on paper, canvas or wood. Coloration can begin to be added on a polymer surface, as soon as its cPRM gels firmly enough for the application to be made as desired. Coloration can be added to a polymer inventive image as desired, in and/or on its external and/or internal polymer surfaces, e.g., whether they are unabraded or abraded, incompletely or fully cured, gelled cPRM, etc. Coloration can also be added to non-polymeric parts and layers of inventive images.

In preferred embodiments, inventive images are made with one or more unique underlayers (such as primers, imprimatura, grounds, and underpainting) and/or conventional underlayers which may be surface preparation stabilizers. Further, it is often preferable to add coloration to polymer inventive images or parts thereof, upon and/or as surface preparation stabilizers, particularly when these surface preparation stabilizers enhance bonding. One reason for this preference is because many conventional image making materials and media do not bond or do not bond as well as desired to the polymer surfaces of inventive images. Many kinds of surface preparation stabilizers provide these polymer surfaces with desirable bonds to conventional image making materials and media without undesirable consequences, e.g., without requiring aesthetic or structural sacrifices, and without limiting the image making process. As an important example, surface preparation stabilizers enable polymers to be used as image supports (e.g., stabilizers), for superimposed coloration and marking. In a preferred embodiment, a conventional acrylic paint, a conventional acrylic painting medium, a conventional acrylic paint binder, or a conventional acrylic based primer (e.g., gesso or size) is superimposed upon polymer as a surface preparation stabilizer which is then superimposed by further painting, drawing, printing other marking, or a combination of these. For instance, this conventional acrylic might be colorless. It might for example, be used as an intermediary bonding agent and/or an underlayer or it might be both. Many conventional acrylics will bond to polymers as desired.

In preferred embodiments, a polymer surface preparation stabilizer is made on an inventive image or part thereof which absorbs one or more superimposed different substances in a desired manner. The absorbency of a surface preparation stabilizer may be consistent, inconsistent, or consistent in one or more areas and inconsistent in one or more others, e.g., it is entirely absorbent or it has absorbent bonding spots. For example, a polymer surface preparation stabilizer absorbs one or more superimposed paints, inks, dyes, painting media, sizes, glues, other substances, or combinations of these, to a desired extent, e.g., for aesthetic and/or bonding purposes. Thus, for example, such a polymer surface preparation stabilizer can be a surface for painting drawing, printing, writing, collage, photographic transfers, other marking, or a combination of these, e.g., on an image support which may itself be a stabilizer. As a specific example, a surface preparation stabilizer made in one of these embodiments, might be made using a cPRM made of one or multiple monomers, but which contains 2-hydroxyethyl methacrylate (HEMA).. HEMA and/or one more other absorbent polymers could be used in any percentage desired (e.g., 95% or higher), with or without one or more other additives, other monomers, fillers or combinations of these (e.g., which affect absorbency), to form a surface preparation stabilizer on an inventive image or part thereof, which is as absorbent as desired. As further examples, an inventive image (e.g., an image support which may be a stabilizer) might be made of a cPRM with a desired level of strength and rigidity, desired optical properties or both, which is not absorbent, but which is covered with an absorbent surface preparation stabilizer, e.g., HEMA and/or a fine see through cotton or rice paper. Then this inventive image might be further processed with coloration. Compare inventive images made in these embodiments to conventional images made using substances which absorb into paper, canvas or other fabric. Absorbent polymer can give inventive images new and unique effects, e.g., effects of absorbed color and bleeding color. In one embodiment, part or all of the polymer in an inventive image (e.g., its surface) is made so that it is capable of absorbing water or oil. As an illustration, a polymer surface preparation stabilizer that can absorb water might be used on an inventive image (e.g. on an image support which may be a stabilizer) as a surface for painting, printing, drawing, or writing, in water based media such as inks and paints like acrylic paints, watercolors, tempera, etc. In an embodiment, the application superimposed upon an absorbent polymer inventive image surface which may be a surface preparation stabilizer, functions as an underlayer (though it may or may not be a second surface preparation stabilizer) to prime or prepare it for further superpositions as desired. For instance, such an underlayer might be an intermediary, altering the image's degree of absorbency as desired (e.g., lessening it) in order to make one or more desired superpositions. It might for example be like a primer or a size (e.g., transparent and colorless, perhaps, a conventional painting medium or size without coloration). It might be an imprimatura with transparent coloration; or it might be a layer of underpainting or underdrawing. Such an underlayer might for example, absorb into the polymer surface so that applications superimposed upon it will not. Such a primer might be particularly useful when it is desirable to superimpose an absorbent polymer surface with a kind of substance which does not absorb into the polymer in the manner desired.

In another embodiment, inventive images or part thereof are made using polymer that can be penetrated by an oil soluble dye in a vehicle, e.g., in an appropriate solvent or in a mixture containing an appropriate solvent. In some polymers, such a dye may not only mark the surface, but can penetrate beneath the surfaces into the structures, and in doing so, may or may not take its vehicle or one or more ingredients in its vehicle into the polymer too. As an illustration, such a polymer might be used to make a surface preparation stabilizer on an inventive image which is then superimposed by one or more oil soluble dyes in a vehicle (with or without added ingredients), e.g., in drawing and/or painting applications. As another illustration, such a polymer might serve as an image support (e.g., stabilizer). Among polymers, linear polymer are preferred for use in this embodiment, such as, polyvinyl chloride. Should the polymer be plasticised with a stabilizer, penetration of an oil soluble dye into it is accelerated. For example, such a plasticizer stabilizer might be in the polymer; it might be an ingredient in with the dye, it might be an ingredient in with the vehicle containing the dye, or a combination of these. Because the effects made by such dyes in contact with polymer generally differ from those effects made by dyes in contact with cPRM, the degree to which the polymer marked in this embodiment is cured when it is marked is a VIMC which can be used to achieve a desired effect, along with other factors (such as the compositions of the polymer, the dye, its vehicle, etc.). As a further illustration of this embodiment, a polymer such as a polyvinyl chloride might function as a surface preparation stabilizer on an inventive image or as an image support (e.g., stabilizer), for drawing using an oil based, ink marker (such as the permanent marker called "Sharpie" made by Sanford in Bellwood, Illinois); or for a painting done using a conventional paint or ink (e.g., a conventional oil paint, printing ink or drawing ink) made with an oil soluble dye. In a further example, the penetration of oil soluble dyes into polymer might be used to create effects of stained color, bleeding color, flowing color, and other such qualities and effects in inventive images.

In another example, the vehicle in such a surface preparation stabilizer might contain one or more ingredients which enable another different substance superimposed upon it to bond to the inventive image. For instance, the vehicle in such a surface preparation stabilizer might be linseed oil or it might contain linseed oil, thus a conventional oil based paint subsequently superimposed upon it would bond to it. In addition or alternately, the vehicle might contain particles which form SSI providing a mechanical bond with a superposition. In a different example, the vehicle in the surface preparation stabilizer might be principally made of a solvent, but this vehicle might have a third ingredient which is the binder in a subsequently superimposed paint.

A preferred method of making a unique imprimatura on images of the present invention is by dispersing and/or dissolving one or more sources of coloration in cPRM that forms transparent and/or translucent colored polymer, either on a mold or on a polymeric and/or non-polymeric inventive image surface. Such imprimatura may or may not be surface preparation stabilizers. Their coloration may be even or uneven, and it might also give the imprimatura texture, as desired. For example, particulate elements may be added into these unique imprimatura, e.g. sawdust in their cPRM, perhaps to add texture and perhaps to alter their color. SSI on such an imprimatura which are superimposed may or may not comprise a surface preparation stabilizer. As an illustration, such a unique imprimatura might be a transparent and/or translucent colored polymer inventive image formed in a mold, or on a polymeric or non-polymeric inventive image surface, e.g. on a surface made of wood, glass, metal, fabric (even on a primed canvas), or paper (even if it is conventionally primed). These unique polymer imprimatura may be made using one or multiple superimposed applications of cPRM. For example, such an imprimatura might be made of a layer of transparent red polymer formed on a layer of transparent yellow polymer formed on a layer of transparent pink polymer; or by forming each of these same three layers of polymer on a different surfaces of one or more images of the present invention, they could each be a separate imprimatura.

Whereas conventional imprimatura are severely limited in their spatial depth, many kinds of unique imprimatura made using the present invention, can have any amount of real spatial depth desired. As an illustration, an inventive image might have a unique imprimatura made using the present invention such as a polymer imprimatura, with transparent or see-through coloration measuring between 0.1 inch and 6 inches thick. Such an imprimatura might have one or more dispersed and/or dissolved dyes and/or pigments; it might have densely dispersed sand particles; dispersed crystal particles; dispersed dry paper pulp; dispersed dichroic glass particles; dispersed polymer particles coated with one or more iridescent, metallic or fluorescent paints; one or more other dispersed or dissolved media, materials, particles, objects, or devices within it; or a combination of these, as desired. Such imprimatura might look like they just have color in them, they might have identifiable elements within them (e.g., particles, objects, devices, etc. such a paper clips, tacks, etc.), or both, as desired. Unique imprimatura made using the present invention can be rigid, flexible, in between these two extremes, or a combination of these, e.g. with some flexible areas, some rigid areas, etc. Furthermore, because polymer of the present invention can be strong, a unique imprimatura made of polymer can form and/or enhance inventive images structurally. Also, such a unique imprimatura made using polymer might be the entire thickness of an inventive image, almost its entire thickness, or any lesser percentage of the inventive image's total thickness desired, e.g., it might be an image support. For example, a unique imprimatura made of polymer in the method described above, might be the sole structural support for an inventive image which is either a painting (e.g. made with a conventional paint), or a drawing made drawn by incising in the imprimatura, lines made by adding matter on the imprimatura, or both. This painting and drawing are illustrations of the use of unique imprimatura of the present invention on images of the present invention as underlayers for further processing, which can be used if desired on one of the exposed sides of an image, on multiple exposed sides of an image or on all of its exposed sides.

Unlike conventional imprimatura, unique imprimatura made using the present invention can be further processed as desired, using any methods, means and manners desired, e.g. by painting, drawing, writing, printing, using processes for removing matter (such as carving, sanding, and drawing on them with incised lines), photographic processes or a combination of these. For instance, a polymer imprimatura might be further processed as it is forming (e.g. during its gelation), and/or after it has hardened, and it can be reworked as desired. Images of the present invention can have multiple imprimatura of the same kind or of different kinds, as desired, and these can even be superimposed if desired. For example, a single inventive image can have multiple imprimatura on different surfaces areas, e.g. one on its backside and one on its front side. Or, for example, if desired, a conventional imprimatura, a Clarifying Imprimatura, or both might be applied over the kind of unique polymer imprimatura described above. As on conventional images, imprimatura on images of the present invention can be used to influence or to determine their other formal elements, e.g., similar to the way that the artist, J. Miro saw shapes and forms (such as imaginary creatures) in the irregularities of his imprimatura, which he then further developed.

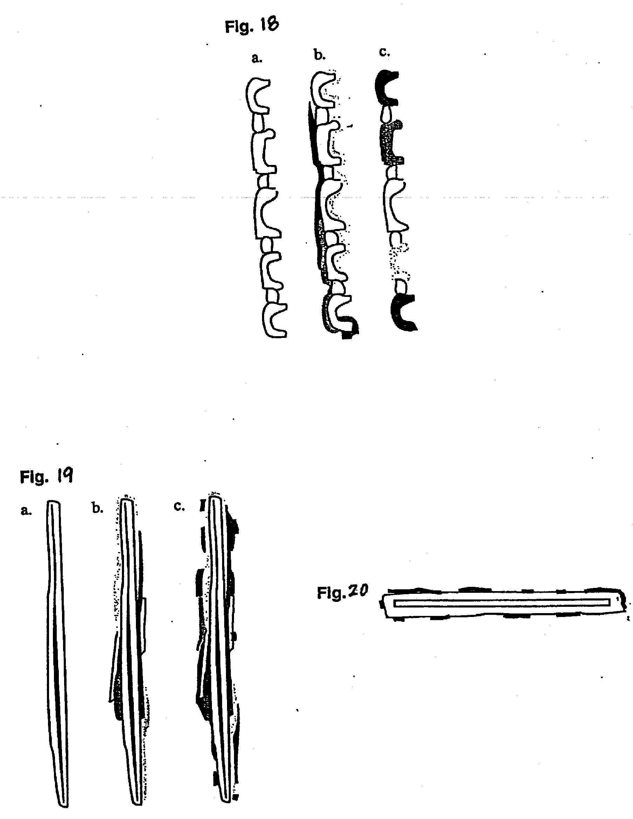

In some embodiments the unique polymer imprimatura can be made on opaque inventive image surfaces as desired. For example, these might be made on opaque inventive image surfaces which are light reflective, e.g., on opaque metal, metallic colored, and white surfaces of inventive images, etc. For instance, the inventive image in Fig. 19.a. might be a highly polished piece of metal encased in a polymer Clarifying Imprimatura.

In other embodiments, the surfaces of images of the present invention can have many new and unique grounds with coloration that is consistent or inconsistent, many of which can have texture if desired and as desired. These grounds may be further processed using any methods desired, e.g. with painting, drawing, writing, printing, photographic processes, processes for removing matter (such as carving, incising and sanding) and other kinds of processes, as desired. One preferred new and unique ground can be formed using one or more sources of coloration, dispersed and/or dissolved in cPRM, which then forms opaque polymer on a mold or on an inventive image surface (which may be polymer and/or non-polymeric). For instance, a polymer ground might have one or more dissolved or dispersed dyes or pigments; it might have dispersed particles of sand, metal, light reflective materials, paper pulp, sawdust, polymer, conventional image making materials, etc. A ground made in these embodiments may be a surface preparation stabilizer.

Unlike conventional grounds, unique grounds made using the present invention, such as those made using cPRM, can be rigid and/or flexible, absorbent to the extent desired and/or hydrophobic, and any thickness desired. For example, they can even be the entire thickness of a polymer part of an inventive image or the thickness of the entire inventive image if desired, e.g, a unique ground made using the present invention might measure between 0.1 inch and 6 inches thick. The unique grounds of the present invention can be used on images of the present invention in addition to or instead of conventional grounds, as desired. Also, if desired, imprimatura of any kind or of multiple kinds might be used over such unique grounds, as desired (with the exception of Clarifying Imprimatura which preferably exist on surface of images of the present invention which are transparent, translucent or both. For example, a surface of an inventive image with a unique polymer ground made according to the description above, serving as a surface preparation stabilizer might be superimposed by an imprimatura (which may be conventional, or new and unique such as made using colored cPRM) which bonds to it chemically and/or mechanically.

Images of the present invention can be made in an unlimited variety of the forms and structures using all kinds of methods, means and manners (e.g., conventional practices as well as new methods). Besides holding an inventive image together, bonds can enhance their strength and permanence. One or more bonds can be formed in an inventive image as desired, using any method, means and manner desired, e.g., one or more mechanical bonds, chemical bonds, loose bonds or a combination of these might be used in an inventive image, for instance, to connect a layer, an application, a component, a section, another attachment, or a combination of these as desired. Many materials, media, objects, devices, and their combinations are able to bond to inventive images as desired, e.g., measures do not need to be taken to strengthen these bonds. In addition to these bonds or instead of them, other bonds in inventive image can be made, strengthened or assisted in other ways. In addition or instead, one or more bonds in an inventive image can be assisted using any method, means and manner desired. For instance, a material, medium, object or device, might be used to temporarily assist in bonding an attachment to an inventive image, e.g., until the desired bond has formed.

In many embodiments, one or more bonding agents is used to form, strengthen or assist a mechanical bond, a chemical bond, a loose bond, or a combination of these, in an image of the present invention, as desired. Bonding agents of many kinds can be used on polymer and/or non-polymeric parts of images of the present invention in any method, means and manner desired. For instance, a bonding agent might bond a paint application, an attachment or both to an inventive image surface, which may not be able to bond to that image surface, or which may not bond to it as well, without the bonding agent. In another example, a bonding agent, can be used as an intermediary on one or more polymer and/or non-polymeric inventive images or inventive image surfaces to enable one or more subsequent superpositions to bond to that image as desired, e.g., to enable one or more new applications, attachments or connected parts to bond to that image (e.g. a bonding agent used in, on or around one, two or more layers, attachments, areas, sections, surfaces, components, or combinations of these, as desired). For instance, the surface of a polymer or non-polymeric inventive image part, which has a bonding substance applied partially or completely on it, is placed in direct contact with an inventive image part which bonds to that same bonding substance (e.g., adding a new component or attachment on the inventive image). Or, a bonding agent may be used to fortify a bond (such as a weak or loose bond) between two or more parts of an inventive image. One or more bonding agents upon a polymer inventive image surface may comprise a surface preparation stabilizer. Stabilizers, coloration (e.g. pigments and dyes), textural particles, fillers, and other ingredients can be added to bonding agents if desired, e.g., for purposes that are aesthetic, functional and/or structural. In many embodiments, it is preferable that a bonding agent be invisible to the human eye; its visibility is insignificant or not undesirably visible as part of the inventive image; it brings a desired aesthetic to an inventive image; it enables the inventive image to have another desired effect, function or both (one which it may be unable to have, or unable to have comparably, without the use of the bonding agent); or a combination of these, as desired. A bonding agent might be a desired underlayer (e.g., as a surface preparation stabilizer); it might be the final layer; it might be used in order to rework the inventive image; or a combination of these, as desired. The use of some bonding agents on inventive images enable new and unique images to be made.

In a more specific example, cPRM might be used as a bonding substance, to permanently connect parts to polymer and/or non-polymer inventive image surfaces, as desired, e.g. to adhere fabric, paper, wood, string, a photograph, a cut-out, a found object, a print, a drawing, a device, or a combination of these, onto an inventive image surface. This cPRM bonding substance might be the same substance used to make one or more of the parts being bonded; and/or it may be compatible with the cPRM used to make one or more of the parts being connected. Or, for example, a non-polymeric bonding substance (such as a conventional painting material or medium or a conventional glue), might be used to bond one or more other materials, media, objects, devices or their combinations to an inventive image. As a further example, mechanical bonds can be made between multiple parts of an image of the present invention, using one or more bonding agents, such as: wire, screws, hinges, screws, nails, string, substances (e.g., like paint, cPRM, etc.) or a combination of these. For instance, a perforated steel mount can be attached to an image of the present invention using a bonding substance, such as a cPRM, using bonding agents such as screws and wire, or using a combination of these, as desired.

In a number of embodiments, one or more monomers, polymers, conventional cements, other conventional glues, or a combination of these are used as bonding substances in making inventive images. Solvent based cements are commonly used for the bonding appropriate polymers. For example, in one method, parts are dipped and soaked in the cement until they soften. The softened parts are then held in contact until they join as desired. Alternately the parts might be held together and cement introduced into the joint between them, e.g., using an eye dropper or syringe. In another example, some polymer can be dissolved in a solvent based cement to make a viscous polymer/solvent cement, that is applied (brushed on) on inventive image surfaces which are then held in contact until they are joined. In other embodiments, in forming inventive images polymer parts, such as made of Bayer's Lustran® SAN or Makrolon® polycarbonate, can be joined using an appropriate solvent or adhesive system, e.g., parts are softened by the appropriate solvent, and then held in contact until they are joined.

In some embodiments, bonds in images of the present invention are made or strengthened using SSI. SSI can, for example, easily be partially or entirely filled in by one or a few superimposed bonding substances. Generally SSI can easily be removed from the inventive image surface by removing matter from it, e.g. sanding it, sandblasting it, etc. In order to form a strong and permanent mechanical bond, it is generally preferred that SSI are irregularly cut and undercut (even if they are shallow), unless for instance, this preference conflicts with a more desirable goal for an inventive image, e.g., a desired aesthetic. For example, cuts made by contemporary sandblasting processes can look more undercut, more random and more irregular in size, shape, and direction under a microscope, than cuts made by contemporary beadblasting processes. Thus, currently sandblasting is preferred over beadblasting as a process of forming SSI on appropriate inventive image surfaces by removing matter from them, e.g. on surfaces made of polymer, glass, metal and other materials which can withstand sandblasting to form SSI, without undesirable aesthetic effects. As an illustration, SSI enable a sandblasted glass surface to mechanically bond to polymer in an inventive image using cPRM as an intermediary bonding substance. Thus, using SSI, a mechanical bond may be formed in an inventive image with strength, permanence or both.

Further examples include sanding SSI, or using a Paasche "AEC Eraser Set" (further described herein) on an inventive image surface part of which might or might not already be sandblasted. In addition or instead, SSI might be formed on the inventive image surface using one or multiple additive processes. For example, SSI might be made on an image surface by adhering or applying small particles to that surface, e.g., small irregular particles might be applied or adhered to an image surface using a binder, medium, or glue, such as cPRM or paint, which bonds with that image surface. This inventive image surface may contain glass particles, sand particles, pigment particles, other particles, pumice, marble dust, strips of steel wool, fiber (e.g., stabilizer), or a combination of these, the texture, weave or tangle of which sticks out of the application on the image of the present invention so that it can form a mechanical bond with a subsequent application. SSI might be formed on an inventive image using an application conventionally used to prepare surfaces for pastels, charcoal or other conventional media. In addition or instead, such items might be adhered onto and/or into an inventive image surface, e.g., before it hardens or using a bonding substance such as cPRM. SSI might also be formed on the inventive image surface by adhering something with SSI onto that surface (such as by bonding fiber, paper, mesh, or sandpaper onto the inventive image surface, e.g. sticking these into a gelled cPRM surface). As another method, it may be desirable to form SSI on cPRM using one or more subtractive processes. For example, cutting carving, incising can be done in cPRM, attachments can be stuck on cPRM, and inlays can be stuck into cPRM. However it may be preferable to wait until the polymer hardens, at which time a number of abrading processes may generally be more effective.

In addition, SSI exist innately on some inventive image surfaces, e.g., on tree bark, paper, a sponge, fiber, on applications of painting and drawing materials and media which contain high percentages of solid or particulate ingredients, etc. But whether an inventive image surface innately has SSI or not, it is sometimes desirable to enhance SSI on them, e.g., because the existing SSI are or might be inadequate to form a mechanical bond, or to form a mechanical bond which is as strong and as permanent as desired (for instance they are not deep enough, irregular enough, undercut enough or a combination of these). For example, varnished tree bark still has its gross texture which may be undercut and irregular, but it may not mechanically bond as well as desired to cPRM, thus it might be preferable to abrade it prior to its use in the formation of a mechanical bond in inventive images. As another example, a premade polymer surface may be so well "cured" that it will not make a strong chemical bond with a fresh layer of the same cPRM or of a bonding cPRM. In these instances, it is preferred that the premade polymer surface be abraded before the new layer of cPRM is applied. In addition, to forming a mechanical bond, this may also enable it to form a better chemical bond.

As illustrations, SSI on a part of an image of the present invention are filled by a cPRM, by glue, varnish, shellac, fixative, another material and/or medium, as desired. SSI on a polymer surface of the same inventive image serve as a surface preparation stabilizer because they are filled by paint, a drawing material or medium (such as pastels, graphite or charcoal), or a combination of these. When these applications harden, cure or dry, a mechanical bond will have been formed (even if no bond or no strong permanent bond could have been formed by this application on the same image of the present invention surface if it had no SSI), and in some cases, a chemical bond will form as well. Thus, for instance, by using SSI, a wide variety of substances (e.g., media and/or materials) can be bonded to both polymer and non-polymeric inventive image surfaces as desired, whether or not any of these substances would have been able to bond or to bond as strongly and as permanently, to the same image surfaces without SSI. As another illustration, subject A., a substance, is applied onto SSI on an inventive image, thus whether or not subject A. could have bonded at all to this surface if it had no SSI, subject A. bonds to this surface mechanically, because of its SSI. Then, this image of the present invention is further processed. Subject B. is superimposed on subject A. and bonds to it. Thus, subject B. is bonded to this image of the present invention, whether or not either subject A. or subject B. would be capable of bonding directly onto that surface of the inventive image without SSI. In this illustration, the SSI and/or subject A might be surface preparation stabilizers. This illustration shows the use of a substance with SSI, to bond a subsequent superposition subject to that inventive image surface. Subject B. might, for example be: paint, varnish, a drawing material or medium, varnish, wire, fiber, mesh, gold leaf or other pieces of metal, string, leaves, glass particles, photographs, straw, pieces of wood, pieces of clay, paper, hardware, devices, a combination of these, etc. The application of subject A. on this inventive image, might for example, be a new or a conventional underlayer, such as a primer, an imprimatura, a ground, underpainting, underdrawing, an underlayer of modeling for a chiaroscuro effect, or a combination of these, etc.

In a further illustration, cPRM, transparent colorless acrylic paint, and another colored paint, are applied in a design on SSI on an inventive image surface. While the applications made on these SSI are wet other elements are stuck into them, e.g., photographs, metal loops, wood cut-outs, small colored particles of various shapes and sizes, and other elements some of which have artistic light effects. If this inventive image surface is polymer then some of its SSI comprise a surface preparation stabilizer, and the applications upon them which were superimposed are too. SSI enable image of the present invention surfaces to be used for strong permanent painting, drawing, collage, printing, writing, photography, or other conventional art and design applications and/or combinations of these, as desired. For instance, SSI can be used to bond paint to the inventive image surface though this same paint would not bond if this same inventive image surface were smooth, e.g., to make an image of the present invention painting which is as strong and as permanent as desired. An image of the present invention might for example, be a planar polymer with SSI which serve as a surface preparation stabilizer on one or more of its sides, which is used as an image support (e.g., a stabilizer) for superimposed coloration, e.g., as painting, drawing, writing, printing, photography, combinations of these, etc. In some embodiments, SSI on polymer and non-polymeric inventive image surfaces enable coloration to be made on them which could not be made as well, which could not be made as desired, or which could not be made at all, on these same image of the present invention surfaces, if they were smooth or without SSI. For example, fine SSI on a polymer inventive image surface serve as a surface preparation stabilizer, enabling drawing to be done on it as desired using pencils, charcoal, conte crayon, pastels, etc. Then, if desired, this drawing might, for instance, be superimposed by a layer of transparent colorless substance (e.g. a fixative" a sealer, a varnish, a cPRM, etc.), which seals the drawing and fills in the SSI on the polymer image of the present invention surface in the places which have no drawing. These are further ways that inventive images can be unique images of art and design which are as strong and as permanent as desired.

SSI, small surface irregularities and large surface irregularities may be used as desired on and in images of the present invention, e.g., they can be added and removed from surfaces; small surface irregularities may become SSI; and SSI may become small surface irregularities.

It is generally preferred that changes made to an inventive image for forming, strengthening or assisting bonds, be: invisible to the unaided human eye; aesthetically insignificant or not undesirably visible; aesthetically desirable, or a combination of these. In addition, it is preferable that changes made to an inventive image for the purpose of forming, strengthening or assisting a bond which risk affecting that image undesirably, not be difficult, undesirable or impossible to rework and/or remove.

In a number of embodiments, bonding substances are applied on inventive images, e.g., they are painted, for instance, with conventional paints. Then these images might be finished. However, if they are not, part or all of such applications, might be used as an underlayer for one or more superimposed bonding applications, which may or may not have bonded directly onto the initial surfaces of these images (beneath their underlayers). In some cases these underlayers are surface preparation stabilizers. As an illustration, some acrylic paints bond to polymer and/or non-polymeric surfaces of images of the present invention. For instance, acrylic painting is done directly on the polymer surface of an inventive image, to which it bonds. If this image of the present invention is not finished, this acrylic painting might, for example, be used as an underlayer, in which case it may be a surface preparation stabilizer. On some or all of this image's surface, the acrylic underlayer might or might not contribute to its aesthetic significantly, e.g., as an imprimatura, a ground, underpainting, underdrawing, a primer, a size, etc. Part or all of the acrylic underlayer is superimposed by one or more further applications (e.g., applications of substances which may not have been able to bond or to bond as strongly and as permanently if they had been applied directly on the initial polymer surface of this image rather than on the acrylic surface preparation stabilizer upon it). As more specific example, part or all of this acrylic application which is used as an underlayer might be superimposed by oil painting, though this oil painting would not have bonded as desired to the surface of this image of the present invention surface without its acrylic underlayer surface preparation stabilizer.

As another illustration, it might be desirable to paint a polymer surface of an inventive image with a substance which does not bond to it, without lessening its strength or permanence. To do this, a continuous or discontinuous surface preparation stabilizer is used on the polymer as an intermediary bonding agent upon which the desired paint is superimposed. This surface preparation stabilizer might, for example, be comprised of one or multiple layers, e.g., it might be a cPRM and/or a conventional material or medium like an acrylic. Further, such a surface preparation stabilizer might or might not affect the image aesthetically, for instance, as an underlayer for the superimposed painting. Then, if desired, paint applied on the surface preparation stabilizer on this inventive image might also be partially or entirely superimposed by another different bonding substance, which may or may not have been able to bond to this image as desired, if it were applied directly on its initial polymer surface or if it were applied directly on the surface preparation stabilizer. Thus, the paint application upon the surface preparation stabilizer might even be functioning as a second surface preparation stabilizer.

In many embodiments, inventive images or parts thereof are made using polymer which is selected or formulated because it bonds to subsequently superimposed applications, attachments, parts, or a combination of these. These might for example be image support stabilizers. In another example, a polymer or non-polymeric inventive image surface is formulated so that it bonds to a conventional image making material and/or medium subsequently superimposed, such as a paint or a drawing material, e.g., a surface preparation stabilizer. As an illustration, a polymer surface is formed which bonds to a vinyl paint,e g., Flashe® (made by Lefranc and Bourgeois of Le Mans, France).

In some embodiments, one or more ingredients in a cPRM, enable the resultant polymer to bond to particular kinds of superpositions. In an illustration, a mixed cPRM surface preparation stabilizer on a polymer surface is interposed between two or more parts of an image of the present invention, to bond them together (e.g., to connect layers, components, attachments or a combination of these to an image's surface). Such a mixed cPRM contains two or more different monomers and the catalysts appropriate for polymerizing them. In such a mixed cPRM, one or more of the monomers and the catalyst appropriate for polymerizing it might be the same as one or more of those used in each of the image parts being connected. In addition or instead, in such a mixed cPRM, one or more of the monomers and the catalyst appropriate for polymerizing it might differ from those of one or more of the image parts being connected, yet still bond to it or to them. In an example, a mixed cPRM surface preparation stabilizer interposed between two different inventive image parts at least one of which is polymer, bonds to each of them, though otherwise they would not be able to bond to one another. If desired, the bond made between these two image parts might also be strengthened or temporarily assisted, using a bonding agent which mechanically bonds them together e.g., the image parts are wired or tied together temporarily while the mixed cPRM cures, or the image parts are screwed together permanently to fortify the bond. In further examples, a mixed cPRM is an underlayer on a non-polymeric inventive image surface, and a mixed cPRM surface preparation stabilizer is an underlayer on the polymer surface of an inventive image. For instance, a mixed cPRM surface preparation stabilizer might be used on a smooth polymer inventive image surface to enable it to bond to a superimposed acrylic paint. This acrylic paint application might not have otherwise bonded directly onto the smooth polymer image surface. If this inventive image is not completed, its acrylic paint application might be partially or entirely superimposed by another layer of the same mixed cPRM which was used underneath, thereby making the acrylic paint application serve as a second surface preparation stabilizer. This inventive image might be completed, but if it is not, its mixed cPRM surface might be used to bond one or more additional applications, attachments or parts onto this image, as desired, such as another application of acrylic paint. Mixed polymers such as this example are very useful on inventive images, e.g., for Separating Layers and for bonding spots.

In some embodiments, it is often desirable to use one or more linear polymers over the surface of an inventive image made of one or more different compositions, (e.g., as a continuous layer or in one or more areas, for instance, discontinuously such as bonding spots). A linear polymer on a polymer inventive image surface in these embodiments may or may not be a surface preparation stabilizer. For example, it is often desirable to use a linear polymer over a crosslinked polymer inventive surface. In another example, it is often desirable to use polyacrylic over inventive image surfaces made of one or more other compositions. Linear polymers might for example be added over the surfaces of an inventive images made of one or more different compositions using methods described herein, e.g., by using SSI or by using surface preparation stabilizers for instance in between polymer inventive image surfaces and polyacrylic applications such as surface preparation stabilizers made by adding one or more ingredients (for example stabilizers) into PRM which enable or fortify bonding to superimposed polyacrylic. A linear polymer such as polyacrylic might for example be used over inventive image surfaces made of other compositions to enable them to be further processed in a desired manner, (e.g., with the strength, permanence, aesthetic qualities, and other desired qualities which would not have been possible otherwise). For example, a layer of linear polymer such as polyacrylic on an inventive image surface made of one or more other compositions (which may or may not be a surface preparation stabilizer), might enable it to be further processed: **1).** on a desirable substrate or underlayer, e.g., as a unique primer, imprimatura, ground, underpainting, or underdrawing; **2).** with one or more bonded attachments, parts, layers collaged elements, or a combination of these, e.g., polyacrylic attachments; **3).** with one or more superimposed applications as desired, such as applications of paint, ink, photographic emulsions, etc.; **4).** with heat, with a solvent, or both, e.g. to make a desired design, for instance, by sgraffito; or **5).** with a combination of these. In a different illustration, a layer of linear polymer (such as polyacrylic) on an inventive image surface made of a different composition might be a Separating Layer, a Clarifying Imprimatura, or a layer of bonding spots, whether or not it is a surface preparation stabilizer. Linear polymer inventive image surfaces (e.g., polyacrylic surfaces) such as those formed in these examples, might for example, be superimposed by one or more bonding applications, such as painting, drawing, printing, writing, drawing, collage, photography, etc., e.g., made using conventional image making practices, such as conventional acrylic paints. Then if desired, the inventive image surface might be further processed using one or more subtractive and/or additive processes (e.g., adding new superpositions).

In some embodiments, it is often preferable to superimpose an acrylic emulsion, a conventional acrylic paint, a conventional acrylic paint binder, a composition containing one or more of these, or a combination of these on an inventive image. Such an application may for example, be used as an underlayer and/or as a surface preparation stabilizer on an inventive image surface which is superimposed by another acrylic paint which will not bond as desired to that image surface without the intermediary layer. For example, in some embodiments, it is often preferable to superimpose Rhoplex® (such as Rhoplex® WL-96, or Rhoplex® WL-51), or media containing Rhoplex® on inventive image surfaces such as those that are polyacrylic (with or without other ingredients added into the application or applications such as coloration, particles, stabilizers, matting agents, etc.). Rhoplex® is made by Rohm and Haas of Philadelphia, Pennsylvania. These are some examples. In an application on an inventive image surface (e.g., on a polyacrylic image surface), Rhoplex® WL-96, another kind of Rhoplex®, another acrylic paint or binder, or a combination of these might be: **1).** the binder for a paint; **2).** a surface preparation stabilizer; **3).** an application with a stabilizer mixed in and/or stuck onto it, e.g., a UV light stabilizer and/or a fiber stabilizer; **4).** added into another application, e.g., Rhoplex® mixed into a conventional acrylic paints; **5).** a surface preparation stabilizer; or **6).** bonding spots or a Separating Layer either of which may be a surface preparation stabilizer. In addition or instead, applications of Rhoplex® on inventive image surfaces might be further processed in other ways, e.g. using subtractive processes, or in a combination of these ways, as desired.

In some embodiments, it is desirable to use one or more crosslinked polymers over the surface of an inventive image made of one or more different compositions (e.g., as a continuous layer, or in one or more areas for instance, discontinuously such as bonding spots). On the image such a crosslinked polymer may or may not be a surface preparation stabilizer. In some embodiments, cPRM which forms a crosslinked polymer such as polyester, is applied on a linear polymer inventive image surface, e.g., as a surface preparation stabilizer. Examples of methods for superimposing a crosslinked polymer on an inventive image surface made of a different composition, are by the use of SSI, large surface irregularities, a chemical bond or a combination of these. In another example, the cPRM bonds to the linear polymer inventive image because it is used on multiple sides, e.g., encircling the image. In a third example, the cPRM might loosely bond or not bond onto the linear polymer inventive image surface, (e.g., relying only on gravity to remain in its position).

In an embodiment, a surface preparation stabilizer is formed on a linear polymer inventive image surface by making said surface sticky using a mixture of **i).** one or more solvents which are appropriate for that particular linear polymer, and **ii).** the catalyst, one of the catalysts, two or more of the catalysts, or all of the catalysts for cPRM or cPRMs which are subsequently superimposed. This might, for example, be done in reworking an inventive image surface, e.g., a polyacrylic surface. As an illustration, a surface preparation stabilizer is formed on a polyacrylic inventive image surface by making it sticky using an appropriate solvent, such as a MEK with a small percentage of the catalyst, MEKP mixed into it. Then, cPRM catalyzed with that same MEKP (e.g., cPRM which will form polyester), is applied on the sticky polyacrylic inventive image surface preparation stabilizer.

In some embodiments, in making or reworking an inventive image or part thereof, one or more ingredients (e.g., stabilizers) are added into cPRM so that it, and/or the polymer formed bond as desired to one or more subsequently superimposed applications, layers, attachments, parts or a combination of these. One or more such mixtures might be used to make image support stabilizers, (e.g., formed in molds) and/or surface preparation stabilizers. But whether it forms a stabilizer or not, cPRM of these embodiments, the resultant polymer or both might for example, function as an underlayer. cPRM or polymer surfaces formed in these embodiments such as those that are stabilizers, might for example enable further processing (such as painting, printing, writing, drawing, collage, photography, etc., as well as desired aesthetic effects, e.g., new and unique ones) to be done on the inventive image surfaces which might not have otherwise bonded, or bonded as strongly or as permanently. Or as another example, the cPRM mixtures of these embodiments might be surface preparation stabilizers on polymer image supports (which may or may not be stabilizers) which are further processed, e.g, using conventional image making practices such as paints and other colorants. Polymers made in these embodiments are also useful for Separating Layers.

As an illustration, in an embodiment, one or more waxes, one or more stabilizers containing wax (such as Silmar®'s A-111, Silmar®'s S-250, Silmar®'s S-250a, Byk®-S 740, and Byk®-S 750 previously described), one or more other compositions containing one or more waxes (such as painting media containing wax and encaustic paints), or a combination of these are used in cPRM as stabilizers in forming part or all of an inventive image. Wax might for example be used in cPRM for a desired aesthetic effect (e.g., a matte effect or to lessen transparency or translucency), and/or for reasons previously described. In addition or instead, wax stabilizers in cPRM can enable bonding to subsequently superimposed applications, (see descriptions herein). For instance, cPRM with wax dispersed in it in one of the forms described above, can be applied on one or more polymer or non polymeric inventive image surfaces, on molds, or both. The resultant polymer inventive image surfaces will have wax sites which bond to superimposed applications of conventional image making materials and media such as oil paints, encaustic paints, oil pastels, various kinds of colored pencils, crayons, etc. (Wax is an additive commonly used in conventional oil paints, e.g. for a matte effect.) Such polymer inventive image surfaces can for example, be used for painting, printing, writing, drawing, collage, etc. As an illustration, a polymer initial image support (e.g., stabilizer) with such a surface preparation stabilizer, might be thin rigid and self supporting, without a stretcher, frame, mat or backing, but perhaps colorless and perhaps with special light effects. Upon its surface or surfaces, permanent oil painting is done.

In some embodiments, one or more waxes, one or more stabilizers containing wax (such a those described herein) one or more other compositions containing one or more waxes (such as painting media containing wax and encaustic paints), or a combination of these, might be used on inventive image surfaces, whether they are then superimposed or not. This might be done, for example, for a matte effect, to lessen transparency or translucency, for reasons previously described, as a sealant or coating, for bonding purposes, as an underlayer, or as a surface preparation stabilizer.

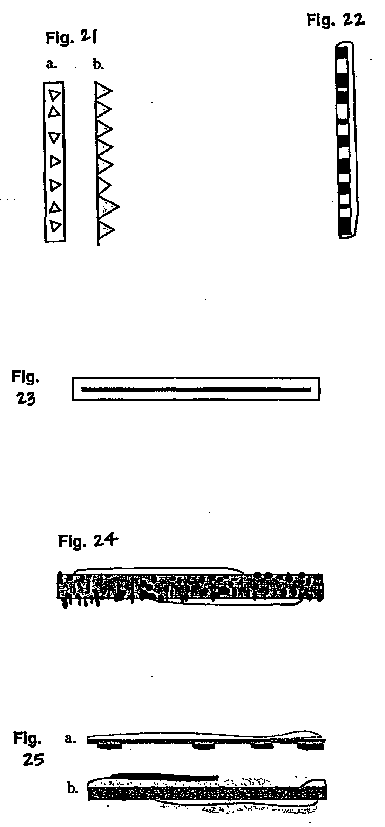

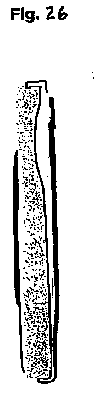

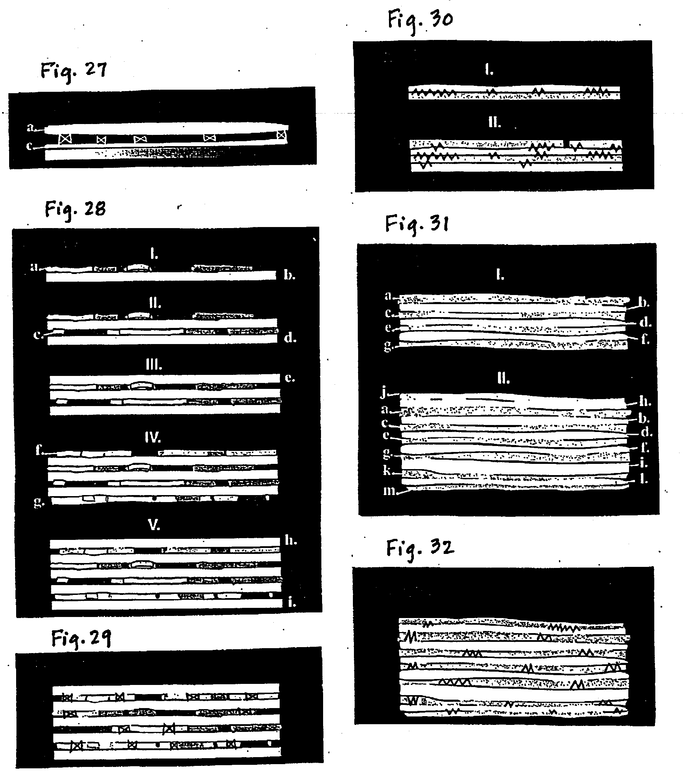

In a further embodiment, in the formation of an inventive image or part thereof, a particulate material is added into cPRM to form SSI on the resultant polymer surface enabling one or more superimposed applications to bond to it or bond to it more strongly. In some circumstances these SSI constitute a surface preparation stabilizer. Polymer formed in this embodiment may be an image support (e.g., stabilizer). For example, the SSI formed by particles added into cPRM enable a polymer inventive image surface to bond to a substance which functions like a glue, bonding one or more superimposed attachments, parts or a combination of these to the inventive image. In another example, an image surface of this embodiment is a surface preparation stabilizer that is drawn upon, painted, photography is formed on it, printing is done on it, or a combination of these, e.g., the SSI mechanically bond a photographic emulsion; paint applications; other marks made in charcoal, graphite, conte crayons, pastels, or a combination of these to the polymer inventive image surface. Polymer with SSI formed in this embodiment are also useful for Separating Layers, bonding spots and Clarifying Imprimatura, described herein. Also refer to other new grounds herein e.g., Fig. 24.

In a preferred embodiment, an inventive image or part thereof, is formed by adding one or more conventional image making materials and/or media into a larger quantity of cPRM. When mixed into a larger quantity of cPRM at a percentage of about 0.4%-40% (by volume), conventional paints, sizes and primers; binders used in conventional image making media and materials; and conventional media for painting are stabilizers. For an example of way to add such ingredients into cPRM, refer to the method of making concentrated-coloration-mixtures herein. Examples of conventional ingredients which might be mixed into cPRM to form mixtures of this embodiment are: oil used in conventional oil paints such as linseed oil, oil paints, waxes and media containing waxes (such as waxes used in oil paints and encaustic paints), acrylic paints, acrylic paint binders, acrylic painting media, paper pulp, binders conventionally used in paper, coloration such as pigments and dyes, or a combination of these. Mixtures made in this embodiment might be used to form inventive images or parts thereof. They might for example bring desired aesthetic qualities to inventive images, such as color, texture, or light qualities and effects (e.g., translucency, opacity, iridescence, a matte surface, a semi-matte surface, etc.). They might be used to mark on inventive images, (e.g., to paint, draw, print, write, etc.).
Mixtures made in this embodiment might be used on inventive image surfaces, upon one or more conventional image making materials, media or both, which bond to the conventional image making material and/or medium in the cPRM mixture of this embodiment (for instance cPRM which has oil paint and/or linseed oil in it is applied over oil painting on an inventive image surface, or cPRM with an acrylic painting medium and/or acrylic paint in it is applied over acrylic paint or an acrylic painting medium on an inventive image). Mixtures made in this embodiment might be used on bonding polymer inventive image surfaces and/or on SSI on inventive images. As another example, whether or not their aesthetic contribution is significant, part or all of mixtures formed in this embodiment might be external surfaces, final coats or sealers on inventive images. For example, they might be applied over weak or fragile image surfaces, such as over applications which are conventionally sealed or fixed (e.g., pastel or charcoal drawing), or applications similar to these. Mixtures formed in this embodiment might be also applied over image surfaces which are not fully cured or hardened. Mixtures made in this embodiment might form image supports or parts thereof (e.g., stabilizers). In addition or instead, the mixtures made in this embodiment might be used for bonding and/or as underlayers, and a preferred group of these are surface preparation stabilizers. When mixtures formed in this embodiment are used for bonding purposes and/or as surface preparation stabilizers, it is preferred that once they polymerize, their conventional image making ingredient or ingredients are bonded to them mechanically, chemically or both. Mixtures made in this embodiment might form or strengthen bonds in inventive images, for instance, where there might not be any other way, or any better way to do so, e.g., in between two image parts, in between an image and attachments, or in between an image and further applications.

These are some illustrations. Inventive image surfaces formed in this embodiment used on non polymeric inventive image surfaces might **1).** bond to an oil painted part, to a piece of acrylic, to a variety of collaged elements, other attachments, or to a conventional image made of a compatible material or medium such as a cut out, a photo or a drawing; **2).** bond to one or more superimposed applications, e g., of conventional or unconventional image making materials and/or media (such as those which are the same as or compatible with that which was mixed into the cPRM of the mixture of this embodiment); **3).** be underlayers, e.g., superimposed by conventional image making materials, medium or both; **4).** be bonding spots or have bonding spots; **5).** be Separating Layers; **6).** be a combination of these. As an illustration, an inventive image support (e.g., stabilizer) is made with a surface preparation stabilizer formed on one of its sides from mixing linseed oil (e.g., measured by volume between 0.6% and 30% thus it is a stabilizer) into a larger quantity of cPRM. Its reverse side is superimposed by a bonding application of cPRM which contains no linseed oil, its surface preparation stabilizer is superimposed by applications of oil paint, encaustic paint and oil pastel. In another illustration, an acrylic paint binder is mixed (e.g., measured by volume between 0.4% and 20% thus it is a stabilizer) into a larger quantity of cPRM. This mixture is applied on both polymer and non polymeric inventive image surfaces. On the polymer inventive image surface this application is a surface preparation stabilizer. Once these applications harden, they are both superimposed by conventional applications which bond to them using conventional practices, e.g., acrylic paints, oil paints, encaustic and oil pastels are superimposed.

An application is applied on an inventive image or in a mold to form an inventive image or part thereof comprised of one or more ingredients, mixed (e.g., at a percentage measured by volume between 0.4% and 40% which classifies it as a stabilizer or them as stabilizers if it or they meets all other criteria) into a larger quantity of cPRM. Nine examples of the specifications of this or these ingredients are: **1.)** one or more oils conventionally used in paint, e.g., "Linseed Oil" made by Lefranc and Bourgeois, stand oil, walnut oil, poppy seed oil, safflower oil, sunflower oil, clove oil, etc.; **2.)** one or more oil paints, e.g., "Schevening Purple Brown" made by Old Holland Oil Colour Association of Driebergen, Holland, or "Alizarin Crimson" made by Lefranc and Bourgeois; **3.)** one or more colored acrylic paints, e.g., "Liquitex®, Phthalocyanine Green" made by Binney and Smith Inc. of Easton, Pennsylvania; **4.)** one or more acrylic paint products (e.g., an acrylic binder, painting medium or primer) which either contain no pigment or dye, or which only have minimally visible coloration (e.g., iridescence, pearlescence or slight coloration), for example, a transparent or translucent medium, gel or primer such as those by Golden Artist Colors, Inc., like their "Self Leveling Clear Gel", "Soft Gel (Gloss)", "GAC-200", "GAC-500" or "GAC-700"; **5.)** one or more alkyd media and/or alkyd paints, e.g., "Liquin®" alkyd medium and/or "Griffin^{™}" Alkyd Colour both by Winsor and Newton of London, England; **6.)** one or more conventional image making sizes, primers, media, binders and or combinations of these, which are not specified in the previous 5 examples, e.g., hide glue, wax, media with wax ingredients such as encaustics and wax media made for oil paints, etc.; **7.)** one or more sources of coloration such as pigments and/or dyes are added into the mixtures described in the previous examples 1-6.; **8.)** one or more ingredients specified in each of two or more of the previous examples 1-7., e.g., both an oil paint and an acrylic paint are used; or both a linseed oil and an oil paint are used; **9.)** one or more particulate ingredients are mixed either into a larger quantity of cPRM, or into a mixture formed in one of the previous examples 1-8. and then into the larger quantity of cPRM, e.g., pumice; particles of glass, crystal, polymer, sand, stone, metal, paper, hard wax, rubber, fiber (stabilizer), organic materials (such as twigs, rice, petals, buds, thorns, and seeds), etc. Note that some of the polymer formed by the mixture of one or more particulate ingredients into a larger quantity of cPRM will have SSI, and some will not have SSI.

The polymer formed in the 9 examples above might form an image support (e.g., a stabilizer and/or an initial image support), or, for example, a surface preparation stabilizer on an inventive image which may or may not be an image support, e.g., made using a cPRM which was either the same or compatible to the cPRM used to make the mixtures in the 9 examples, but without the special ingredients added in these examples. Alternately, mixtures formed in the 9 examples might be applied on a non polymeric inventive image surface, such as abraded metal, paper, wood or even on a surface which is has oil on it (for instance conventional oil paint), e.g. this mixture can be applied on the surface of a conventional oil or acrylic painting, on a drawing or on a print. The ingredients added into cPRM to form the mixtures of the 9 examples may or may not contribute significantly or even noticeably to the aesthetic of the resultant polymer, and this polymer may or may not contribute significantly to the aesthetic of its inventive image. Polymer formed in the 9 examples may or may not be superimposed, e.g., by further applications and/or attachments. Depending on the cPRM used in these 9 examples, the ingredient or ingredients added into them and the amount in which they were added, the homogeneity of their mixture, the thickness, consistency and other specifications of this mixture's application on the inventive image or mold, and other VIMC, the resultant polymer might be transparent, translucent, opaque, textured, colorless, colored (e.g. a milky or off white color; ecru; slightly colored, hazy or cloudy; white), or a combination of these. On an inventive image, mixtures made in these 9 examples might, for example function as part of the image's structure, as painting, as an underpainting, as a bonding substance, drawing, writing, printing, a Separating Layer, bonding spots, an external surface layer (perhaps a sealer or coating), or a combination of these, as desired. As another example, surfaces formed of the mixtures made in these 9 examples might be used as for bonding and/or as underlayers for one or more superimposed applications, e.g., as surface preparation stabilizers. Applications superimposed on cPRM and/or polymer formed in these 9 examples might for example be: drawing, painting, writing, attachments, layers, parts, printing, photography, collage, or a combination of these. Such superimposed applications might for example be conventional materials and/or media which bond to the ingredient or ingredients which were added into the cPRM mixtures of these 9 examples. For instance, a polymer formed using oil paint and/or linseed oil mixed into a larger quantity of cPRM might be superimposed by oil painting, drawing in oil pastels, printing done with oil based colors, colors that contain oil, other compatible colors, or a combination of these.

In another embodiment, cPRM is mixed at about 0.4%-40%, or more preferably 0.5%-25%, or most desirably at about 0.5%-8% (by volume) into a conventional image making material and/or medium for use in an inventive image. The cPRM used in such a mixture is serving as a stabilizer if the mixture is applied on a polymer inventive image surface to which its cPRM ingredient bonds, and/or if the mixture is applied onto a polymer surface that its cPRM ingredient further cures or fully cures. The conventional ingredients used in mixtures of this embodiment might for example, be: oil paints, colored acrylic paints, acrylic paint binders, acrylic painting media, watercolors, goauche, tempera, paper pulp, alkyd paints, encaustics, binders for conventional paints such as waxes and oils, conventional sizes and primers, or a combination of these. Mixtures formed in this embodiment might form inventive images, parts of inventive images, image supports or parts of image supports, e.g., part of an image support stabilizer. Mixtures made in this embodiment may or may not contribute significantly or even noticeably to the aesthetic of their inventive image, e.g, affecting color, texture, or light qualities and effects (such as translucency, opacity, a matte surface, a semi-matte surface, etc.). Mixtures formed in this embodiment might be used to mark on inventive images, (e.g., to paint, draw, print, write, etc.). Mixtures formed in this embodiment might be external surfaces or final coats on inventive images, which may even function as coatings or sealers, e.g., on weak or fragile image surfaces, or on image surfaces with conventional applications on them which are conventionally sealed or fixed (such as over pastel or charcoal drawing).

Mixtures of this embodiment might be used in inventive images for bonding purposes, and/or as underlayers, and some of these are surface preparation stabilizers. These are examples. Mixtures of this embodiment might be bonding substances used to connect one or more parts, attachments, applications or a combination of these to an inventive image. For example, such a mixture might be used as a surface preparation stabilizer to bond two polymer parts together in such a way that the inventive image looks aesthetically continuous or discontinuous. In another example, forty pieces of cardboard might be bonded to one another using intermediary segments made of cPRM mixed into a larger quantity of paper pulp. In the same inventive image or in a different inventive image, surface preparation stabilizers made of cPRM mixed into a larger quantity of paper pulp might bond forty pieces of polymer together. Mixtures of this embodiment might be used on inventive image surfaces to bond them to superimposed applications and a preferred group of these are surface preparation stabilizers. As an illustration, a mixture made by adding cPRM into a larger quantity of oil paint, might be used to make a surface preparation stabilizer on a polymer inventive image surface which is an underlayer, that bonds to subsequently superimposed applications of oil paint (which do not contain any cPRM). In addition or instead, this same mixture of cPRM and oil paint might be applied over an application of oil paint on a polymer and/or non polymeric inventive image surface, e.g., this mixture is applied on oil painting which is on polymer and/or it is applied on a conventional oil painting which is part of an inventive image. While this application is wet, it might bond polymer attachments to the inventive image, and/or while wet or once dry or hardened it might be superimposed by a layer of cPRM. In a third illustration, a mixture formed of cPRM mixed into a larger quantity of paper pulp might be spread on a polymer surface e.g., as a final layer or as a surface preparation stabilizer for subsequent conventional painting and/or drawing such as using watercolors, acrylics, tempera, pastel, pencil, etc. Or, this application of cPRM mixed into paper pulp might be superimposed by a conventional mixture of paper pulp (which contains no cPRM) which is either left as one of this inventive image's external surfaces, or superimposed by watercolor, acrylic or tempera painting. In a further illustration, cPRM is mixed into a larger quantity of an acrylic paint product (e.g., a painting medium or binder). The mixture is applied on both polymer and non polymeric inventive image surfaces as a primer, an imprimatura or a ground for further applications made using conventional practices (on the polymer it is a surface preparation stabilizer). Mixtures made of this embodiment are also useful for Separating Layers and for bonding spots. Mixtures of this embodiment can enable conventional image making materials and/or media to be further processed in a manner which can not be comparably done using conventional practices. For example, an inventive image surface made using a mixture of this embodiment of cPRM in paper pulp, in sand or in wax, can harden firmly enough to be carefully incised or carved, whereas none of these conventional materials can ordinarily be processed as such.

In an embodiment, an ingredient is mixed at about 0.4% to 40% by volume into one or more applications made on a linear polymer inventive image surface. This ingredient is an appropriate solvent for that particular linear polymer. Solvents mixed into applications of conventional image making materials and media in this embodiment are stabilizers. It is preferred that solvents with low volatility like di-butyl phthalate be added at no greater than 3% by volume. It is preferred that solvents with high volatility like acetone be added at no greater than 30% by volume, and it is preferred that solvents with less high volatility such as methyl ethyl ketone be added at no greater than 10% by volume. Some of the applications made in this embodiment are surface preparation stabilizers. Di-butyl phthalate is a preferred solvent for use as a stabilizer in this embodiment. For example, a small amount of di-butyl phthalate might be mixed into a larger quantity of a conventional paint or painting medium or paint binder, such as oil paint, acrylic paint, or an acrylic painting medium. Then this mixture is applied onto a polymer, e.g., as a surface preparation stabilizer. For example, if such an application is colorless it might function as a primer, and if such an application is colored it might be an imprimatura, a ground, underpainting or underdrawing. A combination of these underlayers might be on a single inventive image. As another example, acetone or methyl ethyl ketone is used as a stabilizer in this embodiment mixed into an application made on a polyacrylate inventive image surface. Applications superimposed on these surface preparation stabilizers and others made in this embodiment might, for example, be made using the same substance in the application they superimpose, but without the added solvent. In one example, a solvent serving as a stabilizer is mixed into a conventional oil paint which has linseed oil as its binder, and the resultant mixture is applied on a linear polymer surface for which that solvent is appropriate. Then for instance, this oil paint, a surface preparation stabilizer, is superimposed by oil paint applications which do not have the solvent in them. In another example, an acrylic inventive image surface is painted with a conventional acrylic paint (e.g., a transparent acrylic gel which is colored or colorless) which has an appropriate polyacrylate solvent mixed into it, functioning as a stabilizer. If desired, this application can serve as an surface preparation stabilizer that is an underlayer for one or more superimposed acrylic or oil applications which do not have any acetone mixed into them.

In some embodiments, a composition made of two or more mixed components is applied on an inventive image as an intermediary for bonding purposes, because at least one of its component ingredients will bond to each of the elements that the composition serves as an intermediary between, e.g, between parts, layers, applications, attachments or combinations of these. For example, the mixed compositions in these embodiments might be layers, parts, underlayers, surface preparation stabilizers, mixed polymer stabilizers, or a combination of these. As an illustration, a mixed polymer used to bond two inventive image parts together is comprised of a mixture of monomers and the catalyst appropriate for each, at least one monomer/catalyst pair of which is **i).** the same as the monomer/catalyst pair used in one or both of the two parts it connects; **ii).** compatible with the monomer/catalyst pair in one or both of the two parts it connects; or **iii).** a combination of these. In another illustration, the mixtures in this embodiment might be made using conventional painting materials and media. For example, a mixture of a vinyl paint or painting medium such as Flashe® and a conventional acrylic paint might serve as a surface preparation stabilizer which is an underlayer on a vinyl inventive image surface, that is superimposed by a conventional acrylic or oil paint. Alternately, the same mixture might serve as a surface preparation stabilizer which is an underlayer on an acrylic inventive image surface which is superimposed by a vinyl paint such as Flashe®, and perhaps acrylic paint too. As another example, a mixture of two or more acrylic emulsions might be applied on an acrylic inventive image surface as a surface preparation stabilizer because one of its component ingredients bonds well to this acrylic substrate, and another of its component ingredients will form a good bond with a different application subsequently superimposed. In a variation of this example, this surface preparation stabilizer has a third component ingredient which will form a good bond to a second different application, also subsequently superimposed. In addition to or instead of this last variation, small irregular particles might be added into the mixture of this example forming a surface preparation stabilizer which will mechanically bond to pastel applications.

The following are examples of conventional image making materials and media which may be used in inventive images or part thereof, according to embodiments, e.g., as stabilizers, as components in stabilizers (such as surface preparation stabilizers), as polymer of the present invention, in image supports, as image supports, used in inventive images according to conventional practices, etc. Among examples of conventional paints are oil paints, water soluble oil paints, acrylic paints, vinyl paints, encaustic, gouache, watercolors, tempera, egg tempera, alkyd paints, casein, inks, etc., such as those paints made with the binders and media specified in the following list. Among examples of sizes, primers and binders used in conventional image making media, and among examples of conventional media for painting are linseed oil (in different forms such as thickened linseed oil, sun thickened linseed oil, stand linseed oil, raw linseed oil, cold pressed linseed oil, bleached linseed oil, and refined or purified linseed oil), walnut oil (e.g., refined or coldpressed), poppy seed oil or poppy oil (e.g., refined or sun thickened), safflower oil, sunflower oil (e.g., refined), clove oil (e.g., rectified), Lavender Oil or Spike Lavender Oil, other oil painting media, acrylic painting media, acrylic emulsions, vinyl painting media, alkyd media, gum arabic, wax (e.g., beeswax for instance refined, bleached and unbleached; carnauba wax for instance, natural or bleached; candellila wax, montan, paraffin, ceresin, wax media for painting, etc.), elemi resin or Gum Elemi, casein, tragacanth or gum tragacanth, amber (such as amber media), Damar, Venice Turpentine or Venetian Turpentine or Larch Turpentine, Canada balsam, Oregon balsam, Copaiba Balsam, methyl cellulose, starch (e.g., rice, wheat flour, cornstarch, arrowroot, etc.), egg or egg yolk, shellac (e.g., containing wax or wax free), dry curd cheese, sturgeon glue, fish glue, rabbit skin glue (e.g., considered to have high elasticity), hide glue, bone glue (e.g., considered to have very high adhesiveness and low elasticity), plate glue, gelatine, Mastic tears or Mastic, varnishes such as Mastic varnish and Copal varnish, rosin oil, Chios Tears, copal resin or Run copal lumps, Sandarac; Manila Copal; Congo Copal, hard, Gum Anime; Copal-X Powder; Myrrh; Olibanum Somalia, incense; Colophony; Burgundy Resin (e.g., partly refined and solidified pitch of the European pine); Dextrin; castor stand oil, lime medium such as pit lime (conventionally used for fresco painting e.g, lime made from marble which contains about 95% calcium oxide and less than 5% magnesium, which is burnt with wood and slaked for at least five years; quicklime; or caustic lime), etc. The following additional examples are listed by manufacturer and/or brand name. In general, of the examples above and below, crayons, painting and drawing sticks, pastels, and gesso are often among the least preferred for use as stabilizers, though they can be successfully used as stabilizers, and though they are often preferred for other uses in inventive image, e.g., for use according to conventional image making practices, such as for drawing. In addition to the examples listed above and below, many other kinds of pencils are useful in making inventive images (e.g., pencils). Some pencils can for example even be used as stabilizers or as part of stabilizers, e.g, due to their wax or other binder.

Rohm and Haas makes many conventional image making products which may be used in inventive images such as their acrylic emulsions for example, Rhoplex®. For example, Rhoplex® WL-96 is comprised of 41-43% by weight acrylic/styrene copolymer, less than 0.1 % by weight individual residual monomers, a maximum of 0.1 % by weight aqua ammonia CAS No. 1336-21-6, and 57-59% by weight water CAS No. 7732-18-5. According to publications on conventional image making practices, and according to the technical staff at Textile Chemical Co., Inc. of Reading, Pennsylvania (who represent, support and distribute Rhoplex®), Rhoplex® is among the most common binders in conventional acrylic paints used for making images. In addition, the technical staff representing Rhoplex® at Textile Chemical stated that in general, the kind of Rhoplex® which bonds best to polyacrylic surfaces is Rhoplex® WL-96, and in general, Rhoplex® WL-51 is the second best. (This is a generalization because other factors affect such bonds, e.g., other ingredients in the paint's vehicle, the paint's application, the specifications of the acrylic surface, etc.)

In some embodiments, one or more of the conventional image making media and/or materials such as those specified above (e.g., an acrylic paint or gel, or a vinyl paint) is used as polymer and/or monomer in an inventive image. For example, a thin fine sheet of surfacing veil fiberglass is embedded in between layers of an acrylic gel medium and/or acrylic paint (e.g., made by Golden) to make an inventive image.

In an embodiment, a catalyst serves as a stabilizer when it is mixed at about 0.4% - 40%, preferably at about 0.4% to 25%, or more preferably at about 0.5%-2% (by volume) with another composition, such as one or more conventional image making materials and/or media. Often it is most preferable to use such a catalyst stabilizer at or near about 1.0% (by volume) in mixtures of this embodiment. All mixtures made of this embodiment are applied onto polymer inventive image surfaces to which their catalyst stabilizer ingredient bonds. For example, the catalyst stabilizer used in the mixture may be the same catalyst or a catalyst that is compatible to the catalyst used to form the polymer inventive image surface upon which the mixture of this embodiment is applied. Some of the applications made according to this embodiment are surface preparation stabilizers. For example, a catalyst is mixed into a conventional paint (e.g., an oil paint or an acrylic paint). This mixture is applied on a polymer inventive image surface which was formed using that same catalyst. Then if desired, some or all of this application might serve as a surface preparation stabilizer. For example, a superimposed application of the same kind of conventional paint which was used in the mixture of this embodiment, but without the added catalyst, a paint which might not have bonded or bonded as strongly to the inventive image without the intermediary surface preparation stabilizer. In another example, mixtures made according to this embodiment are preferred for use on incompletely cured or "sticky" polymer inventive image surfaces.

Incompletely cured or "sticky" polymer surfaces formed in some embodiments, are useful and desirable for forming and/or strengthening bonds in inventive images, as well as for aesthetic purposes. In some embodiments, a somewhat volatile component of cPRM may intentionally or unintentionally be allowed to evaporate creating a less than fully polymerized "sticky" surface on an image of the present invention. "Sticky" polymer surfaces might also be formed as a result of other causes. If desired, part or all of such sticky polymer surfaces may remain and/or be removed, as previously described. However, if desired, part or all of such a sticky polymer image surface might be more fully cured or hardened, possibly fully cured or hardened, and/or its aesthetic can be changed. For example, in some embodiments, an application comprised of the chemical or chemicals which the sticky inventive image surface lacks (e.g., from evaporation and/or from being insufficiently added), and/or one or more comparable chemicals, sometimes mixed with one or more other ingredients if desired, is applied on the sticky image surface. This application is a stabilizer which bonds to the sticky polymer image surface (e.g., co-polymerizing or co-mingling with it), curing and hardening it more fully. If desired, this application may also change the inventive image's aesthetic, and/or enable further processing. The following are examples of applications of these embodiments.
**1).** Applications are made comprised of the chemical or chemicals which the sticky polymer inventive image surface lacks using a sufficient quantity of, more of that chemical, or one or more comparable chemicals on the sticky polymer image surfaces or parts thereof, without additional ingredients. As an illustration, the catalyst used to make the sticky polymer surface and/or a comparable catalyst can be applied onto the sticky polymer surface. For example, a sticky polymer surface made of a polyester monomer and MEKP can be more fully cured and hardened with a superimposed application of MEKP as a stabilizer.
**2).** Applications of example 1). can have one or more additional ingredients mixed into them which change the aesthetic of the sticky polymer inventive image surfaces onto which they are applied. For example, coloration such as a pigment and/or a dye (e.g. in the form of a color concentrate or dispersed in a substance) might be mixed into them. As another illustration, applications of example 1). can be mixed with or into a colored paint, and then applied onto sticky inventive image surfaces or parts thereof. For example, such applications can be made of MEKP stabilizer mixed into an oil paint such as "Cadmium Yellow" made by Winsor and Newton, or "Mineral Violet #2 (manganese phosphate)" made by Lefranc and Bourgeois. Such applications can be made of MEKP stabilizer mixed into an acrylic paint, such as "Liquitex® Basics, Cadmium Yellow Medium Hue", "Liquitex®, Phthalocyanine Green" and "Liquitex® Iridescent Bronze" all of which are made by Binney and Smith; "Flashe®, Manganese Blue (imit.)" made by Lefranc and Bourgeois; or "Fluid Acrylic, Turquois (Phthalo)" made by Golden Artists Colors, Inc. Such applications can be made of MEKP stabilizer mixed into an ink such as "Higgins Black" made by Faber-Castell Corp. of Newark, New Jersey. Such applications can be made of MEKP stabilizer mixed into watercolor paint such as "055 Winsor Green" made by Winsor and Newton. Such applications can be made of MEKP stabilizer mixed into gouache such as "510 Grey #4" made by Winsor and Newton, or "Terre Verte" made by Hobein Works Ltd. in Osaka and Tokyo Japan.
**3).** Applications of example 1). can be mixed into one or more other conventional image making materials and/or media and then applied onto sticky inventive image surfaces or parts thereof. For example, such applications can be made of MEKP stabilizer mixed into linseed oil, such as that made by Lefranc and Bourgeois. Such applications can be made of MEKP stabilizer mixed into "Winton® Painting Medium" made for oil painting by Winsor and Newton. Such applications can be made of MEKP stabilizer mixed into "Liquitex®, Kopal Painting Medium Light", "Liquitex®, All-Purpose Oil Painting Medium" or "Liquitex®, Rapid-Set Oil Painting Medium" which are all made by Binney and Smith for conventional oil and alkyd painting. Such applications can also be made of MEKP stabilizer mixed into an alkyd paint product which contains no pigment or dye, such as "Liquin" or "Wingel" made by Winsor and Newton. Such applications can be made of MEKP stabilizer mixed into an acrylic paint product which contains no pigment or dye such as "GAC-100", "GAC-200", "GAC-400", "GAC-500", "Self Leveling Clear Gel", "Soft Clear Gel", "Super Loaded Matte Medium", or "Glazing Medium" made by Golden Artist Colors, Inc.
**4).** Applications of example 1). can have one or more other stabilizers are mixed into them, e.g, a UV light stabilizer.
**5).** Applications of example 1). can be mixed with or into one or multiple, more volatile solvents, which evaporate more quickly once applied on sticky polymer inventive image surfaces, e.g., leaving these images with surfaces which are not only more fully cured and hardened, but which are also smoother.
**6).** Applications of example 1). can be ingredients in one or more cPRMs and/or they can be mixed into one or more cPRMs, and then applied on sticky polymer inventive image surfaces. Such a layer could, for example, change the image's aesthetic simply by giving it a layer of transparency, translucency or both. For example, the cPRM used might be the same one used to make the polymer surface, but slightly enriched with the appropriate ingredient (e.g., enriched with extra catalyst).
**7).** In addition to, or instead of adding the ingredients described in examples 2).- 6). above to applications of example 1). , applications of example 1). can be mixed with or into one or more other components and then applied on sticky inventive image surfaces.
**8).** Applications of example 1). can be made on SSI on sticky polymer inventive image surfaces.
**9).** Sticky polymer inventive image surfaces can be further processed using a combination of these methods. For example, two or more different applications can each be used on different surface areas of a sticky polymer inventive image, some, all or none of which may be applied on SSI. Or, both an acrylic paint binder and a pigment can be mixed into an application of example 1). An acrylic pant additive and an acrylic painting medium can be mixed into an application of example 1). Linseed oil, a pigment and an oil paint can be mixed into an application of example 1), etc.

Such methods might be used to bond one or more desired superimpositions (e.g., a paint) onto an inventive image which might not have otherwise bonded onto it as desired or at all. Applications made according to these embodiments such as these, might for example, change the inventive image's texture, its color, its light qualities and effects (e.g., making it matte, shiny, less transparent, opaque, adding a new layer of transparency onto it, etc.), and/or other formal elements. Applications made according to these embodiments might be used to mark on inventive images, e.g., for painting, drawing, writing, printing, or a combination of these. In addition or instead, they might also be external surfaces, which may even function as coatings or sealers e.g., over weak, fragile or dusty applications, such as pastel or charcoal drawing. Or, applications of these embodiments might be used for a combination of these purposes. From such applications for example, the incompletely cured polymer surface might become further cured or fully cured and/or it might be partially or entirely overlaid by a new further cured or fully cured or hardened surface. It is preferable that all applications made on sticky polymer inventive image surfaces not affect them undesirably, e.g. causing undesirable effects in the resultant image.

Part or all of applications made according to these embodiments might, for example, be used for bonding purposes. For example, they made be surface preparation stabilizers bonding subsequent superimpositions to inventive images, e.g., some of which might not otherwise be able to bond or permanently bond to the inventive image. In another example, applications of these embodiments might function as bonding substances which are not surface preparation stabilizers, e.g., to bond one or more new attachments and/or parts onto an inventive image. As a further illustration, an application of these embodiments (e.g., as a surface preparation stabilizer), might be interposed between two parts of an inventive image, bonding to the incompletely cured polymer surface of each. In another illustration, an application of these embodiments (e.g., as a surface preparation stabilizer), bonds perforated attachments, paper attachments and small irregular particles to a sticky inventive image surface. In a further illustration, an application of these embodiments (e.g., as a surface preparation stabilizer), is made on a new part or attachment and then is placed in contact with an incompletely cured polymer inventive image surface. Or for example, an application of these embodiments might function as a glue or it be superimposed by a bonding substance which functions as a glue to bond one or more new parts and/or attachments to an inventive image, e.g. in a collage.

In addition or instead of their uses for bonding applications of these embodiments might function as underlayers, for example, functioning like a primer, underpainting, underdrawing, imprimatura, ground, etc., e.g., as a surface preparation stabilizer. Drawing, painting, printing, writing or a combination of these might be superimposed on such underlayers or surface preparation stabilizers, on inventive images, e.g., even using conventional practices such as conventional paints. As illustrations, underlayers (e.g., as surface preparation stabilizers), made as applications of these embodiments which have acrylic paint in them might be superimposed by acrylic paints, oil paints, encaustic paints, other bonding applications or a combination of these. Underlayers, e.g., as surface preparation stabilizers, made as applications of these embodiments which have oil in them might be superimposed by pastels or markers containing oil, oil paints, egg tempera paints containing oil, oil based inks, encaustic paints, other bonding applications, or combinations of these. Underlayers, e.g., as surface preparation stabilizers, made as applications of these embodiments which have wax in them might be superimposed by wax based pastels, encaustic paints, oil paints, other bonding applications, or combinations of these. In another illustration, applications of these embodiments (e.g., as surface preparation stabilizers), enable inventive image surfaces to be used for painting, drawing, writing, printing collage, or a combination of these, which otherwise might not have been desirable for such uses. For instance, sticky polymer inventive image surfaces with applications of these embodiments might be used as initial image supports (which may or may not be stabilizers). Applications of these embodiments (e.g., surface preparation stabilizers), might also be bonding spots (described herein).

The use of incompletely cured polymer surfaces on images of the present invention can result in new unique images, and perhaps in new unique art forms too. A polymer inventive image or a layer of polymer on an inventive image, might for example, be intentionally formed with an incompletely cured surface, in order to have a surface preparation stabilizer upon it which enables it to be superimposed in a desired manner, e.g., with the permanence desired. Because compositions used to form incompletely cured polymer inventive image surfaces are very diverse, prior to using these embodiments, it is often desirable to select or prepare the specific composition of an incompletely cured polymer image surface, to best suit the specific image desired. These are some examples. It might be best if one sticky polymer inventive image surface is formed of a mixture that might be a surface preparation stabilizer - a mixture of one or more sources of coloration or texture; one or more conventional paints, sizes or primers; one or more binders used in conventional image making materials or media; one or more conventional painting media; or a combination of these, mixed in a larger quantity of cPRM, (in cPRM, some of these ingredients are stabilizers) e.g., mixing a pigment, dye, particles, linseed oil, oil paint, colored acrylic paint, or a colorless acrylic paint binder into cPRM. Then this sticky polymer inventive image surface might function as underpainting, an imprimatura or a ground for a superimposed application of these embodiments. Thus, when applied on this sticky inventive image surface, an application of these embodiments, for example, might also function as a layer of painting, drawing, writing, or printing, over underpainting, over an imprimatura or over a ground. It might function as a second imprimatura, or as an imprimatura over a ground. If the application of these embodiments over the sticky polymer surface is a surface preparation stabilizer, it might be superimposed by painting, drawing, writing, or printing, over two underlayers, each of which might be underpainting, an imprimatura or a ground. Alternately, this new application might function as the third superimposed underlayer.

In another example, an incompletely cured layer of polymer might be intentionally formed on a paper inventive image surface (e.g., on a paper image support) and on a polymer inventive image surface (e.g., on a polymer image support which may be a stabilizer) in order to prepare them for painting in oil paints, e.g., as an intermediary bonding layer, or a surface preparation stabilizer, which for example, is a mixture of the chemical lacking in these sticky inventive image surfaces and an acrylic paint which can bond to the oil paint which will subsequently be superimposed.

In another embodiment, the incomplete cure of a polymer inventive image surface is used to bond subjects to it which are simply stuck onto or into it. The uses of this method and the strength of bonds formed using this method can both be expanded, if the stickiness of the incompletely cured polymer surfaces of the inventive image surface is enhanced e.g., by forming it with a composition which leaves its surface especially sticky (such as with a cPRM which contains linseed oil), by forming it in a process which prevents its surface from completely curing (e.g. forming it in an open mold), by applying the appropriate solvent or solvents on it (e.g., MEK), or by using a combination of these methods. Subjects bonded to such incompletely cured polymer inventive image surfaces might, for example, be parts, attachments, applications, or a combination of these, e.g., fine wire, thin papers (such as tissue paper), foils and metal leafs, fine particles (such as flakes of mica, glitter, and pigments), other thin and light materials (such as fabrics, leaves, etc.), and combinations of these. An inventive image processed according to these embodiments may or may not be further processed, as desired, e.g., it might be a final layer, an underlayer, used with Separating Layers or bonding spots (described herein).

If desired, sticky polymer inventive image surfaces and/or applications of these embodiments superimposed upon them might be further processed by removing matter from them, e.g. incised, engraved, carved etc. For example an application of these embodiments might be made on a sticky polymer inventive image surface so that it hardens more fully for easier further processing, e.g., sometimes it is easier and preferable to rework and control a cured or hard polymer surface, than an incompletely cured polymer surface. For example, a carving, sanding or cutting tool may clog when used on an incompletely cured polymer (e.g., when fine drawing is being incised or carved into it), but this problem is solved when the same polymer surface is more fully cured (hardened).

In other embodiments, a bonding agent is applied on incompletely cured polymer surface, or an another inventive image surface, for the purpose of reworking and controlling it as desired (e.g., to create the desired aesthetic effect). As another example, the bonding agent may change the inventive image surface into one that is easier or more desirable to rework, by putting a linear polymer surface on a different kind of inventive image surface (e.g., on a cross linked polymer surface or on a non polymeric surface), by putting a crosslinked polymer on a different kind of inventive image surface (e.g., on a linear polymer surface or on a non polymeric surface), by putting a surface preparation stabilizer on an inventive image which bonds to desired superimposition as desired, which the original inventive image surface would not bond to as desired, etc.

In an embodiment, real spatial depth of an incompletely cured polymer surface is physically altered, affecting its smoothness, its continuousness or both. For example, this may be done to mechanically bond a superimposition onto this image of the present invention, or to strengthen the bond between a superimposition and the incompletely cured polymer. This may be done for aesthetic and/or functional purposes. For example, SSI, small surface irregularities and/or large surface irregularities can be formed on incompletely cured polymer surfaces as desired (e.g., without completely removing these surfaces from the image. For instance, an incompletely cured polymer surface might be scored (e.g., with a scalpel, razor blade, a knife, a carving tool, etc.), it might be abraded (e.g., sanded, sandblasted, beadblasted, etc.), it might be perforated or chiseled, more polymer might be added onto it, irregular particles might be stuck to it, texture might be inlaid in it, metal or string loops might be inlaid in it, mesh might be attached to it, it might be altered in another way, or it might be altered in a combination of different ways, as desired.

In addition to their aesthetic functions, in some embodiments inventive images are graphic art. For example, an image of the present invention might be a public notice, a banner or poster, graphics with an emblem or a logo, graphics with braille, a book or booklet, a graphic presentation or display, etc. In an embodiment, prints are used as parts of images of the present invention, e.g., computer print outs, lithographs, etchings, photocopies, silkscreen prints, woodblock prints, etc.

In an embodiment, inventive images are printed upon. One advantage of using polymer for printing surfaces is that they remain workable, reworkable and controllable as desired, throughout the entire process of their formation, as well as forever afterwards. As prints, polymer that is transparent, translucent, partially opaque or a combination of these, can be viewed, during and after one or more printing processes, through all of their sides which have been left at least partially see-through. In addition, further work can easily be done on inventive image prints, in the process of creating and afterwards as desired (e.g., using other processes and/or materials such as carving, drawing, painting or collage). Their see-through, unprinted sides can even be used as their fronts like reverse paintings on glass. In addition, when polymer is the printing surface, printing can be done on the internal layers of the images, as well as on one or more of its sides. Printing on internal surfaces of images can create new, unique effects.

In an embodiment, images of the present invention are printing plates. These polymer printing plates can help to make other images of the present invention which they are not directly part of and/or they can be images of the present invention or part thereof. For example, polymer can be used as a tool for image making as desired, e.g., like a wood block, a silk screen, or an etching plate. Imagery or text can be formed on the surface of a polymer printing plate as desired, e.g., by carving it and/or embossing it. The print may for example, be polymer and/or non polymeric e.g., conventional paper. The print does not have to be an image of the present invention. As printing plates, polymer are workable, reworkable and controllable as desired, and their workability, reworkability and controllability, never diminishes even as the polymer ages. This is a very different from most other conventional printing plates which usually have limitations, problems and undesirable issues in their workability, reworkability and controllability. In addition, further work can easily be done on printing plates made of polymer, at any time in the process of creating a print, and afterwards (e.g., using other processes and/or materials such as carving, and attachments). In conventional practices for printmaking, such workability, reworkability and controllability and such creative freedom, is usually inconceivable. For example, a used polymer printing plate has colored printing inks on some of its surface. Its bare polymer spots can serve as bonding spots (described in forthcoming text) for a superimposed layer of cPRM, to form an inventive image with an internal layer of coloration. This might be the complete inventive image desired, or it might be further processed. This inventive image might even be used for further printing as desired, e.g., to print another color.

Often while printing in most conventional, printing processes, seeing or visualizing the printed conventional images as it will look as a whole, completely finished is difficult. For example, most processes require the conventional image (e.g., picture or text) to be created on the printing plate as a mirror reversal of its final position, colors, text, its shapes, etc. And prints are frequently printed from multiple separate plates, stones or screens, so that the conventional image is not ever visible as a whole anywhere but in the image maker's imagination until it is completely finished, and then it is usually no longer workable reworkable and controllable as desired. In contrast, inventive image printing plates can be as WYSIWYG, or as preplanned as desired, (a great advantage when creating and printing imagery and text backwards). Also, due to the workability, reworkability and controllability of the polymer, a single polymer printing plate can be used to print any number of colors as desired. A printing plate made of polymer can even be altered in the process of making a print, e.g., between colors. Thus, the print formed with inventive image printing plate or plates, can be formed according to the Principle of Whole Development and Unity to the extent desired and in the manner desired, often to a greater extent than ever before.

In some embodiments, designs, images or part thereof are transferred onto inventive images using heat.

In some embodiments, there are deckled edges on planar images of the present invention. These might be made on image supports which may or may not be stabilizers, thus the edges of these image supports might be deckled. Examples are deckled edges on inventive images which function as: drawings, paintings, prints, images with writing, graphic art, photography, tiles, partitions, windows, doors, table tops, or images which are a combination of these.

In some embodiments, one of the largest sides of a planar inventive image is completely or partially opaque. Also, in some embodiments, one of the largest sides of a planar image support (e.g., stabilizer) is completely or partially opaque. The rest of each of these inventive images and image supports may or may have any coloration. Such inventive images and image supports may be drawings, paintings, prints, photography, images with writing, graphic art, tiles, partitions, windows, doors, table tops, walls, screens, or images which are a combination of these. For example, if the backside of a transparent polymer painting is painted opaque white and/or a reflective color (e.g., a metallic), light will pass into the image's front side, through its transparent and/or translucent spatial depth and reflect off of its backside back out to the viewer.

Inventive images made in some embodiments are writing surfaces, they have writing, or both.

In some embodiments, inventive images are made which are books. These images might for example have their outside cover and/or some or all of their pages made of flexible and/or rigid polymer. As an illustration, planes of polymer are used to make inventive image books. For example, an inventive image book is made with printed text and graphics, on both sides of six translucent pages, each of which is made using a cross linked polymer of the present invention with a layer of fiber embedded medial within their quarter of an inch thickness that is not visible to viewers.

In forming an image or a part thereof, or an image support (e.g., stabilizer) or a part thereof in an embodiment of the present invention, a first polymer is superimposed upon a substrate made of a different second polymer. For example, the two different polymers might be selected to bring different desirable qualities to the resultant image or image support (e.g., stabilizer). For instance, the substrate might be a strong polymer with a high refractive index which is superimposed by a polymer layer which will bond to one or more further superimpositions, e.g., a superimposed paint, an ink, a primer, a photographic emulsion, a glue, etc. As another example, the substrate might be a non-absorbent polymer which is superimposed by a polymer which is absorbent and thus will bond to one or more further superimpositions, e.g., a superimposed paint, an ink, a primer, a photographic emulsion, a glue, etc. In another example the substrate might be a polymer that is rigid and/or strong which is superimposed by a polymer that is less strong, flexible, capable of bonding to one or more further superimpositions, or a combination of these.

If for example, the two superimposed polymers do not bond together, or if they do not bond together as well as desired, bonding methods described herein or conventional bonding methods might be used, e.g., bonding spots, mixed polymers, SSI, etc. It is desirable to be mindful of differences in the coefficients of expansion between the two different polymers in this embodiment and to take measures to insure the permanence of the inventive image formed.

As a further illustration, a polymer substrate underlying a different superimposed polymer can give structure, support, strength, a means of display, rigidity, or a combination of these qualities to the superimposed polymer which may not be capable of providing the inventive image with these qualities as desired, but which may be desirable in the image for other purposes (such as for bonding to one or more superimpositions, e.g., to a paint, an ink, a primer, a photographic emulsion, a glue, etc.). Inventive images of this embodiment can be made in any form desired. The two polymers superimposed may have the same or different dimensions. Forms can even be made using this embodiment which are like the forms of conventional images or of conventional image supports. For instance, the polymer substrate can take the shape of a conventional wooden stretcher, and the polymer superimposed upon it can take the shape of a conventional canvas. As another example, the image or image support made in this embodiment might have only a horizontal section at its top and/or a horizontal section at its bottom made of the two superimposed polymers described in this embodiment, e.g., with the remainder of the image or image support only having one of the two polymer layers, for example in the form of a conventional scroll.

In some inventive images of this embodiment, an ingredient is added into the cPRM used to form at least one of the two polymers superimposed. This ingredient is from the following group, listed a). through f).
a). one or more of the monomers used in the cPRM of other polymer,
b). one or more monomers not in the cPRM used to form the other polymer which will form a polymer that will bond to the other polymer,
c). one or more monomers not in the cPRM used to form the other polymer which will form a polymer with a coefficient of expansion which is close to or the same as that of the other polymer,
d). particles or small pieces of the other polymer,
e). particles or small pieces of a composition which will bond to the other polymer,
f). particles or small pieces of a composition with a coefficient of expansion which is close to or the same as that of the other polymer.
It is desirable to add this ingredient (measured by volume) into the cPRM at between about 0.4% and 40%, more desirably between about 0.4% and 25%, yet more preferable between about 0.4% and 15%, and most preferably between about 0.4% and 10%. The use of this ingredient might be desirable for permanence, such as for bonding the two superimposed polymers together, and/or to lessen a difference in their rates of expansion and contraction, their coefficient of expansion.

In some embodiments, inventive images can have one or more computers as parts. For example, a computer can give an inventive image graphic or design elements, video elements, text, auditory elements, interactive elements, or a combination of these. Also, in some embodiments, spoken words can be part of inventive images, e.g., on recordings or by using live participants.

In some embodiments, large surface irregularities are used to form or to fortify one or more mechanical bonds between two or more inventive image parts (e.g., layers, surfaces, components, and/or attachments). For example, large perforations are used with a bonding substance to bond inventive image parts together. These may be perforations which are existent and/or newly formed in an image of the present invention or part thereof. For instance, many materials, such as wire mesh and lace already have large surface irregularities that can be used to form or fortify a mechanical bond with an image of the present invention as desired. In addition, or instead, large surface irregularities can be made as desired on an image of the present invention, to form one or more mechanical bonds as desired, e.g., perforations can be formed on many materials used in inventive images, e.g., by drilling, by hand (with and without hand tools such as scalpels, knives and ice picks), by punching, tearing, carving, cutting, or combinations of these, as desired. In a further example, large surface irregularities are used to mechanically bond a surface preparation stabilizer onto a polymer inventive image surface e.g., an image support stabilizer. A polymer can formed with perforations as desired, if its mold is shaped so that they form as its cPRM polymerizes. A polymer can be perforated during the gelation stage of its polymerization or thereafter, if desired and as desired. Large surface irregularities can be made in and/or on inventive image ingredients that are polymer and/or non polymeric, as desired. The mechanical bond formed might be all that is used to make the bond desired in an inventive image, or it might be strengthened or assisted by one or more other mechanical bonds, chemical bonds, loose bonds, or a combination of these, as desired. As another example, parts of an inventive image can be made to interlock. For example, they can interlock a). in structures which interlock like links in a chain; b). in structures which interlock like a hook interlocks with something attached (e.g. with an attached loop or a hook that goes through a continuous material like fabric); c). in structures which interlock as the mobile part of a bolt fits into its other part; d). in structures which interlock using male and female parts, such that a positive part fits into a the negative space of another part, e). in combinations of these ways, as desired, etc.

In some embodiments, large surface irregularities are used to bond or to fortify the bond of a surface preparation stabilizer onto a polymer inventive image, e.g., a mechanical bond.

In an embodiment, the gelled surface of cPRM is used for bonding, as desired. For instance, this might be gelled cPRM on a mold, on polymer inventive image surface, or on a non polymeric inventive image surface. For example, such a gelled cPRM might be: a layer, a part, an entire inventive image, most of an inventive image, or it might be a gelled application of cPRM which is being used as bonding substance on an inventive image or on a part thereof. In addition, the stickiness of a gelled cPRM surface or part thereof, can also be used as desired to bond superimposed subjects to an inventive image (e.g. parts or attachments, inlays, etc.) or to strengthen the bond of superimposed subjects to that polymer surface as desired. For instance, fiber, particles, pigments, dyes, texture, other parts, or a wide range of other subjects can be stuck onto a gelled polymer surface as desired. Superimposed subjects (such as attachments and inlays) with SSI will mechanically bond to gelled cPRM, such as subjects which cPRM will penetrate. If the subject is not able to bond to the gelled cPRM or if the subject is not able to bond to the gelled cPRM as well as desired, SSI or more SSI may be made on it. In one method of this embodiment, it is preferable superimpose a subject (such as an attachment or an inlay) on gelled cPRM after the cPRM has gelled firmly enough to hold its own form, e.g., so that the attachment does not sink down into the liquid cPRM, out of the position desired. In another preferred method, subjects are bonded to gelled polymer before it is gelled firmly enough to maintain its own form, e.g., these subjects often sink down into the gelled cPRM and/or the gelled cPRM often permeates these subjects. This embodiment can be used for purposes that are aesthetic, structural and/or functional. In an example, gelled cPRM surfaces are used to bond or to fortify the bond of an inventive image to a superimposed surface preparation stabilizer. In another example, hardware, mounts, and other parts and other components can be bonded to cPRM in such a method. Light effects might be added to a polymer in this method, e.g., by sticking iridescent particles, glitter, crystal pieces, mirror pieces or other reflective particles into a gelled polymer. Or, for instance, drawing, design or painting can be done in such a method, e.g., collage, and applications of coloration can be done in such a method, such methods can be used to form and alter light, form, structure, or texture in an image of the present invention, sgraffito, carving, and combinations of these, as desired. Attachments can also be pressed into, inlaid into, and/or pressed through gelled polymer, as desired, e.g., hardware such as mounts, hooks, screws, and wire might be pressed into or all of the way through a gelled polymer for instance, to hang an inventive image. Fiber and/or other stabilizers might be pressed into gelled polymer so that its weave absorbs enough of the wet cPRM to bond as desired. For a myriad of effects and purposes, all kinds of non polymeric ingredients can be pressed into gelled polymer, at any depth, or all of the way through it and many will bond to gelled polymer. These might for example remain in the polymer as part of it when it hardens; and/or be removed after their insertion in the gelled polymer. In addition, in working with gelled polymers, the VIMC can be used to control or to try to control the image as desired, e.g., to prolong the gelation time of a polymer so that further processing can be done as desired.

Regardless of the method of their incorporation, it is preferable for each non polymeric ingredient in contact with cPRM, to be able to withstand the cPRM, the polymerization process (e.g., polymerization heat), and its inclusion in the polymer and in the image of the present invention over time without undesirable consequences to it, to the image of the present invention; or both. This condition is preferred for many inlaid, embedded and attached non polymeric ingredients. If this preferred condition is not met, it is desirable to create it, e.g., by making and test samples.

One preferred method useful in many embodiments is to change non polymeric ingredients in a way which protects them from the risk of undesirable consequences resulting from their innate inability (or the risk of this inability), to withstand the cPRM, the polymerization process (e.g., polymerization heat), to have and maintain the aesthetic desired in the formed inventive image, or to remain permanently as desired in the inventive image over time. For example, many nonpolymeric ingredients can be sealed or coated with a protecting agent prior to their inclusion in inventive images For example, delicate red rose petals could be sprayed with a transparent, colorless polyurethane varnish to protect their color and form before they are added into cPRM.

It may be preferable to seal such ingredients with substances which already contain one or more stabilizers. In addition or instead, one or more stabilizers might be used as sealants. It may be preferable to use one or more stabilizers in one or multiple of the aforementioned sealants or coatings used on non polymeric ingredients prior to their inclusion in inventive image. For example, an UV light stabilizer can be added into an acrylic medium, a varnish, or, in both, to seal small pieces of paper before they are mixed into cPRM. Or for instance, a paper form may be sealed with an acrylic medium that contains an UV light stabilizer, prior to being inlaid in a polymer inventive image, whereas without this protection, this paper may turn yellow or brown with exposure to ultraviolet light, and, it may also be undesirably deformed or damaged by moisture. Non polymeric inventive image ingredients might be reinforced it in an aesthetically acceptable or desirable way, to withstand inclusion in and/or on the polymer without undesirable consequences. For instance, small paper forms which will be stirred into a cPRM can be reinforced beforehand by thickening each of them with additional paper pulp, cardboard, wood, thin metal, fiber stabilizer, or a coat of paint. Or, for instance, fiber can be used to reinforce inlaid, embedded and/or attached non polymeric ingredients.
Further Description of Attachments to Inventive Images In some embodiments, polymeric or non-polymeric attachments of all kinds are made to one or more polymers and/or non-polymeric inventive image surfaces, as desired. Examples are: attached parts, layers, components, sections, materials, media, objects and devices, and particularly gold and silver leaf, paper, wire, fiber such as fabrics (e.g., stabilizers), metal objects, wood parts, plaster parts, found objects, hardware, leaves, branches, tiles, tessera, clay parts, glass, stones, plates, springs, calculators, pens, carrots, prisms, crystals, found objects, polymer parts, and multiples or combinations of these. Any methods and means can be employed, including conventional and new practices.

Attachments can be made in an image of the present invention using any bonding agents or bonding substances. Many bonding substances used on polymer inventive images are surface preparation stabilizers. For example, to attach a material, object or device onto an inventive image's polymer surface, more of its cPRM, or a different, bonding cPRM (a surface preparation stabilizer) can be used as a glue-like bonding substance, such as by painting this bonding substance onto the polymer inventive image surface, the attachment, or both, and then placing these in contact. When a polymer is attached to a polymer part of an inventive image with which it does not bond, a mixed cPRM (a surface preparation stabilizer) might be preferable for use as a glue-like bonding substance to form the desired bond. For example, mixed cPRM might contain the same monomer as each of the polymers it is in contact with, along with the catalysts appropriate for polymerizing each of these monomers.

In another method, it is often preferred to bond an attachment to an inventive image mechanically, e.g., a method useful for attachments which will not bond chemically or will not bond as strongly and/or as permanently as desired chemically. For example, SSI can be made on one or each of the surfaces which will be in contact and the attachments can be adhered onto the inventive image using a bonding substance (like a cPRM) between the surfaces in contact which bonds chemically to surfaces in contact which do not have SSI on them. Examples, of mechanically bonding an attachment to an inventive image include screwing, wiring, tieing, and/or sewing the attachment on the image.

Attachments on polymer are workable, reworkable and controllable as desired (ranging anywhere from little or none, to free and full workability, reworkability and controllability). For example, attachments to polymer can be further processed. Specifically, the attachments can be carved, painted, superimposed, inlaid, or reinforced (for instance with fiber, described herein). Non- polymeric attachments to inventive image surfaces may or may not be workable, reworkable and controllable. For instance, an inventive image surface might be reinforced with fiber stabilizer before an attachment is installed on it. A fiber stabilizer might be used as part of the connection of an attachment to its inventive image surface (such as fiber used through the perforations of an attachment, or fiber used perpendicularly across the connection seam joining an attachment to an inventive image). A fiber stabilizer might be the item attached to an inventive image. In some circumstances, for example, when strength and permanence are important in an inventive image or when further superimpositions are as desired, it may be desirable to use one or more other stabilizers may be used with, on, and in attachments, e.g., as a coating, for instance to prevent discoloration or damage.

One or more metals and/or ceramic may be sprayed onto inventive images, for example using equipment made by Tafa® in Concord NH. The spray may be a very thin coat or it may only be on selected areas of an inventive image.

As an illustration, an inventive image collage is made using a planar polymer which has SSI on all of its sides, e.g., relying on the mechanical bond of a bonding substance to the SSI on this inventive image's surface.

Images of the present invention or part thereof are collages, decollages or both, e.g., on a polymer and/or non polymeric image support which may or may not be a stabilizer.

In some embodiments, one or more drawings, paintings, prints, images of graphic art, images of computer art or other such works are attached to an inventive image surface, e.g., in it, over it, and/or under it. The resultant inventive image might be complete, or might be further processed. For example, this attachment might be superimposed by more cPRM, attachments, or both. For example a drawing made on a conventional surface, such as paper, might be attached under a polymer inventive image such as a carved polymer plane. Images on transparencies such as overlays and computer print outs are other examples.
**Further Description of Inlaying in Images of the Present Invention** One or more polymer and non polymeric inlays of all kinds can be installed in polymer and non polymeric inventive image surfaces, using any methods. Some examples are stones, shells, metals, bamboo, branches, bones, found objects, pieces of various polymers, string, wood, ceramics, glass, berries, marble, clocks, calculators, dolls, lights, plates, hardware, and any other materials, media, objects, devices, toys, and combinations thereof, inlays in inventive images may be further processed.

These following are examples of methods for inlaying in polymer or non polymeric inventive images. Variations of these and other methods may be used.

An inlay can be installed deeply or shallowly into an inventive image. In many methods of inlaying, the form, shape and/or size of the part of an inlay installed into an inventive image may preferably, to undercut that image for a secure installation. Preferably, an inlay may be attached to an inventive image before or in the process of installing it in the inventive image. The installation of all inlays can be reinforced. For instance, inlays might be reinforced with metal prongs, e.g. like gems. Reinforcement might be done with a casing, a rim, a flange, or a bezel which extends up from the surface of the inventive image, and surrounds the perimeter of the inlay to secure it in place, e.g., as is done with gems. Or, reinforcement might be done using fiber (e.g., stabilizer). For example, a surface might be reinforced with fiber right before an inlay is installed on it. Fiber might be used to secure an inlay's edges and/or its perimeter to an inventive image surface: Fiber might also be used through perforations on an inlay when strength or permanence of the inlays are important, one or more stabilizers (e.g., a ultraviolet light stabilizer); and/or one or more protective coatings (e.g., polyurethane or varnish) may coat or cover one or more inlays or part thereof.

Inlays in images of the present invention can also be further processed. Inlaying is often preferable for connecting inventive images to parts such as mounts, wires, cords, screw eyes, bases, stands and legs which enable them to be displayed, installed, exhibited, or any combinations thereof. For some inventive image it is also preferable to inlay other hardware, such as hardware which enables the inlays to function like hinges, casters, handles, devices which rotate. **Connecting Parts** Inventive image parts can be connected using any method. In an embodiment, two or more inventive image parts are connected to one another using a bonding agent, e.g., two pieces of polymer are connected by a compatible cPRM. In an example, a bonding substance used on a polymer is a surface preparation stabilizer, e.g., which bonds one or more added parts and/or layers to this inventive image. One of the preferred means of connecting inventive image parts is to place them in the desired position relative to one another, e.g., parts placed in contact with one another, such as on top of one another. The inventive image parts being connected might be placed with one or more negative spaces in between them in which the bonding agent can form one or more connection seams (e.g. a cPRM bonding agent forms polymer connection seams between two polymer parts). It is generally preferable that the region or regions of each inventive image part being connected be clean and free of any undesirable matter such as dirt and oil, particularly if that matter will obstruct the bond being formed.

One preferred method of proceeding is to construct a temporary mold around each region of contact on the inventive image parts being connected (e.g., an open and/or enclosed mold), which if necessary, holds the inventive image parts in the desired position. If within this temporary mold, there are one or more negative spaces in between the regions of contact on the parts being connected, the bonding agent put into the temporary mold might form one or more connection seams between these parts (e.g. a polymer connection seam formed between two polymer inventive image parts). Often molds made to connect inventive image parts, are made with upper portions which are partially or almost completely closed. As with other molds which are partially closed described herein, it is preferred that the design of these partially closed molds adequately permit the escape of air, vapors, gases and significant heat from the cPRM or other bonding agent put into them. Also, it is preferred that the amount of and manner in which the bonding agent (e.g., cPRM) is put into such partially closed molds, or into one or more portions of them, adequately permit the escape of air, any vapors, gases and significant heat. After constructing molds for connecting inventive image parts, it is desirable to examine them, e.g., to make sure that they are well sealed to the parts being connected, and are appropriately strong for their purpose (e.g., they hold the image parts in the desired position), and to make sure that the appropriate regions of the parts and the mold interiors are clean. It is preferable that any bonding agent put into molds connecting inventive image parts, bond as strongly and permanently as desired to the regions of contact on the inventive image parts being connected. For example, if cPRM is the bonding agent connecting two polymer inventive image parts, it is preferable that its active ingredients (or at least one of its monomers and its catalyst) are either the same as those used to form the polymer inventive image parts, or that they bond strongly and permanently with the polymer inventive image parts being connected.

In another embodiment, a polymer inventive image is connected to one or more nonpolymeric inventive image parts using a bonding agent. If the bonding agent used is a cPRM, it is preferable for at least one of its monomers and the catalyst for it be the same as those used to form the polymer part. It is further preferred that the cPRM serving as the bonding agent, bond as desired to the non polymeric part being connected. If the cPRM or other bonding agent does not bond or does not bond as well as desired to one or more of the parts which it is connecting, it is desirable to make or fortify the bond, e.g., by making SSI on one or more of the surfaces in contact to mechanically bond to the bonding substance.

In another embodiment, a mechanical bond is used to connect inventive image parts, e.g. two polymer inventive image parts or a polymer inventive image part and a non polymeric inventive image part. Mechanical bonds can be formed in many different ways, some of which also form chemical bonds, and some of which require or could be enhanced using bonding agent, e.g., using such items as: hinges, wire, cord, screws, nuts, bolts, metal corners, other hardware, a peg, or combinations thereof. In addition or instead, a mechanical bond might be formed by connecting both parts to a third part which holds them all together, such as a metal or wood backing, or such as stringing both parts on the same metal ring or wire. In some embodiments three or more parts are connected in one or more bonds.

The joints, seams and other areas of an inventive image where parts were connected can be strengthened, reinforced and made as strong and as permanent as desired in various ways. For example, over a polymer connecting seam; fiber stabilizer, a layer of cPRM, one or more other materials, media, objects, devices, or combinations thereof might be used as reinforcement to enhance strength and permanence. Parts connected to make inventive image are workable, reworkable and controllable as desired, enabling some inventive image to be made using the Principle of Whole Development and Unity to the extent and manner desired, and in processes which can be more WYSIWYG than they would otherwise be, the present invention offers a wide variety of ways to reinforce any bonds in inventive images.

Using methods of bonding inventive image, new and unique images can be formed using conventional practices in inventive image. For example, polymer and non polymeric inventive image surfaces can be used for further processing with conventional practices, e.g., (conventional applications), in inventive images that are as strong and permanent as desired, instead of or in addition to the use of their regular or conventional surfaces in inventive image, e.g., paper or canvas. Because many surfaces of inventive images, particularly polymer surfaces, often have characteristics which are different from conventional images surfaces, new and unique effects can be created in inventive image. **Tacking** In many embodiments, a tacking process is desirable for connecting or fastening inventive image parts together as desired, in a bond that is slight, temporary or both, e.g., in a loose bond. Tacking can be done using any method. For example, one or more tacks can be formed using bonding agents such as cPRMs, glues, other adhesives, pastes, gels, other media, wire, paper clips, staples, string, clips, brackets, clamps, hooks, nuts and bolts, screws, rubber bands, brads, thumb tacks, stickers, fabric, plastic wrap, other plastics, other hardware, other objects, other devices, instruments, other such methods and means, or a combination thereof. Tacks may be used: (a). in one or more areas in between inventive image parts, continuously in between inventive image parts, or both (b). partially or entirely around inventive image parts, (c). through inventive image parts, or (d). a combination thereof. Tacked inventive image parts may also be bonded to one another at any stage in making the inventive image. Tacking is a preferred process for holding polymer and/or non polymeric inventive image parts together just strongly enough so that they stain in a desirable position. It is generally preferable for tacks in inventive images to be temporary. Tacked parts in finished inventive images may further be bonded to one another in one or more other ways, so that the tacked parts are well bonded to one another.

Tacking is useful for many purposes in making inventive image, such as the following examples. Tacking is a often a preferred image making process because if tacked parts are undesirable or not exactly as desired, (e.g., if the form, the Compositional Arrangement, or other formal elements are not as desired) the slightness or temporary nature of the tacked connections enables them to be easily and quickly altered or removed, without risk to the inventive image being formed, and without much time or effort. Tacking can enable inventive images comprised of multiple parts to be made using the Principle of Whole Development and Unity to the extent and manner desired. Tacking allows parts to be held together for contemplation, approval, adjustment, and modification, after which they can be removed or reinforced. It is often preferable to tack together some or all of an inventive image's parts together in the desired Compositional Arrangement, before they are fully connected or strongly connected. It is often preferable to use tacking in image making processes which are spontaneous, WYSIWYG, experimental, when image makers are not sure of an inventive image's formal elements (e.g., when they want to find their vision for the image in the process of creating it, or when they want the process of creating to determine or affect the inventive image). For example, image makers can use tacking to try different Compositional Arrangements, forms, structures, light effects, manners of installation, variations in formal elements.

Inventive image parts can be tacked together as desired. Then if desired, some or all of these parts can be untacked as desired. If desired, some of these parts can be discarded. Other parts can be repositioned and retacked on the inventive image or repositioned and bonded to the inventive image. Additional parts can be tacked or bonded onto the inventive image, as desired. The inventive image's parts can further processed, continually in any manner. Multiple inventive image parts can be tacked together, then the resulting form can be entirely or partially disassembled, altered and reassembled by retacking them together into a different Compositional Arrangement, a form, and a structure. This process of creating using the present invention can continue and be repeated in any sequence, until the desired inventive image, or part thereof is formed. In comparison, if these separate components of an inventive image were well bonded to one another instead of tacked, it would be harder and more time consuming to change them. Image makers' visions and ideas for their images would be controlled by an external limitation, and perhaps compromised. The working process afforded by tacking inventive image components offers workability, reworkability, and controllability.

Any number of tacks can be part of an inventive image for as long as desired, and even be permanent. However, because strength and permanence are generally preferred for an inventive image provided that this does not conflict with any other preference for a specific inventive image, it is generally not desirable to use tacks in inventive image permanently unless the connection they provide is reinforced in another way. Exceptions to the preference for strength and permanence are described herein. In general, there are three preferred options for tacked inventive image parts. Specifically, it is preferred that (1) tacked inventive image parts are later well bonded after they are approved or after they are altered and approved; **(2).** tacked inventive image parts are disassembled later if they are not approved and are not going to be altered for approval; and **(3).** a combination of (1). and 2). even in a single inventive image. For example, polymer inventive image parts may be tacked together just securely enough so that they stay stably in place as desired without being at risk (e.g., coming apart or falling off). These tacked inventive image parts may enable the image maker to see how successful the whole inventive image is aesthetically, structurally, and functionally. An image maker might mount or hang a group of tacked polymer inventive image components the way he envisions displaying the finished inventive image, in order to see this work in progress as fully as possible in relation to the space it will be viewed in, and in order to consider and decide further processing options. An image maker might even do this several times. **Bonding Spots** In some embodiments, it is preferable to leave or make one or more areas as bonding spots within an inventive image in between its parts, e.g., layers, components, attachments, sections, or a combination thereof. Bonding spots are areas on one or more polymer and/or non polymeric inventive image surfaces which form, assist or fortify a bond, or a combination thereof. The resultant bond might be a chemical, mechanical, or a loose bond, or a combination thereof. Bonding spots may be underlayers or a surface preparation stabilizer. Bonding spots may be preferred in some inventive images when strength and/or permanence are important, e.g., to enhance an existing bond or form a bond where none exists. In some inventive images, bonding spots are desired as a means of connecting layers and/or parts, which would not otherwise bond to one another at all. Furthermore, bonding spots might be preferred between inventive image layers and/or parts, even if none of the bonded parts or layers, and/or none of the bonding spots are made of polymer, e.g., bonding spots used between layered paint applications which do not bond to one another, or the bond between which is desired fortified. Bonding spots can be used to bond two or more inventive image parts together as desired or to assist or fortify their bond. Bonds formed with bonding spots can be as strong and as permanent as desired. For example, bonding spots are useful and desirable when three or more adjacent parts would not bond to one another, or would not bond to one another as strongly and as permanently as desired, in the order desired, in any other desirable way. The use of bonding spots can get complex. As a simplified description, bonding spots often work to form, to assist or to fortify bonds, by bonding two inventive image parts together which are not adjacent, through a third part, sandwiched (thus mechanically bonded) in between. Therefore, the center part (e.g., layer) does not have to bond to either of its adjacent parts (e.g., layers), though it may, or it may bond to one or more of these adjacent parts less strongly or less permanently than desired.

Bonding spots are often used in multiples on inventive image surfaces. A bonding spot is small in relation to the total size of the inventive image surface area it is on. The term bonding spot does not indicate any particular shape, frequency of repetitious use, position, aesthetic, structural or functional specification whatsoever. Bonding spots in inventive images can be made to any specifications (for instance thick or thin, scattered or ordered, regular or irregular), with any ingredients and in any shape and color. The arrangement of bonding spots can be unplanned, or made using any method or methods (even on the same surface within an inventive image or part thereof). Bonding spots might for example be the size of pinheads. Bonding spots might be lines, sets of intersecting lines (e.g., a grid or scribbled lines with nonbonding space within them), stripes extending the length of an inventive image. Lines of a drawing, small circles, large crescents, animal shapes, geometric shapes, a pattern (e.g., a paisley), in the shape of a frame or border (the center of which is not part of the bonding spot), or a combinations of these, even on the same inventive image surface. It is generally preferable that bonding spots in inventive image, even on the same image surface, make a desired aesthetic contribution to the image; be aesthetically insignificant or not undesirably visible in the image; be invisible to the human eye in the image; or a combination of these. A single inventive image surface can have any number of bonding spots. It is often preferable to use multiple scattered bonding spots, especially if the bonding spots are between continuous, large, weak, fragile or delicate areas (such as layers of paint) or heavy parts; or when a combination of these conditions exist, particularly when bonding spots are relied upon to make a bond without any other fortification.

Bonding spots are made to be part of an inventive image as they are. Bonding spots can be slight or strong, and function in between inventive image parts. In comparison, tacks are slight, can go in between inventive image parts, and can also hold or fasten inventive image parts in other ways. Both tacks and bonding spots can be formed, reworked, controlled and removed as desired. A tack can become a bonding spot if it fortified, and a bonding spot can become a tack if it is slight and not part of an arrangement with other bonding spots which makes a bond that is not slight.

In one preferred method, bonding spots are left within a nonbonding application on an inventive image surface, e.g., the bonding spots are small, scattered, irregular bare dots. These might be, for example, bare polymer spots left within an application of oil paint on a smooth, unabraded polymer surface. These bonding spots are left so that they and part, or all of the oil paint application, can then be superimposed by one or more materials and/or media, which bond to these bare bonding spots, but which might not bond, or might not bond well to the oil paint e.g., an application of cPRM. The bonding spots bond the layers together, even though the center layer does not bond to the bottom layer and may not bond to the top layer, because the bonding spots bonding the bottom and the top layer together, mechanically bonding the center layer in between.

In addition or instead of bonding spots that are left on an inventive image surface, bonding spots can be applied on an inventive image surface. For example, an inventive image surface is completely covered with a bonding application, such as an acrylic paint bonded to a polymer surface. Within this acrylic application, bonding spots are applied as raised spots, e.g., as thick impasto brushstrokes raised slightly higher than the rest of the painted surface. Once they are dry, some or all of the thin parts of the acrylic application are superimposed by an application which does not bond to e.g., cPRM which hardens forming polymer. Then, another layer of the acrylic paint (e.g., a transparent color) is superimposed over this entire surface, bonding to the raised acrylic bonding spots and mechanically bonding the polymer layer by sandwiching it in the center. Or as another example, a polymer surface is painted with oil paint, and within that application of oil paint bonding spots are left as bare polymer spots. But these bare polymer bonding spots are aesthetically undesirable within the oil painting, and thus, they are painted over with colored cPRM which bonds to them while continuing the aesthetic as desired. Then, when the entire surface is superimposed with a transparent, colorless layer of cPRM, it bonds with the colored polymer bonding spots within the oil paint application.

Many methods used to form bonds can also be used in selective areas to form bonding spots. For example, SSI and/or large surface irregularities can be bonding spots, even on a single inventive image. One or more other subtractive methods can be used to form bonding spots (such as sanding, sgraffito, carving and cutting), and/or one or more additive processes can be used to form bonding spots, even on a single inventive image. For example, when it is difficult to decide the specifications for bonding spots to be left on an inventive image surface, prior to superimposing an application on that surface, bonding spots can be formed after the application is made on the surface, by removing selected areas of that application and/or by adding matter to selected areas of that application. For instance, if the image maker is not sure where to leave bonding spots on a polymer before he paints it in oil paints, so he makes the painting as desired. Then bonding spots can be made by sanding out areas of oil paint, chosen for aesthetic reasons, and/or bonding spots can be made by adding matter in an aesthetic way. For example, black lines can be added on the painted application which serve as bonding spots and as an aesthetic element, and/or black lines can be added on areas of the painted application which have been removed by sanding. For instance, if the image maker decided that the oil painting needed more bonding spots sanded out than he desired in the painting aesthetically (e.g., for strength and permanence), he can sand out all of the bonding spots that he needs, regardless of the aesthetic effect. Then, the sanded bonding spots that he does not want as aesthetic elements in the painting, might be painted over with a bonding substance that is appropriately colored, shaped, and textured (e.g., a bonding acrylic paint or a colored cPRM). In this example, the sanded and/or applied bonding spots, all bond with the new layer of polymer superimposed to form an inventive image which is aesthetically desirable.

Bonding spots can be hardened polymer, or cPRM that is gelled but not fully hardened when it is superimposed. Bonding spots can be spots on an incompletely cured polymer surface which sticky, or which have been made sticky or more sticky using the appropriate solvent (e.g., acetone) on them. Bonding spots can be made of any bonding substance. For instance, the ingredient or the mixture of ingredients which are missing in an incompletely cured polymer, which prevented it from curing completely can be used pure, and/or added into another substance (e.g., a paint or a cPRM) as bonding spots on incompletely cured polymer surfaces. Bonding spots can be comprised of a mixed polymer stabilizer. A mixed polymer bonding spot might contain the same monomer as each of the surfaces that it connects. Thus, two polymer surfaces which will not bond to one another could be bonded by the imposition of one or more mixed polymer bonding spots in between them. Conventional glues can be used to make bonding spots on many inventive image parts, such as those made of conventional materials and media, e.g., wood, rubber, metal, ceramic and paper inventive image surfaces. All kinds of cPRM can be used to make bonding spots on an inventive image. For example, cPRM containing wax and a stabilizer (such as cPRM with Silmar®'s A-111, Silmar®'s S-250, Silmar®'s S250a, Byk®-S 740, or Byk®-S 750) can be applied on polymer as a surface preparation stabilizer made of bonding spots to connect wax based applications to polymer with which such applications do not bond. In addition, some polymer inventive images surfaces form with their own bonding spots, e.g., these may be surface preparation stabilizers or the surfaces of image support stabilizers. For instance, polymer inventive image surfaces made using Byk®-S 740 or Byk®-S 750 form with bonding spots in a surface preparation stabilizer to bond to wax based applications and/or to bond a compatible but different polymer, and they also form with bonding spots to bond more of the same polymer. A further method of forming bonding spots is to form them in a combination of ways.

The uses of bonding spots in inventive image enable new unique images to be made. The luminosity, color, texture, and real spatial depth of oil paint layers can be enhanced by applying a cPRM in between oil paint layers with bonding spots. Bonding spots can enable inventive images to be more versatile, and more workable, reworkable, and controllable than conventional images, and as strong and as permanent as desired while most similar conventional images can not.

### Further Ways to Use and Control Light in Images of the Present Invention which are at least partially Transparent or Translucent, Clarifying Imprimatura

Provided an image of the present invention or a part thereof is at least partially transparent or translucent, how smooth or irregular its surfaces are, is one of the factors which determines its clarity, transparency, translucency, color, other surface light effects (e.g., conventional effects such as matte, semigloss, glossy, reflectivity, iridescence, etc.), or a combination thereof, whether it is polymeric and/or non polymeric. When one or all of the surfaces of an inventive image are bare and smooth, the inventive image may be as clear, transparent and/or translucent as possible (without internal changes and without adding and/or subtracting matter). (Internal changes can increase some inventive image's clarity, transparency, translucency, or a combination of these, such as processes which remove a part of an inventive image which is decreasing its clarity. Also, adding a transparent layer to an inventive image can make it more of a transparent inventive image.) In general, surface irregularities (such as SSI, small surface irregularities and some large surface irregularities), decrease inventive image surfaces' clarity, transparency, translucency or a combination of these. Surface irregularities can also affect the color of inventive images and change other surface light effects of inventive images, e.g., making them more matte. These effects can range from slight to dramatic.

Common exceptions to these generalizations include surface irregularities which are perforations. Perforated inventive image surfaces may have the effects of clarity, transparency, translucency, color and other surface light effects. Also, large surface irregularities may affect the transparency, the translucency, the clarity, the color, or the other surface light effects of an inventive image significantly (particularly, those large surface irregularities that are few and far between, those without fine details, those which are not also covered with small surface irregularities, and those that have a combination of these characteristics). Or for example, the affect that large surface irregularities have on an inventive image's color, clarity, transparency, translucency, other surface light effects, or a combination of these, may be abrupt and discontinuous, in a way that may be significant or insignificant to the inventive image's aesthetic, e.g., a sharp thin shadow on the side of a texture that is otherwise as transparent and as translucent as the rest of that same inventive image surface, colored like it and with other surface light qualities like it (e.g. glossy). The smooth and irregular properties of inventive image surfaces can be formed, developed, reworked and controlled, to create desired effects on an image of the present invention, e.g., effects of light, darkness, color, surface light (such as matte and glossy) and spatial depth. Though the smoothness and the irregularities of polymeric and non-polymeric inventive image surfaces that are at least partially transparent or translucent can be used for effects of transparency, translucency, clarity, color, and other surface light effects, these effects are often more workable, reworkable and controllable on polymer.

One or more processes which create surface irregularities (e.g., small surface irregularities, SSI and large surface irregularities) may be used on at least partially transparent or translucent inventive image surfaces to change their color or other surface light effects (e.g., making them less glossy or matte; or to decrease their clarity, transparency, or translucency; or to create a combination of these effects.

One or more transparent or translucent substances may be used to fill in the surface irregularities of polymeric and/or non polymeric inventive image surfaces which are at least partially transparent or translucen. Preferably these applications bond to their respective image surfaces. An important use of these embodiments is to change an image of the present invention's color, to clarify its surfaces or part thereof, to increase its transparency and/or translucency, to change its other surface light effects. Such processes for filling in surface irregularities might be used with one or more processes which remove matter from the image of the present invention's surface irregularities, for example, to lessen their spatial depth (e.g. sanding, sandblasting or beadblasting). For example, filling in a sandblasted surface on a colored transparent inventive image surface to any extent (e.g. halfway or completely), with a transparent substance is likely to darken its color (even if the bonding substance has no coloration), clarify its surface, increase its transparency and make it less matte. Because methods of lessening the spatial depth of inventive image surface irregularities can also reduce the variance in their spatial depth, such methods can also alter the variance in the thickness of the application superimposed to fill them in. Such methods might be preferable, for example, when marking on a inventive image surface using a composition that has a refractive index and/or color that is noticeably different from that of the inventive image's surface (though color is often only a concern when the surface irregularities are deep or large). The less the variance in the thickness of many applications on inventive image surfaces, the more consistent they may look. However, used alone, processes for the removal ofmatter from inventive image surfaces which decrease surface irregularities may or may not create the desired color change, clarification of the inventive image surface, the increase in its transparency and/or translucency, other surface light effects, or a combination of these. They may even for instance result in opposite effects, e.g. reducing the clarity of the inventive image surface, making it less transparent or making it more matte.

A wide range of transparent and/or translucent applications can be used to partially or completely fill in surface irregularities on inventive images or on parts of them which are at least partially transparent or translucent, to change their color, increase their clarity, transparency, and/or translucency; create other surface light effects; or create a combination of these effects. It is preferable to use substances which bond to the inventive image as strongly and as permanently as desired, and it is more preferable that substances used for these purposes, bond to these inventive image surface strongly and permanently, provided this preference does not conflict with another more desirable preference for a specific inventive image. Substances used on small surface irregularities may rely on the mechanical bond and not bond to the inventive image surface in any other way. While this may also be true for applications on large surface irregularities, it is less often the case. Substances used to fill in large surface irregularities on image of the present invention may not bond to them well or as well as desired and, thus, it is often preferable that these substances bond in other ways. Other aspects in the relationship between the substance or substances and the specific inventive image surface or surfaces they are used upon can also be significant considerations. The following are examples.

Some polymeric and non-polymeric inventive image parts may not be made as clear, transparent and/or translucent as desired, and some images of the present invention can not be made completely clear or completely transparent and/or translucent, for a wide variety of reasons involving the internal composition of specific images and the composition of the specific bonding substances used. (For example, some monomers used to form a polymer are not completely transparent, fiber in polymer can lessen its transparency and/or translucency, some non-polymeric materials are not completely transparent and can not be made completely transparent, and some problems in polymerization can cause permanent color changes in polymer, e.g. using some cPRM, as described herein.)

In applications on surface irregularities on inventive images which are at least partially transparent or translucent, the closer the refractive index of these applications are to the refractive index of the image of the present invention or part of an inventive image on which they are applied the more transparent and/or translucent the image of the present invention or parts of inventive images will tend to become, as their surface irregularities are filled and smoothed. For example, if the refractive index of both the bonding substance and the image of the present invention it is applied upon are the same, once this bonding substance completely fills in and smooths over this image's surface irregularities, its surface will become clear as, and as transparent and/or translucent as possible. This inventive image may not become as clear, and as transparent and/or translucent as it is capable of being, if its refractive index was significantly different from that of the application used upon it, if the application only partially filled in its surface irregularities, or both. For instance, if the inventive image surface is made using a transparent colorless cPRM, and the bonding substance filling in and smoothing out its surface irregularities is colorless and has the same refractive index as the polymer, this bonding substance may be used to smooth out this inventive image surface to make it transparent. But, using a bonding substance with a substantially different refractive index is to smooth out the surface irregularities of this inventive image surface will increase the clarity and the transparency and/or translucency of this inventive image, though it may not make it completely transparent.

Translucent bonding substances are most preferred when filling in inventive image surface irregularities for the purposes of increasing the surface's clarity, transparency and/or translucency; altering its color; changing other surface light effects; or creating a combination of these effects.. Further, it is preferred that the bonding substance or substances used in these processes contribute desirably to the aestheticws of the image of the present invention; that they are aesthetically insignificant in the inventive image or not aesthetically undesirable in the inventive image; that as superimposed layers, these applications are not visible to the human eye as being separate from the rest of the image of the present invention, or that they are part of the image of the present invention in a combination of these ways. Often, it is desirable to fill in inventive image surface irregularities with a bonding substance that has a refractive index which is either the same, or as close as possible to that of the inventive image surface it is used upon. Bonding substances with refractive indexes which are different from that of the surface of an inventive image they are used upon, can be used. Often slight differences in these refractive indexes are not noticeable or not significant in the inventive image. Among the examples of media and materials which might be used as bonding substances to fill in inventive image surface irregularities for these effects, are transparent and translucent: cPRMs, paints and painting media such as acrylics, wax based (such as encaustic), oil based (such as oil paints), alkyds, paints with cPRM binders), watercolors and tempera, as well as glues, varnishes, fixatives, sealers or, combinations of these. In general, when applying transparent and/or translucent substances on inventive image surface irregularities, it may be desirable to eliminate undesirable air bubbles. Special equipment such as a vacuum may be used to eliminate such air bubbles. However, methods of eliminating undesirable air bubbles by hand may be effective.

It is preferable that applications of bonding substances filling in surface irregularities on inventive image surfaces for these purposes are substantially transparent, and it is most preferable that their applications are completely transparent, however these bonding substances can be as transparent and/or translucent as desired. Further, these bonding substances can be colored and/or colorless (e.g they might have particles in them). Preferably, these bonding substances may be colored like the inventive image surface they are used upon.

In some embodiments, the variance in the relationship between the refractive index, the transparency, and the color of a bonding substance and the inventive image surface it is applied upon can be used for desired aesthetic effects, e.g., these differences between a inventive image surface and an application made on it can be desirable. For instance, an application of a transparent colored bonding substance can make a sandblasted inventive image surface comprised of colorless transparent cPRM, much darker in color and more transparent. In applications of bonding substances on surface irregularities of image of the present invention which have noticeably different refractive indexes, color or both, the variance in the thickness of the application of bonding substance caused by the image of the present invention's surface irregularities can give it a noticeable variation in its refractive index, color, or both. For example, the application of bonding substance will be darker and less transparent in places where its application is thicker (which are the places where the surface irregularity it is filling is deeper than the adjacent surface irregularity filled by the same bonding substance). However, in applications of bonding substances on SSI of image of the present invention which have noticeably different refractive indexes, color or both, the variance in the spatial depth of the application of bonding substance caused by the inventive image's surface irregularities may not produce a noticeable inconsistency in the aesthetic of either the application or the image of the present invention (e.g., often the irregularities of SSI, such as those formed by sandblasting, are difficult or impossible to see with the unaided human eye, but they can be seen in a microscope.)

In some embodiments, applications made on surface irregularities can connect one or more attachments, inlays, parts, objects, and/or devices to the inventive image or part thereof. On polymer, these applications may be surface preparation stabilizers.

Bonding substances may be used to fill in surface irregularities upon inventive image surfaces of the same composition (e.g., upon inventive image surfaces which are at least partially transparent or translucent) to increase surface clarity, increase transparency and/or translucency, change other surface light effects, alter color, or to create a combination of these effects (e.g., cPRM used to fill in surface irregularities on a polymer inventive image surface made of the same cPRM). In addition or instead, bonding substances may be used for these effects on surface irregularities of images of the present invention which are at least partially transparent or translucent, and which are different in composition from the inventive image surface upon which they are applied. In this patent and within the context of the present invention, the term Clarifying Imprimatura refers to any transparent and/or translucent application made on surface irregularities on a transparent and/or translucent inventive image surface which is made of a composition that is different from said application, in which said application clarifies that inventive image surface and increases its transparency and/or translucency as it fills in its surface irregularities to any extent or to varying extents. (However such an application which only differs from its inventive image surface in color is not a Clarifying Imprimatura.) A Clarifying Imprimatura may also change other surface light effects of an image of the present invention, e.g., decreasing its matteness and/or increasing its glossiness. Clarifying Imprimatura may be colored and/or colorless, they may even be multicolored. The inventive image surfaces Clarifying Imprimatura are applied upon may be colored and/or colorless and the application of a Clarifying Imprimatura on an inventive image surface may alter that inventive image surface's color. Clarifying Imprimatura which are thicker than the thickness needed to fill in the spatial depth of the image of the present invention's surface abrasions, can also add a layer of transparency, translucency or both to an image of the present invention. A Clarifying Imprimatura may or may not be a surface preparation stabilizer. But, SSI on polymer inventive images superimposed by Clarifying Imprimatura may be surface preparation stabilizers. A Clarifying Imprimatura might for example, be applied on cPRM, polymer, non- polymeric inventive image surfaces, or a combination of these. But, if an inventive image surface is incapable of becoming clearer and more transparent and/or translucent (e.g., a surface that is opaque internally and externally), an application made on it is not a Clarifying Imprimatura.

Clarifying Imprimatura can often rely on the mechanical bond to the surface irregularities upon which they are applied to bond to the image of the present invention. Thus, often Clarifying Imprimatura are made using substances which rely heavily or entirely on surface irregularities to bond to inventive images, as the Clarifying Imprimatura do not bond or do not bond as strongly or as permanently on these inventive image surfaces when or if they are smooth. But provided they are made using bonding substances that are different from the inventive image they are applied upon, Clarifying Imprimatura can also be applications of bonding substances which do not rely on surface irregularities to bond to inventive images, for example, they bond to their inventive image surfaces in other ways (e.g. chemically) or they can even be bonding substances which would bond to their inventive image surfaces if they were smooth. Clarifying Imprimatura increase the clarity of image of the present invention upon which they are applied, and they increase its transparency and/or translucency to varying degrees, e.g., approaching or achieving transparency when the refractive index of the Clarifying Imprimatura and the refractive index of the inventive image are similar or the same.

For example, an application of a transparent acrylic medium on surface irregularities on a transparent or translucent polymer inventive image surface is a Clarifying Imprimatura. An application of a transparent cPRM on surface irregularities on a transparent or translucent glass inventive image surface is a Clarifying Imprimatura. But, an application of a transparent or translucent cPRM on a polymer inventive image surface formed using the same cPRM (whether it has surface irregularities or not) is not a Clarifying Imprimatura. However, if the transparent or translucent cPRM application on the surface irregularities of a polymer inventive image surface contains a monomer and the catalyst appropriate for polymerizing it which are not present in the cPRM used to make the polymer inventive image surface, this application is a Clarifying Imprimatura. Further, a transparent or translucent cPRM is a Clarifying Imprimatura when it is applied on surface irregularities of a polymer inventive image surface which bonds to it mechanically, even though its active ingredients are different from those in the cPRM used to make this inventive image surface.

For example, the transparency and/or translucency of a gelled application of cPRM, or of a polymer, which is at least partially transparent or translucent, is increased to the extent desired, by filling in some or all of its small surface irregularities, large surface irregularities, or both, using a bonding substance that is transparent or translucent. If all of this inventive image's surface irregularities are smoothed out by this bonding substance, and if the refractive index of the bonding substance is the same as that of the inventive image surface, the inventive image surface's maximum transparency and/or translucency can be attained. Any of the following options can serve as further description of this example.
**1).** One or more applications of cPRM may be used as the bonding substance on the surface irregularities, on either the gelled cPRM or the polymer. If the composition of the cPRM bonding substance is not the same as the composition of the cPRM used to make the inventive image surface it is applied upon, it is a Clarifying Imprimatura.
**2).** One or more applications of one or more media and/or materials other than cPRM, may be used as the bonding substance or substances on the surface irregularities on either the gelled cPRM or the polymer. This inventive image then has a Clarifying Imprimatura.
**3).** Options 1). and 2). may be combined to form a Clarifying Imprimatura on some irregular areas of the inventive image surface which are visually identical to other areas of this same inventive image surface, which have no Clarifying Imprimatura on them. Filling in the surface irregularities on some areas of this gelled cPRM or polymer image of the present invention using a cPRM bonding substance which is the same as the cPRM used to make the inventive image surface it is applied upon, has the same refractive index and coloration as the bonding substance but which is not cPRM (e.g. a paint) used to make the Clarifying Imprimatura on other areas of this same inventive image surface, resulted in the consistent increase in the clarity and the transparency of the inventive image surface, change in color, and its change in other surface light effects, despite the use of two different substances on this surface.
**4).** Two steps may be used to further process the image of the present invention. In step (a), matter may be removed from the image of the present invention's surface irregularities, (e.g., by sanding) so that they become significantly shallower. Then, in step (b), the remaining surface irregularities may be filled in and smoothed over to the extent desired with one or a combination of the aforementioned bonding substances.

As another illustration, a cPRM might be used to fill in and smooth out some irregular areas of a sandblasted transparent polymer surface which is the same composition that was used to make this polymer image of the present invention. These areas are not Clarifying Imprimatura. Other sandblasted areas of this same polymer surface might be filled in and smoothed out using a transparent paint which bonds mechanically to its SSI, but which may or may not be able to bond to this same image of the present invention without the SSI. These areas are Clarifying Imprimatura. Both the cPRM and the Clarifying Imprimatura increase the transparency of this inventive image, and make it more glossy. But, because the bonding substances have different ingredients and different refractive indexes, these increases differ in some areas of this inventive image, and may or may not be visible to the human eye.

The ways in which Clarifying Imprimatura can be applied and used can be the same as or extend for beyond the applications and uses of conventional imprimatura. Clarifying Imprimatura may or may not cover an inventive image surface continuously, or in a veil-like manner. Clarifying Imprimatura can be continuous or discontinuous on one or more surfaces of the same image of the present invention. Further, Clarifying Imprimatura do not have to be underlayers and do not have to be superimposed by further applications, though they can be either or both. Clarifying Imprimatura, might also be final layers on an image of the present invention, or part thereof, covering it partially or entirely, e.g., they can be veils, a drawing, a painting, a sketch, a pattern, a design, or a combinations of these as the final layer of an image of the present invention. Or, on a single image of the present invention, even on the same surface of a single image of the present invention, one or multiple Clarifying Imprimatura can serve a combination of these purposes. In addition, Clarifying Imprimatura can be made using multiple superimposed layers of one or more bonding substances, covering one or more inventive image surfaces, partially or entirely, applied as thickly, and as consistently or unevenly as desired. Clarifying Imprimatura can fill in any percentage of the inventive image surface irregularities upon which they are applied, as consistently as desired. The thickness and/or unevenness of Clarifying Imprimatura can even be used as aesthetic elements in the inventive image, e.g., Clarifying Imprimatura can be partially or completely applied in impasto brushstrokes. Clarifying Imprimatura may be used in any form of art or design.

Sometimes Clarifying Imprimatura may produce desirable aesthetic effects on image of the present invention which bonding substances of the same composition as the inventive image surface onto which they are applied are unable to produce. For example, when filling in and smoothing out the surface irregularities on a polymer image of the present invention with more of the same cPRM that was used to form that polymer image of the present invention, the resultant inventive image surface may be more glossy than desired. This inventive image surface could be made matte by making more surface irregularities on it, e.g. sand or sandblast it, but this may not be desirable. Whereas, if a matte substance (such as a colorless matte paint binder), were used on this polymer image of the present invention's surface irregularities, this inventive image could be semi gloss or even matte without surface irregularities, with reduced surface irregularities, or with undesirable surface irregularities reduced or visually eliminated by being filled in. Alternately, sometimes bonding substances which are the same as the inventive image surfaces they are applied upon can produce the same aesthetic effects as Clarifying Imprimatura. For example, a transparent red cPRM which is the same cPRM that was used to make a polymer image of the present invention, might have the same refractive index and the same color as a transparent red paint, or the differences in their refractive indexes and their colors might not be noticeable to viewers in their applications on the surface irregularities on the polymer image of the present invention. Or for example, a colorless transparent cPRM which is the same cPRM that was used to make a polymer image of the present invention, might have the same refractive index and the same color as a different colorless transparent bonding substance (such as an acrylic gel), or the differences in their refractive indexes and their colors might not be noticeable to viewers in their applications on the surface irregularities on the polymer image of the present invention.

The change in the composition of inventive image surfaces brought by Clarifying Imprimatura on them can be valuable and desirable, even with the inventive image surface irregularities. Some areas of the surface irregularities superimposed by the Clarifying Imprimatura or the spatial depth of these surface irregularities may be desirable. In some embodiments, surface irregularities are made on inventive images which are at least partially transparent or translucent, for the purpose of bonding a Clarifying Imprimatura to the image which completely fills in and smooths over these surface irregularities so that they are no longer visible or noticeable to viewers. This Clarifying Imprimatura might be a final layer on this inventive image surface, or it might be superimposed by one or more further applications. For instance, one or more applications which would not have bonded, or which would not have bonded as desired to this inventive image when it was smooth with no surface irregularities are made on the Clarifying Imprimatura because they bond to it or they bond to it better.

For example, it is often desirable to make applications on inventive image surfaces which are at least partially transparent, but the substance desired for making these applications does not bond to the inventive image as desired (they do not bond at all, they do not bond as desired, or both). By making SSI on the areas of these inventive images where these applications are desired, this problem may be solved as in the following three ways. 1). These applications can be made on this inventive image's SSI as Clarifying Imprimatura. Thus, for instance, a paint which does not bond to a polymer inventive image, can be used on it and mechanically bonded to it by its SSI (SSI used for bonding such painting to polymer are surface preparation stabilizers). 2). A Clarifying Imprimatura can be applied onto these inventive image SSI as an underlayer (e.g. as a continuous underlayer which is colored like a conventional imprimatura, or as a colorless underlayer underdrawing, or underpainting). This Clarifying Imprimatura can be superimposed by further applications. Thus, for instance, a paint which does not bond to a polymer inventive image, can be used as desired on a Clarifying Imprimatura on this inventive image to which it bonds. Both these SSI and Clarifying Imprimatura are surface preparation stabilizers. 3). Both of these methods, 1) and 2) can be used. As another example, it is often desirable to clarify part or all of inventive image surfaces, to increase their transparency and/or translucency, to change their coloration, to change other surface light effects or to produce a combination of these effects, by partially or completely filling in their surface irregularities, without diminishing or eliminating the bond or the assistance in bonding that the surface irregularities being filled in used to be able to provide to desired superimposed applications which could not bond as desired to this inventive image without bonding mechanically to them. The use of a Clarifying Imprimatura can clarify such inventive image surfaces, increase their transparency and/or translucency, change their color, change other surface light effects, or create a combination of these effects as desired, and even though it will diminish or eliminate the mechanical bond that the filled surface irregularities used to provide, this Clarifying Imprimatura can be made of a composition which bonds as desired to the superimposed applications desired.

When the function of surface irregularities is at least partially for the mechanical bond they provide to applications superimposed on an image of the present invention (e.g., as SSI), and their aesthetic effects are partially or completely undesirable, (e.g. the effects of decreasing the image of the present invention's clarity, decreasing its transparency, decreasing its translucency, changing its color, changing other surface light effects, or a combination of these), then it is often preferable to apply a Clarifying Imprimatura over the aesthetically undesirably visible surface irregularities (e.g., SSI which are surface preparation stabilizers). If further applications are made on this inventive image surface, its Clarifying Imprimatura can enable the process of their creation, to be freer, more spontaneous, more WYSIWYG, and more according to the Principle of Whole Development and Unity. Because the Clarifying Imprimatura may eliminate the undesirable aesthetic effects created by the some or all of the surface irregularities on such inventive images, while maintaining the ability to bond as desired to subsequent applications, these undesirable aesthetic effects do not have to be eliminated in the process of applying these subsequent applications, and/or thereafter. It is often highly preferable to use a Clarifying Imprimatura to fill in undesirable inventive image surface irregularities so that they are no longer visible, before further work on the image of the present invention proceeds, so that this further work can be done focusing upon the aesthetic changes being made on the inventive image by the new applications, rather than in a process in which these surface irregularities are clarified, their transparency and/or translucency is increased, their color is changing, other light effects are changing, or a combination of these effects are occurring at the same time as these new applications are adding new aesthetic changes to this inventive image. Clarifying Imprimatura can be used to make images with a real tangible form of light, with a real tangible form of transparency, a real tangible form of translucency, and a real visible form of spatial depth, in a process that is as spontaneous, as WYSIWYG, and as much according to the Principle of Whole Development and Unity as desired. This is new, unique, and extremely meaningful to the future of image making and to images. For example, Clarifying Imprimatura enable new unique painting, printing, drawing, writing, collage and photography to be done on self supported, transparent surfaces using real 3D depth and real tangible light as desired in a spontaneous, WYSIWYG process using the Principle of Whole Development and Unity to the extent and manner desired.

A Clarifying Imprimatura can be used as a final layer of an image of the present invention to change surface irregularities on it so that they are smoother, clearer, more transparent, more translucent, or completely transparent; their color or other surface light effects are different; or a combination of these. This might be very helpful e.g., in order to finish the rest of the image of the present invention in a process which is as WYSIWYG as desired, according to the Principle of Whole Development and Unity to the extent desired and in the manner desired. Also, when the use of real light, real transparency, real translucency, real spatial depth or a combination of these are important to a particular image of the present invention which is being made, methods using Clarifying Imprimatura are often preferred.

For example, a transparent polymer might have SSI (such as sanded abrasions) which are shallow enough to be easily filled in, and thus, easily clarified (or visually eliminated) by the intended superimposed application or applications of Clarifying Imprimatura comprised of one or more transparent or translucent media and/or materials, other than cPRM, e.g., paint applications. Thus, these SSI serve as surface preparation stabilizers. For instance, if a viscous transparent or translucent paint is used as the Clarifying Imprimatura on this polymer image of the present invention (e.g., encaustic paint, oil paint or thick acrylic paint), its application in one layer might fill in said polymer's SSI completely, mechanically bonding to them and clarifying them (or eliminating their visibility) while simultaneously altering the image of the present invention's color, and increasing its transparency, translucency or both. In addition or alternately, if a thin transparent or translucent paint is used as Clarifying Imprimatura on these surface irregularities, (such as watercolor layers, or layers of oil paint thinned with turpentine), it might take multiple applications to completely fill in their spatial depth, the first layer of which mechanically bonds to the surface irregularities and the remainder of which bond both to the remaining surface irregularities and to the previous application of the Clarifying Imprimatura done in the same paint. As the layers of this Clarifying Imprimatura are superimposed and this inventive image's surface becomes smooth, it will be clarified, its color will be changed, its transparency and/or translucency will increase, its other surface light effects will be changed, or a combination of these effects will occur. If one or more layers of the Clarifying Imprimatura are superimposed after this inventive image's surface irregularities are completely filled and smoothed out, these layers may bond to the previous layers of this Clarifying Imprimatura even though they will have no SSI with which to bond. In comparison, when using a number of conventional practices (e.g., traditional materials and media like oil paints), there may be limitations to superimposed layering.

By filling in and smoothing out inventive image surface irregularities, their clarity can increase transparency and translucency can increase; their color can change; other surface light effects can change; or a combination thereof, while simultaneously decreasing and/or eliminating the mechanical bond their surface irregularities provided to further superimpositions. However, if it is desirable to fill in and smooth out such inventive image surface irregularities, and then have this surface bond to additional superimpositions (e.g., as a Clarifying Imprimatura that is a surface preparation stabilizer), it is preferable to use an application which can bond to the specific kinds of further superimpositions. For example, such a bonding substance might be transparent, translucent, or completely transparent and colorless. The bonding substance might be applied thickly enough to completely fill in and smooth out an image of the present invention's surface irregularities, thereby clarifying or visually eliminating them while allowing the ability to bond to the further superimpositions as strongly and as permanently as desired. Or, if the visibility of some of these surface irregularities is aesthetically desirable in the inventive image, a Clarifying Imprimatura might be applied partially over inventive image surface irregularities, e.g., in the design as desired. Clarifying Imprimatura can enable areas to become as transparent and/or translucent as desired, and the bonds formed to Clarifying Imprimatura can be as strong and as permanent as desired. Desirable uses of Clarifying Imprimatura on inventive images include uses on surfaces which are then drawn upon, painted, written upon, printed upon, superimposed by additional matter of another kind, carved, processed in other ways, or processed in a combination of these ways.

On images of the present invention, it is preferable for Clarifying Imprimatura to be aesthetically desirable; aesthetically insignificant or not undesirably visible; invisible to the human eye; or a combination of these. These are four examples of preferred uses of Clarifying Imprimatura. 1). A Clarifying Imprimatura can be for visual observation, or be a final layer partially or entirely covering an inventive image surface. 2). A Clarifying Imprimatura can be for visual observation, serving partially or entirely as a bonding substance or an underlayer e.g., a surface preparation stabilizer, for further painting, drawing, printing, writing, collage, or a combination of these. As a bonding substance or an underlayer (e.g., a surface preparation stabilizer), it is preferred that a Clarifying Imprimatura bond to superimpositions. Thus, to the extent that Clarifying Imprimatura fill in the inventive image's surface irregularities, it is preferred that superimpositions made on these Clarifying Imprimatura do not rely on these same surface irregularities to bond to the image of the present invention. However, it is more preferable that superimpositions made on these Clarifying Imprimatura do not rely on these same surface irregularities at all to bond to the Clarifying Imprimatura. Thus, it is preferable that Clarifying Imprimatura used as bonding substances or underlayers (e.g., as surface preparation stabilizers) on images of the present invention for further superimpositions are able to bond as desired to these further superimpositions. 3). To the extent that Clarifying Imprimatura fill in and smooth over an image of the present invention's undesirable surface irregularities (rather than having a subsequent application fill them in), further processing of this inventive image surface can be more spontaneous, more WYSIWYG or perhaps even completely WYSIWYG, and more according to the Principle of Whole Development and Unity, to the extent desired. 4). Clarifying Imprimatura can be used for a combination of these purposes.

In an embodiment, a Clarifying Imprimatura may function like or in a manner similar to conventional image bonding substances or underlayers. For example, on a inventive image surface, a Clarifying Imprimatura might function like a primer, a size, a conventional imprimatura, underpainting, underdrawing, adhesives, or a combinations of these. For example, used as an imprimatura on a polymer, a Clarifying Imprimatura might be comprised of a single pigment or dye homogeneously mixed in a single material and/or medium, the mixture of which is then applied uniformly onto surface irregularities on a polymer. For instance, a Clarifying Imprimatura could be made using the same substance used to make traditional imprimatura, e.g. thin oil paint or thin acrylic paint. Or, if the new unique form of Imprimatura described herein is used on inventive image surface irregularities, it can be a Clarifying Imprimatura. For example, such a new unique imprimatura can be a Clarifying Imprimatura if it is used on surface irregularities on polymer and/or non polymeric inventive image surfaces that are different from the polymers used in these Clarifying Imprimatura. Or, for example, used as underpainting, a Clarifying Imprimatura might be comprised of a material or medium used in two or more colors, applied onto the polymer's surface irregularities as desired, e.g., in a design which serves as a basic foundation for the rest of the images which will be formed by one or more further superimposed applications.

In an embodiment, a sealer, a fixative or a protective coating may be used partially or completely over a Clarifying Imprimatura. In an embodiment a Clarifying Imprimatura is used as a drawing application, a painting application; a sealer, a fixative, or a protective coating. In some embodiments, it is often preferable for Clarifying Imprimatura used on surface irregularities on a transparent colorless image of the present invention or part thereof, to be made as a single uniform application of a colorless, transparent material or medium, or combination thereof. It is often preferable for Clarifying Imprimatura, used on surface irregularities on colored images of the present invention or part thereof to be colored like the image of the present invention they are applied upon or similar to it. These preferences are particularly desirable when further applications (e.g., painting, drawing, printing etc.) may be made on these Clarifying Imprimatura, especially when a spontaneous, WYSIWYG, process of creation which is according to the Principle of Whole Development and Unity to some extent is preferred. One of the most preferred materials for use as a Clarifying Imprimatura on polymer inventive image surface irregularities is a transparent colorless acrylic emulsion, paint and/or painting medium, e.g. such as conventional artists' acrylic gels or pastes. These are available in a wide variety, but among these, those acrylics which form bubbles with brushed applications are generally less preferable. Some materials and some media (e.g., some colorless, transparent acrylics) may need to dry or harden before they show their full transparency and/or translucency, however, this is often a quick process.

In an embodiment, a Clarifying Imprimatura is used as a surface preparation (e.g. as a surface preparation stabilizer), to give an image of the present invention a transparent surface, or to make all of its surfaces transparent. One valuable use of this embodiment is to enable further processing to be done in processes which may be as spontaneous as desired, as WYSIWYG as desired, and in processes which are as much according to the Principle of Whole Development and Unity as desired. For example, one or more surfaces of a polymer image of the present invention made in this embodiment (e.g., with one or more surface preparation stabilizers) might be used as image supports (e.g., stabilizers) which are new kinds of 2D or 3D "canvases" for subsequent applications and other subsequent image making processes, e.g., using conventional practices as desired, such as, painting, drawing, printing, photography, carving, engraving, cut-outs, sgraffito, writing, collage, attachments, inlays, and light effects. Examples of some conventionalpracticeswhich might be used are oil paints, acrylics, encaustics, watercolors, broken color techniques, washes, glazes, chiaroscuro, brushes, palette knives, rags, erasers, sponges, pastels, pencils, ink, conte crayons, gouache, and charcoal. The resulting inventive image might be a conventional art form (e.g., a painting, drawing, sculpture, construction, installation, furniture design, architectural design, or graphic design). Or, the resulting image of the present invention may be a new variation of an established art form or a new unique art form.

In an embodiment, a Clarifying Imprimatura comprised of one or more applications, is used to partially fill in and partially smooth out the surface irregularities on the inventive image surface to which it is applied. For example, inventive image's surface irregularities that are aesthetically desirable, may be left unfilled and/or only partially filled in, some surface irregularities might be left unfilled to form a design in another way or to bond another part to that inventive image surface. Partially filling in surface irregularities can mean that some of a surface's irregularities are either completely or partially filled in, while the rest of its surface's irregularities are not filled in, or are completely or partially filled in, e.g., in a different previous, subsequent or simultaneous application, e.g., with a different color or texture. In addition, partially filling in surface irregularities can mean that some of the depth of some or all of the surface irregularities are filled in.

In a further embodiment, a Clarifying Imprimatura comprised of one or more applications of one or more materials and/or media, is used to partially fill in undesirable inventive image surface irregularities to lessen their spatial depth. Thus, this inventive image may be clarified, made more transparent or more translucent, change colors or a combination of these effects occur, but they occur to a lesser extent than they might have occurred had these surface irregularities been completely filled in and smoothed over. For example, this might be the effect desired for an image of the present invention or part thereof, or this effect might be further processed. Further work can proceed on this inventive image in more of a spontaneous, WYSIWYG process, according to the Principle of Whole Development and Unity than was possible prior to the application of this Clarifying Imprimatura, but if the remaining surface irregularities are undesirable, then these effects can be maximized by adding to this Clarifying Imprimatura until the rest of the undesirable surface irregularities are filled in and smoothed over. It may be desirable to fill in some of the remaining surface irregularities with one or more further superimpositions which may or may not be layers added to its Clarifying Imprimatura, whether or not they overlay its Clarifying Imprimatura if desired. It may be desirable to fill in the rest of the spatial depth of some or all of the partially filled surface irregularities, e.g., until they are filled in and smoothed out completely, or until they are filled in enough to allow one or more desired subsequent applications to finish filling them in. Other superimpositions can be made which bond to surface irregularities which the Clarifying Imprimatura did not use, e.g., these might be superimpositions that are incompatible with the Clarifying Imprimatura. For example, this embodiment can be used to enhance the permanence of superimpositions on a Clarifying Imprimatura, e.g., superimpositions which can bond mechanically to surface irregularities which are unable to bond or which are unable to bond as strongly or as permanently as desired, to the Clarifying Imprimatura. The remaining surface irregularities provided in this embodiment both within the Clarifying Imprimatura application and in areas in which the Clarifying Imprimatura is not applied can be useful. They might be used for aesthetic effects by filling them in and/or by leaving them unfilled. Or, for example the mechanical bonding it enables to superimpositions made on a Clarifying Imprimatura, and/or to superimpositions made on the surface irregularities which the Clarifying Imprimatura did not use, can be especially useful in certain circumstances. For example, it may be especially useful for superimpositions which contain little binder; commonly dust, crack, and flake off their surfaces; for joining solid materials, objects, devices or combinations of these to the image, and combinations of these. (Media like pastels, charcoal, chalk and conte crayon are conventionally used on a rough surfaces specifically for the same purpose, a mechanical bond, e.g., papers made for pastels have a rough surface texture called a tooth). The mechanical bond provided in this embodiment may also be valuable for multiple superimpositions made on a Clarifying Imprimatura which can also mechanically bond to this inventive image surface using the surface irregularities, e.g., if multiple superimpositions are unable to bond to their underlayers, or if they are unable to bond to their underlayers as strongly or as permanently as desired, they can mechanically bond to the remaining surface irregularities.

This embodiment may be used when subsequent application, applications, addition or additions to be made on an image of the present invention following this embodiment, fill in the remaining undesirable surface irregularities. For instance, the subsequent application could be a layer of a sealer, a fixative, or a protective coating, e.g., cPRM, a varnish, or it could be a layer of paint, objects attached onto the surface, multiple layers, materials, and/or media, or combinations of these. This embodiment might be preferred when a preplanned image making process is being used and/or when spontaneous, WYSIWYG working process according to the Principle of Whole Development and Unity are not necessary, not desired, in conflict with another more desirable preference for an image of the present invention, or a combination of these.

In some embodiments, Clarifying Imprimatura may be used to connect one or more attachments, inlays, parts, objects, devices or combinations of these to an image of the present invention, e.g., these might not be able to bond to this inventive image without its Clarifying Imprimatura, or without its Clarifying Imprimatura they might not be able to bond to this inventive image as desired, e.g., as strongly or permanently and/or in a process that could be as spontaneous as desired, as WYSIWYG as desired; and as much according to the Principle of Whole Development and Unity as desired, or a combination of these.

In the following illustration two separate parts are connected using a Clarifying Imprimatura to form one image of the present invention. The areas of contact on an old smooth transparent colorless polymer surface and on the smooth transparent colorless surface of a small piece of glass are both abraded by sanding.

Illustration One: A transparent colorless polymer image of the present invention's entire surface may be abraded so that conventional painting and drawing materials and/or media which would not bond to this polymer's smooth surface (e.g., oil paint), will bond mechanically to its SSI as a surface preparation stabilizer. This concept enables the creation of a painting with many new, unique and valuable features. For example, in comparison to traditional oil painting, this enables **1).** real spatial depth which is completely or partially transparent and/or translucent and **2).** a tangible form of real light; (both of which are non existent or rarely noticeable in traditional oil panting) **3).** greater use of real transparency, **4).** greater use of real translucency, **5).** more workability, reworkability and controllability, **6).** more creative freedom; and **7).** greater strength and permanence. Returning to this specific example, the aesthetic effects of the surface irregularities made on this polymer image of the present invention are largely undesirable, and it may be preferable to apply conventional drawing and painting materials and media thinly on said polymer's SSI using only a single layer and/or diluted materials or media, or a combination of these, e.g., for aesthetic reasons. What happens? These desired painting and drawing applications generally can not be made on this inventive image in a WYSIWYG process, because as the surface irregularities on one area of this inventive image are filled and become clarified, change color, become more transparent, translucent, shallow or smooth; as their other surface light effects change (e.g. become less matte); or as these surface irregularities undergo a combination of these changes, other areas of this inventive image surface will still have the undesirable visual effects of their surface irregularities which block the view of the inventive image as a whole and/or WYSIWYG processing. Furthermore, it is unlikely that the intended applications will be applied thickly enough to fill in all of the undesirable surface irregularities to the extent desired, unless filling them slightly and/or to varying degrees is desired and/or unless the image maker makes a conscious effort to fill in all of the undesirable surface irregularities to the extent desired. Thus, in painting this inventive image, it may be preferable for the image maker to preplan the applications superimposed on the surface irregularities so that they do fill in the undesirable surface irregularities to the extent desired as they are applied.

Also, in further processing this inventive image without a Clarifying Imprimatura, this image maker may have an additional limitation which may be preferable to watch out for when superimposing applications on this inventive image's surface irregularities, which could have been eliminated by a Clarifying Imprimatura. It may be in the composition of the applications used on this inventive image's surface irregularities and in the thickness of their use on this inventive image. For example, using many materials and media in single layer applications thickly enough to fill in all of the undesirable surface irregularities, is likely to affect or risk affecting the image of the present invention undesirably, aesthetically, structurally or both, e.g., it is likely to lessen or risk lessening its strength and permanence. For instance, thickening a layer of a painting or drawing material or medium often means using more of it, adding more of a coloring substance to it (such as more of its pigment), or both. These changes can result in a darker color, a less transparent color, a less translucent color, an undesirable color, or a combination of these. In addition or instead, thickening a layer of a painting or drawing material or medium can involve adding a fat vehicle or additive to it, (such as stand oil, linseed oil, wax or a combination of these). Examples of undesirable consequences which might result from adding a fat vehicle or additive to it, are: a change in color (e.g., caused by diluting the material or medium, or caused by the color of the fat vehicle or additive itself); a change in light reflective qualities (e.g., from matte to glossy); a change in its transparency and/or translucency; a decrease in the material's or medium's strength and/or permanence; or a combination of these. For instance, the addition of one or more fat vehicles or additives in paint (such as the addition of linseed oil or stand oil in oil paint), can result in a paint layer: becoming more glossy; remaining soft, thus vulnerable to damage (e.g., by scratches and by undesirable matter sticking to it); discoloring e.g., turning amber, yellowish or brownish; wrinkling and/or cracking over time; becoming more transparent and/or translucent over time; raising up (e.g., forming blister like or bubbles like forms); or a combination of these. In addition or instead, thickening a layer of a painting or drawing material or medium can involve the addition of an additive (such as a filler), which may alter its strength and/or permanence (e.g., lessening it's percentage of binder, weakening it) and/or which may alter its color (e.g., lessening its intensity). Also unsealed paint applications with weak binders can crack, flake and dust off easily, as can other applications that have weak binders such as pastels and charcoal. Professional painting conservators usually find lean paint applications made with pure, unadulterated paints the most strong and permanent.

Illustration Two: The entire surface of a polymer inventive image may be abraded so that conventional painting and drawing materials and/or media which would not bond to its smooth surface (e.g., oil paints), will bond to it. Again this enables a wonderful new kind of painting, with the preferred features available to image makers described in Illustration One. Again, the aesthetic effects of this polymer's surface irregularities are largely undesirable, but no Clarifying Imprimatura is used. The image maker may prefer to superimpose applications on this inventive image in multiple layers (e.g., for aesthetic reasons) using its SSI as a surface preparation stabilizer. The image maker may not know how many layers will be necessary to form the desired inventive image, or how thickly he or she will want or need to make painting and drawing applications on the various areas of the polymer's surface. These determinations may be made during the process of creation (which is a common conventional practice), e.g., the image maker does not want to begin the inventive image with preplanned limitations, preferring to make these determinations as the inventive image develops, for instance, according to the Principle of Whole Development and Unity to the extent and manner desired. What happens? The first layers of the drawing and painting applications preferably can not be done in a WYSIWYG process, and depending on the spatial depth of the deepest undesirable SSI, it is very likely that subsequent layers can not be applied in a WYSIWYG process, or in a process that is very WYSIWYG either.

If the first layer or layers of painting and drawing on said polymer fully fill in all of its undesirable surface irregularities, this method might not have other limitations, problems and undesirable issues. However, this is often an unlikely dream, e.g., the first layer or layers of marks on said polymer are not made thickly enough, are discontinuous or both. As a result, the process of further processing the polymer, painting, and drawing may not be fully WYSIWYG, (and more specifically, it may not be as WYSIWYG as it could have been with a Clarifying Imprimatura). Thus, it is preferable that the image maker preplan the applications superimposed directly on this inventive image's surface irregularities, or at least consider their thickness in relation to the spatial depth of the undesirable surface irregularities, as well as their coverage of undesirable SSI, as they are applied. Further, the image maker may have the additional problem of filling in all of the undesirable SSI as he or she makes the image, which he or she preferably watch out for and solve during the process of making this inventive image. Thus, while working on the image of the present invention, it is preferable that the image maker imagine the developing image of the present invention without its undesirable SSI until the process of layering painting and drawing applications progresses enough to fill them all in as desired, thereby becoming a WYSIWYG process. As such, painting and drawing on said polymer may not be spontaneous, or as spontaneous as desired because, as the image maker further processes said polymer, he or she has to think about applying sufficient layers over all of the undesirable surface irregularities, each layer or the sum of the superimposed layers in each area has to end up thick enough to fill in said polymer's undesirable surface irregularities to the full extent desired by the time the desired painting and drawing applications are all done. In, it is generally preferable to have the option, the freedom and the control of working and reworking as spontaneously as desired, and of actually seeing applications as they will look in the finished work as they are made, even if preplanning or some preplanning is done. When an application fails to completely fill in and smooth out the total spatial depth of undesirable SSI or when an application fails to do this to the extent desired, said application may not look as it will look when the total spatial depth of the undesirable SSI is filled in and smoothed out entirely or to the entire extent desired in the finished image. As in Illustration One, a solution might be to thicken the application or applications of paint (refer to Illustration One for the consequences).

Nevertheless, the present invention is so versatile and flexible that it offers image makers many safety nets which can be used as desired, such as these examples. If the image maker miscalculates in preplanning the image of the present invention in this illustration and the painted and drawn layers do not adequately fill in all of the undesirable surface irregularities, or if the image maker decides to make these applications spontaneously without any preplanning or with partial preplanning, these are examples of options offered by the present invention. For example, painting and drawing applications can be reworked as desired, e.g., they can even be removed and then reapplied as desired, for instance, by modifying or reapplying them in a different manner which fills in all of the polymer's undesirable surface irregularities. Some of the surface irregularities can be used as bonding spots. In addition or instead, the inventive image's design might be modified, e.g., the previously undesirable surface irregularities might be used as part of the image of the present invention's aesthetic or they might be filled in by one or more superimposed applications (such as another paint layer, a sealer, a fixative, another protective agent, a Separating Layer of polymer or another Separating Layer, or combinations of these). Yet, these options and others can significantly change the specific inventive image the image maker desires to make, and they can involve a different kind of freshness and spontaneity in their applications, unnecessary work, or a combination of these.

In comparison to alternative processes of further processing inventive images which are at least partially transparent or translucent, with superimposed applications which do not bond or bond as well as desired directly to this inventive image, it is generally preferable to use a Clarifying Imprimatura. Without a Clarifying Imprimatura, permanent applications and connections onto inventive images which do not bond as desired to its surfaces when they are smooth, can give the image maker less control and freedom in making an inventive image, and the consequence can be visible on the resultant inventive image. The image of the present invention formed might not be as successful as desired or as it could have been if a Clarifying Imprimatura had been used; might fail; might involve more conceptual work or more physical work; might be less strong or less permanent; or a combination of these, all of which could have been avoided by using Clarifying Imprimatura.

In an embodiment, one or more processes of removing matter may be done on a Clarifying Imprimatura on an inventive image e.g., carving, engraving, incising, sgraffito or a combination of these. For example, because Clarifying Imprimatura may change the aesthetic qualities of image of the present invention with surface irregularities (e.g. eliminating the visibility of their undesirable surface irregularities), matter can be removed from Clarifying Imprimatura on images of the present invention in a processes which are more spontaneous, more WYSIWYG, and more according to the Principle of Whole Development and Unity than these same processes might be on these same inventive image surfaces without their Clarifying Imprimatura.

As an illustration, drawing lines might be carved into a thick Clarifying Imprimatura on an inventive image which may or may not penetrate into the image beneath its Clarifying Imprimatura. As these carved lines are made, surface irregularities, some of which are undesirable, may be formed on the Clarifying Imprimatura. These undesirable surface irregularities may be filled in with a new application of the same Clarifying Imprimatura which is put on these carved lines just thickly enough to eliminate their undesirability (e.g., matte finish, tooth marks, etc), but not fill in or alter the carved lines. However, if a carved line or a part thereof is undesirable, the same Clarifying Imprimatura may be used to fill it in. As an alternate illustration, sgraffito may be done in a Clarifying Imprimatura, the lines of which reveal the initial inventive image's surface beneath its Clarifying Imprimatura as an aesthetic effect, e.g., the Clarifying Imprimatura is a different color than the image surface it was applied upon.

In some embodiments, Clarifying Imprimatura can be applied over other applications on inventive images which have surface irregularities, provided these applications are at least partially transparent or translucent. For example, Clarifying Imprimatura can be superimposed on SSI on painting such as on underlayers on an inventive image. In addition or instead, the bond of a Clarifying Imprimatura superimposed on an application on an inventive image might rely partially or completely on bonding spots within that application (e.g., the bonding spots may be SSI). Clarifying Imprimatura can also be used on inventive images over a combination of previous applications.

In some embodiments bonding spots can be formed within Clarifying Imprimatura in a variety of ways. Also, whether they are bonding spots or not, surface irregularities on an inventive image which are partially filled in by a superimposed Clarifying Imprimatura, may bond and/or assist in bonding a superimposition to the image, e.g., a superimposition which may be applied on the image over its Clarifying Imprimatura (for example, a superimposed application may partially or completely rely on the mechanical bond provided by the image's surface irregularities). A Clarifying Imprimatura may be made on an inventive image which only partially fills in the spatial depth of its surface irregularities. Then, cross hatched strokes of drawing may be done on this Clarifying Imprimatura (e.g. using pastels), filling in the spatial depth of some of this image surface's remaining surface irregularities. But, within these cross hatched lines, some or all areas in which the Clarifying Imprimatura has not yet been superimposed and the spatial depth of the surface irregularities is still not completely filled in may be left as such. In addition or alternately, these areas can serve as bonding spots to mechanically bond a superimposed layer of cPRM to this inventive image, covering the entire pastel drawing on the Clarifying Imprimatura (e.g., even though this cPRM may not be able to bond or bond as well as desired to the pastel drawing or the Clarifying Imprimatura).

As a second illustration, a Clarifying Imprimatura might leave bare areas on a inventive image surface, serving as bonding spots to adhere an application onto that inventive image surface over its Clarifying Imprimatura, which can not bond or bond as well as desired to its Clarifying Imprimatura. In a third illustration, a Clarifying Imprimatura may cover some areas of an inventive image surface consistently, and cover other areas with lines. Everywhere this Clarifying Imprimatura is applied, it may completely fill in the spatial depth of the inventive image surface irregularities. Then, applications made using conventional painting and drawing practices may be superimposed over some areas of this Clarifying Imprimatura. Bare areas of surface irregularities remain in between the linear parts of this Clarifying Imprimatura which function as bonding spots are used to bond a superimposed application of cPRM over this entire surface, which does not bond or does not bond as well a desired to the Clarifying Imprimatura or to the conventional painting and drawing materials and media underneath it. In this illustration, the superimposed layer of cPRM which hardens into polymer might serve various purposes. For example, it might function as a sealer, a fixative or a protective coating, e.g., for the conventional applications, the entire Clarifying Imprimatura, or both of these, or for the entire inventive image surface. This layer of cPRM might serve aesthetic purposes, completely filling in the remainder of the polymer's undesirable surface irregularities, increasing the polymer's clarity, increasing its transparency, increasing its translucency, changing its color, changing its other surface light effects, or a combination of these. This layer of cPRM might even be used to separate the application or the addition beneath it, from those subsequently made over it, e.g., to separate two incompatible applications such as the use of acrylic paints over oil paints. It might be used for other reasons of strength and permanence. It might be used for other aesthetic reasons, e.g., to add real spatial depth, real transparency, real translucency, real light or combinations of these in between applications and additions on an image of the present invention. These uses of such a layer in images is new and unique. In the context of this patent application, the layer is called a Separating Layer of polymer. This embodiment might also be used to form other kinds of bonding spots and other Separating Layers.

In some embodiments, one or more opaque applications (which are not Clarifying Imprimatura), may be used to fill in surface irregularities, on inventive images or part thereof which are at least partially transparent or translucent. In this embodiment, the surface irregularities which are filled in might have even been formed on the image to provide a mechanical bond to a subsequently superimposed opaque application. Such application can be made using one or more bonding substances which are opaque, the application or layered applications of which are opaque. Some examples of such applications include cPRMs, acrylic paints, wax based media (such as encaustic, etc.), oil based media (such as oil paints, etc.), alkyds (such as alkyd paints), paints which have cPRM in them (e.g., as their binders), glues, varnishes, fixatives, sealers, and combinations of these which are colored and/or have particles mixed into them. These applications can be made on inventive image surface irregularities as desired, e.g., thinly, thickly, consistently, or inconsistently. It is preferable to use substances in these applications which bond to the inventive image as strongly and as permanently as desired, and it is more preferable that these bonds are strong and permanent, provided these preferences do not conflict with another more desirable preference for a specific inventive image. To satisfy these preferences, substances used on SSI may rely on the mechanical bond they form to them and not bond to the inventive image surface. While this may also be true for substances used on large surface irregularities, it is less often the case, as substances generally do not bond to them well or as well as desired. Thus, it is often preferable that these substances bond to the large surface irregularities in other ways. Opaque applications of this embodiment might for example, be made to decrease and/or eliminate an inventive image's transparency and/or translucency, to smooth out its surface partially or completely, to change its color, to change other surface light effects (e.g., from matte to glossy) or for a combination of these purposes. In addition or instead, such applications might be made to decrease the aesthetic brought to the inventive image by undesirable surface irregularities by filling them in to the extent desired such as with a substance which will bond as desired to subsequently superimposed applications - applications which might not otherwise bond or bond well to this inventive image surface, e.g., a bonding substance and/or as an underlayer as a surface preparation stabilizer. Such an intermediate opaque application can eliminate or reduce the undesirable aesthetic of the surface irregularities so that the subsequent application can be superimposed on an inventive image surface which is closer to the desired aesthetic, using a process which is more spontaneous, more WYSIWYG, and more according to the Principle of Whole Development and Unity than it could be if it were superimposed on the same image surface if it were simultaneously filling in its undesirable surface irregularities.

In some embodiments, superimpositions which bond as well as desired to smooth inventive image surfaces which are at least partially transparent or translucent, and/or smooth inventive image surfaces which are opaque (such as superimpositions made of the same compositions as the inventive image surface which they are applied upon, and other bonding substances) can generally be made on such smooth inventive image surfaces in processes which are more spontaneous, more WYSIWYG, and more according to the Principle of Whole Development and Unity, than these same applications would be if, in the process of their application on these same images of the present invention, they were filling in undesirable surface irregularities. Thus, when making superimpositions over undesirable surface irregularities and it is desirable to use a spontaneous process, a WYSIWYG process, or a process which is done as much according to the Principle of Whole Development and Unity as possible, it is generally preferable to fill in the inventive image's undesirable surface irregularities before the superimpositions are made, rather than as they are made, whether the application used is a Clarifying Imprimatura or not.

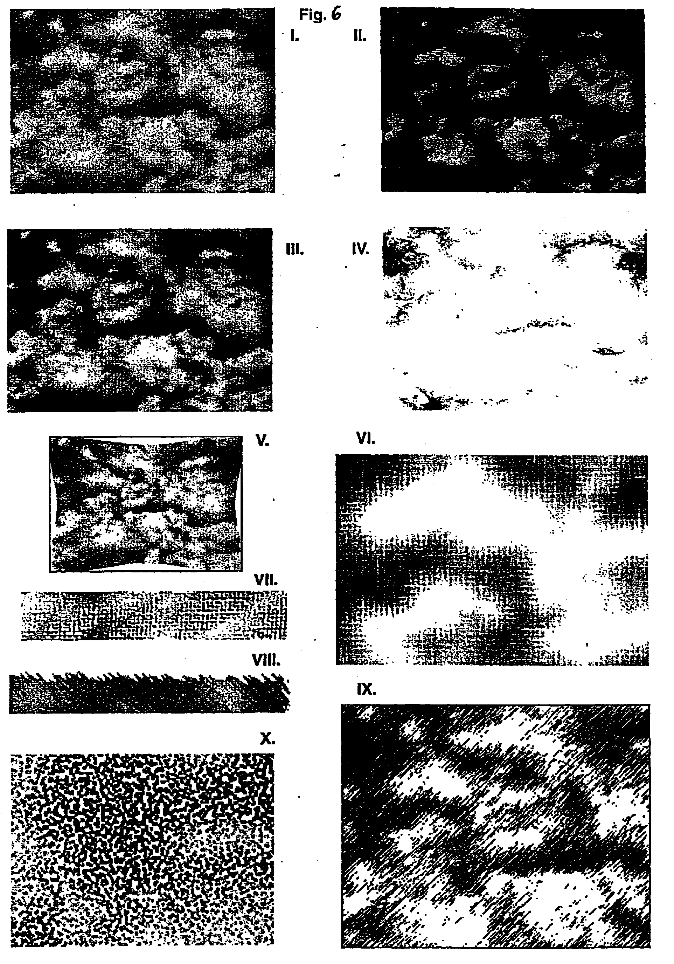

In an illustration, surface irregularities may be made over one entire surface of a planar polymer image support made of a colorless transparent cPRM which may be a stabilizer, e.g. by sandblasting it, sanding it, and/or incising it. Though some of these surface irregularities may be desired in the finished image of the present invention, the aesthetic contribution may be undesirable. Their ability to bond applications to this inventive image may be desired, e.g., applications which can not bond as desired to this inventive image surface when it is smooth and it is desired for the strength and permanence of this inventive image. This inventive image may further be processed using one of the two following methods to make the painted inventive image in Fig. 6.IX.

In Method One, some areas of this polymer inventive image surface may be painted with opaque applications of a blue paint (e.g., a conventional oil or acrylic phthalo blue paint), made directly on its SSI which function as a surface preparation stabilizer (these areas look dark in the illustration). Though this particular paint can be translucent or transparent when it is applied thinly, in these areas it is applied thickly so that it is opaque and it fills in the entire spatial depth of the SSI (which might have made it appear lighter if they had not been completely filled in). The remaining bare SSI, also functioning as a surface preparation stabilizer on this inventive image surface, may be partially or completely filled by a colorless transparent Clarifying Imprimatura, e.g., an acrylic Clarifying Imprimatura. This Clarifying Imprimatura changes the surface areas it is applied upon from translucent to transparent; it makes this inventive image less matte, semi gloss, glossy or a combination of these; and it changes them from milk white to colorless. Then, thin translucent and transparent applications of the same blue paint are made on this inventive image over some areas of this Clarifying Imprimatura, which is functioning as a surface preparation stabilizer. These areas are illuminated by light that comes through the entire spatial depth of this inventive image. In the process of making some of these blue applications, the paint may be applied and then partially rubbed off of the surface using a cloth wet with the appropriate solvent, e.g. water or turpentine. The painted blue areas on this inventive image appear dark in this illustration as this illustration does not show the difference between the painted blue opaque, translucent, and transparent areas. Without surface irregularities, a Clarifying Imprimatura and/or an application (like a ground) on this inventive image made of a composition which is different from the composition of this inventive image, the particular blue paint applied on this inventive image generally could not have bonded to it strongly or permanently. In the areas where the surface irregularities on this inventive image are filled with the Clarifying Imprimatura, and this Clarifying Imprimatura is not superimposed, this inventive image generally remains colorless and transparent (these areas appear white in this illustration).

Instead of using Method One to make this polymer image support into the inventive image in Fig. 6.IX., Method Two might be used. Though Method Two enables further processing of this inventive image to be done in a process which is more spontaneous, WYSIWYG, and according to the Principle of Whole Development and Unity than Method One, such a process is not required. In Method Two, a Clarifying Imprimatura surface preparation stabilizer may be applied over the entire surface of this inventive image, completely filling in and smoothing over all of its SSI which also function as a surface preparation stabilizer. This Clarifying Imprimatura can make the translucent inventive image transparent; become less matte, semiglossy, glossy or a combination of these; and change this inventive image from milk white to colorless. Even though some surface irregularities are desired in the finished inventive image, a uniform surface without undesirable elements can enable this image to be painted without seeing undesirable surface irregularities and having to fill them in as the painting progresses. Thus, beginning this painting on it with a Clarifying Imprimatura can enable the process of painting it to be as spontaneous, as WYSIWYG , and as much according to the Principle of Whole Development and Unity as desired. The desired surface irregularities can be remade on this image using one or more processes for removing matter from it, (such as carving, incising, sgraffito, sanding, etc.), e.g., as it is painted, before it is painted, after it is painted, or at a combination of these times, as desired. Painting is done on this inventive image using the conventional phthalo blue paint used in Method One in applications which are varying thicknesses, and thus the blue is translucent, transparent and opaque in different areas on this image (not illustrated in Fig. 6.IX). Unlike Method One, in Method Two the darkest opaque areas along with the translucent and transparent blue areas may be painted in a spontaneous manner rather than all at once. As in Method One, in Method Two the Clarifying Imprimatura can be the final layer on this inventive image in the unpainted areas of this image which appear white in Fig. 6.IX.

### Surface Irregularities and Smooth Surfaces on Opaque Images of the Present Invention or Opaque Parts of Images of the Present Invention

Surface irregularities can also change the color and other surface light effects of opaque polymeric and/or non polymeric inventive image surfaces, e.g., softening and/or lightening their color, making them less glossy and/or more matte; giving them shadows, a play of shadow and light, a play of light and dark, or a play of matte and glossy, or a combination of these. For instance, large surface irregularities like textures can create a play of light and shadow on an inventive image, or an image can have a play of light on an opaque surface which is partially matte due to its surface irregularities and partially smooth and glossy. Such light effects can be created on opaque inventive image surfaces by making surface irregularities on them. By reducing, filling in and/or eliminating surface irregularities on opaque inventive image surface, such effects can be decreased to the extent desired. Substances and their applications used to fill in surface irregularities on an opaque image of the present invention, can be transparent, translucent, opaque, viscous, thickly applied, thinly applied, evenly applied, inconsistently applied, or a combination of these, as desired. Such substances can for example, be made of the same composition as the opaque image surface they are applied upon, or they can be made of a different composition (e.g. cPRM used to fill in surface irregularities on a polymer made using the same cPRM or made using a different cPRM).

As another example, one or more substances and/or methods of applying them described herein for use on the surface irregularities of inventive images which are at least partially transparent or translucent, can be used as desired on the surface irregularities of opaque inventive images or part thereof. It is preferable to use substances on surface irregularities on opaque inventive images, which bond to them as strongly and as permanently as desired, and it is more preferable that they bond strongly and permanently, provided these preferences do not conflict with another more desirable preference for a specific image of the present invention. (To satisfy these preferences, substances used on small surface irregularities can often rely on the mechanical bond they form to them, thus they may not bond to the opaque surface of the inventive image in any other way. While this may also be true for substances used on large surface irregularities, it is less often the case. Thus, it is often preferable that these substances bond to the large surface irregularities in other ways.)

In some transparent and/or translucent applications on the surface irregularities of opaque images of the present invention, the varied thickness of the see-through application caused by the varied spatial depth of the inventive image surface irregularities it is applied upon, may cause variance in the consistency of the application, e.g., its color may vary and/or its light may vary. However, often the irregularities on the surface that these applications are made on are small (perhaps even microscopic), and these variations are likely to be slight or not generally noticed. Yet in general, this variance will increase as the variance in the surface level of the inventive image increases.

A substance with a composition which is different from that of the opaque surface of the inventive image it is applied upon, and which fills in its surface irregularities partially or completely might be used for various reasons. For instance, this might be done for aesthetic purposes, e.g., SSI on polymer superimposed by applications such as conventional painting and drawing media are surface preparation stabilizers. In addition or instead, changing the composition of the surface of the inventive image with a superimposition can enable that image to bond to subsequent applications that perhaps would not bond or bond as well directly to the image surface if it were smooth, e.g., such superimpositions made on polymer surfaces may be surface preparation stabilizers. In such situations, the surface irregularities might be made on a surface of the inventive image in order to change its composition so that it will bond or bond better to subsequent superimpositions. One advantage of using such an intermediate application (e.g., surface preparation stabilizer) rather than directly applying the subsequent application onto the surface irregularities, is that the intermediate application can eliminate the undesirable aesthetic of the surface irregularities so that the subsequent application can be made on a surface of the inventive image which is as aesthetically desirable as possible in a manner which is more spontaneous, more WYSIWYG, and more according to the Principle of Whole Development and Unity.

For example, while some paints may not bond or not bond as desired to smooth polymer image of the present invention, they may bond mechanically to surface irregularities on these surface of the inventive image. Thus, surface irregularities might be made on such an opaque polymer image of the present invention. Then these surface irregularities might be filled in with a substance (e.g., a surface preparation stabilizer) which bonds to them mechanically and perhaps in other ways, to eliminate the visibility of these surface irregularities, to enable the desired subsequent applications to bond to the image, and to enable such subsequent applications to be made as much according to the Principle of Whole Development and Unity as desired. For instance, if it is desirable to change the aesthetic appearance of an opaque surface of the inventive image with surface irregularities by completely or partially filling in its surface irregularities, it may be desirable to do this before further applications are made rather than at the same time as further applications are made, so that the aesthetic change which occurs by filling in these undesirable surface irregularities occurs before the subsequent applications are made rather than as these subsequent applications are made.

In some embodiments, applications made on surface irregularities can be used to connect one or more attachments, inlays, parts, objects, devices or combinations of these to an opaque inventive image or part thereof. If, for example, the applications made of the surface irregularities are different from the inventive image they are used upon (e.g., if they are surface preparation stabilizers), these applications can bond attachments, inlays, parts, objects, devices or combinations to this image which may not be able to bond or which may not be able to bond as well without the application, the surface irregularities underneath, or both. Bonded to the inventive image, these elements might, for example, serve aesthetic, structural and/or functional purposes including mounting, installing and/or framing; or a combination of these purposes. The resultant inventive image might, for example, be a collage, construction, sculpture, vase, table, wall, or book.

In some embodiments, special aesthetic effects can be formed on images of the present invention by varying the way that their surface irregularities are filled in. For example, images of the present invention made using compositions which are transparent, translucent, opaque, or a combination of these, can have special effects of light and color by filling in some or all of the surface irregularities on a single surface; partially filling in the spatial depth of some or all of their surface irregularities; using different substances to fill in their surface irregularities; varying the thickness of an application made on surface irregularities; layering multiple applications on their surface irregularities; or varying the specifications of their surface irregularities (e.g. deeper, smaller, or larger). The aesthetic effect created might, for example, be a play of light and dark, of varied spatial depth, of matte and glossy surfaces, of reflective and non reflective surfaces, of varying degrees of transparency and/or translucency, or of color.

### Further Description of Layering

For example, the layers of inventive images can have a very wide range of visual effects, e.g., light effects and coloration; and can be made of a wide variety of materials media objects and devices and their combinations. Inventive images can be made in unlimited layers, which are as workable, as reworkable and as controllable as desired. For instance, layering can be done as desired in inventive images using conventional processes, conventional processes in ways that are new and unique, and processes that are entirely new and unique. The layering processes of the present invention can make these conventional practices more workable, reworkable, controllable, stronger, permanent, varied, or a combination of these, than they could be in conventional images. Layering can bring real light, real transparency, real translucency and real spatial depth into images of the present invention, all of which can not be comparably made in strong permanent conventional images.

When strength and/or permanence are desired in an image of the present invention, it is generally preferable that layering be done using ingredients which result in an image which is either strong and permanent, or as strong and as permanent as desired. Thus, in general, in layering images of the present invention, it may be desirable to maintain, increase and protect the resultant inventive image's strength and permanence without undesirable effects. Thus, for example, it is often desirable to follow conventional rules governing the layering of conventional applications made on surfaces of inventive images, e.g., when superimposing multiple layers of oil paint on a polymer image support (e.g., stabilizer), it is generally desirable to follow fat over lean. Yet, when superimposed layers of oil paint on image of the present invention have Separating Layers of polymer in between them (as described herein), the conventional rule of fat over lean can be ignored. The use of conventional image making rules in making image of the present invention is preferably determined on a case by case basis, generally according to the resultant image of the present invention's strength, permanence, its aesthetic qualities, and any undesirable effects.

In some embodiments, partial layers, slivers or pieces of polymer may be used on and/or within non polymeric applications on inventive images. It is often desirable for such pieces of polymer to be at least partially transparent or translucent, and be used beneath superimposed applications which are see-through, provided these preferences do not conflict with any more important preference in a specific image of the present invention. For example, pieces of polymer might be used in between layers of paint on images of the present invention for various reasons. One valuable use of partial layers of polymer may be to increase the transparency, the translucency, the luminosity, the spatial depth or the combination of these characteristics of conventional layers of paint (such as pieces of transparent or translucent polymer in between layers of see though applications like washes, glazes, broken color, drawing, or combinations of these). As another example, such partial layers of polymer may be used in between non-polymeric applications on polymeric and/or non-polymeric image supports (e.g., stabilizers) on polymer supports, as well as those which may be made on other supports. For instance, such pieces of polymer can be used in between layers of conventional oil painting on canvas, or they can be used in between layers of oil painting on a polymer image support (e.g., a stabilizer). Such partial layers, slivers or pieces of polymer might be bonded to the image of the present invention using any desired methods, manner and means, e.g. a piece of polymer can be embedded and/or attached, for instance within a layer of paint, using bonding spots, a chemical bond, a mechanical bond, or a combination of these ways.
**Separating Layers of Polymer** In some embodiments, an image of the present invention or part thereof may be formed using layers which may be unlimited and as strong and as permanent as desired using a new technique called Separating Layers of polymer. Using this new technique, layers of almost anything can be superimposed on inventive images with the strength and permanence desired because these layers are separated by one or more Separating Layers of polymer positioned between them. Separating Layer of polymer can be made to any desired specifications, but it is frequently preferable for them to be transparent and/or translucent and to aesthetically contribute to the inventive image. Separating Layers of polymer can for example, be any thickness and have any other dimensions desired; as long as they have some polymer, they can have any percentage of non polymeric ingredients desired; and they can be in any shapes or forms desired (e.g., textured, curved); they can be used on an entire surface of the image or on part thereof; they can encircle an image; or they can be used continuously and/or discontinuously. Separating Layers of polymer may or may not be bonded to an inventive image (e.g., they may be held in place by gravity and/or by tacks). Such a bond might for example be chemical, mechanical (e.g., embedding), a loose bond, bonding spots, or a combination of these. Both under and over Separating Layer polymer, almost anything can be used, e.g., any number of superimpositions can be layered in any thicknesses and according to any other specifications desired. It is preferable for at least one layer, and more preferable for most or all the layers used over a Separating Layer of polymer to be at least partially transparent and/or translucent. Separating Layers of polymer can be stabilizers in inventive images such as fiber stabilizers or surface preparation stabilizers. Separating Layers of polymer are as workable, reworkable and controllable as desired, e.g., removable. Further, Separating Layers of polymer may enable layering done under and over them to be workable, reworkable and controllable as desired, than they may have been otherwise, and WYSIWYG. For example, layered applications used under and over Separating Layers of polymer may be conventional practices, which can not be freely made, reworked, repaired, controlled, or removed as freely or as fully as desired. A wide variety of tools and processes (such as sanding, carving, and sandblasting) can be used for forming, reworking, and controlling both the polymer and applications on it.

The technique of using Separating Layers of polymer is one way that the present invention liberates permanent layered image making from the limitations, problems and undesirable issues of its conventional practices. These are some examples of the major consequences. Separating Layers of polymer in images of the present invention can offer the ability to create with, rework and control the use of real tangible variable light, spatial depth, transparency, translucency or a combination of these, in images of the present invention as desired, such as the ability to increase and/or decrease these formal elements and their aesthetic effects with control as desired. This expands both the use of layers in images and the mainstream aesthetic of light and space,to create images with light, spatial depth, transparency, translucency, and combinations thereof. Separating Layers of polymer can be placed partially or completely in between layers and/or applications which would be impermanent, less permanent, weak or less strong, if they generally were superimposed directly over one another. Using Separating Layers of polymer in images of the present invention, enables then to be as strong and/or permanent as desired, with unlimited, workable layers and all undesirable effects and results can be reworked and controlled as desired. Thus, for example, limitations, problems and undesirable issues (e.g., risks) can be avoided, or ameliorated as those involved in: 1). layering paints according to fat over lean; 2). the use of conventional practices which tend to flake and crack when they are layered or when they are used in too many layers (e.g., gouache and paints with little binder in relation to their solid content); 3). the use of conventional practices which tend to dust off after their conventional uses (e.g., pastels, charcoal, graphite, conte crayon, etc.); 4). the use of anything superimposed which does not apply or bond well or as well as desired (such as materials and media which do not apply well when superimposed over specific applications or surfaces); and 5). the use of surfaces of conventional images which are undesirably changed (e.g., easily and/or irreversibly) by the process of working and reworking (e.g., by layering and the reworking which can accompany it). For instance, conventional images on paper are commonly undesirably and irreversibly affected by application and reworking of layers, particularly when the paper is wet because it can buckle uncontrollably and its fibers pull and tear as it is reworked. In another example, a number of conventional surfaces onto which conventional applications are made to form conventional images, reach a point beyond which they can not hold any more applied layers, e.g., a saturation point. For instance, in forming and reworking these conventional images, further superimposed layers might just dust, flake or crack off immediately as they are applied, shortly thereafter, or with little jiggle later even in normal careful handing of those conventional images. And, their applications and movement on the conventional images's surface, can affect work on the conventional images uncontrollably and/or undesirably. These limitations can be avoided or ameliorated using Separating Layers of polymer. Another example of a problem experienced in forming layered conventional images is undesirable change in one or more applied layers caused by one or more new superimpositions (e.g., of the same or of different materials and/or media, such as conventional practices). Although such changes to applied layers can be intentionally or unintentionally made (e.g., for aesthetic effects), their effects can be difficult to rework and control as desired, and undesirable results can be difficult or impossible to avoid or control. For instance, many conventional drawing materials and media may smudge easily when a subsequent layer of the same or a different material or medium is superimposed over them. More specifically, because many drawing materials and media (e.g., graphite, charcoal, pastel and conte crayon), are commonly used for underdrawing in paintings, they often get smudged by superimposed applications of paint. Because most image makers prefer having control of the purity of their colors and other applications themselves, many image makers limit or avoid their use of drawing materials and media, and other materials and media which smudge for underlayers on paintings (e.g., many image makers prefer to control the mixing of drawing and painting applications and other superimposed applications on images, for example, keeping the drawing they do on an image distinct from the painting they do on it, keeping their paint colors pure, for instance, free of graphite and charcoal).

Beyond smudging, superimposed applications of materials and/or media might, for example, change one or more previous applications undesirably by physically mixing with them in other ways. For instance, watercolor applications often rewet and change previous watercolor applications which they overlay, e.g., watercolor layers previously applied might mix, bleed and run. Using the present invention, one or more Separating Layers of polymer of any thickness, any size, even or uneven, and any shape can be used between one or more layers on images of the present invention so that these layers do not affect one another undesirably, and the image maker can control all layers applied on images of the present invention. Or, as a further example, fragile, delicate or soft applications on images might be undesirably changed by one or more superimposed applications. For instance, frequently pencils and pens incise into soft surfaces (such as on oil paint, or soft papers) as they draw on them. When used intentionally, this process is an old image making technique called sgraffito. If a surface is very soft, such as a fat layer of oil paint or an encaustic layer; if a hard marking tool, material and/or medium is used, if it is pressed hard; or if combinations of these conditions exist, many applications such as, pastels, conte crayons, charcoal and stiff paint brushes (such as those paint brushes commonly known as bristle brushes) may incise as they are used to draw or paint. Yet, by using one or more Separating Layers of polymer in some embodiments between layers of fragile, delicate or soft applications which might change them undesirably, changes such as undesired sgraffito, can be controlled as desired.

The technique of using Separating Layers of polymer in inventive images can be used to form aesthetic effects in inventive images. A few examples are, new aesthetic effects made by layering on inventive images with numbers of superimposed layers that would be impermanent as such on conventional images. Additionally or instead, layers can be used on inventive images in sequences which would be impermanent on conventional images, e.g., in conventional applications. In another example, new aesthetic effects can be made by altering the thicknesses, consistencies and/or textures of Separating Layers of polymer to control the amount of light on, through and reflecting back out of an image's layers. For example, the aesthetic of a polymer might be created or affected by altering the thicknesses, sizes, positions and the frequency of its transparent and translucent layers, e.g., the transparency and translucency of its layers can make it seem light or heavy, solid, ephemeral, luminous, gloomy, deep or shallow or a combinations of these.

In an embodiment, inventive images may have aesthetic effects by using one or more Separating Layers of polymer between the two or more layers of conventional practices (such as painting and drawing techniques). Such layers on polymeric and non-polymeric inventive image surfaces can be as workable, reworkable, controllable, strong and permanent as desired. In this embodiment, conventional layered drawing and painting techniques can be used under and over Separating Layers of polymer. There are many conventional layering techniques, e.g., for drawing and painting such as chiaroscuro, broken color techniques (such as scumbling and pointillism), glazing, washes, sgraffito, collage, cross hatching, underpainting, underdrawing, and combinations of these. Using the technique of Separating Layers of polymer, an unlimited number of layers, and even multiple different layering techniques and/or materials and/or media can be superimposed on inventive images in any order, as desired, and be as strong and as permanent as desired. For example, using Separating Layers of polymer between them, watercolor washes can be done over oil paint glazes, glass, tempera, pastel layers, encaustic, scumbling, found objects, pointillist layers of acrylic, ink drawing, oil paint, more layers of oil paint glazing, direct oil painting, collage, more oil paint, paper pulp, layers of cross hatching, a photographic transparency, oil paint, acrylic paint, glass, alkyd paint, or oil paint, as desired. Or these layers can be superimposed in the reverse order, if desired. Separating Layers of polymer can enable conventional practices and art forms to be used in inventive images in any combinations, with or without new variations and effects.

Because each Separating layer of polymer can be as thin and/or as thick as desired, the use of Separating layers of polymer in between other applications on an inventive image may or may not be a significant factor in the thickness of the resultant inventive image. For example, the use of Separating Layers of polymer in between other conventional applications on a 2D planar surface can result in a 2D or 3D image of the present invention, as desired. As a more specific example, using conventional painting and drawing applications in between Separating layers of polymer on paper, canvas, or on a 2D polymer (e.g., image supports) can result in a painting, drawing or sculpture of the present invention. Paintings made using the medium of the present invention may have layered applications which use at least one Separating layer of polymer between two or more of their layers. Many of these inventive image paintings employ conventional layering practices (such as chiaroscuro, scumbling, glazing, modeling, etc.) with a Separating Layer of polymer between them, and many of these layers use new techniques described herein such as bonding spots.

In some embodiments, the superimposition of one or more layers on an image of the present invention relies partially or entirely on the mechanical bond provided by surface irregularities (such as small surface irregularities, large surface irregularities, SSI or combinations of these). For example, a material, like sand or glass particles, mixed into the cPRM could make surface irregularities on inventive image layers as desired. Or for instance, lean applications of media and/or materials, and applications with a high percentage of pigment, other solids, particles or combinations of these, might, for instance, be used to form surface irregularities (such as paints with high pigment contents, like lean oil paints with high pigment contents, fillers and little binder; and paints with cPRM binders) In addition, particles can be mixed into one or more materials and/or media binders or bonding substances (such as the mixture of glass particles, sawdust, or sand into paints), and can make surface irregularities. Superimposed polymer and/or non polymeric layers can mechanically bond to SSI and/or to some large surface irregularities as desired. Surface irregularities on inventive images might, for instance, be used to mechanically bond one or more applications to that image which may not be able to bond or to bond as well to that same surface of the inventive image if it were smooth. Such surface irregularities can be used as bonding spots, as described herein. For instance, within the application of a medium which does not bond to the smooth polymer surface upon which it is applied, bonding spots can be painted using a paint that has a bonding cPRM as its binder and has a very high content of pigment and fillers. Although the subsequent layer superimposed may not bond to the entire area, it can mechanically bond to the bonding spots.

The mechanical bond of surface irregularities can be used to bond a Separating Layer of polymer, to an image of the present invention as desired. Methods of using Separating Layers of polymer with image of the present invention can be repeated as many times as desired, forming an unlimited number of layers and the aesthetic effects as desired. Further, using the mechanical bonds provided by surface irregularities to layer on inventive images with Separating Layers of polymer, offers ways to form images that may be as strong and as permanent as desired, with an unlimited number of layers, while ameliorating or solving problems and risks which might otherwise be encountered. For example, in applications of materials and media that follow fat over lean, the mechanical bond provided by surface irregularities (e.g., either in the form of one or more layers, or as bonding spots), can be used with a Separating Layer of polymer to avoid fat layers as desired. Regardless of how it is attached, a Separating Layer of polymer might be colored to look like the fat layer which would have been applied, if fat over lean layering had continued in its conventional method.

In some embodiments, the superimposition of one or more layers on an inventive image relies partially or entirely on the mixed polymers (e.g., stabilizers). For instance, a mixed polymer might be used as bonding spots which are applied onto a layer of paint on an inventive image, so that a superimposed Separating Layers of polymer can bond to it. These mixed polymer bonding spots might contain both a). the same monomer or a compatible monomer and the appropriate catalyst for polymerizing it, which is used in the paint onto which they are applied, as well as b). a monomer and the catalyst appropriate for polymerizing it, which is in the Separating Layer of polymer that will be superimposed over these bonding spots and the paint layer. As a second example, a Separating Layer of polymer might be a mixed polymer (e.g., stabilizer), for example, comprised of at least one monomer and the catalyst appropriate for polymerizing it, that is also in the layer beneath it or compatible ingredients; and at least one monomer and the catalyst appropriate for polymerizing it, that is also in the layer superimposed over it, or compatible ingredients. Thus, in this example, the mixed polymer, Separating Layers of polymer, can bond two layers to one another, one under it and one above it, which layers otherwise would not have bonded or bonded as well to one another.
**Non-polymeric Separating Layers** In some embodiments, the functions served by the Separating Layer of polymer, functions similar to these, and other functions are served by making non-polymeric Separating Layers. Such non-polymeric Separating Layers can be used in and/or on images of the present invention as desired. They can be made to any specifications desired, and it is preferable that they contribute to the aesthetic of the image of the present invention. For example, an non-polymeric Separating Layers might be used to separate applications which are superimposed on an image of the present invention, which would otherwise be less than permanent or risk impermanence. In addition or alternately, non-polymeric Separating Layers might be used for aesthetic purposes, e.g., to create a desired pattern, drawing, form, color, light effect and/or coloration, in an image of the present invention. As an illustration, a non-polymeric Separating Layer made of perforated mesh, conventional painting application, a conventional painting, a conventional drawing, paper, glass, fiber (e.g., stabilizer), lace, steel wool, leaves, mud, plaster, wax, metal, or a sandblasted plastic cut-out in the shape of a leaf, could be used in an image of the present invention, in between two or more other applications e.g., of polymer and/or of painting and drawing materials and/or media. Or, as another example, a layer comprised of a bonding substance (e.g., with additional ingredients for color and/or texture) might be used as a non-polymeric Separating Layers. Non-polymeric Separating Layers can be stabilizers in inventive images, e.g., surface preparation stabilizers or fiber stabilizers.

In some embodiments, one or more air pockets or negative spaces which are part of image of the present invention may serve functions similar to or the same as those served by Separating Layers which may otherwise be less permanent than desired within an image of the present invention. An air pocket or negative space can separate a layer and/or an application which can alter or risk altering the aesthetic of another layer and/or application. And, an air pocket or negative space which is part of an image of the present invention can increase its spatial depth, its light or both.
**All Separating Layers** Separating Layers can be used in images of the present invention to separate one or more different inventive image parts from one another for any reasons, e.g., strength, permanence, aesthetic, functional, or structural. All Separating Layers may be colorless and/or they may have coloration, e.g., they may be opaque, transparent, translucent, multicolored or a combination of these. A Separating Layer may have drawing, painting, a pattern, a design, printing, writing, etching, carving embossing, embedding, inlays, particles, special light effects (such as fluorescence, photochromic, dichroic or holographic effects, or a Separating layer which functions as a reflector of light or as a source of light), effects from its shape or form (such as a Separating layer which functions as a prism, a lens or a diffraction grating), other aesthetic effects, or combinations of these. A Separating Layer may be a layer made according to conventional practices or it may be a conventional image, e.g., a drawing or a painting, a glass image, a print, or a photograph. A Separating Layer may be as crucial to the aesthetic of the image of the present invention as desired, e.g., it may function as a layer of color, lines and/or shapes in a painting, drawing, print or collage of the present invention, or it may be as thin as a layer of a conventional paint may be. As an illustration, a Separating Layer might be used in between layers of conventional transparent acrylic painting to make the resultant image of the present invention more rigid, to give it more spatial depth, to alter its form, to give it more light, or for a combination of these reasons.

If strength and permanence are important in image of the present invention, it is generally preferable to be sure that all applications (e.g., all Separating Layers) are bonded mechanically and/or chemically to the inventive image formed, or they may also be tacked and/or loosely bonded. Examples of exceptions are: images of the present invention which are desired to be less than strong and/or less than permanent, e.g., in order to meet aesthetic or functional goals.

In some embodiments, fiber stabilizer may be used in layering on an inventive images that have Separating Layers of polymer and/or non-polymeric Separating Layers, e.g., for strength and permanence (such as reinforcement), and/or for aesthetic reasons. Fiber can be used as desired, within, on, and/or under all Separating Layers. As another example, the weave of fiber used in layering with a Separating Layer might be used to mechanically bond it to the layer or layers beneath it and/or to one or more superimposed layers, or to bond other superimposed layers to one another, e.g., fiber is partially embedded or inlaid in a Separating Layer and partially exposed, and a superimposed application can mechanically bond to it, which may not be capable of bonding to that Separating Layers otherwise. In addition, or instead, in some embodiments, layering done with Separating Layers may be reinforced or strengthened and/or made more permanent in other ways. For instance, one or more Separating Layers can be made especially thick and/or with ingredients which enhance their strength. In some embodiments, Clarifying Imprimatura and surface preparation stabilizers superimposed by one or more applications which are different from them can be Separating Layers. In some embodiments, bonding substances on opaque surfaces of inventive images, which are different from their surface, and which are superimposed by a one or more applications which are different from them can be Separating Layers, e.g. other bonding substances used on surface irregularities.

Using Separating Layers of polymer and non-polymeric Separating Layers, significant limitations, problems and undesirable issues in the use of conventional practices may be overcome, e.g., the rule of fat over lean is no longer a problem, and superimposing painting media that would conventionally be impermanent can be done permanently. Separating Layers may solve common problems incurred in layering one or multiple media and materials in images. For example, by layering other media and materials between layers of the present invention both a). the problems of impermanence due to layering such as the limited number of layer of media and materials or the layering of incompatible media and materials may be solved, and b). the problem of following fat over lean may be solved. In addition, any of the conventional layered painting techniques can be done in unlimited layers without regard to the rule of fat over lean, and other problems, limitations and undesirable burdens. Separating Layers enable new unique images to made by expanding the use of layering, real variable tangible controllable light, transparency and/or translucency, spatial depth and combinations of these, as desired.
**Fiber** In some embodiments, fiber such as a glass fiber or a fabric, may be added within and/or onto an inventive image or part thereof as desired. All kinds of fiber can be used in inventive images, or part thereof as desired. Examples are layered fiber, fiber strands, chopped fiber, continuous strand fiber, single strand or monofilament fiber, mixtures of different fibers; fibers with different kinds of binders, sizes, colorants, or a combination of these; glass fibers, fabrics, laces, gauzes, burlaps, metallic fibers, metal fibers, cottons, silks, synthetic fibers such as nylon and rayon, and open and closed weave fibers. Fiber is often a stabilizer in inventive images.

Fiber can become part of an image of the present invention using any method, means, manner or combinations of these, as desired. For example, fiber can be bonded to an image of the present invention, or to parts thereof, as desired, and/or tacking processes can join fiber to inventive images as desired. Bonding agents can be used to bond fiber to images of the present invention as desired, such as these examples. Bonding substances used to join fiber to images of the present invention may mechanically bond to the fiber by penetrating its strands and/or the open spaces in its weave, (thus they may or may not bond to that fiber in other ways, e.g. chemically). Bonding substances may bond chemically to fiber used in inventive images, e.g., to it strands, to its binder, to its size or to a combination of these. In addition, fiber can be used as a separate part of an image of the present invention which is not bonded to the rest of it. Fiber can be added within and/or onto a polymer of the present invention as desired. For example, fiber can be embedded within polymer layers and/or attached to external polymer surfaces, or both, either partially or entirely covering its surface area as desired (though the use of fiber on external inventive image surfaces may be visible unless it is covered or hidden, e.g., it is the underside or the backside of an image of the present invention; or it is covered, such as by paint, or by another part of the image which blocks the view of it). Fiber can be used in images of the present invention, or in part thereof, in any amount desired, as consistently or as inconsistently as desired, throughout a polymer or part thereof to the extent desired, and/or throughout non-polymeric ingredients to the extent desired, e.g., cPRM may be used as a bonding substance. Fiber can be partially or entirely used in one or more internal layers of an inventive image, and/or on one or more of its external surfaces, as desired.

Thus, when strength and permanence are desired in an inventive image, it is generally preferable that fiber be used in it, preferably as a stabilizer, and particularly in its weak and fragile parts, unless that image of the present invention is already as strong and as permanent as desired, that fiber would conflict with other more preferred desires for that image of the present invention, or both conditions exist, e.g. sometimes impermanence is desired; sometimes an image of the present invention made without fiber is strong enough to permanently endure as desired; and sometimes fiber alters an image of the present invention's aesthetic undesirably, for instance, a fiber within a very thin polymer which is desired perfectly transparent, might be undesirably visible.

In addition or alternately, fiber can be added to an inventive image for aesthetic purposes. For example, a stabilizer, a glass fiber, polyester fiber, silk, cotton, cheese cloth, lace or burlap might be added to the polymer part of an inventive image for the aesthetic it provides, e.g. for its texture, its color, its contrast with other ingredients in that image of the present invention, or combinations of these. Or, for example, fiber can contribute to an image of the present invention's aesthetic by changing its optical character, such as the use of fiber stabilizer to decrease a polymer's transparency and/or its translucency, the use of fiber stabilizer to add a variety of densities of transparency, color or both to a polymer, and the use of fiber stabilizer to make polymer that is transparent, translucent, opaque, partially opaque, less transparent and/or less translucent, as desired. The use of fiber might also add light effects (such as a play of light and shadow, and to block light completely or partially or to reflect light). The addition of a fiber to an inventive image or part thereof that is transparent and/or translucent which has a refractive index different from the refractive index of said fiber, can also produce a desirable aesthetic effect, e.g.. a desirable effect using a fiber stabilizer in clear polymer. Or a combinations of these effects might be desired in an inventive image. The means used to add fiber to an image of the present invention, or to part thereof, can contribute to its structure, its form, its strength, its permanence, its light, its color, and its other aesthetic aspects as desired.

When installations of fiber are completed or when images of the present invention are completed, it is preferable that uses of fiber in and/or on images of the present invention (e.g., in and on polymer) are: invisible to the human eye or as invisible as possible; aesthetically desirable, insignificant or not undesirable; or combinations of these (this includes the visibility of any matter on the fiber and of anything used to install fiber, e.g. bonding agents). Generally, the effects of adding fiber in an inventive image can be increased, to the extent desired, by increasing the thickness of fiber and/or its quantity. Generally, the effects of adding fiber in an inventive image can be decreased, to the extent desired, by decreasing the thickness of fiber and/or its quantity. For example, the plies of some fiber (e.g., some glass fiber) can be easily separated without incurring significant distortion or damage (e.g, simply by peeling them apart). It is sometimes preferable to add such single, ply fiber stabilizers in polymer of the present invention, rather than fiber with multiple plies. For instance, a single ply of fiber, separated from a multi ply fiber, might be preferable for use in a thin image of the present invention comprised only of polymer, in order to reinforce its strength its permanence, its resistance to cracking or a combination of these as desired, without affecting its transparency undesirably because a multiple ply fiber might be undesirably visible in this inventive image.

An image of the present invention may have as many layers or as much or as little fiber as desired, whether or not that fiber is a stabilizer. Use of fiber in an image of the present invention can be done in a wide variety of ways, and as workable, as reworkable and as controllable as desired, and be very versatile in inventive images. Thus, fiber can usually be used as desired in inventive images (e.g., in polymer) without compromising other desired aspects of them, e.g., transparency, translucency, coloration, or other aesthetic qualities. For example, in forming a polymer image of the present invention with fiber stabilizer, image makers have enormous control over the resulting image by their selection of: a). the kind of fiber used, b). the number of fiber pieces or the quantity of fiber used, c). the number of layers or areas of fiber used, d). the size and shape of each fiber piece, each fiber layer and each fiber part; e). the fineness or coarseness of each fiber's strands, their length and continuousness, and whether or not they are woven as single strands (monofilament) or multiple strands, f). the tightness or openness of each fiber's weave, g). the fiber's binder, size, coloration, optical properties, stiffness, strength, its uniformity or the lack thereof, its cleanliness or lack thereof (e.g., dirt, or other foreign materials in it), any tears or holes in it, any clumps, irregular strands or irregularities in its weave, its resistance to undesirable changes over time, or the combination of these, h). the position of each fiber piece and each fiber layer in relation to the height, the width, the depth, the function and the other specifications of its host image of the present invention, i). the position of each fiber piece and each fiber layer in relation to the external surfaces of its host image of the present invention (e.g., which can affect its visibility), and j). the bonding agent used to add the fiber to the image of the present invention (e.g., cPRM or a paint). These specifications for fiber many no be consistent throughout an inventive image or part thereof, although they can be as consistent as desired. Furthermore, choices regarding fiber in inventive images or part thereof can be changed, as desired. The use of fiber within and/or on images of the present invention or part thereof, (e.g., the use of fiber stabilizers) is workable, reworkable and controllable as desired, at any time (except when conventional practices used in inventive images restrict it as previously described). Reworking fiber stabilizers in polymer in an inventive image might, for example, involve sanding polymer (e.g., to reach the fiber problem and/or to remove it), adding new fiber (e.g., as reinforcement to previously installed fiber), adding a bonding agent such as new cPRM, reworking the surface over the installed fiber or combinations of these, as desired. Thus, use of fiber (e.g., stabilizers) in inventive images or part thereof, may be VIMC.

It is generally preferred that fiber added to transparent and/or translucent images of the present invention, or to one or more transparent and/or translucent parts thereof (e.g., fiber stabilizers), have optical properties, e.g., a refractive index, substantially the same as its transparent and/or translucent host, provided this preference does not conflict with any other preference desired or needed for that particular image of the present invention, e.g., provided the fiber's visibility is not undesirable aesthetically. It is more preferred that any fiber added to a transparent and/or translucent image of the present invention, or to one or more transparent and/or translucent parts thereof (such as fiber stabilizers), be invisible to the unaided human eye, nearly invisible to the unaided human eye, or as invisible as possible to the unaided human eye, provided this preference does not conflict with any other preference desired or needed for that particular image of the present invention. It is also generally preferred that fibers used in a transparent and/or translucent inventive images, or in one or more transparent and/or translucent parts thereof, have fine strands rather than coarse strands, and no clumps, tears, holes, foreign particles or irregularities in either its strands or its weave, so that this fiber becomes as invisible as possible once it is part of the inventive image, provided this preference does not conflict with any other preference desired or needed for that particular image of the present invention or one or more particular parts thereof. Fibers that do become invisible to the human eye or almost invisible to the human eye in transparent and/or translucent inventive image, or in one or more transparent and/or translucent parts thereof, often have open weaves, have fine strands, are single strand or monofilament fibers, or a combination of these. For strength and permanence, fibers with continuous rather than chopped strands are preferred, and the longer the strands the more preferred. Fibers with open weaves are preferred in many images of the present invention, in which the visibility of the weave of a fiber is not aesthetically desired. For strength and permanence, fibers with weaves open enough to bond mechanically with the bonding substance or substances (such as cPRM) used to install them in their inventive images are preferred. It is also preferable that the bonding agent which will be used to add fiber to an inventive image (e.g. cPRM), bond to a binder which is already on the fiber, e.g. chemically.

For example, surfacing veil fiberglass is generally among those fibers most preferred for use in transparent and/or translucent images of the present invention, or one or more transparent and/or translucent parts thereof (such as in transparent and/or translucent polymer), provided this preference does not conflict with any other preference as desired or needed for that particular image of the present invention. For example, Nicofibers of Shawnee, Ohio makes and sells the Surmat® line of continuous surfacing veil glass fibers which are highly uniform with randomly distributed filaments. Surmat® glass fibers are made with a few different resin binders. Though they are all thin glass fibers the Surmat® line offers a wide choice of strand thicknesses, the Surmat® 100 SF series of glass fibers has 30% more filaments and smaller fiber diameter than the regular Surmat® series of glass fibers. The plies of some surfacing veil fiberglass fibers (such as some of those made by Nicofibers), peel apart quite easily, without distorting or incurring damage, for those times when fewer plies or even a single ply is desired.

A few examples of exceptions to these preferences stated for transparent and/or translucent images of the present invention or one or more transparent and/or translucent parts thereof, include the use of fiber in an image of the present invention, which does not satisfy these preferences, but is desired and/or needed for purposes that are aesthetic, structural, functional, or a combination of these. For example, in an inventive image it might be more preferable to add multiple layers of fiber, to use coarse or heavy fiber, to use chopped fiber, to use other fiber that is discontinuous, to shape or distort fiber or to use fiber that is shaped or distorted, to make holes in fiber or to use fiber with holes, to use a fiber that is tightly woven, or a combination of these, e.g., to enhance the image's strength, permanence, aesthetic, function, or a combination of these, even if for example, this fiber makes the image or part thereof less transparent and/or less translucent. The fiber needed and desired for specific images of the present invention or part thereof can differ significantly.

Other preferred glass fibers are surfacing veil glass fibers made by Owens Corning of Toledo, Ohio. Examples of these are Owens Corning's M524 C33 Surfacing Veil made of glass fibers which are chemically-resistant and durable in both acid and alkaline environments. It has a low solubility binder, a polyester resin formulated to be compatible with all commonly used resin systems, e.g., compatible with all commonly used polyester, vinyl ester and epoxy resins systems, and most open mold processes. Owens Corning's M524 C50, C64 and C114 Surfacing Veils are made of glass fibers which are chemically-resistant and durable in both acid and alkaline environments. They have a highly soluble binder, a styrene-acrylic copolymer formulated to be compatible with all commonly used polyester, vinyl ester and epoxy resin systems, most open mold processes. Owens Corning's Advantex® Glass Fiber M524-ECR30S Surfacing Veil is bonded by a polystyrene resin which is highly soluble in styrene. The fibers of this surfacing veil are produced from Advantex® glass fibers which are highly resistant to attack in acid environments. This surfacing veil is formulated for compatibility with all commonly used polyester, vinyl ester and epoxy resin systems, most open mold processes. It is highly resistant to corrosion. Owens Corning's Advantex® Glass Fiber M524-ECR30A Surfacing Veil is bonded by a silanated acrylate resin, a low solubility binder. The fibers of this surfacing veil are produced from Advantex® glass fibers which are highly resistant to attack in acid environments. This surfacing veil is formulated for compatibility with all commonly used polyester and epoxy resin systems, most open mold processes. It is also compatible with vinyl ester resin systems. It is highly resistant to corrosion.

It is preferred that fiber which is used in and on transparent and/or translucent image of the present invention, or in one or more transparent and/or translucent parts thereof, be free of any undesirable matter (e.g., even air bubbles, pigment, clay, dirt, bugs, etc.).

If undesirable matter can not be completely removed from fiber, it is generally preferable, to substitute that fiber for new fiber which is completely free of all undesirable matter, before the fiber with the undesirable matter is in contact with the image of the present invention (e.g., with the bonding substance, such as with cPRM). If the fiber is not replaced, and its undesirable matter is not removed beforehand, it is preferable to remove it completely or as completely as possible, provided its removal is possible without undesirable effects, before that fiber is in contact with the image of the present invention, (e.g., with the bonding substance). For example, if fiber immersed in cPRM has undesirable matter caught in its weave, it is preferable to remove this undesirable matter from it, prior to the gelation stage of polymerization. Methods of removing undesirable matter from fiber which is bonded to an image of the present invention may risk breaking the structural and aesthetic continuousness of that installed fiber, (e.g., its strands, its weave, or remnants of the repair may show) in a way which in some circumstances, may be difficult or perhaps even impossible to identically restore, though usually an acceptable restoration can be accomplished. For example, undesirable matter can be removed from images of the present invention, or from part thereof (e.g., from polymer), using any process or processes for removing matter desired, e.g., refer to descriptions herein. For example, undesirable matter can be sanded or carved out of polymer, and if its weave is broken several solutions are desirable. The broken fiber can be patched with new fiber. Chopped fiber can be added e.g., over the seam of the fiber patch, instead of the fiber patch or over the entire fiber patch, a whole second layer of new fiber can be added, no fiber can be added, or combinations of these can be done. A bonding agent like cPRM can be used as desired over the broken fiber or over the restored fiber. Then, any carved indent can be filled and any surface detail can be restored, e.g., new cPRM and paint can be applied on top of the indent formed by the removal of the undesirable matter

Generally, the deeper fiber is installed in a transparent and/or translucent image of the present invention, or in one or more transparent and/or translucent parts thereof (e.g., as a stabilizer within polymer), and the further it is away from its see through external surfaces, the less visible it may be. Generally, when fiber is installed within an inventive image, the closer that fiber is to one or more of its visible external transparent and/or translucent surfaces, the more plies comprising that fiber, the more superimposed layers or areas of that fiber, the thicker that installed fiber's depth of space (e.g., chopped fiber is not in layers), the coarser that fiber, and the more visible that fiber and any undesirable matter on it will be within the inventive image, e.g., within clear polymer.

It is generally preferable for fiber used with an image of the present invention, to be bonded with said image or with part thereof. Fiber can be bonded to an image of the present invention using any desired method, means, manner or combinations of these. It is generally preferable that the bond between fiber and its host image of the present invention be strong and permanent, unless this preference conflicts with other preferences for the image of the present invention. An example of an important exception to this preference is when the aesthetic desired or needed for an image of the present invention, or for part thereof, requires the use of fiber that may not bond to it, and/or the use of fiber which may not strongly bond to it, not permanently bond to it, or both. For instance this might be desirable when fiber is used as a separate component in the Compositional Arrangement of an image of the present invention made of multiple separate components.

When strength, permanence, reinforcement, lessening the likelihood of cracks, or combinations of these are as desired in an inventive image, or in part thereof, it is usually preferred that fiber which is part of it (e.g., as a stabilizer within polymer) have specifications which make it as strong and as permanent as possible, provided this preference does not conflict with any other preference for the image of the present invention, e.g., aesthetic preferences. For example, it is generally preferable 1). that fiber have a weave with long continuous strands (they usually provide greater strength and permanence than other fibers such as fibers with shorter strands, frayed strands, discontinuous strands or combinations of these); 2). that fiber which is bonded to an image of the present invention, or to part thereof, be used in the least number of separate pieces possible, so that the fiber piece or pieces in the inventive image are as large and as continuous as possible; and 3). that the fiber is not distorted in an manner which weakens its structure (its strands or its weave are not pulled). In addition, when it is desirable that fiber install within and/or on an image of the present invention, neatly, flatly or precisely, and when transparency and/or translucency are desired, it is generally preferable for the fiber installed to be flat and neatly woven (e.g., rather than distorted, creased or pulled out of shape). It can often be difficult and even problematic making fiber which is not flat or neatly woven, install flatly, neatly or precisely, and fiber which is not flat and neat, often is either visible or more visible than it would have been if it were flat and neat.

In an embodiment, thin fine fiber (such as a surfacing veil fiber) may be prepared to be bonded within or under a transparent and/or translucent inventive image, or one or more transparent and/or translucent parts thereof (e.g., as a stabilizer within polymer), in such a way that the fiber may be invisible or nearly invisible to the unaided eyes of viewers. Thin fine fibers generally vary in their ability to become invisible or nearly invisible to the human eye within and under polymer. This variance continues in considering the invisibility of thin fine fibers within and under transparent and translucent non-polymeric ingredients in inventive images. The thin fine fiber used in this embodiment, is the most preferable fiber among those fibers which can become invisible or nearly invisible when they are installed within or under a specific inventive image surface. The fiber installed in this embodiment may be installed under at least enough of its host's nearest external visible surface, to be entirely covered by its host and it is often preferable that it be installed even further below its host's nearest visible external surface so that this fiber will be as invisible as it is capable of becoming in its inventive image. The depth that the thin fine fibers of this embodiment may be installed beneath their host's nearest external surfaces in order to become as invisible as they are capable of or in order to become nearly invisible varies. It is preferable to install the fiber in this embodiment under its host's external surface at least as deeply as it takes to make it as invisible as it can be, or nearly invisible to the human eye. In addition, often, in order to become invisible or nearly invisible, fiber must be penetrated by its bonding substance or substances. This or these bonding substances might make up the external surface of the inventive image or part thereof. For instance, it can take at least a quarter of an inch of a cPRM to completely penetrate into and cover over a flat layer of one preferred thin fine fiber stabilizer, so that it becomes nearly invisible to the human eye, but it can take a little thicker layer of cPRM for this fiber to become completely invisible. Examples of inventive image surfaces within or under which thin fine fiber often may need to be completely penetrated by one or more bonding substances in order to become invisible or nearly invisible, are surfaces which are transparent and colorless, surfaces which are very transparent, and surfaces which are transparent and thin. Many colored and translucent inventive images hosts can often hide the visibility of thin fine fiber, particularly if they are dark, and/or dense. However, completely penetrating the fiber with its bonding substance or substances, is preferred both for reducing the visibility of fiber in many see-through inventive image hosts, and for strength, for permanence or both in many inventive images. As further examples, fiber which is deeply within or under thick transparent colored host surfaces of inventive images and/or darkly colored transparent and/or translucent host inventive image surfaces, might not need to be completely penetrated by a bonding substance or substances in order to become invisible or nearly invisible within their hosts. Also, fiber used in this embodiment can be installed on all external inventive image surfaces which may not be visible to viewers, e.g., the back sides and under sides of inventive images.

It is preferred that the thin fine fiber used in this embodiment may be cut neatly into one or more straight edged pieces, rather than ripped or torn. When it is ripped or torn, thin fine fiber tends to distort undesirably and it can also be weakened. If thin fine fiber installed within an inventive image or within part thereof, is completely invisible or nearly invisible to the unaided human eye, then it is usually unlikely that straight edges on its fiber pieces formed by cutting will be invisible or nearly invisible too. It is preferred that each of these fiber pieces may be as large in size as possible, so that as few separate pieces of fiber are installed as possible. But, it is more preferable to use more than one fiber piece when a single piece of fiber would need to be pulled or stretched undesirably, or even folded over upon itself undesirably, in order to lay as flatly and as invisibly as desired on its host inventive image surface. For example, when a single piece of fiber will not lay flatly on a sloping polymer surface unless it is pulled, stretched or folded over upon itself, it is generally preferable to use two or more separate pieces of fiber instead of one single piece of fiber. In addition, adjacent pieces of fiber which are cut to be laid contiguously should preferably be large enough to be installed with their edges overlapping, rather than contiguous.

In some embodiments, heavy fiber is unlikely to distort undesirably when ripped or torn and straight cut edges of heavy fiber can often be seen within a transparent and/or translucent inventive images, e.g., when used as a stabilizer within clear polymer. Thus, irregular, feathered edges, such as edges made by cautiously ripping or tearing fiber, are generally preferable for installations of heavy fibers within transparent and/or translucent inventive images. When strength, permanence, reinforcement, lessening the likelihood of cracks, or a combinations of these are desired, and pieces of fiber are being installed adjacent to one another in an inventive image, or in part thereof, it is preferable to overlap their adjacent edges, irrespective of the specifications of their edges.

In an embodiment, one or more bonding substances are used to bond fiber to an image of the present invention, or to part thereof. Among bonding substances, the same cPRM or a bonding cPRM are among the most preferred for strongly and permanently bonding most kinds of fiber (e.g., glass fiber) to polymer and/or non-polymeric inventive image surfaces. Another preferred bonding substance may be any substance or any combination of substances which bring a desired effect to an image of the present invention, e.g., a desired aesthetic effect.

In some embodiments, though one or more substances are used to add fiber to an inventive image surface, one or more additional bonding methods are used to make this connection, for example, because one or more of the substances used to add the fiber to the inventive image surface does not bond to that surface or does not bond to that surface as strongly as desired or as permanently as desired, or though one or more of the substances used bonds to that surface, one or more other bonds are formed which also bond it to that surface, e.g., to fortify the first bond. As an illustration, an inventive image surface is changed in such a way that a bond, between it and fiber applied on it with a substance, is formed or fortified. Examples of substances which might be used though they might not bond fiber to polymer surfaces are incompatible cPRM, glues, and materials and media for painting. Examples of preferred ways of changing these polymer host inventive image surfaces to form or fortify a bond are all processes for forming SSI, large surface irregularities, bonding spots, and surface preparation stabilizers (refer to further description herein). A further example is non-polymeric applications on these inventive image surfaces, which bond both to these inventive image surfaces and to the substances desired for use in installing the fiber on the image of the present invention as desired, e.g., an application of a mixed polymer which will bond to both the inventive image surface and to the substance desired for the fiber's installation. Or, combinations of the processes described in these examples might be used as desired. When the fiber's installation is complete or when the image of the present invention in this embodiment are complete, it is preferable that changes made to the inventive image surfaces in this embodiment, are not visible to unaided human eyes; that they are aesthetically desirable; that they are aesthetically insignificant or not aesthetically undesirable; not significantly visible; or a combination of these.

Fiber bonded to inventive image surfaces (e.g., fiber stabilizers bonded to polymer) can become partially or completely internal within these images if desired, e.g., by superimposing them with one or more substances and/or attachments, such as cPRM, paint or a photographic transparency. When installing fiber, it can be wet, penetrated and superimposed as desired. However, as described previously for the purpose of making fiber become as invisible as possible, it is generally preferable to wet, to penetrate and to superimpose fiber completely with at least a slight layer of a bonding substance or with another material and/or medium. Though fiber is generally installed on an external inventive image surface, it is often preferable for it to become internal within the image by covering it over completely (e.g., with one or more additional layers), unless this preference conflicts with another preference for that inventive image such as an aesthetic preference. It is generally preferable to install fiber internally if its aesthetic contribution to the inventive image is not desired, such as when transparency and/or translucency, or easy continued control of transparency and/or translucency is desired in an inventive image. If the aesthetic contribution of fiber installed under a transparent and/or translucent inventive image surface is not desired, it is preferable to install that fiber as deeply as possible beneath that surface as aesthetically necessary (provided it is possible, e.g., structurally and functionally). But, when strength and/or permanence are desired in an inventive image (e.g., in polymer), it is generally preferable to position its fiber substantially medial within an inventive image's spatial depth. For example, it is often preferable to install fiber stabilizers substantially medial within polymers, particularly if they are thin and large, if their use requires some strength, permanence or both; if they are valuable; if the fiber will not be visible or undesirably visible; or combinations of these. Or as a more specific example, if one of these polymers is very large and thin, and strength and/or permanence are necessary but the specific fiber stabilizer which must be used within it will not become as invisible as desired, it may be most desirable to thicken this polymer installing the fiber within it, but perhaps towards its backside or underside rather than precisely medial within it (perhaps making other slight alterations also, e.g., tapering its edges so that its increased thickness may not be seen easily). In addition, or instead, it may be most desirable to install such a fiber stabilizer on or just beneath the back side or underside of this polymer. Or, a combinations of these might be considered preferable to not using any fiber or to using a different fiber.

In an embodiment, fiber may be bonded to an image of the present invention as desired, using only one or more kinds of hardware, object, device, instrument, or other such means, e.g., wire, screws, tape, clips, rubber bands, fabric, or string; and might be used to connect fiber to an image of the present invention. In another embodiment fiber is bonded to an image of the present invention as desired using a combination of a bonding substance, and some kinds of hardware, object, device, instrument, or any other such means. In an embodiment, fiber may be held on an image of the present invention by gravity, but if this fiber becomes internal within the inventive image in a negative space or an air pocket, it may no longer held in place by gravity alone. In many embodiments, fiber is added to polymer during its formation using any method, manner, means or combinations of these.

In an embodiment, a fiber stabilizer is added to wet cPRM while it is still liquid enough for that fiber to sink down into the cPRM as desired. Thus, in this embodiment, fiber is added to cPRM before it is far enough into the gelation stage of its polymerization, to prevent added fiber from sinking down into it. Added fiber might sink down in the cPRM to any position (e.g., any depth and any angle). The sinking of this fiber can be controlled or left uncontrolled as desired, e.g., using any method, means, and manner as desired.

Sometimes the position that the fiber stabilizer sinks down into the cPRM in this embodiment can be controlled or partially controlled.

These are examples of some further ways that might be used to completely or partially control or try to control the position in which fiber are added to cPRM. Control over the position of fiber added into cPRM might be gained using the VIMC. For example, some monomers are more viscous than others even before they are catalyzed, (such as, thixotropic monomers, old uncatalyzed monomers which have thickened with age). Other ingredients added to the active ingredients in cPRM, such as coloration (e.g., dry powdered pigments, particles), and/or other stabilizers, can also thicken cPRM and obstruct the free movement of fiber within it.

In many embodiments, it is desirable to have the bonding substance (e.g., cPRM) wet fiber enough to form a strong bond between it and its inventive image surface once it cures, hardens or dries. When possible, it is generally most preferable for the bonding substance to penetrate the fiber completely, fully saturating both its weave and its strands. Often this requires human assistance. However, completely saturating fiber with its bonding substance is not always necessary to bond that fiber to an inventive image surface as strongly and permanently as desired.

In an embodiment, fiber is attached to an inventive image surface using a bonding substance, e.g., a compatible cPRM bonds a fiber stabilizer on polymer. The fiber in this embodiment might be just wet by the bonding substance in multiple scattered areas which bond it as desired to an inventive image surface (e.g., in bonding spots and/or tacks both described herein, or even in lines that form a pattern, text or a drawing). For instance, this fiber might be laid on areas or spots of wet bonding substance that has been applied to an inventive image surface. Alternately, if the fiber used in this embodiment has a loose or open weave, or if it is easily saturated by the bonding substance used, it might be laid on the inventive image surface and its bonding substance might be applied over it in areas, spots and/or lines as desired which penetrate through this fiber enough to bond it as desired to the inventive image surface (e.g., thin fibers can often be easily saturated, even if they are tightly woven). Or, combinations of these processes might be used wherein the bonding substance is first applied directly on the inventive image surface as desired, the fiber is laid on this surface, and then more of the bonding substance is applied in as desired over the fiber.

In many embodiments, it is often desirable to completely saturate fiber with its bonding substance, e.g., because this will enhance the strength, and/or permanence the image of the present invention, to a greater extent than incompletely saturating it can. It may be preferable to completely saturate fiber with its bonding substance for functional and/or aesthetic reasons. Often this complete saturation does not occur just by placing fiber on a bonding substance, and/or by applying some bonding substance on fiber. It is often desirable to help bonding substances like cPRM seep completely into a fiber by pushing or pressing the fiber in the wet bonding substance. Preferred tools for this process are often blunt hand held tools, such as a clean blunt tongue depressor, or a clean blunt utensil. This pushing or pressing of the fiber can also secure it down as flatly and as evenly as desired (e.g., as flatly and as evenly it will go) on many inventive image surfaces, though inventive image surfaces vary greatly. Sometimes there is enough of the wet bonding substance applied to fully saturate and completely cover over the fiber as desired. Once this is done, the fiber will not add texture to the inventive image surface, some fine, thin fibers will become invisible or almost invisible, and other fibers will become less visible and/or they will change color. But because more of the bonding substance and/or other superimpositions (e.g., other bonding substances) can usually be added as desired, fully saturating the fiber as desired and covering it over as completely as desired are usually not priorities that must be addressed or attained until after the fiber has first been attached to the inventive image surface. However, saturating the fiber as desired, covering over the fiber as completely as desired, and additional superimpositions are often priorities once the fiber's bonding substance has cured, hardened or dried, attaching the fiber to the inventive image surface in some fashion. (For instance, these are priorities, for aesthetic and/or functional reasons and also to enable the image of the present invention to be as strong and as permanent as possible - fiber is strongest substantially medium within the depth of an image of the present invention.

Another reason to push and press down the fiber into its wet bonding substance is to adjust its position as desired, and to release any undesirable trapped air bubbles as desired e.g., to press down any undesirable fiber irregularities, such as protruding or irregular strands of the fiber.

In another embodiment, a bonding substance is used to add fiber onto a polymer surface (e.g., as a stabilizer), or onto another inventive image surface.

In a preferred embodiment, fiber (e.g., as a stabilizer), is add to polymer as it is being formed. In this embodiment, fiber is placed on wet cPRM, after it has reached the gelation stage of its polymerization and it is firm enough so that fiber added to it can not sink down in it (e.g., sinking to its bottom surface such as to its mold's surface).

In a further embodiment, fiber that is bonded to its inventive image surface is superimposed with just enough of one or more bonding agents, other materials, media, objects, devices, processes, or interactions; or a combination of these, to completely cover that fiber over and fully embed it. In another embodiment, the position of a layer of fiber within an inventive image surface, is altered and/or the surface over it are superimposed. For example, this embodiment can be used to make fiber substantially medial within an inventive image's depth. In another embodiment, an inventive image or part thereof are made by placing fiber (e.g., as a stabilizer), at the bottom of a mold or other casting surface and superimposing cPRM or another bonding agent as desired.

In an embodiment, two or more layers of fiber are superimposed within an inventive image, e.g, as stabilizers within a polymer. In some embodiments fiber is used as desired, within and/or on one or more non-polymeric ingredients which are part of an inventive image (with or without cPRM added).

In an embodiment, tightly woven fiber is used in an inventive image, or in part thereof. For example, applying a bonding substance over a tightly woven fiber which is resting on a dry inventive image surface can adhere it to that surface if the bonding substance can penetrate the fiber, or if the bonding substance can connect directly to some or all of the inventive image surface that may surround the fiber. But this method may not bond the tightly woven fiber to its inventive image surface as well, as completely, or as evenly as desired. Bonding substances do not seep through tightly woven fibers as well as they can penetrate and saturate fibers with open weaves. Thus, in this embodiment it is generally preferable to apply the bonding substance to the dry surface and/or to the backside of the fiber, and then place its fiber onto and perhaps into its inventive image surface. Thereafter, further work can be done on the exposed side of the tightly woven fiber as desired, e.g., further bonding substance can be applied on top of the fiber in an attempt to fully saturate it if it is possible and as desired and to alter its appearance if it is possible and as desired, to embed it into the inventive image as desired, or combinations of these, as desired. In some embodiments, fiber on a polymer inventive image surface serves as a surface preparation stabilizer which is then superimposed. Thus, the fiber surface preparation stabilizer might for example be used for the mechanical bond it provides with one or more superimposed parts, layers, applications, or a combination of these, such as superimposed coloration, photography, collage, other marks (e.g., pencil, ink, writing), or a combination of these. Polymers with such surface preparation stabilizers might be image supports, e.g., which may be stabilizers. The use of various kind of fiber and various methods of joining the fiber and polymer can give inventive images special effects, e.g., of color, light and strength.

In some embodiments, one or more fibers are used as an initial image support or as part thereof to make an inventive image. For instance, layers of cPRM are applied on one or both sides of a fiber stabilizer forming a 2D or 3D inventive image which may or may not be further processed, e.g., with superimposed coloration.

In some embodiments, it is sometimes desirable to use fiber (e.g., glass fiber) as part of a bond in inventive image, and/or to fortify a bond in inventive image, e.g., as reinforcement. For example, fiber can be used around parts, over parts and/or through parts to connect them. Fiber can be used in, under and/or over connection seams, bonding spots, tacks, and other joints. Fiber can be used to add a mechanical bond where another bond will form also, e.g., in Separating Layers. Fiber can be used to bond attachments which already have some other way of bonding, to secure an inlay or the inventive image surface it is in, and fiber can be used to reinforce embedding (on the embedded item and/or in the area around it, as in Fig. 723.).

In a preferred embodiment, an inventive image, or part thereof, are strengthened by the installation of fiber positioned perpendicularly across one or more weaknesses in it.

In an embodiment, one or more materials, media, objects, devices or their combinations other than fiber are used perpendicularly across, around or across and around a weak image of the present invention or part thereof, with or without the use of fiber, and/or cPRM. For example, a screw tape, glue; a bracket, wire or other hardware, etc. might be used across and/or around a weak inventive image part, to strengthen it and make it more permanent.

In an embodiment, fiber is added to an inventive image which hangs off of it.

In an embodiment, fiber is tacked to an inventive image surface, just securely enough to hold it in place, such as to hold fiber in place temporarily, e.g., using a bonding agent such as a clamp or a touch of cPRM. The slight connection with which tacking holds fiber in position, can for example, enable fiber to be easily moved and changed while the image of the present invention is contemplated and changes are made to it as desired. Later, this tacked fiber might be fully bonded to its surface just as it is tacked as desired, or it might be altered as desired (e.g., the parts it holds may be moved into a different position) and then fully bonded to its surface as desired, or this tacked fiber might be removed from its surface as desired partially or completely. As another example, fiber might be tacked to the inventive image surface for convenience, or as an aid to further processing. For instance, fiber might be tacked to hold it in the desired position on an inventive image surface on which this fiber might not otherwise be able to stay in place as desired, to lay flatly as desired, or combinations of these, e.g., fiber laid on a steep slope, a sharp angle, over a bump, over an embossed area, in an indented area, or in an engraved area on the inventive image surface may need to be tacked so that it will stay in place as it is bonded to the inventive image surface as desired. Or as another illustration, fiber might be tacked to a polymer as a surface preparation stabilizer, e.g. for a superimposed underlayer, to bond another layer to the inventive image, or both. **Air Bubbles in Inventive Images** In many embodiments, air bubbles can form in PRM or cPRM which may or may not be desirable in the polymer formed. But they can be worked, reworked and controlled as desired. Air bubbles can also form in inventive image parts which are not made or not principally made of polymer of the present invention, e.g., in glass, paper inventive image parts, in paint applications on inventive image such as paints and mixtures, etc. These may or may not be desired in the inventive image and these may or may not be as reworkable or as controllable as desired, e.g., removable. For instance, in PRM or cPRM air bubbles may form: a). when PRM or cPRM is stirred, poured, brushed or applied, b). within and around fiber, within and around polymer in the PRM or cPRM, and within and around non-polymeric ingredients, c). or a combination of these. For example, air bubbles frequently occur in and around open weave fibers used with cPRM, and under tightly woven fibers used with cPRM. cPRM with air bubbles can also harden so quickly that its air bubbles will not release, its air bubbles will not release as desired, or most or none of its air bubbles release. Among the methods of reducing, controlling, or eliminating undesirable air bubbles in PRM or cPRM, or all air bubbles in PRM or cPRM are the use of one or more stabilizers and/or the use of a vacuum. For example, there are stabilizers made for this purpose.

It is generally preferable to watch out for undesirable air bubbles when installing fiber and other materials, media, objects, devices, processes, interactions, or their combinations in or on image of the present invention. Further, it is generally preferable to avoid or to eliminate undesirable air bubbles before they permanently form in image of the present invention, particularly if they are large, visible, positioned so that they lessen the level of strength and/or permanence desired. Air bubbles might be undesirable within image of the present invention for various reasons e.g., aesthetic, structural and functional reasons, such as interfering with the desired transparency and/or translucency, other light effects, coloration, aesthetic details, overall aesthetic effect, or combinations of these. Beyond the use of stabilizers and vacuums to rid PRM and cPRM of undesirable air bubbles, when there are lots of small air bubbles in an inventive image, it is generally undesirable and often difficult to remove every single one of them.

Sometimes, more air bubbles get trapped in and/or under fiber and other materials, media, objects, devices, or combinations of these, when these are dry and they are joined to a dry image surface with a bonding substance applied over them. Air bubbles also tend to form when a bonding substance is unable to seep into or through fiber or other non-polymeric ingredients (e.g., when a tightly woven fiber is installed in an inventive image). In comparison, when fiber, and other embedded or attached materials, media, objects, devices or their combinations are placed on and/or into an image surface which has first been wet by its bonding substance, often few air bubbles form if any, and the air bubbles which do occur, can usually be removed as desired, before the bonding substance cures, hardens or dries. Air bubbles can also be removed from hardened polymer and other formed materials and media in inventive images. For example, any process for removing matter from polymer might be used, such as sanding or carving, e.g. undesirable air bubbles in polymer can be opened, then refilled as desired and restored as desired.

### Further Description of the Use of Space in Inventive Images

Space can be used in images of the present invention in any method, means, and manners, desired, many examples are described herein.

Unlike many other conventional practices, all polymer have real, spatial depth that can easily be used as desired, e.g., for its aesthetic, structural and other purposes. Unlike many other conventional practices, the real spatial depth of polymer in inventive images can be used, altered, downplayed, ignored, or even negated, as desired, throughout the creation of the polymer and forever afterwards, and throughout the creation of the inventive image and forever afterwards (unless it is obstructed by non-polymeric ingredients in an inventive image). This can affect other formal elements in inventive images as desired, e.g., light, color, structure, subject matter, content and meaning. The real spatial depth of polymer, gives inventive images a new form of light, transparency and/or translucency, or a combination of these, as desired. These can also affect other formal elements, e.g., light.

In embodiments, one or multiple kinds of spatial depth can be used, as desired in inventive images.
Texture In many embodiments, one or more textures can be made on inventive images or part thereof, using any methods, means, and manners desired. In a single inventive image, one or more textures can be on polymer and/or non-polymeric inventive image surfaces. An unlimited variety of real textures can be made on one or more polymer surfaces as desired, e.g., rough coarse textures, precisely controlled textures, textures with deep relief, textures that are transparent and/or translucent, textures with non-polymeric materials and media and objects, textures with fine details, polymer surfaces can be as smooth as desired, or a combination of these. Also, illusionary textures can be made on inventive images as desired e.g., a painted depiction of a texture.

In embodiments, image makers can have total control, as much control as desired, or as little control as desired over the use of textures on inventive image or part thereof. Textures on cPRM and polymer can be as workable, reworkable, and as controllable as desired, e.g., made in a process that is preplanned, WYSIWYG, spontaneous, accidental, or combinations of these.
**Further Description of Embedding in Inventive Images** In some embodiments, embedding is done within the real spatial depth of inventive images. A tremendous variety of subjects can be embedded into inventive images, e.g., one or more materials, media, objects devices, and their combinations, such as pieces of glass and crystal , polymer, paper; organic forms like leaves, pods, seaweed, berries, or flowers; stones, shells, glitter, mirrors; metal such as aluminum, gold or silver leaf; rubber, felt, wax, wood, paint, wire, string, pencils, paper clips, calculators, watches, spoons, springs, toys, keys, polymers, pigments, nuts and bolts, lenses, photographs, holograms, drawings, writings, pieces of ceramic plates; drawings in space; found objects; cut-outs; paint; light sources and other materials that give light effects to the inventive image; an artwork; a book; graphic designs; decoration; etc. Polymer and/or non-polymeric embeddments can be made in polymer and/or non-polymeric areas of inventive images using any methods, means or manner desired.

In general, two preferred methods of embedding in a polymer are as follows.

In an embodiment, one or more non-polymeric ingredients are added into either PRM which is then catalyzed, or added into cPRM forming a homogeneous and/or heterogeneous solution and/or dispersion. One or more non-polymeric ingredients might be added directly into PRM, or into one or more of its ingredients as desired, at any time before it hardens too much for the desired result.

When embedding in image of the present invention or part thereof, and strength, and/or permanence are important, the encasing formed around subjects by their host, is often a sufficient bond, particularly if each subject embedded is small in size, and/or if it has a coefficient of thermal expansion which is close to or the same as the host part it is embedded in. In addition to the mechanical bond formed by embedding, some embedded subjects bond further to their host part. Or for example, a mixed cPRM might be used to augment the bond formed by embedding a polymer piece into a host polymer part of an image of the present invention with which it does not bond chemically. Such a mixed cPRM could, for example, be a stabilizer which contains the monomers of both of the two different polymers, as well as the catalysts appropriate for polymerizing them.

Stabilizers may be used with embedding as desired e.g., for strength and/or permanence. For instance, a light fugitive material might be coated with an ultra-violet light stabilizer before it is embedded in a transparent host part of an image of the present invention.

When embedding in images of the present invention, or part thereof, some subjects (e.g., materials, media, objects, devices, etc.) change undesirably or risk being changed undesirably for example, by the process used to embed them, by contact with their host part, by being embedded over time, or by a combination of these. For instance, some materials are changed by heat from the polymerization reaction, such as embedded wax melting. Changes might occur in other materials and media which become saturated with the medium of their host part, such as an embedded leaf which discolors and changes in form once it is saturated by cPRM. Many solutions exist, which may be desirable. For instance, non-polymeric ingredients (such as fiber stabilizer) can be used if desired to reinforce and strengthen embedded items, or their host parts as desired, e.g., embedded items might be sealed, or coated with a material or medium that serves as a stabilizer protecting them from undesirable changes, such as sealing a embedded leaf with a colorless, transparent or translucent polyurethane varnish.

If the strength and/or permanence of an image of the present invention are important, it is sometimes preferable to reinforce embedding. For instance, embedded items and/or the host part in which they are embedded might be reinforced. Embedding can be reinforced any number of ways, e.g., using fiber for instance, under, over, or around embedding; and/or by thickening the host of the embedding.
**Air Pockets** Internal air pockets are another way to use real spatial depth in images of the present invention that is not available, or comparably available in many other conventional images, e.g. for aesthetic effect. Air pockets can be in inventive images, within polymer and/or non-polymeric parts which have been formed intentionally and/or unintentionally, using any methods, means, and manners as desired. Some non-polymeric inventive image parts may have air pockets, e.g. bubble wrap, a hollow cube, a hollow ball, etc. Both during their formation and forever thereafter, air pockets within polymer remain workable, reworkable and controllable as desired (e.g., removable, repairable, filled, enlarged, reshaped, colored, textured, etc.

In some images of the present invention, air pockets are intentional, desirable or both. As an example, in an embodiment, one of the preferred methods of forming one or more polymer air pockets is by attaching two separate inventive image parts together, so that the surface areas in contact, do not meet each other in at least one place.

If desired, polymer and/or non-polymeric inventive image ingredients can be within air pockets in inventive images, e.g., bonded to the interior of their air pockets, and/or loose within their air pockets.

Polymer air pockets can form variations and effects in image of the present invention, as desired, such as these examples. For instance, polymer air pockets can affect the light of an inventive image by their shapes, by their shadows, by their diffraction of light; and/or by the inclusion of polymeric or non-polymeric elements within them (such as a mirror, polished metal, a lens, a diffraction grating, a prism, a reverse lens, a reverse diffraction grating, a reverse prism, water, oil, or combinations of these, etc.). A polymer air pocket might serve as a lens, a diffraction grating, a prism, a reverse lens, a reverse diffraction grating, a reverse prism or combinations of these. The light effects from polymer air pockets can affect the color of inventive image, as well as their subject matter, content, meaning, strength, and/or permanence, e.g., air pockets within polymer can make image of the present invention more fragile and/or they can seal and preserve elements encapsulated within them.

In comparison, the use of air pockets, their variations and effects within conventional images is limited, problematic and burdened by undesirable issues. And for example, the workable, reworkable and controllable use of air pockets within many conventional practices is extremely difficult, e.g., air pockets within glass and/or within applications of transparent painting such as watercolors, and acrylic paints and gels, and many others can not be effectively created or controlled, as desired. The use of air pockets within image of the present invention offers solutions to limitations, problems and undesirable issues in image making and in images, as well as variations and effects which are new and unique, some of which have never been in images before. In other embodiments, one or more polymer and/or non-polymeric objects, shapes, forms, devices or combinations of these are formed in or on polymer and/or non-polymeric parts or areas of images of the present invention using any method, means, and manner desired. **Other Formations in or on Polymer** The formation of objects, shapes, forms, devices, or combinations of these, in and/or on conventional images is limited, problematic and burdened by undesirable issues, e.g., ineffective, and often impossible, particularly when transparency and/or translucency are desired, and particularly in painting and drawing. The present invention offers solutions some of which result in effects and in images of the present invention which are unlike any ever made before. See description herein of the formation of objects and devices in inventive images such as: lenses, and sunprints.

In an embodiment, one or more open negative spaces are made within the boundaries of a polymer and/or non-polymeric inventive image part (e.g., one or more negative cut-outs, holes, other negatives spaces) made as desired, using any method, means and manners desired. Images can give them real light by its inherent transparent and/or translucent form (provided the ability to see through the polymer is not intentionally blocked), the addition of open negative spaces can bring them another, different kind of real light and another, different kind of transparency, both of which are intangible, and neither of which rely on the use of illusion. Real negative spatial depth such as that formed in inventive images in this embodiment, brings air (space) and light into the inventive image. Open negative spaces can affect other formal elements significantly or as desired, e.g., making an inventive image seem lighter, more airy. Or for example, open negative spaces can make inventive images function differently and they can be used for many kinds of effects in inventive images, e.g., light effects. The present invention can expand the uses and the effects of open negative spaces in images. Open negative spaces such as negative cut-outs made in polymer are workable, reworkable and controllable as desired, from the time that they are made, on. For example, open negative spaces can be made within the boundaries of the perimeter of an image of the present invention, by using or making a mold which blocks polymer from forming in certain areas within the perimeter of its form, by cutting, carving, drilling, or chiseling through polymer after it has gelled, once it has hardened, or both.

In an embodiment, the Compositional Arrangement of an inventive image is such that one or more of its parts, go through one or more of its open negative spaces, e.g., for aesthetic, functional and/or installation purposes. In another embodiment, one or more parts of inventive image are visible through one or more of its open negative spaces.

Limitations, problems and undesirable issues in the use of real variable spatial depth in conventional images are among the significant limitations, problems and undesirable issues restricting the ability to make conventional images according to the Principle of Whole Development and Unity to the extent desired and in the manner desired.

By offering space, particularly real variable spatial depth, that is workable, reworkable and controllable as desired (e.g., the use of space in WYSIWYG processes, preplanned processes and in combinations of these), the present invention offers direct solutions to limitations, problems and undesirable issues, the core of which has heretofore not had any workable, reworkable and controllable, useful direct solution at all in conventional images. For example, despite all the interest and work, there was still no good way to use unlimited, workable, reworkable and controllable transparent and/or translucent spatial depth as desired in conventional paintings. Conventional shaped paintings enable some significant use of the real spatial depth in painting, but this is extremely limited. Illuminated images such as Light Box Art, Illuminated transparencies and other examples, offer interesting solutions to the use of real light and real spatial depth in conventional images such as painting, but because the real spatial depth and the real light of these conventional images can not be worked, reworked and controlled as desired, and because they can neither be painted nor sculpted as desired (even though many of these images function as paintings and sculptures), such conventional images solve limitations, problems and undesirable issues by avoiding them. With only conventional practices, there is still no direct solution enabling conventional images (such as paintings and sculptures) to be made using real spatial depth and real light as desired in a format that can be as WYSIWYG as desired, as workable, reworkable and controllable as desired. Thus, the use of space in an conventional images according to the Principle of Whole Development and Unity to the extent desired and in the manner desired remains a basic goal in conventional images, that is often not possible in reality, particularly without undesirable consequence, e.g., without risking or lessening the strength and permanence desired in the conventional images.

The formal element of space in inventive images can used according to the Principle of Whole Development and Unity to the extent desired an in the manner desired. Furthermore, the present invention expands the use of space in image making and in images, without undesirable consequences, e.g., without risking or lessening the inventive image's strength and/or permanence. The expanded use of space provided by the present invention, expands the use of other formal elements in image of the present invention, without undesirable consequences, e.g., without risking or lessening the desired level of strength and permanence of the image of the present invention. For example, a tangible form of real light, real transparency, real translucency or a combination of these can also be used in images of the present invention, with free and full workability, reworkability and controllability, as desired, e.g., in both WYSIWYG and preplanned processes as desired.

As an illustration, the real spatial depth of external surfaces of inventive images, can be made according to the Principle of Whole Development and Unity to the extent desired and in the manner desired. The real spatial depth of external surfaces of inventive image is workable, reworkable and controllable as desired, during their formation and forever afterwards, without undesirable consequences, e.g., without risking or lessening the level of strength and permanence desired for the inventive image. Thus, for example, the use of real textures, layered applications and additions, attachments, inlaying, other forms of external spatial depth, and combinations of these are all workable, reworkable and controllable as desired. In addition or instead, the real spatial depth of external surfaces of inventive images can be as integrated and as unified as desired, with as many or as few other formal elements of an image and with the image as a whole, as desired. For example, textures, layered applications and additions, attachments, and inlays, on a surface of an inventive image can all be formed according to their relationships to one another, and in terms of their relationships to the image as a whole, as desired. Use of the real spatial depth of external surfaces of inventive images can be coordinated with other aspects of that image (e.g., its form, its color, its structure, its movement, its subject matter, its means of installation, its function, etc.), and with the image as a whole, as desired. In comparison, using conventional practices, the real spatial depth of external surfaces of conventional images, such as the use of textures, layered applications and additions, attachments, and inlays, is often difficult, uncontrollable, or a risk to the i inventive image's strength, permanence or both. The use of the real external spatial depth of inventive images offers solutions to limitations, problems and undesirable issues in image making and in images.

As a second illustration, the real internal spatial depth of inventive image can be used in a wide variety of methods and manners, the real internal spatial depth of inventive image is workable, reworkable and controllable as desired, during their formation and forever afterwards, without undesirable consequences, e.g., without risking or lessening the desired strength or permanence. The real internal spatial depth of inventive image can be used according to the Principle of Whole Development and Unity to the extent desired and in the manner desired. For example, painting and drawing on the internal layers of inventive image, embedding, and air pockets, can all exist in an image of the present invention, in a way which is determined according to their relationships to one another, and in terms of their relationship to each image of the present invention as a whole, as desired. Or as a more specific example, painting and drawing on the internal layers of inventive image, embedding and air pockets, can all be coordinated as desired with other aspects (such as their external surfaces, forms, structures, light and functions), so that these internal layers of painting and drawing, this embedding, and these air pockets contribute as desired to each of these inventive images as whole forms, making each of them into wholes which are as unified as desired. This way of working is opposed to, for example, having to form the internal spatial depth of an image within limitations or guidelines and/or in advance of the rest of the image. Prior to the present invention, such limitations and guidelines generally affected the use of the real internal spatial depth of conventional images, e.g., processes for layering and embedding in the real spatial depth oil paintings, not only limit layering and embedding, but they also limit the strength, permanence, surface light effects and qualities and, the overall aesthetic of the conventional image formed; and often they have to be completed before other formal elements of the image are formed such as before the surface's color, light, and spatial depth are begun, etc. Thus, the use of internal spatial depth of inventive image offers solutions to limitations, problems and undesirable issues in image making and in images.

As a third illustration, the real spatial depth of the forms and structures of inventive image can be used as desired (e.g., using the Principle of Whole Development and Unity to the extent desired and in the manner desired) with the workability, reworkability and controllability as desired, during their formation and forever afterwards, without undesirable consequences, e.g., without risking or lessening their desired strength or permanence. Furthermore, the real spatial depth of the forms and structures of inventive image can be integrated and unified with their other formal elements into whole inventive image which are unified, as desired. For example, the contour of an image of the present invention, its support, its hollowness, its solidity, its flexibility, its rigidity, its strength, its permanence; and open negative spaces within the boundaries of its perimeters such as negative cut-outs, can all be formed in a manner which is determined as desired, e.g., according to the Principle of Whole Development and Unity to the extent desired and in the manner desired. The forms and structures of inventive image can be part of the overall image of the present invention as desired. This is not possible with many conventional practices without limitations, problems and undesirable issues. The use of the real spatial depth of the forms and the structures of inventive image offers solutions to limitations, problems and undesirable issues in image making and in images.

As fourth illustration, the real transparency and real translucency in the spatial depth of inventive images can be developed according to the Principle of Whole Development and Unity to the extent desired and in the manner desired. The real transparency and real translucency of the spatial depth of inventive image is workable, reworkable and controllable as desired , as desired during their formation and forever afterwards, without undesirable consequences, e.g., without risking or lessening the desired strength or permanence of the inventive image. For example, the use of transparent Separating Layer of polymer (as described herein), the use of translucent applications, the use of transparent texture, and the use of transparent forms can all be developed in concert with the development of the Compositional Arrangement, the subject matter, the functions, the movement and the structure of an inventive image. Further, the consideration and the use of the real transparency, and real translucency in the spatial depth of inventive image can be done according to the Principle of Whole Development and Unity to the extent desired and in the manner desired. This is not possible with many conventional practices without limitations, problems and undesirable issues. The use of real transparency and real translucency in the spatial depth in image of the present invention offers solutions to limitations, problems and undesirable issues in image making and in images.

As a fifth illustration, the real spatial depth of inventive images which function as paintings, drawings, sculptures, as other conventional planar art forms, as constructions, and other known art forms can be used according to the Principle of Whole Development and Unity to the extent desired an in the manner desired. The real spatial depth of inventive images which function as paintings, drawings, sculptures, constructions and other known art forms, is workable, reworkable and controllable as desired during their formation and forever afterwards, without undesirable consequences, e.g., without risking or lessening the strength, the permanence, or the aesthetic desired in the inventive image. Thus, for example, the use both internal and external real spatial depth, the real spatial depth of their forms and their structures, and the use of real transparency and real translucency in the spatial depth, such as the examples in the preceding four illustrations are all workable, reworkable and controllable as desired. Despite the desire and tremendous effort, this is not possible in many conventional images which function as known art forms, such as many kinds of paintings, drawings, other conventional planar art forms, sculptures, constructions, etc.

Both the use of real spatial depth in inventive images which function as known art forms, and the use of real spatial depth in inventive images which function as new art forms, offer solutions to limitations, problems and undesirable issues in image making and in images.

One important example, which is one of the best solutions in painting, if not the best solution in painting prior to the present invention, is the shaped painting, because they enable some improved use of real space which was previously unavailable in painting (an art form which was traditionally defined by its lack of real spatial depth and its failure to use space in other ways). And other formal elements can be part of painting in ways that they were previously unavailable too, e.g., form, Compositional Arrangement when more than one painting surface is used, etc. Yet, though the perimeter shapes of shaped paintings are made as part of the image maker's or image makers' vision, rather than just as structural support, they usually require significant preplanning to be custom made for a specific conventional images. In addition, because their unique perimeters are designed according to the other elements in these paintings, the other elements in these paintings have to be preplanned to some extent too, e.g., usually in preliminary drawings or studies. Thus, spontaneity is limited in shaped paintings, often severely. Then, once the custom stretchers of shaped paintings are made and stretched, and painting on them begins, these stretchers are rarely reworked. Reworking them involves unstretching the canvas and further custom woodwork. Because this is an interruption in the creative process, because this risks altering or damaging painting done on the canvas' surface, and because this is often difficult, expensive, and time consuming, usually when an adjustment is needed in the process of making a shaped painting, the other elements in the shaped painting are modified (e.g., the forms, the colors, the Compositional Arrangement of the painted forms), instead of the custom stretcher. Though they do expand the use of space and other formal elements in painting, these expanded uses of formal elements are neither reworkable nor controllable as desired, (e.g., they are not freely and fully reworkable and controllable). Furthermore, shaped paintings do improve image makers' ability to work according to the Principle of Whole Development and Unity to the extent desired and in the manner desired. Also, while shaped paintings do expand the use of space in conventional images by enabling their perimeters to serve aesthetic as well as structural function, they do not affect other limitations, problems and undesirable issues in the use of space in painting, such as, the use of the real spatial depth of their forms, their structures, their textures, their use of transparent, translucent and see-through spatial depth, their use of inlays, their use of embedding, their use of open negative spaces within their perimeters, such as negative cut-outs, etc..

Shaped paintings are a direct improvement of limitations, problems and undesirable issues and their expanded use of space has kept shaped painting on the cutting edge of painting and art today even though they do not come close to solving the limitations, problems and undesirable issues in the uses of real space, in painting, in image making or in conventional images. These limitations, problems and undesirable issues remained until the present invention. The importance and the popularity of shaped paintings is a sign of the promise and the value of the present invention, and of inventive image. In an embodiment, inventive images shaped paintings are made. However, images of the present invention can also be made which take painting, image making, and images, far beyond conventional shaped paintings to the extent desired, because rather than just improve prior limitations, problems and undesirable issues, inventive images can solve them. Because as much workability, reworkability and controllability and spontaneity as desired is available in using the present invention, no preplanning is necessary to make inventive image shaped paintings or other known art forms, though preplanning can be done as desired. Because the present invention can produce rigid and/or flexible forms (stretchers or other structural support are not necessary, though they may be used as desired). For example, in an embodiment an inventive image can be made which functions as a painting without any stretcher or other additional structural support, which not only has the irregular perimeters of its parts shaped as desired, it has open negative spaces, within the boundaries of its parts' perimeters, it has real variable textures, its thickness was made as desired, it has real transparency, real translucency or both used as desired throughout the depth of its space, it has embedding and inlaying in its spatial depth, it has parts with hollow spatial depth and parts with solid spatial depth; the use of its other formal elements was not limitations, problems and undesirable issues; its formal elements were workable, reworkable and controllable as desired when it was formed and they remain so; and furthermore, it was made according to the Principle of Whole Development and Unity to the extent desired and in the manner desired.

As a sixth and final illustration, when the use of real spatial depth of an inventive image is developed according to the Principle of Whole Development and Unity to the extent desired and in the manner desired, the use of real spatial depth can contribute to and even strengthen the subject matter, the content, the meaning and the success of the image of the present invention in the manner desired. For example, the objecthood quality which many abstract image of the present invention have due to their real spatial depth, can contribute to their subject matter, their content and their meaning. And by so doing, a significant problem in the use of abstraction in images is directly solved by the present invention, without having to rely on illusionary devices unless they are desired.

In an embodiment, an inventive image or part thereof, are created which are perceived to be receding in their spatial depth.

In another embodiment, an image of the present invention or part thereof, are made which are perceived to continue the real space in which they actually exist, by the use of receding, spatial depth.

In an embodiment, image of the present invention or part thereof, appear to be flat planes as desired, without illusions to the extent desired or completely.

In an embodiment, an image of the present invention or part thereof, can be made which is perceived as advancing in space towards the viewer.

In an embodiment, the perception of space as negative or as positive can be addressed in image of the present invention as desired. The present invention can expand the uses of negative and positive space in images.

The sense of space in image of the present invention can directly involve their other formal elements, such as their subject matter; the ingredients and processes used to make them; their forms and structures; their color; the way in which they are presented, set-up, displayed, installed, or exhibited in space; their content, their meaning, etc.

The real spatial depth of inventive images and the real light it brings them make the use of such effects in inventive images very promising for new images.

### Further Description of the Use of Light in Images of the Present Invention

The present invention offers important and valuable solutions to the limitations, problems and undesirable issues in the use of light in image making and in images. The use of light in inventive images is workable, reworkable and controllable as desired (any level of workability, reworkability and control desired can be used by image makers ranging from little or none, to free and full workability reworkability and control). In making inventive images, light can be used in any methods, means, and manners in a myriad of ways to the extent desired and in the manner desired. Thus, for example, this light can be partially or completely developed and/or altered as desired, e.g., augmented, downplayed or eliminated. The use of light in inventive images can contribute to its aesthetic in any way desired, e.g., to any extent ranging from light being the predominant characteristic of its aesthetic, to light being of little or no importance in its aesthetic, as desired, it can be as varied, as inconsistent or as consistent as desired throughout a single polymer or image of the present invention. Also, the use of light in inventive images can result in a vast range of varied qualities and effects, a number of which are new and unique, and some of which are unlike any qualities and effects heretofore in images. The use of light with the present invention expands the use of light in image making, and in images. Further it promises to produce new unique variations of conventional art forms, and it is likely that it will produce new unique art forms unlike any which have ever existed before. Light can be a part of inventive images in ways which are new and unique. For example, new effects involving light can be formed in polymer, (such as perceptual and visual effects, e.g., reflective materials and other materials which create and enhance effects of light can be embedded at different real depths within a polymer. Examples are throughout this patent.

Like most images, most images of the present invention have real light hitting their external surfaces, images of the present invention can have another form of real light that most conventional images do not have, or do not have comparably. Images of the present invention can inherently have one or more additional form of light, (provided it is not blocked during the process of creation, e.g., with opaque paint), unique tangible form of light which is the see through spatial depth of polymer. Many polymers and many images of the present invention, have light inherently within transparent and translucent forms. If desired, the light inherently within polymer can be formed, reworked, varied and controlled as desired, in a myriad of ways, during and/or after the polymer's formation, resulting in inventive images with the level of strength and permanence desired. But unlike transparent, translucent and other see-through conventional images (such as those made of glass and polymers which are not of the present invention), this tangible form of real light in inventive images offers image makers can be varied, worked, reworked and controlled as desired, in one or more processes which can be as free and full as desired, that can be done at a reasonable cost, both during the inventive image's formation and forever afterwards, without any undesirable effects or risks to the images of the present invention (e.g., compromises of its desired level of strength and permanence). The use of light in inventive images can be as strong and as permanent as desired, thus for example it can be as ephemeral, as weak, as vulnerable to change and as impermanent as desired. The present invention's capacity to be as workable, reworkable and controllable as desired, enables image makers to have as much aesthetic control and creative freedom desired in the use of light in inventive images. For example, light can be brought to an inventive image, shaped, obstructed, colored, blocked, shaded, and otherwise affected by using an enormous variety of materials, media, objects, devices, processes, interactions, sources, or a combination of these in inventive images, as desired, etc. This capability is unprecedented in image making, and conventional images.

The light in inventive images can create or affect other formal elements as desired, For example light in inventive images can have a visible form or shape, it can create coloration, the perception of spatial depth, form, texture, shape size weight of the images of the present invention, its subject matter, its content, its meaning, and combinations of these as desired. Light can even be subject matter in an inventive image if desired and as desired. Many of the ways of forming, reworking and controlling images of the present invention described herein, can be used to form rework and control light in inventive images as desired. These are examples.
1). Light in a polymer, or in another inventive image part, can be developed, altered and controlled as desired by using VIMC as desired. Example 1 Any of the ingredients used in a cPRM, can affect the resultant polymer's light and if this resultant polymer is not the entire inventive image, these effects can affect the entire inventive image. For example, a change in the proportions of the active ingredients used in a cPRM, can create and enhance effects of light, e.g., over catalyzing some cPRM can result in a transparent color in a polymer, such as a pale pink. Also, different monomers are transparent, translucent, colored and combinations of these to differing extents, e.g. some monomers have a white haze, some are slightly colored, some monomers are capable of polymerizing more clearly than others, etc. In addition, the use of multiple monomers and the catalysts appropriate for polymerizing them can affect the light of the polymer formed. Example 2 Light in a polymer, or in another inventive image part, can be developed, altered and controlled as desired by using one or more stabilizers, as desired, e.g., by adding optical brightener stabilizers such as Uvitex® OB into cPRM, or by adding a wax stabilizer into the cPRM. The specifications of one or more stabilizers, and the specifications of their use in and/or on an inventive image, can affect its light, e.g. the color and the concentration of each stabilizer used. The specifications of fiber stabilizer used in and/or on polymer can affect its light. For example the type of fiber used can affect the light of the polymer and the images of the present invention formed. Examples are, coarse or fine strands of fiber; the fiber's density; the fiber's weave; the thickness of fiber used; its location with respect to the rest of the polymer and with respect to the rest of the inventive image; number of layers used in and/or on polymer; the bonding agent used with fiber; the cleanliness of fiber; the use of different fibers (such as lace, heavy fibers, fiberglass, sheer fabrics and metallic fabrics; and combinations of these, etc. Example 3 Light in a polymer, or in another inventive image part, can be developed, altered and controlled as desired by using one or multiple polymer and/or non-polymeric materials, media, objects, devices, and their combinations, in or on monomer, in and/or on PRM and/or cPRM (such as gelled cPRM), as desired. Examples are all pigments, dyes, particles (e.g., both formed polymer particles and other particles like glitter, glass particles, shells, and feathers), etc. Example 4 Light in a polymer, or in another inventive image part, can be developed, altered and controlled as desired by using the surface or surfaces on which the cPRM forms as desired. Examples are, i). the specifications of the mold or other surface used (e.g. the formation of cPRM on a textured mold, or the formation of cPRM on a surface that it bonds to, such as on a transparent, translucent, opaque or see-through surface which is a desired part of the images of the present invention being formed); ii). the specifications of anything on the mold or other surface upon which cPRM is formed, e.g. powdered pigment, release agents, paint, clay, bugs, objects, particles, or paper on the mold, temporary parts of molds such as clay walls; iii). variables in mold making; iv). alterations to the mold or other surface upon which cPRM is formed such as the illustration of alterations to a mold containing gelled cPRM. Example 5 Light in a polymer, or in another inventive image part, can be developed, altered and controlled as desired by using any or all of the process or processes used to make cPRM into polymer. Examples are, the timing of superimposed layers of cPRM; creating in tiered layers; altering gelled cPRM (such as by cutting it); the specifications of applications of cPRM (such as the thickness of cPRM applications and the viscosity of a cPRM); the process of installing fiber in cPRM or polymer; releasing air bubbles in cPRM; combinations of these, etc. Example 6 Light in a polymer, or in another inventive image part, can be processed, altered and controlled using the environment in which cPRM is formed into polymer, and the accessories used as it forms polymer, e.g., the temperature, humidity and air currents around cPRM; the use of tools, facilities, and special equipment, with polymer of the present invention, etc.
2). Light in a polymer, or in another inventive image part, can be developed, altered and controlled as desired by using one or more ingredients which are completely or partially non-polymeric. For example, a number of inventive images have transparent, translucent, or see- through areas, parts or combinations of these, of all kinds of descriptions, which are not principally made of polymer or which are non-polymeric (e.g., parts that are glass or crystal, negative cut-outs, projections, found objects; a reflective, iridescent, pearlescents, interference, or fluorescent pigment, dye, material, medium, object or other element, for example, metals such as, gold leaf and silver leaf; mica, mother of pearl, elements with other special light properties; netting, mesh, burlap, wood and paper; elements that bring texture, structure, form, or permanence to an inventive image; elements that absorb or block light such as, opaque paints like encaustics; crystal, glass or polymers which are not of the present invention such as acrylics without light stabilizers; all transparent, translucent, and partially opaque painting processes such as, glazes, washes, chiaroscuro, broken color and other layering processes); combinations of these; etc. For instance, the high light refractive qualities of crystal might be desired, the unique light effect of dichroic glass might be desirable and the light effects of ready made acrylic cubes might be desired as part of an inventive image. Or for example, one or more mirrors are on or in an inventive image or part thereof, one or more mirrors are physically separate parts of the Compositional Arrangement of an inventive image (e.g., a mirror might be placed behind an inventive image to reflect light through it), or both.
3). Light in a polymer, or in another inventive image part, can be processed, altered and controlled using one or multiple conventional practices as desired. Such conventional practices are not limited, e.g., conventional practices of metal working, glass making, art, architecture, building, film, photography, conservation, construction, engineering, manufacturing, optics, other sciences, etc.
4). Light in a polymer, or in another inventive image part, can be developed, altered and controlled as desired by using: its the form, its shape, its structure; the process or processes of its creation (e.g., adding or subtracting matter, a WYSIWYG process, alterations during gelation, etc.); its function (e.g., using theatrical lighting of an inventive image stage set, by the movement of an inventive image door opening and closing, by the movement of water flowing in an inventive image fountain and by the changes of light seen in an inventive image window; bonding agents; SSI, small surface irregularities, large surface irregularities, bonding spots; surface preparations and underlayers on inventive images; Separating Layers; attachments; inlays; embedding (embedded forms and embedded air pockets); texture (internally, externally or both) such as transparent and translucent textures; subjects formed in polymer, such as lenses, prisms, gratings, air pockets, photographs, etc.; air bubbles; fiber; sealers, fixatives, coatings, coverings, other such agents; parts connected to the inventive image; the inventive image's Compositional Arrangement (which may involve forms, colors, shapes, multiple parts, etc.); shadows; its real spatial depth; using illusions (e.g., illusions of transparency, translucency, light, spatial depth, etc.); using the relationship of this inventive image part to one or more other inventive image parts made principally or completely of polymer; real movement; a light effect in the inventive image which can be viewed or visible in a relationship to time (e.g., a strobe light, or lights can be on timers); methods of display, installation, set-up or presentation (e.g., the inventive image's relationship to overhead lighting, windows, reflective surfaces like white walls, etc.); by the formation of images of the present invention as conventional art forms (e.g. as a lamp, as a work of Light Art, or new unique variations of conventional art forms); negative space (e.g., within the inventive image or around it or both); by the use of one or more conventional art forms in it, on it, with it (e.g., a cut-out, a photographic transparency, video images, drawings, paintings, graphic designs, drawings in space, sculptures or a combination of these); methods and means to partially or entirely block or covered over light; special effects (such as examples herein such as drawings in light, freestanding transparent inventive image paintings, etc.); methods and means which make an inventive image's light change over time (e.g., due to impermanence, its function, its movement, etc.)
5). Light in a polymer, or in another inventive image part, can be developed, altered and controlled as desired by using variations of these examples and of other examples herein, by using other light effects which are not specified herein, and by using combinations of these.

Often these light effects are at least as workable, reworkable and controllable as the context in which they exist.

As another illustration, an inventive image might be set-up so that it is interactive with a viewer in a way which changes its light and/or its ability to detect light, visibly and/or invisibly. For example if the presence of anyone near the images of the present invention interrupts a light beam and the images of the present invention can detect this interruption, the images of the present invention can respond in a way designed by its image maker, e.g., the images of the present invention can respond by changing, for instance it might move, its light effects might change, etc. Or as another example, the light of an inventive image can be affected by the changes of natural light, e.g., the rise and setting of the sun, clouds blocking light, lightning in a thunderstorm, etc. Refer to photochromic effects herein.

In an embodiment, one or more light sources are part of inventive images. These light sources can be of any description, and their use a part of an inventive image can be in any way desired, incorporated using any process or combinations of processes as desired. However, it is generally desirable to avoid any undesirable effects which may result on the images of the present invention, e.g., from the placement of one or more light sources too close to them, or from the use of one or more light sources which might change them undesirably. For example, light sources which give off heat, UV light or both, may affect polymer and/or non-polymeric ingredients in inventive images (e.g., paper, paints, etc.), undesirably, particularly over time. As another example, light sources which require frequent attention or upkeep (e.g., new parts such as bulbs) may be undesirable for inventive image, as might light sources which require visible cords, wires switches or the like. As illustration, an inventive image might be back lit, it might be lit from underneath and/or within, or a combination of these. In further examples, lighting such as neon tubes, or electric bulbs can be placed behind images of the present invention, at their sides, in their negative spaces, or in a combination of these locations. A light source might be encased in an inventive image, e.g., a light emitting diode (LED) might be within polymer which is formed around it. One or more lights which are part of inventive images might be of a kind or connected in such a way that their illumination is not constant, e.g. their illumination dims or brightens, it goes on and off (for instance on timers, by being activated in a pre arranged way, or using strobe lights), etc. In addition, electro-luminescent lamps (EL Lamps) may be used in inventive images. One or more EL Lamps may be shaped as desired as part of inventive images. For instance, they can be in shapes which contribute to an inventive image's aesthetic, e.g., in one or multiple abstract shapes (such as circles, rectangles, small irregular shapes, polka dots, undulating or zig zag lines, etc.); in one or multiple realistic shapes (for instance shaped like birds, fish or flowers); or both. For example, one or more EL Lamps might be used within, behind, or under an inventive image so that they illuminate it without being seen by viewers, they might also be used on inventive images. EL Lamps are made in a variety of colors and are available custom made. As another example, one or more lasers are part of inventive images.

In embodiments, polymer can be used around a light source as desired. Further it can be worked and reworked there too if desired. As another example, one or more light sources can be a part of the Compositional Arrangement of an inventive image, yet not physically connected to it. For instance, as a part of an inventive image, a red neon light in spiral shape might be visible both through a transparent area of polymer and on two of its sides. Or, light can be a part of a polymer in a combination of varied ways. Any wires, cords, transformers, plugs, bulbs and other parts of light sources may be visible and/or hidden in an inventive image to any extent desired, using a myriad of methods, means, manners due to the workability reworkability and controllability of the present invention. It is preferred that the visibility of any light sources as part of inventive images is aesthetically desirable, aesthetically insignificant, not aesthetically undesirable, hidden or a combination of these as desired. This is a sharp contrast to the image making options available using conventional practices using real light sources.

Images of the present invention can give off light as part of their functions, they can be light sources in addition to their aesthetic functions, e.g., light fixtures, candelabrum, etc. Isamu Noguchi is known for having created numerous light fixtures with paper shades called Akari light sculptures which are still produced and sold today and they are widely copied. As an illustration, inventive image lamps might be designed and made which are original images that are similar to Noguchi's Akari, or even copies of them, but because the uniqueness of Noguchi's Akari relies principally on their translucent paper shades, which are reinforced with visible rib-like structures (e.g., made of bamboo), inventive image lamps can be designed and produced with comparatively greater strength, permanence, workability, reworkability and controllability; and in a diversity of aesthetic variations which are virtually unlimited, many of which are impossible to make or to make strongly or permanently in paper. Among the further comparative disadvantages of paper lamp shades such as those of the Akari which can be avoided by using the present invention are a). that paper has a limit to its toleration for reworking, e.g., erasing or otherwise removing applications made on paper is often problematic, layering is problematic (e.g. layered coloration), and repairs to paper are often visible, b). paper has a limit to its toleration for light (e.g., bright light for long periods of time can burn or discolor paper, UV light can discolor paper, etc.); c). paper is absorbent, e.g. moisture and pollutants in the air; d). it does not take much to tear paper or to deform paper lamp shades, e.g. a child can easily do this; e) for other reasons of durability and permanence (e.g. it is often problematic to clean paper), etc.

In many embodiments, one or more intangible forms of light are part of inventive images as desired, though their source or sources may or may not be part of these inventive images. Others have light source parts such as inventive images with EL Lamps.

In an embodiment, one or more subjects are part of an inventive image which have a refractive index different from that of the inventive image or the part thereof which is nearest to them. For example, one or more of these subjects might be embedded, inlaid, or attached to an inventive image; formed on and/or within an inventive image; or a combination of these. Examples of these subjects are: glass particles or glass pieces such as regular glass, powdered glass (as a powdered pigment is used in enameling), any piece of dichroic glass, leaded glass (crystal) etc.; mica, quartz and other rocks; fabrics like lace and gauze; fibers such as fiberglass and papers; optical devices such as lenses, prisms and diffractive gratings; wax, oils, conventional paints, photographic transparencies, and materials and media containing a high percentage of oil or wax (such as "fat" oil paints, egg tempera with oil, and encaustic); or combinations of these; etc.

In some embodiments such as this one, glass beads from Flex-O-Lite Inc. in Fenton MO might be used as part of inventive images. Glass Beads are available in different refractive indexes from Flex-O-Lite range as high as a refractive index of 1.9 and even 2.1. A preferred method of using such glass particles and other particles with special light effects in inventive images is to stick them onto the surface of an inventive image, e.g. stuck onto polymer for instance, on gelled polymer, as an example, the refractive properties of such particles may not be visible if they are mixed into polymer or paint. Glass bubbles are also available from the 3M Company and other sources.

In an embodiment, some, most or all of the light in an inventive image can made to reflect in a certain direction or manner. For example, each source of light, and each source creating effects of light which is part of an inventive image (whether it is physically attached to the rest of it or not), can radiate light to or from that inventive image, or to or from part thereof, continuously and/or intermittently. Moreover, the light from each source, and each effect can be the same or different, in the manner desired. For instance, it can be of a narrow bandwidth, a broad bandwidth, or a bandwidth in between these; it can be of several bandwidths, narrow, broad, combinations of these, etc. The light can be delivered in a variety of shapes. It can, for instance, be shaped internally and/or externally, e.g., by lenses, prisms, etc. Furthermore, the initiating light itself need not be visible if it interacts with one or more materials, media, objects, devices, processes, interactions, effects or their combinations in an inventive image, e.g., iridescent materials, fluorescent materials, phosphorescent materials, or a combination of these.

In an embodiment, images of the present invention are used with uncommon lighting, such as special lighting, or lighting which is other than regular indoor or outdoor lighting, though this lighting may or may not be part of the images of the present invention formed. Transparent paints and light reflective paints and materials are preferred in and on some of the polymers made according to this embodiment. For example, an inventive image can be made for use as a stage set during performances of a specific dance piece by a dance company.

Generally, it is preferable to take all precautionary measures which are possible to prevent undesirable effects from the use of light as part of inventive images. For example, heat from one or more nearby lights sources can often affect subjects used on polymer (such as painting and drawing media), e.g., altering their permanence. For instance, it might not be desirable to position a light which gives off significant heat near a polymer surface which has been painted with encaustic paint. Examples of precautions which might be desirable to prevent heat from light from changing an application of encaustic paint are: the use of lighting which emits less heat per visible light (e.g., fluorescent lighting if it will suffice in other parameters); increasing the distance between the polymer's encaustic surface and the heat producing light; inserting a filter in the light path to remove the invisible infrared light which only supplies heat; or sealing or coating the paint, e.g., with a layer of cPRM, etc. Such containment in a plastic can be used to protect that which is below it from UV radiation. As another example, UV light can often affect non-polymeric inventive image ingredients, such as paper that is not archival, e.g., collaged newspaper. Again examples of precautions which might desirable are the appropriate variations of the examples herein. Refer to stabilizers.

In an embodiment, a dichroic light effect or quality is added to an inventive image. For example, a dichroic effect or quality can be brought to an inventive image by adding one or more dichroic materials, media, objects, devices, or their combinations to it, e.g., glass, paper or another polymer which has a dichroic effect or quality can be attached, embedded and/or inlaid, as desired.

In a number of embodiments, fluorescence is used in and/or on inventive images, as desired. Any fluorescent subject may be used as desired as part of an inventive image, e.g. fluorescent materials, media, objects, devices, etc. Though it is generally preferable for fluorescent subjects used in inventive images to be as stabile and permanent as possible, they may be part of an inventive image regardless of their stability or permanence, regardless of the type of light, it or they may require in order to fluoresce, and regardless of the presence of that type of light. As an illustration, a fluorescent material, medium, object, or a combination of these might be used in an inventive image (e.g. such as a fluorescent dye added into cPRM, or a fluorescent paint applied on polymer), in such a way that enables UV light to reach it, e.g. UV light is not blocked from reaching it by a stabilizer. For example, it might be desirable to use one or more sources of UV light, e.g., natural sunlight, or even "black lights," to elicit the fluorescence in an inventive image. One or more sources of UV light might be incorporated as part of an inventive image; or one or more sources of UV (or UV) light might shine upon this fluorescence yet not be part of this inventive image; combinations of these. As another example, fluorescent dyes may be used as desired, as part of inventive images. UV light from a light bulb or from natural sunlight can excite their fluorescence. It is often desirable to make images of the present invention, and parts thereof, so that nothing blocks or prevents the light of the exciting wavelength from reaching their fluorescence. For example, the use of this fluorescence in an inventive image is not beneath polymer which contains a chemical which absorbs or blocks the light of the exciting wavelength (e.g, UV) from reaching this fluorescence. Or for example, both the exciting UV source and the fluorescent material might be in a volume of the finished product (e.g, an air space) that contains no U.V. absorbent or U.V. blocking material.

In a further illustration, one or more fluorescent minerals might be used in and/or on an inventive image. Many natural minerals will fluoresce when excited by long wave and/or short wave UV light. Their fluorescence is likely to be a permanent property. However, the fluorescent light emitted when excited by the short wave (higher frequency) UV may be different from that emitted by the long wave (lower frequency) UV, e.g., the fluorescent color may differ in its hue and/or intensity. (This is because the higher frequency of the short wave UV light can cause the electrons to behave differently than electrons hit by long wave UV light.) Thus, for example, by using such fluorescent minerals and using UV light as desired, image makers can make and control fluorescence and color as desired in inventive images, and they can even do so as a function of time (i.e., switch from one color to another at a given time).

In an embodiment, one or more fluorescent monomers and/or polymers are used in inventive images. This might for example, result in fluorescence in the inventive image produced. Examples of fluorescent polymers (e.g., sheets and pellets) and/or monomers are made by. In addition or instead, the fluorescence in a polymer inventive image might be initiated using UV light. In addition or instead, the fluorescence in a polymer inventive image might be initiated using infrared light sources, such as laser beams and/or perhaps other sources of infrared light of the proper wavelengths. The fluorescence in such polymers may for instance be desirable for creating 3D luminescent inventive images. Cyro makes polymer which glows when stimulated by two different infrared light sources (e.g., laser beams) which coincide within the polymer.

Further examples of colorants which can provide inventive images with light effects are pigments and/or particles.

In an embodiment, fiber-optic glass and/or a comparable fiber-optical material can be embedded, inlaid or attached to an inventive image, or a combination of these. The amount of light transmitted through the fiber optics to its tip might depend on the difference in refractive indices between the fiber and the surrounding material or medium used, e.g., the surrounding polymer used. If their difference were great, less light will leak out of the fiber optics and more light will go to its tip. As their difference approaches zero, more and more light will leak out along the length of the fibers and the fiber itself will become less visible. If desired, this device may be used to introduce UV light should the fiber transmit the UV light or it may be used to introduce any other light to a given region (or spot) within the images of the present invention.

In some embodiments, filters, lenses and other special effects of light are be used in and/or on inventive images, for instance, in and/or on polymer. This can result in effects of light, some of which are new and unique. Examples are a Fresnel Lens or its negative impression, prisms, or a diffraction grating; special glass such as dichroic glass; dichroic papers, reflective papers, or other papers which create effects of light; or filters such as a polarizing filter). For example, by spreading out wavelengths in the spectrum (the visible spectrum and beyond) a prism can be used for visual effects in inventive images. In one of the preferred methods of forming a polymer directly off of the Fresnel Lens, the use of a spray release agent applied in a thin even layer is most preferred, because it is least likely to interfere with the desired polymer to be formed. The polymer formed will be a flat, negative impression of the Fresnel Lens. To form a positive, polymer, or, in other words an imitation of a flat, Fresnel Lens, a preferred method is to taking a mold directly off of the Fresnel Lens (e.g., an alginate or silicone rubber mold). The polymer which will form in this negative mold will be a positive, it will be an imitation of a Fresnel Lens.

Forming a polymer on a grating is much more difficult because its texture so fine. It's texture may if fact be too fine to make much of an effect on either a polymer formed directly on the grating or on a mold formed on the grating in which a polymer can be formed later. To take a mold off of a grating it is preferable to use a mold material which picks up fine details exceptionally well like alginate.

The negative impression or positive imitation of a prism is easy to form in polymer. The smoother the surface is on a prism formed in polymer, the more effectively it will work with light. To make a polymer surface smoother it might for example be sanded finely and then coated with a thin layer of cPRM (e.g., applied with a paint brush).

Covering any amount of area on a single polymer surface, actual Fresnel Lenses, gratings or prisms, and both the negative and the positive imitations of Fresnel Lenses, gratings and prisms can be used, independently or in combinations of these, they can be used multiple times in their entirety or as fragments, etc. just as the image maker desires. A Fresnel Lens, grating, prism or combinations of these can also be attached onto, inlaid or imbedded into a polymer. These special effects can be combined freely with the myriad of other effects of light in polymer.

In a number of embodiments, one or more photographic prints or parts thereof, photographic transparencies, or parts thereof, or a combination of these are part of images of the present invention. These photographic prints and/or transparencies may be of any description, they may be used in any quantity, they may be part of inventive images in any way desired, etc.

As an illustration, photographic prints, transparencies and parts of these which are part of images of the present invention may be in the form of negatives, conventional prints, they may be positive transparencies (e.g., slides, transparencies or films like such as those on clear sheets for use in overhead projectors, as overlays, on light boxes, or with other forms of back lighting), they may be other kinds of prints or transparencies, or a combination of these. For example, in an inventive image a photographic print and/or transparency might be: embedded in an air pocket; attached to the surface; embedded at any depth within transparent and/or translucent polymer; a physically separate part of the image; projected onto the image; transferred to an inventive image (e.g., using one or more printing processes, such as, photo silkscreen); etc. Epson Accessories Inc. makes Epson Ink Jet Back Light Film for printing transparencies from the computer. These printed transparencies can be used on and/or in polymer in inventive images. If desired, photographic prints, transparencies and parts of these which are part of polymeric inventive images may be further processed, as desired, e.g., by further applications, such as paint or cPRM, and/or by subtractive processes. If desired, applications superimposed over photographic prints, transparencies and parts of these can embedded them as desired (e.g., at any depth or at several depths). In addition or instead, matter might be removed from them using any process and any tools desired, e.g., they may be incised, carved, sanded, engraved, etc. Other kinds of further processing might be done too, if desired.

In some embodiments, the negatives of Polaroid film (made by Polaroid Corporation of Cambridge Massachusetts), can be used to transfer images onto one or more inventive image surfaces of any description, e.g., surfaces that are polymer and/or non polymeric, flat, curved, textured, embossed, perforated, transparent, translucent, opaque, etc. For instance, this can be done by pulling the negative and the positive sides of exposed Polaroid film apart early, e.g., after about 10 to 20 seconds, (perhaps up to 30 seconds if using Polacolor Pro 100 film). Then, place the Polaroid negative or part thereof on an inventive image surface or part thereof. There are numerous variations of this and similar techniques which can be used to make inventive images as desired, e.g., to achieve a specific desired aesthetic effect. For example, the choice of a particular Polaroid film (e.g., Type 669 film or Polacolor Pro 100), exposures, filters (e.g., Polaroid suggests trying a 20cc red or 30cc magenta filter with an increase in exposure of 1/2 a stop) and other such variables can affect the image transfer. The transfer might be assisted using pressure on the negative as it is on the receptor surface, for instance by passing a roller (e.g., brayer) over it (e.g., this may to get rid of any air bubbles) and/or by the use of a weight on it (e.g., a sheet of glass). The receptor surface's wetness or dryness, its absorbency or its lack of absorbency, and its temperature can also affect the transfer. For instance, Polaroid recommends transferring images onto damp or wet paper that has been soaked in water. Images can be transferred onto damp or wet inventive image surfaces made of polymer and/or paper, e.g., surfaces made using absorbent polymers. Keeping the negative and/or the receptor surface warm during the transfer can affect the results, e.g., warmed with warm water, with a hot plate underneath it, with a blow drier, iron, etc. Polaroid recommends approximately 100 ° Fahrenheit, or warmer. The receptor with the negative against it can even be put through a laminator set at low heat once or multiple times, e.g., using Polacolor Pro 100 film. Altering the time that the negative is on the receptor surface can result in different qualities of transfers too. Though in their literature Polaroid recommends that the negative be on the receptor surface for about 2 minutes, experimenting can be done, e.g., with 1-4 minutes or even longer, e.g., up to 30 minutes. Other examples of variations of this transfer process are, coloring the receptor surface prior to the transfer (e.g., with a metallic color paint, a transparent wash of color, etc.); coating the receptor surface with gelatin and Kodak Photoflo; or covering the receptor surface with an acrylic medium prior to the transfer; etc. And once some of these transfers are made (e.g., using Polacolor Pro 100 film), they can be altered (e.g., clarified) by sponging and/or putting them in a bath, such as a bath comprised of equal parts of distilled water, white table vinegar and hypo clearing agent, in which the transferred image is agitated and softly brushed (e.g. for about 2 minutes), and then put in a running water bath (e.g., for about 15 minutes). In addition, the image transfer may be further processed as desired, e.g., transferred colors can be altered and/or other coloration can be added using conventional practices (like painting, drawing, incising or scraffito, using retouching dyes, etc), using the present invention (such as by superimposing a new layer of polymer), or combinations of these. On the inventive image surface the resultant image may be opaque, transparent, translucent, or a combination of these; it can be as in focus or as out of focus and as color saturated or as pale in color as desired. The inventive image may be finished, but if not it may be further processed, as desired.

As another illustration of this embodiment, the emulsion or the emulsions of one or more developed photographs, part thereof, or combinations of these, might be transferred in any way desired, onto one or more inventive image surfaces. Photographic emulsions may be transferred in any way desired onto inventive image surfaces which are of any description, e.g., comprised of any polymeric or non polymeric ingredients; and flat, curved, textured, undulating, embossed, perforated, transparent, translucent, opaque, etc. Then if desired, further processing can be done as desired.

As a more specific example, most photographic emulsions commonly used in Polaroid films can be removed from their conventional Polaroid backing in processes such as this one. After a Polaroid photographic print is developed and dry (e.g., 8-24 hours after it is made, or sooner if it is forced dried such as with a blow drier), it is immersed face up in water (e.g., distilled water), that is 160° Fahrenheit, or hotter, e.g., for about 4 minutes. Then this Polaroid photographic print is transferred into cold water, e.g., using tongs. While it is in the cold water, the flimsy transparent emulsion bearing the photograph can be removed from its conventional backing. Then, either in the water or removed form the water, this emulsion can be laid as desired, onto another backing, such as the inventive image surface or a part thereof. For example, this emulsion can be lifted out of the cold water with the temporary support of a sheet of acetate, vinyl or mylar, e.g., the acetate can be on top of the emulsion, with the acetate supporting the emulsion wrinkles can be taken out of the emulsion by dunking the acetate supported emulsion in and out of the water, and the acetate can be peeled off of the emulsion once the emulsion is laid on the inventive image as desired. Then once the emulsion is laid as desired on the inventive image, if acetate or another temporary support was used to transfer the emulsion onto the inventive image, it is peeled off of the emulsion. Polaroid also states that the emulsions on developed prints made using Polaroid films such as Time-Zero can be peeled off their Mylar backings, and that the white developer should be washed off of these emulsions. Emulsions used on inventive images can be placed, laid, and altered on one or both of sides at any time as desired. Thus for example, in removing an emulsion from its conventional backing, in transferring it to the inventive image or part thereof, once it is on its new backing, or at more than one of these times, said emulsion might be flattened, stretched, wrinkled, torn, cut, perforated, folded, colored and/or marked, or changed in a combination of these ways, etc. Polaroid recommends the use of a soft rubber Breyer roller, squeegee, a warm image dry-mount press, or a combination of these. In addition or instead, said inventive image can be further processed as desired, e.g., with bonding spots and/or Separating Layers which may strengthen the bond between the emulsion and said inventive image, and/or which may enable superimpositions. Once emulsions are installed as desired, their inventive images may be finished, but if they are not they may be further processed.

For example, an emulsion measuring 10" x 8" might be transferred onto a clear colorless polymer measuring 14" x 12" x 0.8" to make a photographic transparency with a border around it. This photographic transparency may be the complete image or it can be further developed and controlled as desired. For example, this inventive image might be further processed by the superimposition of a Separating Layer of polymer completely covering it embedding its photographic transparency. Then, drawing and painting might be done on the new Separating Layer of polymer. Alternately, this inventive image might be further processed by the superimposition of a second photographic emulsion, partially or entirely over the first one. In addition, or instead, a second piece of preformed polymer measuring 8" x 4" x 0.8" might be bonded to this inventive image using a bonding agent, forming a plane that is at a right angle to the original plane of the images of the present invention. If the image is still not complete, it can be further processed as desired.

In a further illustration of this embodiment, one or more photographs, transparencies, parts thereof, or combinations of these can be made on an inventive image or on part thereof. For example, a photographic emulsion may be applied on one or more inventive image surfaces of any description, at any stage in their development, e.g., polymer or non polymeric surfaces which are flat, curved, textured, perforated, transparent, translucent, partially opaque, opaque, or combinations of these. Furthermore, the applications of photographic emulsions may be made on surfaces of images of the present invention in any way desired, e.g., they do not have to be continuous applications. The resulting inventive image may be complete or further processed as desired.

One company that sells emulsions which can be used as part of inventive images in this embodiment is Rockland Colloid Corporation of Piedmont, New York. Rockland Colloid's photographic emulsions are named "Liquid Light®", "AG-Plus®", etc. The contrast of the resultant image can be increased by adding a small amount of print developer (working solution) to the Liquid Light emulsion (e.g., one part developer to ten parts emulsion); by aging the emulsion after it is applied; or both. When dried, that photographic emulsion is exposed to light selectively, just as if it were a photographic print paper. When developed, washed (an acidic "short-stop" cannot be used), and fixed (e.g., with standard photographic chemicals available in any photographic store), the result is a negative print of the light to which it was exposed. In other words, should a black and white negative be projected onto that emulsion, then after processing that emulsion would be a negative-of-that-negative or a simple positive print much like a similar positive print on paper. If the surface under the emulsion is opaque, then the developed photograph will resemble a positive print on paper. However, if the surface underlying the emulsion is transparent and/or translucent, e.g., polymer, the positive print will resemble a photographic transparency. Further examples of variations of this embodiment, can be made using other products available from Rockland Colloid. For example, Rockland Colloid sells a chemical to tint the residual silver emulsion, or its background. Rockland Colloid also sells a preparation Halo-chrome® Silver Toner which transforms the black microparticle silver of the negative images into a bright mirror-like highly reflective silver, and such a reflective surface appears essentially as a positive of the light source. If desired, more than one type of photograph or transparency might be formed on an inventive image of this embodiment.

Luminos Photo Corporation of Yonkers New York also has an emulsion which can be used in this embodiment called Silverprint Liquid Emulsion which is produced by Kentmere Ltd UK. It is a blue-sensitive silver halide sensitizer which displays deep rich tones, excellent contrast and exceptional detail. Because it is a gel at room temperature, Silverprint Liquid Emulsion needs to be heated to be liquified, e.g, in a water bath of hot water at 110-120 degrees F for 45-60 minutes. Shaking and vigorous stirring may cause undesirable air bubbles. This emulsion can be applied onto any kind of inventive image surface desired, using any method or manner desired, preferably using safe light conditions (e.g., amber or light red light). The emulsion can be diluted for a variety of different effects, however anything more than 1:3 dilution may result in black spots. Like Liquid Light, Silverprint Liquid Emulsion might for example be painted on an inventive image, poured, dripped on, rolled on, sprayed on, dipping processes might be used, multiple coats might be applied, etc. Silverprint Liquid Emulsion will bond to an alkyd-based underlayer, such as a conventional alkyd paint or painting medium e.g., an alkyd surface preparation stabilizer. Applications of Silverprint Liquid Emulsion on inventive images can be liquified (e.g., to rework them) by heating them, e.g., with hot air from a blow drier. The emulsion is preferably dried in total darkness, chilling it or cool air can will speed this drying. Then the emulsion can be exposed to light as desired (e.g., with an enlarger or contact printing with a slide projector), developed using conventional practices (washed preferably with running water, an acidic "short-stop" cannot be used), and if desired, further processed as desired. As example, Silverprint Liquid Emulsion could be substituted for Liquid Light® in the forthcoming examples.

Two books describe practices which might be employed in making inventive images, 1). Polaroid Transfers: A Complete Visual Guide to Creating Image and Emulsion Transfers by Kathleen Thormod Carr, published by:Watson-Guptill Publications, Incorporated; 06/01/1997; Imprint: American Photographic Book Publishing Company, and 2). Silver Gelatin: A User's Guide to Liquid Photographic Emulsions by Sarah Jones with Martin Reed, published by Watson-Guptill Publications, Incorporated, August 1996.

Examples of further effects for inventive images of this embodiment which have transparencies are the use of: additional lights and/or additional light qualities and effects (e.g., reflective materials). For instance, a photographic transparency might be attached to a polymer (e.g., an image support which may be a stabilizer) back lit by an EL Lamp. Thus, if desired, an inventive image of this embodiment, or part thereof, might have one or more illuminated transparencies, e.g., like one or more overlays, films, or photographic transparencies on a light box. As an example, in comparison to the images of contemporary artists like Jeff Wall, a large illuminated image such as one that measures roughly 89.25 x 147 inches, can be made using the medium of the present invention, with additional light sources or without any special equipment, without any special facilities, and with minimal technical knowledge for a total cost roughly less than $500.00 (perhaps much less), including everything, e.g., including its mold, its cPRM, and one or more non polymeric ingredients (such as paint). This is a fraction of the cost of the illuminated images of contemporary artists such as Jeff Wall and the present invention offers image makers more workability, more reworkability and thus, more creative freedom than conventional practices for making illuminated images.

In addition, or instead, if desired, one or more montages and/or photomontages can be done on and/or in an inventive image or part thereof as desired. In addition, or instead, if desired, an illuminated transparency, a montage, a photomontage, or combinations of these, might be part of an inventive image in one or more other ways. Furthermore, if desired, an inventive image or part thereof, might be one or more montages, photomontages, photographs, transparencies, illuminated transparencies, surfaces for projections, new forms of photographs or transparencies, or combinations of these, etc. Further these inventive images can be new and unique versions of these conventional art forms.

Images of the present invention or part thereof, are one or more sunprints, photograms, negative photographic prints, positive photographic prints, negative photographic transparencies, positive photographic transparencies, holograms, or as combinations of these, as desired. These can be transparent, translucent, opaque, partially opaque, or combinations of these, and they can be further processed as desired. For instance, inventive images or part thereof might be transparent photographic transparencies made on polymer that is transparent, translucent, opaque, partially opaque, or a combination of these, e.g. portraits landscapes, abstractions, photographs of conventional images, etc. If desired, these photographs may be altered as desired in a computer program before they are part of an inventive image. As an illustration, a conventional photograph on conventional photographic paper might be bonded to the flat backside of an inventive image using any singular or multiple methods, means and manners desired, for viewing through its other sides any and all of which might be painted, carved, flat, undulating, perforated, textured, inlaid, printed upon, written upon, designed with one or more photographs on them, with embedding, designed in one or more other ways, or a combination of these. In a further illustration, one or more photographic transparencies are made or transferred onto the backside or the underside of transparent and/or translucent polymer in making an inventive image. Refer to such processes herein.

It is sometimes desirable to cover photographic emulsions on external surfaces of inventive images with a material that protects them from undesirable changes. For example, a photographic emulsion can be coated with a stabilizer, a material or a medium, that protects it from UV light, e.g., cPRM with a UV stabilizer in it, or a standard protective spray available in a photographic or art supply store which might, for instance, be an acrylic spray containing a substance that absorbs UV light. Care and precaution to avoid or to prevent undesirable changes to a photographic emulsion on an inventive image are often desirable prior to superimposing it with anything. A photographic emulsion on an inventive image, might, for example, be superimposed by: cPRM, polymer and/or non polymeric ingredients. For example, the polyacrylic spray described above can be applied on a photographic emulsion on an inventive image, preferably in more than one layer, letting each layer dry before applying the next layer.

The present invention expands the use of photographs, transparencies, parts thereof, and combinations of these in images far beyond its prior boundaries, e.g., with a wide variety of qualities and effects which are not available in conventional practices, such as: real variable spatial depth; real variable light; light effects; layered effects, etc.

In an embodiment, one or more holograms are part of an inventive image or part thereof, e.g., in or on the image. For example, a hologram can be attached to an inventive image, inlaid in it, embedded in it, or it can be a part of an image of the present invention which is not physically attached to it but which is visible through its transparent polymer or glass. In a further embodiment, one or more conventional images or part thereof that are stereoscopic, autostereoscopic, lenticular, computer generated, or a combination of these are part of an inventive image. In another embodiment, one or more PHSColograms® are part of an inventive image.

In an embodiment one or more solar panels are used in inventive images. The energy captured by such solar panels may be used as desired. For example, solar panels on an inventive image might provide the energy for one or more lights illuminating that inventive image, they might provide energy to run sound, video or a computer equipment on the same image, they might provide the energy to run a motor or a fan on the same image, (e.g. on a mobile or kinetic sculpture) or a combination of these.

### Light Effects on the Surfaces of Inventive Images

In the use of the present invention an extraordinarily wide variety of surface light qualities and effects can be developed, reworked, and controlled as desired, entirely or partially on one or more sides inventive images, as well as from within them, as desired, at any time during or after their formation, using any methods, means and manner desired. Many examples are herein such as these. Surfaces of inventive images can have variable light effects and qualities from A). the use of real and illusionary forms of light (tangible or intangible), transparency, translucency, or a combination of these; B). texture; C). light that is direct, indirect, diffracted, reflected, distorted, colored, from any direction or from many directions; D). gloss, semi-gloss and matte effects ; E). iridescent, dichroic, metallic, reflective, pearlescent, interference, fluorescent or phosphorescent effects; F). polymer and from non polymeric ingredients; G). the process or processes of their formation (e.g., use of superimposed transparent layers, incising, abrading, bonding processes); H). use of underlayers; I). one or more marks, patterns, designs, drawings, pictures, writings, texts, drawings in light; J). various forms of coloration; K). combinations of these.

The present invention offers a myriad of surfaces light qualities and effects, with workability, reworkability and controllability as desired, using non polymeric inventive image ingredients and/or conventional practices (such as oil paints, watercolors, pastels, etc.), which are limited, problematic and burdened by undesirable issues in their conventional applications, but which yield a myriad of new possibilities and freedom which is significantly greater than that offered by most other conventional images (particularly most of those that are permanent, workable, reworkable, and controllable) in inventive images. The variety, the workability reworkability and controllability; the aesthetic possibilities, and the freedom available with the surface light qualities and effects of images of the present invention, is limited or only marginally existent in the formation of many other strong permanent conventional images made using conventional practices. Despite the old, long standing ideal Principle of Whole Development and Unity, it is rare for surface light qualities and effects in strong permanent conventional images to be as workable, reworkable and controllable as desired, even though other formal elements in these conventional images are significantly more workable, reworkable and controllable, e.g., formal elements such as color, form, function, method of display, etc. In many strong permanent conventional images, these surface light qualities and effects were and are commonly limited, e.g., before the conventional images was begun by the choice of its medium and other conventional practices, all that could be done was and is a choice between matte, glossy and semi-gloss finishes, applied in a uniform manner, on an conventional images after it was or is completed, often when it was too late for important aesthetic elements, or any significant aesthetic elements to be added to the conventional images. Consequently, it was and it is rare to see surface light qualities and effects used as important or meaningful aesthetic elements in many strong permanent conventional images.

For example, among the major limitations, problems and undesirable issues in the use of surface light qualities and effects in permanent conventional image making, are the restrictions which govern superimposed layering, such as fat over lean which governs the layering of oil paints. (See previous text). Fat over lean makes free use, and control of surface light qualities and effects a risk to the strength and permanence of oil painting. In painting with oils according to fat over lean, layers of oil paint are superimposed with increasing percentages of fat ingredients. Thus, oil painted surfaces commonly become more glossy, as layers with added oil are superimposed, and more matte as oil paint layers with added wax are superimposed. But, the number of oil paint layers that can be superimposed is limited because high percentages of oil in oil paints risks their strength and permanence (as previously described). Layers with high percentages of wax risk the strength and permanence of the images too, because of their softness and fragility, e.g., they scratch very easily, dust sticks to them, etc. Refer to fat over lean in previous text. In addition, though there are a variety of materials, media, objects and combinations of these, which can be mixed into oil vehicles and into oil paints for use independently, or for use with other oil paints, (e.g., iridescent, pearlescent, interference, and metallic pigments are available as dry powders, some of which are made with mica rather than metal so they are permanent; and thixotropic paint additives), these risk the strength and/or permanence of the images formed due to the same problems in accurately following fat over lean. The conventional practices available for further surface light qualities and effects in permanent oil painting, e.g., light qualities and effects from textures, inlays and attachments, are also quite limitations, problems and undesirable issues, see previous text.

The general perception of surface light qualities and effects as aesthetically neutral, even meaningless elements in permanent images has heretofore been an important aesthetic, but it unknown to many, this has seldom been determined by image makers, in fact it has seldom had much relationship to the aesthetic desires of image makers, or to the surface light qualities and effects which they would desire or use if they were possible in conventional images. Generally, surface light qualities of many kinds of conventional images were and are uniform, e.g., traditional paintings. It was either decided by the choice of conventional image making practices before the image was made or it was decided by the choice of a sealer, coating, covering or other such agent applied to the image after it was completed, e.g., the use of a matte, glossy or semi gloss coating, like a varnish, over a conventional painting or sculpture. The use of surface light qualities and effects in many conventional images was limited, often extremely limited, by conventional practices, unless the strength, the permanence or both of the conventional images was or is risked or compromised. The present invention offers solutions to this problem. Images of the present invention can have surface light qualities and effects which are unique, which are much more varied than ever before, and images of the present invention can have surface light qualities and effects the likes of which no conventional images has ever had. For example, matte, opaque, textured, and light absorbent surfaces can be dramatically contrasted against the real transparency, real translucency, real depth and real light of transparent and/or translucent polymer to form an image of the present invention, unlike any ever seen before. Or as a different kind of example, a polymer inventive image surface can be painted with oil paints. Then if desired, painted parts of this surface can become matte by superimposing a Separating Layer of polymer over them. Then, parts of that Separating Layer of polymer can be covered with a matte acrylic paint, or abraded, or both, in order to achieve the exact surface light quality or effect and the exact overall aesthetic desired Using the surface light qualities and effects of the present invention, can catalyze a change in the general perception of the surface light qualities and effects in images, because an enormous variety of surface light qualities and effects can freely determined by image makers for the first time ever.

The fact that images of the present invention can have real variable tangible light within their forms, and the fact that there are a myriad of other ways of using all kinds of forms of real light in inventive images as desired are two more important factors enabling: A). inventive images to be as free from the use of illusions as desired (e.g., successful without relying on illusions, or successful without any illusions); B).inventive images to be successful with one or more new unique illusions, C). inventive images to use real light as desired e.g., without undesirably visibility of cords, wires, bulbs and other such necessities for using real light in conventional images, or without any of these elements; D). inventive images to use real light as desired e.g., without undesirable specifications for the location in which it is viewed, for the way in which it is set-up, installed, displayed or exhibited, both of these, or without either of these specifications; E). inventive images to have the sense that they are made with light as part of their aesthetic, e.g., integrated and considered like other formal elements; F). inventive images to have other desirable content, meaning, aesthetic elements, and aesthetics (e.g., luminosity, glow, sparkle, radiance, spirituality, etc.); G). inventive images to be new unique variations of conventional art forms, and even to be new unique art forms, H). other consequences described herein, and combinations of these.

As a more specific example, the new and unique use of light and other formal elements in inventive images enable them to focus on relationships involving light as never before. Examples are the relationship between light and dark; between light and shadow; between transparency and opacity; between varying densities of transparency and/or translucency between various ways of seeing through and into the inventive images; between the use of space and the use of use of light; between the use of illusionary light, illusionary transparency and/or translucency, and real light, real transparency and/or translucency; or a selection of these; between reality and illusion in other ways; etc. For instance, any one of these relationships, or two or more of them, can be used as subject matter in an inventive image. Many of the resulting inventive images are new, unique, and some are so innovative, that they have never been created in images before.

In some embodiments, an image of the present invention is formed using one or more ingredients, processes, or combinations of these, which are selected (entirely or partially), for their ability or abilities to ameliorate, change, or eliminate effects and/or risks which are not desired in the in the inventive image. For example, undesirable effects and risks to strength and/or permanence of an inventive image might be caused by the characteristics (or sensitivities) of one or more of the ingredients used in it and/or on it. For instance, when forming a polymer with one or more embedded subjects which are sensitive to heat (such as a piece of wax, or a piece of plastic which deforms with heat), it is preferable to arrange the polymerization reaction so as to minimize the rise in temperature resulting from its polymerization heat. One preferred way to accomplish this is by using the least percentage of catalyst possible so as to slow the rate of polymerization, and thus slow the rate of heat given off. Another preferred way to accomplish this is to polymerize in layers which are thin enough so that the heat given off does not significantly raise the temperature. It is also preferable not to polymerize in an overheated environment. And, if possible, it is preferable to use the form of the heat sensitive material being embedded, which is the least likely to result in an undesirable effect or risk in the polymer, (e.g., select a wax or a thermal plastic which requires a higher temperature to soften or melt). Further examples of causes of undesirable effects and/or risks are all the other materials and equipment used to make images of the present invention which are not ingredients, such as the mold, clay, tools, the spray release agent applied to the mold, etc.

### Further Description of the Methods, Means & Manners in which Images of the Present Invention are Set-up, Presented, Installed, Displayed & Exhibited

Images of the present invention can be set-up, presented, installed, displayed, exhibited, or used in combinations of these ways, using any conventional, or any novel method, processes, means, manner, materials, media, objects, devices, or their combinations of these as desired.

In some embodiments, images of the present invention are set-up presented, installed, displayed, exhibited or prepared for viewing with specially designed mounts. For example, in an embodiment a new unique rigid mount system is made and used for setting up, presenting, installing, displaying or exhibiting images of the present invention. In another embodiment a new unique wire mount system is made and used for these same purposes. And in a further embodiment a new unique mount system is made with a design that is a combination of the rigid mount system and the wire mount system. Use of one or more of these mount systems can create a wide variety of set-ups, presentations, installations, displays, exhibitions, or other modes of viewing images of the present invention which are structurally and aesthetically efffective, and which are new and unique. For example, with or without any other method, means, or manner for their set-up, presentation, display, installation or exhibition, any of these mount systems or a combination of these can affect images of the present invention structurally, aesthetically, functionally or have a combination of these effects, to any extent desired and in any manner desired, ranging from a critical effect to no noticeable effect at all, as desired. All of these mount systems are workable, reworkable and controllable as desired. For example, they can be adjusted without removing them or they can be removed, and then if desired, replaced, altered, repositioned, etc. Or, for example, their aesthetic can be made as desired because their basic forms are so minimal and simple. Used with images of the present invention, any or all of these mount systems can be either hidden from view or visible as desired. However, it is preferred that the visibility of each of these mount systems be aesthetically desirable, or it is preferred that these mounts systems be hidden from view, e.g. by the opacity of the part of the image of the present invention between the mount system and viewers.

The aforementioned rigid and wire mount systems, and mount systems which are combinations of these, are comprised of one or more mounts, each of which has the same basic, three-component design. Component (A) is an anchoring mount component to securely hold the image of the present invention onto the mount. It is embedded or inlaid in, attached to, or placed against the image of the present invention as desired. Component (B) is an adjustable middle, mount component that holds and fixes the image of the present invention at the desired distance from the structure from which it is mounted, while leaving the space in between the image of the present invention and the structure from which it is mounted, adjustable as desired, controllable as desired, and even workable and reworkable as desired. These adjustable mount components also absorb shocks to the image of the present invention which could otherwise cause its polymer and perhaps other parts to crack or incur other undesirable changes. Component (C) is a mount component on the structure from which the image of the present invention is mounted, which connects to the image of the present invention's aforementioned middle mount component. The basic, minimal forms of all three components of the mounts comprising rigid mount systems, wire mount systems and mount systems which are a combinations of both of these, are intended to facilitate the creation of innumerable, diverse, individualized variations, if desired and as desired. For instance, the basic forms of all three mount components for all three of these mount systems can be formed, sized, shaped, embellished, and finished individually in a myriad of variations, as desired, e.g., for structural needs, aesthetics, for other functions, as desired. A single image of the present invention can be set-up, presented, installed, displayed, exhibited or prepared for viewing in a combinations of these ways, using one or more rigid mounts, one or more wire mounts, one or more mounts which are a combination of a rigid and a wire mount, or using any combination of these mounts, simultaneously and/or interchangeably. It is preferred that most of the parts used in all three of these mounting systems are metal, most desirably, steel or stainless steel.

Any of these three mount systems can be used to install images of the present invention as close as desired to any structure (like a wall), or as distanced from it as desired (e.g., leaving space, air and light in between as desired). Further, this proximity can be permanently freely adjustable in any of these three mounting systems without any compromise or sacrifice to any preference in the inventive image, e.g., without sacrificing the image's strength or permanence. For example, a with rigid mount system, a wire mount system or with a combination of these, the display of a single, image of the present invention can have areas mounted flushly against the wall, and other areas mounted away from the wall (e.g., in images of the present invention which have one or more changes of level on their backsides, or in image of the present invention mounted with their backsides angled in relation to the wall). Any of the mounts from these three mount systems can have any number of attachments to one or more parts of inventive image, as desired (whether they are polymeric parts of inventive images, or non polymeric parts of inventive images). In general, for stability in mounting image of the present invention from vertical structures like walls with any of these mounting systems, one mount going from an image of the present invention to its vertical supporting structure can be undesirably risky for most image of the present invention. In general, image of the present invention on two mounts may rock undesirably. Thus, on vertical structures, it is generally preferable to use three or more mounts (from any or from multiple mount systems), going from the image of the present invention to the structure from which it is mounted. Each mount system is comprised of one or more mounts and each of these parts is comprised of three components referred to herein as Mount Component (A), (B) and (C).

In an embodiment, rigid mounts are made, and one or more of them are used to set-up, present, install, display, exhibit or to prepare images of the present invention for viewing in a combination of these ways. For example, in one design for rigid mounts, most of the rigid mount components function against the pull of gravity, holding up weight. Rigid mounts can be used in a mount system which is completely comprised of rigid mounts, or in a mount system which is comprised of rigid mounts and one or more other kinds of mounts.

In an embodiment, wire mounts are made, and one or more of them are used to set-up, present, install, display, exhibit or to prepare images of the present invention for viewing in a combination of these ways. For example, in one design for wire mounts, most of the wire mount components function along with the pull of gravity, i.e., weight hangs from them. Wire mounts can be used in a mount system which is completely comprised of wire mounts, or in a mount system which is comprised of wire mounts and one or more other kinds of mounts.

In an embodiment, mounts are made which are a combination of the aforementioned rigid and wire mounts, and one or more of them are used to set-up, present, install, display, exhibit or to prepare images of the present invention for viewing in a combination of these ways. These combination mounts can be used in a mount system which is completely comprised of such combination mounts, or in a mount system which is comprised of such combination mounts and one or more other kinds of mounts.

Mount Component (A) is the anchoring mount component which is embedded or inlaid in, attached to, or placed against the image of the present invention. Because carving a cavity into an image of the present invention to imbed or inlay its anchoring mount component may substantially weaken both the image of the present invention and its connection to its mount (e.g., possibly cutting through the image of the present invention's fiber layer exactly where more strength is needed), it is generally preferable to thicken the image of the present invention, e.g., by adding more fiber where mount components are imbedded, inlaid, attached or placed. (In thickening areas on the backside or underside of an image of the present invention to embed a mount component, or for any other purpose, the diffraction of light caused by abrupt edges of these thickened areas may be visible as shadow lines seen through the image of the present invention. By tapering these edges or any other similar image areas so that they slope gradually, such visible, shadow lines can be eliminated.) When these mount components are connected to polymer, a stronger polymer than that used for the rest of the image of the present invention may be preferable in the mounting area or areas, even for example, if the use of such a monomer compromises other preferences for that image of the present invention. Because they are permanent within the inventive image, it is preferable for embedded mount components to be made of strong permanent materials (e.g., stainless steel rather than steel), and installed fairly flush with the image of the present invention's surface. Further it is preferable to be aware that all mount components made of materials which do not absorb knocks or shocks (like metal mount components protruding significantly out of the image of the present invention) are risks because if knocked, the polymer is at risk for cracking or breaking.

These anchoring mount components are made of two pieces joined together is a matched set. One piece anchors the inventive image onto its mount. This first piece is preferably designed with as wide an expanse and as deep a grip as the inventive image can aesthetically handle. Like all imbedded, inlaid and attached materials, if these pieces are significant in size they should either have close to the same coefficient of expansion as their polymer host, or be perforated, etc. If desired, for extra strength, permanence or both, further measures can be taken, e.g., fiber can be installed to the inventive image through the perforations of most imbedded, inlaid or attached mount components (e.g., as cut strips or chopped). The other piece of anchoring mount components is welded, silver soldered, mechanically secured, or otherwise a part of, or joined to its first piece. When imbedded in the inventive image, only this part of the anchor mount component remains permanently exposed - it is in effect inlaid rather than imbedded. It is half of a mating set of hardware connecting the inventive image to the other two components of the same mount (e.g., it might be a hex nut, or an eye loop). If the anchoring mount component attaches to the inventive image on an area that is metal, or if it is used on a metal product, only its second half, the exposed, inlaid half of the mating set of hardware is necessary. Its anchoring part can be eliminated and its mating part can be permanently attached to the image of the present invention, alone.

Mount Component (B) is the adjustable, middle mount component and may have a rigid form or a wire form. The basic, minimal design of the rigid form is rectangular, variable in length, width and depth, and shaped like the letter O, but with squared corners. (For example, "O" mounts might be made of three-quarter inch steel channel for strength.) At its top, is a part which connects with mating hardware on the image of the present invention's anchoring mount component. The forms of these two mating parts are determined individually for each inventive image mount according to function and aesthetics. For example, a threaded rod of any length through the top of the "O" mount can connect it to a mating, exposed hex nut on the anchoring mount component. The threaded rod can protrude out of the "O" mount at any length. If the hole at the top of the "O" mount which it passes through is wider than the threaded rod, the rod can be positioned at any angle. The threaded rod can even remain adjustable if it is tightened in position with respect to the "O" mount by hex nuts. The use of shock absorbent washers under these hex nuts (e.g., made of vinyl) are preferable to protect the polymer inventive image from cracking. Another example is a combination of Hyman Rigid and Wire Mounts. It is made of the same, rigid "O" mount, with a taught wire of any length attached as desired, instead of the threaded rod. This wire could, for example, join to an eye hook, a loop or other connector exposed on the image of the present invention's anchoring mount component. A hook, a metal loop, or other solutions can be substituted for the wire. Many other modifications are possible, especially changes of the "O" mount's shape for aesthetic purposes.

The adjustable, middle mount component's alternate rigid form uses gravity. It is made of a male and a female part. One of these mating parts securely attaches to the inventive image (but is removable from its anchoring mount component for safe handling). The other mating part is below the image of the present invention, attached to the third mount component that is on the support from which the inventive image is mounted, e.g., either resting on the floor, a table, a base or on another stable, gravity bound support. The male part is shaped like a stick, but it can be a cylindrical rod, a rectilinear rod or any other variation rod. It is fitted to go inside the female part which is shaped like a tube, e.g. a cylindrical or rectilinear tube, etc. For example, if these mating parts are cylindrical, and only one mount is used, the inventive image can rotate. A lubricant between these two parts, such as a grease, to facilitate rotation and any means of initiating or perpetuating the image of the present invention's movement on this rigid mount component can be used, e.g., a motor, a human hand, wind power, etc. This mount component can give an inventive image new dimensions by giving it the formal element of movement. The image of the present invention's movement changes its light, another formal element. This rigid form of the adjustable middle mount component could actually be made of the same polymer as the image of the present invention, of another polymer that is stronger, of one or more non polymeric ingredients, or of a combination of these, as desired. This mount component might attach to a metal area on the inventive image, or if it is for one or more other metal parts of inventive images, this mount component can be welded or soldered onto them.

The adjustable, middle mount component's wire form is a strong wire, cord, rope, chain or even plastic wire (e.g., clear fishing line), which holds the weight of the inventive image up by connecting to both the anchoring mount component in or on the inventive image or combinations of these, and connecting to the structure from which the inventive image is mounted. The use of stranded, stainless steel wire is preferred so that should a strand break, others hold the inventive image up. For example, metal wire can be looped through the connector piece of the image's anchoring mount component and firmly crimped to itself with crimps (e.g., copper or steel), and crimping pliers (e.g., those commonly used by telephone companies). It is preferable to crimp firmly and to insure against the failure of a crimp, it is preferable to use more than one. If a plastic wire (like clear fishing line) is used, it can be secured by tying or gluing as desired. The selection and quantity of wires, and the method and places of their attachment to the inventive image depends on both aesthetics and on individual inventive image specifications, which in inventive image are largely controlled by variables which still remain workable as desired. The use of wire which has the capacity to hold more weight than necessary is preferred. When more than one wire is used, their weight capacity is cumulative. All wires may be doubled, tripled, etc. It is often necessary to change the image's center of balance (e.g., when hanging an inventive image from a single wire, or when hanging them at a specific angle). Due to the everlasting workability of inventive image, their center of balance can easily be altered as desired, e.g., by sanding or cutting. These changes are increasingly effective the farther they are away from the image of the present invention's center of balance.

A variation of this form of the wire middle mount component is to run the wire through the inventive image and secure it on the image of the present invention's reverse side as desired, e.g., by crimping. The wire can be terminated after it is crimped, or it can continue on to other destinations (e.g., to other compositional elements) as desired. The wire can be crimped to an imbedded, anchoring mount component or it can be crimped under a mount component which is imbedded, inlaid, or placed against the image of the present invention, between it and its crimps, or combinations of these, as desired. Although the wire can be terminated on the other side of the inventive image using crimps, without an anchoring mount component, this method is generally not preferable, especially for heavy images of the present invention, for inventive images hung from a single wire, or for other similar inventive images because the anchoring mount component spreads the image of the present invention's weight out so that it is held over a larger surface area, rather than just by the tiny spot of the crimps. For instance, in one method, to install a wire through an image of the present invention, make a hole through it, preferably through a place that is strong and thick, or a place which has been made strong and thick for this purpose (e.g., by drilling). A straight hole, slightly wider than the diameter of the wire is usually best. Once through the inventive image, polymer or non polymeric materials, media, objects, devices, processes, interactions, or combinations of these, the wire should be crimped firmly. Tubing, e.g., steel or stainless steel, may be inserted over the wire as it passes through the inventive image to protect it as desired. If the tubing is long, it can constrict the inventive image's uncontrolled, wobbling movement, e.g., when hanging an inventive image from the ceiling with a single wire - the longer the tubing, the more constricted the image of the present invention's movement. If desired, special visual effects of weightlessness can be created using this mount variation, especially if only a single wire is used to hang the inventive image from above and if the wire is so thin or so clear that it is imperceptible. The visual effect of weightlessness in inventive images frequently brings the additional formal elements of movement and time into the image of the present invention. These formal elements can be freely minimized, eliminated, or accentuated to any degree, as desired. For example, wire mount components and their variations are particularly useful in creating mobiles with multiple parts.

Mount Component (C) is the mount component on the structure from which the inventive image is mounted and connects to the middle mount component to hold the inventive image as desired. It is frequently necessary for this mount component to reinforce the structure from which the inventive image is mounted, especially for heavy inventive images and for inventive images projected out from their mounting structure (e.g, an inventive image mounted four inches out from the wall requires its mount to hold an exponentially greater weight than the same image's mount must hold if it is mounted flushly against the wall). Some inventive images do not need a mount component on the structure from which they are mounted, e.g., some light weight images of the present invention, and some inventive images which can already connect directly to the structure from which they are mounted. This mount component on the structure from which the inventive image is mounted can be made according to both its function and the aesthetic effect as desired. When hanging an image of the present invention, this third mount component can be any part with an eye hook, an open hook, or a similar means of connection which is to be stably secured to the structure from which the inventive image is mounted and which at minimum holds the weight necessary, preferably more than necessary (e.g., screwed to the studs in the wall or into a ceiling joist). The length of its wire (or other hanging material) may be adjusted and secured using any method, e.g., by tying, gluing, crimping, or combinations of these, as desired. Wire, for example, can be run through this mount component and terminated, or it can be brought further to other destinations as desired, e.g., to one or more other compositional elements of any material. This wire's end may be secured using any method.

Although rigid "O" mounts and their variations can be screwed or bolted directly into the wall, ceiling or other support, all metal "O" mounts and their variations can also be welded to a single plate (e.g., of steel) which can be screwed, bolted or otherwise securely connected to the structure from which the inventive image is mounted (e.g., into studs in the wall, or joists in the ceiling) for precise alignment, for inventive image with more than one mount attachment, or for convenience. In attaching to the wall or other support, this metal plate also serves to distribute the weight of the inventive image over a larger surface area. This metal plate also fixes the middle mount components' position in relation to the structure on which they are mounted so that the installation of the image is less complex and less dependant on the eye of the installer while still allowing middle mount components to be permanently adjustable (e.g., the length and angle of the threaded rods). A Hyman Wire Mount System can also be used off of a metal, mounting plate either independently or in combination with Hyman Rigid Mounts.

The size, thickness, and other specifications of such steel plates are determined according to individual structural and aesthetic considerations. Aesthetically for example, such a metal plate can be used as a compositional design element under the image of the present invention, e.g., as a layer for underpainting and underdrawing. Most often, any part of this metal mounting plate which is painted the same color as the wall and seen through an inventive image will be visually perceived as part of the wall, i.e., as if it was not there. A thin metal plate can often be used without being noticed. The inventive image can also be painted or otherwise finished on both sides. The aesthetic possibilities using this plate as an underlayer are extraordinary. The aesthetic control and creative freedom afforded by its use with inventive images are unequaled in fine arts, and in many other images too. When mounting a transparent and/or translucent image of the present invention, the entire mount including this plate is a visual part of the inventive image which the image maker can shape, texture, paint, etc. as desired according to the image of the present invention's structural and aesthetic needs. The plate may be cut in an irregular shape (e.g. the shape of a person's silhouette), or the plate may actually be more than one plate, all of which are secured flushly against the wall or other supporting structure, depending on the structural and aesthetic needs of the image of the present invention. Alternately, the plate may be a three dimensional inventive image piece of metal. When this plate is used to mount a transparent image of the present invention, and the plate or a part thereof is painted to look the same as the supporting structure it is attached to (e.g. if it is painted white like the white wall it is bolted onto), the plate will be camouflaged and it will be effectively invisible. Thus, the image maker has a lot of structural and aesthetic control.

For rigid middle mount components, the third mount component includes the other half of the mating pair previously described protruding upwards from it, which can be either half of the mating pair. This third mount component can take one of two forms. It can be floor bound, such as a base, a pedestal, or a table top, or it can be a vertically mounted metal plate, in which case it is sometimes preferable to make the mating parts in shapes that are not cylindrical to avoid rotation, e.g., they might be rectilinear rod with a fitted, mating tube.

The wire and rigid mount systems can be combined as desired. In one example, the "O" mount, threaded rod, hex nuts and washers in the rigid mount system is substituted with wire or cord. One end of the wire loops around an embedded metal piece in the inventive image and is knotted, crimped, glued or otherwise secured. The other end of the wire connects to the wall or other supporting structure, or to a plate bolted flushly to the supporting structure, again by crimping, welding, etc., on to for example an eye-hook on the wall or through a loop on a metal plate on the wall. Alternately, rather than connecting one end of the wire to the inventive image and the other to the supporting structure, the wire could be strung through the metal piece embedded in the inventive image and strung through an eye-hook or metal plate or other part on the wall and then using a double crimp its two ends could be crimped together (or welded or glued together). In this example the metal piece embedded in the inventive image would not need a hex nut welded to it, but a loop-like part of it would have to be accessible for the wire to connect to. This mount will work only if the area on the inventive image which attaches to the wire mount is lower than the location of the wire mount's connection on the wall, ceiling (or other supporting structure). This example differs from the wire mount system because its wire does not go through the inventive image knotting or crimping on its other side. Its wire stays on one side of the image of the present invention. However its wire can continue on at either end to connect to other parts. A second example of combining wire and rigid mount systems begins with the wire mount system but substitutes an "O" mount instead of the wire or cord. The rigid "O" mount goes through the image of the present invention, ending on its other side.

### Art Forms, Special Qualities & Effects, Processes, Function, Content, Meaning, etc.

Using the present invention, images can be made which are new and unique variations of almost every conventional art form. For example, the present invention allows one to make images that are new and unique kinds of images in known art forms, and perhaps even new of art forms. In addition, because of the workability and reworkability of the present invention, images can often be changed from one art form to another, as many times as desired as they are made or anytime thereafter, as described herein in many examples. In addition to those previously described, a myriad of further special qualities and effects can be made in images of the present invention, using or affecting virtually every formal element. A wide variety of these are limited, problematic and burdened by undesirable issues in conventional images. For example, substantially every quality and effect that can be made in conventional images which relates to the novelty and uniqueness of the present invention, can be enhanced using the medium of the present invention. For instance, while the use of real formal elements in images, such as real light, real spatial depth, and real transparency (as opposed to illusions), is an important factor in image making, the use of these formal elements is significantly expanded by the present invention. Special qualities and effects can also be made in images of the present invention using coloration in real spatial depth with real light. As a result, images of the present invention can have qualities and effects of real light, real spatial depth and real transparency, which are new and unique. Unlike many conventional images, special qualities and effects in inventive images are workable, reworkable and controllable as desired, and can be used with or without conventional practices. Special qualities and effects in images of the present invention can be real (e.g., made using real 3D space, real light etc.), they can be illusionary, they can be perceptual (e.g., made with color, shadows, lines or illusions) or a combination of these. Thus, special qualities and effects in inventive images can be tangible, intangible, or both. Special qualities and effects in the inventive images can be or affect their content or with it, e.g., as a reflective light effect might suggest water. They can be used with the function of the image of the present invention, e.g., as the real workable transparency of polymer might enable a window to be made of the inventive medium. They can be used with the way an image is set-up or installed, e.g., a thin polymer inventive image might be rigid and strong enough to be self supporting.

In some embodiments, the inventive images or part thereof are drawings. Unlike conventional drawings, drawings made with the inventive medium can be 2D planar, 2D or 3D. Such drawings can be objects or have a sense of objecthood if desired. For example, drawings can be made on inventive image surfaces which are principally or completely comprised of polymer and/or non polymeric ingredients. Such surfaces might for example be transparent, translucent, partially opaque, opaque, textured, perforated, made in parts, made in layers, undulating, or a combination of these, as desired. Such surfaces might for example have already been worked and developed, using any processes desired, e.g., they might already have light effects, coloration, photography, embedding, inlays, attachments, air pockets, negative cut-outs, combinations of these, etc. Both polymer and non polymeric drawing surfaces of inventive images might have deckled edges, e.g., deckled edges can be formed on a planar polymer medium, by the shape of its mold's walls, by carving, sanding or other processes of removing matter, or by a combination of these. Drawings can be made on surfaces of images of the present invention in a wide variety of processes, and polymer in them is as workable, reworkable and controllable as desired, e.g., using additive and/or subtractive processes, with or without using any conventional practices.

In some embodiments, drawings on inventive images can be made using carved, engraved or incised marks, in polymer and/or non polymeric surfaces. For example, these drawings may be made on polymer surfaces (e.g., on image support stabilizers) by removing and/or adding matter, and then shaping it if desired. Then, a layer of cPRM and/or a layer of formed polymer might be superimposed on the drawn underlayer. As a more specific illustration, a drawing might be carved on the surface of a polymer image support (e.g., stabilizer) depicting a scene of woman in a pasture of irises and high grass. This carved drawing might have depths between approximately 0.5 -2.5 inches, in a transparent polymer image support which is 3.0 inches thick. Further, this drawing can be carved in transparent polymer with such precision and control, that viewers of can distinguish iris petals, blades of grass, and strands of the woman's hair. Comparable detail, care and control is not available using conventional practices. Further drawing can be done on the cloudy abrasions of its carved surfaces, e.g., using a transparent colorless cPRM and/or Clarifying Imprimatura. These drawn strokes may smooth the abrasions (SSI) of this image's carved surfaces to varying extents as desired, turning them from their cloudy white color to varying degrees of increased transparency, as desired. In addition or instead, this carved drawing can be painted, e.g., using SSI for bonding, for example, a paint made using cPRM as an ingredient (for instance, as its binder) can bond to a compatible polymer surface, and paint can bond to Clarifying Imprimatura. In comparison, the use of transparent and translucent texture in conventional painting is limited, problematic and burdened by undesirable issues, particularly if detailed or controlled texture is desired.

In a further illustration, an drawing on the inventive medium can be made with its positive or its negative elements embossed, inlaid, attached, or a combination of these. If desired, drawing may also be done in other ways on the surface of this inventive image. If the resultant drawing has raised elements, it might for example, be further processed in one of the following 3 variations.

In variation 1., some or all of the surface of this drawn inventive image is superimposed to the extent desired, with a bonding substance (like cPRM), which can be visually distinguished from its raised drawing, e.g., it has different coloration and/or the raised part of this drawn inventive image may remain physically raised higher than the application of the bonding substance. Because the raised portion of the initial drawn inventive image is visually distinct from the bonding substance, the bonding substance and the raised drawing might be the same height on the image's surface, flush with one another. If the bonding substance is see-through and the raised portion of the initial drawn inventive image is visually distinct from the bonding substance, the bonding substance might cover over the raised drawing embedding it.

In variation 2., some or all of the raised portion of the drawn inventive image is changed (e.g., colored) so that it will be visually distinguishable from the superimposed bonding substance once it cures, hardens or dries. Then the bonding substance is superimposed.

In variation 3., the surface of the drawn inventive image is covered with one or more preformed, see-through materials, media, objects, devices or a combination of these, attached to its raised areas forming one or more air pockets between it and the areas of the image's surface which are not raised, e.g., the sheet of polymer (for example, acetate, mylar, vinyl, polypropylene, polyester etc) is attached to the raised parts and/or to the drawn image's perimeter, for instance, using hardware, or a mount. If desired, this or these air pockets may be partially or completely filled.

In some embodiments, a drawn inventive image is made on a non polymeric image support, which is then partially or entirely covered with cPRM. As an illustration, a such a drawn image is made on one or both sides of a sheet of see-through paper or fabric (e.g., paper that is perforated, transparent, translucent, cotton, rag, vellum, construction paper, typing paper, acid free paper, acetate, mylar, shims; fabric such as silk, open weave fabric, sheer fabric, linen, lace, etc.). This paper is then is covered with cPRM on both of its sides (e.g., so that it is encased). Then, if desired, additional layers of cPRM can be added with or without drawing being made on the further layers. This sequence of drawing and layering cPRM can be repeated as many times as desired to make a 2D or 3D inventive image. The resultant image may be viewed from one or from multiple sides.

In some embodiments, two or more spatial depths are used on, and/or within the inventive medium to make an image. Drawing at different real depths often can give images real form, real volume, or both even if the drawing is linear, with or without the use of illusionary form, volume, or both. For example, conventional shading processes such as cross hatching and modeling can be made in superimposed layers of real depth when they are made using polymer of the present invention.

As another example, images of the present invention can have visual qualities and effects of stained color, bleeding color, flowing color, and other such qualities and effects, hereinafter referred to as bleeding color effects. Bleeding color effects in the inventive medium are workable, reworkable and controllable using many methods, and the present invention enables many more art forms to have bleeding color effects than ever before. For example, the flow of colored cPRM or the flow of color on polymer can be controlled; bleeding color effects in and on inventive images can be reworked and/or partially or entirely removed. As another example, bleeding color effects in and on inventive images can be lightened by the removal of color or by the addition of real light or other light effects to the inventive image. Further, the use of solvents (such as turpentine or acetone), sanding, sandblasting, scraping, erasing, rubbing, etc. on bleeding color effects in and on the inventive medium either will not alter them undesirably, or any resultant undesirable alteration can be reworked.

As an illustration, an inventive images with bleeding color effects might be made by forming cPRM on a surface without any mold side walls. For instance, colored cPRM might be poured, run, splattered, or thrown onto the surface of a mold or a polymer medium of the present invention, so that it flows, unrestricted by mold side walls, any thickness. If desired, multiple layers might be formed using this method, independently, superimposed upon one another, or both. Then if desired, layers, groups of connected layers, or both, might be arranged and rearranged as desired and bonded together as desired, e.g., with air pockets in between them, with other materials and medium in between them with added light effects, etc. Another preferred method of making bleeding color effects on surfaces of the inventive medium or on inventive images is by applying one or more substances which flow, run and/or absorb in and/or on inventive image surfaces that are made of polymer and/or non polymeric, (e.g., surfaces of inventive images with paper pulp, fiber, straw, sand, etc.). Refer to hydrophilic and absorbent polymers herein. Bleeding color effects can also be made in and/or on inventive images by using coloration which is mixed into a binder or a vehicle heterogeneously, e.g., this might be a paint heterogeneously mixed into a thinner substance; or a pigment mixed inconsistently into cPRM as previously described. In addition or instead, a surface preparation stabilizer can be used on an inventive image surfaces for bleeding color effects. For example, the close-up view of the inventive image in Fig. 6. VI. is a polymer with bleeding color.

In some embodiments inventive images are colored to give them antiqued effects.

In many embodiments, the medium of the present invention or part thereof are paintings. Such paintings can be made in all conventional and new unique forms. Paintings made using the present invention can use conventional practices, e.g, stretchers, frames, conventional paints, etc. They can be set-up, presented, displayed, installed, exhibited or prepared for viewing using any methods, means and manner, e.g., on or near a wall, hung, mounted or otherwise set out from the wall. Also, some paintings made using the inventive medium are lit according to specifications designed by their image makers (e.g., a specific light is set between one of these paintings and the wall), and some of this illumination may be permanent part of these images.

In some embodiments, planar inventive images are made which have coloration from one or more particles, objects, devices or combinations of these dispersed in some or all of their polymer, e.g., embedding visible through the polymer's transparency, its translucency or both. For instance, such embedding might obscure or distort the view through the polymer, create texture, light effects, coloration (e.g., as part of an imprimatura); or a combination of these, as desired. For example, keys, doorknobs, jacks, CD Rom discs, glass particles (e.g., glass that is opaque, colored, crystal or dichroic), formed polymer particles, sand, shells, coins, paper money, candy wrappers, marbles, beads, stones, mica, fluorescent mineral particles, metal particles, sawdust, seeds, leaves, flowers, combinations of these etc. can be dispersed consistently or inconsistently in polymer in inventive image drawings or paintings. For instance, such an inventive image might superimposed by painting, drawing, printing, writing, etc., used for example, as an image support. For instance, such an initial image support might be embedded and inlaid with light effects, such as broken pieces of crystal attached to and inlaid in an inventive image that is a painting in a manner similar to Julian Schnabel's use of broken plates on conventional supports for his paintings. As another illustration, opaque broken plates like those used on the surfaces of Julian Schnabel's paintings could be used in and/or on a polymer image support (e.g., stabilizer) which functions as a canvas.

Inventive images are made which function as books or as pads in addition to their function for visual observation. These inventive images are made of bound polymer pages which may for example, be flexible and/or rigid, with any shapes, forms and dimensions desired. The polymer pages of these inventive images may or may not have non polymeric ingredients, e.g. as entire pages or as parts of pages, and/or conventional binding. Some of these inventive images are finished images with words, images, or both. Some of them are left unfinished by their first image maker or makers, and then transferred (e.g. given or sold), to a different second image maker or makers who may further process it as desired. As a further illustration, the second image maker or makers might use one of these unfinished images of the present invention like conventional blank paper pads and blank books are used. For example, pages of some of these unfinished inventive images might be prepared by the first image maker or makers so that they will bond to superimposed applications made by the second image maker or makers (such as conventional applications like painting, drawing, photography, printing, collage, gold leaf, fresco, wax based applications, oil based applications, water based applications, or a combination of these). For example, pages of these inventive images may have surface preparation stabilizers on them prepared by the first image maker or makers which are superimposed by the second image maker or makers. In addition or instead, these inventive images might be further processed using subtractive processes, such as by cutting, carving, sanding, incising, etc. In comparison, the polymer pages of these inventive images can be worked and reworked in ways that can not be comparably done and in ways that are not possible with conventional pads and books (refer to paper and absorbency). Furthermore, effects can be made on these inventive images which can not be comparably made if they can be made on their conventional counterparts, e.g. refer to light effects, spatial depth etc.

In a further illustration, an image of the present invention is made by connecting two polymer planes together. Each of these two polymer planes is made separately with only half of the total thickness desired for it, then once these two planes are connected, the rest of their thickness is formed.

In many embodiments, inventive images (such as drawings, paintings, sculptures, chairs) are completed images which are reworked over a year after their completion.

Because it expands the use of formal elements which are limited, problematic, and burdened by undesirable issues in conventional images (e.g., real light, real space, real transparency, real translucency, structural strength and permanence, etc.), inventive images can be made with real volume that is see-through in a range which is much broader than comparable conventional images.

In another illustration, a 3D inventive image painting is made in the real volumetric space of a block of polymer. For instance, a layer of polymer is formed. Onto this layer, the first cross-section of the 3D painting is applied. Then a second layer of cPRM or polymer is superimposed and the next cross-section of the desired 3D painting is applied onto it. As further layers of cPRM or polymer are superimposed, the next cross section of the 3D painting is formed on their surface. This process is repeated until the desired inventive image painting in space is made. However, in such inventive image paintings in space, superimposed layers of polymer can be partially or completely bonded to one another; they can be separate from one another; or two or more of the superimposed layers can be bonded to one another and one or more others can be separate yet still be superimposed layers of the same inventive image painting in space. Air pockets or air spaces between bonded polymer layers can be of any dimension desired and negative space between separate layers of polymer can be of any dimension desired. Separate polymer layers of a single inventive image painting in space can be mounted parallel to one another or superimposed at angles to one another. This same process can be used to make an inventive image sculpture in real space with real light, which is a drawing, a series of layered light effects, a written inventive image sculpture, a printed inventive image sculpture, a collaged inventive image sculpture, an inventive image sculpture with series of layered photographs, an inventive image sculpture with a series of layered cut-outs, an inventive image sculpture with series of layers that have one or more other kinds of processing on them, an inventive image sculpture which is processed with new and unique effects on both of one or more of their layers; or a combination of these as desired.

In another illustration, drawing is done on and within a single sheet of colorless transparent polymer to form an inventive image drawing which is a life size portrait using broken color strokes of pastels. The real spatial depth of the polymer in this inventive image is used to form the spatial depth in this pastel drawing. Thus, though the drawing is an illusion of a specific person, it does not have any illusionary spatial depth in it. This pastel drawing is formed by casting a layer of polymer then drawing a cross section of the individual's head in pastel. Then superimposing this pastel with another layer of cPRM or polymer, drawing the next cross section of the individual's head on it, and repeating this process alternating, adding a layer of polymer and drawing a cross section of the form on it, until the entire portrait is created as desired. In addition, if desired, both sides of this polymer can be processed to form the portrait. For instance, on the initial layer of polymer, the cross section of the head depicted can be a center cross section of the head, and additional layers of drawing and polymer can be added onto both sides of this polymer sheet until the desired portrait is formed. This is drawing with real light and real spatial depth as it has never been done in conventional images. There is no conventional practice which enables comparable drawings to be made, reworked and controlled.

In a further example, multiple polymer blocks made with desired coloration and light qualities and effects are assembled and rearranged into the inventive image sculpture desired.

As a further example, a layer of polymer is formed and one or more light effects are added on it, e.g., crystal pieces are stuck on it, it is carved, it is colored, it is collaged, photography is done on it, its light is blocked, or a combination of these light effects are added to it. Then, this inventive image layer is superimposed with another layer of cPRM or polymer, as desired. Or then the other side of this inventive image is further processed with light effects as desired. Then one or both of its sides are covered partially or entirely with cPRM or polymer, and further light effects are added onto one or both of these surfaces as desired. Such alternating layers are repeated until the desired inventive image is formed. The resultant inventive image sculpture may, for instance, be a block of polymer with internal light effects, it may be a block of polymer with internal and external light effects, it may be two blocks of polymer with a negative space in between them and light effects, or it may be an inventive image sculpture made of multiple separate layers of polymer, multiple separate blocks of polymer, or at least one layer of polymer which is separate from at least one block of polymer with negative space in between them. For instance, it may be several layers of polymer, all of which have light effects on both of their sides, mounted parallel to one another on a base. Or, one or more layers or blocks of this inventive image might be made principally or even entirely of non polymeric ingredients. Such a method might be used to form an inventive image table, paper weight, seat, bench, sculpture made of multiple blocks, etc.

Making an inventive image can be making an image with real light, and this can be done in ways and to an extent that has heretofore never been possible. For example, making inventive image can be painting with real light, sculpting with real light, or building with real light. Using the present invention, both tangible and intangible light forms of real light can be used with coloration, with real transparency, with real translucency, with real spatial depth, in conventional art forms, and in other ways as never before. In addition, the present invention even offers a myriad of new and unique light effects and qualities. As a specific example, an inventive image can be formed of a single clear colorless polymer that has a form of real tangible light. In making this inventive image, the real light of its polymer can be colored, shaped and directed, reflected, partially blocked, incised, attached to other parts, superimposed with layers, superimposed with a photographic transparency, reworked in ways that remove some of its coloration and add other transparent colors, superimposed with more layers, inlaid, processed in ways that restore some of its blocked light, processed in ways that brighten its light with additional light sources, processed some more, and so on, etc., continuing until the inventive image is made as desired. Such spontaneous development and reworking of real light in inventive image, is not possible in conventional practices. Real light can be used in inventive image in processes which are as WYSIWYG as desired, this is often not possible using conventional practices. In inventive image real light can be used according to the Principle of Whole Development and Unity to the extent desired and in the manner desired. This is often not possible with conventional practices. Refer to Light Section. Consequently, the applications of image making with real light are vast and varied in inventive image.

In some embodiments, a Tyndall effect is created in an inventive image for aesthetic purposes. A Tyndall effect might, for example, be made by dispersing a conventional image making material, medium or both, in cPRM which is used to make an inventive image, or a part thereof, e.g., dispersing a pigment, an acrylic paint, an acrylic paint binder, oil paint, linseed oil, fine particles of sand, fine particles of silica, or a combination of these. If desired, inventive image which have Tyndall effects might also have other light effects, such as added sources of real light and added materials which reflect light. As further illustrations, controlled light beams produced in inventive image as Tyndall effects might form a pattern or they might be used to affect the perception of three dimensional form, e.g., using Tyndall effects in inventive image to model form.

In an embodiment, inventive image paintings are transparent and/or translucent polymer shapes and forms which are designed as desired principally or exclusively using the light qualities and effects of the present invention. For example, light is the subject matter or part of the subject matter of these paintings, many of them have little or no paint at all.

In an illustration, an inventive image drawing is partially or completely made using light effects which are new and unique. For instance, such an inventive image drawing may or may not use any conventional drawing media or materials. For example, negative spaces within an inventive image form a drawing or part thereof. Shadows, reflections, real tangible light of polymer that is transparent and/or translucent defracted light, photography, holograms, crystal, other glasses, light sources (like EL Lamps), other light effects, combinations of these, etc., are used to form a drawing on an inventive image surface as desired.

Inventive images can be made which dematerialize volumetric space, and a subset of these can dematerialize volumetric space to a greater extent than ever before in conventional images. Inventive images can be made which dematerialize volumetric space in ways which are new and unique in comparison to conventional images. Inventive image which dematerialize volumetric space can be new and unique images, e.g., they can expand their art form (e.g., sculpture) and perhaps they can even form one or more new art forms. Inventive image can also be made which achieve a combination of these goals, as desired. Inventive images can be made with volumetric space dematerialized in a variety of ways, some of which are real, some of which are illusionary, and some of which combine both illusionary and real elements. Here are four examples. 1). Inventive images can be made which actually have less tangible volumetric space than comparable conventional images. For example, the new unique characteristics of polymer of the present invention enables inventive image to be made with volumetric space that is actually more open than comparable conventional images. For instance, in an inventive image sculpture, open space can be defined by a using see-through polymer bars or rods, instead of using open conventional materials, like chicken wire, tree branches, or netting. The strength and permanence of polymer of the present invention enables it to be used in ways in which are undesirable or impossible in many conventional see-through materials, media, objects, devices and their combinations, e.g., glass, and other polymers which are not of the present invention. 2). The use of see-through polymer parts in an inventive image can create the illusionary perception of dematerializing the real volume of that inventive image, even though that inventive image would have just as much tangible volume if metal and/or reinforced glass were substituted for its see-through polymer. As an example, refer to the inventive images based on Brancusi's Fish herein. 3). Inventive images can be made with volumetric space that is actually dematerialized, with volumetric space that creates the illusionary perception of being dematerialized, or with both of these, by its use of real light with polymer of the present invention. For instance, this can be done using one or more forms of light that are tangible and/or intangible, e.g., the use of special light qualities and effects in inventive image. 4). Inventive image can be made with volumetric space that is dematerialized by the use of a combination of the techniques described in the preceding 3 examples.

Because the present invention offers a new unique form of real light, real transparency and real translucency with real spatial depth and strength, which is as workable, reworkable, controllable as desired and in the manner desired, volumetric space can be dematerialized in inventive image to a greater extent than ever before. Further, because the present invention offers all of these characteristics with both a myriad of aesthetic variations as desired, many of which can not be made using conventional practices (e.g., coloration and light effects), and with the level of permanence desired, volumetric space can be dematerialized in ways which are not possible using conventional practices, and the resulting inventive image can be new, unique and even unlike any images ever made using conventional practices. In comparison to making inventive image which dematerialize volumetric space, conventional practices for making images which dematerialize volumetric space are limited, problematic and burdened by undesirable issues. For example, image makers making sculpture which dematerializes volumetric space often work in metal. Metal is inherently opaque and weighty, even though image makers reduce this aesthetic by using metal and metal working processes that form open volumetric space, such as chicken wire, fencing, metal rods,wire, casting metal, welding metal, fabricating metal, etc. Or, for example, images makers often sacrifice strength, permanence or both, to make sculptures which dematerialize volumetric space, e.g., using materials like tree branches, paper maché, plaster, clay, felt, etc.

The present invention opens up a whole new realm of possibilities for image makers to make 2D and 3D inventive image which dematerialize volumetric space. Examples of these are: inventive image sculptures, mobiles, assemblages, installations, stage sets, constructions, Light Art, Light and Perceptual Art, furniture, monuments, architecture, inventive images with other functions such as bowls, etc. As an illustration, instead of metal, strong, permanent, transparent and/or translucent polymer rods can be used to make an inventive image sculpture with open volumetric space. One or more of these polymer rods can be left colorless, they can be given light effects, they can have coloration so that they become partially or completely transparent, translucent or opaque; or a combination of these, etc. In dematerializing volumetric space, polymer parts of inventive image (like the polymer rods on the previous inventive image sculpture), can not only make inventive image appear lighter, less solid and less volumetric than comparable conventional images, such polymer parts can also bring their inventive image a new kind of real, tangible see-through spatial depth and a new kind of real, tangible light, that has heretofore never been comparably available in such conventional images. Further, this new kind of real tangible see-through spatial depth and this new kind of real tangible light can be used in inventive image to the extent desired an in the manner desired, with the workability, reworkability, control, strength, permanence, and aesthetic variations desired. Thus, for example, inventive image such as inventive image sculptures, can use negative and positive space, line, form, the perception of their weight and balance, and real light in ways which are new and unique in sculpture. And consequently, if desired, inventive image such as inventive image sculptures can use illusions of these formal elements in ways that are new and unique too, as is described herein. Using the present invention, images can be made with volumetric space in sculpture, mobiles, assemblages, installations, stage sets, constructions, Light Art, Light and Perceptual Art, furniture, monuments, architecture, etc. can be dematerialized to a far greater extent than ever before and these kinds of images can be made with a myriad of aesthetic variations heretofore non existent.

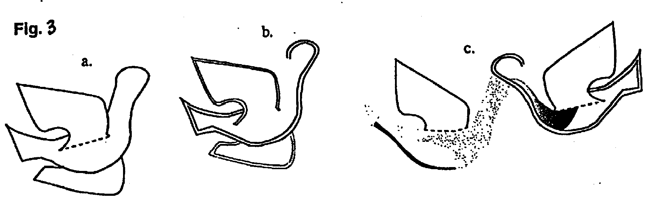

Paintings made using the present invention with open negative space within their forms, may be perceived as having volumetric space, and a subset of these, also dematerialize volumetric space in painting. Paintings made using the present invention with air pockets may also dematerialize volumetric space in painting. Inventive images sculptures are made which are linear and volumetric using real space e.g., as large drawing in space, lines in space using new clear rods cast forms, planes, etc. as desired. These inventive images can dematerialize volumetric form as never before, e.g. depending on their forms, their coloration , their light effects etc. As an illustration, inventive images can be new unique drawings in space, depending on the perception of their negative space as positive form, e.g., Fig. 3. This is a new kind of drawing in real space with real light.

In a further example, an openwork inventive image sculpture is made. Among the advantages this image maker has that image makers prior to the present invention did not have, are: 1). the ability to make this in an ordinary workspace or studio without special expertise, 2). the ability to make this inventive image at a cost that is lower than comparable conventional images, 3). the ability to use a wider range of transparent and translucent spatial depth with coloration if desired, 4). the use of a wider range of other light effects (such as shadows, darkness, reflections, etc.), 5). the ability to make this inventive image independent or as independent as desired from dependence on the help of others (e.g. staff), 6). the ability to recast polymer without the delay common in casting metal, 7). the ability to add matter to a part of the inventive image without removing the area reworked from the image, 8). the ability to dematerialize volumetric form beyond that which is possible using conventional practices, etc.

Inventive images, can be made which seem lighter or more airy than conventional images or both. For example, they appear even lighter, more airy or lighter and more airy than openwork conventional sculptures (e.g. lighter than conventional welded openwork sculpture and lighter than conventional drawings in space) and they appear even lighter than conventional architecture (e.g., glass architecture). Furthermore, these inventive images take this aesthetic of light and space further than ever before, without sacrificing their desired strength and permanence. Among examples are see-through images, openwork images, and images made using rods and bars of polymer (previously described). Using the present invention, real and illusionary light can be used with real or illusionary volume in a vast range of ways to make inventive image with new and unique qualities and effects, e.g., perceptual effects, effects in content meaning, or both.

In many embodiments, inventive images are made of multiple sheets or planes of polymer. For example, 3D image of the present invention are made based on the concept of making a cubist painting as see-through inventive images with planes arranged are various angles in real spatial depth.

The real light, the real transparency, the real translucency, the fact that real form and real volume of inventive image can be see through enables inventive images to have the effect of both their form and their function being visible simultaneously.

As further illustrations there are other practical and aesthetic uses for the expanded use of real forms of formal elements in image of the present invention. For example many functions are possible in image of the present invention due to the physical strength and permanence, rigidity, and workability, reworkability and controllability of the real light, the real form, the real structure and the real spatial depth of polymer in image of the present invention, which are limited, problematic and burdened by undesirable issues in similar conventional images. For example, an inventive image painting made in flows of color like a classic Jackson Pollack drip painting but without an initial image support underlying it, could be made into a table, a wall, a partition, or a table and then a partition, as desired. As another example, the strength and rigidity of polymer of the present invention which enables inventive images to be made without undesirable additional reinforcement makes it possible for these inventive images to dematerialize volumetric space beyond that which is possible in conventional images. A wide variety of aesthetic qualities and effects can be formed as a result of the strength and rigidity of inventive images, and because there has never been a comparable transparent medium, these qualities, these effects and these inventive images can be new and unique.

In addition to their aesthetic functions, images of the present invention, serve other architectural functions, or they are architectural design, e.g., interior architecture, landscape architecture, etc.. Planar images of the present invention might for example, be used as walls or as part thereof, windows, skylights, doors, partitions, shades or shutters, fences, gates, flooring or part of flooring, etc., even for example, if they were previously used as fine art, e.g. as paintings or sculptures. These inventive images can be made to be strong and permanent despite their use and despite their exposure to light, despite the impact and other wear they might encounter.

In some embodiments, inventive image ceilings are made in parts.

In some embodiments, inventive images are made which are ceilings and skylights, e.g., indoors or outdoors (for example on a patio or pavilion). These images might for instance be made so that they change as sky changes, e.g. they allow any degree of visibility of the sky, the stars, storms, lightning, rain, etc., for example by showing changes in light and color.

The sense of reality presented in an image, such as in an image of the present invention can be created in a myriad of different ways, many of which differ from conventional practices yielding new unique content and meaning in images. The sense of reality presented in an image such as an image of the present invention can be important or unimportant in an image to any extent desired. The sense of reality in an image, such as an image of the present invention, the content and meaning it brings to that image, and the importance of these can change over time. For example, the uses of formal elements in inventive image in ways that are real (rather than illusionary, or of some other nature) are significantly expanded in comparison to conventional images, e.g., inventive images can have a form of real light, transparency, translucency and spatial depth that is variable, workable, reworkable, controllable, spontaneous, and WYSIWYG, as never before. As another example, because the real spatial depth of inventive image is workable, reworkable and controllable as desired, image of the present invention can be made into shaped paintings as never before. Or, due to the real spatial depth and the rigidity of polymer, an image of the present invention can have the quality of objecthood. Furthermore due to the use of real formal elements in the present invention inventive images can be made without relying on the kinds of illusions used in conventional images, image of the present invention can be made without relying on illusions at all, and image of the present invention can be made without any illusions at all, as never before in the history of images. In addition, by its expansion of the use of formal elements, the present invention also expands the use of illusion in images, both with and without the use of conventional practices for making illusions. Thus, image of the present invention can be made with illusions which are new unique versions of illusions used in conventional images and image of the present invention can be made with entirely new unique illusions. For example, the use of real light, transparency, translucency and spatial depth that is variable, workable, reworkable, controllable, spontaneous, and WYSIWYG, as never before, enables new and unique illusions to be made in image of the present invention. And as another example, the present invention expands the use of illusion in images because conventional practices for making illusions can be used with more workability reworkability controllability, in processes which can be more spontaneous, more WYSIWYG and in more variations than in conventional images. In image of the present invention reality, illusion and perception can function as they do in conventional images, but in addition or instead the use of reality illusion and perception in image of the present invention can be new, or new and unique.

The use of real formal elements in images of the present invention can free image makers from the need to rely on illusionary devices (conventional and/or new ones) to the extent that they would be needed in conventional images, or to any extent desired. Thus for example, in inventive images, the use of illusionary devices can be optional not essential, and if desired, inventive images can be made without illusions, e.g., in a wider array than ever before. The use of real formal elements in inventive images also 1). enables image makers to create new and new unique illusions, 2). can take the place of illusions to any extent desired, 3). can enable new and unique abstractions, and/or 4). can give inventive images new relationships between abstraction and reality and between reality and illusion. For example, in a realistic oil painting that shows the inside of a room at night lit only by a single candle painted in the center of the canvas, both the candle light and its illumination of the dark room are illusionary. But if this same painting were on a transparent polymer image support (e.g., stabilizer), the candle light and the illuminated parts of the dark room could be see-through polymer, the real light and transparency of which takes the place of realistically painted illusions of light. The real light of the polymer of the present invention has changed the illusion, incorporating the elements of real light and real see-through spatial depth into it, but it is still an illusion. Taking this example a step further using the present invention, all of its illusionism can be eliminated by abstracting the subject matter used in an inventive image, e.g., using real transparent and translucent spatial depth, real light, and color, with polymer of the present invention, a prominent oval form can be made in the center of an abstract painting of the present invention radiating real light out into the surrounding dark space without any illusions. This image can not be comparably made in conventional painting that is strong and permanent; and/or workable, reworkable and controllable as desired.

Illusions can be made in image of the present invention as desired. For instance, conventional practices for making illusions in conventional images can be used in combination with the new unique characteristics of the present invention (e.g., light and space) to produce image of the present invention with illusions that are new and unique, and to produce image of the present invention which are new unique images. In addition or instead, new kinds of illusions can be made in image of the present invention which do not directly use conventional practices. Many of these new kinds of illusions are unique and some are unlike any even made in images before. The following are further examples of the use of illusion in image of the present invention.

Inventive images are made with one function which is changed after a period of time. In comparison, the function of images made using many conventional practices often can not be changed, e.g., if such a change were desired, a new image would have to be made.

Images of the present invention are made which are spiritual, religious, or both, these inventive images many also have one or more other functions too. For example, such inventive images might be paintings; sculptures; objects with specific religious functions such as menorahs, ceilings in houses of worship (e.g., dome shaped ceilings); alters; a window, a series of windows or a wall of colored windows in a place of worship (e.g., like stained glass windows in a church); images memorializing the dead (e.g., in a Holocaust Museum), etc. Inventive images can also have spiritual or religious content in other ways, e.g., religious text or graphics can be embedded, printed, painted or written in and on inventive images. In further examples, inventive images with or without a specific religious function, subject matter, or association, can have light qualities and effects which give them spiritual and religious content and meaning, e.g., light can represent spiritual or religious enlightenment, prayer, hope, heaven, nature, a particular religion (such as light representing Christ); goodness vs. evil, or right vs. wrong, etc. Light has been used for its association with spirituality and religion in innumerable images throughout history, e.g., the use of halos painted over people's heads in paintings and the abstract use of light to evoke spirituality as in the paintings of Marc Rothko.

### EXAMPLES

Fig. 86, shows 3D inventive images made of multiple planes which have their structure and their form united, 86.a.I.- a.III. might function as art and/or as screens or partitions, or even as cards, depending on their size and on the applications made on them, e.g. writing. Inventive image Fig. 86.b. is a form that is similar to a revolving door. It might for example be further processed with design elements on all of its six external surfaces, e.g. painting, drawing, photography, collage, printing, etc. This image in Fig. 86.b. could for example function as a revolving door, or as an art work revolving around a central pole (as in art by Marcel Duchamp exhibited in New York City in 1997). Alternately inventive image of Fig. 86.b. could be stationary and function as a display or as art.

An image maker makes 107 flat rigid rectangular planar initial image supports of transparent polymer of the present invention, each measuring between approximately 18" x 24" but varying in thickness between approximately 0.5" and 4". All of these images are made in a conventional mold. Some of these initial image supports have surface preparation stabilizers on them and/or they are initial image support stabilizers. These image supports may also have other stabilizers, e.g., fiber and/or an ultra violet light stabilizer. These 107 inventive images, are all formed by processing their image supports 1.- 107. differently, as follows.

Image Supports 1- 4. are colorless polymers which are each painted on both of their sides and their edges with transparencies, using different conventional fine arts practices, e.g. watercolors, oil paints and/or acrylics. Thus, these image supports are used as conventional painting surfaces, only strong, permanent conventional painting surfaces are not transparent; they do not offer comparable use of color with transparency, real (as opposed to illusionary) spatial depth, and light; and most of them are not self supporting, e.g. paper and canvas need to be matted, backed, framed or stretched, canvas needs stretchers. Image Support 5. has texture on one of its largest sides created by irregular reflective particles inlaid and embedded in the polymer. This image is further processed with transparent painting applications made principally on its reverse smooth sides. In a few areas, some cPRM is poured over broken color paint applications. Some of this new polymer is overlaid by transparent paint.

Image Support 6. is polystyrene formed with a slight green iridescent coloration unevenly dispersed in its cPRM. The styrene in the cPRM forming this image is catalyzed with about 0.7% Benzoyl peroxide (by volume). N, N, N', N' - Tetramethyl-ethylenediamine is added into this cPRM in an amount which is the same or almost the same as that of the catalyst. Dibutyl phthalate is also added into the cPRM at about 7% (by volume). After this polymer image support is formed, it is further colored using oil based paints on both of its sides.

Image Supports 7., 8, and 9. are all polystyrene formed with a cPRM made as described in Image Support 6., but each of these images is made with a different amount of dibutyl phthalate added into its cPRM. The amounts of dibutyl phthalate added into the cPRM used to make these three images is about 5%, 9%, and 15% (by volume). No color is added into these three cPRM. The resulting three polystyrene images are all painted with oil based paints but using different kinds of oil media. Image Supports 10, 11. and 12. are also polystyrene. The cPRM mixtures used to make them are comprised just those used to make Image Supports 7., 8., and 9., but the amount of dibutyl phthalate added into these cPRM is different. Dibutyl phthalate added into these three cPRM at about 1%, 3%, and 13% (by volume). After these polymer image supports are formed, they are further colored using oil based paints on one or on both sides. Image Supports 13. through 17., are also polystyrene formulated using cPRM comprised as the cPRM used to make Images Supports 10. through 12. Dibutyl phthalate is added at differing amounts between approximately 1% and 15% (by volume) into these three cPRM, however it is not completely stirred into these cPRM mixtures. As a result the oil based media superimposed on the polystyrene image supports formed absorbs into different areas on their surfaces at differently.

Image Supports 18. through 25. are formed using Butyl methacrylate catalyzed with about 0.1% (by volume) Benzoyl peroxide. N, N, N', N' - Tetramethyl-ethylenediamine is added into this cPRM in a quantity which is the same or almost the same as that of the catalyst. For each of these images, the open mold is completely covered and sealed well from air as their cPRM polymerize. The polymer image supports formed are then superimposed with oil based coloration, such as oil paints and oil pastels.

Image Supports 26. through 85. are hydrophilic polymers. They are all made by catalyzing 2 - Hydroxyethyl methacrylate with about 0.8% Benzoyl peroxide (by volume). N, N, N', N' - Tetramethyl-ethylenediamine is added into these cPRM in a quantity which is the same or almost the same as that of the catalyst. Ethylene glycol dimethacrylate is added into the cPRM of all but four of these images at about 2% to 15 % (by volume) so as to get different levels of absorbency and swelling in the polymer image supports formed. In making each of these images, the open mold is again closed and well sealed from air as their cPRM polymerize. The polymer image supports formed are then superimposed with water based coloration, such as watercolors, tempera, and acrylic paints. A clear colorless acrylic gel medium is superimposed on 25 of these images as a layer of underpainting which is continuous on most of them, but discontinuous on some images. The thickness of this underpainting varies from image to image. This underpainting is then superimposed by further coloration which in some images is water based, in some images it is oil based, and in some images, both oil based and water based coloration are superimposed.

Both sides of Image Support 86. are carved and some of its carved areas are colored. A conventional, see through piece of paper is attached to one side. Some of this paper surface is painted with watercolors and some of it is superimposed with new polymer into which lines are incised. Image Support 87. is colored using conventional practices on only one of its external sides, forming an image which is principally or completely opaque on one side.

Image Support 88. is formed with 2% (by volume) of an oil binder used in conventional painting (such as linseed oil) mixed into its cPRM. This polymer image support stabilizer is painted using transparent and translucent oil based paints and drawn upon using oil pastels.

Image Support 89. is a rigid, non absorbent polymer. Bonding spots are formed on its surface which bond a superimposed layer of a highly absorbent, transparent colorless polymer to it. This image is then superimposed by coloration which absorbs into it. Image Support 90. is carved and this carved surface is coated with a transparent or translucent photochromic layer so that its color changes with changes in light hitting it.

A transparent photochromic layer is put onto one side of Image Support 91. Its photochromic surface is made so that it bonds to superimposed paint. It is then colored with transparencies. A little painting is done on the reverse side of this image also. Three additional parts are attached onto Image Support 92. so that the inventive image formed occupies five times as much volumetric space as its initial image support occupied.

Image Support 93. is colorless. Reflective coloration is added on one side, and it is colored with transparencies on the reverse side. Image Support 94 is colorless, but it is colored with pastels and acrylics on one side and encaustics on the other side. Image Support 95. is incised with lines which form a drawing. A small polymer plane is joined to part of this surface over part of its incised drawing. Conventional additive processes are used to draw on part of the exposed surface of the newly attached part, e.g., ink, pastels, etc. Image Support 96. is colorless. It is colored with multiple layers of oil paint on both sides, using multiple layers of glazes and impasto.

Image Support 97. is colorless. It is colored with multiple layers of pastels on both sides. On selected areas of its pastel applications, new transparent polymer is superimposed. Then this inventive image is painted in randomly varied areas with oil paint. Image Support 98. has some internal green coloration. It is further colored with writing on side and traditional oil painting on the other side. Image Support 99 is perforated by negative cut-outs which are made within it as it is further colored by conventional printing processes and conventional painting processes.

Image Support 100 has some red coloration and some colorless areas. A little linear drawing is done on this image support, and it is cut into five irregular pieces, some of which are drawn upon. Then all of these pieces are bonded to one another in a new, 3D Compositional Arrangement, and some painting is done on this new 3D form. Image Support 101 has internal coloration. This image support is dropped, breaking into several irregular pieces. All but the largest of these pieces are further colored forming a single image. A decade later, the remaining polymer piece is used as an image support which is further processed to form a separate inventive image. Image Support 102 is colorless. It is colored with watercolors on one side and oil paints on the other side. Then a little sgrafitto line drawing is done in one side of this inventive image.

Five image supports are used as the image support to make a single composite inventive image. Image Support 103 has areas of pale transparent blue coloration. Image Support 104 has with four small areas of opaque coloration. Image Support 105 has some linear coloration. Image Support 106 is colorless. Image Support 107 is thickened with additional polymer that has nine embedded reflective square particles. These five forms are put together into a single composite image that has five superimposed polymer layers alternating with six layers of transparent painting, all of which the viewer sees simultaneously though one or more of this image's polymer layers may or may not be bonded to the rest of this inventive image.

In some embodiments, inventive images are made using planar polymer sheets, as in these illustrations. **Illustration 1.** 100 planar polymer inventive images are made in succession in a conventional elastomer mold, the negative space of which measures 24" x 36" x 1.5". Fifty of them have embedded fiber stabilizers and fifty of them do not. Forty of them have new unique colored polymer imprimatura, twenty of which have fiber stabilizers. Each of these 100 images is an edition of one, even though many are the same or even identical in their early stages. If necessary, before each polymer is made, the mold is cleaned with a cationic cleaner (such as "Fantastic") and water. If desired, the mold is coated with a thin, preferably even layer of a conventional mold release agent, e.g., spray petroleum jelly. These planar polymer images are further processed as initial image supports, e.g., as stabilizers.

The first fifty of these polymer images are made without fiber stabilizers as follows. A batch of PRM is made by putting 7080 milliters (7079.184 ml.) Silmar® Polyester Resin S-40, made by Silmar®, a division of Interplastic Corporation in Covington Kentucky, into a polypropylene container. This is a monomer which can form transparent colorless polymer. A concentrated-stabilizer-mixture is made by taking about 150 ml. from this quantity of S-40 monomer and mixing it well with 28 grams of Tinuvin® 328 by Ciba Geigy (a light stabilizer in powder form) in a separate glass jar, so that the stabilizer is thoroughly wet out without lumps. Then this concentrated-stabilizer-mixture is poured into the original batch of S-40 monomer to form the PRM desired. If after mixing thoroughly, there are lumps of the concentrated-stabilizer-mixture in the PRM, these are either broken apart, wet out and mixed into the PRM, or removed so that no trace of the concentrated-stabilizer-mixture is visible within the PRM. This PRM is then catalyzed with 71 ml. of Cadox® M-50 MEKP made by AKZO Chemicals in Arnehm, The Netherlands, and mixed well. This cPRM is poured into the mold's negative space, forming a thin layer approximately 0.3" to 0.6" thick. Immediately thereafter, a clean piece of cardboard is placed over the entire mold, covering it completely. Because this piece of cardboard is supported by the mold's side walls, there is an air pocket between it and the surface of the cPRM in the mold. The next day the polymer image is removed from its mold and it is cleaned using soap and water.

Although this same process is repeated to make all fifty of these polymer inventive images, an extra step is added in making twenty of them. This additional step is the homogenous mixture of coloration into the PRM used to make them, so that they have differing a new unique imprimatura, e.g., in a concentrated-coloration-mixture made by taking about 125 ml. of the PRM and putting it in a separate jar with a concentrated amount of the desired coloration (e.g. the quantity of coloration added varies according to the discretion of image makers). The PRM and coloration are mixed together well, e.g., wetting out the pigment as completely as possible. Then slowly, small amounts of the concentrated-coloration-mixture are mixed homogeneously into the rest of the PRM until the desired coloration is achieved, the quantity used varies.

Each of the second fifty of these polymer inventive images are made in the same mold with an embedded layer of fiber stabilizer positioned approximately medial within each of them as follows. A batch of PRM is made using the same mixture used in the first fifty images described above. This PRM is divided into two halves. Half of this PRM is catalyzed using 36 ml. of MEKP, it is mixed well and poured into the negative space of the mold forming a layer approximately 0.14" to 0.25" thick. Once this layer of cPRM begins to gel firmly enough so that a superimposed layer of fiber will not sink down into it, a single piece of very thin, fine, clean, open weave surfacing veil Surmat® continuous glass fiber made by Nicofibers of Shawnee, Ohio, measuring 24" x 36" is laid on its upper surface and pressed into its wetness so that it lays flat, so that it sticks to the cPRM and so that it becomes as saturated with the wet cPRM as possible, while remaining on its surface rather than sinking into it. A blunt hand tool (such as a blunt wooden stick or tongue depressor), is used to press the fiber down flatly onto the surface of the cPRM, wetting it and releasing undesirable trapped air bubbles. An hour later, the remainder of the PRM is catalyzed in small quantities of about 125 ml. using 1.25 cc. MEKP, each of which is applied onto the inventive image, forming a layer approximately 0.14" to 0.25" thick, embedding the fiber in a manner which enables undesirable bubbles to be removed, e.g. using an ordinary paint brush with dark colored bristles. Immediately thereafter, a clean piece of cardboard is placed over the entire mold, covering it completely (described above for the first 50 polymer inventive images). The next day the polymer image is removed from its mold and cleaned using soap and water.

Although this same process is repeated to make all fifty of these polymer inventive images with fiber embedded in them, an extra step is added in making twenty of them. This additional step is the addition of coloration (e.g., transparent pigment), into the original batch of PRM (e.g., using a concentrated- coloration-mixture), before this PRM is divided in half or catalyzed using the process described above for the previous twenty images with imprimatura. Thus, twenty of these polymer inventive images which have fiber within them, also have a new unique imprimatura.

Then, forty of the polymer inventive images without any fiber in them, (twenty-five of which are colorless and fifteen of which have a new unique imprimatura), and forty of the polymer inventive images which have fiber stabilizers within them, (twenty-five of which are colorless and fifteen of which have a new unique imprimatura), are given a surface preparation stabilizer. Example A., some of these polymers are sandblasted on their two sides and edges, cleaned well with soap and water, given a final rinse with distilled water and allowed to dry completely. Then the SSI on some of these polymers are painted, drawn upon, and/or printed upon, using conventional practices (such as paints, pastels, etc). SSI on others of these sandblasted polymer images are given a Clarifying Imprimatura made of transparent colorless acrylic medium (e.g., gel) which is capable of being brushed on without undesirable air bubbles. (Thus some of these images have two kinds of imprimatura superimposed.) All of these Clarifying Imprimatura are applied on these images thickly enough so that they fill in the sandblasted abrasions or SSI on the surfaces of these polymer images completely. All of these Clarifying Imprimatura are applied in a manner such that undesirable air bubbles are not formed or trapped in them. The Clarifying Imprimatura on these inventive images fill in their SSI completely, smoothing out their sandblasted surfaces, restoring their transparency, their color and their clarity. Example B. some of these polymer images are superimposed by a surface preparation stabilizer which functions as an underlayer, and/or as a glue, bonding to both the layer beneath it and the layer above it. For example, a surface preparation stabilizer is made using a mixture of the same cPRM used to make the initial polymer form with approximately 1% (by volume) of a conventional medium mixed in (such as a conventional oil or acrylic paint, linseed oil, or an acrylic medium). Example C., these polymer images are given surface preparation stabilizers which are a combination of those in Examples A. and B., e.g., such surface preparations stabilizers contribute tot he aesthetic of these images, for examples as a design or drawing underlayer. Thereafter, all eighty of these images are each painted differently using conventional practices, e.g., on both of their sides and edges, e.g., using conventional practices. The paint used on one side of some of these images is reflective (such as a silver and/or iridescent paint), and the paint used on their reverse side is transparent.

The remaining ten inventive images without any fiber in them, (five of which are colorless and five of which have a new unique imprimatura), and the remaining ten polymer image which have fiber within them, (five of which are colorless and five of which have a new unique imprimatura), are all given a surface preparation stabilizer on only one of their sides, e.g., their other side and edges may not be further processed in any other way. Refer to examples of surface preparation stabilizers above. Thereafter, all twenty of these images are painted differently using conventional practices.

The resulting 100 inventive images may be mounted using conventional practices, they may be viewed from one side only, or they may be viewed from both sides, and they may function as paintings, as windows, as table tops, stage sets, wall panels, graphic design, etc. Each of them is exposed to light. **Illustration 2.** 100 planar polymer image supports (which may or may not be stabilizers, and/or initial image supports) are made in succession in a conventional elastomer mold, the negative space of which measures 24" x 36" x 1.5". Fifty of these polymer s have fiber in them installed as described above in Illustration 1. Each of these 100 images is an edition of one, even though many of them are the same or even identical in the early stages. All of these image supports are made of a cPRM mixture which has about 0.4% to 15% (by volume) of one or more ingredients from one or both of these categories: i). conventional paints, sizes and primers; binders used in conventional image making media and materials; conventional media for painting; and wax and compositions containing wax; ii). absorbent polymers. These image supports might have other special effects which are not comparably existent in conventional images such as light effects. These image supports are further processed. **Illustration 3.** 100 planar polymer image supports (which may or may not be stabilizers, and/or initial image supports) are made as described in Illustration 2. (half of them have fiber in them as described in illustration 1.), but these are made using cPRM comprised of about 70% to 100% by volume of one or more absorbent polymers (refer to previous examples). These image supports might have other special effects which are not comparably existent in conventional images such as light effects. These image supports are further processed.

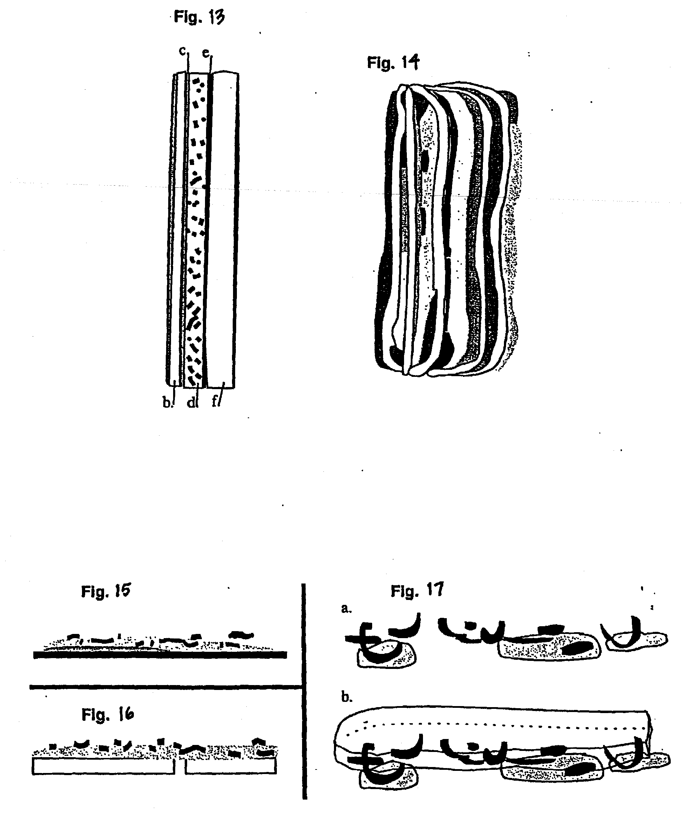

In a different illustration, Fig. 15. shows an inventive image with multiple applications of coloration on an opaque image support (illustrated in black). For example, these applications might be transparent colored layers of cPRM made on an abraded mirror or on abraded metal, or these applications might be conventional paints on an opaquely color polymer.

In a different illustration, inventive image parts made with little or no polymer of the present invention, serve as initial image supports. Though these image supports are not image support stabilizers, they might be other kinds of stabilizers such as fiber stabilizers, and/or they may contain stabilizers (e.g., UV light stabilizers). For instance, an inventive image might be formed by partially or entirely covering one or more of these initial image supports with cPRM. For example, this may be desirable because: **A).** a see-through layer of polymer on such an initial image support, can give it light, transparency, translucency, and/or coloration; **B).** a layer of polymer can thicken its spatial depth; **C).** polymer can make many initial image supports rigid or more rigid, strong or stronger, self supporting or more self supporting, polymer can reinforce image supports, or a combination of these (e.g. polymer can make paper or fabric (e.g., a stabilizer) rigid, a conventional drawing on paper covered with polymer may no longer need matting, framing or either, and a conventional canvas or a conventional image on canvas covered with polymer may no longer need a conventional stretcher or frame); **D).** polymer can give these initial image supports other aesthetic effects. For instance, it might change the quality of their transparency, translucency, clarity, texture, other light qualities (e.g. matte or glossy), and/or other aesthetic qualities. For example, once they are covered with cPRM, absorbent papers and fabrics (e.g., stabilizers), which may or may not have conventional applications on them (such as painting, printing or writing), will become transparent, translucent, more transparent, more translucent, or a combination of these. As another example, covering these initial image supports with polymer may enable them to be further processed in ways which might have been difficult or impossible otherwise, e.g. while paper, canvas, and other fabrics (e.g., stabilizers) can not be carved, incised, or inlaid, a polymer layer on these materials can be processed in these ways. **E).** polymer can coat or seal these initial image supports. Polymer can also coat or seal conventional applications made on these initial image supports. For example, a layer of polymer can seal a sheet of paper, gold leaf on a conventional image support, or conventional drawing (such as graphite, pastels, or charcoal) on a paper or canvas initial image support. If desired, polymer can separate the surfaces of these initial image supports from subsequently superimposed applications; **F).** polymer can give the surface a layer that is absorbent, hydrophilic, and/or hydrophobic; **G).** polymer can enable these initial image supports to bond, as desired, to subsequently superimposed or connected parts, attachments, and/or applications, e.g., cPRM used as a bonding substance; **H).** polymer can repair these image supports, e.g. a tear in paper repaired with cPRM; **I).** polymer can serve other functions or a combination of these functions.

An initial image support made with little or no polymer of the present invention, may be planar, and 2D or 3D, opaque, transparent and/or translucent. For instance, it may be wood, paper, a reflective material like metal or a mirror; metal with other finishes; a mesh or fabric such as one made of stainless steel; it may be ceramic, glass, stone, etc. Such an initial image support might be a frame work, e.g., of metal or wood. It be fiber (e.g., a stabilizer) such as a fabric which might be opaque, transparent and/or translucent. Or, such an initial image support may be a combination of these, etc. In a further example, an inventive image may begin on one or more initial image supports which are found objects or devices, e.g., an inventive image painting made using four conventional dinner plates as initial image supports. An inventive image might be made by partially or entirely covering one or more conventional image supports with polymer, e.g. an inventive image made by covering paper, glass, plastic and/or canvas with cPRM. An inventive image may be made by partially or entirely covering one or more conventional images with cPRM, e.g., a conventional photograph, painting, drawing, collage, print, fresco, graphic design, cut-out, sculpture, etc. For instance, four separate positive cut-outs, one made of paper, another made of metal, a third made of wood, and the fourth made of a fabric stabilizer might be partially or entirely covered with cPRM to make a single inventive image, e.g. which might function as a painting, a table, a mobile, or a sculpture.

As a further example, an inventive image painting is made on one, or on both sides of an initial image support comprised of see-through paper or a fabric stabilizer, covered with cPRM partially or completely on one of its sides or on both of its sides, before the painting is done, as the painting is done, after the painting is done, or at more than one of these times. This paper or fabric initial image support might be paper or fabric of any conventional kind (e.g., cotton, vellum, rag, linen, lace, construction paper, typing paper, acid free paper, acetate, mylar, shims, nylon, silk, it may have strands of metal in it, it may have dried flowers in it, it may have particles such as beads in it, might have an open weave, a tight weave or both, etc.). Before it is covered with cPRM or afterwards, this initial image support might, for example, be perforated, it might have negative cut-outs, it might be transparent, translucent, or a combination of these. The polymer superimposed on this initial image support, might partially or entirely cover or serve as reinforcement for painting on it. The polymer may or may not absorb into its image support. Painting and/or other marks might be made on the polymer inventive image surface and if desired. Whether or not its surface has painting on it, this image might then be further processed with one or more additional layers of cPRM, partially or completely covering it. Then, if desired, painting can be done on this image. If desired, a sequence of painting and layering cPRM can be repeated as many times as desired, to make a 2D or 3D inventive image painting as desired. The resultant inventive image painting may have a one, two or more sides for viewing. It may be displayed against a wall, it may be displayed close to the wall but not right up against it so that light will enter it through its backside, it may be displayed free standing, or a single inventive image painting may be displayed in a combination of these ways. This inventive image may be self supporting, e.g. it may or may not need or have additional support.

In cross section views, Figs. 19. and 20. show inventive images made by covering an initial image support with further applications, so that this initial image support becomes internal within the inventive image. Fig. 19. shows three progressive stages in the development of a single inventive image marked 19.a., b. and c., Fig. 20. shows one view of a different inventive image. For example, each of the initial image supports used in the inventive images in Figs. 19. and 20. might be either a conventional image support (such as a sheet of paper, a piece of canvas, a piece of wood, a piece of glass, a board, etc.), or a conventional image (such as a conventional drawing, e.g., a pastel or pencil drawing; a conventional painting such as an oil, encaustic, fresco or watercolor painting; a conventional photographic print or transparency; a conventional cut-out; or a conventional print, such as an etching, lithograph or silkscreen). Or the image supports within the inventive images in Fig. 19 and 20. might be made of compositions which have polymer and thus may be image support stabilizers. Figs. 19. and 20. show both of these inventive images further processed with a superimposed layer (e.g., of cPRM) completely covering them, shown as a white layer outlined in black. While the initial image support in Fig. 19. is uneven in its thickness and slightly undulating, the initial image support in Fig. 20. is generally even, flat, and planar. Upon the layer of polymer on the inventive image in Fig. 20., a application is superimposed discontinuously (shown in black) which may or may not be comprised or principally comprised of polymer (e.g. it might be paint, attached photographs, attached pieces of wood, etc.). Figs. 19.b. and 19.c. show further applications made on various sides of the inventive image in Fig. 19.a. which may be polymer applications, they may be principally, partially or entirely made of a different composition (such as paint, etc.), or they may be a combination of these. In another illustration, initial image supports might instead be partially covered (e.g., with cPRM) to form an inventive image, e.g., with polymer on only one of the image support's sides, or with polymer on its surfaces in a pattern, drawing or design.

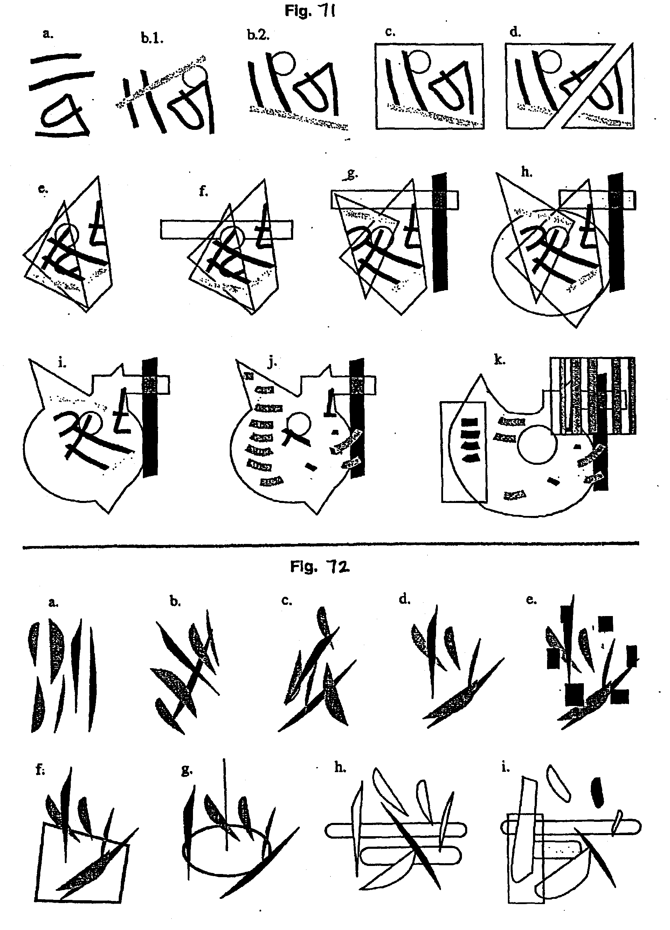

Fig. 70. shows views of a single inventive image at progressive stages in its layered development from vantages which approximate three-quarters views. In Fig. 70.I. an octagonal polymer medium layer is formed (which may or may not be a perfect octagon), made of a transparent colorless polymer. This polymer form is an initial image support stabilizer. A bonding speckled application is applied to its underside which might be opaque, see-through or both. This speckled application might for example be a paint or a bonding substance (e.g. cPRM) with elements dispersed in it, (e.g. particles of mica, minerals, shells, sand, glass, fluorescent matter, colored polymer, glitter, beads, sticks, hay, metal, paper, pigment, fiber, ceramic, fabric, metal, and/or ribbon), this speckled application may be collaged speckled paper, or paper adhered with a speckled bonding substance, a group of discontinuous marks (e.g., made using a painting medium, a drawing medium, a writing medium, and/or a printing medium such as pastel, crayon, pencil, paint or ink marks), this speckled application might be a combination of these. This inventive image in Fig.70.I. may be the image desired but if not, this image can be further processed. One of the ways that it can be further processed is by sanding or carving, e.g., making indentations in its surface or removing part or all of the speckled application. Another way it can be further processed is with a layer of large discontinuous opaque marks added to its upper surface and to some of its side edges as in Fig. 70. II. These opaque marks might for example, be paint, pastel, ink, collage and/or cPRM, that is printed, painted, drawn, and/or attached to this inventive image. If this inventive image is not yet complete it can be further processed. For example, some or all of these opaque marks can be removed from one or more of its sides. If desired the image can be returned to the way it was in Fig. 70.I., or it can be returned to a colorless transparent polymer octagonal form (its initial image support) without any coloration. Fig. 70 III. shows another way that it might be further processed with a new layer of transparent polymer medium added onto its upper surface and dark opaque marks e.g., oil paint, photographs, fabric, cPRM (such as colored cPRM), ink, metal (such as pieces of gold leaf), charcoal, another plastic, particles, pastel, encaustic, printed areas, pieces of rubber, and/or pieces of paper. Because there is a layer of colorless transparent polymer in between this layer of marks and the previous layer of marks, there is real noticeable spatial depth and a real noticeable tangible form of light within this inventive image, between all three of its layers of marks. The image of Fig. 70 . III. may be finished as desired. If not it can be further processed.

An example of further processing is in Fig. 70. IV. The image of Fig. 70. III. is given another layer of transparent colorless polymer on its upper surface, which is then superimposed by three areas of transparent coloration, e.g., a painting or drawing application, colored attachments (such as collaged tissue paper or attached pieces of glass), and/or portions of a photographic transparency attached to or formed on the surface of this inventive image. Between this layer of marks and the previous one, there is a layer of real noticeable transparent spatial depth and a tangible form of real light. The inventive image of Fig. 70. IV. may be the desired finished image, if not it can be further processed as desired.

As an example of further processing this inventive image, Fig. 70. V. shows yet another layer of transparent colorless polymer added onto its upper surface, and numerous colored circular shapes upon both this new polymer surface and this image's sides. For example, these opaque circles might be stickers, other paper, felt or silk; painted or drawn applications (such as charcoal or pastel); or they might be a combination of these. The inventive image of Fig. 70. V. may be the desired finished image, if not it can be further processed as desired. For example, some or all of these new circular shapes can be removed; their shapes can be reformed; their coloration can be changed; they can be repositioned, or a combination of these. As another example, Fig 70.VI., shows attachments made to this inventive image, e.g. rods, bears or pieces of a material are attached to this image. If the attachments are unsuccessful, they can be removed, e.g., the image surface can be reworked so that the image bears no evidence of ever having had these attachments. Moreover, while this image initially was 2D, as matter is added to it, it might have become a 3D image. Also, regardless of which stage in the development in Fig.70.I.-VI. this image progresses to, it might be one part of an inventive image made of multiple parts, e.g., one part of an image made of 20 octagonal parts put together like building blocks to form one larger inventive image.

Attachments made on top of the inventive image in Fig. 70.V. are in Fig. 70.VI. These attachments, might for example, be made of metal and/or wood (e.g., carved wood completely coated with cPRM which bonds to the polymer surface of this image). These attachments might have SSI on its underside, e.g. perforations, abrasions or both. Thus they might be bonded to the polymer surface beneath using the same cPRM as a bonding substance and/or screws.

In the following descriptions, the inventive images illustrated in cross section views in Figs. 28 and 31. are interpreted so that their white layers (marked by letters on their right hand side) are polymer. The other layers in these inventive images shown in varying shades of gray (marked by letters on their left side) are of a composition that is different from the composition of the particular polymer of the present invention which was used in their white layers, e.g., conventional paint, a drawing medium, collage, printing, a photograph, text, a polymer different from the one used in the other layers (such as a polymer made from a cPRM with one or more active ingredients that are different from the polymer layers), fabric (e.g., a stabilizer), a bonding substance (such as a glue, paper, particles, a reflective and/or iridescent medium and/or material), or a combination of these.

Fig. 28. shows the formation of an inventive image in five stages. Fig. 28.I. shows a layer of polymer marked b., which is an image support that may or may not be a stabilizer, that is covered with a discontinuous layer of another composition marked a. If this is not the finished image desired, this image is further processed. For example, Fig. 28. II. shows this image with two additional layers added on its underside, the first marked c. is made of a composition that is different from this image's polymer layers and the second new layer marked d). is a new layer of polymer (which may for example be a Separating Layer Stabilizer).. One or both of these two new layers might have been formed on this image or they might have been formed separately and then added onto this image. Though they were just added, both layers d). and c). could be removed returning this image back to the stage in Fig.28.I. In addition or instead, its layer marked a. in Fig. 28.I. might be removed. Or for example, this image might be further processed by continuing to add layers to it as in Fig.28. III. in which, e). a new layer of polymer is added onto the upper side of the composition made in Fig.28. II. (which may for example be a Separating Layer Stabilizer). If this is not yet the finished inventive image desired, it may be further processed. For example, Fig.28. IV., shows further processing with two added layers marked f. and g., both of which are made of compositions which are different from the polymer or polymers used in this image's white layers. Thus the two largest outer sides of this image are now changed so that rather than having continuous polymer surfaces as in Fig. 28 III., they now have discontinuous surfaces made of one or more different compositions. This may be the finished image desired, but if it is not this image can be further processed as desired. For example, if desired, either or both of these two new layers can be reworked. For instance, their coloration, composition, texture, forms, discontinuousness, and/or thickness can be altered as desired, e.g. their color can be lightened or darkened, for example, using one or more additive processes, and/or subtractive processes. Or, part or all of these two new layers can be removed. As another example, a new layer of polymer of the present invention might be added to both the upper and lower exposed surfaces of this inventive image, as in Fig. 28. V. marked h. and i. Fig. 28. V. might be the finished image desired, but if not it can be further processed.

While the layers of polymer appear continuous in Fig. 28. and the layers made of one or more other composition appear discontinuous, in an inventive image, layers of both compositions can be as continuous or as discontinuous, as even or as uneven as desired. Furthermore, their continuousness their evenness or their lack of these can be changed as desired. Fig. 31. shows another example. This inventive image has irregular but continuous layers of polymer of the present invention, marked b., d. and f., alternating with irregular but continuous layers made of one or more other compositions marked a., c., e., and g. In Fig. 31. II. of this illustration, this same image has been further processed with additional layers of polymer of the present invention h., i., and l., and with additional layers of other compositions marked j., k. and m. Note, the inventive images in both Figs. 28 and 31. are processed on multiple sides.

In the inventive image in Fig. 28., one or more of the layers marked b., d. and e. might be Separating Layers of polymer in between non polymeric layers of discontinuous applications, such as layers of broken color painting, direct painting, collage, photography, drawing, writing, printing, attachments, inlays, impasto painting, etc. For example, these Separating Layers of polymer might separate layers of oil painting which are applied lean over fat, fat over lean, or with a fat content that generally stays the same neither increasing nor decreasing, e.g., so that layers of oil paint will not build up thickly enough to jeopardize their permanence. By their transparency, these Separating Layers of polymer might give the image a desired sense of deep spatial depth, light or both. Thus, for example, viewing the inventive image in Fig. 28.V. through layer h. or i., could be looking into four superimposed layers of pastel drawing with real space and real light and perhaps an iridescent or a reflective light effect in between them from their transparent Separating Layers of polymer. It might be looking into four superimposed layers of impasto oil painting spaced at slightly different spatial depths, a new kind of painting in space. Or, it may be looking into a new kind of drawing in space which is tangible.

Fig. 29. is the same inventive image which appears in Fig. 28.V. showing examples of bonding spots (marked "|X|" as previously described) which might be connecting three internal Separating Layers of polymer b., d. and e., both to one another with the discontinuous non polymeric layers, and to this inventive image's two external polymer layers. Similarly, the bonding spots in the inventive image in Fig. 30.II. (marked with zig zag lines as previously described) might be connecting a Separating Layer Stabilizer (the higher of this image's two white layers) to non polymeric applications (shown in grey) on both its upper and lower sides

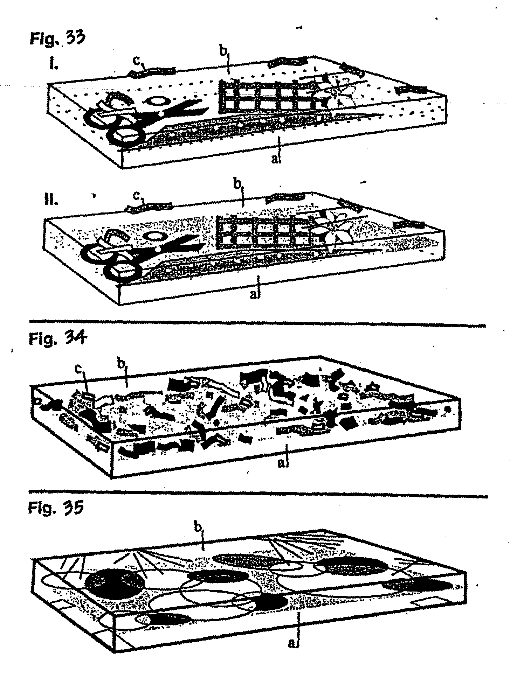

One or more of the layers in the inventive image in Fig. 31.II. which are marked h., b., d., f., i. and l. and are shown in white (as previously described), might be Separating Layers of polymer in between continuous non polymeric applications (shown in grey). Again, these Separating Layers of polymer might for example, separate layers of oil painting which are applied lean over fat, fat over lean, or with a fat content that generally stays the same neither increasing nor decreasing, e.g., so that layers of oil paint will not build up thickly enough to jeopardize their permanence. These Separating Layer Stabilizer might separate layers of photography, collage, printing, writing, encaustic, dichroic glass, paper, combinations of these, etc. Though they are rendered white in this illustration, these Separating Layers of polymer might have drawing on them, they might have reflective elements attached to their surfaces, engraving in them, etc. Fig. 32. shows the bonding spots (as zig-zag lines as previously described) which might be used to connect all of the layers of the inventive image in Fig. 31.II. Viewing the inventive image in Fig. 31.II. through its external layers j. or m., might be looking into seven distinct, superimposed layers of watercolor painting which are illuminated by the light of transparent colorless Separating Layers between them. It might be looking into three layers of oil painting, alternating with four layers of watercolors, all seven of which are spaced between transparent Separating Layers of polymer. It might be looking into seven superimposed layers of drawing applications with real spatial depth and real light in between them from their Separating Layers of polymer. It might be looking into seven layers of a single oil paint glaze which are separated by see-through Separating Layers of polymer. Or it might be looking through seven layers of collage (which have components such as, photographic transparencies, see through paper, objects, etc.) separated by the real spatial depth of transparent colorless layers of polymer. As a further illustration, the inventive image in Fig. 31.II. might be an area of a painting of the present invention that is a copy of an oil painting by Rembrandt, Vermeer or Turner, but which has more luminosity than any of these original paintings, because while the originals paintings by these artists have multiple layers of transparent and/or translucent oil paint, this painting of the present invention has the same layers of transparent and/or translucent coloration which can be made with the same oil paint, but it can have this with interspersed transparent and/or translucent Separating Layers of polymer. The inventive image in Fig. 31.II. might for example be layers of chiaroscuro painting technique formed using Separating Layers of polymer (e.g. made of colored cPRM) in a painting of the present invention which is a copy of a painting by Rembrandt.

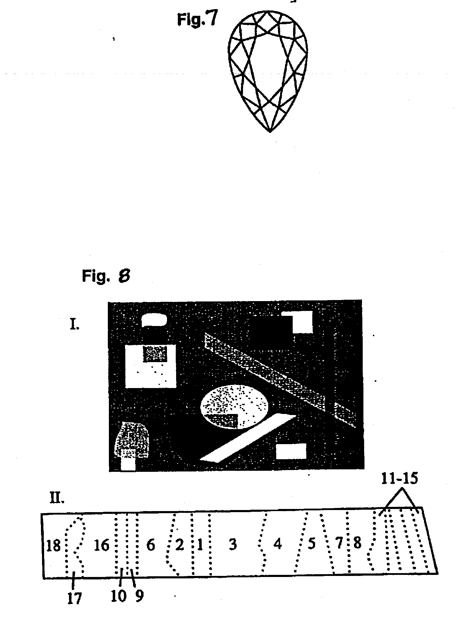

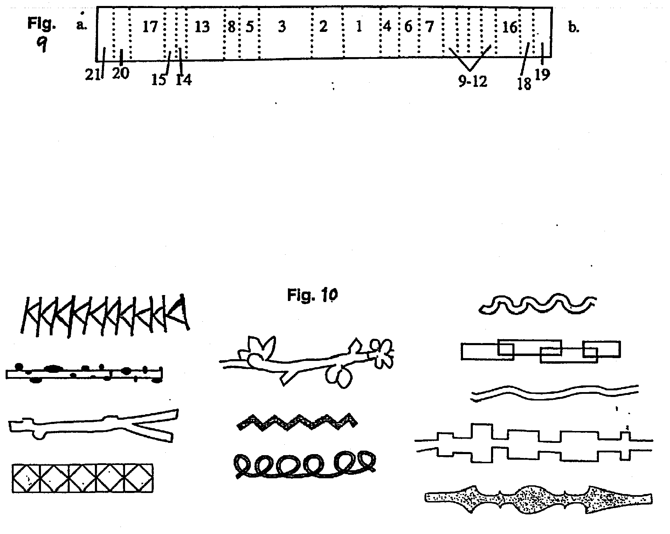

Fig. 7. shows a 2D or 3D image with faceted sides which might have been made in a number of different ways using the medium of the present invention. For example, this image might have been made from a single mass of polymer medium of the present invention using one or more subtractive processes (such as carving, chiseling, and/or sanding). Or, this image might be made by adding matter to an initial plane or an initial mass using the medium of the present invention, and then shaping this matter (e.g., subtracting from it) as necessary, into the faceted shape desired, e.g. by sanding or carving it. As a third alternative, this image might be made by connecting multiple separately formed parts, e.g., polymer parts. In a further example, this inventive image might a 2D or 3D form (e.g., a plane) of a polymer made using the medium of the present invention with lines on it (e.g., formed by painting, printing, incising, drawing, embossing, inlaying; attaching or embedding one or more elements such as string, wire, particles, etc.,) which create the illusion of 3D spatial depth. This 2D or 3D image might have been cast as it appears, with or without coloration, without any further processing. This image's form might be open, made of multiple connected rods, bars and/or strips. This image might be made of multiple superimposed layers of cPRM, with or without any other material and/or media. If this image is closed form it might be solid or hollow.

Fig. 6.I. shows an inventive image made of a transparent polymer planar image support which may or may not be a stabilizer. On this image support, a realistic sky scene full of clouds was painted in transparencies, using conventional painting practices. This image relies upon real light for its visibility; for its luminosity, its radiance and its brilliant sense of light; as well as for its sense of great spatial depth; its realistic 3D illusion of clouds and sky; and other aspects of its subject matter, function, content, and meaning.

Fig. 6.I. is an inventive image depicting a cloud filled sky the coloration of which was applied on a polymer initial image support (e.g., a stabilizer) using transparent conventional materials and media. This may be the image desired, but if it is not, this image can be further processed as desired. Fig. 6.IV. shows an example of further processing in which coloration is removed unevenly and artistically to lighten the clouds in this image and to give them more of an illusion of volume. This lightening of applied coloration and this modeling of form is easy using the present invention, though reworking many conventional practices on conventional surfaces is limited, problematic or impossible. This image may be finished, but if it is not it can be further processed as desired. As an example, the contrast and drama of this image are heightened by inconsistently darkening its background sky with added color, as in Fig. 6.II. Though this sky is darkened, it is still translucent in its darkest areas and transparent or translucent in its other areas. While the addition of this or these new layers onto this inventive image noticeably affects its light, form, content and meaning, and it may or may not significantly affect its real spatial depth. This may be the image desired, but if it is not, this image can be further processed as desired. As an example, coloration can be removed from this image returning it to the way it was in Fig. 6.I., returning it to the way it was in Fig. 6.IV., making it into the image in Fig.6.III., or removing all of the conventional media superimposed so that it is back to being the image support (e.g., stabilizer) it was. This kind of workability, reworkability and control does not exist in conventional practices. The resultant image might for example be a painting, a wall, a window, a partition, a table top, etc.

In Fig. 6.1., transparent painting is done on a planar polymer image support (e.g., stabilizer) using conventional practices. This image support might have been made with a surface preparation stabilizer on it, e.g. so that it bonds more strongly to conventional paints. This painting might be done on one or both of this polymer's larger sides, with or without painting its side edges. It may also have internal coloration. However, in addition to just using conventional practices on this inventive image, it can be further processed on one or more of its sides in one of these ways. 1). Conventional applications made in individual layers, in multiple layers, or both such as conventional painting applications can be applied to this polymer inventive image separated by one or more Separating Layer Stabilizers made of polymer that are transparent, translucent or both. Thus, for example, the cloudy sky in this image can be painted using one or multiple layers of conventional painting application, the real spatial depth of which is usually very limited (e.g. unless impermanence is desired). 2). The cloudy sky in this inventive image may be painted using one or more layers conventional applications as desired, superimposed by a Separating Layer Stabilizer made of polymer, then superimposed again by one or more layers conventional applications as desired, and then if desired, repeating these alternating steps as many times as desired, until the inventive image desired is formed, with the coloration, spatial depth and other formal elements desired. Using the latter method, both the total number of layers used to make the cloudy sky in this inventive image and the real spatial depth of this inventive image are unlimited, or limited only by the image maker to a determination which can be changed if desired and as desired. The result can be a 2D or a 3D inventive image.

Thus a painting of a subject like a sky, which is an illusion of real spatial depth and of real light, can be made using more real spatial depth and more real light than ever before. It can also be made luminous in a way that it has never been luminous before. Further, the use of layering with Separating Layer Stabilizers made of polymer can give the resultant inventive image other new and unique effects of light, color, form, movement, and other formal elements. For example, this cloudy sky can be a permanent image made using layering arrangements and combinations of layers which can only be made in impermanent conventional images, or which simply do not exist in conventional images. Examples are the use of watercolor over oil paint, pastel over 30 superimposed oil paint glazes, 40 superimposed applications of pastel, 100 superimposed watercolor washes within which there are three layers of broken color oil painting, the superimposition of 1000 layers of line drawing, the superimposition, or 3000 layers of pointillist dots in various different conventional media, etc. Applications superimposed on this image can change its subject, content and meaning, e.g., on one side of this image airplanes can be painted so that viewed from this side, this image shows a fleet of planes in front of a cloudy sky, while viewed from its opposite side, this same image shows a fleet of airplanes in the distance, deep in the vast cloudy sky. As an alternate interpretation, Fig. 6.I. might be an inventive image made according to the description above, on an image support which is made of a composition which is completely or partially non polymeric, e.g., this image support might be a transparent fabric such as a shim, canvas, paper, wood, metal, or another conventional painting surface, with or without a cPRM coating. Rather than conventional applications or in addition to them, the inventive image of Fig. 6.I. might be further processed by adding one or more layers of colored cPRM used as paint. Using one of the many processes of creation described above, the inventive image in Fig. 6.I. might have one or more of its external surfaces made of one or more different conventional applications and/or layers of cPRM. In any of the processes of creation described above, one or more subtractive processes might be used on part or all of the inventive image being formed, at one or multiple time during its formation. Whether polymer and/or non polymeric, the image support used to make the inventive image of Fig. 6.I., might for example have a texture like a conventional canvas or paper, as the example shows in Fig. 6.VII., or the deckled edges as those shown in the example in Fig. 6.VIII. The resultant inventive image of Fig. 6.I. may for example, be a painting, a window, a wall, a room divider, a table top, a floor, a ceiling, a skylight, or it might be one of these art forms and then at a later date be changed into another one of these art forms. Also, the inventive image of Fig. 6.I. may be strong enough and rigid enough to be freestanding without any additional structural support. Regardless of which way that the inventive image of Fig. 6.I. described above is made, if the resultant inventive image is not the finished image desired, it can be further processed as desired.

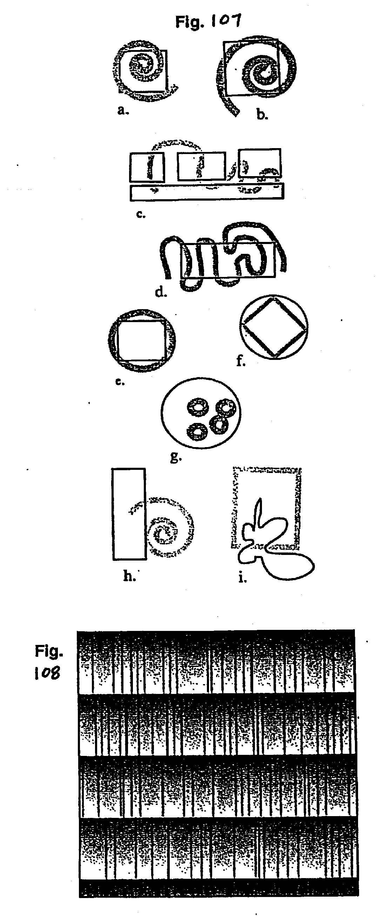

Fig. 108. shows an image with controlled use of light. This image is made using a transparent rectangular polymer planar image support which may or may not be a stabilizer. It has been colored with one or more pigments and/or dyes and exposed to light. As in Fig. 6.I., the use of light in Fig. 108. creates its sense of space. While this image is a single vertical plane (e.g., like a wall or a window), its use of light gives it illusionary spatial depth. Thus, for example, this image presents the illusion that it is a row of parallel horizontal planes (like a row of shelves), the edges of which are lighter as they approach viewers. Or, for example, an image presents an illusion that it is a series of vertical planes, which are dark at their top edges, and which are organized in order of increasing height as they recede away from viewers. This inventive image is a finished painting. It is hung on the wall. Six years later, its image maker sees it differently and decides to rework it. With two vertical cuts, this image is cut into three pieces, each with the same height and each with different widths. With no further processing, one of these pieces is a new finished inventive image. A layer of new cPRM is applied over the coloration on one side of another of these pieces. Once this polymer hardens, this image is installed as a finished inventive image window. The third piece may be left as an unfinished inventive image.

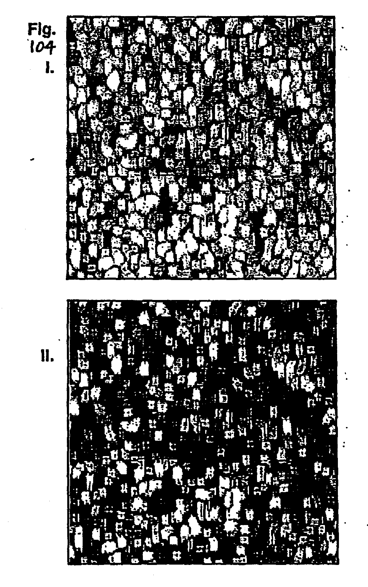

Fig. 104. is shown in two versions, part I. and part II. This image might have begun as a transparent rectangular polymer planar image support which may or may not be a stabilizer, onto which numerous applications of coloration were layered. These applications might have been colored transparent polymer, alternating with layers of one or more pigments, dyes or a combination of these, made using conventional image making practices. But, the coloration and the degree of transparency was varied in small, similarly shaped and sized areas across the surface of almost every layer used to form the pattern or design of this inventive image. Thus, as layers were superimposed to form this image, its coloration, spatial depth, and the degree of transparency, translucency and/or opacity of each of the small areas on its surfaces was built up. The color of each small area visible on the surface of the image in Fig. 104. is actually color formed with real spatial depth and a real tangible form of light. As a whole, the areas of this image present the entire range of light from complete opacity to complete transparency, with a multitude of degrees of transparency and translucency in between. The use of light and the sense of spatial depth of this inventive image varies across its surfaces. Once the image of Fig. 104. part I. is made, the image might be complete, or it may be further processed as desired.

Fig. 104. part II shows further processing wherein the image shown in part II. is less transparent, less translucent, and darker than part I. due to the additional coloration superimposed. This new version of this image may be the desired finished image. However if it is not, this image can be further processed as desired. For example, one or more additional superimposed applications may be applied, e.g., attached or collaged items, photographic transparencies, etc. Alternately, one or more subtractive processes might be used on this image, e.g., carving, sanding and/or sandblasting, for instance, making it lighter either in areas or all over. Such removal of matter from this image can return it to the way it was in Fig. 104.1. if desired.

An alternate interpretation of the processing done on the inventive image shown in two stages in Fig. 104.I. and II., which accounts for its changed appearance might be that it is only its illumination that is changed, e.g., no change occurs to its polymer of the present invention, its pigment or its other forms of coloration. For example, the processing done on this image which changes it from 104.I. to 104.II., or from 104.II. to 104.I. might just be a change in the light source or sources which are part of this image, though it is only their intangible illumination that is visible, their tangible part is hidden from viewers. For example one or more lights behind, and/or within this image are changed from Fig. 104.I. to Fig. 104.II.

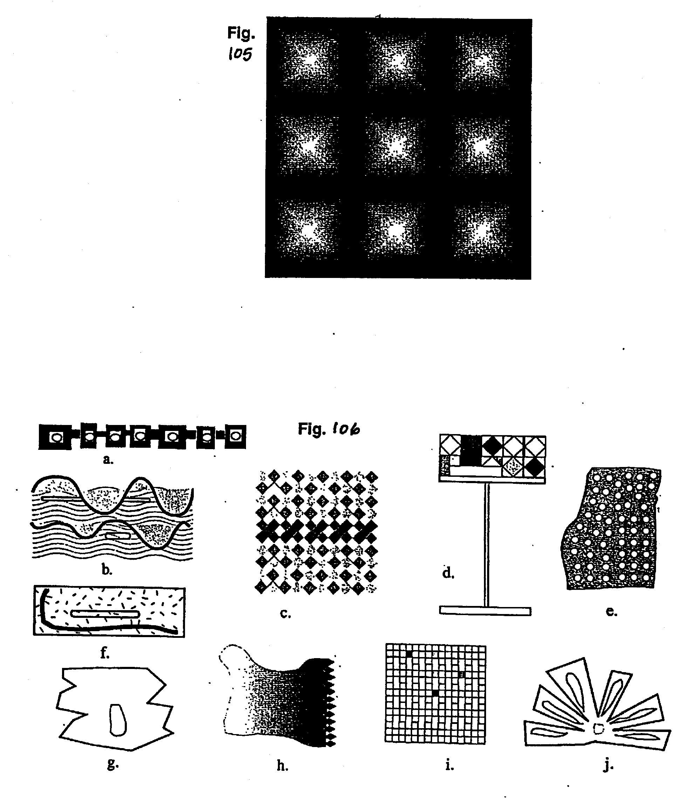

As a more specific illustration, a cross section view of the layers of the image in 104.1.and/or 104II. might look like the diagram in Fig 9. whether or not light sources are part of it. Similarly, the transparent spatial depth and luminescence of the images in Figs. 105, 108 and 915 might have also been built up as the diagram in Fig. 9 shows. The numbers on the layers in the diagram in Fig. 9 might indicate the order in which the layers of such inventive images were applied, notice that these layers vary significantly and this image is processed on multiple sides as it is formed. Though this diagram shows 21 layers on the inventive image, such an image might be complete at any stage before layer 21, e.g. layer 4 or layer 12 might have be the last layer. Alternately, if the inventive images in Figs. 104, 105, 108 and 915 have their transparent layers built up as shown in the progression of cross section views in Fig. 47.I.a.-c., a thin flat EL Lamp might be installed in an air pocket within their layers, illuminating one or more of these inventive images without the light source itself being visible.

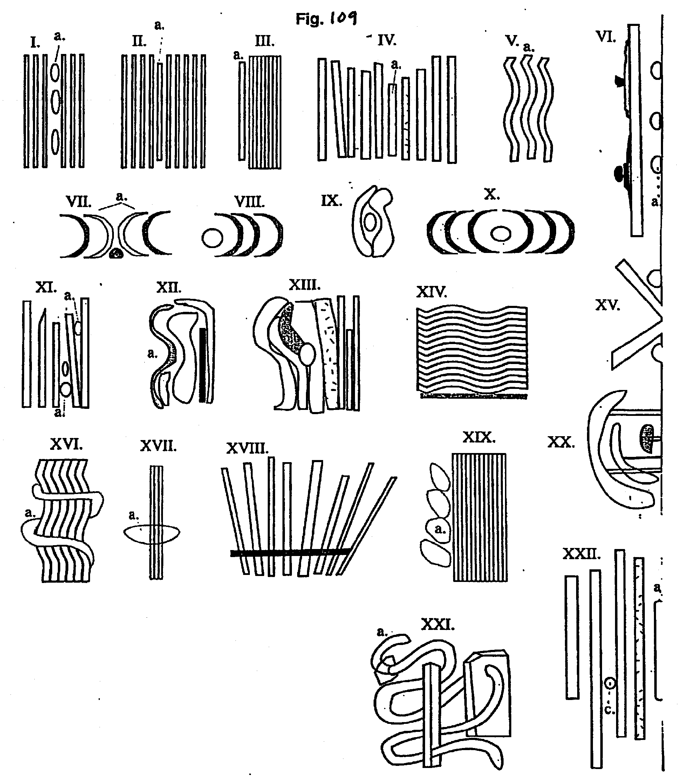

Fig. 109.VI. shows an inventive image presented out from a wall, with three light bulbs behind it marked a. (the image's method of mounting is not illustrated, e.g., it might be hung from the ceiling above a few inches out from the wall, or this image might be mounted out from the wall using mounts not shown). This image is made of a colored polymer planar image support which may or may not be a stabilizer. It has several applications of coloration superimposed on its front surface. Its light bulbs were aligned and moved several times as its coloration was applied and reworked so that their illumination and their shapes were fully considered aspects of this image. Thus this image is unified as a whole, without its three light bulbs it would be incomplete. Similarly, other inventive images of Figs. 109. described in the forthcoming text.

Figs. 21.-23. and 150.-154. show cross section views of inventive images. Fig. 21.a. shows a polymeric composition made with embedded air pockets shaped as prisms (shown as triangles) which might function as prisms when exposed to light. Then, if desired, this image may be used as an image support which may or may not be a stabilizer. Transparent coloration can be applied onto the image, e.g., using one or more conventional media or materials (e.g. a paint); and/or a cPRM with a pigment, dye or both. This image can be colored partially or entirely on one or more of its sides, as desired, e.g., using multiple layers. Then, when light passes through this image, its internal prisms will enhance its external coloration. Image of Fig. 21.b. shows a polymeric composition which might be made of made of multiple adjacent polymer triangles or pyramids, with or without a backing (an image support made of polymer or made of another composition). If for example these forms are pyramids, they might be polymer prisms which function as prisms with respect to light. The inventive image in Fig. 21.b. might be made as a single part. Alternately, it might be made as multiple separate parts which are then bonded to one another, placed in the compositional arrangement shown, bonded to a common underlying image support, as desired. If desired, the inventive image in Fig. 21.b. may be further processed. For instance, it might serve as an image support which may or may not be a stabilizer. Then it might be colored using transparent coloration (as described for Fig. 21.a.), and if it has prisms, they can enhance the visual effect of its coloration with exposure to light.

The image of Fig. 22., began with an initial inconsistent planar polymeric image support which may or may not be a stabilizer, and which might have been made in a number of different ways. For example, it might have been made as a consistently transparent polymer plane and then externally colored with superimpositions that are opaque and/or translucent, e.g. painting applications. Then, if desired, one or more further applications of coloration might be superimposed as shown in the white layer superimposed on its right top and bottom sides in Fig. 22. This superimposed layer might for example be a layer of transparent coloration such as a single light transparent layer of color (like a transparent white paint, a transparent iridescent blue paint, or a transparent yellow cPRM). Or, this image might begin as an opaque polymer image support. See-through areas might be formed by cutting into this image, or by cutting into it and then filling its negative spaces with colorless transparent cPRM.

An alternative interpretation of the inventive image in Fig. 22. would be that the inconsistent coloration on its initial image support is internal coloration, as in the following two examples. Example 1). this planar polymer might be one continuous form, with transparent areas and with areas that are translucent and/or opaque formed in a number of ways. For instance, it might be formed as a transparent polymer with embedded items that are opaque, translucent or both (such as embedded pieces of preformed polymer, wood, glass, metal, paper, a fiber stabilizer, lumps of dry paint, pastels, clay, checkers, dominos, and/or rubber, etc.) Or for instance, a polymer formed from connecting multiple separate parts which might be made of polymer or of polymer and other ingredients. Example 2). this image's initial image support might be opaque or translucent, with see-through negative spaces or holes in it. But regardless of the way in which the initial planar image support of the image of Fig. 22. is made, it is further processed with a superimposed layer on its right, top and lower sides (e.g., a layer of transparent coloration). The image of Fig. 22. can use the light which hits it in a novel and unique way.

The image of Fig. 23. is made of a planar initial image support (shown in black in the illustration) which is an opaque or translucent polymer plane. It may or may not be a stabilizer. It is then superimposed on all of its sides with one or more additional layers (shown in white in the illustration), e.g. one or more layer or layers of coloration and/or colorless cPRM, as desired. Thus, the initial planar polymer support of this image becomes completely embedded or encased. As an alternate interpretation of the inventive image in Fig. 23., its initial planar form (shown in black in the illustration) might begin as a transparent and/or translucent polymer image support, which is completely covered with coloration which might be opaque and/or almost opaque. For example, all of its sides are covered with white paint, blue paint, white gesso, or with painting done in a variety of different opaque and/or almost opaque colors. The inventive image in Fig. 23. may be finished, or it may be further processed, as desired.

In an embodiment an image can be made which is a large outdoor sculpture measuring about 7 feet long, five feet wide and ten feet high. It is based on the concept of a waterfall and it functions as a fountain. Because its structure is made of crosslinked polymer selected for its strength, most of which is reinforced with a fiber stabilizer, it is strong enough for children to play on. The polymer of this sculpture is color stabilized so that it does not change undesirably in the hot sun. Part of this sculpture is a fountain, water that runs over and through its polymer parts and its other parts. Some of the polymer parts of this sculpture are made as separate components and then joined together, others remain separate parts. Among the forms of the polymer in this image are sheets, 3D volumetric forms, hollow and solid forms, rigid and flexible forms, textured and smooth forms, colored and colorless forms. Many of the polymer parts have special effects of light, e.g., photochromic and dichroic effects, reflective effects (e.g., from mica, silver or paint in them), a see-through photograph is made on a transparent or a translucent part of them, they are cut and faceted like crystal, they have crystal pieces mirror, or glass embedded and inlaid into them, fluorescent and phosphorescent effects, they have a lens or a prism within or on them, etc. The light effects of this sculpture change significantly as the light changes outdoors, during the day and night, and from season to season. Though this one waterfall image is made initially, a year after it is completed, someone sees it and orders an edition to sell to others.

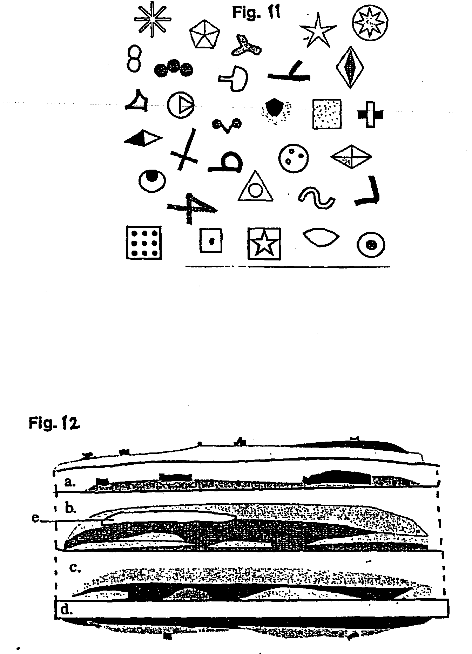

As an example, an image maker making inventive images might have a variety of polymer and non-polymeric parts, as well as the molds, and the remains of the molds in which these or other parts were made. Among these parts there might be rods, bars and strips of polymer medium such as those in Figs. 10 and 11. For instance, among these might be polymer rods which are cylindrical, "L" shaped, from molds taken off of stranded rope, from molds taken off various branches, rectangular, octagonal, hollow with and without air pockets some of which are shaped and functioning as prisms, etc. Among these there might be rods, the cross section of which is shaped in a cross. Though polymer forms made using the present invention can be made with a high degree of accuracy and precision, in this image variations from a lack of perfect accuracy is desirable. For example, these cross shaped rods might be made in polymer in five sizes. Size A. rods are made roughly with both of the cross bars of its plus sign cross section measuring 1.5" long and about 0.25" thick. Size B. rods are made roughly with one cross bar measuring 2" long and the other measuring 1" long and both 0.25" thick. Size C. rods are made roughly with both of their cross bars measuring 1" long and 0.25" thick. Size D. rods are made roughly 1.0" cross bars and 0.15" thick. Size E. rods are made roughly 0.5" cross bars and 0.12" thick. Though these bars are made in five sizes, they are made from twenty molds, because some rods in each size are made that are generally straight, and the rest of the rods in each size are made in three differing curves. The molds for these bars are made long so that rods can be cast at a variety of lengths by using oil formulated clay to shorten the length of the negative space in these molds.

In addition to rods, bars and strips, there might be 2D and 3D geometric shapes of polymer among the parts in this image maker's workspace, such as rectangles, squares, triangles, cubes, pyramids, spheres, etc. There might be polymer parts which are the scraps remaining from past images, e.g., whole, cut and broken. There might be both flat and undulating polymer planes in a variety of shapes, and thicknesses with different coloration and textures. There might be found objects like hardware, string, a shoe, golf balls, marbles, dried flowers, etc. There might be realistic polymer casts of every day things, e.g., a cast of an apple, a gourd, a serving spoon, a dinner plate, etc. There might be a wide variety of conventional image making materials and media, such as canvas, paper, oil paints, acrylic paints, pencils, pastels, watercolors, carving tools, wood, inks, fabric, etc., and various other kinds of images, e.g., photographs, plaster casts, paintings on canvas, drawings and prints on paper, a carved wooden box, a painted tray, etc.

From this variety of parts, this image maker might make a variety of different types of inventive images over a period of time, e.g., paintings, sculptures, constructions, a chair, a cabinent, etc. Inventive images can be made with solid and/or hollow volumetric mass, with apparent volume created by intersecting polymer planes, a 2D or 3D linear inventive image with or without a sense of volume.

The present invention enables an image maker to create openwork images and linear images (such as Drawings in Space, and inventive images made using rods and bars) with new and unique qualities and effects because they are open to light and space.

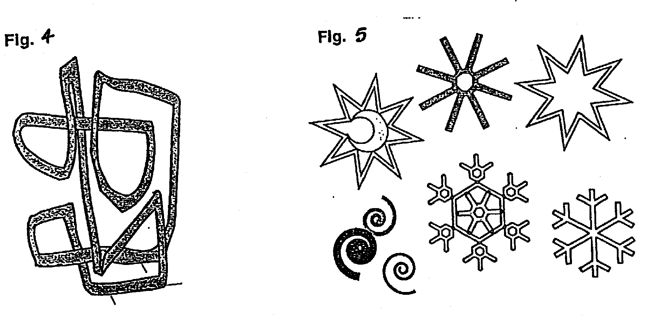

For example the linear image in Fig. 4 is made of one continuous line. This image might be planar, thus 2D, e.g. a cut-out. Or the position of its linear rod or bar might change in spatial depth as it curves in which case this image is 3D, e.g. as the rod winds inward, it might be closer to viewers. All of these forms can use their light and space with for example transparency or translucency, coloration, optical effects, light effects etc. that can be made using the present inventions for results that are new and unique. The image in Fig. 4 may be a large polymer sculpture made of a crosslinked polymer (with or without the support of an internal metal rod).

An inventive image is made as a stage set comprised of 7 polymer rods installed vertically. Because they are made of a crosslinked polymer they are strong and stabile. These rods are made with discontinuous light effects so that their forms sparkle and seem to dematerialize when illuminated by the stage lights. After a period of time, this image becomes a permanent installation in a building lobby.

The use of strength and rigidity in inventive images can be used in many ways, and among them are a number of special qualities and effects. For instance, these properties can be used to give an inventive image a sense of being light, precarious, airy, threatening, floating, ethereal, a sense of defying the laws of gravity and nature, etc. For instance, an inventive image can be mounted from the wall from a single point, installed in a position out from the wall, balancing on a point, held up by a part that looks insufficient and unstable, held from a mount or a structure that moves, etc. One inventive image, 45" in diameter, comprised of a crosslinked polymer with one fine layer of invisible fiber stabilizer positioned medial within its 1.5 inch width, is hung from the ceiling (e.g., like a big flying pancake) using a single stranded stainless steel wire secured through the 1.5 inch width of its center.

The Fig. 77. shows the basic formation of an image polymeric composition, and basic processes of building up of superimposed layers of polymer. Fig. 77.I.a. shows a rectangular mold made using conventional practices. Fig. 77.I.b. shows cPRM in this mold. One layer of polymer can be formed in this mold, or multiple layers of polymer could be superimposed upon on another in this mold, as desired. Fig. 77.II.a. shows the resultant inventive image formed, removed from its mold. This may be the finished image desired, it may be an image support (e.g., stabilizer) further processed, or it may be further processed back in a mold, as desired. For example, one or more additional layers of polymer may be formed on this image by making a temporary mold wall around e.g., as in Fig. II.b. Then, one or more layers of polymer can be formed on the surface of this polymer image, within these temporary mold walls, until it is as thick as desired. Thereafter, the temporary mold wall is removed, showing the image formed in Fig. 77.II.c. (the grey dotted line in this illustration, shows the previous thickness of this image). However, if at any time thereafter, further thickening of this image is desired, this process can be repeated as many times as desired as in Fig. 77. II.d. with another temporary mold wall built on the image in Fig. 77.II.c. Polymer can be added onto the upper surface of this polymer image within these temporary mold walls, e.g. these temporary mold walls can even be extended higher if necessary to contain additional polymer. Fig. 77.II.e. shows the thickened polymer image once its temporary mold walls have been removed. The two grey dotted lines in this illustration, show the two previous thickness of this image at earlier stages in its development. As an alternate example, Fig. 77. II. c. or e. may be used as image support which may be a stabilizer.

One or more layers of polymer can be added to selected areas of an inventive image's surface also if desired. As an example, Fig. 77.III.b. shows two areas of a polymeric image's surface encircled with temporary mold walls and cPRM added within these two encircled areas, e.g., one or more layers of polymer. Fig. 77.III.c. shows these two polymer additions to this image once their temporary mold walls are removed, marked as i. and iv. Fig. 77.III.C. also shows this method repeated. The areas on this image marked as ii. and iii. are two new areas encircled with temporary mold walls with new cPRM forming in them. Fig. 77.III.d. shows this inventive image once its new polymer applications have formed and their temporary mold walls are removed. This could be the finished image desired, but if it is not, it can be further processed as desired. Fig. 77. III. d. may for example, be used as image support which may be a stabilizer.

Fig. 76. shows cross section views of three examples of how polymer might be added onto a the polymer medium in Fig. 76.a. which already has one or more applications of other media and/or materials on it, e.g., applications of conventional paints. In Fig. 76.a.1.i., a temporary mold is formed off of the side edge of the inventive image, tightly sealed to this image, and new polymer is formed in it which attaches to this image's side, as in Fig. 76.a.1.ii., in which this image has its added polymer part and its temporary mold has been removed. Alternately, new polymer might be added to this image at an angle, as in Fig. 76.a.2.i., using the same process - with a temporary mold tightly sealed to the image and new polymer formed within it. Fig. 76.a.2.ii. shows this image once its added polymer part has extended it at the angle desired and its temporary mold is removed. As a third variation, Fig. 76.a.3.i. shows this same process used to add a polymer part to this image which is textured by its temporary mold. Fig. 76.a.3.ii. shows this image once its new textured polymer part is made and its temporary mold is removed. Regardless of which of these three ways that new polymer is added to extend this image, the resultant image can be the finished image desired, or it can be further processed as desired.

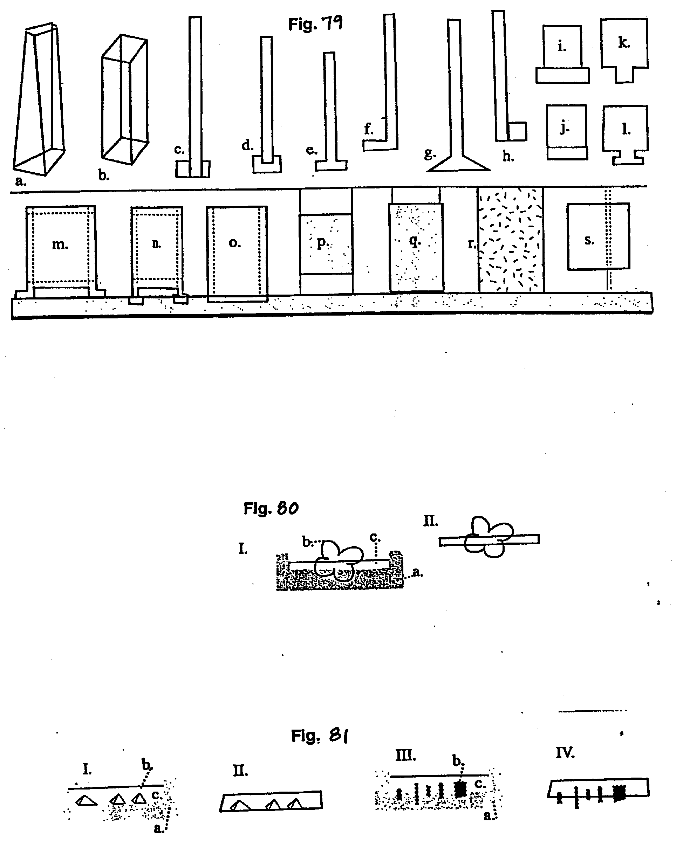

The inventive image in Fig. 74.a. is a single rigid, planar rectangular polymer image support (that may or may not be a stabilizer) which is at least partially transparent or translucent. Each of it's two negative spaces might have been formed by the mold as this polymer was cast, or they might have been cut or carved in it during gelation or after its polymer hardened (e.g., they may be preplanned, or spontaneously made). The image in Fig. 74.a may be the finished image, but if it is not, it can be further processed. The first example, of a way that the image in Fig. 74.a. could be further processed is by the use of one or more additive processes, filling in one or both of its negative spaces, partially or entirely with new polymer or with some other medium or material, e.g., paper, canvas, glass, etc. If these two holes are completely filled in with new polymer that matches the polymer with which it is made, this image could become a single continuous polymer plane (which it might have been in a previous stage if for example, it was not cast with its two negative spaces in it). Alternately, partially filling in either or both of these two holes could bring a new desired variation to this image, e.g., texture, color, a second level such as an inset piece, a curve, perforations, a new material or medium, a different light effect, etc.

As a second example, another way that the image in Fig. 74.a. can be further processed is by using subtractive processes, for example, by cutting a third hole through it, and cutting its rectangular perimeter into the irregular shape as in Fig. 74.b. Though the image maker could have just cast this image in the form in Fig. 74.b., this idea developed during the process of making the image. The image in Fig. 74.b. could be the finished image desired, e.g. a sculpture or a Shaped Painting. If it is not the finished image desired, this image can be further processed as desired. For example, one way that it might be further processed is by adding polymer to it so that it reverts back into the image in Fig. 74.a. Another example of a way this image might be further developed is with added coloration as in Fig. 74.c. (Note that the image in Fig. 74. c. could have been cast with the coloration shown.) As another example, if the negative spaces in either Figs. 74.a. or b. are filled in such that the polymer form becomes a continuous rectangular image. Then, this image could be colored so that it appears as in Fig. 74.d. Alternately the image in Fig. 74.d. might have originally begun as a continuous rectangular polymer plane which was formed with internal and/or external coloration. The inventive image in Fig. 74.d. may be the finished image desired, but if it is not it may be further processed.

After forming the polymeric inventive image with coloration in Fig. 74.d., the image maker spontaneously adds more polymer onto this image extending it. As one example, a border or frame may be added made of polymer and/or another medium, e.g., a border or frame could be added, modified or removed as desired. In another example, the resultant image may be the one in Fig. 74.e. in which the width, the length and the height of the image in Fig.74.d. are all extended. Or, the resultant image may be the one shown in Fig. 74. f. in which the image in Fig.74.d. is extended both horizontally and vertically. Notice that on both of these reworked inventive images, the polymer added to its lower side which extends each of them vertically provides a method of displaying the image. Before or as this image is colored, texture might be added to it which could be modified or removed as desired. The ability to added polymer to this image spontaneously enables him to finish creating this inventive image as desired - working out the shapes of its coloration, its form, and the method of its display simultaneously, so as to judge these formal elements of the inventive image in concert, in a WYSIWYG format. Thus, because the formal elements of this image were workable, reworkable and controllable throughout the process of creating an image, the surface of this image, and its use of Compositional Arrangement and color, could be made and worked as desired, in concert with its structure, its perimeter shape, its use of space, etc., as desired. The formal elements of this image could be created and developed according to the image maker's vision, unrestricted by the limitations in many conventional media. Such workable, reworkable, and controllable ways of developing an image illustrated in Fig. 74. are not comparably available using permanent strong conventional image making practices, particularly if the conventional image is see-through.

Fig. 74.e. and f. shows two ways that the inventive image in Fig.74.d. might be further processed, with attachments and/or other changes. Fig. 74.e. shows the addition of five attachments onto the inventive image in Fig. 74 d., two on its front surface, one on its right side, one on its upper edge, and one on its underside which serves as a base for the entire image - its method of display. The inventive image in Fig. 74.f. is a way the image in Fig.74.d. might be further processed, with changes which involve the addition of two attachments to its underside which serve as legs, its method of display. One or more of the attachments made in Fig. 74. might for example, be bonded to this inventive image using screws and/or a bonding substance like cPRM or a glue. Either the inventive image in Fig. 74.e. or the inventive image in Fig. 74.f. might be the finished image desired, but if it is not, it may be further processed as desired. For instance, one or more attachments might be removed.

Processes for the removal of matter from polymer inventive images can create or affect other formal elements. In the following two examples, a very dark, translucent, phthalo green paint which evenly covers the entire polymer surface as a medium is partially removed. Example one, said polymer's green color is partially removed, evenly over the entire painted surface by sanding, sandblasting, beadblasting or by combinations of these. Once it is partially removed, said polymer's green paint is no longer just translucent, it is transparent. Its hue, its value and intensity changed too. Thereafter this medium can be further processed as desired, e.g. more paint can be added onto it, for instance a yellow wash might be applied over part of it using conventional practices.

Example two, said polymer inventive image's green paint is partially removed in an uneven manner which is deliberately controlled, so that this subtractive process simultaneously adds both a geometric design and a drawing of three apples onto this image. The paint removal which creates the geometric design is done by first sandblasting the polymer with selected parts of its green surface masked so that they are not changed by the sandblasting at all. The only parts of the polymer image's surface not covered with this protective mask are those areas exposed through its negative cut-outs. Thus these are the only areas which the subsequent sandblasting hits and abrades. Then, the mask and its adhesive are removed from the polymer and the green medium surface has its paint selectively removed on 25% of its surface in the desired geometric shapes which are higher in intensity and lighter in value than the color on the rest of this polymer surface, and they have become transparent while the rest of this image's surface has remained translucent. Then, a hand held Dremel tool and a variety its small sanding and cutting bits are used to incise a large drawing depicting three apples over said image's surface. Some of the incised lines of this drawing are then sanded and carved further so that they have different widths and different depths. As a result, of its variations, the incised lines of this apple drawing has multiple colors.

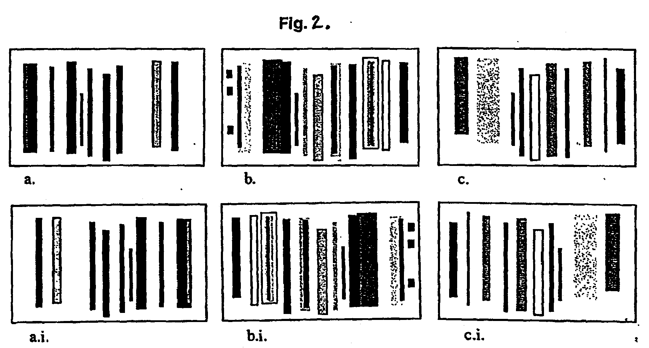

As a visual illustration, Fig. 2. shows how the formation of an inventive image using both additive and subtractive processes as desired, affords image makers use of formal elements that is new and unique, and opens up a wide range of new and unique images made using the present invention. A see-through, planar inventive image is made and used as an initial image support (e.g., a stabilizer) which will be further developed, with conventional applications of conventional painting and drawing media and materials (e.g. watercolors, oil paints, acrylics, tempera, encaustic, gouache, pencil, pastel, conte crayon, charcoal, etc.). This inventive image will be used as paper or canvas would be using conventional practices, but as the following description shows, the image making process can differ significantly from conventional image making. This inventive image is processed from both of its sides throughout its development. This Fig. 2. shows three stages in the development of this inventive image, each of which is shown from two opposite sides. These three progressive stages on one side of this image are labeled 2.a, 2.b. and 2.c., and these same three stages viewed from the opposite side of this image are marked 2.ai., 2.bi. and 2.ci. Fig. 2.a. and 2.a.i. show some applications of coloration and shapes on this image from both of its sides. This image can be made in a WYSIWYG process, the alteration of its parts can be viewed in relation to other parts and to the image as a whole. Even though it is rarely possible to remove marks in a controlled manner from many conventional images (e.g. to lighten them), even though it is rarely possible to completely remove marks from conventional images, and even though it is frequently difficult or problematic to rework marks on conventional images as desired, all of these kinds of processes can easily be done using conventional image making media and materials on polymers.

The second stage of this image's development in Fig. 2.b. and 2.b.i. shows that all of subtractive processes are used in developing this image. Coloration that was added has been removed and lightened. Among the new additions to this image, has been new cPRM used to fill in and level its surface as needed, e.g. due to removal of paint. Thus, there may not be any undesirably visible evidence of the removal of matter from this image. Working in this WYSIWYG manner allows spontaneity, and it enables work to be done according to the Principle of Whole Development and Unity, to the extent desired an in the manner desired. Working in this WYSIWYG manner also enables experimentation and risk taking that might not be done using conventional practices because using conventional practices such changes are often neither workable nor reversible as they are using the present invention.

The image maker continues to use both subtractive and additive processes, as desired in further processing this image as desired until it is formed, as in Fig. 2.c. and 2.c.i. The process of creating this image is new and unique in image making in many respects. For example, it is new and unique way of working with transparency and translucency, and it is a new way of using conventional image making practices, both of which open up the horizon for image making broadly. For instance, such an image painting can be made using applications of coloration which are all transparent, and as it develops, this image can be made darker and lighter, repeatedly, as desired, without limitations, problems or undesirable issues, even using conventional applications of conventional image making media like oil paints and watercolors.

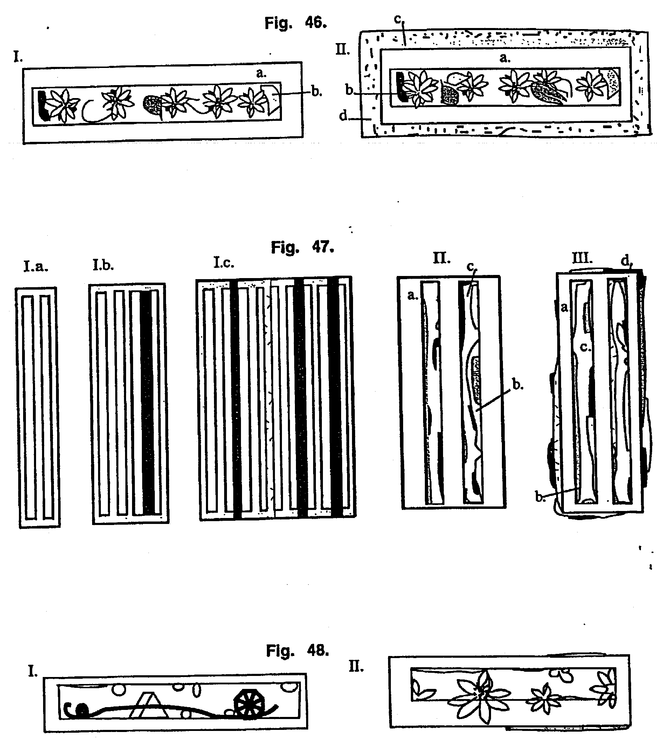

Fig. 46. and 48. show cross section views of images having a hollow space within their polymer forms with different aesthetic elements placed inside (e.g., flowers, paint layers, small objects, cut-outs, and other forms). In Fig. 46. I and II. the polymer medium is identified as a., and the elements with its hollow space inside are identified as b. These elements within this image's hollow internal space might or might not be secured to the polymer inside walls of this image. Fig. 46. I. may be the finished image desired. But if it is not, this image can be further processed, as desired. For example, a few holes made through the image might enable a medium to be added into its hollow interior space (such as an acrylic paint or cPRM), filling it up partially or entirely, as desired. In addition or instead, this image might be further processed by the superimposition of more applications on its external surfaces, as in Fig. 46. II. where a conventional application of coloration marked c. is superimposed on the upper side of this image (e.g. layer c. may be painting, drawing, collage, and/or photography). Then a layer of transparent polymer, marked d., with coloration only from dispersed particles in it is superimposed over the entire inventive image. This may be the finished image desired. If it is not, this image can be further processed, e.g. using additive processes, subtractive processes or both. Fig. 48.1. and II. show two different inventive images in cross section views, which both have a single internal hollow space surrounded by polymer walls. A variety of different items are secured to the internal polymer walls in the hollow space within each of these images, e.g. such items were installed on these polymer walls before they were connected into this images. These images might be finished, or further processed, if and as desired.

The inventive images shown in Fig. 47. might be made of connected image supports (e.g., stabilizers). For instance, these might be polymer image support stabilizers made of an absorbent polymer, or made with a surface preparation stabilizer upon them. Figs. 47. I. shows progressive image making from a. to c. in cross section or side views as more layers and more air pockets are added onto a hollow inventive image. Fig. 47. II shows a cross section or side view of another hollow inventive image. Its three polymer layers marked a. are white with black outlines, between them are two hollow spaces one of which is marked c., the side walls of which are used as four internal painting surfaces. One of these internal layers of paint is identified as b. This may be the finished image, or it may further processed as desired. Fig. 47. III. shows a different inventive image made of polymer marked a. shown in white with black outlines. This image also has two internal hollow spaces, one of which is identified as c., with side walls used as four internal painting surfaces identified as b. But unlike the images Figs. 47.I. and II., this image is further processed with multiple varied applications on its external surfaces, e.g., paint applications. Thus, this image might for example have four internal layers of transparent paint, two external layers of transparent paint and its external sides as painted layers too. In the images in Figs. 47.I.II, and III. the layers of coloration can superimpose one another without contacting one another, they are separated by negative spaces and polymer planes. Thus for example, with negative space or polymer planes separating layers of superimposed applications it would not matter if these superimposed applications (e.g., paint applications) follow any of the entire range of rules which govern and limit the direct superimposition of applications using conventional practices (such as fat over lean), it would not matter if these applications would be impermanent or if they would apply well if they were directly superimposed. The images in Fig. 47. can be further processed as desired, e.g., with more layers.

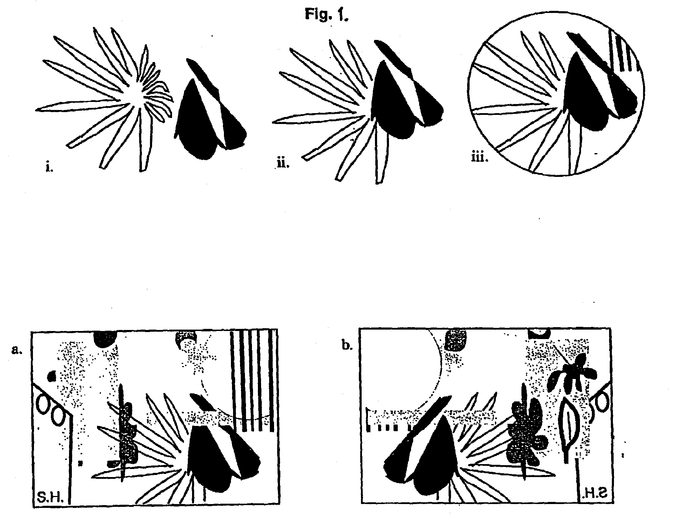

Fig. 1.a. and 1.b. show opposite sides of an inventive image with multiple layers of coloration applied on the external surfaces of a transparent colorless polymer initial image support stabilizer. Most or all of the external coloration applied on this image is opaque, thus its two opposite sides in Figs. 1.a. and 1.b., look related to one another, but very different. This inventive image might for example, be a painting (e.g., for viewing from one or two sides), it might function as a window, a room divider, a screen, a partition, a wall, etc.

Fig.1. shows the versatility of the medium of the present invention. Fig.1.a. and 1.b. are opposite sides of the same inventive image, e.g., a painting, a table top,a window, a screen a wall.
**1).** The inventive image in Fig. 1.a. and 1.b. might be made using mostly or only opaque colors on opposite sides of a polymer initial image support (e.g., stabilizer), e.g., its color is painted on, collaged on, printed on, drawn on, transferred on, and/or inlaid on, internally and/or externally. **2)** The forms illustrated in Fig. 1.i. might be two cut-outs made using the medium of the present invention, e.g., made using cPRM, made by cutting these shapes out of a polymer, made by using cPRM with non polymeric materials, etc. Alternately these two cut-outs might be made in a subtractive process from Fig. 1.a., from Fig. 1.ii., or from Fig. 1.iii. using subtractive and additive processes. One or both of these cut-outs may be completed images, or together they might form a single completed image made of two physically separate parts, e.g., using any mounting, framing or installation method. **3).** The image in Fig. 1.ii. might be a cut-out made by putting the two parts of Fig. 1.i. together. It might be made from scratch, e.g., cast as one form in a mold, or made by cutting the form out of a polymer plane, etc. It might be made by casting one of the two parts on top of the other. Or, the image in Fig. 1.ii. might be made in a subtractive process either from the image in Fig. 1.a., or from the image in Fig. 1.iii. **4).**The image in Fig. 1.iii might be made by adding matter extending and encircling the perimeter of the cut-out in Fig. 1.ii. or by a similar process adding matter, connecting and reshaping the cut-outs in Fig.1.i. It might have been made by collaging the cut-outs shown in either Fig. 1.i. or Fig. 1.ii. onto a circular image support. It might have been made using subtractive processes from the image in Fig. 1a. **5).** The inventive image in Fig.1.a. and 1.b. might be made as a development from the image in Fig.1.i., Fig. 1.ii. or Fig. 1.iii. or as a progressive development in which two or all three of these images are stages. **6).** The leaf-like part of Fig 1.i. (depicted by a black contour line) may be made of one continuous polymer rod, e.g., as a Drawing in Space. If this is not the finished inventive image desired, it might be further processed to form one of the other versions of this inventive image shown.

All of the variations of this inventive image shown in this illustration might be further processed as desired (e.g., with additional layers, using other additive processes, using subtractive processes, or a combination of these). The inventive image shown from two of its sides in Fig. 1.a. and b. might a room divider, it might be inserted as a wall segment, as a window or as a skylight; or it might be cut in half to function as a pair of doors or as a diptych.

Figs. 49., and 97.IV. show inventive images which have color in and/or on them in gradations. If both the cPRM used to make these polymeric compositions and any coloration applied onto their surfaces are see-through, light can pass in and out of their real spatial depth to varying degrees.

If the inventive images in Figs. 49., and 97.IV. with graduated color are transparent, translucent or both, they may have new and unique effects of light. If desired, these images might even be enhanced by having one or more light sources as part of them, e.g. behind and/or within them. For instance, Fig. 97.IV. shows a frontal or a side view of an inventive image with coloration in gradations which might for example be illuminated from behind e.g., by natural daylight, an EL lamp, standard light bulbs, neon, and/or fluorescent light (such as natural light during the day and an DEL lamp at night). Thus the coloration of this inventive image in combination with its transparent spatial depth and its illumination enables it to be very new and unique in its function for visual observation, as well as in its function as a wall, a sculpture, a ceiling, a floor, or a painting. An alternate interpretation of the inventive images in Figs. 49., and 97.IV. is that they are opaque polymeric forms made using the medium of the present invention, which may be internally and/or externally colored. For instance they might be opaque polymeric forms with additional layers of transparent cPRM superimposed upon them. Thus light would only be able to enter into a limited portion of their real spatial depth, though these surfaces and/or the initial polymeric image supports (e.g., stabilizers) beneath them might be iridescent, reflective or both.

Examples of inventive images formed using superimposed layers without any initial image support are inventive images formed by throwing, splattering and flowing cPRM on a mold which may not even have any side wall,s so that the resultant form is somewhat determined by chance, by the thrust of this process, and the viscosity of the cPRM). Fig. 6.X. illustrates an inventive image in a close up view which is made without any initial image support. Its colored cloud scene is formed using overlapping applications of cPRM, polymer (with a bonding substance) or both, which resemble conventional broken color applications, but without a canvas like support. In its entirety, this inventive image might for example be very small (e.g., 2" square) or very large (e.g. 7' high x 10' wide). This may be the inventive image desired, but if it is not, it may be further processed as desired.

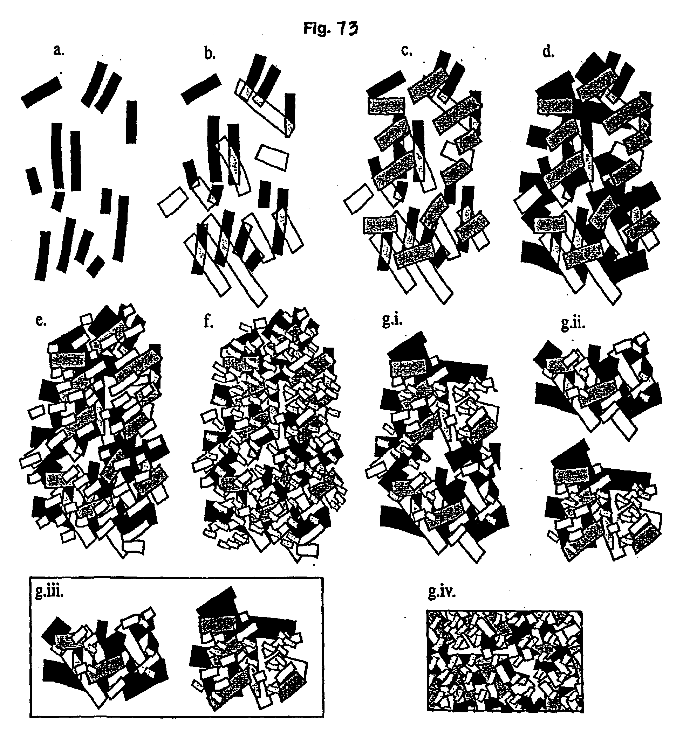

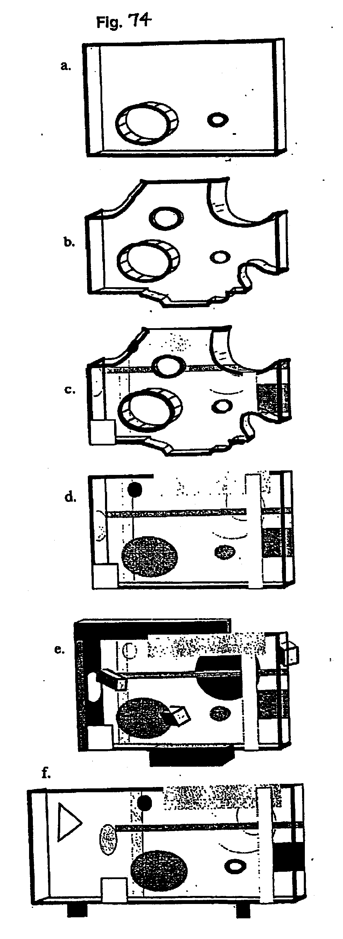

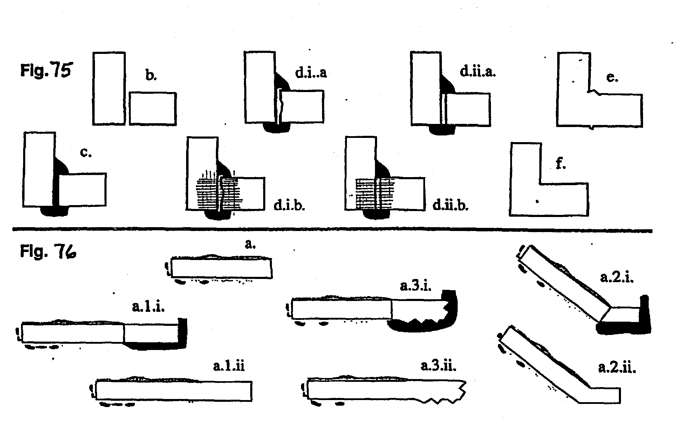

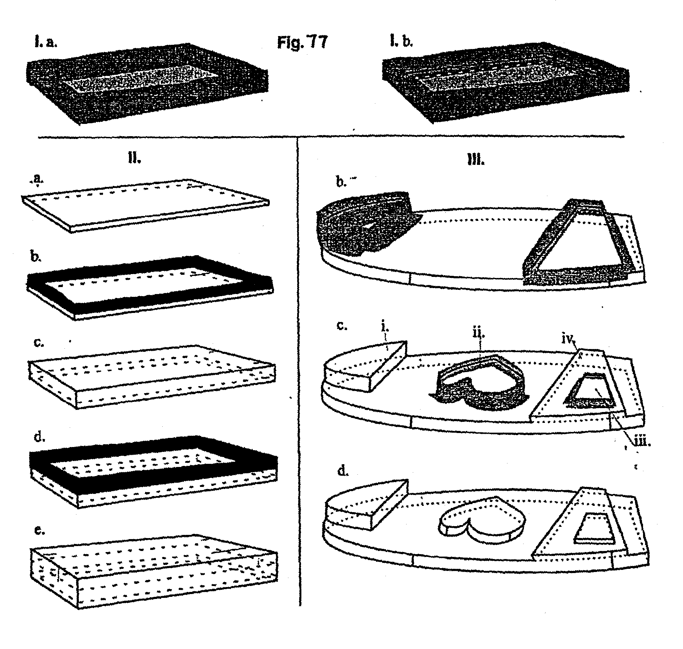

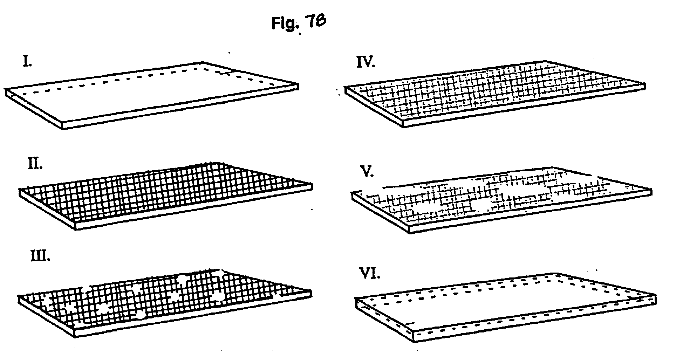

An inventive image formed using superimposed layers without any initial image support is in Fig. 73. The superimposed layers in the inventive image in Fig. 73 might for example be made of disconnected applications (such as normal size, large or very large broken color applications, e.g, of cPRM), and/or they may be made of separate parts (e.g., polymeric and/or non polymeric parts connected with a bonding substance). Fig. 73.a. shows an inventive image made of a Compositional Arrangement of multiple separate parts. This may be the inventive image desired, but if it is not it may be further processed as desired. For example, Fig. 73.b. shows a way in which another layer of disconnected applications and/or separate parts can be added to this image such that it partially overlays some of the separate parts in its initial layer. This may be the inventive image desired, but if it is not it may be further processed as desired. For example, a third layer of superimposed applications and/or parts can be added onto this inventive image as shown in 73.c. This may be the inventive image desired, but if it is not it may be further processed as desired. For example, this inventive image may be developed from its reverse side, with a new layer of superimposed applications and/or parts, as in Fig. 73.d. in which the reverse side of this inventive image is its underside. This may be the inventive image desired, but if it is not it may be further processed as desired. For example, the new layer added to this inventive image in Fig. 73.d. can be removed and the inventive image could return to the way it was in Fig. 73.c. As an alternate example, another discontinuous layer could be added onto the side of this image which is shown in the illustration in Fig. 73.e., making the inventive image denser. This may be the inventive image desired, but if it is not it may be further processed as desired. For example, the new layer added to this inventive image in Fig. 73.e. can be removed and the inventive image could return to the way it was in Fig. 73.d. As an alternate example, another discontinuous layer could be added onto the side of this image which is shown as frontal in the illustration in Fig. 73.f., making the inventive image even denser. This may be the inventive image desired, but if it is not it may be further processed as desired. For example, some of the applications which were layered in the formation of this inventive image could be removed, as illustrated in three variations in Figs. 73.g.i., g.ii., and g.iv. The inventive image formed in Fig. 73.g.i. has a negative space in the center of its form. Fig. 73.g.ii. shows this inventive image broken into two separate parts by the removal of some of its applications. These two parts in Fig. 73.g.ii. might either be two parts of a single inventive image, or they may be two separate inventive images. In Fig. 73.g.iv., the inventive image of Fig. 73.f. is cut down to a rectilinear shape. One of these images may be the inventive image desired, but if it is not, this image can be further processed as desired. For example, some or all of the applications removed from the inventive image might be added back to it again, either as they were before or in a different position. Alternately, the two separate parts of the image in Fig. 73.g.ii. might be connected by a single larger rectangular planar image support superimposed on or under them, as in Fig. 73.g.iii. In a further option, such as rectangular image support might be superimposed on either side of the inventive image in Fig. 73.g.iv. One of these images may be the inventive image desired, but if it is not, this image can be further processed as desired. Note that whereas this inventive image might function as a wall piece, a floor piece (e.g., sculpture) or a mobile in Figs. 73.a.-.c., in Figs. 73.d.-g.ii. the processing done to this same inventive image might make it more suited to function as a shaped painting, a sculpture or an irregular partition, and the processing done to it in Figs. 73.g.iii. and g.iv. might make it more suited to function as a painting, a table top, the surface of a bench, or a wall. Note that this inventive image in Fig. 73.giii. might have been made differently, though this alternative is not illustrated. For example, it might have begun on a planar initial image support. The versatility of the medium of the present invention enables such options. Figs. 71. and 72. described in forthcoming text, also show inventive images made using multiple parts without any initial image support.

In one example, all of the parts of an inventive image are connected to a single common part, e.g., an image support (which may or may not be a stabilizer), for instance, all of the parts are connected to a 2D or 3D polymer, to a piece of fiber, to a block of wood, to a sheet of metal, to a 2D or 3D mesh form, to a framework or lattice, to a common mount, frame or base (for instance, they all hang from a single mount), etc. For example, a fiber stabilizer is used as one part of a two part image support. On this fiber image support, a polymer part, a paper part and a plaster part are formed. A wire mesh is used as the other part of this same image support. On it a polymer part, a paper part and a plaster part are formed too. Three more polymer parts are formed, all partially on the fiber image support and partially on the wire mesh image support. Some of these parts are further processed, e.g. with superimposed layers of coloration, etc. In a third example, ten translucent and opaque paper parts are formed on cheese cloth image support, and painted with colored cPRM.

Inventive images can be made by one or by multiple image makers. In some embodiments, an image is formed by two or more image makers in a collaborative process. In other embodiments, an image is made by multiple image makers in a process which is not collaborative, e.g., in a process with little or no communication between the image's makers. For example, an image is made in a process in which at least one image maker works on it, either leaving it unfinished or completing it, and then transfers it to one or more other image makers who further process or rework it, perhaps completing it (without collaborating with the first image maker or makers). Then if desired, the second image maker (or the second group of image makers) might transfer this same image to a third image maker (or to a third group of image makers) who might further process it or rework it, perhaps completing it, without collaborating with any of this image's previous image makers. Such processes whereby an image is made, reworked, or both, by multiple image makers who do not collaborate with one another can be repeated as many times as desired, over any period of time.

As an illustration, images are processed with any specifications desired using any one or multiple methods, means and manners of the present invention. For example, these images may have a wide variety of different shapes, sizes, structures, forms, uses of coloration, light effects, other aesthetic specifications, they might have a utilitarian function in addition to their function for visual observation, etc. While some of these images are finished, and others are left unfinished as works in progress, all of them are transferred from their initial image makers to other image makers who have no contact with their initial image makers. For example, these images might be transferred from their initial image maker to a different image maker through an intermediary party who does not alter the image in any way, such as an image that is sold (e.g., at stores that sell conventional art and design supplies, at a gallery or art studio), an image which is transferred as an anonymous gift, or an image that is transferred as part of a procedure for making a particular work of art or design in which the contribution of multiple image makers is needed. Then, image makers who had nothing to do with making any of these images, reworks some of the finished image, and further processes perhaps finishing some, most or all of the unfinished image, as desired. Perhaps, along with one or more of these images, the first image maker or makers might also transfer instructions for its further processing which might be followed, adapted or ignored by the second image maker or makers (e.g., a template, a drawing, or instructions for painting, carving, mounting, adding polymer and non polymeric parts and layers to it, etc.). For example, images might be made as works in progress which are transparent or translucent 2D or 3D polymers. They may be image supports which may or may not be stabilizers. Then another image maker might purchase one of these images and further process it by painting, writing, printing, collaging, carving, cutting, adding parts (such as attachments, inlays, embedding, joined components, layers, sections, found objects, mounts, hinges, wire, other hardware, etc.), etc. Once these images are reworked, further processed or finished, some of them might have one or more functions in addition to their function for visual observation, which they may or may not have had before their transfer, or, some of these images might no longer have one or more additional functions which they had prior to their transfer. As another example, an image maker purchasing such an image support might decide that it is not an image support but a finished image without further processing and display it as such.

Both open and enclosed molds may be used to make inventive images, as well as molds that are partially open and partially enclosed. Fig. 89. shows an example of both an open mold in which cPRM polymerizes and an example of an enclosed mold in which cPRM polymerizes. Fig. 94. shows the formation of polymer in a mold that is partially open and partially enclosed.

The formation of an inventive image shown in cross section views in Fig. 89. V.-VIII. is an example of the formation of a polymer in an enclosed mold with multiple openings. Fig. 89.V. shows an enclosed mold with four openings (labeled a.- d.) before anything has been put into it. Fig. 89.VI. shows the same mold after it has been filled with some cPRM and two of its openings (labeled b. and d.) have been closed. The cPRM was poured into this mold from the opening labeled a. first. Once this cPRM reached the level desired within the mold at opening b., opening b. was sealed off. More cPRM was poured into this mold from the opening labeled c. Once it reached the level desired within the mold at opening d., it was sealed off. This illustration shows that this mold is already filled with cPRM to the level desired at opening a., thus opening a. is now ready to be sealed off. The level that the cPRM has reached within the rest of the mold is marked e. on this illustration. Fig. 89.VII. shows opening a. sealed off. It also shows that cPRM has been poured into opening c. to the level desired, but while all the other openings were sealed off to prevent them from leaking cPRM as higher levels of the image were poured, the level at opening c. is the highest level that this image reaches within this mold, thus there is no need to seal off opening c. Opening c. is left to vent air, vapors, gasses and/or heat, though the cPRM used does not give off substantial heat. Once it is determined through opening c. that the cPRM within this mold has gelled firmly enough to maintain its own form without the mold's upper half, it is carefully cut off, so as not to disturb the cPRM at all, as in Fig. 89.VIII., thus exposing the upper portion of the gelled inventive image. If desired, this inventive image can be further processed before it hardens. For example, alterations that can be made to gelled cPRM are described herein (e.g. carving and engraving can be done in gelled cPRM, materials can be stuck onto gelled cPRM, it can be inlaid, etc.). Once this iinventive image hardens enough so that it no longer requires the support of any mold, the rest of its mold is removed from it. The resulting hardened polymer image is not altered during its gelation stage as in Fig. 89.IV.

Fig. 89.IV. shows a polymer inventive image which can be formed identically, or as close to the same as desired, in a tiered process and in an enclosed mold (the use of an enclosed mold was previously described). The formation of the inventive image in Fig. 89.IV. using a tiered process is in Figs.89.I.- III. and VIII.

In Fig. 89.I., cPRM is applied in the lowest valleys of an open mold (the mold is shown in dark grey and the cPRM is white outlined in a black line). In Fig. 89.II. temporary clay walls are formed on the first polymer tier, so that the second polymer tier will form overlapping a portion of it, creating a connection seam between these two tier layers. This connection seam is visible in Fig. 89.III. where new cPRM has been added into the negative spaces formed by the temporary clay walls. But the seam line in Fig. 89.III. indicating the connection seam between the first and second tiers of polymer is not actually visible on this image because both of its polymer layers were made using either, the same cPRM, or different cPRMs of the same color which bond to one another. Also, notice that these is no seepage when its second tier is made. If there were seepage, it would be visible in Fig. 89.III. as cPRM that was added into the negative space formed by the temporary clay walls to form the second tier layer of this inventive image, which ran under the first layer of polymer, between it and the mold. If desired, once the upper part of this mold is no longer needed to support the cPRM within it, it can be removed, as in Fig. 89.VIII. This inventive image can be altered during its gelation if desired. However if it is not altered, the resultant inventive image will be as in Fig. 89.IV.

As an illustration, a mold formed using temporary mold walls on a flat mold surface,e.g., as the mold in Fig. 77.I.a. This mold is half filled with cPRM, e.g., as in Fig. 77.I.b. Then, once this cPRM gels enough so that it no longer needs side walls, they are removed. Once the polymer has hardened as desired, it is removed from its mold's surface, as in Fig.77.II.a. The resultant inventive image may be further processed if desired e.g., with applications of coloration or with more cPRM as in Fig. 77.II.b.-.e. As a second illustration, a single mold is subdivided with temporary oil formulated clay walls. Each subdivision is filled with cPRM to form several polymers simultaneously. Once formed the polymers might be used as separate inventive images. Or, they might all be connected into a single inventive image in a Compositional Arrangement which is different from the arrangement these parts would have been in, if polymer was formed in the entire mold without any subdivisions. As another illustration, temporary oil formulated clay barriers are used to subdivide multiple separate areas on the surface of a single polymer, so that more cPRM can layered in each of these subdivided areas, rather than over the entire polymer surface.

As a third illustration, Fig. 3. shows three different inventive images made by reusing and subdividing the same two molds. Fig. 3.a. shows an inventive image made of three separate polymer planes, each of which is cast separately in one of two different molds. The two wings of this bird inventive image are made as polymer planes in one of these two molds. The upper wing is a cast of the whole mold, and the bottom wing is a cast of part of the same mold, a part that is subdivided with temporary clay walls. This bird's body is made as a polymer plane in the other mold, the second mold. These polymer planes are bonded together at the angles desired in relation to one another, to make the 2D or 3D inventive image desired. The inventive image in Fig. 3.b., is made using the same two molds. Again both wings are cast in the same mold and the body of the bird is made in the other mold. But this time all of the polymer casts for this inventive image are made in subdivisions of the same two molds, as rods rather than planes, by subdividing these two molds using temporary clay walls before the cPRM is put in them. The polymer rods are connected at the angles desired in relation to one another, to form the inventive image.

The inventive image in Fig. 3.c., is made by reusing the same two molds, but subdividing them both differently. In this inventive image there are two birds made differently. 1). The bird on the left of this image is made by forming one wing in the same mold used to made the wings in the previous two inventive images. This wing is formed with this mold subdivided in a new way. The body of the bird on the left is made by subdividing the same mold used for the bodies of the birds in the previous two inventive images, in a new way. This mold is subdivided into four separate areas, but its central subdivision is not cast, it remains negative space on the image. Only three of its subdivisions are cast and they are each cast with cPRM of a different color. A darkly colored polymer rod is made as the underside of the bird. A lighter colored, rounded polymer form is cast for the bird's head, neck and upper body, and a third, lightly colored, rounded polymer part is cast for the bird's tail. As in Fig. 3.c., these three separate polymers are bonded to one another forming this bird's body, with an area of negative space left in its center (shown in white in the illustration). This bird's body is bonded to its wing and to the second bird shown at its right. 2). The bird on the right side of this illustration of Fig. 3.c. is made by casting a single polymer plane in the same mold used to the other bird wings without subdividing this mold. This planar polymer wing is bonded to the body of this bird which is made of two separate parts bonded to one another. The body of this bird is made by casting a colorless polymer rod in the same mold used for the previous bird bodies, subdivided. This rod will serve as the perimeter of this bird's body. It is connected to a part made separately, which forms this bird's breast. The bird's breast is a rounded volumetric part made with color in gradations which is cast in polymer by subdividing either of the two molds.

### Further Mold Variations

Inventive images can be made with aesthetic elements from the surfaces which they were formed upon, or which one or more of their parts were formed upon. Many of these aesthetic elements could not have been comparably brought to these inventive images in any other way. In one illustration, inventive images or part thereof can be formed on organic materials, natural materials or combinations of these, (whether they are polymer, and/or non polymeric parts). Also inventive images or part thereof can be formed on molds that are partially or entirely formed on organic materials, natural materials or combinations of these. As a specific illustration, either or both of these processes can be used to form inventive images or part thereof using Nymphaeaceae Victoria leaves (also known as Giant Water-lilies, Water Platters, and Amazon Water-lilies), in either or in both of its two species; Nymphaeaceae Victoria amizonica (also known as Nymphaeaceae Victoria regia, Amazon water-lily, Royal Water-lily, and Water Maize), and Nymphaeaceae Victoria cruziana (also known as Santa Cruz Water-lily and Victoria trickeri), or in any Nymphaeaceae Victoria hybrids, e.g., Victoria Longwood hybrid, all of which are referred to as Amazon Water-lilies herein. Though these particular leaves vary in their sizes, shapes and forms, any of these leaves, or any part or parts of them can be used as desired to make inventive images.

For example, inventive images or part thereof can be polymer negative impressions of Amazon Water-lilies (whole or partial). In addition or instead, inventive images or part thereof can be polymer positive replicas of Amazon Water-lilies (whole or partial). One or more parts of inventive images which are not principally made of polymer can be negative impressions of Amazon Water-lilies (whole or partial); positive replicas of Amazon Water-lilies (whole or partial), or they can be combinations of these, as desired. Also, the use of one or more selected parts of Amazon Water-lilies (rather than their entire forms) offers further variations, and further variations can also be made in other ways. For example, both Amazon Water-lilies, and molds taken off of Amazon Water-lilies can be altered to make a myriad of different aesthetic elements for using in inventive images. Specifically, for instance, the texture of an Amazon Water-lily can be flattened and simplified by filling its depth in partially, e.g., a bonding substance can be used to fill in half of the depth of the deepest negative spaces in the surface texture of a mold that is a negative impression of an Amazon Water-lily, along with some of its other details. (For instance, prior to applying cPRM on the surface of such a leaf, this surface might be sealed, e.g., all holes, tears and perforations might be sealed with oil formulated clay and then the entire surface might be sprayed with polyurethane. Then the leaf's surface might be covered with a release agent and the VIMC might be used to make sure that there is no excessive heat during the polymerization process.) The resultant polymer formed on this leaf's surface might be used as a n image support (e.g., an initial image support and/or an image support stabilizer) which is further processed on its front and/or back sides, e.g., it might be painted, drawn upon, written upon, printed upon, engraved, etc. If some the texture on this polymer which came from the Amazon Water-lily is undesirable, this texture can be reworked as desired, e.g., it can be filled in, polymer or non polymeric media can be added to it, it can be carved (for instance carved so that it is flatter or carved so that it is a different texture) or it can be further processed in a combination of these ways, as desired.

In cross section or side views, Fig. 92. shows an inventive image with an added layer of cPRM which is reworked during its gelation. Fig. 92.I. shows the an application of cPRM made within temporary walls (e.g. clay walls shown in light grey) on the upper surface of a preformed polymer of the same color. Fig. 92.II. shows that this new application of cPRM on top of the older polymer, has gelled firmly enough to maintain its form after its temporary mold walls are removed. Fig. 92.III. shows carving that is done in this gelled cPRM before it hardens. Fig. 92.IV. shows the hardened polymer inventive image with its carved upper surface (notice that because the newly formed application of polymer is the same color as the older polymer there is no seam between these two layers). This may be the inventive image desired, but if not, it can be further processed as desired. For instance, one or more of its parts (its older polymer, its newer polymer, or both) might be further carved, abraded or cut. Or, for example, the texture of this inventive image's carved polymer might be reworked by filling in some of its negative spaces with more cPRM as in Fig. 92.V. The spaces in this inventive image's carved surface which are partially filled in with new cPRM are identified in the illustration as a.- d. Fig. 92.VI. shows the resultant inventive image, with the spatial depth of its carved surface reduced. This may be the inventive image desired, but if not, it can be further processed as desired. For example, if the more deeply cut surface texture in Fig. 92.IV. is preferred, this polymer inventive image (in Fig. 92.VI.) can be reworked using one or more processes for removing matter from it (e.g. carving cutting sanding etc.) so that it is returned to the way it was in Fig. 92.IV.

Fig. 95 is made of illustrations A-H. each of which is a process shown in three parts, marked I., II. and III. In part I., of illustrations A-G. objects or mold parts marked b., contact cPRM, e.g., these objects might for example, be wood, metal, clay, plastic, etc. The surfaces upon which cPRM is forming are marked a., the cPRM is marked c., and any temporary clay walls or additional supports are marked d. The inventive images forming in part I. can result in either the inventive images shown in part II. or the inventive images shown in part III. The inventive images shown in part II. have indentations, hollow areas, negative cut-outs or holes made by the objects or mold parts which were in contact with their cPRM, but which were removed once their cPRM was firm enough to maintain its form as desired, e.g., these objects either released from the polymer or they were prepared so that they would release from the polymer. Alternately, the inventive images shown in part III. connected to the objects in contact with their cPRM, e.g., these were objects capable of bonding to the cPRM or these objects were prepared so that they would bond to the cPRM.

In Figs.95.A.I. and B.I., one or more objects or mold parts are placed on the cPRM once it has gelled enough to support their weight and maintain the position desired. The cPRM forming in Fig. 95.A.I. is formed on the surface of a mold, while the cPRM forming in Fig. 95.B.I. is forming on the surface of an inventive image. Among the ways the processing of the inventive images shown in A.I. and B.I. can progress, are the following two options marked A.II. and B.II. In A.II. and B.II., the added objects or mold parts are removed from the inventive image along with the rest of their molds, either once the cPRM gelled firmly enough so that its shape would not change undesirably, or once the polymer hardened (e.g., these objects might have been selected or prepared with a release agent so as to release easily). Thus, these two resultant inventive images are visible with indentations in A.II. and B.II. either as hardening cPRM or as a polymer. Alternately, these added objects might attach to the cPRM and become part of these inventive images, as shown with their molds removed in A.III. and B.III.

Unlike the illustrations in Figs.95.A.-B., Figs.95.C.- H. show inventive images altered during the formation of their polymer by objects or mold parts which do not rely on the support of the cPRM or the polymer at all. Thus, the positions of these objects or mold parts is not dependent on the cPRM, it is more stabile. These objects or mold parts may be set in their positions over the space which will receive the cPRM application, before cPRM is applied, as cPRM is applied, after cPRM is applied (e.g. before or during gelation) or at a combination of these times, as desired. In Fig. 95.C.I. a mold is formed on a existing inventive image using temporary mold walls. An object or mold part is suspended over the negative space of the mold before cPRM is applied, as cPRM is applied, after cPRM is applied (e.g. before or during gelation) or at a combination of these times, as desired. This illustration also shows an application of cPRM on the inventive image within its temporary mold walls which the object or mold part is suspended and inlaid in. Once this new application of cPRM hardens, the object or mold part suspended over might be removed along with its temporary mold walls resulting in the inventive image in Fig. 95.C.II. which has an indentation where the object or mold part was suspended in the new application of cPRM on this inventive image. Alternately, this suspended object might bond to the cPRM it is in contact with, resulting in the inventive image shown in C.III. (with its mold removed).

Fig. 95.D.I. shows a mold that has an object or mold part suspended in the cPRM forming in it. Once this cPRM hardens, the polymer is removed from its mold. The resultant inventive image may be the one in Fig. 95.D.II. in which the removal of the suspended object has made a large hollow negative in the form. Alternately the resultant inventive image may be the one shown in 95. D.III. which shows that the object that was in contact with the cPRM, has bonded to it.
Fig. 95.E.I. is the same as Fig. 95.D.I. except the suspended object in contact with the cPRM is supported from structures on two sides of its mold. Once the polymer forms and the inventive image is removed from its mold, it may look like that in Fig. 95. E.II. in which the resultant inventive image has indentations in it formed by the suspended object or mold part which was removed. Or, the resultant inventive image may be that shown in 95.E.III. which bonded to the object in contact with its cPRM.

In Figs.95.F.I. and G.I., the objects in contact with the cPRM are held up by the mold's side walls. But because the object in Fig. 95.F.I. is only held up from one side of the mold, it may rely partially on the cPRM to support its weight and keep it in the desired position. Thus, to the extent that this object or mold part relies on the cPRM for support, the cPRM has to be firm enough to provide the necessary support to form the indentation desired. Once the cPRM of these inventive images harden, they are removed from their molds. 95. F. II. and G.II. show the indentations formed on the resultant inventive images if the objects upon their forming cPRM are removed after their polymer formed around them. Alternately, Fig.95.F.III. and G.III. show the resultant inventive images if they bond to the objects placed upon their forming cPRM.

In Fig. 95.H.I. three objects (shown in white) are stuck upright on or in this mold's bottom surface which holds them in the desired positions. The mold contains an application of cPRM which might have been added in the mold before the objects were put in, as the objects were put in, after the objects were put in or at a combination of these times. Once the cPRM is gelled firmly enough, or once it has hardened into polymer, the inventive image is removed from its mold. Fig. 95.H.II. shows that two of the objects stuck in the mold are removed (as if they were part of the mold), leaving holes in the formed polymer, but the third object bonded to the polymer and thus is part of the inventive image. Fig. 95 show this inventive image further processed from its opposite side, e.g., rectangular colored shapes are added onto it. All of the inventive images formed in Fig. 95. might be finished inventive images desired, but if one or more of these images are not finished as desired, they may be further processed as desired.

As another illustration, an inventive image box is made of polymer using the method in Fig. 95.D.I and D.II. to make its four sides and its bottom, and forming its top or lid separately. Then the lid is hinged onto the lower portion of the box using conventional practices.

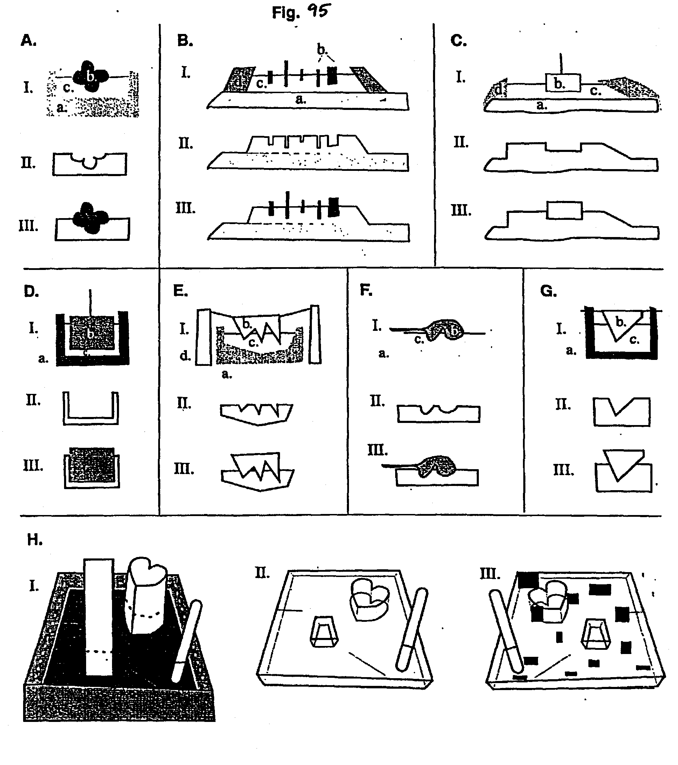

Fig. 90. shows the formation of an inventive image using a tiered process, in which the mold is tilted multiple times. Fig. 90.I. shows a mold which is partially filled with cPRM. (The mold is shown in black and the cPRM is shown in white outlined in black.) After this cPRM gels firmly enough to maintain its form as desired and is no longer giving off noticeable heat if it did do this during its polymerization, e.g. during gelation or once this first layer of polymer hardens, temporary mold walls (shown in grey in these illustrations) are added on both this first tier layer and on the mold to form the second tier layer. The mold is tilted and new cPRM is applied in a second tier layer which superimposes the first tier layer of polymer with a connection seam, as in Fig. 90.II. Though the connection seams between the overlapping tier layers are indicated in these illustrations, they are not visible in this inventive image because both layers are made using cPRM of the same color. The tilt of this mold may be varied in order to apply all of the cPRM on a level or more level surface. Also, though the tilt of this mold is supported, its support is not shown in this illustration. Notice that no seepage of the cPRM from the second tier layer seeps between the first tier layer and the mold. These temporary mold walls are totally removed and the mold is returned to a horizontal position anytime after the cPRM has gelled firmly enough so that it is not undesirably effected by these changes. Then, this mold is tilted in the opposite direction; new temporary mold walls are built on both the newly formed tier layers and on the mold; and a third tier layer is formed on this inventive image using new applications of cPRM, as in Fig. 90.III. Again, though the connection seams between overlapping tier layers are indicated in these illustrations, they are not visible in this inventive image because they are made using cPRM of the same color. Again, the tilt of this mold may be varied in order to apply all of the cPRM on a level or more level surface. And again, though the tilt of this mold is supported, its support is not shown in this illustration. Notice again that no seepage of the cPRM from the third tier layer seeps between either of the previous tier layers and the mold. These temporary mold walls are totally removed and the mold is returned to a horizontal position anytime after the cPRM has gelled firmly enough that it is not undesirably effected by these changes as in Fig. 90.IV. The resultant polymer inventive image is in Fig. 90.V. This may be the inventive image desired, but if it is not further processing can be done as desired. For example, this inventive image can be reinforced on one or more side with a layer of fiber as described herein. It can be colored as desired. Or, for example, some or all of the sharp angles on this inventive image can be made smoother using one or more processes that are additive and/or subtractive.

Fig. 91. shows the addition of polymer to a polymer inventive image using a tiered process. Fig. 91.I. shows the addition of cPRM into a temporary mold made on a preexisting polymer inventive image using temporary mold walls, e.g. made of clay. In this illustration, the polymer inventive image is the lower layer which is a 2D or 3D irregular oval form. On top of this inventive image, the temporary mold is shown in grey, and the new application of cPRM is shown within this temporary mold on this inventive image in white with a black outline. As soon as the cPRM within the temporary mold on this inventive image gels firmly enough to maintain its form as desired, this temporary mold is removed, as in Fig. 91.II. Though the image maker might have left the edges of this new layer of polymer harden as they are in Fig. 91.II., he prefers to smooth these edges by cutting the gelled cPRM before it hardens, as in Fig. 91.III. Though this might be the inventive image desired, this image maker prefers to add a second tier layer on top of it, as in Fig. 91.IV. Fig. 91.IV. shows new temporary mold walls on the previously formed polymer layer in grey and it shows the negative space within them filled with cPRM. Again, the temporary mold walls on this inventive image are removed, as in Fig. 91.V., as soon as the cPRM within them gels firmly enough to maintain its form as desired without them. Again, though the image maker might have left the edges of this new tier layer of polymer harden as they are in Fig. 91.V., smooths them by cutting the gelled cPRM before it hardens, as in Fig. 91.VI. After viewing this inventive image, the image maker desires that this new part of it be made even higher, but this time he desires that it also be angular rather than smoothed. Thus, Fig. 91.VII. shows a new third tier layer being formed on this inventive image on top of the previous two tiers, using cPRM applied within temporary mold walls. The temporary mold walls on this inventive image are removed anytime after the cPRM within them gels firmly enough to maintain its form as desired without them, but this time their angular tier edges are left alone because their shape is desired. The resultant image is in Fig. 91.VIII. Fig. 91.IX. shows how this inventive image would have looked if the tier edges of all of these three new polymer layers were left with angular tier edges, rather than cutting and smoothing out two of the three.

Fig. 98.a. shows an inventive image belt comprised of a rigid polymer buckle on a flexible belt. This belt buckle was made using a tiered process in which five, increasingly smaller, differently colored polymer tiers were superimposed, on each of two rectangular polymer surfaces. A similar concept was used in the design of the three inventive images in Fig. 50. All of the squares in these three images are tiered layers superimposed upon one another, as are marked a.- e. in Fig.50.I. The tier layers of the images in Figs. 98. and 50. are part of their form giving them real spatial depth and contributing to their visual movement, and perhaps with other special effects, such as reflectivity, matte and glossy surfaces, transparency, color within its real spatial depth, etc.

Different processes of removing matter from polymer or from other parts of inventive images can be used as desired, for instance, to create different effects, e.g., sandblasting, carving, cutting, engraving, sgraffito, incising, drilling, etc. For instance, a Paasche "AEC Eraser Set" described herein might be used for this purpose. Different effects of color in a polymer can also be created by removing matter from a cPRM at different stages in its polymerization. For example, at the end of its gelation, some kinds of carving are easier and more effective than at other times in its gelation. Different effects of color can also be created in an inventive image by removing polymer and/or non polymeric matter from it, e.g., at different times during and after its process of drying, curing or hardening.

Figs.25.a, 25.b., and 26. show three inventive images in cross section or side views, all of which have these new unique polymer imprimatura of a different thickness as their central layer. For example, these imprimatura may be initial image supports, e.g., which may be stabilizers. Thus, all three of these imprimatura provide structural support to their respective inventive images, enabling them to be further processed on all of their sides, and further applications are made on both the upper and the lower sides of all three of these images and on the side edges of Fig. 26. As another example, these imprimatura may be surface preparation stabilizers on image supports which may also be stabilizers. As a different kind of example, the inventive images shown in cross section or side views in Figs. 19.a.- c. and 20., are made on conventional image supports or on conventional images which serve as image supports (such as inventive images made on paper; canvas; a drawing, e.g. a pastel or pencil drawing; a painting, e.g. an oil or watercolor painting; a photograph; a print, e.g. an etching, lithograph or silkscreen; a piece of wood; a piece of glass; a board, etc.). These inventive images have new unique polymer imprimatura over their internal, conventional image supports (rendered in white with black outlines) directly and completely covering the innermost (conventional) part of each of these inventive images. These polymer imprimatura may form and/or fortify the structure of these inventive images to any degree, and because cover all sides of these four iinventive images, they can function as imprimatura on all of their sides. The inventive images in Figs. 19.b., 19. c. and 20. show further applications superimposed on these imprimatura. In another example, the inventive images in Figs.150.-153. might have new unique polymer imprimatura with transparent and translucent coloration in gradations.

For instance, a polymer ground might have one or more dissolved or dispersed dyes or pigments; it might have dispersed particles of sand, metal, light reflective materials, paper pulp, sawdust, polymer, conventional image making materials, etc. A ground made in these embodiments may be a surface preparation stabilizer on an image support which may also be a stabilizer. Alternately, a ground made in these embodiments may be an image support which may be a stabilizer. An illustration of such a new unique ground is shown in a cross section or side view of an inventive image in Fig. 24. The image in this illustration has texture in it from particles that are in its ground, and a further application (e.g. a layer of transparent paint or other coloration) on its textured ground on both its upper and its lower sides. If the internal image support in Fig. 23. in cross section or side view, is completely opaque, it may also be a new unique ground, but without texture. This ground also is further processed, it has another application superimposed on all of its sides (e.g. paint or other coloration).

Fig. 24. previously described is an inventive image with a new unique polymer ground. The texture of this ground is comprised of embedded particles which were mixed into the cPRM that formed this ground, inlaid particles which were stuck into this ground when it was gelled cPRM, and attached particles which were adhered to the hardened ground of this inventive image using a bonding substance, e.g. using the same cPRM, or using a bonding, similarly colored cPRM as a glue.

The inventive image in Fig. 51. might be made using transparent polymer plane such that the areas shown in black and white are 0.5" lower than the areas shown in gray. The design on this image made of two different levels of spatial depth might, for example, have been made by the mold that this polymer was formed in , it might have been carved or sanded, it might have been formed by layering polymer cut- outs 0.5" thick on larger polymer sheet, or it might have been made in a combination of these ways. The actual coloration of this image might not be as shown in this illustration, e.g., its color might be uneven, transparent, metallic, internal, external on one or both sides, etc., as desired. This inventive image might be used as a printing plate and/or as an inventive image itself. As an alternate example, the pattern shown of the inventive image in Fig. 51. might be printed on a colorless image support stabilizer. Other examples of inventive images which might be printed are: the text in Fig. 16.; the cloud filled sky on the inventive images in Fig. 6.I.- IV., IX., and .X.; the graduated coloration shown in the inventive image in Fig. 97.IV.; the abstract coloration on the inventive image in Fig. 102. and the patterns shown in the inventive images in Figs. 50., 105., and 915.

In some embodiments, inventive images are made that have at least their two largest sides essential to their coloration and their aesthetic. Also, in some embodiments, colored image supports (e.g., stabilizers), are made which have at least their two largest sides essential to their coloration and their aesthetic. These inventive images and image supports may or may not have coloration in other locations (e.g., on edges, other parts, attachments, internal coloration, colored lighting, etc.). For example, they might be 2D or 3D; planar and/or volumetric, and transparent, translucent, opaque or a combination of these. If desired, they may be displayed so that two or more of their colored sides are visible, though they may or may not have a clearly distinguishable front and back sides. Examples are inventive images and image supports that function as: drawings, paintings, prints, sculpture, images with writing, graphic art, tiles, partitions, windows, doors, table tops, walls, screens, etc.

Inventive images made in some embodiments are writing surfaces, they have writing, or both. For example, inventive images or part thereof, are written works of all kinds, some of which have illustrative art and designs e.g., new kinds of graphics, illuminated manuscripts, tablets, scrolls, and books. For instance, methods, means and manners of drawing described herein can be used (e.g., adapted if necessary), to write on inventive images surfaces, as desired. The inventive image surfaces which are written upon can be of any description, e.g., transparent, translucent, opaque, partially opaque, they can have negative cut-outs, texture, perforations, they can undulate. Further, these images can be developed in any manner desired and to any extent desired, before they are written upon, as they are written upon, after they are written upon, or at a combination of these times. Inventive images with writing can also have images on them (e.g., drawing, painting, etc.) and/or one or more parts without writing, as desired. Inventive images can have words, letters or both, formed in ways other than by writing, e.g., printed, painted, embossed, carved, incised (for instance, in the form of sgraffito, engraved or both), made by embedded materials, formed by inlays, brought to it by attachments (such as collaged pieces of newspaper), brought to it by photography, brought to it by found objects, brought to it by other non polymeric parts, etc. A mold can make raised or indented words on the inventive image surface, e.g., polymer surfaces, non polymeric surfaces such as paper, or both. The forms of inventive images or the form of parts of them can be made in the shape of one or more letters or words.

In some embodiments, inventive images are made which are books. These images might for example have their outside cover and/or some or all of their pages made of flexible and/or rigid polymer. As an illustration, planes of polymer are used to make inventive image books. For example, an inventive image book is made with printed text and graphics, on both sides of six translucent pages, each of which is made using a cross linked polymer of the present invention with a layer of fiber embedded medial within their quarter of an inch thickness that is not visible to viewers. This book might be bound using conventional practices. If desired, additional text, graphics, or both can be engraved on the pages of this book, photographic transparencies can be added to this book, this book's text and/or graphics can be embedded, this book might have other special light qualities and effects, etc. As a second example, an inventive image children's book is made which uses its transparency, translucency, spatial depth, layers, pages, negative cut-outs, coloration, embedding, other new and unique qualities and effects, or a combination of these in a playful manner. For instance, as many conventional children's books, an inventive image book can be made which plays a peek-a-boo game as its pages are turned, e.g., through the cover and/or current page, a hint of the following page is visible, for instance due to the transparency and/or translucency of the polymer, and/or due to perforations and cut-outs. As a third example, an inventive image book is made which uses see-through pages made using polymer of the present invention, to change a form as its pages are turned. For example, an inventive image book with transparent and/or translucent pages colored on both sides might present a complex design or subject to viewers which is formed by the superimposition of all of its pages. As its pages are turned, new images are continuously being formed, its complex design becomes increasingly simplified on the book's right hand side, as a new image is formed and becomes increasingly complex as the turned pages stack up on the book's left hand side. As a fourth example, an inventive image book, card, envelope, or page can be made which unfolds into a 3D form, e.g., an inventive image book or greeting card made of rigid and/or flexible polymer expands like an accordion, or has pop-out parts.

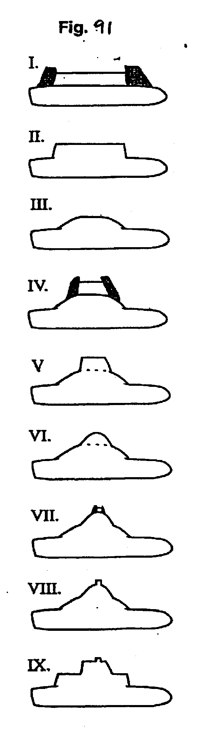

Figs. 85. i.- m. show a variety of examples of inventive image books, with covers and pages made of rigid and/or flexible polymer and/or non polymeric ingredients (e.g., conventional paper or board, cardboard, mat board; rubber; fabric; metal , or a combination of these, such as cardboard covered with silver leaf). The binding of these inventive image books may be made of polymer and/or conventional binding.

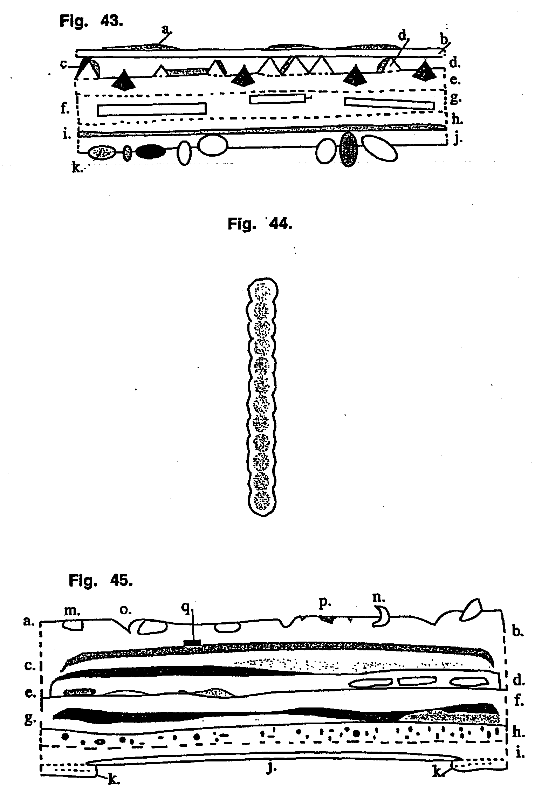

In Figs. 43. and 45. cross section or side views are shown of layered inventive images which have letters on their right and left sides marking their horizontal superimposed layers. As an example, all of those layers identified by a letter on their right side might be polymer layers, and those layers and elements identified by a letter on their left side might generally, but not exclusively, be entirely or principally non polymeric. Some of these inventive images also have other letters with varying references. To make the inventive image in Fig. 43., the polymer layer labeled h. is formed first. On the upper side of layer h., a second polymer layer is made labeled g. Once the cPRM of layer g. gels, but before it gels firmly, three non polymeric rectangular items are embedded in it in different positions, e.g., embedded pieces of mirror or glass. Once layer g. hardens, the layer of coloration labeled i. is made on the reverse side of polymer layer h. Though layer i. is non polymeric, some or all of it bonds to the polymer of this inventive image. Layer i. might for example be comprised of paint, a photograph, and/or collaged paper. Then the polymer layer e. is made on polymer layer g. Once the cPRM of layer e. gels, four darkly colored, pyramid shaped inlays are put into it. Once layer e. hardens, five small temporary molds are built on its surface (e.g. in the manner in Fig. 77.III. described herein), and filled with cPRM which hardens forming five textural protrusions, collectively referred to as layer d. With these molds removed, the five hardened polymer protrusions of layer d. are carved and/or sanded into seven, pointed textural protrusions extending up from layer e. Then, some of the texture of layer d. is painted various colors. These painted applications on layer d. are collectively labeled c. The only way that this bonds is by adhering to the SSI on textured layer d. formed by carving and/or sanding it. The SSI on the unpainted surface areas of layer d. are filled in and smoothed out with a painted application of the same cPRM used to make them, thus they return to the degree transparency they had before they were carved and/or sanded.

On the reverse side of this inventive image, shown in this illustration as its underside, a new layer of polymer layer j. is formed on layer i. which bonds to layer i. in the same manner as layer h. After layer j. hardens, eight negative spaces are carved and/or sanded into it, and eight non polymeric inlays, collectively labeled k., are inset into them. They are bonded to this inventive image using the SSI left on the surfaces of these negative cavities by sanding and/or carving, and a bonding substance which adheres to each of the eight inlays. The bonding substance not only adheres these eight inlays to SSI lining the negative spaces in which they are inlaid, it fills in all of the remaining negative space around these inlays in these cavities. Meanwhile separately, a new thin, planar layer of polymer is formed for the upper side of this inventive image. Once formed, it will be attached to this inventive image as its layer b. This layer b. is attached to the some of the high points of the texture of layer d. using cPRM. The negative spaces within the texture of layer d. are now air pockets between layers d. and b. The exposed side of layer b. is then superimposed by non polymeric applications of coloration, collectively labeled a., that bond to this inventive image in the same manner as layer i.

The inventive image in Fig. 45. is begun by first making the polymer image support layer h. which is formed with colored particles embedded in it mixed into its cPRM. Then, non polymeric layers of coloration collectively labeled layer g. are made on layer h. For example, the layers of layer g. might be bonded to one another using conventional practices (e.g. layers of conventional paint or collaged layers glued together) or the layers of layer g. might be placed upon one another but not bonded to one another. Also, for example, layer g. might be partially or completely made of non polymeric ingredients which bond to the polymer of layer h., it might have SSI bonding it to layer h., layer g. might be bonded to layer h. using other methods, or layer g. may be upon layer h. without being bonded to it at all (e.g., if layer g. is made of paper and no bonding agent is used to adhere it, or if layer g. is made of a paint which is incompatible with layer h.). Layer g. is then superimposed by a new layer f., which is made of the same cPRM as layer h. but without any coloration in it. Layer f. encases and embeds layer g. in this inventive image by bonding to the edges of polymer layer h. Thus, if before layer f. was made, layer g. was not bonded to this inventive image, or layer g. was not bonded as well as desired to this inventive image, once layer f. is made, layer g. is mechanically bonded to this inventive image because it is embedded in it. Layer f. may or may not bond or bond well to layer g.

Next, the exposed hardened polymer surface of layer f. is further processed. Layer f. is superimposed by three applications of non polymeric coloration (shown on the left side of this illustration, e.g. applications of a conventional paint), and three non polymeric colorless, transparent items which have no SSI (shown on the right side of this illustration, e.g., pieces of crystal). These six additions, collectively referred to as layer e., are encircled by a temporary mold wall which almost encompasses the entire surface of layer f. When this temporary mold is filled with a cPRM that bonds to layer f. (which is not the same as the polymer of layer f.), all layer e. becomes embedded. Once the support of this mold is no longer needed it is removed, leaving the newly formed firmly gelled layer d. While layer d. is still wet, multiple colored non polymeric superimpositions are made on it collectively labeled layer c., e.g., layers of paper, metal, paint, photographs, board, leaves, fabric, fiber, etc. The other layers in layer c. are connected to one another using conventional practices, but they are not bonded to this inventive image as well as desired. For instance, one of the elements of layer c. which is labeled q., is only loosely bonded to the rest of layer c. beneath it. Once layer b. is superimposed, layers c and d. become embedded in this inventive image. Layer b. is made of a cPRM that bonds to the polymer of layer f., but which is not able to bond to the different polymer of layer d. Layer b. bonds to this inventive image principally by bonding to layer f. around the perimeter of the embedded layers c. and d.

Once the polymer of layer b. hardens its surface is changed. These changes are collectively referred to as layer a. First, this polymer surface is carved. Some of this carving is left as negative spaces on this inventive image surface, either leaving the SSI from the carving process of their formation, or with their SSI sanded smooth and then its shallow abrasions filled in with an application of cPRM which is so thin that it does not noticeably alter the shapes of these carved negative spaces. In other carved areas on the surface of layer b., inlays are installed. Some of these inlays are flush with this inventive image's external surface e.g., the inlay labeled m., while other inlays protrude from it, e.g. the inlay labeled n. A few other carved negative spaces in this inventive image surface are filled in with coloration which adheres to the SSI formed by carving, e.g., the painted areas labeled p.

On the reverse side of this inventive image, a lens labeled j. is inlaid. This is done by forming layer i. on layer h. using the same cPRM that was used to make layer h., but without the coloration added into it. Once layer i. gels firmly, the convex side of lens j. is placed on it and pressed into this gelled cPRM, just enough for its curved form to rest in an indentation in layer i., but not enough for cPRM to spill over the edge of lens j. onto its concave, exposed side. If desired, as a precaution, a release agent such as petroleum jelly, may be applied over the entire concave side of lens j. before it is added to this inventive image. Once the polymer of layer i. hardens with lens j. in it, the release agent might be removed from the perimeter edges of lens j. so that a polymer rim can be formed around lens j. to hold it onto layer i. securely. The polymer rim labeled k., is made encircling the entire perimeter of lens j. In making rim k., a layer of fiber is embedded within it, indicated in this illustration by a grey dotted line in rim k., even though this embedded fiber is invisible within this inventive image.

### Connecting Parts

In Fig. 75. two separate parts are connected to form the single inventive image shown in either 75.e. or 75.f. Both of these two parts may be polymer, or one may be polymer and the other non polymeric, e.g. wood, or cast paper. They will be connected using a bonding substance such as cPRM, however, if one or both of these two separate parts does not bond well to the bonding substance (e.g. if one is an old polymer or if one is non polymeric), the area on its surface which will be in contact with the bonding substance is abraded, so that its SSI will bond well with the bonding substance being used. All of the views in this illustration are aerial views. Fig. 75.b. shows the two separate parts placed in the desired arrangement in relation to one another, leaving a negative space in between for the formation of a connecting seam joining them. Fig. 75.c. shows a temporary mold (in black) connecting the two inventive image parts in the position desired, leaving the negative space in between them empty for the formation of the connecting seam. This temporary mold is sealed well to both parts of this inventive image, and the surfaces which will come into contact with the bonding substance are cleaned well. Once the bonding substance is put into the negative space between the two parts which is surrounded by the temporary mold, it may look like either Fig. 75.d.i.a. or 75.d.ii.a. Fig. 75.d.i.a. shows that the mold does not enable the side edges of the connection seam to form perfectly aligned with the sides of this inventive image and the bonding substance overflows the mold's negative space a little. Fig. 75.d.ii.a shows the negative space within the mold enables the bonding substance to form a connection seam with side edges which are perfectly or near perfectly aligned with the sides of this inventive image and the bonding substance is added into the negative space of the mold with its upper surface more or less level with the upper surface of this inventive image. The use of fiber is optional. Refer to the description in Figs. 75. d.i.b. and d.ii.b. herein. Whether or not fiber is used, once the connection seam has formed and the mold is removed, Fig. 75.d.i.a. will look like Fig. 75.e. and Fig. 75.d.ii.a. will look like Fig. 75.f. The inventive image in Fig. 75.e. has some irregularity in the joint formed, which may or may not be desirable. The inventive image in Fig. 75.f. has little or no irregularity in the joint formed. If this inventive image comes out as in Fig. 75.e., and this irregularity is not desirable, this image can be made into the image in Fig. 75.f. using subtractive processes such as sanding or carving, as desired.

Fig. 77., previously described, shows the addition of new polymer parts on a polymer inventive image. New polymer parts can be formed on non polymeric inventive image surfaces using this same process, e.g., if this surface will bond to the cPRM; if this surface has SSI; or if SSI are made on this surface. Fig. 76. shows the addition of a new polymer part on a polymer inventive image using a temporary mold built on the polymer inventive image. Though each of the polymer images in Figs. 76.a.1., a.2. and a.3., already have superimposed applications of coloration on multiple sides, these illustrations show the formation of a new polymer part on a side of each of these polymer inventive images which has nothing on it. A new polymer part might also be formed on any other side of these images, even though they already are superimposed by coloration. For example, if possible, cPRM might be used which bonds to the coloration on these sides of the inventive image in Fig. 76. Some or all of this coloration might be removed so that new cPRM will bond to the polymer beneath it using one or more processes for removing matter from inventive image (such as sanding or sandblasting). Then if desired, the resultant bare or partially bare polymer surfaces of an inventive image can be superimposed with colored cPRM to replicate the coloration that was removed. With or without this coloration, the new polymer part can be added. A third example of a method which may be used to add a new polymer part to non polymeric inventive image surfaces with coloration which does not bond to cPRM is using bonding spots described herein.

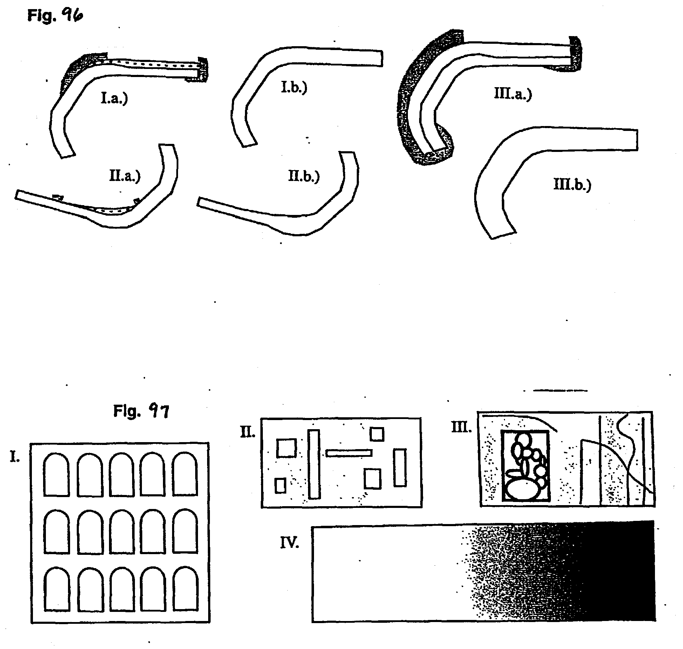

Fig. 93. shows two, colorless, transparent, planar polymer inventive image which are triangular 2D or 3D forms, connected by the formation of third polymer part that is rectangular, in between them. The initial two polymer inventive image parts are in Fig. 93.I. Fig. 93.II. shows the rectangular mold formed in between these two triangular parts, which is well sealed to both of them. The mold's bottom surface is shown in black and its side edges are shown in grey. An application of cPRM is shown in this rectangular mold, but because it is transparent colorless cPRM, it is visible only by a dotted white perimeter line. Once it hardens, this new polymer will be bonded to the side edges of both triangles, with the area of contact between the two polymer triangles and the new polymer rectangle being the portion of both triangles which are protruding into the mold which contains the new polymer. Once the mold is removed, the resulting inventive image will look like Fig. 93.III.a. if the new rectangular polymer is the made the same thickness as the side edges of the two polymer triangles and if these polymers have the same optical properties and coloration. In this case, the resulting inventive image is a very different shape from the shapes used to form it. Alternately, the resulting inventive image will look like Fig. 93.III.b. if the new rectangular polymer is the made less thick than the thickness of the side edges of the two polymer triangles. In this case, the new inventive image formed maintains its identity as the sum of three parts. The resulting inventive image may be the inventive image desired, but if it is not, this inventive image can be further processed if desired and as desired. For example, the joint between this image's polymer triangles and its rectangular connecting part can be reinforced, e.g., by thickening this inventive image on one or more of its sides, and/or by adding fiber perpendicularly across the seams of these connections, for instance, on the reverse side of this inventive image, on the side shown in the illustrations, on its side edges, or on a combination of these locations, as desired. Also refer to Fig. 95. previously described for connecting parts to polymer during its formation.

Fig. 83.a. shows two parts placed as desired in relation to one another to be joined together in forming an inventive image. One or both of these two parts is polymer of the present invention, they might both be polymer. The cPRM used in between them to join them bonds to both of these two parts as strongly as desired. Fig. 83. shows these two parts joined in three different ways each of which is illustrated in a separate series of stages marked b.i., b.ii. and b.iii. Fig. 83. b.i. shows a mold formed on these two inventive image parts (e.g, using temporary clay walls) with its bottom surface flush with the bottom sides of the two parts being connected and its upward side left open with side walls built on the two parts to prevent spillage onto their surfaces. The two edges of the two parts being connected are clean so that they will bond to the cPRM well. Figs. 83.b.i.a. and b.i.b. show two different heights to which the cPRM poured into the mold of Fig. 83. b.i. might be poured, each of which yields a different form on the resultant inventive image, as shown in the flush continuous joint formed between the two parts in the resultant inventive image in Fig. 83.b.i.d., and the discontinuous, raised joint formed between the two parts in the resultant inventive image in Fig. 83.b.i.c. Note that if desired, the raised portion of the joint formed in Fig. 83.b.i.c. may be removed (e.g. cut down during its gelation, or sanded down once it is hardened polymer) so that the resultant inventive image is that in Fig. 83.b.i.d. Alternately, if desired more cPRM can be added to the inventive image in Fig. 83.b.i.d. to make it into the inventive image in Fig. 83.b.i.c. The inventive image formed may be finished, but if it is not it may be further processed as desired.

Alternately the two parts in Fig. 83.a. might be joined using the mold in Fig. 83.b.ii. which is designed so that rather than simply joining these two parts, it joins them by forming a third part (shown in light gray) in between the two parts, which greatly affects the form of the resultant inventive image. Fig. 83.b.ii.a. shows cPRM poured into this mold which extends above and below the space in between the two initial parts significantly, forming the inventive image in Fig. 83.b.ii.b. This may be the finished image desired, but if it is not it may be further processed as desired. As another alternative, the two parts in Fig. 83.a. might be joined using the mold in Fig. 83.b.iii. which is designed so that rather than simply joining these two parts, it joins them by forming a third part in between the two parts, which greatly affects the form of the resultant inventive image. Fig. 83.b.iii.a. shows cPRM poured into this mold which extends above the space in between the two initial parts significantly and even extends onto the surface of one of the initial parts. The resultant inventive image is in Fig. 83.b.iii.b. This may be the finished image desired, but if it is not it may be further processed as desired.

Fig. 44. shows an inventive image in a cross section or side view which is made of connected parts without any mold. This inventive image is made by first connecting a dozen tennis balls to one another (these tennis balls are shown as 12 grey circles), e.g., using a bonding substance like a conventional glue or cPRM, and/or sewn together. They might be connected to one another using cPRM as a bonding substance on the SSI on their surfaces, e.g. using gelled cPRM. Or, these 12 tennis balls might be connected to one another using a combination of these methods. Once these 12 tennis balls are connected to one another such that there are no negative spaces in between them, they are superimposed by multiple layers of cPRM, the first layer of which adheres to the SSI on their surfaces. The resultant inventive image in Fig. 44. might be finished, but if it is not, it might be further processed as desired. For example, this inventive image can be used as a painting surface, e.g. to make a painting or a sculpture.

Figs. 80. shows ways that two parts are connected as cPRM forms in making an inventive image. In Fig. 80.I. a formed part, marked b. is secured into the bottom surface of a mold as deeply as desired, before cPRM is put into this mold and/or afterwards. The part b. might be solid, flat, 2D, 3D, it might be a wire drawing in space, it might be a metal cut out, or it might be a glass tube which will be used as a neon light in the finished inventive image. Once the polymer forms around the part b., the inventive image is removed from the mold and the mold is cleaned off of the inventive image. The resultant inventive image is in Fig. 80.II.

The inventive images in Fig. 50., are convex or concave pyramid shapes each with staggered layers. For example, the layer of the inventive image in Fig. 50.I. marked e. might protrude out towards the viewer the most. The backside of these images may be flat, or shaped like an inverted pyramid. Or, layer e. might be the furthest of this image's layer away from the viewer and layer a. the closest to the viewer, such that the front side of this image is an inverted pyramid, and its backside might be a pyramid or it might be flat. The pyramid shaped inventive images in Fig. 50. can be formed in an open and/or closed mold, they can be formed in a tiered process (described herein), they can be formed in multiple separate parts which are bonded together, or they can be formed in a process which is a combination of these processes. As one example, one of these inventive images could be made face down in an open mold the negative space of which is a pyramid. The inventive image formed in such a mold would have a flat backside unless something was set into the cPRM on its exposed side (e.g. as in Fig. 95.) In a second example, one of these inventive images could be formed again in a single piece in an open mold, but its pyramid form could be made by one or more objects or mold parts pressed down into the exposed cPRM in the open mold, as in Fig. 95. In a third example, one of these inventive images could be made using a mold that is partially open and partially closed, with this pyramid shape formed with its flat side against the mold and the upper portion of this mold closed over the areas on this image marked a. - d. As a fourth example, the layers marked a.- e. on this illustration might be made as separate polymer planes of a consistent thickness but of increasingly smaller lengths and widths. Any single layer may have been the initial image support for the entire inventive image, with the other layers stacked onto one or both of its sides. In a fifth example, one of these inventive images can be formed using one or more processes for removing matter, e.g., carving.

The inventive image in Fig. 51. is generally planar with multiple polymer and/or non polymeric parts of differing coloration, e.g., marble, metal, fabric, wood, paper, etc. It might be made by connecting parts together side by side. In addition or instead, it might have been made by attaching and/or inlaying multiple parts (e.g., like tessera) to an image support, e.g. a stabilizer. Once this inventive image is formed, it is further processed, e.g., a drawing is done on it.

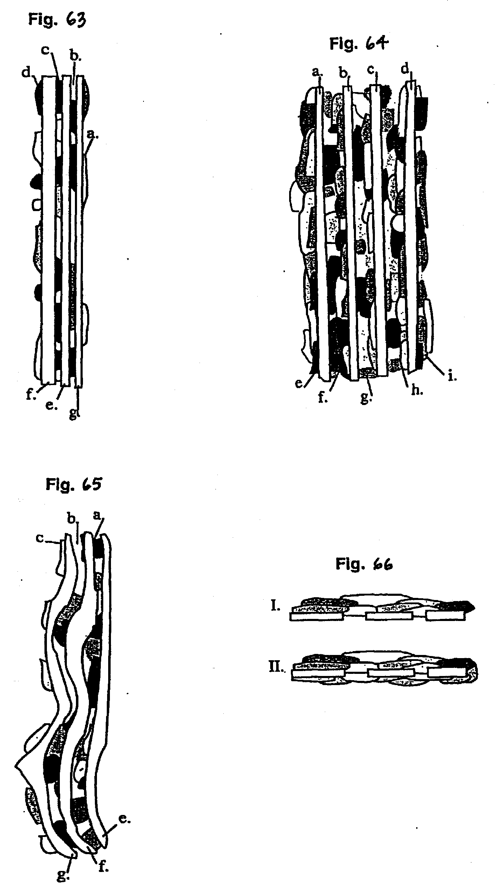

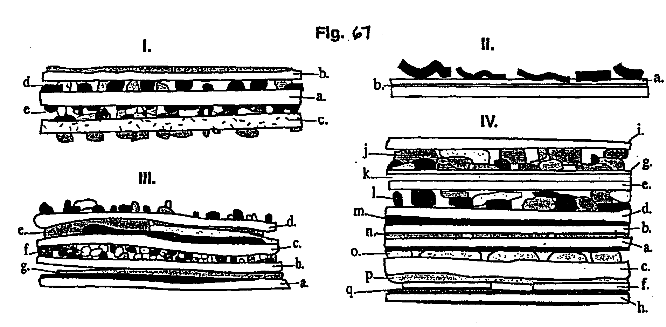

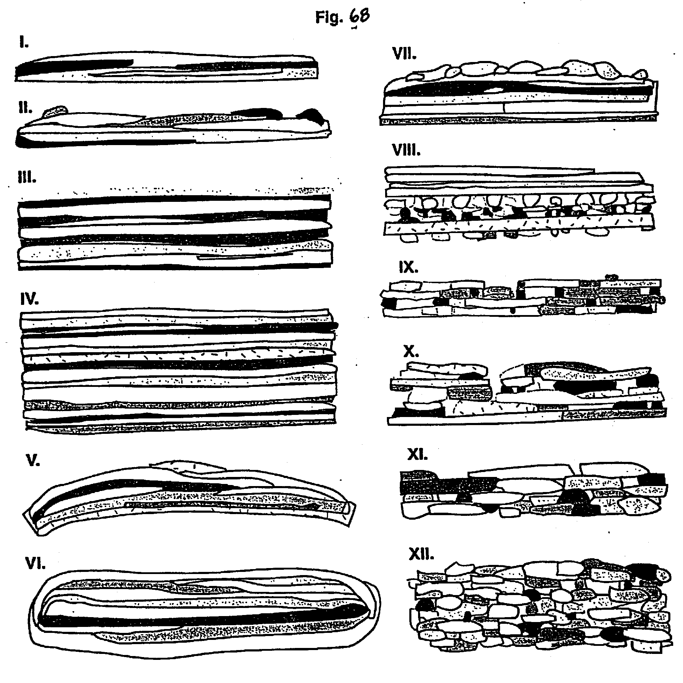

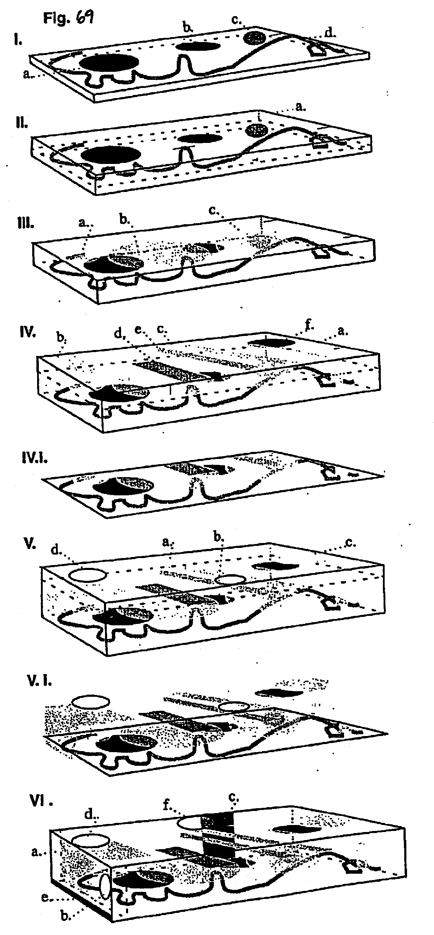

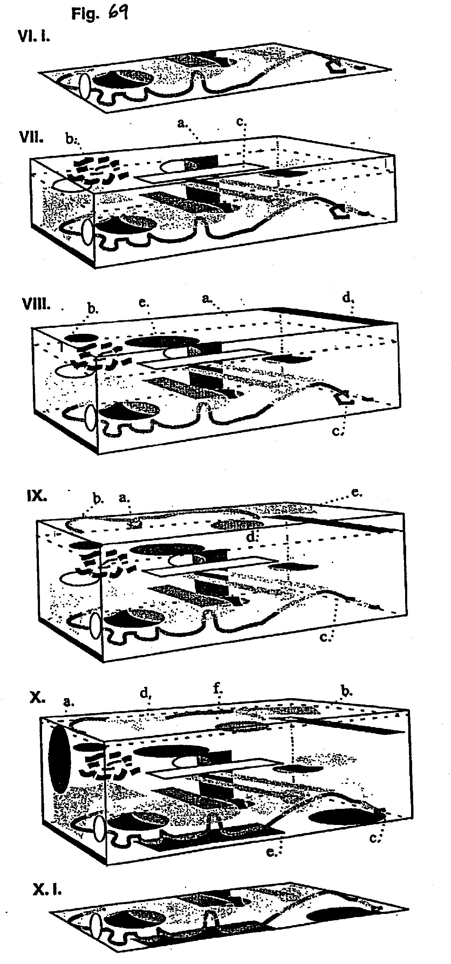

Fig. 66. shows an inventive image made by connecting three rectangular parts (shown in white) with superimposed applications (shown in shades of grey). In Fig. 66.I. these three rectangular parts are superimposed only on one of their sides. These superimposed applications may connect these three separate parts together as desired. This may be the inventive image desired, but if it is not, this image can be further processed. For example, this inventive image can be superimposed by additional applications on its other three sides (shown in grey in Fig. 66.II.), embedding its three rectangular parts. The three rectangular parts are encased, thus mechanically bonded within this inventive image. The inventive image in Fig. 66. might for example, be polymer or it might be polymeric and non polymeric. As an example, the three rectangular inventive image parts (shown in white), might be polymer, e.g. transparent colorless polymer with or without a surface preparation stabilizer such as a Clarifying Imprimatura on them. These three polymer parts might be superimposed by other see through applications of a conventional paint (shown in shades of grey), which bonds to them, connecting them, e.g. broken color or impasto applications. Alternately these applications superimposed on the polymer parts might be collaged paper, photographs, and paint; pieces of wood, clay, metal or glass; or a combination of these, attached by a bonding substance. As a different example, the three rectangular parts of this inventive image (shown in white) might be non polymeric, such as pieces of wood, glass, metal, clay, paper, conventional drawings, applications of paint, or a combination of these. These three rectangular parts might be superimposed by see-through colored cPRM (shown in shades of grey) which bonds to them, connecting them together.

Multiple separate, black and grey curled, circular and crescent shaped parts (which may be polymer and/or non polymeric), in Fig. 17.a., are connected by a s transparent layer of polymer shown in the resultant inventive image in Fig. 17.b. outlined in black lines. The inventive image in Fig. 17. might have been formed in a number of different ways, e.g., 1) by applying cPRM over these separate parts, 2). by pressing these separate parts into a gelled layer of cPRM, 3). by inlaying and attaching these parts to the polymer surface before and/or after it hardened, or 4). in a combination of these ways. Fig. 16. shows an inventive image is made by superimposing polymer over two parts of an image support (e.g., stabilizer) which have negative space in between them. The pale grey layer is polymer. Beneath it, the two parts of the image support in white outlined with black lines may or may not be polymer (e.g., they might be wood, glass, paper, plaster, fabric, etc. as desired). And on the top of this inventive image, are dark grey broken color strokes of a paint. The inventive image in Fig. 16. might have been made in a number of ways, e.g., formed, 1). by filling in the negative space between the two parts of the image support with a temporary mold wall and applying cPRM over this surface, 2). by attaching the two part image support to a preformed piece of polymer or other material using a bonding substance, 3). by attaching the two part image support to gelled layer of cPRM, etc.

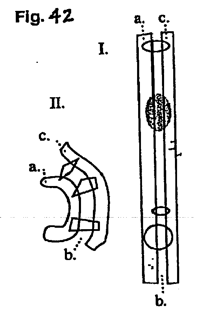

The form in Fig. 73.g.ii. has two parts as one inventive image made of two parts or as two separate inventive images. These two parts are connected together in Fig. 73.giii. by a new third part which might be an image support (e.g., stabilizer), or which might be polymer formed around and/or on these two parts. The result is a single larger inventive image. The inventive image in Fig. 21.b. might be made by connecting a number of triangular or pyramid shaped parts to one another and/or to a common image support. Figs. 71. and 72. show inventive images formed of multiple connected parts which are connected, disconnected, and then reconnected in different Compositional Arrangements as these images are developed. The inventive images in Fig. 42. are both made of two large parts (marked a. and c. in both images) which are joined by multiple intermediary parts inlaid in both of them (marked b. in both images). In each of these images the two parts a. and c. comprise a single image support (e.g., stabilizer). Both of the images in Fig. 42. may have one or more non polymeric parts.

Figs. 18.a.- c. show either one or two inventive images made of multiple similar parts bonded to one another in a row using a bonding substance. Fig. 18. b. shows the image of Fig. 18.a. used as an initial image support (e.g., stabilizer) for further processing. This coloration on Fig. 18.b. might be a conventional paint or ink, colored cPRM, collaged colored paper, or a combination of these. Fig. 18.c. could either be a different image from that in Figs. 18.a. and b. (e.g., an image made using multiple parts which are colored before they are bonded to one another, for example, parts made with colored cPRM, parts colored externally, or parts colored internally and externally). Or, the inventive image in Fig. 18.c. could show an alternate way Fig. 18.a. could be used as an initial image support (e.g., stabilizer) for further processing. Note that while the coloration of the image in Fig. 18..b. visually unifies its separate parts, the coloration of the image in 18.c. emphasizes the separate parts of the image. Figs. 31., 44., 84. 87., 88. and other illustrations herein also show inventive images formed of multiple connected parts.

### Bonding Spots

Because actual bonding spots are often not distinguishable or hard to see within real inventive images, on many of these illustrations, bonding spots are identified with marks which would not be visible in actual inventive images.

Figs. 27.-32. are cross section or side views of inventive images with layers that generally alternate between polymer layers, and layers which are not made of polymer. In Fig. 27., an inventive image is shown made of four layers. It lowest layer is colored in gradations, a thinner layer is superimposed upon it (marked c. in the illustration) which bonds to the layer beneath it. Upon layer c. are four bonding spots (marked with "IXI" marks) within a layer which is an air pocket (rather than a tangible application, e.g. of paint or cPRM). These bonding spots bond the uppermost layer of this inventive image (marked a.) to its lower layers, while also raising layer a. above the surface of layer c. such that there is an air pocket. It is possible that layer c. could not have bonded to layer a. as well as desired, without the use of these bonding spots as an intermediary. In addition or instead, it is possible that the composition used to make layer a., layer c., or both could not have been shaped into the raised form show in these bonding spots to connect layer a. to layer c. in such as way that they are separated by an air pocket in between them. For example, the bottom layer of this inventive image might not be made of polymer, layer a. and layer c. might both be made of different polymers which do not bond as well as desired to one another, and these bonding spots might be made of a mixed polymer stabilizer which contains at least one of the monomers contained in both layer a. and layer c. and the catalyst appropriate for polymerizing it. Thus the cPRM bonding spots might have been made in their raised shape using temporary clay walls. Alternately, the bottom layer of this inventive image might be a polymer imprimatura, upon it layer c. might be an acrylic Clarifying Imprimatura, the bonding spots might be a thick acrylic gel, an acrylic paste, or a stiff glue, that bonds to acrylic and to the material of layer a. which is polymer of the present invention.

Fig. 29. shows the inventive image formed in Fig. 28.V. with bonding spots marked with"|X|". These bonding spots are within non polymeric applications (shown in shades of grey in this illustration), their coloration camouflages them. These bonding spots bond this image together by connecting its polymer layers (which are shown in white with black outlines) to one another, and sandwiching the non polymeric applications in between them. Perhaps one or more of these non polymeric applications which have bonding spots, are not able to bond or to bond as well as desired to the adjacent polymer layers, e.g., a conventional paint which does not bond or bond as well as desired to the contiguous polymer. The bonding spot or spots used within such paint applications might be made using appropriately colored cPRM which is the same or which is compatible with the contiguous polymer. Alternately, the bonding spot or spots used within such paint applications might be made using a different appropriately colored conventional paint which bonds as desired with the contiguous polymer.

The bonding spots in Figs. 30. are marked with black zig-zag lines, though they would not be perceivable in the actual inventive image. In Fig. 30.I. a polymer layer is shown (in white) over a non polymeric layer (shown in grey), joined by four bonding spots marked with zig-zag lines. For example, these bonding spots might be places where the polymer layer was abraded so that it would mechanically bond to the non polymeric layer. Then, the resultant SSI were used directly as bonding spots when they were filled in by the non polymeric substance to make the bottom layer of this inventive image. Or, the resultant SSI were filled in with an intermediary substance which bonds them to this inventive image's bottom layer as desired, e.g. the SSI were filled with Clarifying Imprimatura, or with another bonding substance. Perhaps the polymer layer and the non polymeric layer would not be able to bond or to bond well to one another without these bonding spots. Fig. 30.II. shows the addition of one non polymeric layer on the upper side of this inventive image, and the addition of another polymer layer on its lower side, both of which are bonded to the inventive image using SSI described above.

Fig. 32. shows the bonding spots which may be within the inventive image formed in Fig. 31.II., but which are not visible to viewers. In Fig. 32. these bonding spots are marked with black zig-zag lines, though they would not be perceivable in the actual inventive image. The inventive image in Fig. 32. is made of layers which alternate, the white layers are polymer and the grey layers are non polymeric, e.g. paint, collage, photography, paper, etc., the non polymeric layers in this inventive image may or may not be the same as one another. The bonding spots in this inventive image are made by SSI within its non polymeric applications, that are superimposed with cPRM. These applications of cPRM either form the polymer layer above this inventive image, or they bond a pre-formed polymer layer to this inventive image. For instance, these SSI might be a). texture on the paint application, b). SSI on the paint application caused by inlaid and/or embedded particles, materials, or both, e.g. particles of pigment, glass, fiber, fillers, steel wool, hardened polymer, etc., c). SSI on the paint application caused by one or more processes of removing matter such as sanding, scoring, incising, sgraffito, etc. d). a combination of these methods.

The inventive images with bonding spots in Figs. 33., 34., and 35. shown in three quarters views, are all made of at least these three superimposed layers: 1). a bottom layer marked a., which may be polymer and/or non polymeric, 2). a central non polymeric layer with bonding spots, and 3). a top layer of transparent colorless polymer marked b. The inventive images in Fig. 33.I. and.II. have non polymeric embeddments within their central layers, each item of which relies on its perforations and/or its encasement to bond to the layer above and below it. The perforations on one or both of these inventive images might for example, serve as bonding spots between two layers which bond to one another as strongly and as permanently as desired, e.g., if layer a. and layer b. are made of the same polymer, if they are made of different bonding polymers, or if layer a. is non polymeric but which bonds to the cPRM of layer b. However, if on one or both of an inventive image, layer a. and layer b. do not bond to one another or do not bond as well as desired, bonding them requires further processing. For instance such further processing might involve forming SSI on these surface areas, and/or using an intermediary bonding substance which bonds to both layer a. and layer b. For example, if layer a. is smooth glass, SSI formed on these surface areas will enable them to become bonding spots which the cPRM of layer b. is superimposed. If layer a. is made of a polymer which does not bond or bond as well as desired, to a different cPRM superimposed upon it to make layer b., an intermediary bonding substance (such as a mixed cPRM stabilizer, a glue or another cPRM) might be applied in the bonding spots.

The only difference between the inventive images in Figs. 33.I. and II. is that while the inventive image in I. may or may not have a colorless application covering most or all of its central layer along with the items embedded, the inventive image in Fig. 33.II. has a colored application in its central layer along with its embedded items. This colored application in the central layer of Fig. 33.II. may or may not extend continuously underneath its embedded items, and this colored application may be transparent, translucent or opaque. If this layer of coloration does not go underneath the embedded items, the areas inside the perforations on these embedded items might be colored to appear as if the colored application continues underneath them. This layer of coloration in Fig. 33.II. might for example, be a sheet of paper, a sheet of metal, a piece of fabric, an application of paint, an application of glue, an application of colored cPRM, etc. If layer a. on one or both inventive images in Figs. 33., has a composition that is tacked or bonded onto it (such as a Clarifying Imprimatura described herein; a layer of paint, etc.) which is also present in the surface areas of layer a. which are exposed through the perforations of its embedded items, whether this composition is polymeric or not, it may bond to the superimposed cPRM of layer b. both thorough the perforations in the embedded items forming bonding spots and also in the surface areas around these embedded items. But if layer a. has a composition on it which does not bond, or which does not bond as well as desired to the superimposed layer of cPRM, further processing will form the bond desired, making both bonding spots in the perforations of the embedded items and bonding areas around these embedded items. For example: 1). Bonding spots and bonding areas can be made by making SSI on the composition to bond with the superimposed cPRM. 2). Bonding spots might be applied on the composition using an intermediary bonding substance which bonds to both to the composition and to the superimposed cPRM. 3). These two methods might be combined. 4). If the substrate of layer a. beneath its upper layer bonds to the superimposed cPRM of layer b., bonding spots can be made by removing the composition on its upper surface in bonding spots. 5). Bonding spots can be made in a combination of these ways. (For instance, this composition could be either a non polymeric Clarifying Imprimatura on a polymer substrate, e.g., an acrylic Clarifying Imprimatura on a polymer substrate, or this composition might be a polymer Clarifying Imprimatura on a non polymeric substrate.) Note that in some of the compositions of the inventive image in Fig. 33.I., layer a. and layer b. will bond to one another in the areas of this inventive image's central layer which surround its embedded items, however these areas are generally too large to be bonding spots. Interpretations of this inventive image in which layer a. and layer b. do not bond to one another, in addition to making bonding spots through the perforations of the embedded items (as in the examples previously described), bonding spots, bonding areas, or both can be made in as desired in the areas surrounding these embedded items. Fig. 33. also has further processing (marked c.) on the top of layer b., e.g., paint.

The central layer in the inventive image in Fig. 34. with embedded broken color painting might be formed in several ways. For example, broken color painting might be done on layer a., then superimposed cPRM forms layer b. Alternately a polymer layer b. is superimposed over layer a., e.g., once the cPRM of layer a. reaches its gelation stage and/or after it is hardened polymer, with or without the use of a bonding agent like cPRM. Before layer a. and b. are superimposed, the broken color painting is done on layer a. and/or layer b. The colored underlayer visible between layer a. and the broken color painting may for example, be: a bonding substance and/or a surface preparation stabilizer (such as a Clarifying Imprimatura, a layer of underpainting, an imprimatura, a wash, a layer of collage, a printed layer, a layer of direct painting; underdrawing e.g., in pencil, pastel, charcoal or graphite; coloration on one side of polymer of layer a., etc. Consider if for example, the broken color painting in between layer a. and b. does not bond as well as desired or if it does not bond at all, to one or to both of these layers. If the areas on the upper surface of layer a. which have no broken color applications and are in direct contact with layer b. do bond as well as desired to layer b., this inventive image may be as strong and as permanent as desired without fortifying the bond between its layers a. and b. further. However if the areas on the upper surface of layer a. which have no broken color applications and are in direct contact with layer b. do not bond as well as desired to layer b., it is desirable to fortify the bond between layers a. and b. further in a manner which is aesthetically desirable. Bonding spots are an option, and they may comprise a surface preparation stabilizer. For example, scattered bonding spots might be disguised as strokes of broken color. For instance, the strokes shown in this illustration in white with heavy black outlines might all be bonding spots, (perhaps impasto bonding spots), e.g., made of an applied bonding substance which bonds to both the surface of layer a. and to layer b., they might be SSI, or they might be a combination of these. As a more specific illustration, layer a. of this inventive image might be made of polymer superimposed by a surface preparation stabilizer such as a Clarifying Imprimatura, which is painted with conventional acrylics, watercolors or oil paints. Thus none of the surface of layer a. might bond to the cPRM which will be superimposed over it until bonding spots are made by sanding the surface preparation stabilizer off to form stroke shaped spots which are (colored appropriately) with strokes of colored cPRM. Or, as a second specific illustration, rather than polymer, layer a. might be made of glass and which is colored using conventional practices. Spots might be sanded which function as bonding spots with the superimposed cPRM and which result in aesthetically desirable inventive image without adding coloration on these bonding spots. In a third specific illustration, the surface of layer a. and layer b. might be two polymers which do not bond to one another or which do not bond as well as desired to one another. Bonding spots might be applied on the surface of layer a. disguised as either broken color strokes or as continuous parts of the surface of layer a. around this broken color made of a composition which bonds to the two different polymers, e.g., a mixed polymer stabilizer.

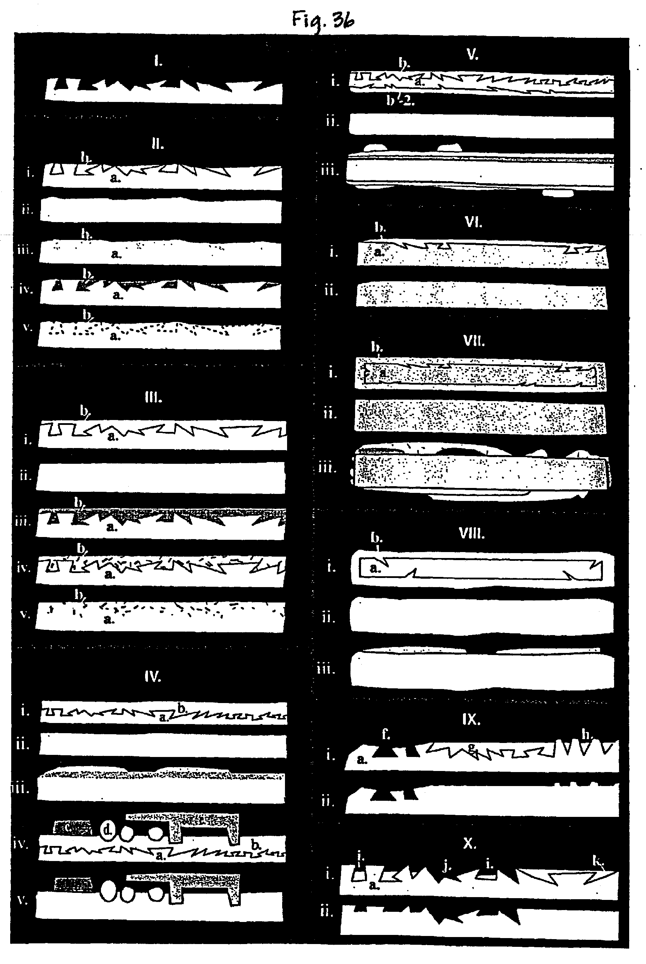

Whether or not layer a. and layer b. in the inventive image in Fig. 35 bond to one another, the circular applications in their central layers might be made with a composition (e.g. a paint, or a collaged material) which does not bond or bond as well as desired to layer b. Thus, bonding spots might be made and camouflaged within these circular applications, to appear as continuous part of the aesthetic, made using one or more bonding substances which bond well to layer a., layer b. and the rest of their circular application. For example, these bonding spots might be areas where circle shapes in these applications intersect and/or these bonding spots might be the border lines around some of the circles. The inventive image in Fig. 35. has further processing, lines on its upper surface and linear rectangles on the lower surfaces. In an alternate interpretation, each inventive image in Figs. 33., 34., and 35. might be made using an image support which may be a stabilizer, and which may be comprised of either one planar form, or two planar forms which become joined.

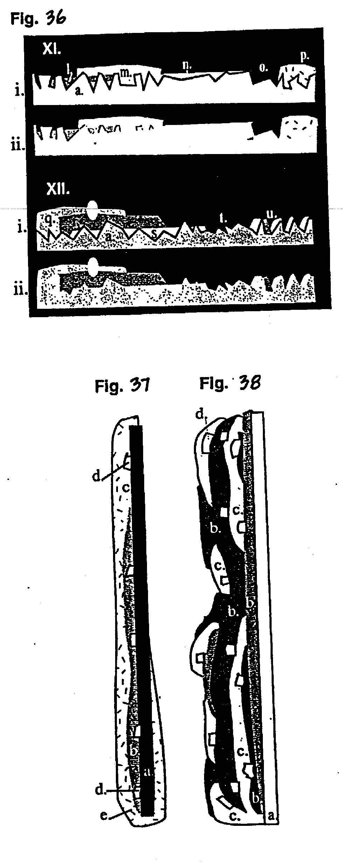

Fig. 37. shows an inventive image, which may for example, be an opaque polymer image support, marked a., e.g., a stabilizer. It is superimposed by two non polymeric applications marked b., and c. which do not bond or do not bond well to the polymer a. Thus, bonding spots are used in between these layers (shown in white with heavy black outlines, an example is marked d.) Though this inventive image might have been complete at this stage, it is further processed with the superimposition of another layer of cPRM with dispersed coloration marked e., on all of its sides.

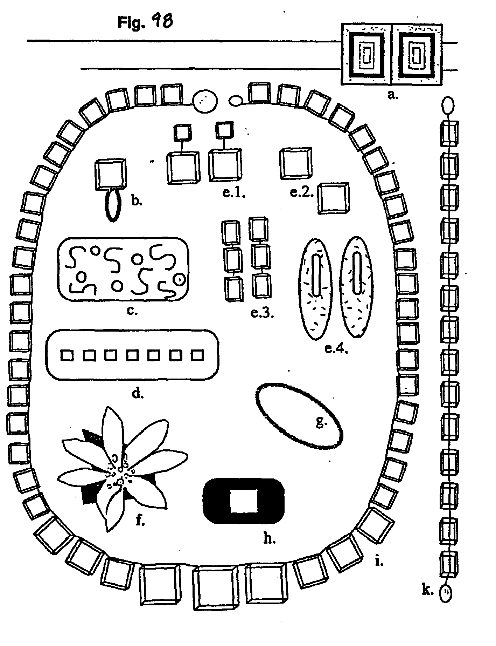

In cross section views, Fig. 94. illustrates reworking a polymer inventive image by adding another part to it using a mold on it that is partially open and partially closed. Fig. 94.I. shows the initial polymer inventive image. Fig. 94.II. shows a mold which is partially open and partially closed built on the initial polymer inventive image, e.g. using oil formulated clay. As this mold is made care is taken to make sure that the part of the initial polymer inventive image which ends up within the interior negative space of this enclosed mold is clean, so that it will bond well to the cPRM which will be put into this mold. This mold is made with three openings marked a., b. and c. on the illustration in Fig. 94.II. The openings b. and c. are principally made to enable the polymerizing cPRM to release air, vapors, gasses, heat, or a combination of these. Polymer formed in these tube-like openings marked b. and c. will be undesirable, it will be cut off of this inventive image when it is gelled or once it is hardened. Fig. 94.III. shows this mold filled with cPRM that is the same color and optical properties as the initial polymer inventive image, thus there is no visible seam between the initial polymer and the newly added part. While the opening labeled a. is principally used to pour the cPRM into this mold, the openings labeled b. and c. may also be used for pouring into this mold. Also, if desired, this mold might be tilted as cPRM is put into it, e.g. to make sure trapped air escapes as desired. Once this cPRM has gelled firmly enough so that it will maintain its form as desired without the upper portion of its mold, the upper portion of its mold is removed from it. As this portion of the mold is removed, the gelled cPRM extensions formed in the protruding openings of this mold labeled b. and c. are cut off. The resulting inventive image is in Fig. 94.IV. Fig. 94.V. shows this inventive image with the rest of its mold removed. In Fig. 96., which is described in forthcoming text, fiber is installed on the inventive image formed in Fig. 94. to reinforce the joint of its two parts.

In one illustration, as the surface irregularities of inventive image which are at least partially transparent or translucent are filled in by the bonding substance or substances, the image's color will change, it will become clearer, it will become more transparent and/or translucent, its other surface light effects will change, or a combination of these effects will occur. The more completely filled in and smoothed over the inventive image's surface irregularities become, the closer it will come to reaching its maximum clarity, its maximum transparency and/or translucency, the maximum of its other light effects (e.g. its maximum glossiness) or a combination of these. For example, if the bonding substance and the inventive image it is applied upon, have the same refractive index and the same coloration, completely filling in and smoothing over this image's surface irregularities with the bonding substance can bring this image to the color, the clarity, and the degree of transparency and/or translucency that it would have if it never had any surface irregularities. Once all of the surface irregularities on a transparent inventive image are completely filled and smoothed over using a transparent bonding substance, some inventive image surfaces, some parts of inventive images and some entire iinventive image, will become totally clear and totally transparent. But once all of the surface irregularities on another, transparent and/or translucent inventive image are completely filled and smoothed over using a transparent bonding substance, its clarity and its translucency will increase, but invasive internal changes would be necessary to make it more translucent and/or transparent and such changes may or may not be desirable. As this example shows, some polymer and non polymeric inventive image parts can not be made as clear, or as transparent and/or translucent as desired, and some inventive image can not be made completely clear or completely transparent and/or translucent, for a wide variety of reasons involving the internal composition of specific images and the composition of the specific bonding substances used. (For example, some monomers used to form a polymer are not completely transparent, fiber in polymer can lessen its transparency and/or translucency, some non polymeric materials are not completely transparent and can not be made completely transparent, and some problems in polymerization can cause permanent color changes in polymer, e.g. using some cPRM, as described herein.)

In the following illustration two separate parts are connected using a Clarifying Imprimatura to form one inventive image. The areas of contact on an old smooth transparent colorless polymer surface and on the smooth transparent colorless surface of a small piece of glass are both abraded by sanding. Though the surface irregularities on the polymer and the glass are shallow, both surfaces translucent and matte. A thick application of transparent yellow cPRM is applied on the abraded polymer surface completely filling in its SSI so that they are no longer visible (e.g., this bonding substance is a cPRM in which a yellow dye has been homogeneously dissolved). This cPRM is the same cPRM as that was used to make this polymer, though the polymer was made long ago. The transparency of the piece of polymer has increased substantially after the cPRM filled in, smoothed out its SSI. The polymer's clarity and its glossiness both of which were reduced when this polymer was sanded, appear restored. A thick application of the same cPRM which is colored with a transparent blue, is applied on the abraded glass surface bonding to and completely filling in its SSI so that they are no longer visible (e.g., this bonding substance is a cPRM in which a blue dye has been homogeneously dissolved). Though the application of this same cPRM (with different coloration) was not a Clarifying Imprimatura on the polymer inventive image surface, it use, is a Clarifying Imprimatura on this glass inventive image surface. After the Clarifying Imprimatura filled in and smoothed out its SSI, the transparency, the clarity and the glossiness of this glass surface have increased substantially. Both cPRM applications are allowed to gel. Once they are firmly gelled but still wet, they are placed in contact with one another, pressed together a little and allowed to harden in this position. The resulting transparent inventive image has colorless polymer and glass parts, and three colors. It has yellow visible through its transparent colorless polymer side, green visible sandwiched in its center where the two cPRMs mixed, and blue visible through its transparent colorless glass part. Then entire colored central layer of the resultant inventive image is a Clarifying Imprimatura, because the yellow cPRM (which was not a Clarifying Imprimatura) was added as another layer onto the blue Clarifying Imprimatura while it was wet. In this illustration, the use of a bonding substance on SSI brought a desired color and aesthetic into this inventive image, as well as a desired connection between two parts. The surface irregularities were all SSI made on both of these parts of the image exclusively for the purposes of bonding, their aesthetic effects were temporary and controllable. As the bonding substance filled in and smoothed out the SSI on each of these two parts, they were clarified, and their transparency increased, and their color darkened. None of the surface irregularities formed in the process of connecting these two parts are visible to viewers of the resultant inventive image. In an alternate version of this illustration, the cPRM bonding substance Clarifying Imprimatura is made of active ingredients which are different from those used to make the polymer part of this inventive image. Thus, the application of this cPRM on the polymer part of this inventive image is a surface preparation stabilizer.

Fig. 96. shows three different ways of reinforcing the inventive image in Fig. 94.V. with cPRM and fiber (e.g., as a stabilizer) either on one of its sides as in Fig. 96.I,a. , or on its reverse side as in Fig. 96.II.a. Fig. 96.I.a. shows dark grey temporary mold walls built on the inventive image of Fig. 94.V. forming an interior mold space across one of its surfaces which includes the joint between its two constituent parts as well as surface area extending beyond this joint. The negative space within this temporary mold on this inventive image is largely open, only a small segment is closed. Though vent holes are not illustrated, they might be made on the closed portion of this mold to release air, gasses, etc. as the mold is filled (e.g. like the vent holes in Fig. 94.II. and III. described herein). This inventive image is reinforced by a thin layer of cPRM applied in the negative space of its mold, which may fill up its closed portion, but before this cPRM gels, a layer of fiber (represented by a dotted line in Fig. 96.I.a.) is laid into and onto it. If there are undesirable air bubbles (e.g. in the fiber), these are released as desired, e.g. by a hand tool. Then, cPRM is applied over this fiber embedding it. The resultant inventive image might look like Fig. 96.I,b. , provided the cPRM is aesthetically the same as that used to make the initial inventive image and provided the fiber embedded is capable of becoming invisible within the cPRM. Alternately, the inventive image of Fig. 94.V. might be reinforced on its reverse side, as in Fig. 96.II.a., e.g., using a similar procedure with a completely open temporary mold. Provided the cPRM used is aesthetically the same as that used to make the initial inventive image and provided the fiber is capable of becoming invisible within the cPRM, the resultant inventive image could look like that in Fig. 96.II.b. As an alternative way of reinforcing the inventive image of Fig. 94.V. which is not illustrated, both of its sides might be reinforced, e.g. reinforcement might be added as shown in both Figs. 96.I.a. and 96.II.a.

Yet another way of reinforcing the inventive image of Fig. 94.V. is in Fig. 96.III.a. using a temporary mold which is partially open and partially closed is built on the inventive image of Fig. 94.V. so that a new layer of polymer can be formed entirely over one of its sides. Though vent holes are not shown on this mold on this inventive image in is illustration, it is likely that vent holes would be desired on its closed portion to release air, heat, gasses, etc. as this mold is filled (e.g. like the vent holes in Fig. 94.II. and III. described herein). However, because this illustration shows the mold on this inventive image after it has been completely filled with cPRM, vent holes which might have functioned (e.g. to release air, heat, gasses, etc.) as this mold was filled, might have been used and then sealed, and/or cut off. The new layer of polymer formed on the inventive image in Fig. 96.III.a, may contain one or more layers of fiber though no fiber is indicated in this illustration. For example, a fiber stabilizer layer might be at the bottom of this new layer of polymer, between the surface of the initial polymer image and its new layer of polymer. Or for example, a fiber stabilizer layer might be within the spatial depth of this new layer of polymer on this inventive image, e.g. medial. If undesirable air bubbles form during the reinforcement of this inventive image, they should preferably be removed. Though the new layer of polymer formed on this inventive image might increase its thickness consistently or inconsistently. This new layer of polymer might have increased the image's thickness as much or as little as desired (e.g. by making this new layer of polymer with one or multiple thin or thick layers of cPRM). The illustration in Fig. 96.III.a. shows that the thickness of this inventive image is more or less doubled by its new layer of polymer. Provided the new layer of polymer is aesthetically the same as the polymer used to make the initial inventive image and provided any fiber used in this inventive image is capable of becoming invisible within it, the resultant inventive image could look like that in Fig. 96.III.b. If desired, the reverse side of the inventive image in Fig. 96.III.b. could also be reinforced, e.g. as in Fig. 96.III.a. or .II.a.

Fig. 78. shows an example of the addition of a layer of fiber (e.g., stabilizer) made of a single piece of fiber on or in a transparent colorless polymer inventive image. Some or all of the steps shown in this illustration may be used. Though all of the stages of this illustration are shown without the use of a mold or temporary mold walls, these may be used as desired, e.g.., a mold or a temporary mold wall around the perimeter of this inventive image is preferable if the these steps are followed to Fig. VI., or if the thickness of this inventive image is otherwise built up (e.g., if the thickness of cPRM applied over the fiber is substantial). Fig. 78.I. shows a layer of gelled cPRM or hardened polymer. Next, Fig. 78.II. shows a single piece of fiber laid on the surface of this cPRM or polymer in a single layer. This fiber is clean, it is flat, and shows no other irregularities (e.g. irregularities might have been removed). If the inventive image surface is gelled cPRM, this fiber would stick to it, e.g., becoming a surface preparation stabilizer. This fiber would also stick to this surface if it is a dry formed polymer covered with a bonding substance, e.g. a thin layer of the polymer's cPRM on the polymer surface and the fiber stabilizer laid into it. Alternately, this fiber may be just placed on a dry polymer surface, without any bonding substance. This fiber installation can stop here if desired. Alternately, proceed to the stage in Fig. 78. III., it can skip III. and go to IV., or it can go directly to VI.

Fig. 78.III. shows spots formed on this inventive image, joining this fiber to it by using cPRM or another bonding substance in spots that penetrate and embed the fiber enough for it to become invisible to the eye. For example, this fiber may be a surface preparation stabilizer. This third step is optional. If this fiber is on gelled cPRM, or if this fiber is on a bonding substance applied on the polymer surface, these spots may be: 1). places in which the wet cPRM or other bonding substance penetrated the fiber layer enough to embed spots (which might occur spontaneously or due to pressing the fiber down); 2). spots embedded because more cPRM or another bonding substance was applied over the fiber in these areas; or 3). both of these. If this fiber was laid on a dry polymer surface without the use of anything in between, these spots might be tacks of cPRM or another bonding substance over the fiber to embed it in selected spots. This fiber installation can stop here if desired. Alternately, skip the stage in Fig. 78. IV., proceed to the stage in Fig. 78. V. or to VI.

Fig. 78.IV. illustrates two different fiber installations. Either this illustration shows the fiber layer completely embedded in the inventive image by the application of a complete layer of cPRM or another bonding substance over the fiber and the particular fiber used is not capable of becoming completely invisible to the human eye, e.g., the strands of this particular fiber are too thick to become invisible in translucent colorless polymer. Or, this illustration shows the layer of fiber completely saturated with cPRM or another bonding substance thus the fiber is stuck to the image, but it is not completely embedded in it, e.g. the fiber's weave is not completely covered by cPRM or polymer. Thus fiber which may be able to become invisible to the human eye when it becomes completely embedded in the image, is still visible. If this effect is desirable, the installation of this fiber can be complete now. Alternately, it can proceed to the stage in Fig. 78. V. or it can skip to stage VI.

Fig. 78.V shows that once a further application (e.g. of cPRM or of another bonding substance) is made in spots on the fiber layer of this inventive image, this fiber layer becomes invisible to the human eye in these spots. For example, the applications in these spots on this inventive image add additional thickness over embedded fiber enabling it to become invisible in these areas, or the applications in these spots on this inventive image embed its fiber completely in these selected areas leaving the rest of the fiber, completely saturated with the cPRM or other bonding substance, completely attached to the inventive image and perhaps somewhat embedded in it, but not fully embedded in it. If this effect is desirable, the installation of this fiber can be complete now. Alternately, it can proceed to the stage in Fig. 78. VI.

Fig. 78.VI. shows the entire layer of fiber completely embedded within the inventive image such that it is no longer visible to the human eye. For example this might have been done by applying enough cPRM or another bonding substance over this fiber to fully embed it and by tapping undesirable air bubbles out as described herein. The dotted line on the inventive image in this illustration denotes the position of the fiber, not exactly medial within its depth, but close so that this image will be sufficiently strong and permanent for its use. This image can be further processed if desired,e.g., it can be thickened.

Fig. 75. previously described shows the optional use of fiber over the connection seam that is formed to join two separate inventive image parts together. Figs. 75. d.i.b. and d.ii.b. both show a piece of fiber laid on and in the bonding substance (e.g., cPRM) that is in the negative space in between two inventive image parts being joined (all of which is held in position by the use of a temporary mold shown in black). If fiber is installed on or within this connection seam, it may for example be installed as shown in either Fig. 75.d.i.b. or 75.d.ii.b. The difference between these two options is that the fiber piece installed in Fig. 75.d.i.b. overhangs the image, while the fiber piece installed in Fig. 75.d.ii.b. is neatly cut and sized so that it fits over the image's connection seam without overhanging the image. Though in this illustration, the overhanging fiber is rendered over the version of this inventive image in Fig. 75.d.i.a., it could have been put on the version of this image seen in Fig. 75.d.ii.a. and fiber which does not overhang the inventive image could have been used on Fig. 75.d.i.a. Regardless of which option is used, the fiber can be attached to the image over the connection seam and left as such if desired, visible on the image. Or, provided the fiber used is capable of becoming more invisible or completely invisible to the human eye within the bonding substance used to make the connection seam, the fiber can be completely embedded within the inventive image by the bonding substance, so that it does become more invisible or completely invisible to the human eye as is in Figs. 75.e. and f. Once the connection seam forms and the mold is removed, the resultant image can look like either Fig. 75.e. or f. because if an irregular piece of fiber was used, its overhanging edges can be cut or sanded off as desired (the irregularity in Fig. 75.e. is not due to its fiber).

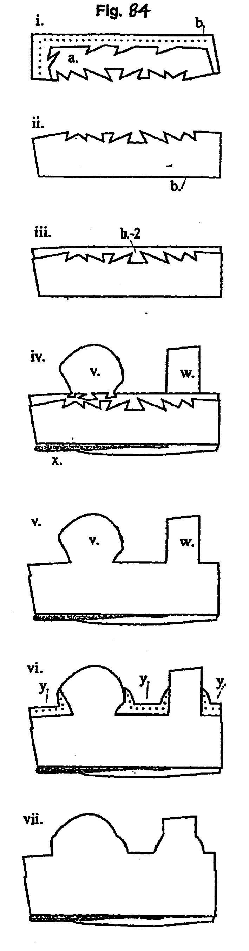

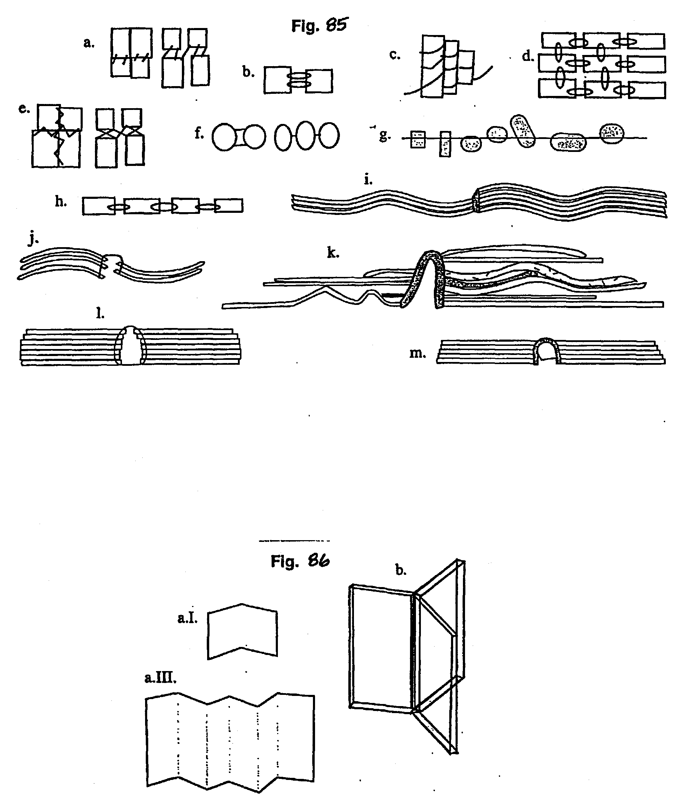

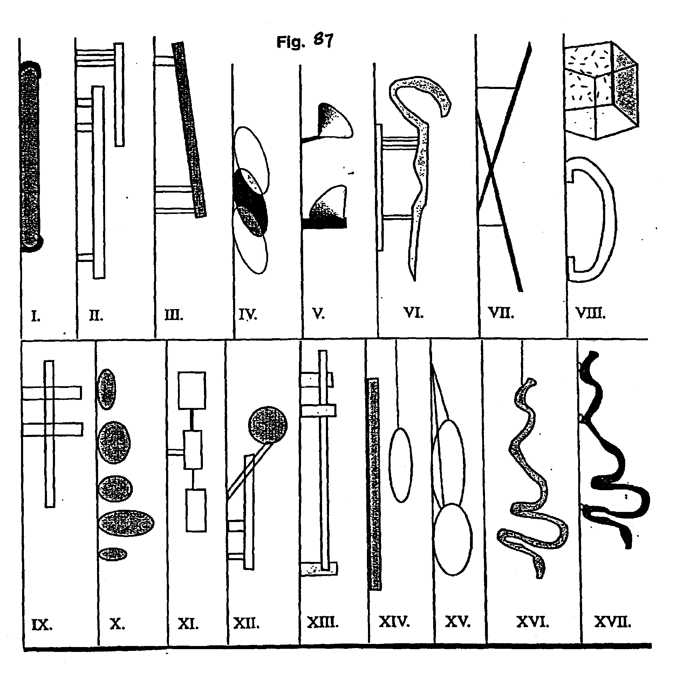

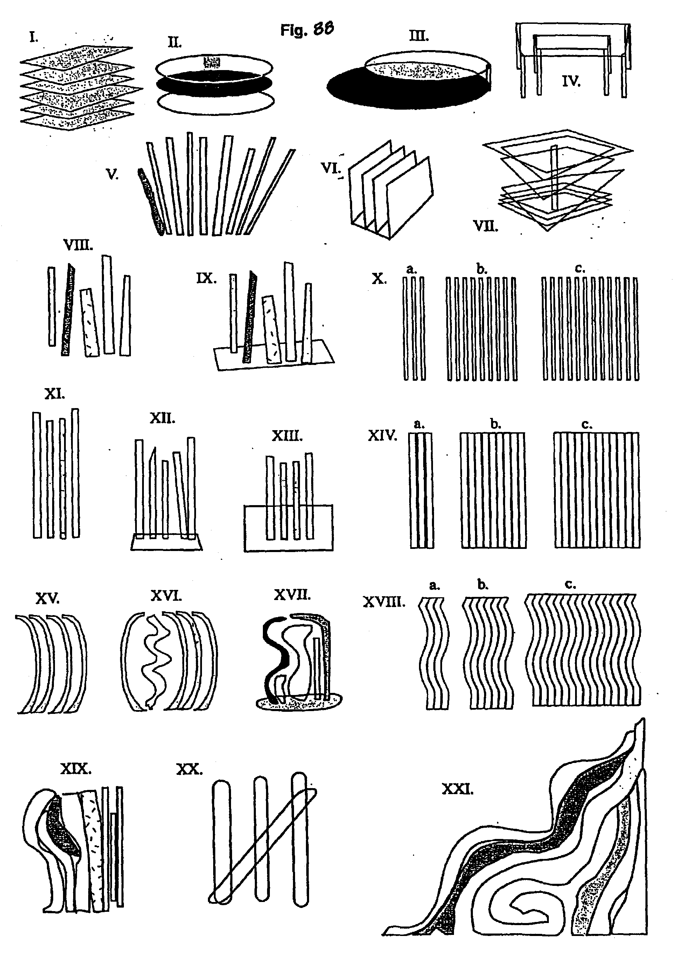

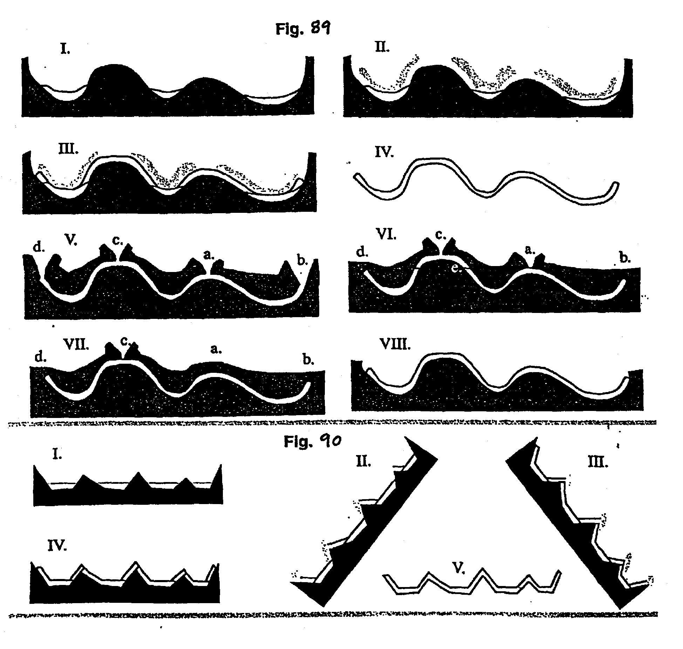

Fig. 84.i. shows fiber embedded within a bonding substance used on inventive image surface irregularities. In this illustration, the bonding substance is identified as b. and the fiber layer within it is rendered as a dotted horizontal line. The use of fiber within this bonding substance is optional. This application of b. with its embedded fiber is made on the surface irregularities of the inventive image identified as a. Once this application is completed, the same image is in Fig. 84.ii., turned over. Then, in Fig. 84.iii., the surface irregularities remaining on this inventive image are filled in and smoothed out by another application marked b.-2. which may be the same as the previous application b. or which may be made of a different composition. The inventive image part a., the applications b. and b.-2. made upon it, and the other parts v. and w. added to this image in later stages of its formation may be made of any composition desired, provided at least one of them is polymer. For example, this inventive image a. in this Fig. 84., might be polymer and/or non polymeric (e.g. glass, wood, metal, a conventional drawing on paper, a conventional painting on canvas, a collage, etc.). The bonding substances b. and b.-2. used on this inventive image a. might, for example, be Clarifying Imprimatura, they might be the same composition as the inventive image a., they might be a substance applied on an opaque inventive image a. and made of a composition that is either the same or different from a., or a combination of these. For example, if b. is transparent or translucent, Fig. 84.ii. shows that the layer of fiber embedded in it either becomes invisible, or its visibility is so slight that it is not seen or is not noticed, though it may decrease the transparency of this inventive image slightly due to its close proximity to its external surface. No fiber is added to the application b.-2. made in Fig. 84.iii., but while b.-2. is still wet, two new parts are attached to it which are marked v. and w. in Fig. 84.iv. One or both of these two new parts may be polymer and/or non polymeric. The new part v. is stuck into b.-2. It has surface irregularities on its bottom surface, but because it protrudes outward so much from this inventive image, it may not rely only of the mechanical bond of its surface irregularities to bond it to b.-2. The new inventive image part w. is attached to the surface of b.-2., bonding to it without surface irregularities once b.-2. is firm enough so that w. does not sink into it. Fig. 84.iv. also shows that a new application marked x. (shown in shades of grey on this image's underside) added on application b. Fig. 84.v. shows how this inventive image might look if its connection seams are not visible or not noticeable. Fig. 84.vi. shows the optional installation of three separate fiber pieces (shown as dotted lines marked y.) across the joints connecting the new inventive image parts v. and w. to this image. This fiber might for example, be placed on a thin layer of a bonding substance which is applied (e.g. painted) on these areas of this image. Thus these fiber pieces might be tacked or attached onto the image in the desired places, then superimposed and embedded by more of the same bonding substance used to tack or attach them to the inventive image. Fig. 84.vii. shows how this inventive image might look if none of its internal connection seams are visible or noticeable, e.g. if a., b., b.-2., v., w., y (the fiber) and the bonding substance used with y. are all the same color and all have the same refractive index, or the differences in these features are not noticeable. This might be the inventive image desired, but if it is not, this inventive image might be further processed, as desired.

Unlike many other conventional practices, all polymer have real, spatial depth that can easily be used as desired, e.g., for its aesthetic, structural and other purposes. Unlike many other conventional practices, the real spatial depth of polymer in inventive images can be used, altered, downplayed, ignored, or even negated, as desired, throughout the creation of the polymer and forever afterwards, and throughout the creation of the inventive image and forever afterwards (unless it is obstructed by non polymeric ingredients in an inventive image). This can affect other formal elements in inventive images as desired, e.g., light, color, structure, subject matter, content and meaning. The real spatial depth of polymer, gives inventive images a new form of light, transparency and/or translucency, or a combination of these, as desired. These can also affect other formal elements, e.g., light.

### Further Description of Layering

Figs. 12.-14.; 28..- 32., and 62.-68. show cross section or side views of inventive images made of multiple layers which generally alternate between one or two layers completely or principally made of polymer, and one or more layers that are completely or principally non polymeric. All of the inventive images in these illustrations can be interpreted as having one or more Separating Layers, which may serve one or more functions, such as: 1). to separate incompatible applications, e.g. so that acrylic can be permanently painted over oil paint; 2). to separate applications which would be less strong and/or less permanent than desired directly superimposed, e.g. lean applications might be separated from fat applications beneath them; 3). to increase the spatial depth, e.g. increase transparent or translucent spatial depth, or enable unlimited layering in permanent inventive images; 4). to bring light into the image; 5). to seal, coat or fix applications, e.g. charcoal, pastel, graphite, and watercolor applications which may be undesirably altered by a further superimposition without such a protective or coating layer; 5). to build up the form of an image; 6). for other aesthetic purposes, e.g. they might provide a preferable surface for a subsequent application be made on more successfully than this application could be made without a Separating Layer; 7). for other structural purposes, e.g. to make a flexible inventive image or even a conventional image (such as a painting on paper) rigid; 8). to make other formal elements of art in an inventive image as desired, e.g. they might be used to enhance an inventive image's color, function, subject matter, etc.; 9). for a combination of these purposes; 10). for no particular purpose at all.

In each of the inventive image in Figs. 12-14., 28.-32., and 62.-67., there is at least one layer and often multiple layers shown in white with a black outline. In at least one interpretation of each of the inventive images that follows, these white layers are polymer. Specifications for the actual coloration of the layers of the inventive images illustrated in Figs. 12-14., 28.-32., and 62.-67., are unlimited, e.g. they may be consistently or inconsistently colored and/or colorless, they may be transparent, opaque, translucent, or a combination of these, etc. If however one or more layers in these inventive images are transparent and/or translucent, light will pass through their spatial depth into the inventive image.

In the following descriptions of Figs. 12-14., 28.-32., and 62.-68., applications which are non polymeric might be made of one or more of a broad range of ingredients, e.g., collage, photography, painting, drawing, printing, writing, inlaying, attachments, all additive conventional image making practices, all new additive image making practices described herein, or a combination of these. Note that the polymer and the other applications in these inventive images may also be carved, incised, engraved, or altered by other subtractive processes. In addition, any of these inventive images can be further processed as desired. For example, one or more of their layers can be completely or partially removed, one or more layers can be added to these inventive images, or both. Though the majority of these examples are generally horizontally layered and fairly straight (e.g. they are examples of layering built up on planar surfaces), these layering combinations as well as others could also be made on surfaces of inventive images which are curved, 3D or both and they can also be made with layers that are more uneven and/or more inconsistent.

Fig. 12. shows an inventive image with four polymer layers, marked a., b., c., and d., shown in white with black outlines which alternate with five non polymeric applications shown in shades of grey and black. The layer marked e. is a sliver or piece of polymer, in between non polymeric layers. Notice that the four full layers of polymer encase or embed the three non polymeric layers in between them. One or more of these four full polymer layers may be Separating Layer Stabilizers. For example, in this inventive image, the layers a., b., c., and d. might be transparent colorless Separating Layer Stabilizers separating layers of oil painting. These layers of oil paint might be arranged such that one or more fat layers are superimposed over lean layers; one or more lean layers are superimposed over fat layers; some or all the superimposed oil paint layers in this sequence have the same or generally the same fat content, or a combination of these. Alternately, the image maker might be unsure of the fat content of one or more of these oil paint layers. As another example, in this inventive image, the Separating Layer Stabilizers a., b., c., and d. might be transparent colorless layers non polymeric Separating Layers which can not otherwise be layered directly upon one another as successfully, as permanently or both, e.g. layers of pastel, charcoal, incompatible applications, applications which will undesirably alter another layer beneath them, etc. By their transparency, these Separating Layer Stabilizers might give the inventive image a desired sense of deep spatial depth, light, luminosity or a combination of these.

As a further illustration, this inventive image might have begun by applying paint (shown in grey) according to conventional painting practices on both sides of the colorless transparent polymer initial image support d. Then the paint on the upper side of polymer layer d., is superimposed by new colorless transparent cPRM forming layer c. The layer of paint under polymer layer c. might bond to it and/or layer c. might bond to the exposed parts of layer d. on the right and left sides of this illustration. Then layer c. is superimposed by more paint (shown in grey) within which a sliver of cPRM or polymer is embedded (shown in white) marked e. While this new paint application might have been directly superimposed over the earlier paint application without the Separating Layer Stabilizer c. in between them, layer c. brings spatial depth and light to this inventive image and may benefit it in other ways too, e.g., making it more permanent. (For instance, if both of these two paint layers were oil paint, their direct superimposition might cause impermanence, e.g. discoloration, cracking, etc.) This second paint layer of this inventive image is superimposed by another full layer of colorless transparent cPRM marked layer b. Layer b. might bond to the paint layer beneath it, and/or layer b. might bond to the exposed parts of the polymer layer c. on the edges of this inventive image. When layer b. is superimposed by a layer made of a painted photographic transparency (shown in grey), layer b. becomes a Separating Layer Stabilizer. The layer of the painted photographic transparency is then superimposed by another layer of transparent colorless cPRM marked layer a. Layer a. might bond to the previous non polymeric layer and/or layer a. might bond to the exposed parts of the earlier polymer layer b. on the edges of this inventive image. Once layer a. is superimposed by pastel, graphite and transparent painting, it becomes a Separating Layer Stabilizer. When the resultant inventive image is viewed through its last layer, a photographic transparency is visible through painting, drawing and real spatial depth, and this photograph has further spatial depth, form, luminosity, coloration and other effects from the applications visible beneath it. When viewing this inventive image through its opposite side, it has effects of luminosity, color, deep space, and form created with more real spatial depth than might be possible in permanent conventional painting. In this illustration, any of the Separating Layer Stabilizers might have a surface preparation stabilizer on them.

In a second further illustration, this inventive image is made by painting on the upper side of the polymer layer d. with oil paints, and by applying watercolors and pastels on the under side of polymer layer d. Layer d. is again a polymer initial image support which can not be a stabilizer. As in the previous illustration, the transparent colorless Separating Layer Stabilizer c. is formed and it is superimposed by non polymeric applications, e.g., impasto acrylic painting. Over this layer, the transparent colorless Separating Layer Stabilizer b. is formed, and it is superimposed by non polymeric applications, e.g., conventional oil painting. Repeating the pattern, the transparent colorless Separating Layer Stabilizer a. is superimposed, then it is overlaid by watercolor painting forming this inventive image's upper external layer. Within this inventive image, oil paints are layered both under and over acrylic paints, watercolors are layered both under and over oil paints, and the quantity of layers permanently superimposed is greater than is possible in most conventional practices, e.g. in oils or in watercolors. When viewing this inventive image from the vantage of either the side shown as its top or the side shown as its bottom, watercolors are seen over oil painting and acrylic painting, with real spatial depth and real internal light which is not available in either conventional watercolors or conventional oils.

As interpretation 1. of the inventive image in Fig. 13. it has Separating Layers marked b., d. and f. of varying thicknesses and coloration. For instance, the Separating Layers b. and f. might be made of polymer as stabilizers and the middle Separating Layer d. might be made of glass with marks on it (e.g, etched, colored blown glass, color fused on glass, color painted on glass, etc.). Or for example, the Separating Layers b., d. and f. might all be made of polymer as stabilizers. These three Separating Layers add considerable spatial depth to this inventive image, thus if they are see through they might give this inventive image significant light also, e.g. unless the layers over and under them block the light from reaching them. As interpretation 2. of Fig. 13., this inventive image has two Separating Layers marked c. and e. For instance, layers c. and e. might be Separating Layer Stabilizers separating three layers b. d. and f. which are made of pieces of glass, wood, paper, fabric or a combination of these, which all have pastel, pencil or charcoal drawing upon them. For example, layers b., d. and f. might be reverse paintings on glass, conventional paintings, cast paper forms, conventional sculptures, found objects, painted inventive image parts, printing plates, carved blocks, or a combination of these separated and connected by Separating Layer Stabilizers c. and e. and coated by external layers of polymer. As interpretation 3. of Fig. 13., this inventive image is made using an image support or an initial image support. For example, this may be a non polymeric image support, or an image support stabilizer, comprised of layers b., d. and f., comprised of layers f. and d., or comprised of layers f. and b. Or, for example, this polymer and/or non polymeric image support is made of layers c. and e. As interpretation 4. of Fig. 13., this inventive image may have one or more surface preparation stabilizers. For example, layer c. and/or e. may be surface preparation stabilizers. Alternately layers b., d. and/or f. may be surface preparation stabilizers. Or, either layers f. and c.; or layers b. and e. may be surface preparation stabilizers. As interpretation 5. of Fig. 13., all of the layers in this image may be made with polymer.

The inventive image in Fig. 14. has five Separating Layer Stabilizers shown as thin white layers with black outlines, in between six non polymeric layers, each of which has multiple applications colored grey and black. Non polymeric layers are on two of the external sides of this inventive image, its right and left sides. Because the five Separating Layer Stabilizers within this inventive image connect to one another at its top and bottom sides, they encase or embed the four non polymeric layers in between them. One or more of these Separating Layer Stabilizers might for example, separate layers of conventional practices which would otherwise be less permanent and/or less strong. They might separate layers of oil painting applied lean over fat, or applied fat over lean, e.g., so that layers of oil paint will not build up thickly enough to jeopardize their permanence. They might separate layers of oil painting which are of the same or generally the same fat content. One or more of these Separating Layer Stabilizers may separate different media, different kinds of applications, or both, e.g. pastel from paint, impasto oil paint from watercolors, glazes from impasto, encaustic from gouache, collage from paint, charcoal from paint, encaustic from egg tempera, etc. Or, these Separating Layer Stabilizers might serve a combination of these functions. This inventive image's spatial depth is primarily formed by its non polymeric applications, not by its five thin Separating Layer Stabilizers, though they can affect its aesthetic. As an alternate interpretation Fig. 14., all of this image's layers may be polymer or contain polymer.

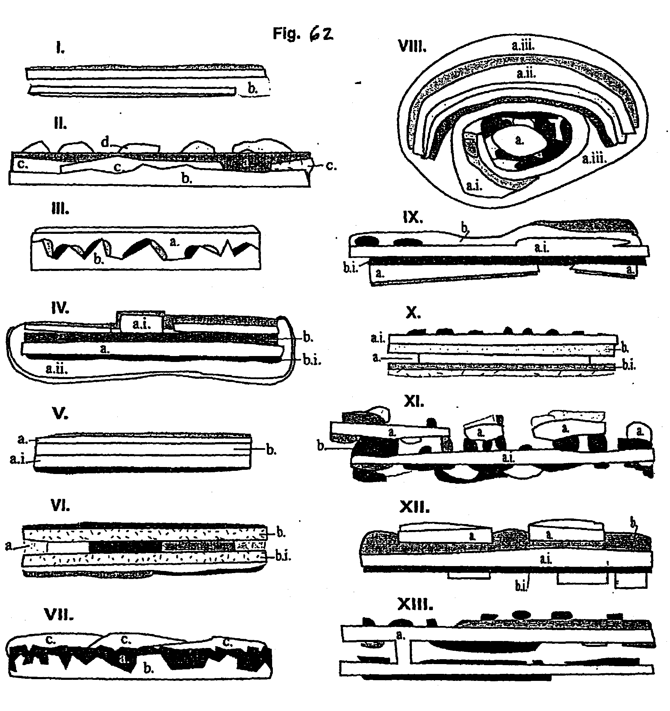

Fig. 62.I. shows an inventive image which might have layer b. as a Separating Layer, or it might have one or both of the layers shown in white as Separating Layers. (Layer b. Does not contact the darkly colored bottom layert. As a specific example, layer b. in this inventive image might be a conventional image, the two layers shown in white might be polymer, and the two external, upper and lower layers of this inventive image might be conventional paints such as oil paints.

In the inventive image in Fig. 62.II., the layer a. might for example, be a Separating Layer between the layers b. and c. below, and layer d. above. For instance, layers b. and c. might be polymer, the Separating Layer a. might be an acrylic paint based surface preparation stabilizer, and layer d. might be oil paint. Or, for example, layer b. might be carved wood or stone; and layers d. and c. might be conventional applications (e.g., oil paints, photographs, collage, etc.), separated by Separating Layer Stabilizer a. in between them.

Fig. 62.III. shows an inventive image in which layer a. may function as a Separating Layer. For example, layer b. might be carved or cast polymer, the angles of which are emphasized by the applications of color shown in grey (e.g., a special effect) which are of a different composition than the polymer layer b., e.g. this color is a cPRM paint or a conventional paint (such as impasto iridescent oil paint) which may or may not bond to its polymer support. These color applications are superimposed and embedded by Separating Layer a. which might be comprised of either the same cPRM as layer b. or a cPRM which bonds to layer b. Because layer a. bonds to exposed bonding spots on layer a. and/or b. may or may not bond or bond well to the coloration in between them. Layer a. is then superimposed by a different application, e.g. watercolor paint. Then, viewing this inventive image through the side shown as its upper side, might for example, be viewing iridescent oil colors angled at different real spatial depths beneath conventional watercolor washes I an inventive image with significant luminosity.

Fig. 62.IV. shows an inventive image in which layers a., a.i., and a.ii. might all be Separating Layer Stabilizers between other conventional media and materials. Alternately, in this inventive image, layers b. and b.i. might be Separating Layers in between layers of different compositions.

In inventive image in Fig. 62.V. the layer a., layer a.i. or both might be Separating Layers. Or, a., b. and a.i. might comprise a single Separating Layer or a single image support (e.g., stabilizer). For example, layer b. might be a new unique imprimatura made of colored polymer covered on two sides by a surface preparation stabilizer marked layers a. and a.i. which enables further superimpositions to bond. Alternately, if a., b. and a.i. are subdivisions of a single layer, a. and a.i. might be made by embedding a form in polymer with the polymer segment marked b. in between them. For instance, a. and a.i. might be photographic transparencies, conventional drawings on paper, paper casts, metal casts, cut-outs, conventional paintings, or a combination of these completely encased, which both serve as Separating Layer Stabilizers separating the two non polymer external layers on the upper and lower sides of this inventive image, from one another, e.g. separating a layer of encaustic from a layer of gold leaf. As another illustration, layer b. might be a fresco or a mosaic, layers a. and a.i. might both be Separating Layer Stabilizers and the two external upper and lower layers of this inventive image might be conventional paints, such as oil paints. As an alternate interpretation of this inventive image, layers a. and a.i. might be Separating Layer Stabilizers, glass or both, separating the layers of conventional paint, which are layer b. and this image's two outer layers.

Fig. 62.VI. shows an inventive image with a continuous multicolored layer marked a. which might be an image support (e.g., stabilizer), a Separating Layer Stabilizer or a Separating Layer of a conventional paint, e.g. acrylic paint. Or, layer b. and/or b.i. could be polymer and/or non polymer Separating Layers, e.g. glass or paint, perhaps with a surface preparation stabilizer on them which enables them to bond strongly to the applications in direct contact with them.

Fig. 62.VII. shows an inventive image in which layer b. is textured (e.g., carved, or cast with texture). The application made on layer b., layer a., also has some texture on its upper surface, e.g., it is engraved or incised. Further applications marked c. are made on layer a., e.g. transparent applications. Layer a. might for example be a Separating Layer, or it might be a surface preparation stabilizer. For example, layer b. might be a carved layer of polymer. Layer a. might be an incised application of paint, or an incised piece of wood bonded to layer b., and layer c. might be further applications of polymer, conventional paint such as acrylics, or both. As another example, layer b. might be a carved piece of wood, plaster, or stone, or textured paper; layer a. might be polymer with engraving, and layer c. might be paint.

Fig. 62.VIII. shows the cross section view of a volumetric inventive image. Within it, layers a., a.i., and a.ii. might for example, be Separating Layers, e.g., polymer separating layers of conventional paint (such as oils, water based paints, etc.). Or layer a. might be a metal, wood or glass rod; layer a.i. and a.ii. might be crystal; layer a. iii. might be polymer, and all of the other layers within this inventive image might be conventional paints.

In the inventive image in Fig. 62.IX. layer b., a.i., b.i. or a. may be Separating Layers. Both layers b. and b.i. might be Separating Layers; both layers a.i. and a. might be Separating Layers; or both layers b. and a. might be Separating Layers. For example, layer a.i. might be metal, wood, stone, paper, a drawing on paper or a photograph; layer b. might be polymer superimposed by a layer of a conventional paint; layers b.i. and a. might both be polymer and the lowest layer of this inventive image might be a conventional paint.

Fig. 62.X. shows an inventive image which might have layer a., a.i., b., or b.i. as a Separating Layer. Alternately, this inventive image might have both layer a. and a.i., both layers b. and b.i., or both layers a.i. and b.i. as Separating Layers. Also, the shapes of the air pockets on either side of layer a. in between the two longer layers b. and b.i., indicate that layers b., a. and b.i. were not superimposed as liquids, but rather that one or more of these layers was pre formed (to some extent at least) and then attached. For example, layer a, might be a piece of glass and layers b. and b.i. might be colored polymer layers. All three of these layers might be bonded using the same cPRM as is used in layers b. and b.i. Alternately, layers b., a. and b.i. might all be made of different papers stiffened and connected by a coating of polymer in which case no single one of these layers would function as a Separating Layer, but all three together as a single unit might function as such separating the lowest layer of this inventive image from layer a.i.

Fig. 62.XI. shows an inventive image in which the layer a. and the layer a.i. might both be Separating Layer Stabilizers (even though the layer a. is not continuous) separating applications which are neither cPRM nor polymer. Alternately, layers a. and a.i. in this inventive image might be non polymeric Separating Layers, (e.g. glass, metal, paper, canvas, etc.) separating various colored and colorless polymer pieces or applications in this inventive image's other three layers. In a third interpretation of this same inventive image, the layer b. might be a Separating Layer made of multiple discontinuous segments, which is polymer and/or non polymeric (e.g., multiple parts, broken color, impasto, multiple parts, etc.).

Fig. 62.XII. shows an inventive image in which layers a., a.i., or both might be Separating Layers; layers b., b.i. or both might be Separating Layers; or layers a. and b.i. might be Separating Layers. For example, layers a. and a.i. might both be Separating Layer Stabilizers with conventional paints on them, layer b.i. might be a layer of silver leaf, and the layer below it might be a conventional paint. Alternately, layer bi. could be an image support, or a surface preparation stabilizer (e.g., on layer a.i. which could be an image support).

In the inventive image in Fig. 62.XIII. the air pockets within its horizontal layered form marked a. which function as a Separating Layer. For example, the inventive image part marked a. might be made of polymer and all of the applications of coloration might not be polymer and/or non polymeric. Alternately, the inventive image part marked a. might be non polymeric (e.g. it might be wood, metal, glass, paper, etc.), and the applications of coloration upon it might be made with colored cPRM; and/or they might be made of polymer and then colored (e.g. painted).

In the inventive image in Fig. 63. one or more of the layers e., f., and g. might be Separating Layers and/or an image support made of one or more parts. Or, the layers c. and/or b. might be Separating Layers, even though these layers are discontinuous. As alternate interpretation, layers b. and f. might both be Separating Layers, or layers g. and c. might both be Separating Layers. For example, layers e., f., and g. might all be Separating Layer Stabilizers, keeping layers of other compositions apart, such as paints (e.g. incompatible layers of paint, layers of paint which could not have otherwise been layered so thickly, or layers of paint which could not be directly superimposed for other reasons). If layers. e., f. and g. are transparent or translucent, they would bring light into this image. As a different interpretation, the layers b. and c. might be Separating Layer Stabilizers; layers e., f. and g. might for example be paper, glass, printing plates, wood, canvas; conventional drawings, paintings, prints or photos, etc.; and the external layers d. and a. might be polymer and/or non polymeric.

The inventive image in Fig. 64. and the curved inventive image in Fig. 65. can be interpreted in the same ways as the inventive image in Fig. 63, though their layers shown in grey are thicker and more in number. If for example, the layers of the inventive images shown in white in Figs. 63-65. are strong enough the layers of these inventive images might be made and superimposed in any order, and rearranged as desired. For instance, any layer shown in white in each of these inventive images might have served as a part of this image's initial image support which was further processed on one or both sides.

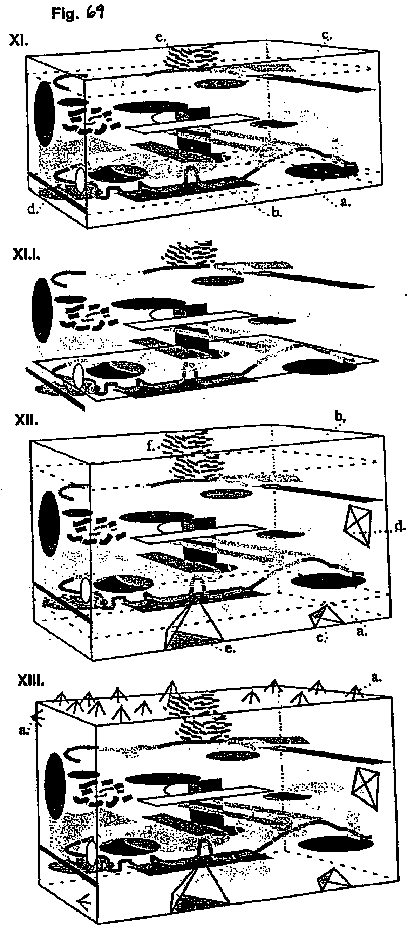

Fig. 67. shows cross section or side views of four different layered inventive images which in the following interpretations, each have at least one cPRM layer. In one interpretation, all of the layers shown in white in the four inventive images of Fig. 67. might be made of cPRM, the other layers might be made of either a combination of cPRM and other ingredients, or they might be entirely non polymeric. In an alternate interpretation, all of the layers shown in grey and black might be cPRM and the layers in white might be made of either a combination of cPRM and other ingredients, or they might be entirely non polymeric. In a different interpretation, all of the layers in the inventive images in Fig. 67. might be made of cPRM. One or more of the layers of these inventive images might have been made with a surface preparation stabilizer such as a mixed polymer. One or more of the internal layers of these four inventive images might serve as Separating Layers. One or more of these inventive images might have been processed from more than one of its sides. One or more of these inventive images might have begun with one or more layers serving as initial image support which may be a stabilizer, e.g., one or more, or even all its the white layers in any or all of these inventive images could serve as initial image supports. The formation of one or more of these images might have involved combining two or more images into one whole. The formation of one or more of these inventive images might have involved rearranging their layers. Most or all of the layers in one or more of these inventive images might be transparent or translucent. One or more of the layers within one or more of these images might contain a light source, (e.g., one which does not require protruding parts such as electric cords such as an EL Lamp, or Light emitting diodes, LED). One or more of the layers within one or more of these images might be light reflective, e.g., a layer of paint, cPRM with reflective particles, dichroic glass, etc. These are more examples.

Fig. 67.I. shows an inventive image which might have begun with layer a. which might have served as an initial image support, e.g., made of a new unique imprimatura made of colored cPRM; a colorless transparent polymer plane; a conventional image covered with polymer (such as a drawing or a photograph); a fiber stabilizer embedded in polymer; or a conventional image support such as canvas or wood. Layer a. might have a surface preparation stabilizer on both of its sides which enables layers d. and e. to bond to it well. Layers d. and e. might both made of segments, broken color and/or multiple parts, e.g. they might be made using polymer, conventional paint, inlaid or attached objects, or a combination of these. Layers b. and c. might for instance, be made of polymer separately, and then attached to this inventive image e.g., using a bonding agent, or just bonding to layers d. and e. while they were wet. Layers b. and c. might be comprised in one of the ways suggested for layer a. But before layers b. and c. are attached to this inventive image one or both of their sides are covered with one or more layers such as collage, applications of painting such as glazes and washes, layers of photography, layers of drawing or a combination of these. Once layers b. and c. are attached to this inventive image, their external sides are further processed with additional bonding coloration. Thus, looking through the upper or lower sides of this inventive image is looking through a variety of different kinds of layers. For example, looking through this inventive image from its upper side might be looking through a painted photograph, a layer of polymer, pieces of colored glass and more polymer, broken color paint, more polymer and impasto paint. It is unlikely that the resulting visual effect can be made in a permanent conventional image.

Fig. 67.II. shows an inventive image which may have four very different layers. For example, its upper layer might be impasto (e.g. oil or acrylic paint), or it might be attached or inlaid materials and/or media (e.g. wax, cast metal parts, wire, paper forms, glass forms, polymer forms, etc.). The layer beneath, marked layer a., might be a Separating Layer, e.g. of polymer or of glass. Alternaely layer a. might be an image support. Beneath layer a. is a very thin layer marked layer b. which might, for example, be made of polymer, paint, paper, metal, photography, leaves, fabric, a conventional painting on silk or canvas, a conventional drawing on paper, a conventional print, a conventional written document (such as a letter or a legal document), a combination of these, etc. If layer a. is not a Separating Layer b. might be. The bottom layer of this inventive image (which is about twice as thick as layer a.), might or might not be made of polymer, e.g., it might be glass, canvas, polymer, wood or a combination of these. As an further illustration, viewing this inventive image through its upper layer might be looking through the spaces around impasto painting through a transparent colored layer a. made of polymer to see a delicate layer of transparent painting (layer b.) which is supported by a transparent layer of polymer which is slightly reflective so that it reflects light back out through the layers of this inventive image. In another interpretation, the bottom two layers of this image might be polymer image support stabilizer, the colored part of which labeled layer b. may be a surface preparation stabilizer. Alternately, layer a. may be a surface preparation stabilizer and beneath it, layer b. may be an image support.

Viewing the inventive image in Fig. 67.III. from its upper side might for example, be looking through attachments and inlays, polymer, glazes and photographic transparencies, polymer, broken color, underpainting, scumbling and direct painting with traditional painted highlights. The resulting visual effect cannot be made in a permanent conventional image. In this inventive image, layer a., b., c., d. or a combination of these may be Separating Layers or an image support which may have a surface preparation stabilizer on it or them. Alternately layers e., f., g., or a combination of these may be Separating Layers, perhaps with surface preparation stabilizers on them. Or, layers from both of these two groups which are not in direct contact may be Separating Layers, perhaps with surface preparation stabilizers upon it or them. Alternately, layers g. and/or e. may be an image support. It is unlikely that the resulting visual effect can be made in a permanent conventional image.

Fig. 67.IV. shows an inventive image numerous layers. In this inventive image, layer a., b., c., d., e., f., g., h., i., or a combination of these may be Separating Layers, perhaps one or more of which have surface preparation stabilizers upon them. Alternately layer j., k.,l., m., n., o., p., q., or a combination of these may be Separating Layers perhaps one or more of which have surface preparation stabilizers upon them. Or, layers from both of these two groups which do not come into direct contact with one another may be Separating Layers perhaps one or more of which have surface preparation stabilizers upon it or them. For example, viewing this inventive image through its upper layer might be viewing through polymer with incised drawing on it to see: broken color painting, a thin layer of polymer, layers of glazes, a layer of glass, a layer of connected polymer parts, layers of chiaroscuro, impasto painting, on a polymer with a Clarifying Imprimatura oil painting, partial layers or slivers of polymer, a layer of photograph transparencies on a polymer with painting on its reverse side. It is unlikely that the resulting visual effect can be made in a permanent conventional image. This image might have been multiple images that were stacked on one another. For example, layers i. - g. may have been an image, separate from the image formed by layers k. and g., separate from the image formed by layers d. and 1., separate from the image formed by layers m. through a., etc.

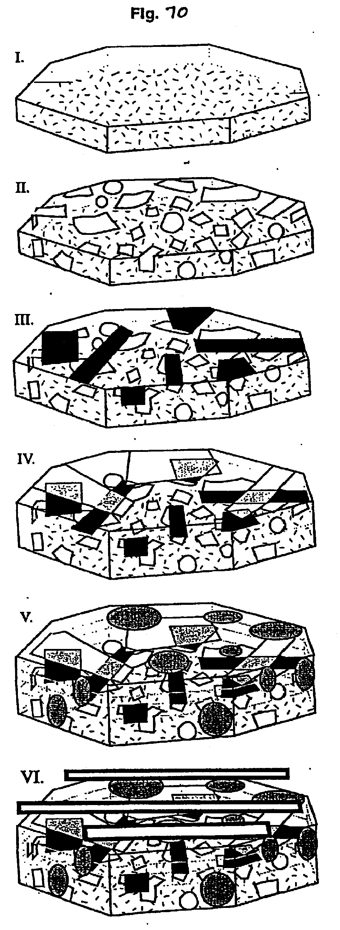

Fig. 68. shows examples of layering in twelve inventive images. The inventive images in Fig. 68. all have at least one layer of polymer, though these are not specifically designated. For example, the inventive images in Fig. 68. might be inventive images made of polymer layers that alternate with other applications, such as layers of conventional paint alternating with colored polymer; these images might have Separating Layer Stabilizers, non polymeric Separating Layers, various surface preparation stabilizers, image supports, or a combination of these, they might have layers that form chiaroscuro effects, etc. Fig. 68.XII shows a new effect with broken color applications.

One or more of the inventive images in Figs. 63-65., 67, and 68.VII.-XII. might for example be close up cross section or side views of paintings of the present invention which are copies of Monet water lily paintings, Seurat paintings, or other broken color paintings. Figs. 68.L-VII. might for example be close up cross section views of paintings of the present invention which are copies of paintings by Dutch old masters such as Rembrandt and Vermeer. But in comparison to the originals (which may have become more transparent or translucent due to the natural aging of their layered oil paint), these inventive images could be more transparent, more translucent, more luminous, and their use of real light and real spatial depth particularly with color, can be developed in a wider range of ways for effects unlike anything these or any other old masters could make. These inventive images can also be more stable over time than paintings by old masters.

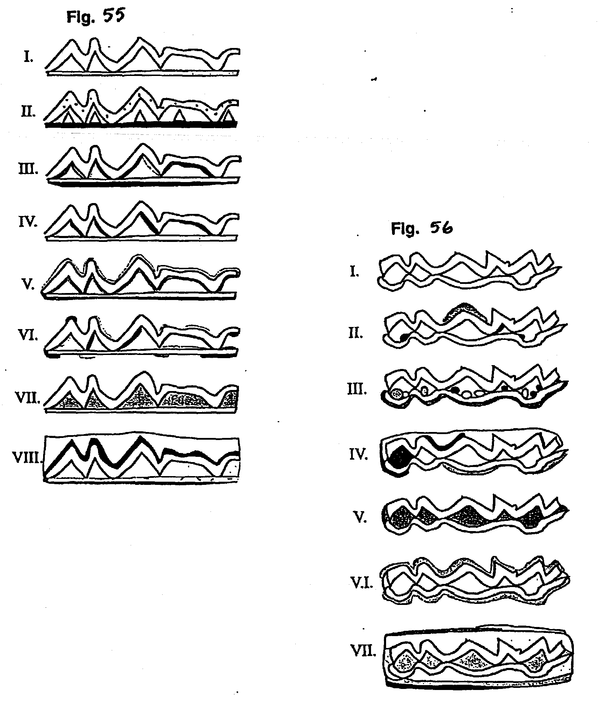

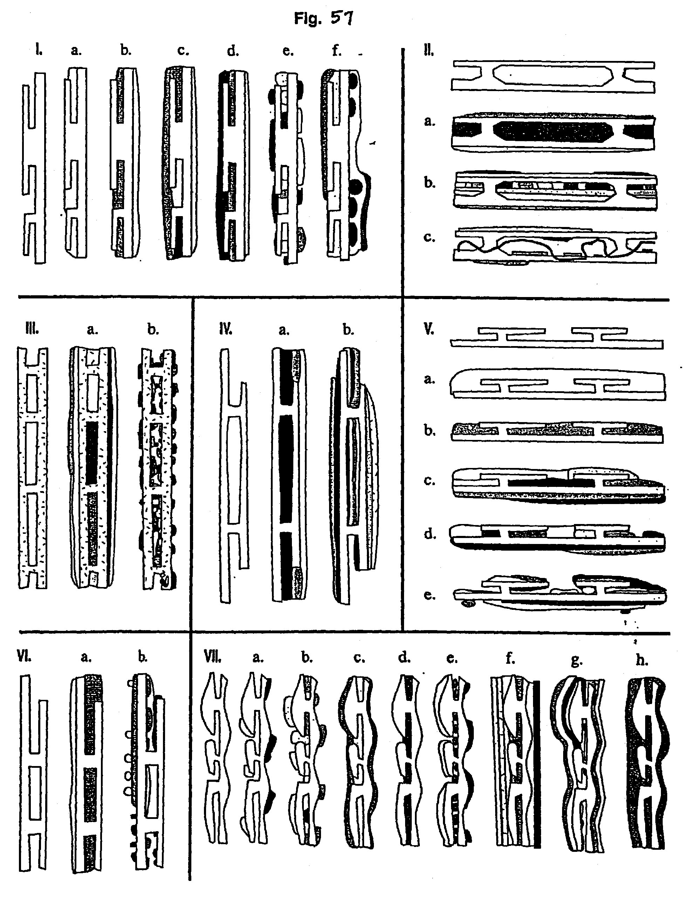

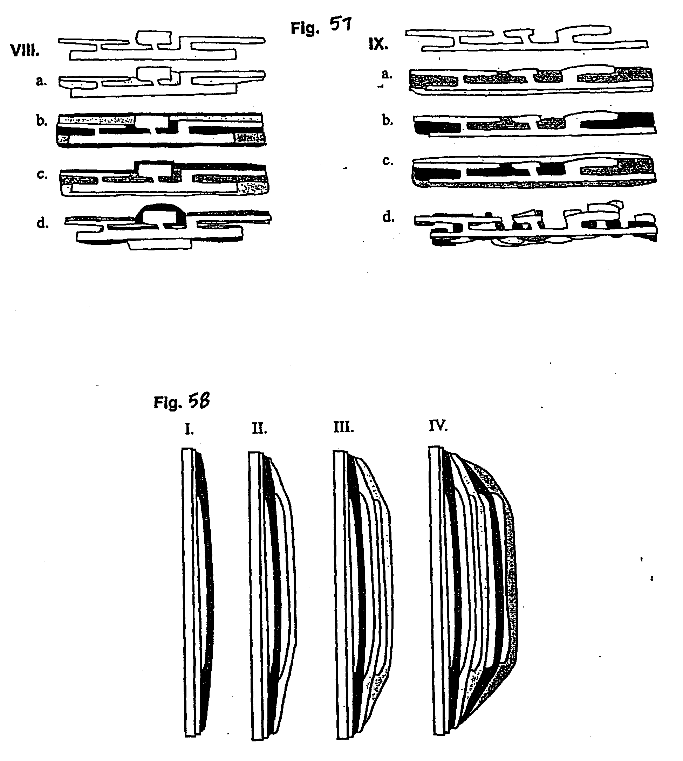

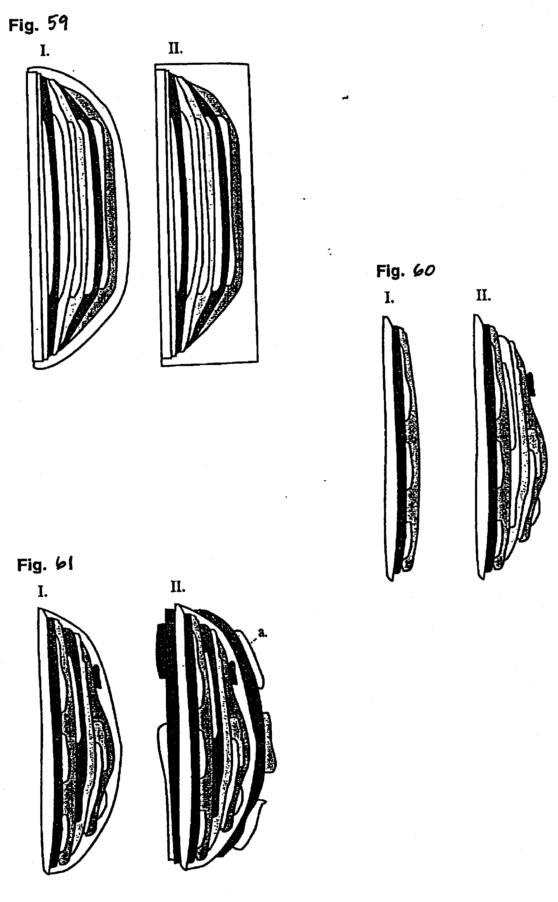

The inventive images shown in cross section or side views in Figs. 55.-57. are further examples of the ways of using layers and parts in inventive images. The first inventive image in Fig. 55.I., in Fig. 56.I., and in each of the series I.- IX. in Fig. 57., is made of polymer or of polymer and one or more other ingredients, e.g., polymer with a surface preparation stabilizer which enables bonding of superimposed applications, or such bonding enabled by the composition of the entire polymer form, for example by the use of an absorbent polymer. Thereafter, different options for the development of the same initial polymer formation is shown in the series of similar inventive images that follow in 55 .II.-VIII., 56.II.-VII., and in each of these series L-IX. of Fig. 57. to illustrate variations of ways an individual layering formation might be used with other polymer and/or non polymeric layers, e.g., for desired effects. Some of the layering formations in Figs. 55.-57. might have one or more Separating Layers, some have layers of different kinds of applications, e.g. photography over paint, over drawing, over printing, over writing, new painting processes over conventional ones, different conventional image making processes over one another, such as broken color over washes, etc. Imagine the visual effect of these inventive images if they are layered with conventional paints, such as layers of transparent oil paint, watercolor, or both. Many of the effects which might be made in such layering formations can not be comparably made using conventional practices. One or more of these inventive images may also be further processed as desired.

In Fig. 55.I. an inventive image is shown made of two layers, the top layer has significant undulations (texture), the bottom layer is planar, and there are air pockets in between these two layers. The top layer might for example, be made of polymer and the bottom layer might be polymer and/or non polymeric (e.g., a reflective metal, mirror, or a polymer covered with a material or medium that makes it upper surface reflective, such as silver leaf, iridescent or metallic paint, etc.). Alternately, the top layer might be crystal and the bottom layer might be polymer with an upper surface that reflects light up through the crystal layer, e.g. polymer with an incised drawing and a painted upper surface. In Figs. 55.II.-VIII. In Fig. 55.II., the top layer of this inventive image layering formation may have paint on it and/or particles attached to it, there are prisms in its central air pockets and its bottom layer maybe made of a mirror, or of an image support with an EL lamp on it. In Fig. 55.III. the underside of both the top and the bottom layers of this inventive image may be colored, e.g. with applications of paint or colored cPRM. In Fig. 55.IV, the underside of the undulating top layer of this inventive image may be colored and/or reflective with repeated applications at similar angles, and its bottom layer is colored. In Fig. 55.V. there are continuous applications superimposed on both sides of the top layer of this inventive image and on the underside of its bottom layer, e.g., conventional paint such as watercolor washes or oil paint glazes. In Fig. 55.VI. there are broken color or partial layers of differently colored applications on both sides of both layers of the inventive image. In Fig. 55.VII. an application of coloration (e.g., polymer, paint, wax, sand, plaster, paper pulp, or a combination of these) fills in the air pockets in between the two layers of this inventive image completely. In Fig. 55. VIII. applications of different coloration are on all sides of the two layers of the inventive image formation, filling its internal air pockets.

Fig. 56.I. shows an inventive image layering formation made of two undulating layers with empty air pockets in between them. These two layers might for example, both be polymer or one might be polymer and the other glass or paper.

Fig. 38. is an inventive image interpreted in different ways. Its layer a. might be the initial image support. The smallest white rectangles within this inventive image, such as d.), might be pieces or slivers of polymer in between other applications, e.g., for aesthetic purposes, such as for light and spatial depth. For instance, if these are pieces or slivers of polymer, layer a. might be polymer (e.g., a stabilizer), and layers b. and c. might be conventional paints. Alternately, the pale gray partial layers within this inventive image (such as c.) might be partial layers of polymer. The small white rectangular shapes within this inventive image (such as d.), might be bonding spots, bonding these partial layers of polymer to non polymeric layers (shown in medium and dark grays such as b.). Layer a. may be polymer and/or non polymeric. For example, the medium and dark grey layers (such as b.) might be a conventional paint which does not bond or bond well to polymer. The bonding spots (such as d.), enable this paint to bond as well as desired to the layers of polymer shown in pale gray (such as c.). For instance, in this example, these bonding spots might be made of a mixed polymer stabilizer, or they might be made of a paint with SSI. And in another alternitive, the small white rectangles within this image may indicate sites of bonding which are substantially less wide than shown in this illustration.

The inventive images shown in Fig. 58. -61. show cross section or side views of inventive images which have embedded pieces, partial layers, or slivers (illustrated in white), which might for example, be polymer and/or non polymeric, e.g., glass, wood, lenses, mirrors, mica, a drawing, a painting, a photograph, transparent paint, iridescent paint, light sources, metal, a combination of these, etc. The layers in direct contact with this embedding (illustrated in grays), might be made of polymer. The layer of each these inventive images on their furthest left sides (shown in white) might be polymer and/or non polymeric, e.g. made of glass, wood, lenses, mirrors, mica, a drawing, a painting (even on a traditional canvas), a photograph, a light source, metal, a combination of these, etc. Thus, as a specific example, from its left layer to its right, the inventive image in Fig. 60.I. could be made of a layer of metal, superimposed by a new unique imprimatura of colored transparent polymer. The three applications on the imprimatura (show as embedded white layers) might be one photographic transparency, one piece of crystal and one application of a conventional transparent paint. These three applications, might then be superimposed and thus embedded, by a transparent layer of the same polymer used for the imprimatura, with slightly different coloration. As a second example, from its left layer to its right, the inventive image in Fig. 60.I. might be a layer of transparent polymer (shown in white) superimposed by a surface preparation stabilizer such as a Clarifying Imprimatura or a smooth acrylic polymer surface which will bond to application superimposed (shown as a grey layer), then superimposed by three small applications (illustrated in white) which might be three pieces of transparent polymer; one photographic transparency, one piece of crystal and one application of a conventional transparent paint; or a combination of these. These three elements are then superimposed and embedded by another layer of acrylic paint. Refer to embedding in Figs. 66.II. and 54.II.

Figs. 58.-61., show inventive images which have partial layers, slivers or pieces of polymer in between their layers of other applications which might for example be of any composition that is different from the specific polymer used in each image's partial layers of polymer, e.g., these might be conventional applications of paint, drawing, collage, printing, a photograph, text, or a combination of these. In addition or instead these might be applications of a polymer different from that in their partial layers of polymer. Each of these images might have an image support (which might be an initial image support and/or a stabilizer) and is shown on their left side in white Fig. 58.I-IV., shows the progressive formation of an inventive image in four stages. For example, this inventive image could be made of layers of polymer (shown in white outlines) alternating with layers of other applications (shown in shades of grey). Specifically, for instance, these inventive image might begin on a polymer initial image support and be superimposed by another different application (shown in grey), then by a partial layer of polymer (shown in white), and then by a different application again (shown in grey). Fig. 58.I. - IV. shows these partial layers of polymer become embedded in this inventive image when they are superimposed by other applications. This process of adding alternating partial layers of polymer (shown in white) with layers of other applications (shown in grey) can continue until the desired inventive image is formed. If the inventive image desired is formed at any stage in this progression before IV., further processing can cease. If the inventive image in Fig. 58. part IV. is not the image desired, it can be further processed, e.g., carved or layers can be removed and/or added. Alternately, the inventive image in Fig. 58. part IV. can be made into the inventive image in either Fig. 59.I. and/or 59.II. In Fig. 59.I., the inventive image in Fig. 58.IV. is superimposed by a layer of polymer (shown in white with black outlines), which covers its three sides of other applications, encasing this entire inventive image in polymer, while maintaining its curved shape. The inventive image in Fig. 59.II. is also encased, by superimposing either the inventive image in Fig. 58.IV. or 59.I. with another layer of polymer which straightens out the image's curved shape.

Fig. 59. can also be interpreted in a different way. Figs. 59.I. and II. may be two independent inventive images, or Fig. 59.II. can be made as a progression from Fig. 59.I. The initial image layer shown on the left side of both of these inventive images in Fig. 59. (shown in white) might be a non polymeric ingredient, e.g., wood, glass, paper, canvas, a painting (even on a traditional canvas), a drawing, a photograph, or a combination of these. One or more of the grey layers superimposed might be polymer. And one or more of the white smaller partial layers in between the grey polymer layers, might be embedded non polymeric applications, e.g. glass, mirrors, lenses, gratings, paper, wood, paintings, drawings, photographs, found objects, collages, or a combination of these. Then, the final layer superimposed over three sides of each of these two inventive images (shown in white) may be polymer and/or non polymeric. For example, on one or both of these inventive images this last encasing layer might be polymer, e.g., which bonds to the inventive image's other polymer layers (shown in grey) in the areas in which they are in contact. Alternately, the final layer superimposed on three sides of one or both of these inventive images might be non polymeric, e.g., bonding to the image support on the far left side of one or both of these inventive images (the image support which bonds to polymer layers in one or both of these inventive images, or a combination of these) for example, this final layer might be made using a colorless transparent acrylic gel which bonds to surface irregularities with which it is in contact, even though no other part of the same inventive image might be made of acrylic or of the same acrylic.

Fig. 60. also shows an inventive image formed using embedded partial layers, pieces or slivers (shown in white), which alternate with layers of other applications (shown in shades of grey) on an initial image support (shown on the left side in white). Fig. 60.I. and II. might be two independent inventive images or the inventive image in Fig. 60.II. might be formed by further processing the inventive image in Fig. 60.I. For example, the inventive image in Fig. 60. might be made using a polymer and/or non polymeric initial image support (shown on the left side in white), superimposed by a non polymeric application (shown in grey), e.g., conventional painting application, drawing application, a drawing on paper, a painting on paper or canvas, a photograph, metal, wood, found objects, glass, or a combination of these. This non polymeric layer (shown in grey) is then superimposed by partial layers, pieces or slivers of polymer (shown in white), e.g. colorless transparent polymer. Then these pieces of polymer are superimposed by another non polymeric layer which embeds them. More specifically, for example, the inventive image in Fig. 60. I. might be a polymer sheet (shown in white) with conventional paint on it (shown in grey), onto which three small polymer pieces are superimposed (the three white pieces) e.g., forming a broken layer of polymer. These pieces of polymer are then overlaid with a second layer of transparent or translucent paint (shown in grey) which embeds them.

The inventive image formed in Fig. 60.I. may be the image desired, but if it is not it may be further processed. For instance, it might be reworked using one or more processes which remove matter from it, e.g., it might be incised. Or as another example, its last layer on its right side can be partially or completely removed and its central broken layer of polymer pieces can be made continuous by adding cPRM in between them. Then if desired, its last layer can be reapplied. In addition or instead, this inventive image might be further processed using only additive processes. For instance, it might be further processed by continuing to apply alternating layers like, or similar to those which were used to form it - more pieces of polymer (shown in white) superimposed by non polymeric applications (shown in grey) which embed the pieces of polymer forming the inventive image in Fig. 60.II. This may be the inventive image desired, but if it is not this image may be further processed as desired.

The inventive image in Fig. 61.I. may be the inventive image in Fig. 60.II. further processed, or it may be formed independently. For example, the inventive image in Fig. 60.II. can be superimposed by a layer of the same polymer or by a non polymeric layer of the composition used to make its initial image support (the outer layer on its left side), forming the inventive image in Fig. 61.I. and encasing this image consistent outer layer, e.g. embedding its layers in transparent polymer. Alternately, this inventive image in Fig. 60.II. might be superimposed by a layer made using a composition which bonds to it, but which is different from the composition used to make its initial image support. Either way, the inventive image formed in Fig. 61.I. might be the inventive image desired, but if it is not, this image may be further processed as desired. For example, it may be formed into the inventive image in Fig. 61.II. by superimposing further applications all around it (a segment of which is marked a. in this illustration). These new applications may be polymer and/or non polymeric, as desired. The inventive image in Fig. 61.II. might be the image desired, but if it is not, it might be further processed as desired. Alternately, if the inventive image in Fig. 61.I. is independent from the inventive image in Fig. 60.II., it might be very different from it. For instance, one or more of the layers shown in grey in the inventive image of Fig. 61.I. might be partial layers of polymer, and one or more of the layers shown in white in this image might be non polymeric, e.g. they might be metal, glass, an application of paint, a drawing application, a drawing on paper, a painting on canvas, a photograph, wood, paper, etc. This may be the inventive image desired, but if it is not, this image may be further processed with more superimposed polymer and/or non polymeric applications, as in Fig. 61.II. As a specific example, if all of the layers shown in grey in the inventive image in Fig. 61.I. are transparent polymer, the smaller embedded white layers within these polymer layers might be embedded pieces of transparent dichroic glass, and this entire inventive image might be covered by a Clarifying Imprimatura (shown as the white layer encircling this inventive image) made of a semi gloss, colorless transparent acrylic gel. This may be the inventive image desired, but if it is not, this image may be further processed by superimposing conventional applications of acrylic paint and/or an oil paint on its Clarifying Imprimatura so that it is also a surface preparation stabilizer, as in Fig. 61.II.

The inventive image in Fig. 66.I. is made using three pieces of polymer (shown in white), which are superimposed and connected by multiple non polymeric applications (e.g., conventional broken color painting). This may be the inventive image desired, but if it is not, this image can be further processed. One way that this inventive image can be further processed is by applying non polymeric applications on the other sides of these three pieces of polymer, embedding them as in Fig. 66.II.

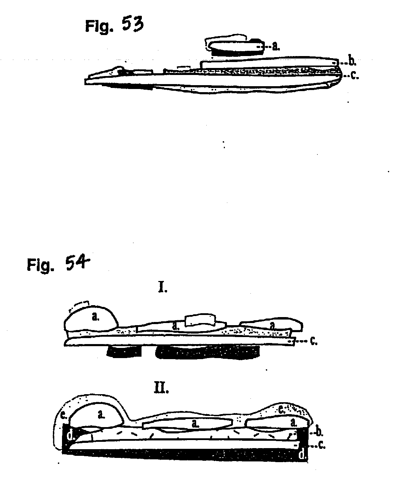

Figs. 53.-54. also show inventive image with partial layers of polymer in cross section or side views. In the inventive image in Fig. 53. the white partial layers marked a. and b. are polymer and the lowest white layer, a continuous, complete layer marked c., may be polymer and/or non polymeric. All of the other applications on this inventive image are either entirely or principally non polymeric, e.g. they might be collage, photography, wood, metal, glass (for instance, crystal, lenses, dichroic glass, colored glass, etc.), paint applications, a painting on canvas, a drawing on paper, or a combination of these, as desired. All of the layers of this inventive image are bonded together so that it is strong and permanent. Similar layering exists in the inventive image in Fig. 54.I. which has three separate pieces of polymer forming a broken layer marked a. (shown in white with black outlines). The uneven thickness of these three pieces of polymer in layer a. give this side of this image texture. The continuous layer c. in this inventive image (also shown in white), may be polymer and/or non polymeric. The other applications in this image (shown in shades of grey, in between a. and c. and on their external sides), are non polymeric. For example, these applications might be made of any of the compositions which were not polymer of the present invention, previously listed for Fig. 53. All of the layers of this inventive image are bonded together so that it is strong and permanent. This inventive image might be the image desired, but if it is not, it can be further processed as desired. For example, more cPRM superimposed on its upper surface can turn these three pieces of polymer of layer a., into a continuous polymer layer, embedding the two non polymeric applications superimposed on them, shown in grey in Fig. 54.I. The inventive image in Fig. 54.II. has the same layers a. and c. as Fig. 54.I., but the applications forming its other layers are different from those in the inventive image in Fig. 54.I. In Fig. 54.II. the layer b. which had speckled coloration, may be polymer and/or non polymeric. For example, layer c. and layer b. might be both be polymer layers that are differently colored. Layer c. might be polymer and layer b. paint. Or, layer c. might be glass and layer b. might be polymer. Layer e. may not be polymer, e.g. paint. All three pieces of polymer which comprise layer a, each rests partially on layer b. and partially on layer e., and two of them also rest partially on layer d. The application of layer e. over layer a. embeds all three pieces of polymer which form layer a. For example, if this inventive image is viewed through the transparency of layer e., and the three pieces of polymer in layer a. are also transparent, these three polymer pieces would increase the real spatial depth and transparency of this image differently in these three select areas. All of the layers of this inventive image are bonded together so that it is strong and permanent. This inventive image might be the image desired, but if it is not, it can be further processed as desired.

Conventional Practices can be used with the medium of the present invention to embed items in it e.g., embedding done as cPRM polymerizes, or afterwards for instance by connecting parts or by carving and then using additive processes.

In some inventive images, air pockets are intentional, desirable or both, e.g., two separate inventive image parts are attached together, so that the surface areas in contact, do not meet each other in at least one place. For instance, the inventive image in Fig. 47 is made with internal air pockets. In another example, a negative indentation is made into the top of cPRM (e.g. into gelled cPRM) and a planar image part is put over the indentation. For instance, such indentations can be made by carving, cutting or drilling into gelled cPRM and/or into hardened polymer. Or they can be made using one or more objects against cPRM which will not bond to it (such as an object covered with a release agent).

Fig. 42. shows two different inventive image which both have air pockets within them. For example one way that the both of the inventive images in Fig. 42. can be made is by forming the polymer layer labeled a. in both illustrations with cPRM in a mold. Once this cPRM gels, the polymer and/or non polymeric parts labeled b. in both illustrations, are pressed into the exposed surface of this gelled cPRM, inlaid in it. SSI are made on any of these parts which are unable to bond as desired with the gelled cPRM prior to their insertion in it. Separately a second polymer is made labeled c. in both illustrations. Once its cPRM gels, the first polymer (which has the inlaid parts) is turned over and its protruding inlays are pressed down into the gelled cPRM of the polymerizing second polymer, so that the parts inlaid in the first polymer, also become inlaid in the second polymer, forming air pockets in the negative spaces in between them as shown in Fig. 42.

Alternately one or both of the inventive image in Fig. 42. can be made by adhering separate parts together using a bonding agent such as cPRM as a glue. For example, a bonding substance, can be applied onto the cavities or indentations in both of the two separate polymer planes of each of these inventive images. Then, the parts shown in the central layer of both of these inventive images labeled b., can be positioned in these cavities or indentations in both polymer planes of each of these images.

Another example of a method of making one or both of the inventive image in Fig. 42. is by forming each of these images entirely in a single mold that is removed from the inventive image once it is formed. Or, a single mold can be used to make one of the outer layers and the central layer of either or both of these inventive images, and then a second mold or just temporary mold walls can be built on the formed inventive image in order to form its third layer. Once the images are formed, the second mold is removed.

The inventive image in Fig. 47.II. has air pockets within it, that have coloration applied on the inside walls of its internal air pockets. For example, to make the inventive image in Fig. 47.11., it may be preferable to make and color its three horizontal polymer planes and its two vertical polymer planes all separately and then join them together using repeated variations of the method in Fig. 75. in which a bonding substance is used as a glue to adhere separate polymer planes to one another. The two inventive images in Fig. 48. may also be made similarly of separate polymer planes which are first given coloration (e.g. painted, inlaid, joined to attachments, etc.). And then bonded to one another using variations of the method in Fig. 75., placing any loose contents in the area which will become this inventive image's internal air pocket once its sides are all connected. Further illustrations of inventive images with internal air pockets are Figs. 27., 164.I.-IV.

For example, in an embodiment, parts, pieces, shapes and forms, embedded or inlaid in certain positions in relation to one another, within or on an inventive image or part thereof, form a whole shape, a whole form, a whole device, or a whole that is combinations of these. For instance, sections of a circle, of a portrait, or of a plate are joined and thus recognisable as a circle, a portrait and a plate by their inclusion in an inventive image.

Inventive images can have the very valuable and useful aesthetic quality of objecthood. A few reasons for this quality are because inventive images have real 3D depth that can be an integral part of the image as a whole; their structure and their form can be united; . Because elements which affect objecthood in inventive images are workable, reworkable and controllable as desired, the objecthood of inventive images is just as workable, reworkable and controllable, and just as free from undesirable consequences (such as undesirable loss of strength or permanence) as these formal elements are. This quality of objecthood enables inventive image to be free from illusionism, as do other qualities offered in inventive images such as the use of real light and real transparency and real translucency.

The inventive image in Fig. 52. is formed from a colorless, transparent rectangular polymer image support (e.g., stabilizer) about 0.4" thick. If this image support is not able to bond as desired to superimposed applications, it is given a surface preparation stabilizer. For example, this entire polymer image support is sandblasted on both of its sides and both of its sides are given a colorless transparent Clarifying Imprimatura (e.g. using acrylic gel or using a workable fixative), which completely fills in its surface irregularities, restores its original state of transparency. Alternately, this surface preparation stabilizer is comprised of an polymer which is either hydrophilic or absorbent of oil. The surface preparation stabilizer enables applications of conventional painting and drawing materials and media to bond to it strongly and permanently. Then a design is made on this inventive image which is based on conventional patterns and motifs (e.g. American indian patterns), spontaneously, in a WYSIWYG process of adding and removing matter to and from both of its sides. This is done with conventional applications of conventional drawing and painting materials and media, as well as using processes for removing matter from images which are both conventional (such as erasers and solvents) and new (such as sanding the inventive image and restoring removed matter as desired). The area marked c. on the illustration is cut out.

In another illustration of this embodiment, an inventive image or part thereof, are made with an embossed drawing covering their external surfaces. In a further illustration, an inventive image or part thereof, is made with an engraved or incised drawing covering their external surfaces. The images formed in these two examples might be finished. Alternately they might be further processed into finished images. If desired, the images in these examples might be used as printing plates.

In embodiments, polymer can be used around a light source as desired. Further it can be worked and reworked there too if desired. This versatility is not available in conventional practices for making strong and permanent images. Fig. 109.XXI., is an inventive image with three polymer parts around a curving neon tube which is labeled a. As another example, one or more light sources can be a part of the Compositional Arrangement of an inventive image, yet not physically connected to it. For instance, as a part of an inventive image, a red neon light in spiral shape might be visible both through a transparent area of polymer and on two of its sides. It is preferred that the visibility of any light sources as part of inventive images is aesthetically desirable, aesthetically insignificant, not aesthetically undesirable, hidden or a combination of these as desired. This is a sharp contrast to the image making options available using conventional practices using real light sources.

An example of an inventive image lamp inspired by Noguchi's Akari light sculptures is in Fig. 101. In this illustration, the rigid polymer lamp is labeled ii., and the conventional light bulb is labeled i.

Lamps can be made with shades formed using multiple polymer pieces which are transparent, translucent, colored, partially opaque, which have light effects, or which have a combination of these, as desired. These polymer pieces may for example, differ in size and shape as for instance, the polymer part of the lamp in Fig. 101. labeled ii., might have been made of multiple planar polymer pieces that were bonded to one another seamlessly at the angles in this illustration, by the angled contours of this lamp's perimeter. Multiple polymer pieces can be joined into a polymer lamp shade by using a bonding cPRM to bond them to one another, by using another bonding agent, or by attaching the polymer pieces to an underlying form such as to an armature or other structure (as in the clothing example herein). For instance the shade of an inventive image lamp might be transparent with a sparkle that is iridescent, metallic, or fluorescent. Or for instance, the shade of an inventive image lamp might have hanging polymer pieces that resemble the way crystal is conventionally used on conventional lamps.

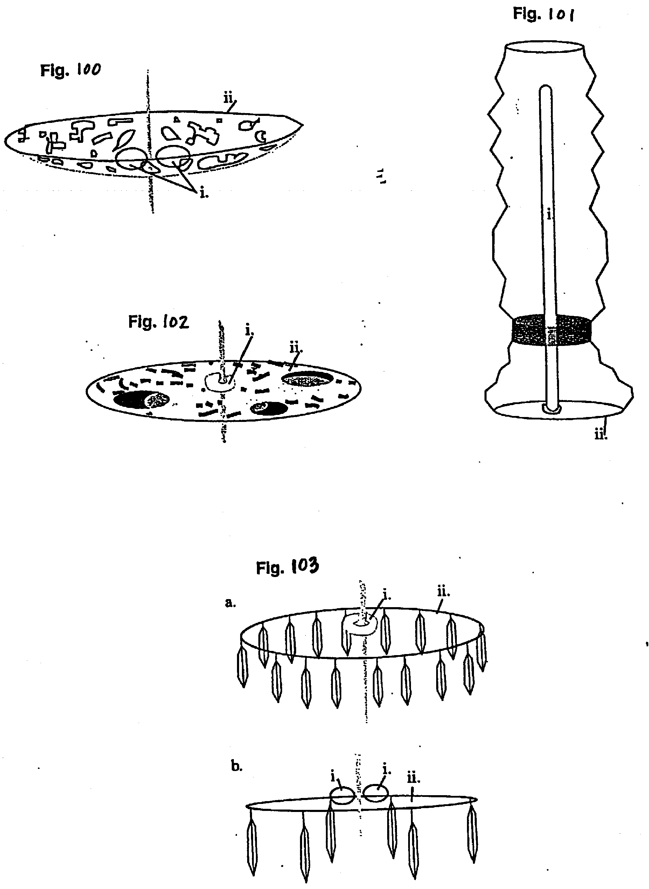

Figs. 100. and 102. are inventive image lamps based on simple conventional lamp designs, but their coloration and light effects can not be comparably created, in a strong, permanent form using conventional practices. In the inventive images lamps in Figs. 100., 102., and 103., the polymer parts are labeled ii. and the light bulbs are labeled i. The vertical rods piercing through the centers of all of these three inventive image lamps indicate that these inventive images lamps can be hung from above, mounted on a stand from below, or both. The curved polymer part of Fig. 100. might for example, have real embedded leaves (shown as outlines in this illustration), fine iridescent mica dispersed unevenly throughout its form (not visible in this illustration), and linear drawing done both internally and externally, on several layers of real spatial depth within and on its polymer surfaces. The flat polymer plane used in the inventive image lamp in Figs. 102. is made with transparent and opaque layers of coloration within and on them which are form using conventional fine arts practices, e.g. using superimposed layers of oil paint glazes, broken color, drawing materials like pastels, ink, etc. These inventive images lamps have crystal parts hanging from them and transparent or translucent, circular polymer planes.

The inventive image in Fig. 105. is made using a polymer image support which may be a stabilizer, coloration, and light emitting diodes and/or EL Lamps. The Compositional Arrangement of the light emitting diodes and/or the shape of the EL Lamps with respect to the polymer's coloration, results in real light shining through this inventive image in repeated "X"shapes. The light emitting diodes and/or EL Lamps might be installed within its colored polymer plane, on its reverse side, or on another surface behind it, e.g. on an underlayer (such as another layer of polymer or a layer of wood), or on a wall from which this inventive image is mounted. If desired, one or multiple more diffuse lights might be used in this inventive image too, e.g., placed behind or above the front of it. This polymer image support may be made in any thickness desired, e.g. it may have hollow pockets within it, it may have multiple layers of coloration within it, or it may be very thin in relation to its height and width for instance, perhaps as thin as 0.25". The coloration of this inventive image can be made in any way desired. For instance, some or all of its lights sources might emit colored light. Or, for instance, this polymer might be colored by the use of one or more photographic transparencies on and/or within the surface of a transparent polymer plane. This polymer plane might be inconsistently colored using coloration in its cPRM throughout some or all of its thickness. It's coloration might be painting, drawing, or printing on and/or within its polymer plane. Or, for example, the coloration of this inventive image might be formed in a combination of these ways. Notice that this inventive image does not have any cords, wires or other electrical parts visible, it does not need to be plugged into an outlet and it does not impose special requirements on the place in which it is displayed (e.g. it does not have to be displayed in a darkened space). This inventive image may be the finished image desired, but if not, it can be further processed as desired. For example, it can be made into another art form, e.g., planes can be added onto its side so that it becomes a box, legs can be added so that it becomes a table, it can be used as a lamp, it can be made into a shaped painting e.g. simply be cutting one square off the perimeter of its grid pattern, it can be installed as a free standing painting, sculpture, as a room divider, or as a wall, etc. This inventive image might for example be further processed by the superimposition of one or more additional layers of cPRM (with or without coloration), by one or more additional polymer planes (with or without coloration), or by polymeric or non polymeric attachments or inlays. this inventive image might be further processed by the addition of more light sources or light effects. It might be carved, incised, or cut. Writing painting, printing, drawing, photography and other additive processes can be used for further coloration. Or this inventive image might be further processed in a combination of these ways.

In an embodiment, a dichroic light effect or quality is added to an inventive image. For example, a dichroic effect or quality can be brought to an inventive image by adding one or more dichroic materials, media, objects, devices, or their combinations to it, e.g., glass, paper or another polymer which has a dichroic effect or quality can be attached, embedded and/or inlaid, as desired. As another example, a dichroic effect or quality can be made on an inventive image. Or, inventive images can have dichroic effect in both of these ways. Savoy Studios in Portland Oregon makes dichroic glass and creates custom dichroic effects which can be used in inventive images.

In a further illustration, one or more fluorescent minerals might be used in and/or on an inventive image. Many natural minerals will fluoresce when excited by long wave and/or short wave UV light. Their fluorescence is likely to be a permanent property. However, the fluorescent light emitted when excited by the short wave (higher frequency) UV may be different from that emitted by the long wave (lower frequency) UV, e.g., the fluorescent color may differ in its hue and/or intensity. *(This is because the higher frequency of the short wave UV light can cause the electrons to behave differently than electrons hit by long wave UV light.)* Here are examples of fluorescent minerals. Calcite, can fluoresce yellow-orange or red with short wave UV light, and blue or purple with long wave UV light. Travertine, can fluoresce yellow- brown with short wave UV light, and green with long wave UV light. Hydrozincite, can fluoresce blue or white with short wave UV light, and yellow or white with long wave UV light. Opalite, can fluoresce bright green with short wave UV light, and light green with long wave UV light. Semi-Opal can fluoresce bright green with short wave UV light, and light green with long wave UV light. Aragonite or Aragonite Coral, can fluoresce white with both short wave and long wave UV light. Scheelite, can fluoresce blue - white with short wave UV light. Barite, can fluoresce blue-white or yellow with short wave UV light, and white or yellow with long wave UV light. Wernerite, can fluoresce light yellow with short wave UV light, and yellow with long wave UV light. Zeolite in Wyomingite, can fluoresce yellow with long wave UV light. Halite, can fluoresce orange with short wave UV light. Hackmanite in syenite, can fluoresce light orange with short wave UV light, and bright orange with long wave UV light. Turritella Agate, can fluoresce yellow with both short wave UV light and long wave UV light. Dumortierite can fluoresce blue with short wave UV light. Willemite can fluoresce green with short or long wave UV light. Meyerhofferite, can fluoresce white - yellow with short wave UV light, and yellow with long wave UV light. Gypsum (rose) can fluoresce white with short wave UV light, and orange with long wave UV light. Coquina can fluoresce yellow with both short and long wave UV light. Orendite can fluoresce white with short wave UV light, and yellow with long wave UV light. Fluorite can fluoresce blue with both short and long wave UV light. Chalcedony can fluoresce green with short wave UV light, and light green with long wave UV light. Thus, for example, by using such fluorescent minerals and using UV light as desired, image makers can make and control fluorescence and color as desired in inventive images, and they can even do so as a function of time (i.e., switch from one color to another at a given time).

In an embodiment, one or more fluorescent monomers and/or polymers are used in inventive images. This might for example, result in fluorescence in the inventive image produced. Examples of fluorescent polymers (e.g., sheets and pellets) and/or monomers are made by Cyro Industries of Orange Connecticut. For example the fluorescence in a polymer inventive image might exist without special lighting. Examples are Cyro's line of Acrylite® GP and GP-FL fluorescent color acrylic sheets, and Cyro's Acrylite® fluorescent colored acrylic molding compounds colored with LISA® dyestuffs (by Bayer AG of Germany, the parent company of Mobay Corporation of Pittsburgh PA) which absorb ambient light and transform this light to longer wavelengths, which are re-mitted. In addition or instead, the fluorescence in a polymer inventive image might be initiated using UV light. In addition or instead, the fluorescence in a polymer inventive image might be initiated using infrared light sources, such as laser beams and/or perhaps other sources of infrared light of the proper wavelengths. The fluorescence in such polymers may for instance be desirable for creating 3D luminescent inventive images. Cyro makes polymer which glows when stimulated by two different infrared light sources (e.g., laser beams) which coincide within the polymer. Refer to "Science News" 10-26-96 page 270, and the article "Visible light emission from dyes excited by simultaneous absorption of two different frequency beams of light" by A. Rapaport, K. Ayrault, E. St. Matthew-Daniel and M. Bass, in "Applied Physics Letters" 1-18-99, Volume 74, Number 3, page 329.

Further examples of colorants which can provide inventive images with light effects are pigments and/or particles. Such colorants are made and/or sold by Kremer Pigments Inc. Examples are: crystalline Malachite (available in different grinds, all washed for added clarity); and Mica - potassium aluminum silicate in its natural form comes in shimmering scales of varying size (e.g., Muscovite Mica, lentil sized scales, shimmering white; Muscovite Mica Fine, small flakes; Mica Very Fine, pearlescent powder; Phlogopite Mica, silver-grey, bronze shade, even sized flakes ca.1-3 mm; and Natural Graphite Glimmer, graphite in shiny, grey flakes). Kremer offers Fish Silver which are genuine fish scales. Kremer offers metal powders which are genuine metals in powder form retain all of their natural characteristics. Examples are: Pewter Powder, warm yellowish, pure, leadfree, grey, very fine; Iron Filings, coarse powder (e.g., bring to a rust by repeated moistening); Cast-Iron Powder, 0-250 my, fast rusting; Blacksmith Powder, coarse black; Stainless Steel Powder, cool grey; Zinc Dust, cool opaque grey; Aluminum Powder, bright silver; Copper Powder, reddish dull (e.g., reacts with patina, e.g. 1 qt. ammonia, 1 qt. white vinegar, 1 tsp. lemon juice, 1 tsp. salt); Copper Paste, bright lustre, in naphta thinner to prevent oxidation, e.g., for oil colors. Kremer also offers Silver Glitter pigments in a range of sizes which are pigments based on aluminum flakes coated with epoxy to withstand oxidation, e.g., from Silver Glitter 0.1 mm very fine to Silver Glitter 0.6 mm coarse, and Paliochrome Blue Violet iridescence, Paliochrome Blue Silver with silver metallic iridescence, and Paliochrome Copper with a bluish tint. Kremer also offers fluorescent pigments for use in inventive images.

More examples of colorants with light effects for use inventive images are Pearl Luster Pigments made by BASF in Germany. These are mica flakes coated with metal oxides which are extremely lightfast and suitable. Kremer Pigments recommends the use of these in combination with transparent organic pigments. The COLIBRI types are opaque metallic. CHROMA types are interference pigments, their mother-of-pearl effect is especially striking on a dark ground. Examples are: Pearl Luster Ekaton, satin silver; Pearl Luster Ekaton S, metallic silver; Pearl Luster Ekaton Glitter, sparkling silver; Pearl Ekaton Pearl Silver, low sheen; Pearl Luster Colibri Gold, metallic gold; Pearl Luster Colibri Sun Gold, light gold; Pearl Luster Colibri Glitter Gold, sparkling gold; Pearl Luster Colibri Royal Gold, reddish, antique gold; Pearl Luster Colibri Pale Gold, pale gold; Pearl Luster Chroma Yellow-Gold, white with gold iridescence; Pearl Luster Colibri Bronze, bronze powder; Pearl Luster Colibri Glitter Bronze, sparkling bronze; Pearl Luster Chroma Copper, white with copper iridescence; Pearl Luster Colibri Copper, bright reddish sheen; Pearl Luster Colibri Red, metallic red; Pearl Luster Chroma Blue, white with blue iridescence; Pearl Luster Chroma Red, white with red iridescence; Pearl Luster Chroma Violet, white with violet iridescence; Pearl Luster Chroma Green, white with green iridescence; Duo Red-Green, reddish with green iridescence; Paliochrome Blue Violet, blue with violet iridescence; Paliochrome Blue Silver, cool blue with silver metallic iridescence; and Paliochrome Copper, soft metallic copper with bluish tint.

Engelhard Corporation of Iselin NJ also makes and sells colorants for use in inventive images which give them light effects, e.g., reflectivity, iridescence, metallic effects, etc. Their Mearl or Mearlin colorants are examples.

Refer to examples in the forthcoming text. Liquid Light® photographic emulsion is made with 20% Silver halides consisting of the following three ingredients CAS No. 7783-96-2. Ingredients - 5% Silver Bromide CAS No. 7785-23-1; 5% silver chloride CAS No. 7783-90-6; and 10% Gelatin CAS No. 9000-70-8. Liquid Light® also has a trace percentage of Cadmium chloride (Sara III) CAS No. 7790-78-5, and less than 95% water CAS No. 7732-18-5. AG-Plus® photographic emulsion is made with 40% silver halides consisting of the following three ingredients CAS No. 7783-96-2. Ingredients - 10% silver bromide CAS No. 7785-23-1; 10% Silver chloride CAS No. 7783-90-6; and 10% gelatin CAS No. 9000-70-8. AG-Plus® also has a trace percentage of Cadmium chloride (Sara III) CAS No. 7790-78-5, and less than 95% water CAS No. 7732-18-5. Halo-chrome® Toner is an ammonium hydroxide/sodium hydroxide solution made of 30% ammonium hydroxide (Sara III) CAS No. 1336-21-6; 2.5% sodium hydroxide (Sara III) CAS No. 1310-73-2; and 67.5% Non hazardous ingredients and water. Bleach for Halo-chrome® is made with 38% cupric chloride (Sara III) CAS No. 7447-39-4 and 62% water. Hardener For Subbing is a Chromium Potassium Sulfate (CAS No. 7788-99-0) 10% solution with 90% water.

In another embodiment, one or more PHSColograms® are part of an inventive image. PHSColograms® are inventions by Ellen Sandor of Chicago, Illinois; Daniel Sandin of Chicago, Illinois; William Cunnally of Island Lake, Illinois; and Stephan Meyers of Chicago Illinois. PHSColograms® are described in several patents, e.g., US Patent No. Re. 35,029 issued on August 29, 1995 (Reissue of #5,113,213); US Patent 5,113,213 which issued on May 12, 1992; US Patent No. 5,519,794 issued on May 21, 1996; and #5,330,799.

In an embodiment, an inventive image or part thereof, are set-up, presented, installed, displayed, exhibited, used, or set for viewing in a combination of these ways, such that there is empty space, between them and the closest tangible form (e.g., between the image and the structure from which it is installed, displayed or exhibited). For example, inventive images are not entirely installed flushly against surfaces or structures, like walls, table tops or floors. For instance, transparent and/or translucent inventive image are installed, displayed or exhibited, such that there is empty space between them, and the structure from which they are installed, displayed, or exhibited, e.g., there may be five inches between a transparent polymer inventive image and the wall, or there may be three inches between a transparent polymer inventive image and the floor, or there may be a foot between a transparent polymer inventive image and the ceiling, etc. Or for instance, an inventive image with five cut-outs is mounted four inches away from a white wall. For example, overhead, a 300 watt light is positioned so that it shines down against the wall behind this inventive image, (rather than shining directly on any of its surfaces). An illustration of one of the valuable uses of this embodiment which can effectively enhance an inventive image as desired, is to leave empty space between an inventive image and the closest tangible form, for light (direct or reflected), to hit and penetrate the rear, the backside, the underside, the sides, the edges or combinations of these surfaces, on the inventive image

In a embodiment, one or more components used to set-up, present, install, display, exhibit, to use, or to prepare an inventive image for viewing in combinations of these ways, are entirely or partially visible, e.g.,, through the transparency and/or translucency of an inventive image, all of the components of the two mounts inlaid in its backside are visible, contributing to its aesthetic.

In another embodiment, one or more components used to set-up, present, install, display, exhibit, to use, or to set an inventive image for viewing in combinations of these ways, are hidden from view.

In some embodiments, two or more spatial depths are used on, and/or within the inventive medium to make an image. Drawing at different real depths often can give images real form, real volume, or both even if the drawing is linear, with or without the use of illusionary form, volume, or both. For example, conventional shading processes such as cross hatching and modeling can be made in superimposed layers of real depth when they are made using polymer of the present invention.

A series of inventive images called Fish Images are made based on the five different highly polished bronze versions Constantin Brancusi made of his 1922 marble Fish. In these sculptures, Brancusi used reflectivity to convey subject matter, content and meaning - his idea that our perception of the fish is as a moving flicker of light. The simplified, thin elongated oval forms of these Fish Images are like Brancusi's, but these Fish Images are transparent, translucent or both, with coloration, light effects, and other effects which are not available using conventional practices.

These Fish Images are mounted and installed in these three general ways. Method a). Some of these Fish Images are affixed to bases which resemble the bases Brancusi designed for his Fish, e.g., some are made with conventional materials. However, at least the upper part of all of the bases of these Fish Images (the part directly under the affixed fish), is at least partially transparent or translucent which makes the fish of these Fish Images appear lighter and less earth bound, contributing to a sense of the fish moving. In addition, some of these bases have light sources hidden within them, e.g., concealed electric lights or EL Lamps illuminating the fish portions of these inventive images. Many of these Fish Images also have other light qualities and effects, e.g., reflectivity. In Method b). mounts hold up the polymer fish parts of some of these Fish Images, comprised of a single slender rod on a base below. These rods and bases are polymeric and/or nonpolymeric, e.g. some are transparent colorless polymer, others are black matte metal or highly polished metal, some are flexible and some are rigid. The bases holding these rods are all simple plates or blocks, e.g., some of these bases rest on other surfaces such as tables or pedestals, while others extend down to the floor. Method c). The rest of these Fish Images, are hung, e.g., from a ceiling, a joist, a branch, or a beam using strong, see-through fishing wire, or a slight looking, yet strong stranded stainless steel wire. These hanging Fish Images have real movement (e.g, due to their light weight and their sail like thin planar forms) initiated for example by air currents. The inventive medium enables image makers to control the weight of their images and of parts thereof e.g., distributing it advantageously.

The following 14 illustrations describe some of these Fish Images. The exact dimensions of each Fish Image varies. However, in general all of their fish parts are elongated ovals which at their greatest axis, measure approximately 6.5"to 12.5" long, 2"-5.5" wide and 0.75"- 2" thick. All of the fish of the following Fish Images that are made in two or more parts, are then bonded together into one whole fish form, using the same cPRM used to make them, using a mixed polymer (e.g., stabilizer) or using another bonding substance. Once the separate parts of these fish are bonded to one another, all traces of their having been separate parts are reworked so that these fish look like they are unified whole forms. For example, all clay and release agents are cleaned off of them, all irregularities in their forms such as connection seam lines are reworked, e.g., by sanding them and by adding more of the same cPRM to them as necessary.

The fish part for **Fish Image 1.** is made of a colorless transparent cPRM with transparent bronze pigment mixed heterogeneously into it. This polymer fish might be made in two parts bonded together, each of which is slightly less than 50% of the whole so that further layers can be superimposed onto it. Or this polymer fish might be made in a single mold and processed with careful attention to the release of air displaced from inside of this mold by the cPRM going into it. Once the fish is one whole polymer form, flat silver wire is forming a few lines of drawing on one of its external surfaces is tacked on with a few small thin pieces of oval shaped crystal using drops of the same cPRM, e.g., using clay walls as needed. Once these polymer tacks harden, the fish's surface is cleaned of all traces of clay and oil, e.g., using the appropriate solvent, hand tools and a fine sanding bit if necessary. Then a coat of the same cPRM is superimposed over this entire side of the fish, embedding the tacked silver and crystal pieces in the desired position. (Without tacks, these silver and crystal pieces might have moved out of the desired position before the superimposed cPRM gelled.) The same tacking and embedding processes are repeated to install silver wire and crystal pieces more sparsely on this fish's reverse side. Then a pale paint made of the same cPRM and a blue iridescent mica pigment is applied in scattered dash and dot-like paint strokes on both sides of this fish. All of these marks are given more coats of the same paint, using the same careful process so as to prevent drips. When this fish is completed, its surface is speckled with embossed blue iridescent dashes and dots.

The fish part for **Fish Image 2.** is made in two parts, one of which is 80% of the whole. First the smaller part of the fish is made of colorless transparent cPRM. Then, the larger part of this fish is made in layers as follows. A layer of colorless transparent polymer is formed first. Then using coloration made with the same cPRM as its binder, a dark transparent blue streak is painted almost completely down this fish's length, near its bottom edge. Once this streak hardens, the entire surface of this fish is covered by another layer of the same colorless cPRM. After this hardens, a second streak is applied using a matte opaque black acrylic paint, extending almost the entire length of the fish, roughly in the center of its height, not superimposing its first streak. Once this acrylic paint dries, this entire fish surface is superimposed by another layer of the same colorless cPRM. When this polymer hardens, a third streak is applied down this fish's length near its upper edge, not superimposing its other streaks, using a paint made of the same cPRM and crushed red fluorescent minerals. Once this third streak hardens, this piece is bonded to the other fish piece using the same cPRM. After hardening for a week, twelve tiny lines are engraved in this fish's external surface along its back edge. Then three dots sanded on one of its sides serve as surface preparation stabilizers which are painted over with impasto orange oil paint.

The fish part for **Fish Image 3.** is made in two polymer parts. Half of the fish's form is cast in each of two molds using the same colorless transparent cPRM. When the cPRM in one of these two molds gels such that it is somewhat firm but still wet on its surface, a layer of an open weave black netting stabilizer is quickly pressed onto its surface, firmly enough to attach in the position desired. Then, once the other polymer half of the fish has progressed far enough into its gelation so that its form is firm enough that it no longer requires the support of its mold in order to harden as desired, yet while both its surface and the surface of the other polymer fish half with the attached netting are still wet with cPRM, the polymer fish half without the attached netting is flipped over onto the polymer half with the attached netting. The upper mold is completely removed. Immediately, the two polymer fish halves are aligned in relation to one another to form one whole fish by sliding the top polymer fish half on the bottom polymer fish half as necessary. The bottom mold might be cut back to aid in this alignment. Once these two joined parts harden, they are bonded together as a single whole fish form.

After this polymer fish hardens for a week, linear negative cavities are carved into its external surfaces in order to inlay mosaic tessera along almost the entire length of this fish's form on both sides, but in lines which do not superimposed one another. The back sides of irregularly shaped pieces of crystal (tessera), are sanded to give them a mechanical bond with the cPRM bonding substance attaching them into the fish's negative cavities, e.g., this cPRM bonding substance is the same cPRM that was used to make this polymer fish. First, the negative cavity in one side of the fish is lined with this cPRM bonding substance. When it gels, but before it hardens, each crystal tessera is placed on it with its abraded side in contact with the cPRM. Each laid tessera is then pressed into the wet cPRM so the cPRM completely fills its sanded abrasions, and they are no longer visible at all. In a number of places, these crystal tessera are pressed into the gelled cPRM enough, so that the gelled cPRM extends slightly over the top edges of these tessera, onto their external surfaces just enough to secure them in place. Once all of the tessera on one side of the fish are attached and their cPRM bonding substance hardens, any or all of the remaining negative spaces between tessera, and between tessera and the edge of the negative cavity in the fish's surface, are filled with more of the same cPRM, e.g., using oil formulated clay walls as necessary to control the cPRM so that it hardens in the desired places without running. Any cPRM that dripped or that hardened in an undesirable manner is reworked. These crystal tessera form a few mosaic lines on this fish which do not obstruct the view of its embedded netting.

The fish part for **Fish Image 4.** is made of transparent colorless polymer with a large air pocket within it extending its entire length, which functions as a prism. This fish is mounted using method a). (described above). The uppermost surface of this base is either lit by a light source beneath it, it is highly reflective, or both, e.g., it is covered with mirror, silver leaf, or highly polished bronze, and it has an EL Lamp beneath it. This fish is made in two molds. One of the fish parts will be substantially larger than the other. It is made first. The larger mold is filled about two thirds full with a colorless transparent cPRM. A prism shaped part which this cPRM can not bond to (e.g., a piece of rubber in the shape of a prism, a material with a release agent covering it), is submerged into the liquid cPRM and secured into position (e.g., to the mold's side walls), with one of the pointed edges of its length directed downward, and with one of the flat surfaces of its length even, flush with the exposed top surface of the liquid cPRM. Once this polymer has hardened, the positive prism shape is removed. The negative prism space formed in this polymer can be reworked as desired, e.g., to make its two polymer sides perfectly smooth they can be sanded and lined with a new coat of cPRM if desired. This polymer is removed from its mold or its mold's side walls are cut back making its perimeter edges clearly visible so that it can be aligned with the other part of this fish when they are joined together. The negative prism space and the upper surface of this polymer are cleaned well (e.g., cleaned of release agent, clay etc.).

The other, smaller fish part of this fish is formed in another mold using the same cPRM, such that it has a flat upper exposed surface. Once this polymer part hardens, it is removed from its mold. If necessary, it is reworked, so that once it is bonded to the larger fish part, its upper surface will complete the negative prism shape embedded within the fish by providing the third flat side of this negative prism (e.g., its surface may be sanded, given more cPRM, or both), so that its surface will align properly completing the negative prism within this fish when its two parts are bonded to one another. The two fish parts are bonded together forming a negative prism internally. Using a conventional paint brush which applies media with precision, cPRM is applied carefully only to the flat area of contact on the surface of the larger fish part which is not part of its internal prism. Once this application of cPRM gels so that it will not run or ooze when placed in contact with the other fish part, but while this cPRM is still wet, the smaller fish part is turned over and placed upon the larger fish part very carefully in the alignment desired, so that no cPRM enters the negative prism air pocket within the fish and so that the two fish parts do not need to be slid against one another to be aligned.

The fish part for **Fish Image 5.** is made of colorless transparent cross linked polymer which is cast in two separate halves, each approximately half of the fish's thickness and its entire length. A week after these polymer halves harden, the surface of each of these polymer fish halves which will be within the whole fish once these two separate parts are joined, is carved so that when these two halves are joined, the carving and air pockets within them forms the design desired, internally within the fish. As a variation, if desired, before these two fish parts are joined, their internal carving can be colored as desired (e.g., painted, drawn upon or written upon), provided that this processing does not interfere with bonding the two fish parts together as desired, e.g. provided bonding spots or unpainted areas are left to enable the two parts to be joined into one fish. This fish is mounted using installation method a). the uppermost surface of its base is highly reflective, it is illuminated by a light source beneath it, or both. Three fish made for three different **Fish Images 6.**, are each made in either one part (e.g., from one mold), or in two parts (formed in the same mold or in two molds) that are bonded together into a single form. Fish #1. has graphite particles and blades of green grass dispersed in its colorless transparent cPRM. Fish #2. has particles of charcoal and particles of a fluorescent mineral dispersed in its colorless transparent cPRM. Fish #3. has particles of metal leaf (e.g., silver, gold or aluminum leaf) and/or another reflective material, dispersed in its colorless transparent cPRM. If desired, a surface preparation stabilizer may be applied on part or all of one or more of these Fish Images, which is then superimposed by coloration.

The fish part for **Fish Image 7.** is made in either two parts in two separate molds or in three parts in three separate molds. This fish is made hollow with a colorless transparent crosslinked cPRM, and it contains something. Choices in making the two or three polymer parts of this fish form, are intentional uses of the VIMC designed to produce polymer fish parts which are full of air bubbles. For example, the monomer or monomers used in the cPRM is especially viscous (e.g., a monomer that is made viscous by its manufacturer, a monomer that is viscous because it is old, a monomer with an added filler or stabilizer that increases its viscosity, a combination of these, etc.). The PRM for these two or three these fish parts is intentionally catalyzed using a percentage of the appropriate catalyst or catalysts, which is significantly higher than the manufacturer's recommended percentage so as to harden with air bubbles. These viscous cPRMs are stirred a lot to cause air bubbles. This process was successfully tested in advance.

To make this fish hollow, three parts might be formed in three molds as concave shells, a part for each side of the fish both of which include the fish's bottom, and one piece for the fish's top which will function like an opening on a hollow container once its two sides are joined. For instance, a layer of cPRM is applied to each mold, then when this polymer gels or hardens enough to stay in place in each mold, each mold is tilted so that one of its sides can be lined with a layer of polymer. This process might be repeated until all of the sides are formed for each of the polymer fish parts. Refer to tiered processes previously described. Once its three parts are cast, the two polymer fish sides which include the fish's bottom are bonded tightly. These joined parts leave only one opening at the top of the fish's hollow form, which the third part of this fish is designed to fit.

Alternately to make this hollow fish two concave polymer parts might be formed, one of which comprises the fish's two sides and it bottom made in a closed mold with careful attention to the release of air displaced as the cPRM enters the mold. The other part is the fish's top which will function like an opening on a hollow container with the first, larger fish part.

The hollow polymer fish is then filled about halfway with colorless carbonated water (e.g. seltzer) and its polymer top piece is bonded tightly onto it, sealing the polymer fish completely.

The fish part for **Fish Image 8.** is also hollow. One or more sources of light are put inside of it. Thus the design of the concave parts which make the hollow form of this fish appropriately accommodates its contents. For example, this fish part is comprised or two or more joined parts, but their connection remains one which can easily be reopened (e.g., to change a battery to replace a bulb, etc.). The specific ingredients used in the cPRM for this fish (e.g., the monomer or monomers, stabilizers etc.) are chosen so that the resultant polymer of the formed fish will not change undesirably with contact and exposure to the specific kind of light or lights used within it (e.g. the cPRM is made with a UV light stabilizer, with a stabilizer to increase heat resistance, with heat and light stabile colorants, and the polymer formed can take the light's heat and rays). As an illustration, this fish part might be made using one of the methods described above for Fish Image 7., however because air bubbles are undesirable in this polymer fish, the VIMC are used very differently to make it. For example, within this fish might be an EL Lamp, light emitting diodes, fiber optics, small light bulbs, neon tubing, etc. One or more of these light sources might for instance, be secured in position within the fish's hollow form. Though every effort is taken to insure that there are no cords, wires, or other parts of these light sources coming out of this fish, if there are, these are integrated with this Fish Image's design, e.g., with its method of display. If desired, this fish part may be further processed. For example, a surface preparation stabilizer is applied on this fish made by mixing a small quantity of a either conventional paint or a conventional paint binder (such as an oil paint, linseed oil, an acrylic paint, or an acrylic medium), into a larger quantity of the cPRM used to make this fish. Once it hardens, the surface of this illuminated fish is painted as desired (e.g., principally in transparencies and translucencies, and light reflective paints), using the kind of conventional paint that was mixed into its surface preparation stabilizer, e.g., a conventional oil or acrylic paints.

The fish part for **Fish Image 9.** is made of one part, without a mold. This fish begins with its central element, a single long narrow thin piece of transparent dichroic glass is sanded on all sides. Then it is covered on all sides one at a time, with a layer of colorless transparent cPRM which completely fills in its sanded abrasions, returning this piece of glass to its prior state of transparency and its prior color one side at a time. Then numerous subsequent layers of the same cPRM are superimposed over this fish covering all of its sides, again one side at a time, building up this fish's form. Each of these layers has different transparent, pale coloration. If for example, this fish needs shaping, e.g., as it is formed or thereafter, it can be reworked as desired (e.g., sanded or carved, additional polymer can be added onto it, or a combination of these).

In **Fish Image 10.**, many fish are made for many different Fish Images using variations of the same design. All of these fish are made of transparent colorless polymer (though some of them get coloration mixed into their cPRM). All of these fish are made with photographs of light on both of their external sides, selected from one of these 3 categories. Fish with Category 1 Photos, have photos of light that on them showing light moving in a definite direction, e.g., photos of streaks of light, fireworks at night, light coming through a prism, other light spectrums, the fiery glow of a volcano erupting a night, etc. These photos are all used so that their original subjects are no longer detectable, all that is seen is light moving in a defined direction, positioned on the sides of the fish in the direction that it would move if it were real. For instance, the use of a photo of a volcano erupting on the sides of one of these fish might look like one main horizontal red streak branching off into three smaller streaks on a black background along the side of a fish without any hint of the source of these red streaks. Fish with Category 2 Photos, have photos of sunsets, sunrises and the aurora borealis on them, most of which show striated colors without any land. Fish with Category 3 Photos, have photos of real fish with light effects, e.g., glowing colored markings, light reflecting off of their scales, etc.

These are examples of the uses of photos from these three categories on fish of Fish Images. Example 1, the transparent photographic emulsions from photographic prints from all three of these categories are removed off of their conventional backings, altered if desired and as desired, and transferred onto fish of these Fish Images. As an illustration of this example, a polymer fish is made with or without internal coloration. Then one at a time, two Polaroid prints from the Category 1 Photos are submerged in water that is 160° F. or hotter for about 4 minutes at which time they are transferred into cold water (e.g., using tongs). In the cold water, one at a time their photographic emulsions are removed from their conventional backings, taken out of the water (e.g., with the support of acetate on their front sides), and transferred onto the polymer fish. (Then if acetate or another temporary support was used to transfer them onto the inventive images, it is peeled off of the emulsion.) The emulsion can also be flattened as desired on the inventive images surface. If desired, as these photographic emulsions are removed from their backings, taken out of the water, transferred to the fish and positioned on the fish (e.g.,they can be stretched, folded, cut, torn, perforated or altered in a combination of these ways, as desired). Once the fish is dry it can be further processed if desired. For instance, if this fish has exposed areas of polymer, the edges of these emulsions can be tacked to these exposed areas of polymer using the same cPRM that was used to form the polymer fish. In addition or instead, one or more layers of the same cPRM can be superimposed over the entire fish, one side at a time, using bonding spots. Then if desired, some parts of this superimposed layer of polymer can be given a matte finish or painted as desired, e.g., by sanding and/or painting, by using a surface preparation stabilizer, such as SSI with a matte Clarifying Imprimatura with or without transparent coloration.

In Example 2 of the use of Category 1, 2, and 3 Photos on fish for Fish Images, photos are formed on the fish for these Fish Images, e.g., from existing negatives. As an illustration, a polymer fish can be made in two separate parts which are more or less equal in thickness, and which are both comprised of the same transparent cPRM, e.g., this cPRM can be colorless or it can have transparent or translucent coloration mixed into it before it hardens such as a pale black dye, a pale green pigment, or particles of a fluorescent mineral. Then, a photograph can be made on the surfaces of both separate fish parts which will be the external surfaces of this fish once it is put together. This might be done using a process like that which would be used to print and develop the same negatives on conventional photographic paper. For example, the product "Liquid Light®" (made by Rockland Colloid Corporation of Piedmont, New York), can be painted on to the fish surface using a conventional paint brush. Preparation of that surface before applying the emulsion is described in Rockland Colloid's literature. "Liquid Light®" can be applied onto surfaces, such as the sides of this fish, as consistently or as inconsistently as desired, e.g, it can leave visible streaks, strokes and other marks from the paint brush; a design, a pattern or a combination of these as well as uncoated polymer surface areas, as desired. When dried, each of the two surfaces covered with "Liquid Light®" photographic emulsions are exposed to light selectively, projected through one or more negatives (just as if it were a sheet of conventional photographic paper). When developed, washed (an acidic "short-stop" cannot be used), and fixed (e.g., with conventional photographic chemicals), the result is a positive transparency of the negative. Note, practically any way a conventional photo can be altered as it is printed and developed from a negative in the darkroom can be used to alter photographic transparencies and photo prints made on inventive image surfaces, such as these polymer fish parts.

Once the photographic transparency is completely dry on both fish parts, the two parts of this fish are bonded together carefully so as not to disturb the photography undesirably. If desired, before and/or after these two fish parts are bonded together, it sides can be partially or completely superimposed by one or more layers of polymer, e.g., using the same cPRM, with or without added coloration. In addition or instead, painting, drawing, writing, printing, engraving, other further processing or a combination of these can be done to the fish's surfaces, before and/or after its parts are connected. Example 3. Fish like those made in Example 2. can be made, but these have internal light effects (e.g., reflective materials), and they have photographic transparencies on their external surfaces or embedded just under their external surfaces. But because the internal light effects may affect the formation of their photographic transparencies, it may be desirable to form their photographic transparencies before installing their internal light effects, e.g., if such effects or such experimentation is not desirable. As an illustration, a fish can be formed in two or more polymer parts which is hollow enough to accommodate the internal light effects. Examples such negative space within fish are: A). concave fish parts such as those described in Fish Images 7 and 8.; B). polymer fish parts formed with something stuck in the cPRM and is then removed leaving a negative space or cavity such as is described in Fish Image 4. (which has a prism shaped air pocket formed within it) or as in Fig. 95.; C). fish parts from which matter is removed during gelation, from the hardened polymer or both; or E). a combination of these.

Example 4. is another variation of the Example 2. in which the Rockland Colloid preparation which transforms the black microparticle silver of the negative images into a bright mirror-like highly reflective silver (such that a reflective surface appears essentially as a positive of the light source) is used to form photos on fish in a manner similar to that described in Example 3.

The fish part for **Fish Image 11.** is made in two parts with small irregularly shaped transparent pieces of dichroic glass embedded within it. For example, if desired, these pieces of dichroic glass can be abraded prior to their installation. However, because these pieces of glass are small and because they all have polymer all of the way around them, this fish will be strong and permanent even if these glass pieces are not abraded. If these glass pieces are abraded, it may be desirable to fill in their abrasions with the same cPRM used to make the fish prior to installing them in the fish, so undesirable air bubbles do not fill their abrasions instead of cPRM during their installation. In a mold, approximately half of the fish's form is made in an application of colorless transparent cPRM, the top surface of which will later be approximately in the center of the fish's thickness. Whether the glass pieces are abraded or not, once this cPRM gels firmly but its surface is still wet, several rows of the dichroic glass pieces are pressed onto it with spaces in between all of them. After this polymer hardens, a thin layer of the same cPRM is superimposed, embedding the layer of glass pieces. The rest of the fish's form is made in a separate mold and joined to the larger fish part. This may be the inventive image desired, but if it is not it may be further processed as desired, e.g., as described in these two examples.

Example 1., one or more photographic transparencies are added to this fish. Unlike Fish Image 10., the light effects within this fish will not affect the formation of its photo emulsion or emulsions. For example, this can be done following instructions from Polaroid, in one of these two methods. Method 1., a color Polaroid photograph of the rippled sunlit surface of lake taken previously is immersed in water that is 160 ° Fahrenheit or at a slightly hotter temperature for about 4 minutes, at which time it is transferred into cold water (e.g., using tongs). While the photograph is in the cold water, its flimsy transparent color emulsion is removed from its conventional backing and under water, about half of this photographic emulsion is cut into horizontal slivers, each of which shows the rippling of the sunlit water. One by one, these pieces of photographic emulsion are taken out of the water, carefully because they are flimsy (e.g., to prevent them from changing undesirably such as to prevent them from folding over upon themselves, they are supported by a sheet of acetate on their front sides). Each piece of the photographic emulsion is laid on in the desired arrangement on the same side of the polymer fish's surface, and if acetate or another support was used to transfer an emulsion onto the fish, it is peeled off once the emulsion is laid. The laid emulsions can also be flattened as desired on the inventive image surface, and each is stretched a little, so that it looses some of its realistic clarity and its perimeter edges are less straight (softened). When these pieces of emulsion are completely dry, they are tacked into their positions on the polymer fish using drops of the same cPRM and these tacks are allowed to harden. Then this entire side of the fish is superimposed with a complete layer of the same cPRM (painted on using a conventional paint brush), which embeds the tacked pieces of emulsion. Once this polymer hardens, the exact same process is carried out on the other side of this fish. If necessary the fish is reworked so that its form is as smooth and continuous as desired. Method 2., the transparent photographic emulsion or emulsions from one or more Polaroid photos described in any of the Category Photos in Fish Image 10., can be transferred onto this fish, by using this same underwater process described in the paragraph above, or by using a different variation of it. For instance, two Polaroid photos of directional light can be immersed in water that is 160 ° Fahrenheit or at a slightly hotter temperature for about 4 minutes, and then transferred into cold water. The polymer fish can be under the cold water too. One at a time, each of the flimsy transparent color emulsions are removed from their conventional backings and carefully stretched across the surface of one of the fish's two sides underwater. It might be desirable to have an assistant hold the first emulsion onto the fish while the second emulsion is being transferred onto the other side of the fish and while the fish is being lifted out of the water. Once the fish is out of the water, the photographic emulsions can be smoothed, flattened, distorted, stretched, wrinkled, and cut as desired. Once this fish is completely dry, it can be superimposed by a layer of the same cPRM used to make the fish, applied on to one side of the fish at a time, e.g., using bonding spots if desired. This fish is finished so that it is as smooth and continuous a whole form as desired.

Example 2., a surface preparation stabilizer is applied onto this fish to enable it to bond as desired to one or more further superimpositions, e.g., applications of conventional paints, inks, printing, drawing, writing, etc.

The fish part for **Fish Image 12.** is made in two parts, one of which is twice as large as the other because it has two layers of embedded mirror pieces separated by a Separating Layer Stabilizer, all of which will be approximately medial within this fish's thickness once it is whole. To make the larger fish part, approximately a third of the fish's thickness is formed in a single application of a transparent cPRM in a mold. Next the first layer of mirror pieces is installed with their reflective sides face down. For example, this might be done in a method like that described for the layer of dichroic glass pieces installed within Fish Image 11. But, these mirror pieces are pressed into the gelled cPRM so they are at slightly different angles, and any abrasions made on their reflective sides do not affect their reflectivity undesirably once these irregularities are filled in by cPRM. When this polymer hardens, another layer of the same cPRM is superimposed over this fish (e.g., painted on using a conventional paint brush). It is a Separating Layer Stabilizer between the fish's two layers of mirror. If the backsides of the installed mirror pieces are abraded, care is taken to make sure that the cPRM fills these abrasions fully. Once this polymer layer hardens, another layer of the same cPRM is superimposed and once it gels, a second layer of mirror pieces is laid in it, reflective side up (e.g., in the method of Fish Image 11. again) leaving space in between all the mirror pieces. If these mirror pieces are abraded, their abrasions are filled in the same way described for the previous layer, as described for Fish Image 11. Like the first layer of mirror pieces, each of these mirror pieces is pressed into the gelled cPRM at a slightly different angle. Once this polymer hardens, this second layer of mirror pieces is embedded by a superimposed layer of the same cPRM, (again painted on using a conventional paint brush). This hardens. If desired, for alignment with the other fish part which will be joined, the larger fish part can either be completely removed from its mold or this mold's sides can be lowered (e.g., cut down) so that the side edges of the larger fish part are clearly exposed all of the way around the fish's perimeter.

In a second mold the rest of the fish's thickness is formed. This fish part is formed of the same cPRM, and it constitutes approximately a third of the fish's thickness. The two fish parts are bonded together, aligned as desired, for example, in one of these two methods. Method 1., the smaller fish part hardens and is then completely removed from its mold. A thin layer of cPRM is painted on the exposed surfaces of both parts of this fish. If desired, the image maker can wait until this cPRM gels so that it is not runny. Then, the two fish parts are placed in contact with one another with the smaller fish part on top of the larger one and they are aligned as desired. Method 2, a thin layer of cPRM is painted on the exposed surface of the large fish part. Then, once the cPRM of the smaller fish part gels firmly enough to so that it will maintain the form shaped by its mold without the support of its mold, but while its exposed surface is still wet, it is removed from its mold completely, and flipped over onto the larger fish part. In both methods, before the fish hardens, cPRM oozing or dripping out of the seam between its joined parts is cleaned off. This may be the completed fish desired, but if it is not, this fish may be further processed as desired, e.g., as the following three examples.

Example 1. the fish is painted, written upon, drawn upon, printed upon, incised, collaged, carved into, or a combination of these. Example 2. this fish is covered partially or entirely with a surface preparation stabilizer to enable it to bond as desired to further superimpositions without being abraded first. Example 3., a week after cPRM was last added to this fish, this fish is gently sandblasted forming SSI which are a surface preparation stabilizer. For example, these SSI might be superimposed directly by drawing, painting and other marking. For instance, it might be given a Clarifying Imprimatura, which is a transparent colorless acrylic with a slightly visible blue iridescent mica pigment mixed into it. Using Example 1.,2., 3., or a combination of these on this fish, it have any other the following further processing using conventional practices, or a combination of them. 1). It may be painted using oil paints, e.g., in washes, glazes and transparent colors using simple abstract shapes. 2). It may be painted using a few strokes of transparent paint that are dripped, splattered or thrown onto each of its sides in the style of Jackson Pollack. 3). It may be painted simply in a few superimposed layers of transparent broken color oil painting which are reminiscent of the broken color laying of Monet's painted water- lilies. 4). It may be painted with an inconsistent coat of very matte, transparent black acrylic paint. 5). It may be written upon. 6). Text may be printed onto it. 7). One or more emulsions from Category Photos in Fish Image 10. may be transferred onto this fish's surface as desired, e.g., using processes previously described in which they can be distorted or shaped as desired. Thereafter, the fish may be complete, but if it is not, further processing may be done. For example, once this fish is completely dry, part of all of both of its sides.

Compositional Arrangements of inventive images with multiple parts can be made using light sources as parts which may or may not be connected to the rest of these images. All of the inventive images in Fig. 107. are comprised of one or more polymer parts illustrated as white forms outlined with thin black lines, in Compositional Arrangements with one or more light sources (e.g. neon light bulbs) which are rendered as wide grey lines. Fig. 107.a. shows an inventive image made of a transparent square polymer with a spiral shaped light source in front of it which extends out beyond the polymer's sides. Fig. 107.b. shows an inventive image with a spiral shaped light source visible behind its transparent polymer square, and extending out beyond its sides. Fig. 107.c. shows an inventive image made of four separate rectangular polymer parts and one irregularly shaped light source behind them. Fig. 107.d. shows an inventive image with a see through rectangular polymer in front of an irregularly shaped light source which extends beyond the polymer's side edges. Fig. 107.e. shows an inventive image with a rectangular polymer in front of a circular light source. Fig. 107.f. shows an inventive image with a rectangular light source and a larger circular polymer. This polymer may be in front or behind this light source, or this light source may be within this polymer, e.g., in a hollow air pocket, or in the negative space within it. Fig. 107.g. shows an inventive image with a single large circular polymer that has four small light sources in front of it and/or behind it. Fig. 107.h. shows an inventive image made of a transparent rectangular polymer with a single spiral shaped light source to its side and behind it. Fig. 107.i. shows an inventive image with an irregular polymer in front of a larger rectangular light source.

Fig. 36. V. shows surfaces of inventive images in a cross section or side view. Each of the surfaces of inventive images with surface irregularities could either have small surface irregularities or large surface irregularities, depending on its scale. For example, it can be a magnified view of an inventive image with small surface irregularities; it can be a view shown to scale (actual size) of an inventive image with large surface irregularities; or it can be a scaled down view of a larger inventive image with large surface irregularities. In the Fig. 36., the initial inventive image (e.g., the initial image support which may be a stabilizer) is identified as a., and the new application superimposed upon its surface irregularities is identified as b. If a. and/or b. are opaque, b. is not a Clarifying Imprimatura (but it might be a surface preparation stabilizer). If both a. and b. are at least partially transparent or translucent, and they are made of the same composition, b. is neither a Clarifying Imprimatura nor a surface preparation stabilizer (e.g. if b. is the same cPRM that was used to make a., which is a hardened polymer). But, if both a. and b. are at least partially transparent or translucent, and they are made of different compositions, b. is a Clarifying Imprimatura (e.g., in such a case, if the surface of the inventive image a. is polymer and b. which may for example be a different polymer or an acrylic paint, is a Clarifying Imprimatura that might also be a surface preparation stabilizer; alternately, if the surface of the inventive image a. is non polymeric such as glass, b. may for example be cPRM, but b. is not a surface preparation stabilizer). If both a. and b. are transparent and/or translucent, the application of b. on a. will clarify this inventive image, change its coloration, increase its transparency and/or translucency, change other surface light effects (e.g. making it less matte) or produce a combination of these effects. Also, either a. or b. may be transparent and/or translucent and the other is opaque.

In Fig. 36.V.i., there are surface irregularities on two opposite sides of the inventive image with the applications b. and b-2 superimposed upon them completely filling in and smoothing out the image's surfaces. If the initial inventive image, a. is transparent, translucent or both, then b. and/or b.-2. are Clarifying Imprimatura provided they are transparent, translucent or both, and their compositions are different from that of a. But because the compositions of applications, b. and b.-2. might be the same or different, the aesthetic and structural properties and the strength and permanence of this inventive image may be the same or it may differ on these opposite sides. For example, Fig. 36.V.ii. shows how this inventive image might look if the coloration and the refractive indexes of both b. and b.-2.. are the same as those of the initial inventive image a., if their differences are not visible, or if their differences are not noticeable, whether or not b. and b.-2.. are the same substance (e.g., if b. and b.2. are substances made of the same composition; or if b. and b.-2. have different compositions, but the same or similar coloration and refractive indexes). In Fig. 36.V.ii., any differences in the three layers used to form this inventive image are not visible or not noticeable, thus neither the surface irregularities nor the variations in spatial depth of layers b and b-2 are visible.

If, for example, both b. and b.-2. are transparent applications on surface irregularities on an inventive image made using a transparent material or medium, (e.g. if b. and b.2.. are Clarifying Imprimatura; if they are transparent cPRM used on an inventive image made of the same transparent cPRM; or if b. is one of these and b.2. is the other), the original inventive image a., with surface irregularities on its two opposite sides might have gone from a densely translucent inventive image to a completely transparent inventive image; its color might have changed; its two surfaces might have gone from matte, to less matte, semigloss or glossy surface; its other surface light effects might have changed (e.g. its reflectivity), or a combination of these changes might have occurred. If desired, this inventive image in Fig. 36.V.ii. could be the finished inventive image, or it could be further processed as desired. For example, Fig. 36.V.iii. shows coloration on both sides of this inventive image over the surfaces of b. and b.-2. If either or both the applications b. and b.-2. were Clarifying Imprimatura, or if either or both of these applications were made on an opaque surface of the inventive image using a substance the composition of which is different from the i inventive image it is used upon, the applications subsequently superimposed on b. and b.-2. might not have been able to bond to this inventive image as well as desired, if its surfaces had been smooth rather than covered with surface irregularities. Application b. and/or b-2. may be surface preparation stabilizers. Though the applications subsequently superimposed on b. and b.-2. might have bonded as desired directly to this inventive image's surface irregularities without any intermediary application (e.g., surface preparation stabilizer) in between them, the use of such applications on inventive images (which may be opaque, transparent, translucent, or a combination of these), with a different composition from that of the inventive image it is used upon, enables the process of superimposing layers on such images to be more spontaneous, more WYSIWYG and more according to the Principle of Whole Development and Unity than it could have been if these superimposed layers were applied directly in the surface irregularities on this inventive image, without an intermediary application (e.g., surface preparation stabilizer).

In a further illustration of the present invention, an inventive image is made using two or more superimposed layers of a conventional acrylic paint and/or a conventional acrylic painting medium, with at least one stabilizer in a mold. For example, an acrylic painting medium mixed with a defoamer and/or a bubble reducing stabilizer is put into the mold at a thickness of about 0.15" and allowed to dry. The inventive image shrinks significantly in the mold. A second layer of the same composition and about the same thickness is superimposed over this image. If desired, in addition to or instead of the defoamer and/or a bubble reducing stabilizer, a fiber stabilizer might have been added to this image, e.g., in between its two layers, carefully installed so as to prevent bubbles. If this form removed from its mold is not the inventive image desired, further processing may be done as desired, in and/or out of the mold.

Fig. 8.I. shows a colored inventive image having a plurality of see through superimposed layers, yet despite the number of layers, it is not very thick e.g., approximately 36" high x 52" wide x 1.25" deep. An enlarged cross section view of the layering of this image is in Fig. 8.II. with numbers indicating an example of the order in which its layers may have been applied. This image is made in a indoor workspace with a normal room temperature and good ventilation. This image is begun in a mold made of a flat elastomer bottom surface with oil formulated clay side walls, without any mold release. The rectangular negative space of this mold measures 36" x 52" x 1".

To make the first layer of this image, a batch of colorless transparent PRM is made. A quantity of about 7670 ml. (7669.116 ml.) of Silmar® Polyester Resin S-40 is put into a polypropylene container. A concentrated-stabilizer-mixture is made by taking about 40 ml. of the S-40 monomer and putting it into a separate container, a glass jar, which contains about 7 grams of Tinuvin® 328 stabilizer in powder form. Note that a very low percentage of Tinuvin® is used because this polymer cast will have many layers of polymer superimposed. These are mixed well so that the stabilizer is thoroughly wet out without lumps. Then this concentrated-stabilizer-mixture is poured into the original batch of S-40 monomer to form the PRM desired, any lumps are either broken apart, wet out and mixed into the PRM, or removed so that no trace of the concentrated-stabilizer-mixture is visible within the PRM. This PRM is catalyzed with about 77 ml. of MEKP, mixed into it well and poured into the mold forming a thin layer approximately 0.25" thick. Once this polymer gels, but before it is firm, about 50 small pieces of aluminum leaf are pressed into it, so that they embed. Within an hour this image is hard to the touch and within two hours another layer is superimposed on it.

A second batch of the same PRM is made in three quarters of the quantity previously made (using about 5752 ml. S-40 resin monomer) to form the second layer of this image in three superimposed applications - an application of cPRM, an application of fiber, and then another application of cPRM. A half of the total PRM prepared is put into a separate polypropylene container and catalyzed with about 58 ml. of MEKP which is mixed into it well. Then using an ordinary paint brush with dark bristles, this cPRM is generously brushed onto the polymer image's surface so that it covers it well. All brush hairs shed on the image are removed. Then a single, clean piece of very fine open weave fiber stabilizer measuring 52" x 36" is stuck onto the wet cPRM and pressed down using a blunt end on a wood stick or tongue depressor, so that the fiber is completely and flatly stuck on the image, as completely saturated with cPRM as possible, and so that trapped air bubbles are released. One hour later, this layer of fiber is superimposed with more cPRM using the rest of the prepared PRM, but not catalyzed in one batch, catalyzed in smaller in smaller quantities of approximately 925 ml. with about 125 ml. MEKP. As each container of cPRM is catalyzed, it is poured on the surface of this image and brushed out over it using an ordinary paint brush with dark bristles to embed the layer of fiber within the image. All brush hairs shed on the image are removed.

Another batch of colorless transparent PRM is made using S-40 and Tinuvin® 328, just like the previous batch. A few spoon fulls of a transparent blue pigment is put into a separate container with about 75 ml. of PRM from the prepared batch. These are mixed thoroughly, completely wetting out the pigment with the PRM to make a concentrated-coloration-mixture which is then catalyzed with about 0.75 cc. MEKP catalyst and used as a paint. Further processing of this inventive image continues.

An alternate interpretation of the inventive image in Fig. 8.I is that its depth is less than 0.5", though it is comprised of 15 superimposed layers of cPRM, each of which is differently colored, so that even though it does not have significant spatial depth, the effect of its coloration relies on its transparent spatial depth and on the light that passes through it. In a different interpretation, the inventive image of Fig. 8.I. is made of many superimposed layers of colored transparent cPRM, yet its form is 2D planar, it is not significantly thicker than paper. In yet another interpretation, the inventive image in Fig. 8.I. is a block of polymer (e.g., as deep as it is wide), with coloration throughout its transparent spatial depth which relies on light passing through its 3D form. With a form that is a block of polymer, this inventive image might for example, function as a seat or a table.

Figs. 71. and 72. each show an inventive image begun without any initial image support, which is further processed in ways that involved rearranging their compositional arrangement and changing their art form. At any of the 12 stages in Fig. 71., and at any of the 9 stages in Fig. 72., each of the inventive images illustrated could be complete and all further processing ceased. These illustrations show how the workability and reworkability of the medium of the present invention gives image makers unprecedented freedom and control in forming images, to the extent that they can freely work with formal elements such as transparent spatial depth, light, Compositional Arrangement, shape, form, color, structure, method of display, and even change the image from one art form to another. The inventive image in Fig.71.a. begins as three separate parts in a Compositional Arrangement, e.g. these might be three polymer rods, flat pieces of polymer, or non polymeric ingredients might comprise one or more of these three parts. For example, these three parts might be hung as a mobile; two of its upper parts might hang and its third part might stand on the floor or ground forming a sculpture; these three parts might be mounted on the wall as a wall piece; or they might be displayed on a pedestal as sculpture. Fig. 71.b.1 and 71.b.2. are two ways that 71.a. might be further developed by rearranging its parts and connecting them into two different Compositional Arrangements both of which have the same two new parts, a circular part (e.g., which may be a rod or a plane), and a linear part (e.g., which may be flat or cylindrical). In Fig. 71.b.1., these two added parts connect all three separate parts of this image together into one form, while in Fig. 71.b.2., these two added parts connect with only two of the three initial parts of this inventive image, thus this inventive image is comprised a Compositional Arrangement of two separate parts. Either Fig. 71.b.1. or Fig.71. b.2. might be the finished inventive image desired, but if it is not, further processing can be done. For example, if desired, this further processing can be reversed and the image in Figs. 71b.1. and 2. can be reformed into the inventive image shown in 71.a.

As another example, the inventive image in Fig. 71.b.2. which is made of two separate parts, can be superimposed by or on a new planar part which connects them as in Fig. 71.c. This new planar form closes the once open form of this inventive image, thereby enabling it to function as a different art form if desired, e.g., it can now function as a painting, as a window, as a table top, as a door, etc. (Alternately this new part might be a frame or a rod giving the form of 71.b.2. a rectangular perimeter, e.g., mimicking a traditional painting.) If desired, the inventive image shown in 71.c. can be made into the inventive image shown in 71.b.2. again by removing its new part. The image in Fig. 71c. might be the finished inventive image desired, but if it is not, further processing can be done as desired. Fig. 71.d., shows the inventive image in 71. c. cut irregularly on a diagonal into two uneven parts. Thus this inventive image can no longer be used in same functions as it could be used in the previous stage shown in 71.c. If desired, the inventive image shown in 71.d. can be reconnected so that it becomes the image show in 71.c. again. Alternately, for example, the inventive image shown in 71. d. may be used as a shaped painting, it might be put on a stand as a sculpture, or installed as a uniquely shaped skylight. In 71.e. the inventive image of 71.d. is formed into a new Compositional Arrangement which takes advantage of its transparent forms. However, if desired, the inventive image shown in 71.e can be reformed back into the form it had in 71.d. Instead, Fig. 71.f. shows a new part added to this inventive image as a layer behind its two existing layers which develops this inventive image's use of transparency. But if desired the inventive image of 71.f. can be reformed into 71.e. again.

In 71. g., another new part, is added to this inventive image and its transparency is developed in a different Compositional Arrangement. The inventive image of 71.g. can be made into that of 71.f. again if desired. Fig. 71.h. shows this inventive image reorganized into yet another Compositional Arrangement, with a new part added, a circular plane layered underneath two of its forms. The form of the layers of this inventive image have also been changed by both additive and subtractive processes, enlarging two of them and reducing the size of its upper rectangular part. The inventive image of 71.h. can always be made in to 71.g. again if desired. Fig. 71.i. shows that the layers of the inventive image seen in 71.h. are altered so they are no longer perceived to be separate layers, though they may still be. This illustration does not show that this inventive image's coloration is remains at different levels of real spatial depth in the image. Yet if desired the inventive image of 71. i. can be reformed to be as it was in 71.h.

In 71.j. coloration and texture are added to the inventive image and coloration is removed from it. At any time 71.j. can be made to be as it was in 71.i. again. This inventive image is further processed one last time with dramatic changes in its form. Its central circular form which was only coloration in 71.j., is enlarged and cut out in 71.k. Cuts into this image also alter is perimeter. The form of this inventive image is further changed by the addition of two new parts as layers - the rectangle shown in grey on the left side of the image is a layer added to this image's underside, and the striped form on the image's upper right is a layer added over it (e.g., which might be an open form made of parallel rods and a frame). If the inventive image in Fig. 71.k. is not the image desired, further processing may be done and there is always the option of reforming this image to be as it was in 71.j. or any other earlier stage.

Because the Compositional Arrangement of the inventive images in both Figs. 71. and 72. are changed continually, tacking might be used to secure their parts. Like the inventive image show in Fig. 71., the inventive image shown in 72. is not made using any kind of image support. Like other inventive images it can be reworked at any time to be back the way it was at any previous stage without limitations, problems or undesirable issues. The image of the invention in Fig. 72.a. begins as six separate parts. This inventive image is reorganized into different Compositinoal Arrangements in Figs. 72.b.- d. In Fig. 72.e. six new parts are added to the inventive image in Fig. 72.d. These six new parts are removed in 72.f. and replaced by a different new part, a rectangle which might be either an open or a closed form, e.g. a frame or a rod, or a plane. This new rectangle is the common part connecting all of the other parts of this inventive image. The Compositional Arrangement of this inventive image is reorganized in 72.g., its rectangular part is replaced by an oval part which also may be either an open or a closed form, and this image is given the means by which it can be hung for display. This means for hanging this inventive image is later removed as shown in 72.h. Fig. 72.h. also shows other dramatic changes to this inventive image. Its coloration is changed, its Compositional Arrangement is changed, its oval part is removed, and two new lozenge shaped parts are added to it which are either light sources or which have light sources mounted behind them. Therefore, these lozenge parts illuminate this inventive image with real light. Fig. 72.i. shows this image further processed. One of its lozenge forms is now illuminated with different coloration, a new transparent rectangular part is added as a layer over part of this image, and the forms and coloration of the initial six part of this image are altered using additive and subtractive processes.

In an illustration, Fig. 69. shows an inventive image is made by forming a transparent colorless polymer in a rectangular planar shape and further processing it with coloration at 13 points in its development, marked as 69.I.-XIII. However, if it is finished as desired at any time along this progression, no further processing would be done, or if instead this inventive image is not complete after these 13 stages additional processing can be done as desired. In addition, in 5 of the 13 stages of this inventive image's development a second illustration (marked with a number ending in "i.") compares the development of this inventive image to what could be accomplished using conventional practices which are as close to the inventive image as possible. The 13 principal illustrations of Fig. 69. have dotted lines indicating one or more new layers added on the inventive image and letters identify all newly added elements. This illustration begins showing the inventive image in Fig. 69.I. as a 2D or 3D transparent colorless planar polymer initial image support with real spatial depth and four elements of coloration on its upper surface marked a.- d. For example, this image might be rigid and/or flexible, the colored element marked d. might be a painted line, and the other three circular elements marked a., b., and c. might be opaque circles made of paint and attached paper. This may be the inventive image desired but if it is not, this image can be further processed as desired. As an example, some or all of its coloration may be reworked or removed. In addition or instead, more coloration might be added, and/or the rectangular shape of this image might be altered. Fig. 69.II. shows this same inventive image further processed with a new layer of transparent colorless polymer superimposed, marked a., which embeds its coloration. The cPRM used bonds well to the underlying layer of polymer, though it may not bond, or it might not bond well to the surface areas covered with coloration, e.g. the cPRM of this new layer is the same as that which was used to form the initial polymer support of this image. This may be the finished inventive image desired but if it is not, it can be further processed as desired. Note that there is no comparable, permanent way to make such a thick transparent colorless layer on a conventional image to embed its surface coloration. A conventional image comparable to the inventive image in Fig. 69.II. could not have been made.

Fig. 69.III. shows this inventive image further processed with transparent coloration (e.g., paint) applied to its top surface in three circular shapes, marked a., b.and c. This image may now be finished, but if it is not, it can be further processed as desired. Fig. 69.IV. shows this same inventive image further processed with a newly superimposed layer of transparent colorless polymer marked a., on its top surface. This image's top surface and two of its sides are also have transparent and translucent coloration in areas marked b. - f. , e.g., applications of paint, of colored cPRM or both. This may be the finished image desired but if it is not, it can be further processed as desired. Fig. 69.IV.i. shows how comparable marks might appear on a conventional image which is as close as possible to this inventive image. Note that the conventional image could not be built up with the see-through spatial depth which was created on the inventive image, and note that only a small portion of the new see-through coloration applied on the inventive image (marked b. - f. on Fig.69.IV.) appears on the conventional image. Fig. 69.V. shows this same inventive image further processed with superimposed applications: a new layer of transparent colorless polymer is superimposed marked a.; a circular line is marked b. (e.g., a drawn or painted line, or a wire attachment); and two new circular applications of opaque coloration are marked c. and d. This may be the completed image desired, but if it is not, this inventive image can be further processed as desired. Notice that many of the superimpositions made on this inventive image are so determined by and dependent upon its spatial depth, that they could not even be made on a comparable conventional image as Fig. 69.V.i. shows.

Fig. 69.VI. shows this same inventive image further processed with the removal of two previous applications and the addition of multiple new applications. The applications marked b. and d. in Fig.69.V. were removed, e.g. by sanding them off and then applying more cPRM to the abraded polymer surface so that it is visually continuous with the rest of this inventive image. In addition, a new layer of transparent colorless polymer is added onto the left side of this inventive image, marked a. upon which two new applications of opaque color are made marked b. and e. On this inventive image's top surface, new coloration is added in the form of a translucent circle marked d., and a transparent circle marked f. (e.g. painted coloration), coloration is also applied on the backside of this inventive image marked c. This image may be the finished image desired but if it is not, it can be further processed as desired. The conventional image in Fig. 69.VI.i., developed as closely as possible to this inventive image, shows how different these new applications and previous applications would appear and how some of them would not be able to be made at all on using comparable conventional practices. The inventive image of Fig. 69.VI. is shown further processed in Fig. 69.VII. with three changes. A thick new layer of transparent colorless polymer marked a. is added on its upper surface, upon which a broken color application is made marked b. and an opaque application is made marked c. This may be the finished inventive image desired but if it is not, this image can be further processed as desired. For example, one two or three of these new changes made to this image could be reversed, e.g. the layer of polymer or the coloration could be removed, or both could be removed. Fig. 69.VIII. shows this same inventive image further processed with new superimpositions. Another new thick layer of colorless transparent polymer is added marked a., upon which three new applications of coloration are made - two circles b. and e., and a rectangle d. This may be the inventive image desired but if it is not, it can be further processed as desired. There is no way to have made a conventional image comparable to this inventive image.

Fig.69.IX. shows this same inventive image further processed. It has been superimposed by a new thick transparent colorless layer of polymer marked a., upon which a variety of new colored applications are made, marked b., d. and e. In addition, the looping shape marked c. in Fig. 69.VIII. is removed and reworked, so that in Fig.69.IX. the same part of this inventive image which is also marked c., shows that this loop was replaced by a linear segment (e.g., the loop was carved or sanded out of the image, then, the new colored line was applied and the image's polymer reformed. This inventive image may be the inventive image desired but if it is not, it can be further processed as desired. In comparison, none of the changes made on this inventive image in this stage could be comparably made on a conventional image. Fig. 69.X. show this inventive image further processed. A darkly colored transparent circle is made on the left side of this image marked a., and a new, thin transparent colorless layer of polymer marked b. is added onto this image's upper surface which has two transparent colored shapes marked d. and f. In addition, a darkly colored rectangle and a darkly colored circle marked c. and e. are applied onto the underside of this inventive image. This may be the inventive image desired but if it is not, this image can be further processed as desired. Fig.s 69.X.i. shows a conventional image which is undergoing processing which is as close to that of this inventive image as possible. While the applications marked c. and e. on the inventive image in Fig. 69.X. can be made on the conventional image in Fig 69.X.i., these applications extend off of its surface, and none of the rest of the new applications made on the inventive image in Fig 69.X. could be comparably made on this conventional image.

Fig. 69.XI. shows this inventive image further processed. A new thick layer of transparent colorless polymer marked a. is added onto its underside and its surface (the underside of this inventive image) is colored with two transparent circular applications marked b. and d. In addition, a new thick layer of transparent colorless polymer marked c. is added onto the top surface of this inventive image, and it is colored with broken color applications marked e. This may be the completed inventive image desired but if it is not, this image can be further processed as desired. For example, either or both of its new polymer layers can be removed and/or its new coloration can be partially or entirely removed. Fig. 69.XLi. shows just how much of this inventive image's development would not be able to be done on a comparable conventional image which would remain 2D or 2D planar as the rectangle of its perimeter indicates.

Fig. 69.XII. shows this inventive image further processed using both additive and subtractive processes. Two new thick layers of transparent colorless polymer are added onto this inventive image, one added on its bottom side marked a., and the other added on its top side marked b. By removing matter from this inventive image (e.g. by carving it, sanding it, or both), three negative pyramid shaped indentations (marked c., d., and e.) are made in it, one or two sides of each of which is colored. Notice that the indentation marked e. cuts through some of this inventive image's internal coloration. Notice also that these indentations are cut in through this image's side, without affecting the continuousness of its bottom surface. The surface abrasions or SSI left from forming these three indentations are filled and smoothed out with coloration, cPRM or both, leaving the surfaces within these three negative indentations transparent and clear. In addition, broken color applications marked f. are made on this inventive image's upper polymer surface. This may be the finished inventive image desired, but if it is not, it can be further processed as desired. None of the changes made to this inventive image in this stage could be comparably made in processing a similar conventional image. Fig. 69.XIII. shows this inventive image further processed with texture added onto its top surface and one of its sides marked a. For example, this texture might be made by connecting pyramid shaped attachments onto this image; this texture might be made by forming new polymer on small subdivided areas of this image's top and side surfaces (as in Fig. 77.III.) and then carving and shaping this polymer into pyramid shaped texture; or this texture might be made in a combination of these ways. This may be the complete image desired but if it is not, it can be further processed as desired. None of this texture could be made on a comparable conventional image.

The inventive image in Fig. 6.V. is made. In a mold made using conventional practices, a planar polymer initial image support stabilizer measuring 8" x 10" x 0.4" is made using cPRM that is colorless and transparent, with tiny iridescent mica particles mixed into it. More specifically, the cPRM is made using a PRM made with about 525 ml. (524.384 ml.) of Silmar® S-40 polyester resin monomer. About 40 ml. of this PRM is taken out of this batch and mixed thoroughly with about 2 grams of Tinuvin® 328, completely wetting out this Tinuvin® powder to produce a concentrated-stabilizer-mixture. All of this concentrated-stabilizer-mixture is then mixed thoroughly into the PRM. If after mixing thoroughly, there are lumps of the concentrated-stabilizer-mixture in the PRM, these are either broken apart, wet out and mixed into the PRM, or removed so that no trace of the concentrated-stabilizer-mixture is visible within the PRM. Then, about 40 ml. of the PRM is taken from the batch and put in another separate jar which contains about 2 teaspoons of the Mearlin® Luster pigment, "Supersparkle" which is made using mica and titanium dioxide, and which is manufactured by Engelhard Corporation of Iselin, New Jersey. These are mixed well to form a concentrated coloration mixture which is them added into the batch of PRM and mixed into it well. This PRM is then catalyzed with about 5.25 ml. Cadox® M-50 MEKP, stirred well and poured into the planar negative space of the elastomer mold which is not coated with a mold release agent. Immediately, after this cPRM is put in its mold, this mold is covered with a piece of cardboard which rests on the top edges of the mold's perimeter walls, leaving an enclosed air pocket in between the surface of the cPRM in the mold and the underside of the cardboard roof over the mold (as in Fig. 82.), so that the polymer formed will be a smooth, level plane.

Two days after this polymer is formed it is removed from its mold, cleaned well using cationic cleaner and water, and allowed to dry. An existing 8" x 10" Polaroid photograph of the inventive image in Fig. 6.I. is immersed in water 160° F. water for about 4 minutes, at which time it is transferred into cold water. While under water, the transparent photographic emulsion is removed from its Polaroid backing carefully so that it does not tear, and placed on a sheet of acetate or mylar to temporarily support it, with the front side of the photo emulsion against the acetate or mylar. The polymer image support is nearby, but not in the water. Using the acetate or mylar, the photographic emulsion is lifted out of the water. If the emulsion is distorted (e.g. wrinkled undesirably), this is straightened out as desired, e.g., by dunking the emulsion in and out of the water so that it flattens as desired on its temporary acetate or mylar support. Once it is out of the water, the exposed side of the photographic emulsion is placed onto the polymer image support aligned as desired. Then the acetate or mylar which is face up is removed. If the emulsion has any undesirable distortions such as wrinkles, these are corrected as desired, e.g. in this process water may even be put on the inventive image. Meanwhile, the photographic emulsion is intentionally distorted, as in Fig. 6.V. The resultant inventive image may be complete, but if not, it might be further processed.

For example, once this inventive image is dry, more cPRM (e.g., of the same composition which was used to make the polymer) might be applied on it (e.g. painted on) forming a narrow band straddling the perimeter of the photographic emulsion and the bare polymer surface, securing the edges of the photographic emulsion to the rest of the inventive image on its top plane as well as it side edges. Alternately, this inventive image might be superimposed by a Separating Layer Stabilizer of polymer either of the same composition of cPRM in the polymer plane or of a bonding composition (e.g. transparent, colored or colorless, even or uneven, textured, undulating or smooth, as thick or thin as desired, etc.), completely embedding its photographic emulsion. Its Separating Layer Stabilizer of polymer might be entirely or partially superimposed by a surface preparation stabilizer to enable further superimpositions, e..g, for bonding purposes for instance to paint applications, printing, writing, drawing, etc. perhaps using conventional practices such as oil paint, acrylic paint, ink or watercolors. The resultant inventive image could have two superimposed layers of marks made by painting, drawing, writing, printing or a combination of these, with a photographic transparency, iridescence, real spatial depth and real light in between all of these layers. The resultant inventive image may be the image desired, but if it is not, it might be further processed.
In some embodiments, inventive images are made which resemble conventional architecture that is made largely of glass, e.g., a house, a pool house, a beach home, a shop, a green house, a building resembling the glass Grand Louvre Pyramid by I.M. Pei, etc. But among their primary differences, these inventive images are made largely of polymer that is transparent, translucent, partially opaque or a combination of these, instead of glass. Thus, they are artistically designed with more diversity than the conventional architecture they resemble, and/or they have less additional non polymeric structural support visible than the conventional architecture they resemble. For example, inventive images are made which resemble conventional architecture that is made largely of glass, but they have artistic variations which can not be made in glass and they are made using a cross linked polymer which makes them stronger than glass, thus they require substantially less metal reinforcement.

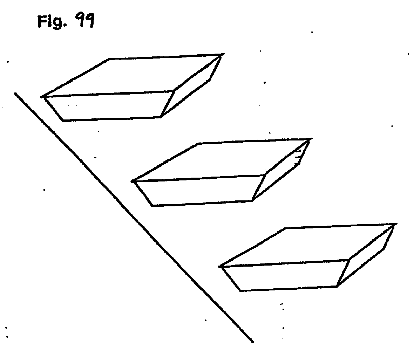

Fig. 99. is a side view of inventive image stairs with tapered edges, made of a strong, transparent, cross linked polymer with metal bonded underneath (such as ornamental ironwork and/or metal with a reflective upper surface). Each stair might for instance have been made with multiple layers of cPRM (e.g., 5-20 layers), with see-through coloration.

In addition to their aesthetic functions, inventive images, serve other architectural functions, or they are architectural design, e.g., interior architecture, landscape architecture, etc.. Planar inventive images might for example, be used as walls or as part thereof, windows, skylights, doors, partitions, shades or shutters, fences, gates, flooring or part of flooring, etc., even for example, if they were previously used as fine art, e.g. as paintings or sculptures. These inventive images can be made to be strong and permanent despite their use and despite their exposure to light, despite the impact and other wear they might encounter. Many of the inventive image illustrated herein could be walls, such as those in Figs., 1a. and b., 2., 6.a.-c., e. and f., 6.I-IV., 8.,., 73.giii. and g.iv., 97., 104., 105., 108., and 110.VII. For example, the inventive images in Figs. 97. I.- IV. can function as facades of buildings, or as walls inside of buildings. The inventive image in Fig. 97.I. may be made of transparent or translucent polymer, with coloration not illustrated. Its fifteen arches are either negative spaces (openings), or they are polymer windows. The inventive image in Fig. 97.II. is made of colored polymer with special light effects and seven rectangular polymer windows. The inventive image in Fig. 97.III. has an artistic design, the rectangular shape on its left side is a door frame and the circular formation within it is either a gate or the design on the door. The inventive image in Fig. 97.IV. is made of polymer colored in gradations of value from light to dark.

In some embodiments, inventive image ceilings are made in parts. They are aesthetically varied and they are installed in different kinds of locations using different methods, means and manners, e.g., conventional practices used in sculpture, architecture, engineering, construction, etc. As an illustration, inventive image ceilings are made in curved parts and installed in various ways, e.g, some are made on curved molds, some are made in tiered processes, some of these curves are made while their cPRM is gelled. These parts might be bonded together with fiber reinforcement. The curve of this inventive image ceiling can be altered as its parts are connected, e.g., increased and/or decreased. One of these inventive image ceilings may be a dome. As another illustration, inventive image ceilings are made with two or more superimposed parts (e.g., for aesthetics, structure or both) with or without negative space between their superimposed parts, color and light can form unique effects as desired. For example three square parts of different sizes may be superimposed so they are smaller as they are closer to viewers (e.g., in an Albers pattern).

In some embodiments, inventive images are made which are ceilings and skylights, e.g., indoors or outdoors (for example on a patio or pavilion). These images might for instance be made so that they change as sky changes, e.g. they allow any degree of visibility of the sky, the stars, storms, lightning, rain, etc., for example by showing changes in light and color. For instance, inventive image ceilings and skylights might be made with light effects, e.g., using light sources and reflective materials and media such as mirrors, dichroic materials, crystal, see through fibers, colored light, fluorescent materials, lenses, gratings, Fresnel Lenses, prisms, paints (such as in veil layers and/or layered in broken color); metal leaf; mica, photographic transparencies, shadows, negative cut outs, negative spaces between connection seams, drawings in light, photochromic effects combinations of these, etc. In some embodiments, inventive images ceilings and skylights are made which appear to recede in space, e.g., using illusions of a sky, transparency and/or translucency, they bear a painted copy of the Sistine Ceiling, using other means, or using a combination of these.

As Window Example 1)., a set of large inventive image picture windows are made for a building using the inventive medium. these inventive images picture windows are designed to obscure, blur, distort, or partially block, the view through them to any extent, the light passing through them to any extent, or a combination of these, as desired. As Window Example 2). inventive image large picture windows are made that have one or more representations of nature on them, such as one or more photographic transparencies, a painting and/or a collage of mountains, ocean, a waterfall, a garden, etc. As Window Example 3). inventive image windows are made which are see-through copies of conventional images. For instance, one of these inventive images windows might have a transparent copy of Vincent Van Gogh's painting, The Starry Night 1889, and another might have a copy of a Louis C. Tiffany stained glass window. However, because the metal subdivisions which are essential to structurally support such conventional stained glass images are not structurally necessary in inventive images, the metal subdivisions Tiffany had to use in his stained glass image, are intentionally left out. Thus, in comparison to stained glass windows and to the specific Tiffany windows that are copied in these inventive images windows, these inventive images are visually continuous. As Window Example 4)., inventive image windows are made that have embedding in them, e.g., embedded effects of coloration and light brought by one or more materials, media, object, devices, and their combinations that alter the light such as prisms, crystal, dichroic materials, reflective subjects, paints, texture, light sources, other coloration, or combinations of these. In addition or instead, light coming through these inventive images windows might be directed in a particular way, e.g. in a direction or pattern for instance created by attachments, inlays, embedding, painting, photographs, texture, carving, other elements and combinations of these.

In some embodiments, see-through lunettes are made using the medium of the present invention, real light passes through them into interior spaces. For instance, an inventive image lunette may be made of transparent polymer that is covered with small attached crystal or dichroic glass particles, collaged with photographic transparencies, painted with transparencies, or a combination of these.

In an embodiment, tiles are made using the inventive medium. For example, such tiles can be made so that they are more permanent than other transparent and translucent tiles, e.g. glass tiles. Most of these tiles are in standard sizes and geometric shapes, and most of them are made of strong polymer which can take some impact without undesirable effects. These tiles are all works in progress, finished when they are arranged and installed. These are examples. Tile Design 1. are tiles that are transparent, translucent, partially opaque or a combination of these. They are colorless with irregularly embedded natural and organic subjects, e.g., grasses, leaves, flowers, roots, pebbles, acorns, and other plant forms, combinations of these, etc. These might also be painted. Tile Design 2. is a set of tiles with one or more of the set having a logo, owners name, coat of arms or other such identifying symbol, mark or graphic on it. Tile Design 3. is the same as Tile Design 1. and 2., with additional light effects. For instance, some of them have iridescent pigments, some of them have bits of metal or metal leaf in them such as silver or aluminum leaf. Tile Design 4. These tiles are not necessarily made in standard shape or sizes. Instead their sizes and their perimeter shapes are designed to contribute to the illusion of spatial depth that they form when they are assembled and installed as the desired image, e.g., when installed their perimeter shapes form receding lines of perspective. Further Tile Designs are shown in the inventive images in the following Figs. provided they are made in appropriate sizes: Figs. 1.iii. and 1.a., 2., 6., 33., 34., 35., 50., 51., 69.I.-III., 70, 74.d., 97.IV., 98.c.- d.; 98.e.2.; 104.-9.; and 108.

In some embodiments, inventive image sets of columns are made for use in architectural functions. For example, one of these inventive images might be a set of four columns for a home. As an illustration, an inventive image set of twenty columns are made for a grand covered walkway through a garden area in a park. These columns are cylindrical polymer, with parallel vertical light qualities and effects all of the way around them. For example, air pockets in the form of prisms might be embedded in vertical lines in these polymer columns, extending their entire length, and repeating all of the way around them. Or these columns might be embedded with light reflective materials in vertical stripes all of the way around them. The roof of this grand walkway might also be made using polymer of the present invention to maximize its play of light and shadow, and its aesthetic. As a second illustration, an inventive image set of six slender cylindrical columns with the molded vertical indentations often seen on conventional columns might be made of transparent polymer, and painted and carved internally and externally so that they look even more fragile (e.g., so they look cracked), even though they are made with cross linked polymer and reinforced internally with multiple layers of a fiber stabilizer which are not visible. These columns might hold up a roof on a promenade which looks like it is very heavy, e.g., it is dark in color and appears to be stone of some kind. Walking in this promenade, may be uncomfortable for viewers because it seems like the columns are about to collapse, unable to hold the weight above them.

Other installed inventive image sets of columns give viewers off very different aesthetic environments. For instance, one installed inventive image set of columns which are unusually tall, make viewers feel as if they are floating, in a ethereal environment.

An abstract inventive image measuring 40" x 40" is made as a multi-layered photomontage which begins on a polymer initial image support. A layer of cPRM is applied approximately 0.5" thick, into the 40" x 40" negative space in a flat mold made using conventional practices. The cPRM is made of about 13110 ml. (13109.6 ml.) of Silmar® S-40 polyester resin monomer. Approximately 75 ml. of this PRM is taken out of this batch and mixed thoroughly with about 262 grams of Tinuvin® 328, completely wetting out this Tinuvin® powder to produce a concentrated-stabilizer-mixture (as described on p). All of this concentrated-stabilizer-mixture is then mixed thoroughly into the PRM. If after mixing thoroughly, there are lumps of the concentrated-stabilizer-mixture in the PRM, these are either broken apart, wet out and mixed into the PRM, or removed so that no trace of the concentrated-stabilizer-mixture is visible within the PRM. This PRM is then catalyzed with about 131 ml. (131.096 ml.) Cadox® M-50 MEKP, stirred well and poured at a thickness of approximately 0.4" into the planar negative space of the mold which is not coated with a mold release agent. Immediately, after this cPRM is put in its mold, this mold is covered with a piece of cardboard which rests on the top edges of the mold's perimeter walls, leaving an enclosed air pocket in between the surface of the cPRM in the mold and the underside of the cardboard roof over the mold (as in Fig. 82.), so that the polymer formed will be a smooth, level plane.

Once this layer of polymer hardens, it is removed from its mold and all of the residual matter remaining on it from its mold (e.g., clay release agents, etc.) is cleaned off of its two large surfaces, though traces of matter may be left on its side edges. Then the first of the three layers of the abstract photomontage of this inventive image is made on one of the sides of this hardened polymer surface using two photographic processes simultaneously, listed in the following description as 1). and 2)., with or without additional processing listed herein as 3). A collection of over 50 Polaroid photographs taken of a variety of subjects, was previously prepared. Though many of these photographs are easily identifiable representations of objective reality, they were taken and chosen for their abstract elements, such as their colors; their abstract shapes, lines, etc. In Processes 1). One at a time selected Polaroid photographs from the collection are immersed in water that is 160° F. or a higher temperature, for 4 minutes. Each photo is then removed from this heated water (e.g., it can be lifted with tongs), immersed in cold water, where its transparent photographic emulsion is removed from its conventional backing, removed from the cold water (e.g., with the support of a sheet of acetate on the side of the emulsion which will be used as its front side), and then laid as desired on the polymer surface. (Then if acetate or another temporary support was used to transfer an emulsion onto the inventive image, it is peeled off of the emulsion once it is laid on the polymer surface.) The emulsion can also be flattened as desired on the polymer surface. Less then a third of the total collection of photographs is used on this layer of the abstraction. Before it is transferred onto the polymer surface, as it is transferred onto the polymer surface, once it is laid onto the polymer surface, once it has dried on the polymer surface, or at more than one of these times, each of these photographic emulsions is altered in a way which makes it impossible to determine what its original real objective subject matter was. For example, each of these transparent photographic emulsions might be wrinkled, torn, cut, perforated, folded, stretched, drawn upon, painted upon, sgraffito might be done in it, it might be superimposed by another photographic emulsion, it might be superimposed by other processing, or it might be altered in a combination of these ways, as desired. These photographic emulsions are placed on the polymer surface in the position desired, often with negative space between them, sometimes overlapping one another to varying extent and sometimes they are pressed onto the polymer surface, e.g. by passing a roller over them, or by setting a weight upon them such as a sheet of glass. Thus their realistic pictures loose clarity and distort. On the polymer surface, these photographic emulsions begin to form the desired abstraction.

In Processes 2)., one or more Polaroid photographs are taken of various subjects, again for their abstract elements, not for their portrayal of objective reality. But rather than allow them to develop for the time necessary to produce a standard Polaroid print, each is pulled off of their negatives early, e.g., after 10-15 seconds rather than after 60 seconds. Then each of these Polaroid prints is set aside and its negative is used to transfer the photographic image or one or more parts of it onto the polymer surface. This is done by pressing this negative face down against the polymer surface as desired, preferably having warmed the polymer surface in advance (e.g., with a hot air blower). In general, keep the negative pressed down against the polymer surface for about 2 minutes, however this time can be varied for different effects, e.g., the negative can remain down for any amount of time between 1- 30 minutes. Also, during the transfer, keep the negative warm e.g., with hot air, and if desired pass over it with a roller, keep it weighted down, or both. Various effects might be produced on the inventive image surface by cutting these negatives and then only using one or more parts of them, by using them repeatedly on the polymer surface (which will likely produce progressively faded image transfers) and by preparing the polymer surface differently for receiving these images transfers, (e.g., by coating the polymer surface with various materials, etc.). For example, often the same negative is used in whole or in part, repeatedly to transfer a photograph or a part of a photograph onto the polymer sheet in multiple places, at different angles creating a sense of repetition with variation. Then, if desired, the underdeveloped Polaroid prints (which were pulled off of the negatives used for these images transfers), can be used to make pale emulsion transfers on the polymer surface as desired, using the underwater method of emulsion removal described above in Process 1).

In Processes 3). If desired, painting, drawing, sgraffito, other processing or a combination of these can also be done as desired on this abstract surface, e.g. before and/or after this abstract layer is formed, and/or as it is formed. If desired, the use of one or more of these kinds of further processing can also form desired bonding spots or bonding areas for connecting the layer of new cPRM which will be superimposed subsequently. For example, marking such as painting and drawing can be done using media which contain a bonding substance (like the same cPRM), and sgraffito can expose bare polymer bonding spots. Throughout the process of making this layer, this inventive image is continuously viewed from both of its sides. In the process of making the abstract elements of this layer, processing that is done to this polymer surface that is undesirable can be removed, and processing that is done to this polymer surface that is less than desirable can be reworked or removed, as desired.

Once the surface of this inventive image photomontage is about 30% covered with the desired abstract elements, e.g., colors, shapes, sizes and of various degrees of transparency and translucency, it is checked for bonding spots. Then, a mold wall is built around this inventive image (e.g., out of oil formulated clay), and a Separating Layer of the same cPRM is superimposed over the layer of abstract elements, using the same kind of cardboard roof over this layer of cPRM that was previously described so that its surface hardens flat and smooth. Then, on either side of this inventive image, the aforementioned processes 1). and 2). are repeated, and using 3). if desired. Again, throughout the process of making this second layer of abstract elements, this inventive image is viewed continuously from both of its sides. This new, second layer of abstract elements is then superimposed with another Separating Layer of the same cPRM which bonds to it as desired, using the same kind of cardboard roof over it that was previously described so that its surface hardens flat and smooth. Then, the third and final layer of abstract elements is added to this inventive image on either of its polymer sides, as desired, again using the photographic processes 1). and 2). and if desired, 3). Again this inventive image is viewed from both sides throughout the formation of this final layer of abstract elements. With the completion of this layer the abstraction is finished, and a final Separating Layer of the same cPRM is superimposed using a cardboard roof over it as previously described, completing this inventive image photomontage.

Note that if desired, fiber (e.g., stabilizer) can be used in this inventive image photomontage, e.g., for aesthetic purposes, structural use or both, e.g., an embedded fine open weave fiber glass stabilizer which is invisible to the unaided human eye. For instance, fiber can be added onto one of the polymer surfaces of this inventive image before and/or as one of its three abstract photographic layers are formed. For example, prior to forming one of these abstract layers, a thin coat of the same cPRM which was used to make this polymer can be painted on it using a conventional paint brush, and/or fiber can be added when the polymer is gelled. While this polymer surface is wet, a single sheet of fiber 40" x 40" or slightly larger can be attached and pressed into the wet cPRM, eliminating undesirable air bubbles. Then this attached fiber can be fully embedded in polymer by a superimposed of the same cPRM, immediately covered with the cardboard roof previously described so that it hardens flat. Once this hardens, any fiber extending out beyond the edges of this image can be reworked as desired (e.g., cut off, sanded, and smoothed out with cPRM), and then the abstract layer can be formed on this polymer surface as desired.

If desired, variations of this inventive image can be made by giving it one or more additional layers of polymer (e.g., with surface preparations stabilizers) which have marking using means which are not photographic, such as a layer of drawing, painting, printing and or a combination of these.

This inventive image photomontage is mounted at a distance of approximately 5" out from a white wall which is lit with normal overhead lighting, natural light from windows and reflected light. For example, this might be done in one of two ways. In one installation method, this inventive image photomontage might have a metal frame around it, e.g. steel, encircling its perimeter which is slightly wider than the width of this inventive image. In a second example of an installation method for this inventive image photomontage, three or four metal mounts can be installed in this inventive image as it is made, e.g., installed within its layers of polymer and reinforced with fiber if desired, e.g., perhaps worked into the abstract design and/or hidden by it. These metal mounts can either directly connect this inventive image to a supportive structure that is behind it or above it (e.g., to a wall or to the ceiling), or these mounts can connect the inventive image to another mount part that connects the inventive image to a supportive structure. Then, several years later, the owner of this inventive image photomontage changes its function installing it in a wall as a window where it viewed from both sides. If it was installed 5" out from a wall using the installation method described above, its mount can be stripped down to its basic minimal band of metal encircling the perimeter of this inventive image, and then installed in the wall as a window. However, if this inventive image photomontage was installed 5" out from a wall using the second method described above, all of the mount of this inventive image which extends beyond its surface is removed. Then, if the mount parts inlaid in this inventive image are not aesthetically undesirable, they are left within it and this inventive image is installed as a window. However, if the mount parts installed within this inventive image are aesthetically undesirable, they can be removed and the inventive image photomontage can be reworked so that it is once again both aesthetically and structurally desirable. For instance, these mount parts might be removed from this inventive image by sanding away the polymer around them. Once they are removed, the negative cavities in this inventive image can be reworked using the same cPRM, any abstract elements desired, and pieces of fiber if desired in the same processes which were used to make this inventive image.

Inventive images are furniture, e.g., tables, chests, cabinets, stools, carts, chairs, benches; etc. In an illustration, inventive image furniture can be made in conventional forms which have glass, but polymer can be used in place of their glass, e.g., the inventive image nesting table in Fig. 88.IV. Also, inventive images serve household functions, though there is no limitation on the context of their actual use. For example, bowls, trays, cups, plates, goblets, pitchers, soup tureens, placemats, stools, refrigerator doors, etc. Numerous artists and architects have been noted for their images which function as household objects. As an illustration, cups made of transparent plastic which are not of the present invention scratch with normal use. These scratches are visible on such conventional cups and often they alter graphics or text. Generally, after a while, such conventional cups are no longer aesthetically desirable. Inventive image cups can be made with or without graphics and text that will not scratch as easily by using crosslinked polymers of the present invention. Furthermore, aesthetic variations can be used on inventive image cups in a much broader range than in conventional cups like the one in this example. As a second illustration, inventive image are made which serve household functions (such as goblets, plates, dishes, trays, pitchers, bowls, vases, etc.) which are made using see-through polymer and metal, e.g. silver, bronze, brass, aluminum, ornamented metal work such as filigree or a combination of these. For instance, conventional images made of glass and metal which serve these functions can be copied, or copied and varied using polymer in place of the glass, e.g., an antique goblet with a glass cup, an ornate silver stem and base and a silver filigree rim can be made as an inventive image using polymer instead of glass. The resulting inventive image can be made stronger and more permanent than these conventional images, and with vastly more aesthetic variations than these conventional images. In a third illustration, fine conventional glass images which serve the household functions described in this example, can be copied or copied with variations using the present invention, instead of the glass or instead of some of the glass. For example, many conventional crystal images, and many parts of conventional crystal images do not take advantage of the high refractive index of crystal. These can easily be made as inventive image substituting polymer for the crystal or other glass. Again, the resulting inventive image can be made stronger and more permanent than these conventional images, and the resulting inventive image can be made with vastly more aesthetic variations than these conventional images. As a third illustration, inventive image which serve household functions have one or more embedded sources of diverse coloration.

Inventive images might be used as, cases, containers, a tent, an awning, a banner, a fountain, signs, patio; pool or lawn furniture, etc. For example, one such inventive image used outdoors (e.g., a wall), might have new unique light qualities and effects designed to work with the changing natural light outdoors, e.g, light effects which are seen as changes in colors on its surface, as the sun rises and sets.

Inventive image containers are made which are called "baskets," though most of them do not look like regular baskets. Here are some of their distinguishing characteristics. Basket 1. is polymer with negative cut-outs in it. Basket 2. is rigid crosslinked polymer colored internally with dissolved washes of bright colors, and with embedded particles of different shapes and sizes. It has no holes. It was cast in a single pour of polymer in a single mold. It has an opening at its top which has no cover. It has a flexible polymer handle attached using a metal piece made for attaching handles to purses and tote bags. Basket 3. is transparent. It was made in separate pieces of rigid polymer and which then were connected together using a bonding substance, thus it has a very geometric, architectural look. It has a top piece which is hinged onto it. Basket 4. was made as a single large curved rigid polymer form, that was cast in tiers. Its tier edges were sanded down so that its surface is a smooth curve. It is substantially larger than Basket 2., and its top opening is substantially wider than Basket 2. Basket 5. is made of multiple curved rigid polymer parts attached to one another either with, a). a metal framework holding them together rigidly, or b). using metal loops which enable the curved parts to flex and move. Basket 6. is polymer painted realistically to look like a real straw basket, but on closer inspection it is clearly not straw. It contains fiber stabilizer that is slightly visible. It may be used on the floor and on counter tops, e.g., holding flowers, fruit, eggs, decorative objects, magazines, mail, etc. Basket 7. is colorless and completely transparent with its hardware, (e.g., hinges) and its contents completely visible. It functions as a purse. Basket 9, is flexible, made of polyvinyl chloride pieces made according to the present invention that are bonded to one another, e.g., used at the beach on trips, etc. Basket 10. is flexible, made of colored woven strips of polyvinyl chloride made according to the present invention. Basket 11. is used over Easter for visual observation and to hold things like eggs. Basket 12. is made of crosslinked rigid polymer cast about 0.75 "thick. It is used to hold, carry and display a collector's Fabergé eggs. It has a top opening that is very wide. Though its sides are colorless and transparent, its base is mirrored. Basket 13. is an inventive image comprised of 15 baskets without any handles, made, painted, displayed and sold in a Compositional Arrangement that is one inventive image. Its Compositional Arrangement is rearrangable as desired. Basket 14. is a limited edition of 2000 baskets made by a fine artist and sold through an art gallery. Basket 15. is paper with a flexible colored polymer handle. Basket 16. is polymer with inlays which give color it and light effects. Basket 16. is very thin, but it is a crosslinked polymer and it has fiber installed medial within the thickness of its polymer. Basket 17. has juxtaposed areas that are partially opaque and areas that have light effects. Basket 18. is painted opaquely. It is a container that is lined on its inside with silver leaf. Thus, when it is viewed from its outside, this underlayer of silver reflects light through its multiple superimposed layers of see-though color, comprised of polymer and non polymeric ingredients.

Inventive images are made with one function which is changed after a period of time.

In comparison, the function of images made using many conventional practices often can not be changed. As an illustration, a sculpture of the present invention is made which is a mushroom shape with a flat top surface that is 30" high and approximately 30" in diameter (though its surface is irregular, rather than a perfect circle). After years of living with this sculpture, it comes to be used as a table. In a further illustration, a sculpture of the present invention made of 3 separate solid polymer cubes with internal coloration and light effects measuring, 16" high x 12" deep x 15" wide; 15" high x 14" deep x 17" wide; and 14" high x 16" wide x 14" deep is sometimes used as three seats. As another example, an inventive image is made which functions in one way but once it is slightly altered, it functions in a completely different way. For example, the holes used to mount a polymer painting of the present invention against the wall, are used to attach legs onto it so that it becomes freestanding as a new form of painting, sculpture, room partition, table, etc. Later these same holes are used to mount this inventive image as a ceiling skylight.

In an example, whether or not they are physically connected, two or more parts might be layered parallel to one another or more or less parallel, or they might be layered with one or more negative spaces in between them in an image of this embodiment.

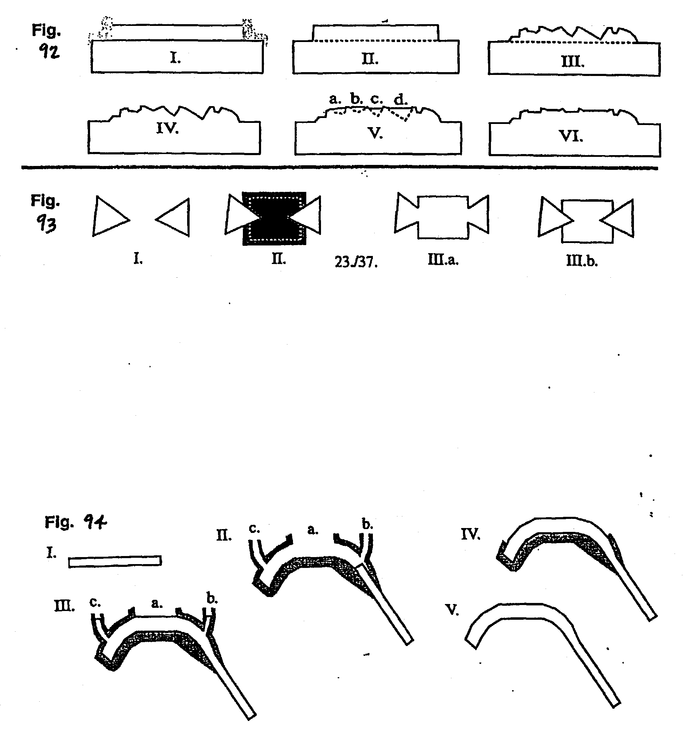

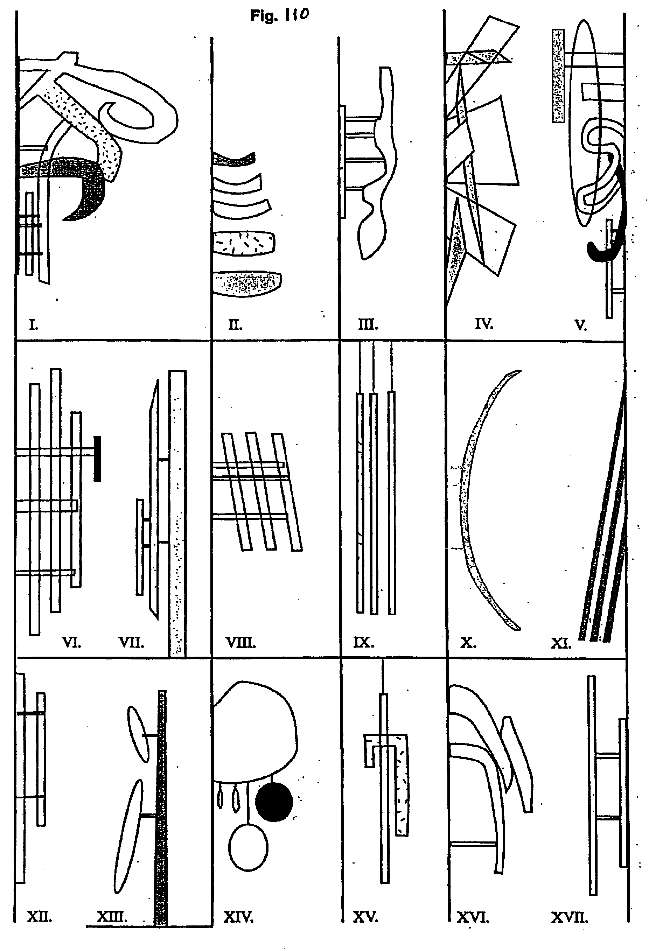

Constructions are made using the medium of the present invention. For example, because constructions often have overlapping layers, the uses of transparency, translucency, and other light effects can result in inventive images with new and unique effects. Further examples of inventive image constructions are shown from side views installed on walls in Figs. 87.II., III., VI. - IX., and XI.-XIII., as well as in Figs. 110.I., III. - VIII., X-XIV., XVI. and XVII.

In another example, polymer layers might be mounted or installed overlaying one another with negative space in between them, e.g., as in Fig. 110. The overlapping planes of such images might, for example be spaced anywhere from an eighth of an inch apart, to 8" apart.

The inventive image in Fig. 110.IX. might be comprised of three polymer components, each measuring roughly 24" x 35" x 0.75". They might be hung from the ceiling, parallel, about a half an inch to an inch apart from one another, using two barely visible, strong, wires or cords on each polymer component. The six external surfaces of these three hanging polymer components are painted using mostly transparent colors and a few opaque colors. Line drawing is also done on them. As a result, viewers perceive these three separate polymer components simultaneously as a single unified whole form. If such an image is mounted near a white wall as shown in the illustration, the light reflected off of the wall will enhance the transparency and the light effects of the image's three layers, as well as its color and other formal elements.

Fig. 5. shows a group of cut-outs made using the medium of the present invention. Each could be a separate inventive image or two or more of them could form an image together (connected, partially connected or not connected), e.g. as a wall pieces or in a mobile. Whether these image cut-outs are 2D or 3D, their internal white shapes can be negative spaces and/or positive areas. The polymer parts in these cut-outs might be rods, bars, planes, strips or a combination of these made in a number of different ways, e.g., cast and/or made using subtractive processes (cut, carved, or sanded down) and/or made by connecting multiple separate parts. The cut-outs in Fig. 5. might be installed in different ways to form images in different art forms, e.g., hung from the ceiling to form an installation, stage set or mobile; mounted from the floor using rods or a stand to form a sculpture or stage set; mounted on or from the wall as a wall piece or construction; placed or mounted on or near the floor as sculpture; mounted on a larger image support as a wall, a window, a painting, a sculpture, a table top, etc. If these cut-outs of the present invention are transparent, translucent or both, and particularly if they also have negative spaces cut within their forms these cut-outs offer uses of light, and uses of light with space (e.g. negative space and spatial depth), which are new and unique in images and in image making.

Fig. 7. shows another example of an image that can be either 2D or 3D and which can be made in many different processes, as described previously.

Fig. 81. shows the formation of polymer with inlays in cross section views. In Fig. 81.I., three pyramid shaped inlays are stuck to the bottom of an empty mold just securely enough so that cPRM will not seep beneath them and they will easily detach from the mold once a polymer is formed over and around them. The three exposed planes of these non polymeric pyramids have SSI on their surfaces so that they will bond to the cPRM applied over them. Then colorless transparent cPRM is put into the mold as in Fig. 81.I. The formed inventive image is removed from its mold, as in Fig. 81.II. Its inlays are visible through its transparency in this side view of this inventive image. The bottom sides of these inlays are flushly aligned with the bottom surface of this inventive image. But when viewed from the bottom surface of this inventive image, these inlays look like three inset triangles. In Fig. 81.III., the same mold used in Fig. 81.I. is reused to make a new inventive image which is inlaid differently. Fig. 81.III. shows that five darkly colored elements (labeled b.), are stuck into the bottom surface of a mold (labeled a.), which is filled with cPRM, (labeled c.). This cPRM bonds to the portion of each of these darkly colored elements in the mold's negative space, and/or this cPRM bonds to the texture on these inlays mechanically. Once this polymer inventive image hardens and its mold is completely removed, the resultant inventive image has five inlays which protrude out from its surface, as in Fig. 81.IV.

These are examples of the a high level of control, precision, and craftsmanship that can be achieved in 2D and 3D inventive images. The delicate inventive images in Fig. 5. (described above) show a high level of control, precision, and craftsmanship using the medium of the present invention, regardless of their size, whether they are 2D or 3D, e.g., they can be made with diameters of 1" to diameters of 100", with thicknesses from 0 .015" to 10" thick, or with their thickness varying, as desired. If the inventive images in Fig. 98. are made small, (e.g., as personal images such as jewelry), they are fine, delicate forms which could only be made with a high degree of craftsmanship, precision and control. For example, the inventive image in Fig. 98.a. could be a flexible image belt with a rigid multicolored polymer belt buckle completely made of the medium of the present invention; 98.b. might be a ring; 98.c. might be a bracelet or a pin, the "S" shapes in its design might be incised and the gray circles in its design might be paint or they might be polymeric or non polymeric inlays (such as stones, crystals, gems, glass or polymer); 98.d. might be a bracelet with inlays indicated by the central row of small squares; 98. e.1.-4. might be four pairs of earrings two of which are made of precisely connected parts; 98.f. might be a very delicate flower pendant or a pin (this image may be volumetric or planar, 2D or 3D, its petals can be rounded, they can curve, they can extend up and out from the flower's center, etc., as desired); 98.g. may be a bracelet; 98.h. may be either a ring or a bracelet with either a negative space in it or an inlay in it indicated by the white square; 98.i. might be a necklace; 98.k. might be a bracelet, anklet or watchband (both 98.i. and k. have precisely connected parts). Jewelry made using the medium of the present invention such as these examples, can be made using polymer that is transparent, translucent, partially opaque or a combination of these, which can even simulate gems and stones. Further the backsides these polymer "gems" might be colored in ways that also give them desirable light effects, e.g. colored with dichroic paper, aluminum leaf, a fluorescent or iridescent material, mica, a combinations of these, etc. Such jewelry can be produced less expensively than comparable jewelry with real gems, stones and gold.

Fig. 98. shows the precision and control with which multiple parts of inventive images parts can be connected. The inventive images in Fig. 98 may be any size, and they may or may not have non polymeric parts. For example, the polymer parts used to make the inventive images in Figs. 98. e.1., e.3., i., and k., might be connected by 1). a fine wire (e.g. a fine stainless steel wire or a fishing wire), this wire may be knotted, or even knotted to a small piece of fiber within the polymer parts it connects; 2). a thin band, rod bar or strip of polymer that is rigid flexible or both, 3). fiber, 4). string, cord, or rope, 5). a combination of these. Any of these connecting parts might for example be cast in the cPRM used to make these inventive images and/or they might be joined to these inventive images after their parts are formed. For instance the connecting part of the inventive image in Fig. 98.k., might pass through a hole in each of its parts. In another example, the inner band of the inventive image in Fig. 98.g. (illustrated in dark grey) might be made of a metal mechanically bonded by SSI to the larger outer polymer band (illustrated in a lighter grey), or the metal inner part of this inventive image might be slightly inlaid in its larger outer polymer part. The square forms in the inventive image in Fig. 98.d. might be precise inlays, e.g. held in place as gems are secured in jewelry. Or, these square forms might be attachments, or negative spaces in this image. In another example, the upper portion of the delicate floral inventive image in Fig. 98.f. might be made completely of polymer, and almost this whole inventive image might be backed by a reflective piece of metal, fiber or both for strength. Thus if the polymer upper layer of this inventive image is transparent and/or translucent, a metal underlayer will reflect light through the polymer above it, making this e image look brighter and lighter.

Fig. 85. shows various ways of sewing, binding, looping, bracketing, wiring stringing, and hooking multiple parts together to make inventive images. Any number of parts can be connected using these methods. The parts connected using such methods might be all the same, similar to one another, different from one another, or a combination of these. Such joints may be rigid, flexible or both in their use in inventive images.

In some embodiments joints are made between multiple parts of inventive images which interlock, e.g., snap, hook or clip together. Large surface irregularities are often used for such purposes, and flexible polymer is useful for such purposes too.

Figs. 160. and 162. both show inventive images with different layers of spatial depth. In Fig. 162. the highest spatial depth is marked a., and the lowest is marked d. One or both of these two inventive image can be made in one part; they can be made using a different part for each level of spatial depth (e.g. the different layers of spatial depth a. - d. would each be different parts); one or both of these inventive images can be made with each change of color as a different part; or these inventive images can be made in a combination of these ways, as desired. One or both of these images can be made either in the ways described for Fig. 50. or 51. These inventive images are further processed, e.g. painting is done on them.

The use of real textures in inventive images can create a myriad of qualities and effects, which are as workable reworkable and controllable, and as strong and as permanent as desired, depending on the use of non polymeric ingredients, e.g., affecting their space: their form, their structure, their permanence, their light qualities and effects; transparency and/or translucency; textures can alter surface matteness or glossiness, etc.; altering their color, etc.

These are examples of texture on inventive images. Fig. 7., shows an inventive image which might for example be made as a raised or indented linear texture on a polymer plane, e.g., wire or string attached to polymer, embossed polymer surface, or both. Fig. 24., shows an inventive image with texture that might be particles, such as flakes, glass or plastic spheres, beads, paper, metal, etc. These particles might for example be stuck to the gelled cPRM on this image's surface before it hardens, they might be adhered to this image's surface using any other bonding substance, or both. Figs. 6.VI. and VII. show inventive images with texture like that of conventional canvas, fabric or paper which might for example have been formed by a mold, or an attachment (e.g., attached canvas, paper or fabric). Figs. 6.IX., shows an inventive image with texture which might for example have been formed using either a mold or subtractive process such as sandblasting or incising.
Figs. 6.X., shows an inventive image, the dotted areas of which might represent indented areas of this image's surface, raised areas of its surface or both.
Figs. 73. shows an inventive image with texture from the overlapping layers used to form it.
Figs. 77.III. shows an inventive image with texture made using multiple temporary molds.

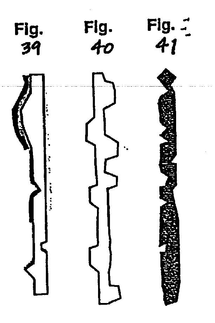

Figs. 78.III.-V. show an inventive image with texture from attached fiber. Fig. 21.b. shows an inventive image with texture on its right side, e.g, that was cast, that was formed by connecting multiple triangular or pyramidal shapes. Fig. 18.a.-c. shows an inventive images with texture created because their forms were made by connecting alternating differing parts. Fig. 39. shows a painted inventive image with embossed and indented texture on both sides. Fig. 40. shows an inventive image with embossed texture on both its sides. Fig. 41. shows an inventive image with indented texture on both sides, e.g., carved, cast or both.
Figs. 95.A.II.,B.II., C.II., E.II., F.II, and G.II. show inventive images with texture from objects or mold parts which indented their cPRM, e.g., during gelation.

A variety of other inventive image lamps are in Fig. 106., many without illustrations of the conventional light sources behind them. The inventive image lamp in Fig. 106.a. is made of multiple hollow cube shaped polymer parts, that are darkly and translucently colored and that have conventional light bulbs within them. The inventive image lamp in Fig. 106.b. is made with polymer rods and undulating polymer planes, behind which are two conventional tube shaped lights. The inventive image lamps in Fig. 106.c. and e. have coloration and perforated polymer forms. The inventive image lamp in Fig. 106.d. has a base made using conventional practices, its polymer shade resembles stained glass. The inventive image lamp in Fig. 106.f. has coloration embedded in its polymer. The inventive image lamps in Fig. 106.g. and j. have painting made using conventional practices. The inventive image lamp in Fig. 106.h. is made of flexible polymer with coloration in gradations, with a vertical row of hanging rigid polymer parts on its right side. The inventive image lamp in Fig. 106.i. is made of a metal netting with attached colored polymer pieces. These can all be further processed as desired, e.g., with unique new light effects.

In an embodiment, inventive images are made which are set-up, presented, installed, displayed, exhibited, used, or set for viewing in combinations of these ways, in a manner which is interactive with one or more viewers. As an illustration, inventive images can be made which interact with viewers in the same way or similar to the way of Robert Rauschenberg's Soundings 2**,** 1968. v.2 which is 96 x 432 x 54 and composed of three rows or layers, each with nine plexiglass panels ythat bear silkscreened prints of chairs which illuminate in responce to viewers. Rauschenberg's Solstice, 1968 with four superimposed layers of transparent plexiglas doors each of which has a different Compositional Arrangement of colored silkscreen prints on it moves in responce to viewers. Interactive inventive images can be made in these forms using polymer of the present invention with new light effects and new effects using spatial depth.

Fig. 79. shows many inventive images prepared for viewing as follows. Note that though these inventive images are almost all simple forms (e.g. rectangular), the forms of inventive images such as those using these methods of display are not restricted to such simple forms.
Fig. 79.a.-1. shows 2D or 3D forms of inventive images which might for example be freestanding, some of these might have attached bases. These inventive images, others that are freestanding, large inventive images, and inventive images that are a combination of these, might for example be weighted so that their upper portions are light in comparison to their lower portions (e.g., their upper portions might be hollow, thinner than their lower part, or made of a composition that is lighter than their lower part).
Fig. 79.m.shows a freestanding inventive image which is supported by leg-like parts or braces on its sides. As the dotted line around the perimeter of the inventive image indicates, these supporting parts may or may not be part of a frame around this inventive image, e.g., for support.
Fig. 79.n.shows an inventive image which also has leg-like parts or braces, but these are embedded into the floor, the ground, or into another base or structure for support. As the dotted line around the inventive image's perimeter indicates, these supporting parts may or may not be part of a frame around this inventive image, e.g., for support.
Fig. 79.o. is an inventive image which extends down into a structure below for support, e.g., into the ground, a base, or a floor. As the dotted line around the perimeter of the inventive image indicates, this inventive image might have a frame on its right and left sides, e.g., for support.
Fig. 79.p. shows an inventive image which is held up by vertical supports on its right and left sides which go to it from a structure beneath it, to a structural support above, though one or both of these vertical supports may or may not run the length of the inventive image. For example, these may be rigid or taught flexible rods, bars, poles, wires, or cords (e.g. polymer metal or wood vertical supports).
Fig. 79 q. shows an inventive image which rests on a structure below (e.g., the floor, the ground or a base) and is held at both of its upper sides by flexible or rigid mount parts (e.g., wire, cords, rods, bars, etc.) to a structure above it (e.g., a ceiling, beam, rod, archway, etc.).
Fig. 79 r. shows an inventive image which is secured to both the structures above and below.
Fig. 79 s. shows a 2D or 3D inventive image held by a vertical support off of its vertical center, e.g., this support might be an attached rod, beam, bar, column, or another such vertical structure, for instance, made of polymer, steel, wood, taughtly secured wire or cord, or a combination of these, etc.

Showing side views of a variety of different inventive images, Fig. 87. shows many examples of different ways that inventive images might be installed with respect to a wall, using the methods described herein, using conventional practices, or using both. From left to right, each of these illustrations show the wall, rendered as a single black vertical line, and then a single inventive image. These illustrations show only the relationships between inventive image and walls. The inventive images in these illustrations might be any size, and they might be installed at any height. Though there is a horizontal line in the center of each page of Fig. 87., these lines do not indicate a floor, ground, another base, structure or a ceiling.

Inventive images serve personal functions, e.g., they jewelry, hats, clothing, tote bags, belts, costumes. In an illustration, inventive image clothing is made, for instance using conventional practices and polymer that is rigid, flexible or both, e.g., the inventive image in Fig. 98..a. is a belt which has flexible and rigid parts.

## Claims

1. A method of making an image making medium comprising the steps of:
forming a polymerization reaction mixture using at least one monomer that can form a synthetic conductive polymer,
applying the polymerization reaction mixture or the polymer formed from it onto or in a support material,
additionally providing one or a combination of the following to impart additional features to the image making medium: a) at least one stabilizer for fine-art is used to aid in processing the polymer, b) at least one stabilizer for fine-art is used to enhance the permanence of the polymer or the image making medium, or c) a shielding part, layer, coating or barrier is added to the image making medium or part thereof to protect or enhance protection of the polymer, the medium or image formed therefrom, from moisture, oxygen, ultraviolet light, gases, or substances used to clean or care for the polymer, the medium or the image formed therefrom, and,
wherein the composition is formed into a medium or object that has a form or structure that enables it to be viewed, presented or displayed for viewing, and that the form or structure is sufficiently stable to enable the medium to be viewed, presented or displayed for viewing, and
wherein the method forms a novel tangible medium for the specialized utilitarian purpose of creating art or design, a medium that is a utilitarian product made to be further developed into an aesthetic image, an image making medium made to be further modified or changed in the process of creating an image, a medium that is a utilitarian form made to be further developed by the alteration of its formal elements or aesthetic properties, or a medium that is a material means of artistic expression and that is for use in creating an image for visual observation or display.

2. The method of claim 1, wherein the conductive polymer, a second synthetic polymer used in the image making medium or both are one or more of:
(a) transparent or translucent; selected for the aesthetic element or elements and/or the permanence they provide or enable the image making medium or the image formed therefrom to have; in solution; light emitting or electrically conductive,
(b) with carbon-carbon bonds or are carbon-carbon bonded polymers; or with one or more functional groups that are imines, alkenes, aryl groups, or substituted aryl groups;
(c) homopolymers or copolymers that are alternating, block, graft, comb, or star, such that the architecture of the polymer is linear, branched, dendritic, multi-arm star, or any other polymer architecture;
(d) a fluorescent polymers, polymers that show fluorescence, or polymers made with monomers that show fluorescence or that are fluorescent, mixed polymers, copolymers; hydrophobic and/or oleophobic polymers; or
(e) in one or more applications or layers of any size, thickness and shape, that are: 2D planar; thin; transparent; translucent; continuous, continuous throughout most or all of the medium or discontinuous; made by one or more printing, painting, brush, layering, writing, drawing, coating, spraying and/or solution processes; hardened after they are on or in the support material; made using a polymer sheet or film, a premade, manufactured or preformed polymer; a polyester, polycarbonate, polystyrene, polyethylene, polyacrylic or absorbent polymer; non conductive or poorly conductive polymer; a polymer having a refractive index of at least about 1.4; a polymer with a light transmittance of at least about 88%; a co-polymer, a mixture or a blend; or a combination of such polymers.

3. The method of claim 1, wherein the stabilizer for fine-art is one or more of:
(a) a processing aid; a stabilizer that reduces or eliminates changes to at least one polymer in the image making medium after it is formed;
(b) a stabilizer that maintains, enhances, enhances the longevity of, protects and/or affects one or more of: the physical properties, the mechanical properties, the strength, the chemical or dimensional stability, the flexibility, the solvent resistance, the water resistance, the durability, the color, at least one light property, and/or at least one aesthetic property of at least a portion of: the image making medium, at least one synthetic polymer, and/or the conductive polymer,
(c) a stabilizer made with at least one polymer; a stabilizer within or on at least a portion of at least one polymer in the image making medium; an image support stabilizer, a surface preparation stabilizer, an ultraviolet light stabilizer, an ultraviolet light absorber, a hindered amine light stabilizer, an antioxidant, a stabilizer that maintains or enhances impact resistance, and/or hardness; or an ingredient, an application or a layer that enables the formation or fortification of a bond between the image making medium and at least one superimposed medium, material, colorant, marking material, paint, ink, pastel, graphite, glue, photographic emulsion, conventional image-making material, added part or attachment,
(d) a stabilizer that provides or imparts a refractive index that is substantially the same as that of at least one polymer in the image-making medium, a stabilizer that is invisible to the unaided human eye in its use in the image making medium, or a stabilizer that contributes to the image making medium aesthetically,
(e) a stabilizer that is present in an amount and/or in a design sufficient to protect or to enhance the protection of at least a portion of at least one polymer in the image-making medium against one or more of: (1) discoloration or a change in color or light over time that is visible, (2) changes to its structure, form or surface over time that are visible, or (3) changes that reduce its strength, its stability or its permanence,
(f) a stabilizer that is on, within, or in the form of: an application, a layer, a coating, or a sealer; a stabilizer that is external on the image making medium or on the image formed therefrom; or a stabilizer that imparts or enhances the protective capability of the shielding part, layer, coating or barrier of claim 1.

4. The method of claim 1, wherein the support material is made or partially made with a material selected from the group consisting of: transparent or translucent materials, image supports, wood, paper, stone, ceramic, clay, metal, metallic materials, fabric, polymer, transparent or translucent polymer, non conductive or poorly conductive polymer, glass, films, sheets, image support stabilizers; materials that have negative space within them; materials that are partially or entirely: discontinuous, even, uneven, smooth, regular, irregular, non-geometric, geometric, planar, non-planar, uniform, non-uniform, textured, curved, undulating, angled, rigid, flexible, any thickness, any size, 2-dimensional, 2D planar, 3-dimensional, hollow, solid, or a combination of these; materials that can sufficiently provide or contribute to the support, the strength and or the permanence of the conductive polymer, the image making medium or the image formed therefrom; and materials that are combinations of these.

5. The method of claim 1, wherein the image making medium is made such that:
(a) it is partially or entirely flexible, rigid, capable of being rolled, capable of being folded, even, uneven, irregular, smooth, regular, non-geometric, geometric, linear, with at least one negative space, an openwork form, curved, undulating, angled, planar or substantially planar, non-planar, uniform, non-uniform, any thickness, any size, thin, very thin, 2-dimensional, 2D planar, 3-dimensional, hollow, solid, self supporting, free standing, a light weight form, a strong form, or a combination of these;
(b) it can bond to or absorb at least one superimposed: colorant, paint, marking materials, ink, dye, pastel, graphite, glue, binder, bonding substance or adhesive, photographic emulsion, conventional image-making medium, underlayer, primer, part, or attachment; or it has a polymer layer or part made with polymer that is capable of such bonding or absorbing, or that provides or enables the image making medium to have one or more of: an aesthetic element, a light property or effect, an optical effect, color, a graphic element, incising, embossing, carving, transparency, inlays, embedding, translucency; or a means for installation or display or a part of such a means,
(c) it is at least partially transparent or translucent so that light can pass into, or into and through at least a portion of its form; it has a transparent, translucent, opaque or reflective layer; it has at least one layer or a synthetic polymer layer with one or more of: a refractive index of at least about 1.5, a yellowness index of no greater than about 3, a haze value of no greater than about 3%, and/or a light transmittance of at least about 90%,
(d) it has at least one flexible and/or foldable part or layer made or partially made with synthetic polymer that is connected or bonded to at least one inflexible, stiff and/or rigid part or layer that provides or contributes to the: a) structural support, b) permanence, c) protection, d) form, and/or e) frame, encasement, mount, means of display, or means of presentation, of the at least one flexible and/or foldable part or layer,
(e) it has at least one transparent, translucent or see through layer and at least one opaque layer; it has a weak, less strong, non-structural, and/or flexible polymer partially or completely upon a stronger, more structural, sturdier, less weak, inflexible, less flexible, strong and/or rigid polymer; it has a layered form; it has 3 to 8 superimposed layers; a 2- dimensional or 2D planar, transparent or translucent layer, support material or image support made of, partially made of, or containing one or more of: non-conductive or poorly conductive polymer, glass, metal, paper, fabric and/or clay positioned throughout at least a portion of the medium; it has a transparent external layer covering at least a portion of the medium; it has a transparent polymer external layer, sheet, film, coating, support material or image support covering at least a portion of the image-making medium,
(f) it has an added mount, frame, base, backing or other part for or means of display or installation, or it has such a part or means that is rigid or that provides or contributes to the structure, the support or the form of one or more polymers or of the medium, or
(g) it has a layer, attachment, application, part, coating, support material or image support that contains or that is partially or entirely made with: metal, glass, clay fabric or paper, or that is reflective, metallic, or absorbent.

6. The method of claim 1, which further comprises forming the image making medium with one or more of:
(a) a colorant, pigment, colored particle, paint, dye, pastel, graphite, charcoal, ink, wax, paper; an image-making medium; a light reflective, dichroic or dichromatic, fluorescent, iridescent or light diffracting material or medium; a hologram, a photographic emulsion, a photograph or a photographic transparency; a light effect, a lens, a grating, a prism, or a filter; a modification made using one or more additive processes, subtractive processes, conventional practices, or conventional image making practices; embedding, embedded air pockets, at least one internal or embedded polymer or polymer layer; abrasions, small surface irregularities, embossing, incising, texture, carving; a form, a surface or part thereof that is sculpted or cut; or at least one application, layer, polymer or conductive polymer, form, or a portion of one or more of these, made or applied: (i) at room temperature or at ambient temperature, and/or (ii) using conventional practices, equipment, facilities and/or processes,
(b) video, film, a computer, sound, a solar panel, a light source, an illuminated photographic image or an illuminated transparency, a light-emitting diode or LED, an electroluminescent lamp or a device; a switch, a control mechanism, a sensor, or a device that turns electricity on and off or which varies the electricity; a battery, electrical cord or wire, plug, transformer, electrical part or other light source part; at least one part, layer, device, wire, cord, plug, transformer, electrical part or other light source part that enables the medium to emit light or to emit enough light to be a light source; a battery, wire, cord, plug, transformer, electrical part or other light source part or parts that is or are part of the medium that is hidden from viewers' sight,
(c) light emission that is colorless or that has at least one color; light emission that is constant or unchanging over time; light emission that changes over time; light emission that is preset to change over time or that changes intermittently; a method and means which makes light from the image making medium and/or from the image change over time or which contributes to such change; a layer, an application, a part, a device or a means that controls, modifies, modulates or varies light emitted by the medium; the image making medium and/or the image has at least one part that is non-emissive of light;
(d) movement of the image making medium, of a part of it; the medium requires time to be seen in its entirety and can be partially seen at once, with a brief look or upon first glance; a means of being interactive, an interactive part, a microphone and/or a speaker; the image making medium and/or the image has a means of detecting or sensing a viewer or the environment, and then responding by changing, by changing color, by changing its light and/or by moving; the image making medium and/or the image is responsive to light or photochromic;
(e) at least one element that identifies the medium as a known form of art or design, as a new variation of a known form of art or design, as a new kind of canvas, a new kind of armature, or a new kind of underlying, internal or external support for two or three dimensional images; the medium has coloration, marking an application of at least one conventional image-making material or colorant; abstract, realistic and/or illusionary imagery, marking, coloration, a form, a shape, a frame, a pedestal, a mount, a base, a part or means of display or installation or at least one element that identifies the image as art or design; or at least one element that identifies the image as the original creation by a specific individual, as a creation resulting from a specific or unordinary circumstance or condition,
(f) subject matter, content and/or meaning partially, substantially or entirely dependent on electricity; subject matter, content and/or meaning created or partially created by light or light effects; an aesthetic element, color, subject matter, texture, shape, size, or form that creates or contributes to the image's content, its expressive content, its artistic meaning and/or its statement; the medium has a utilitarian function, it functions as a ceiling, a skylight, lighting or a light fixture, an illuminated photographic image, a table, a wall, a window, furniture, a partition, a book, or a part of one of these; the image making medium is a transparent, translucent and/or opaque form, ceiling or skylight that changes in light and color as the sky changes.

7. An image making medium obtainable by the methods according to any of the preceding claims 1-6.

8. The image making medium of claim 7 which is further developed into an image which may be a work in progress that is an unfinished image, or which may be a finished image for display as art or design.

9. Use of a conductive polymer on a support material for creating an image making medium (e.g., a canvas) that is to be converted into art or a design for display.

10. The use of claim 9 wherein the conductive polymer is provided on the support as one or more of a plurality of layers that enable light to be emitted from the image making medium.

11. The use of claim 10, wherein the layers are protected by a shielding part, layer, coating or barrier that is added to the image making medium to protect or enhance protection from moisture, oxygen, ultraviolet light, gases, or substances used to clean or care for the polymer, the medium or the image formed therefrom

12. The use of claim 9, wherein the composition is formed into a medium or object that has a form or structure that enables it to be viewed, presented or displayed for viewing, and that the form or structure is sufficiently stable to enable the medium to be viewed, presented or displayed for viewing, and wherein the polymer forms a novel tangible medium for the specialized utilitarian purpose of creating art or design, a medium that is a utilitarian product made to be further developed into an aesthetic image, an image making medium made to be further modified or changed in the process of creating an image, a medium that is a utilitarian form made to be further developed by the alteration of its formal elements or aesthetic properties, or a medium that is a material means of artistic expression and that is for use in creating an image for visual observation or display.
